# EUROPEAN PATENT APPLICATION

(11) **EP 4 442 529 A1**
(43) Date of publication of application: **09.10.2024**
(21) Application number: 22898706.1
(22) Date of filing: 29.11.2022
(51) Int. Cl.: B61B 7/00, B61B 3/02, B61B 13/00, B61D 47/00, B64C 39/02, B64D 1/10, B64D 27/24, B64F 3/00, B65G 61/00, G05D 1/02

(54) **SYSTEM**

(30) Priority: 29.11.2021 JP 2021193639; 20.04.2022 JP 2022069377
(71) Applicant: Panasonic Intellectual Property Corporation of America, Torrance, CA 90504 (US)
(72) Inventor: OSHIMA, Mitsuaki, Kadoma-shi, Osaka 571-8501 (JP); AOYAMA, Hideki, Kadoma-shi, Osaka 571-8501 (JP); TAKAHAMA, Takuya, Kadoma-shi, Osaka 571-8501 (JP); MURAMATSU, Fumio, Kadoma-shi, Osaka 571-8501 (JP); SUMI, Yosuke, Kadoma-shi, Osaka 571-8501 (JP); AMAGAI, Ryosuke, Kadoma-shi, Osaka 571-8501 (JP); KAJIKAWA, Tsuyoshi, Osaka 569-1194 (JP); IKEUCHI, Junya, Tokyo 163-0451 (JP)
(74) Representative: Eisenführ Speiser
(86) International application number: PCT/JP2022/044007
(87) International publication number: WO 2023/095924

(57) **Abstract**

A system includes an unmanned transport vehicle (2660), a first winch (a winder (2667)) capable of reeling out and in a wire (2663), a package carriage (2670) connected to the wire (2663) for putting a package transported by the unmanned transport vehicle (2660) into, and a controller. The package carriage (2670) includes an attitude control device (2670a) that rotates around a rotary shaft (2671a) extending in the vertical direction. The package carriage (2670) includes an accommodation space (a first accommodation space (2674)) for accommodating the package. The controller obtains a sensing result from a sensor (2661) capable of detecting an attitude of the package carriage (2670), and based on the obtained sensing result, controls rotation of the flywheel to rotate the package carriage (2670) around the rotary shaft (2671a) and orient the package carriage (2670) to a target attitude.

## Description

### [Technical Field]

The present disclosure relates to a system.

### [Background Art]

Control methods have been proposed to enhance safety during flight of drones, which are unmanned aerial vehicles (see, for example, Patent Literature (PTL) 1).

PTL 1 discloses a technique for detecting abnormal drone flight by various means and recovering the abnormally flying drone using recovery means provided on power lines or utility poles.

### [Citation List]

### [Patent Literature]

[PTL 1] Japanese Unexamined Patent Application Publication No. 2018-12477

### [Summary of Invention]

### [Technical Problem]

The system including the unmanned aerial vehicle disclosed in PTL 1 above can be improved upon.

Accordingly, the present disclosure provides a system that improves upon the above related art.

### [Solution to Problem]

A control method according to one aspect of the present disclosure is a control method of a system including an unmanned transport vehicle. A package carriage for putting a package to be transported by the unmanned transport vehicle into is connected to a wire extending downward from a main body of the unmanned transport vehicle. The package carriage includes an attitude control device that controls an attitude of the package carriage suspended by the wire by controlling a rotary member. An accommodation space for accommodating the package is formed in the package carriage. The control method includes: obtaining a sensing result from a sensor capable of detecting the attitude of the package carriage; and based on the obtained sensing result, controlling the rotary member of the attitude control device to orient the package carriage to a target attitude.

These general or specific aspects may be implemented as an unmanned transport vehicle, an unmanned aerial vehicle, a system, a control method, an integrated circuit, a computer program, a computer-readable recording medium such as a CD-ROM, or any combination thereof.

### [Advantageous Effects of Invention]

The system according to the present disclosure is capable of improving upon the related art.

### [Brief Description of Drawings]

[FIG. 1]

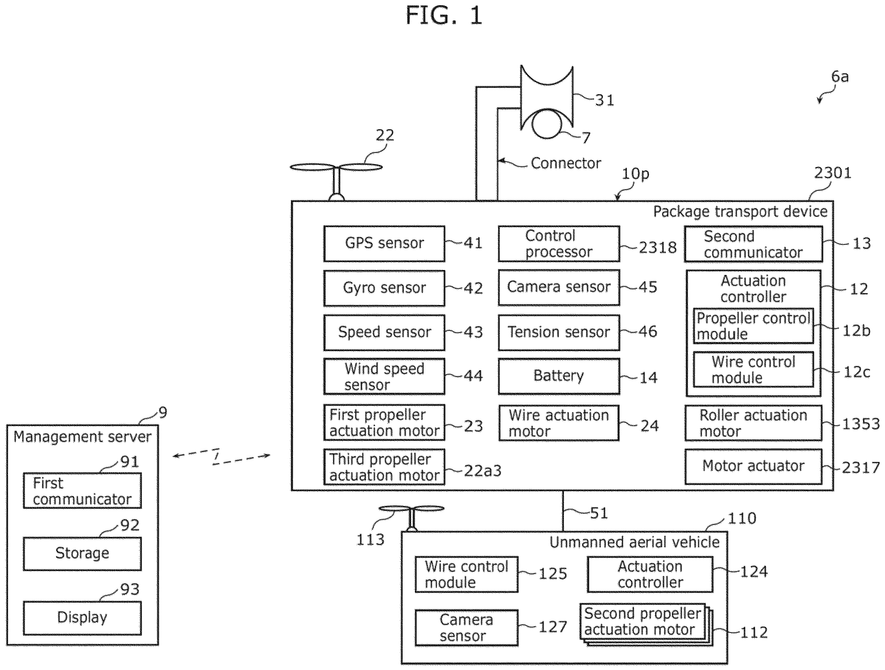

   FIG. 1 is a block diagram illustrating an example of a delivery system according to Embodiment 1.
[FIG. 2]

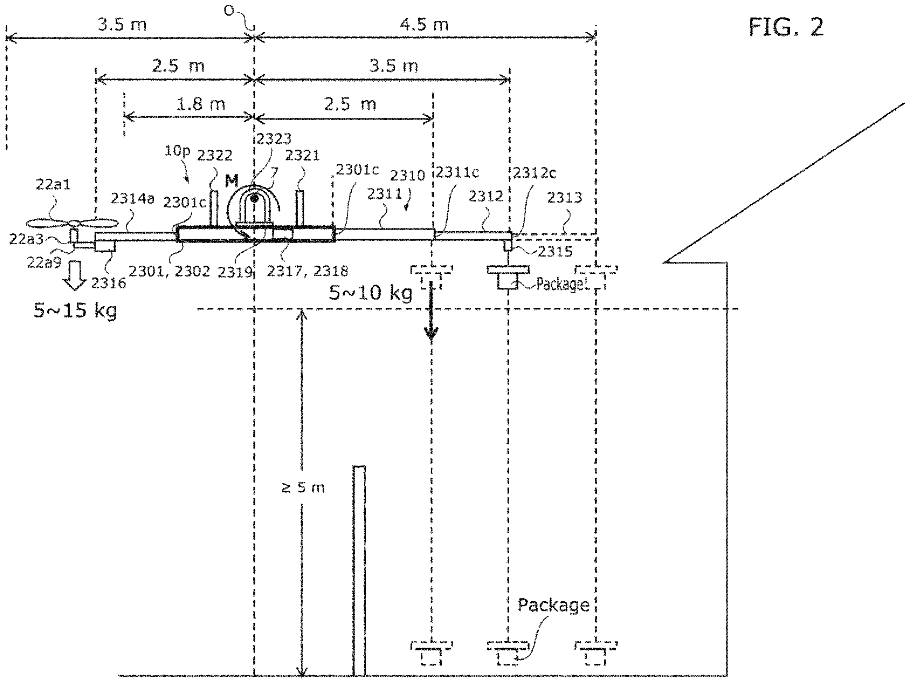

   FIG. 2 illustrates an example of a package transport device delivering a package according to Embodiment 1.
[FIG. 3]

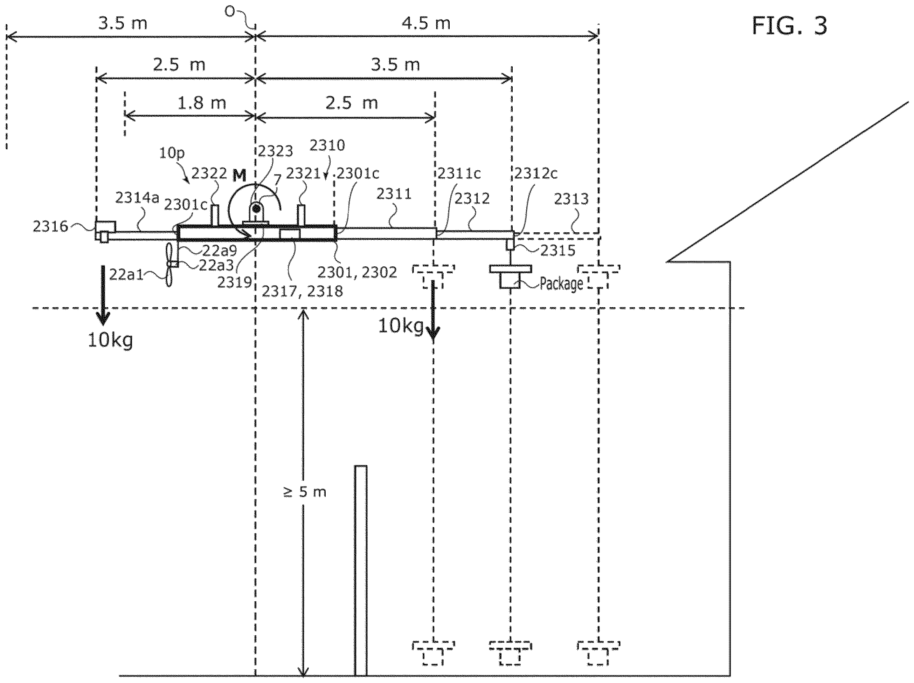

   FIG. 3 illustrates an example of another package transport device delivering a package.
[FIG. 4]

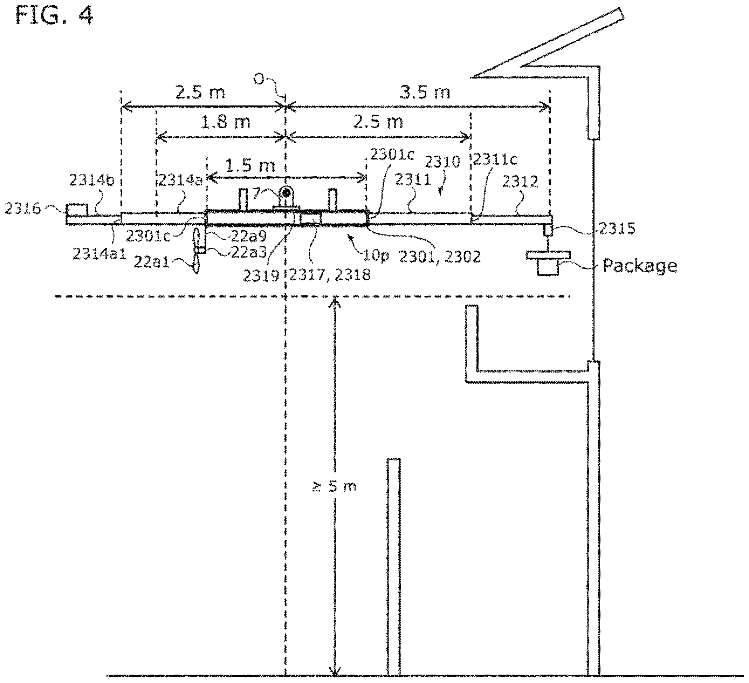

   FIG. 4 illustrates an example of another package transport device delivering a package.
[FIG. 5]

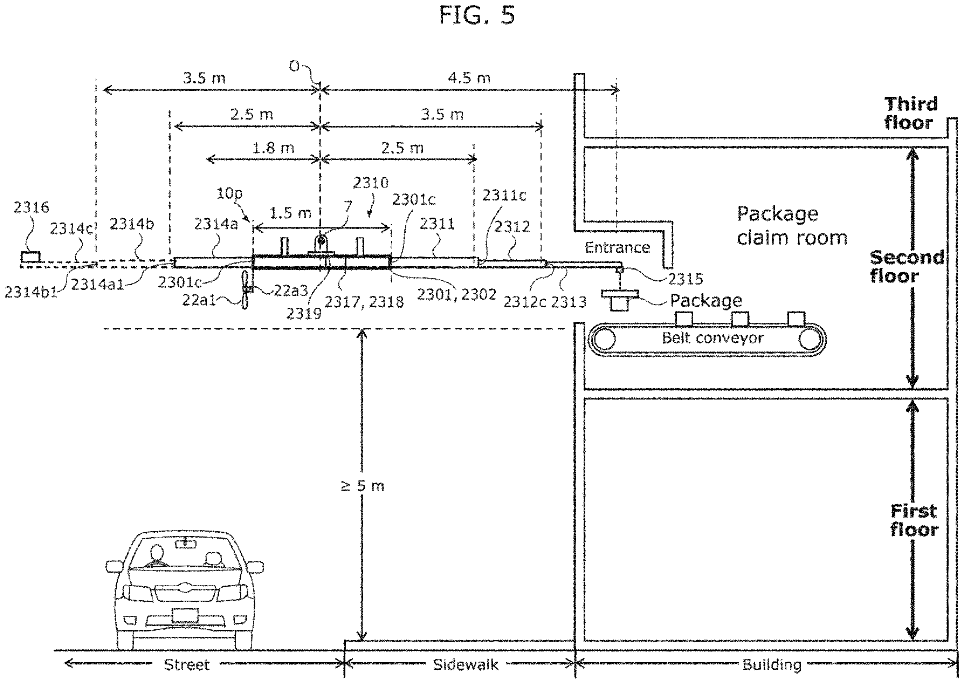

   FIG. 5 illustrates an example of yet another package transport device delivering a package.
[FIG. 6]

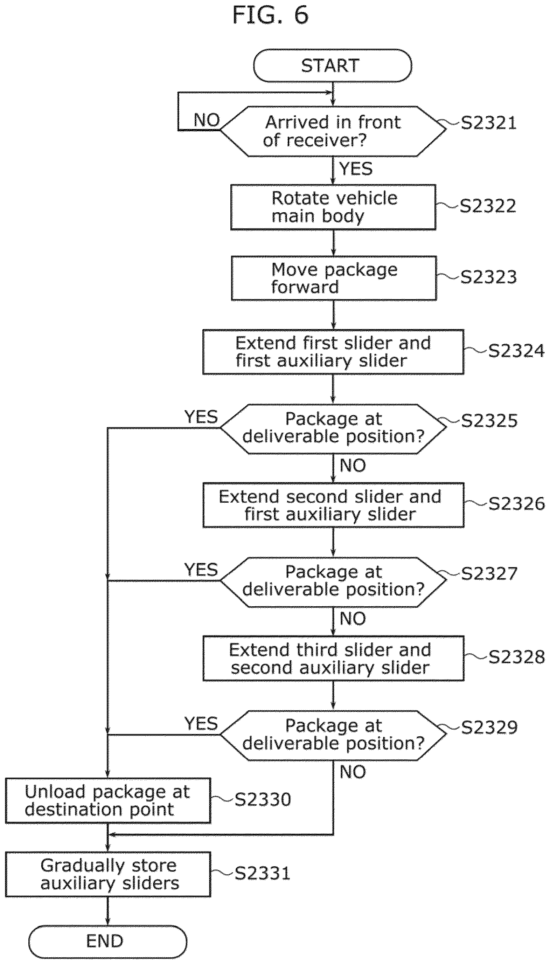

   FIG. 6 is a flowchart illustrating an example of an operation of the package transport device according to Embodiment 1.
[FIG. 7]

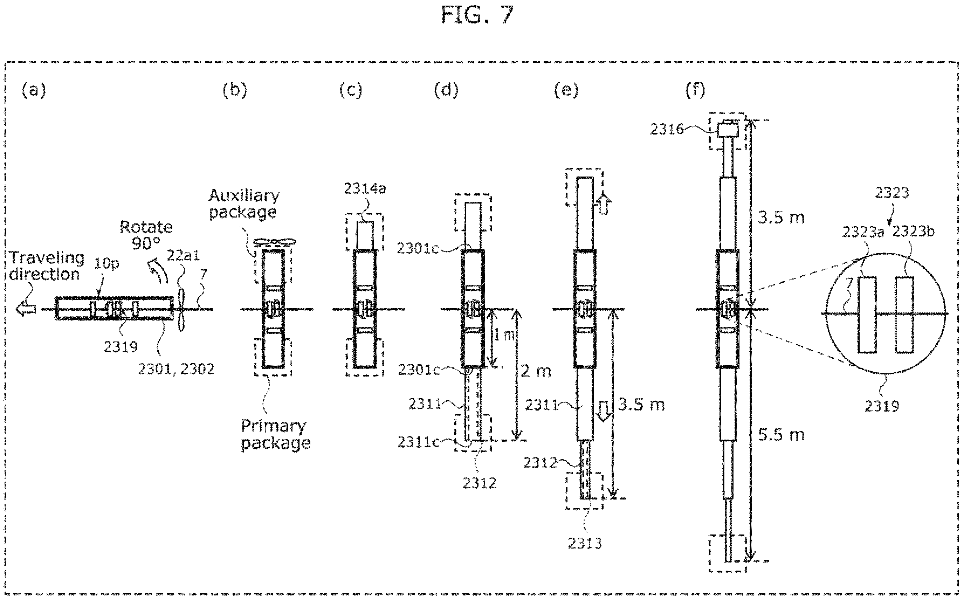

   FIG. 7 illustrates an example of an operation of the package transport device according to Embodiment 1.
[FIG. 8]

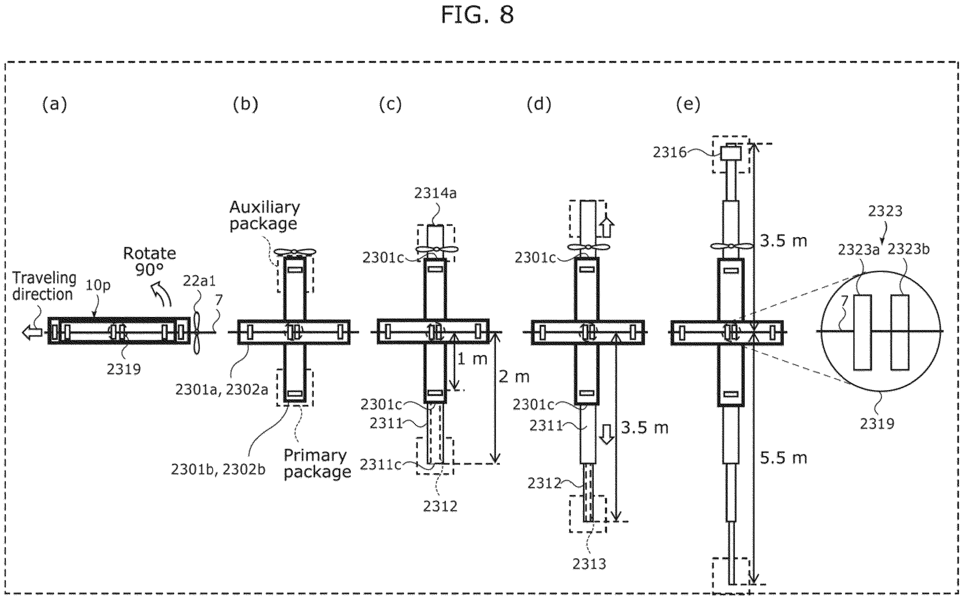

   FIG. 8 illustrates an example of an operation of the package transport device according to Embodiment 2.
[FIG. 9A]

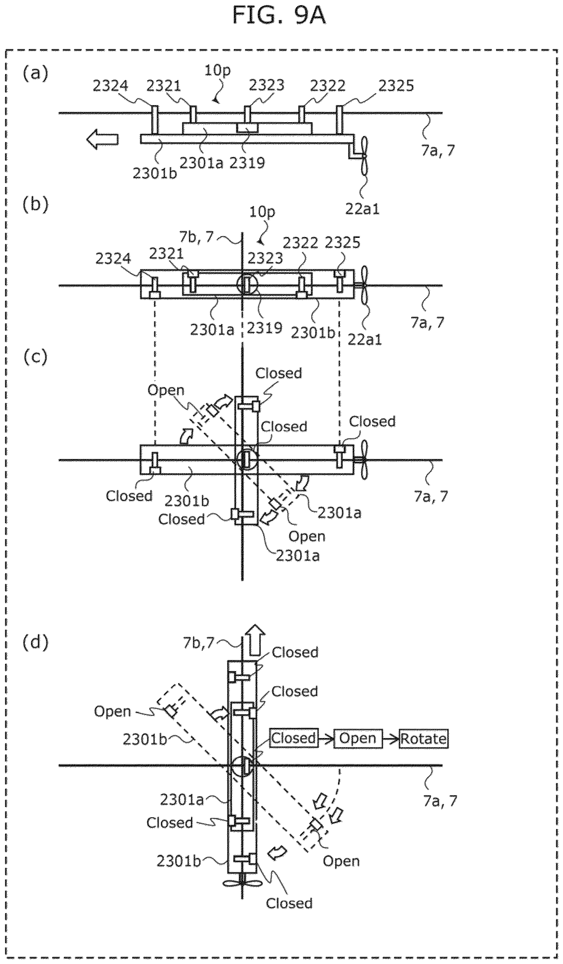

   FIG. 9A illustrates an example of another operation of the package transport device according to Embodiment 2 when transferring connection from the first rail to the second rail.
[FIG. 9B]

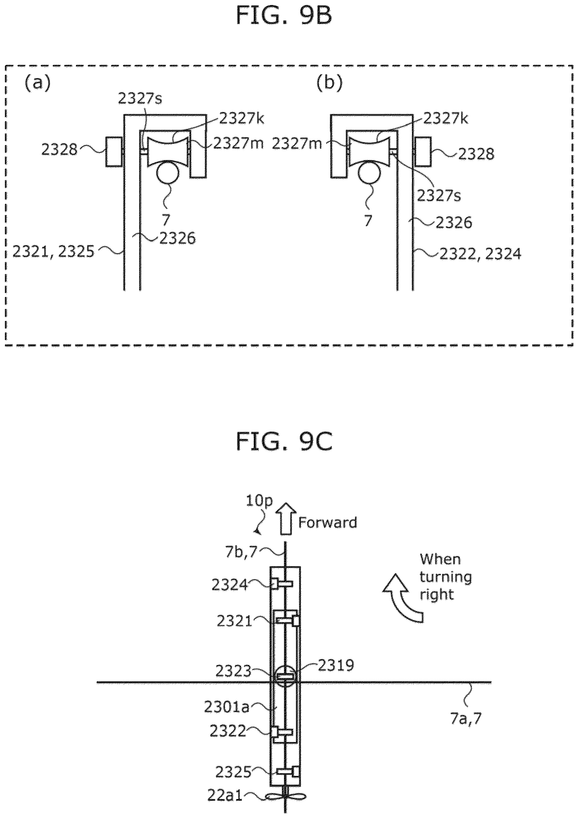

   FIG. 9B illustrates an example of a connector according to Embodiment 2.
[FIG. 9C]
   FIG. 9C illustrates an example of another operation of the package transport device according to Embodiment 2 when traveling after transferring connection from the first rail to the second rail.
[FIG. 10A]

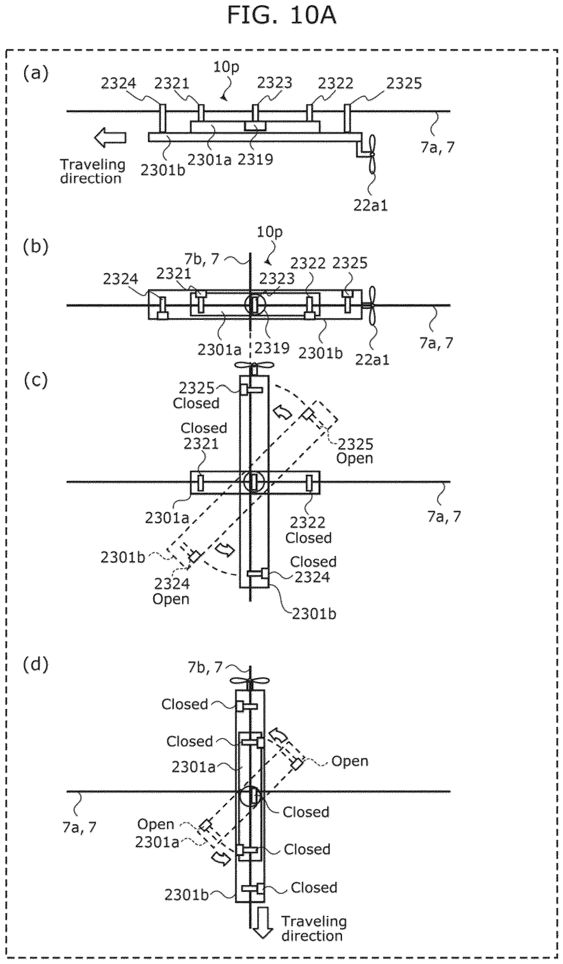

   FIG. 10A illustrates an example of another operation of the package transport device according to Embodiment 2 when transferring connection from the first rail to the second rail.
[FIG. 10B]

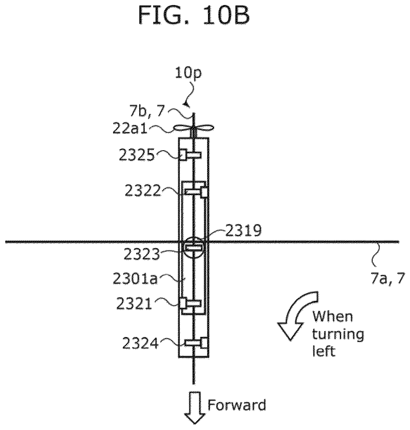

   FIG. 10B illustrates an example of another operation of the package transport device according to Embodiment 2 when traveling after transferring connection from the first rail to the second rail.
[FIG. 11]

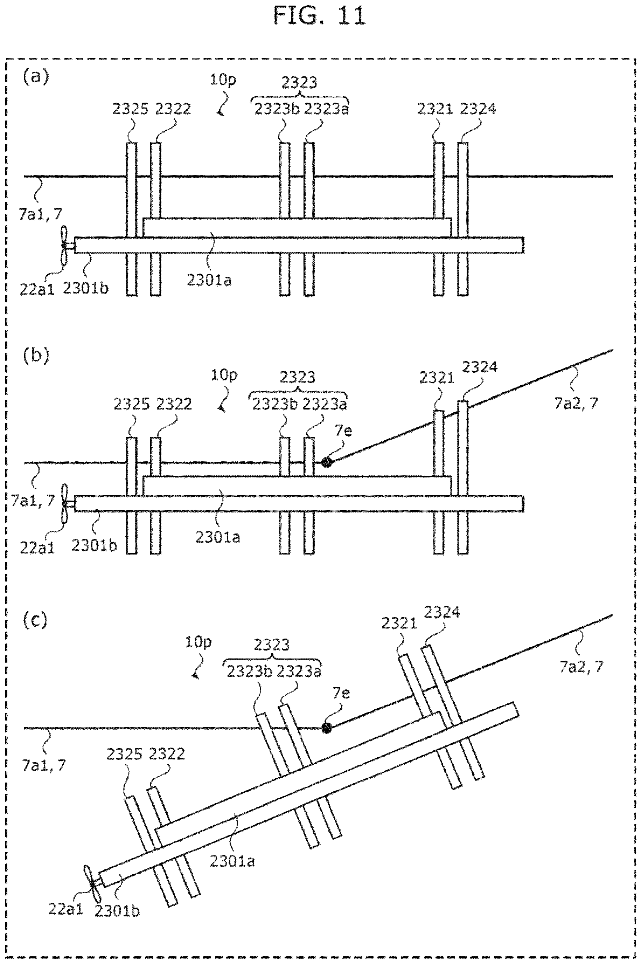

   FIG. 11 illustrates an example of an operation of the package transport device according to Embodiment 2 when it is ascending on an inclined rail.
[FIG. 12A]

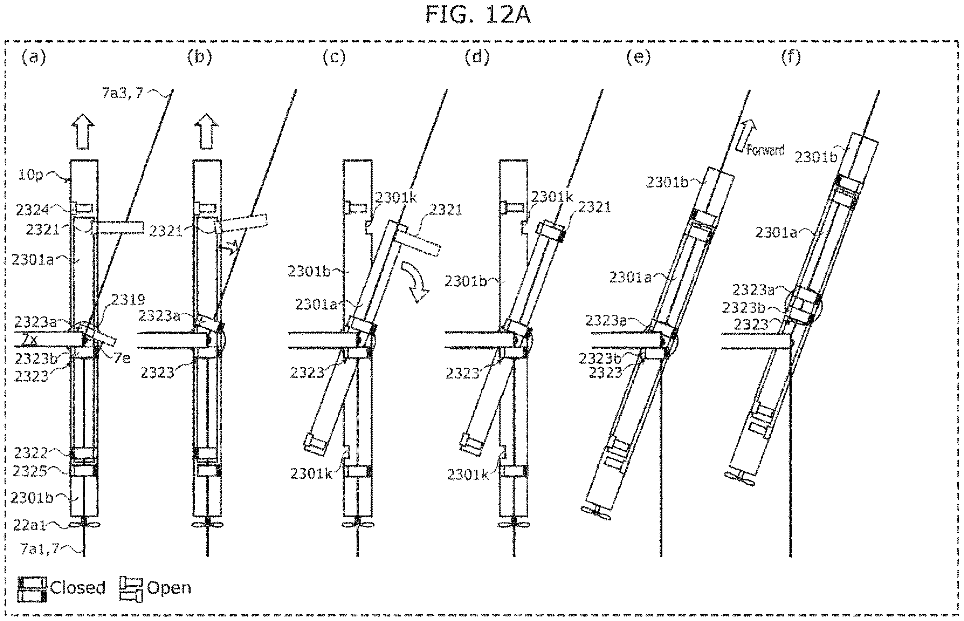

   FIG. 12A illustrates an example of an operation of the package transport device according to Embodiment 2 when it is turning right on a rail that changes trajectory to the right.
[FIG. 12B]

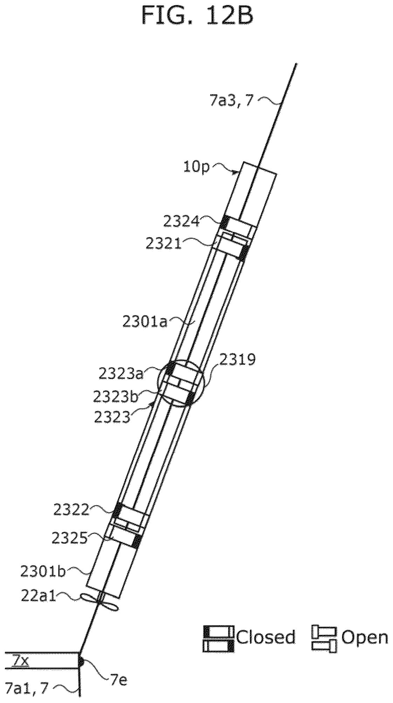

   FIG. 12B illustrates an example of an operation of the package transport device according to Embodiment 2 after it has turned right and is traveling on a rail.
[FIG. 12C]

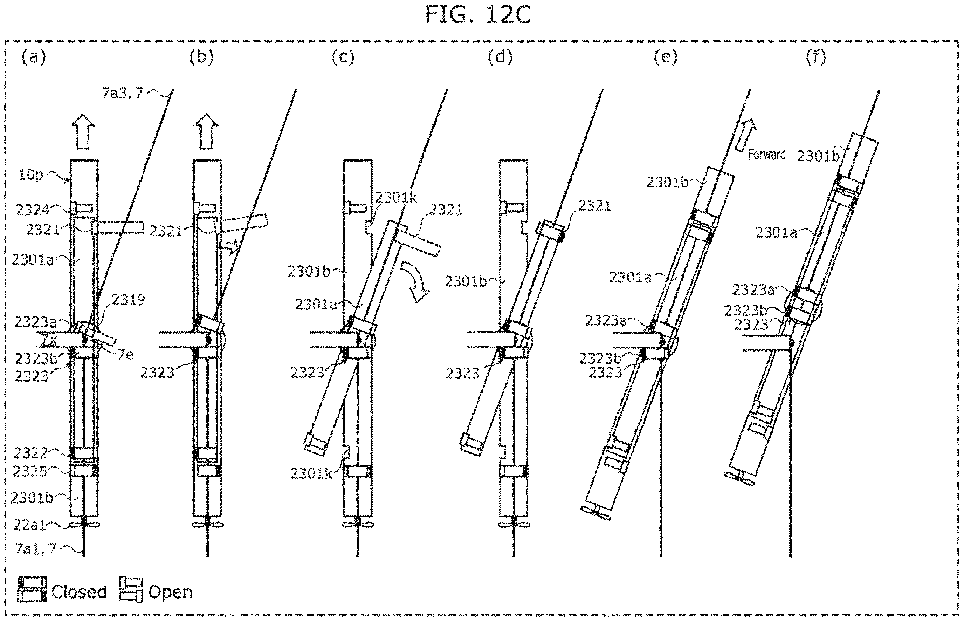

   FIG. 12C illustrates an example of another operation of the package transport device according to Embodiment 2 when it is turning right on a rail that changes trajectory to the right.
[FIG. 12D]

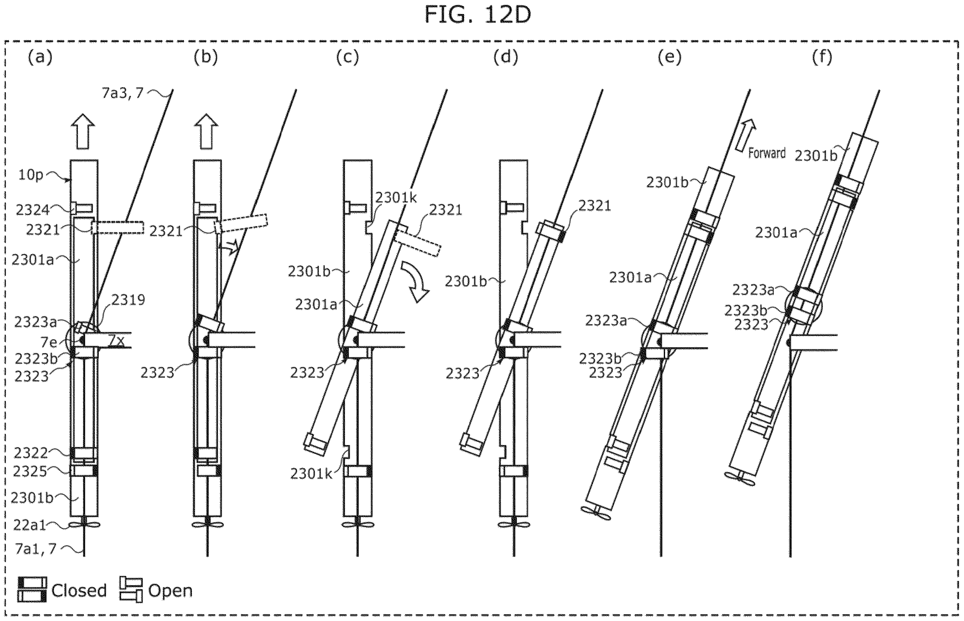

   FIG. 12D illustrates an example of an operation of the package transport device when it is turning right on a rail that changes trajectory to the right, in a case in which a rail support portion is provided in a different location.
[FIG. 13]

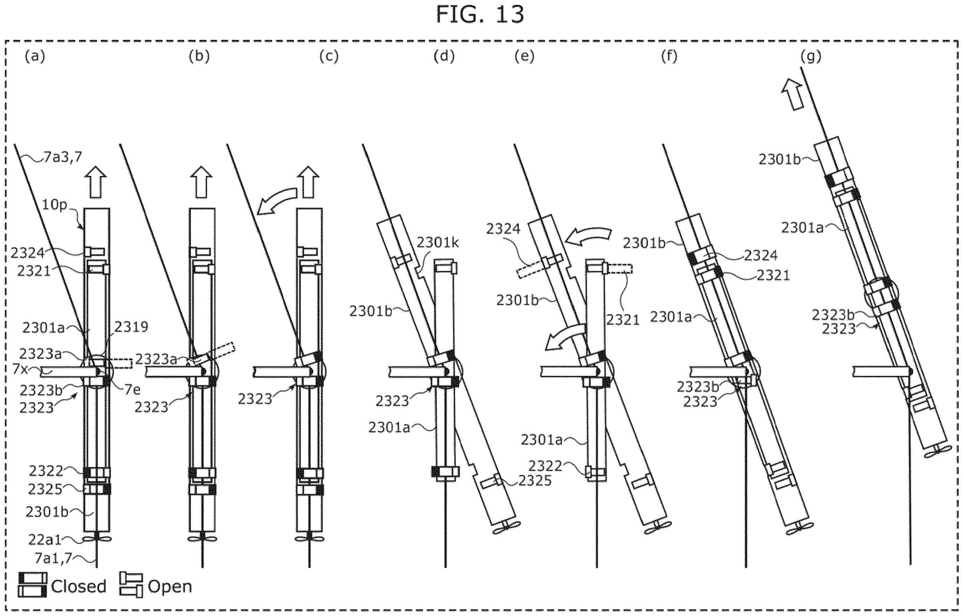

   FIG. 13 illustrates an example of an operation of the package transport device according to Embodiment 2 when it is turning left on a rail that changes trajectory to the left.
[FIG. 14]

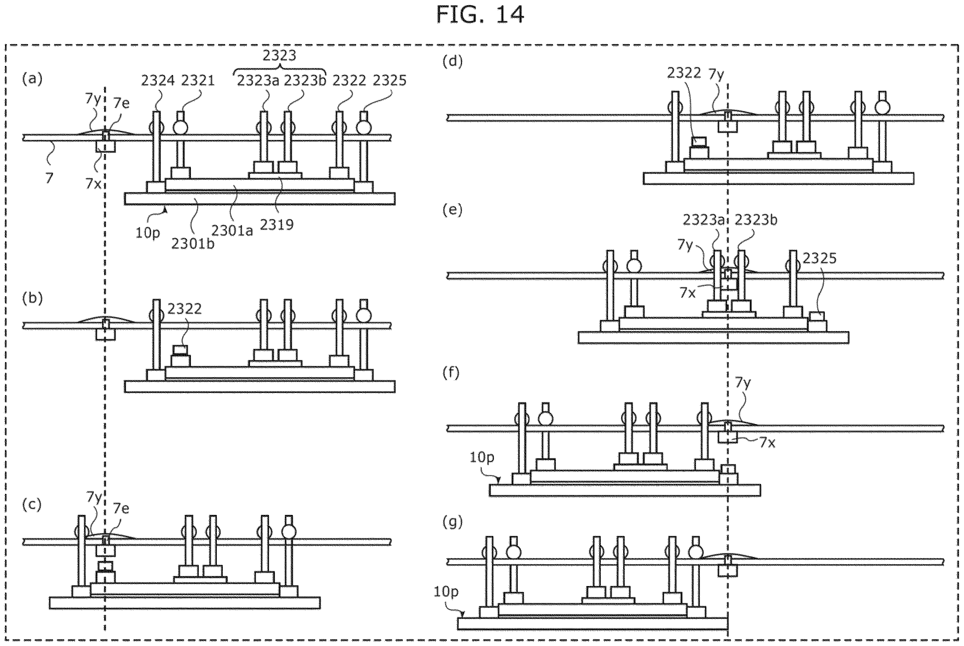

   FIG. 14 illustrates an example of an operation of the package transport device traveling over a hump according to Embodiment 2.
[FIG. 15]

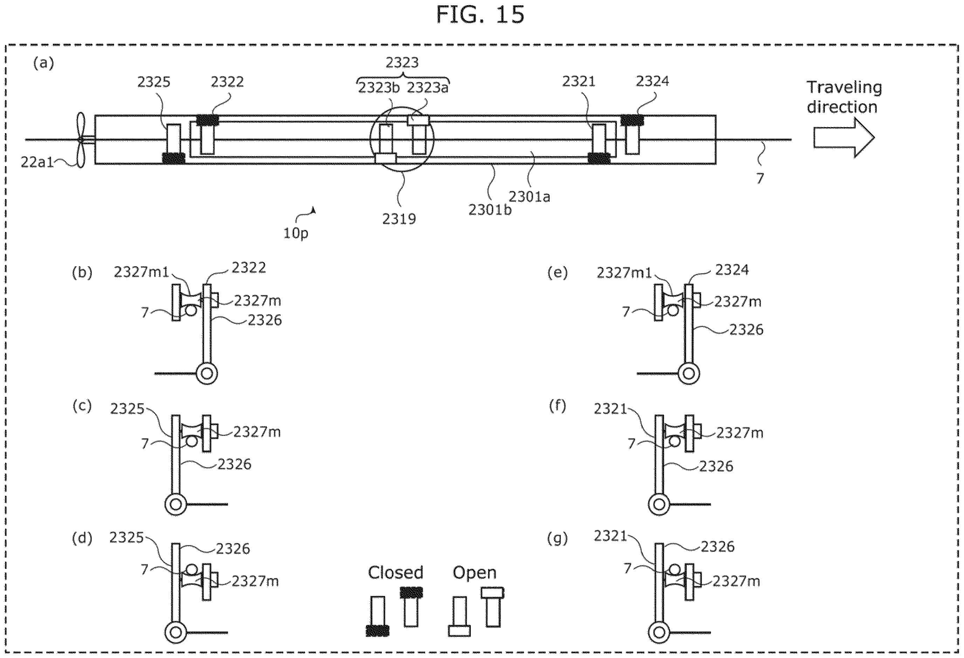

   FIG. 15 illustrates an example of a package transport device according to Variation 1 of Embodiment 2.
[FIG. 16]

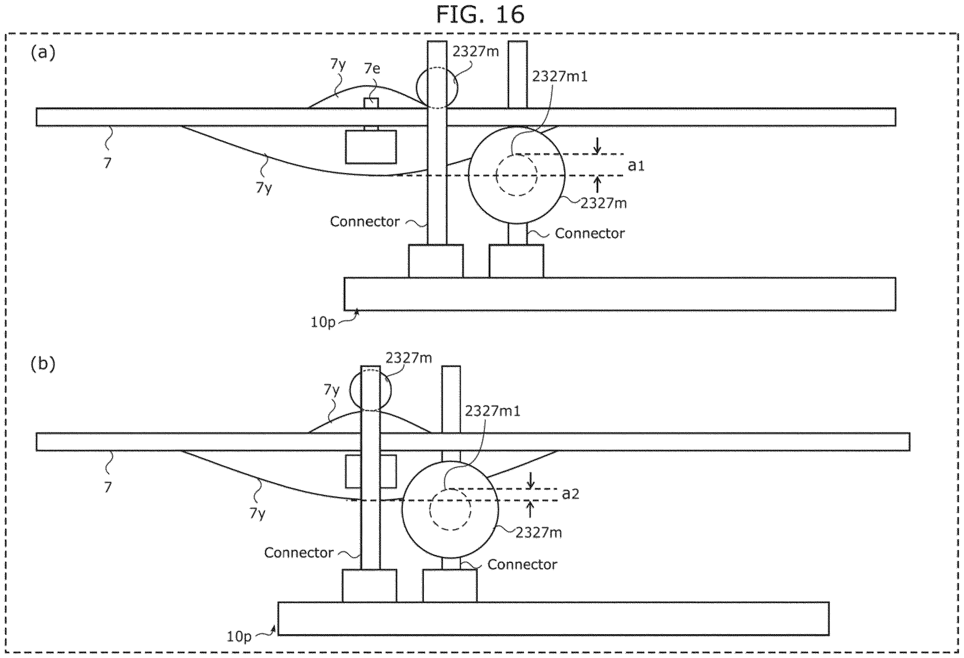

   FIG. 16 illustrates an example of a package transport device according to Variation 1 of Embodiment 2 traveling over a hump.
[FIG. 17]

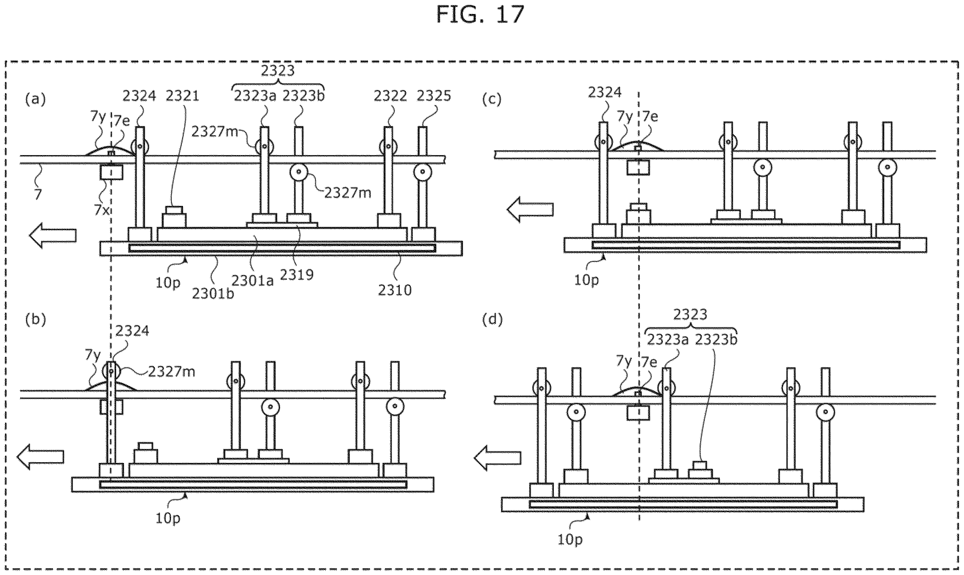

   FIG. 17 illustrates an example of what happens to the connectors when the package transport device according to Variation 1 of Embodiment 2 travels over the hump.
[FIG. 18]

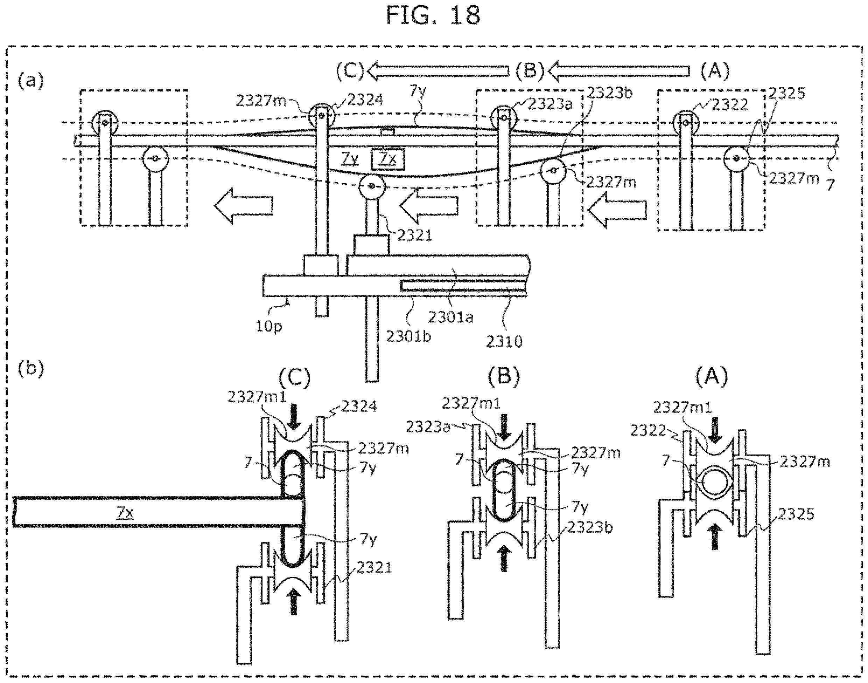

   FIG. 18 illustrates an example of another package transport device according to Variation 2 of Embodiment 2.
[FIG. 19]

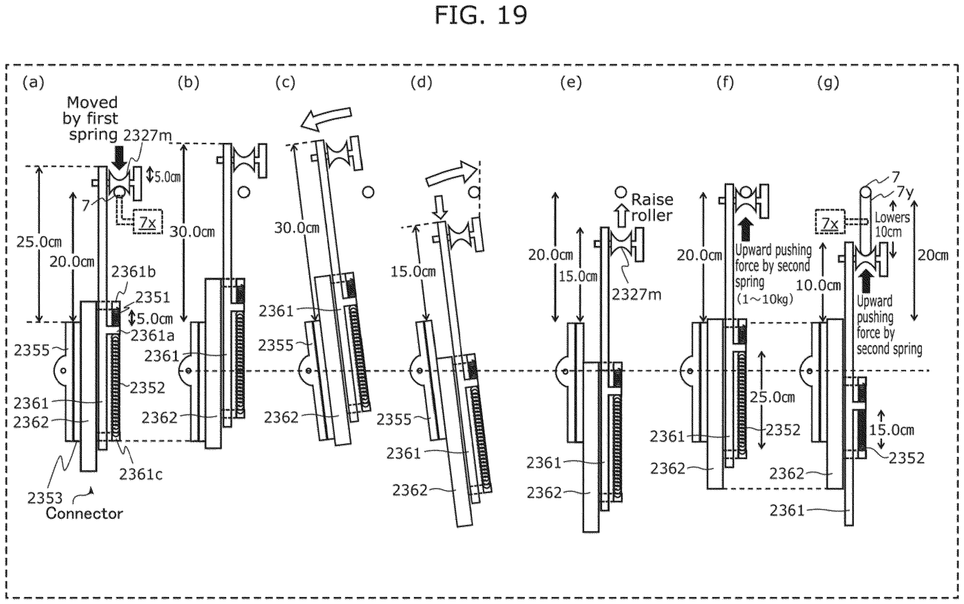

   FIG. 19 illustrates an example of the positions of the connectors of the package transport device according to Variation 2 of Embodiment 2 being displaced.
[FIG. 20]

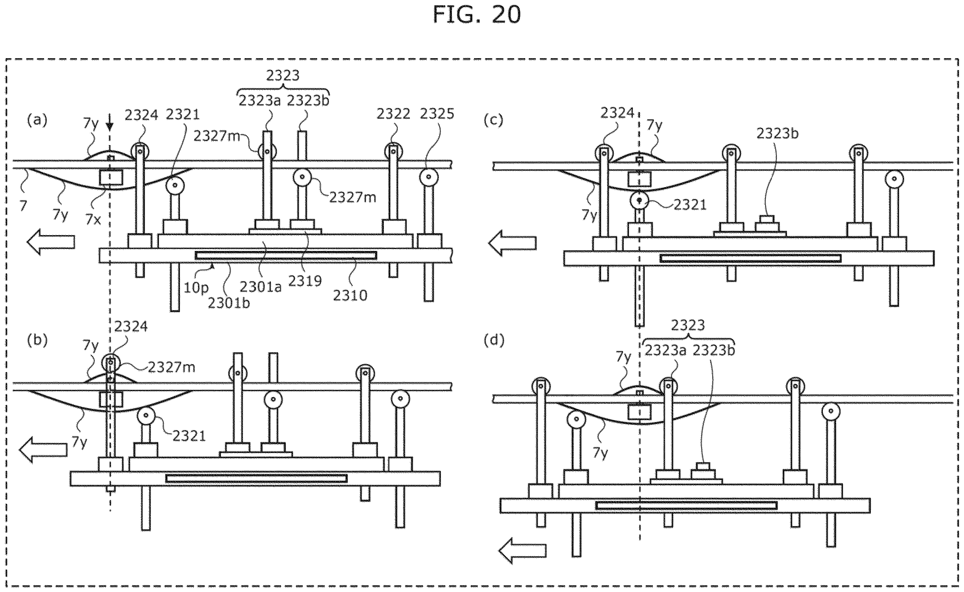

   FIG. 20 illustrates an example of what happens to the connectors when a different package transport device according to Variation 2 of Embodiment 2 travels over a hump.
[FIG. 21]

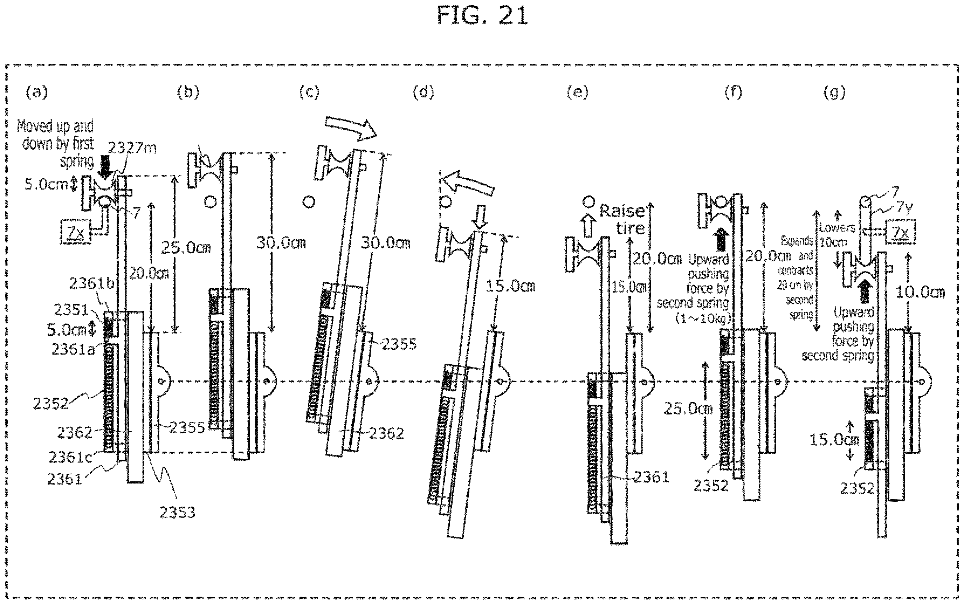

   FIG. 21 illustrates another example of positions of the connectors of the package transport device according to Variation 2 of Embodiment 2 being displaced.
[FIG. 22]

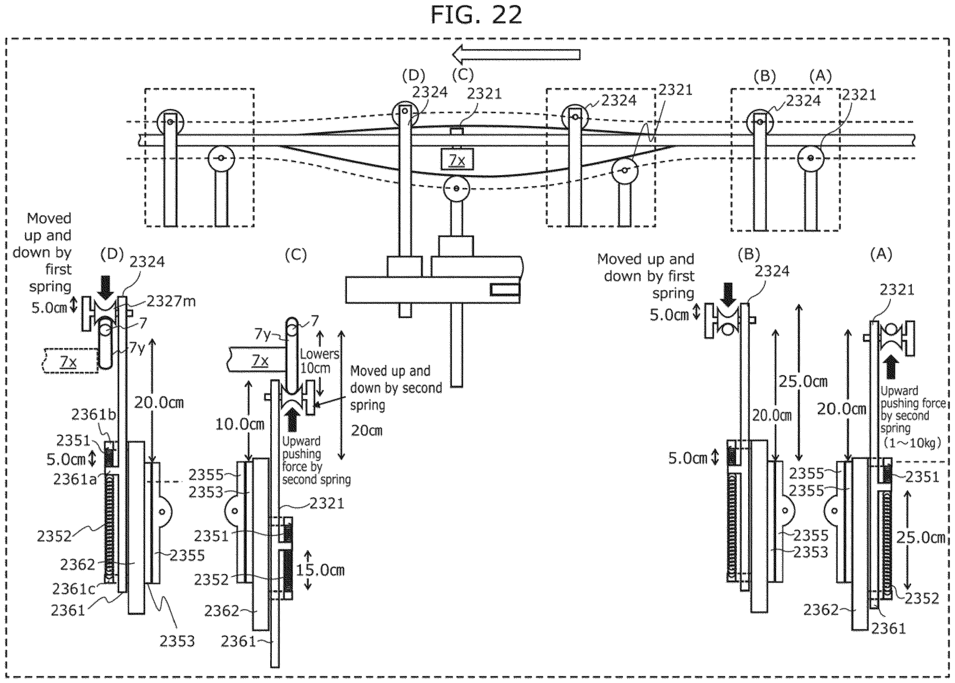

   FIG. 22 illustrates a detailed example of what happens to the connectors when the package transport device according to Variation 2 of Embodiment 2 travels over the hump.
[FIG. 23]

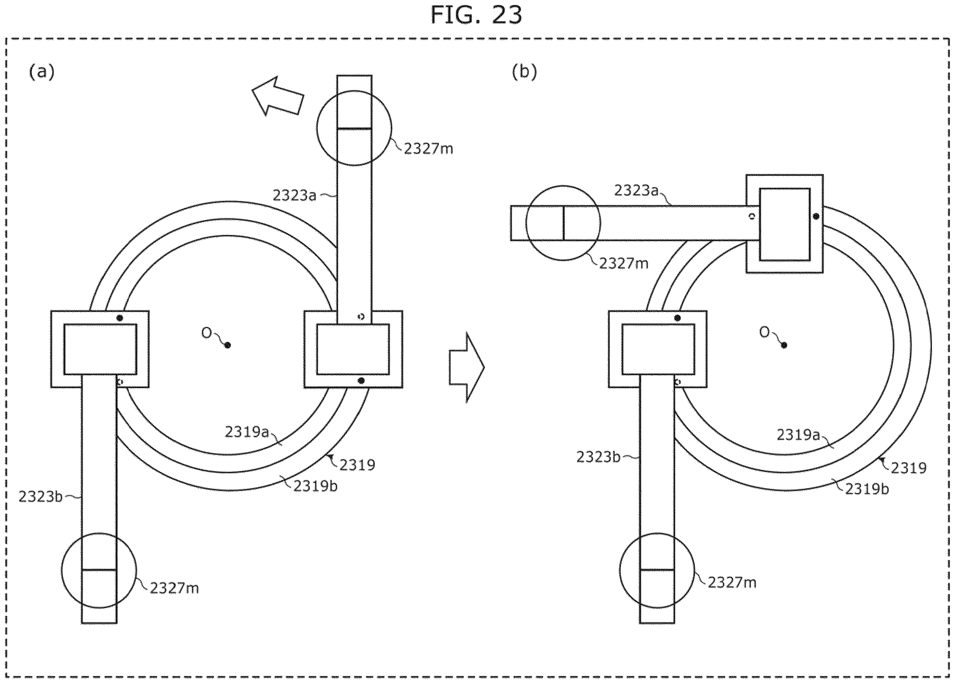

   FIG. 23 illustrates an example of the turntable of the package transport device according to Variation 3 of Embodiment 2.
[FIG. 24]

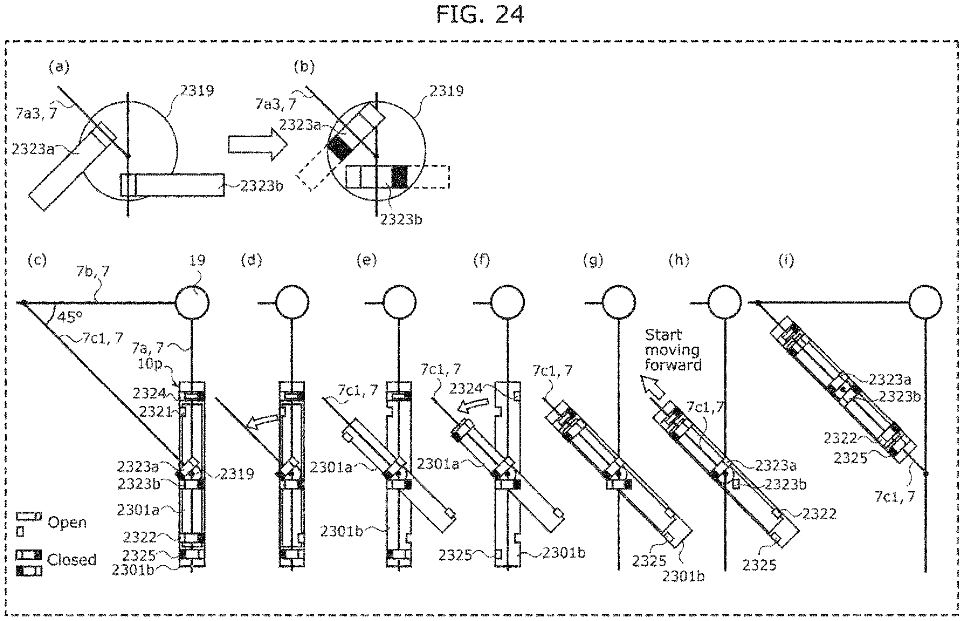

   FIG. 24 illustrates an example of an operation carried out when the package transport device according to Variation 3 of Embodiment 2 turns left.
[FIG. 25]

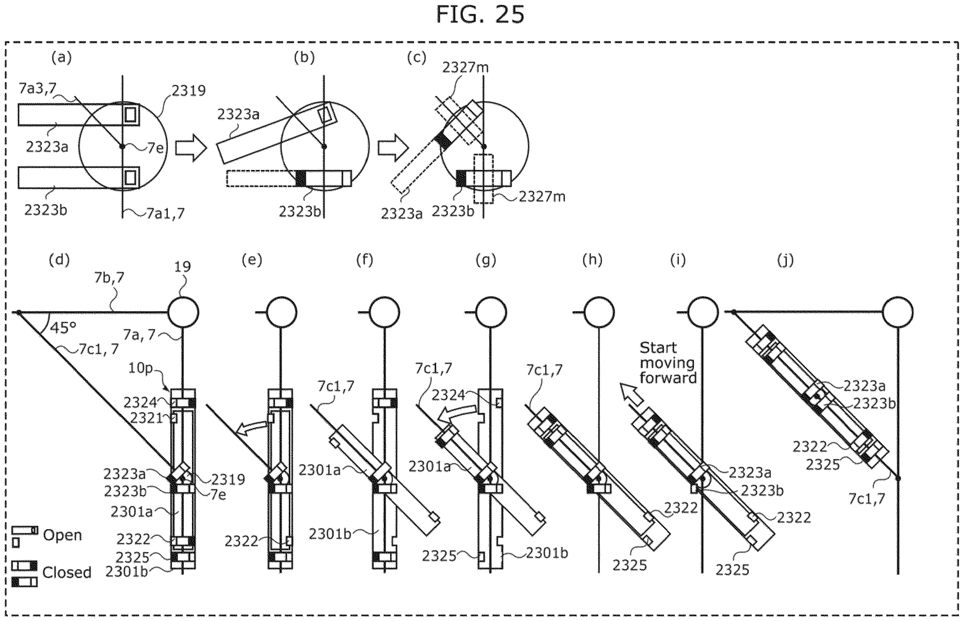

   FIG. 25 illustrates another example of an operation carried out when the package transport device according to Variation 3 of Embodiment 2 turns left.
[FIG. 26]

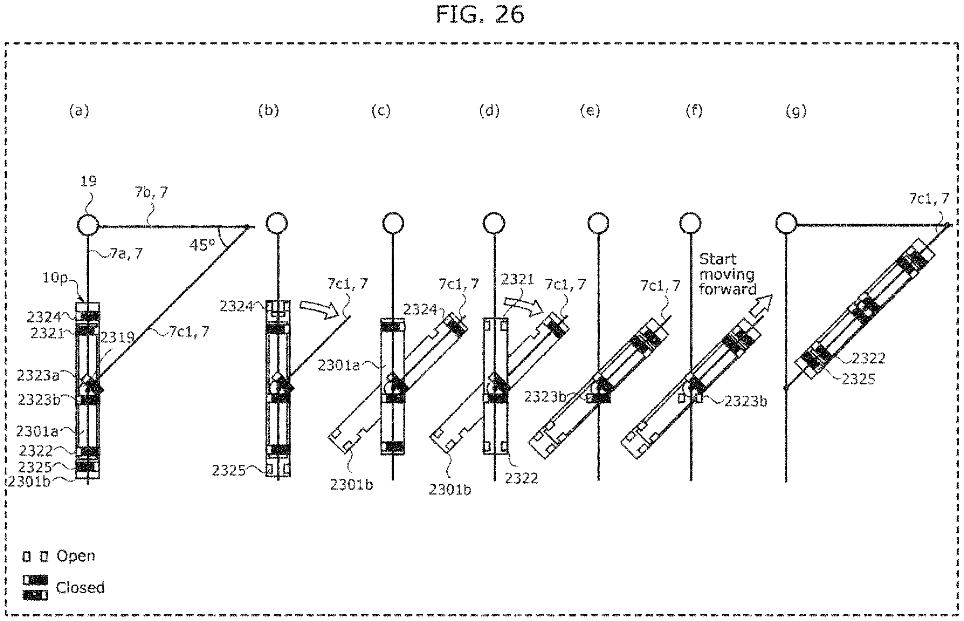

   FIG. 26 illustrates an example of an operation carried out when the package transport device according to Variation 3 of Embodiment 2 turns right.
[FIG. 27]

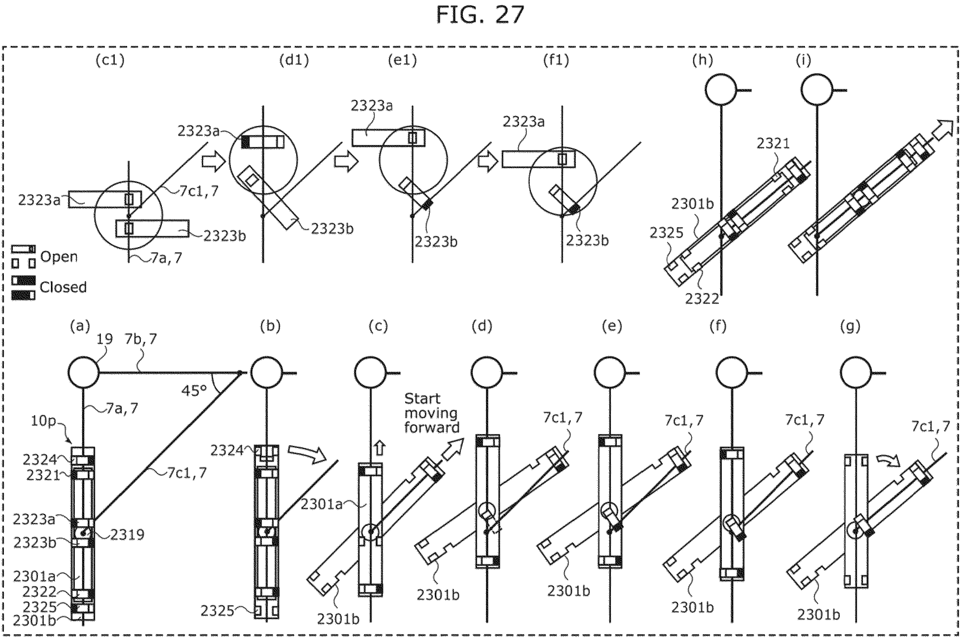

   FIG. 27 illustrates another example of an operation carried out when the package transport device according to Variation 3 of Embodiment 2 turns right.
[FIG. 28]

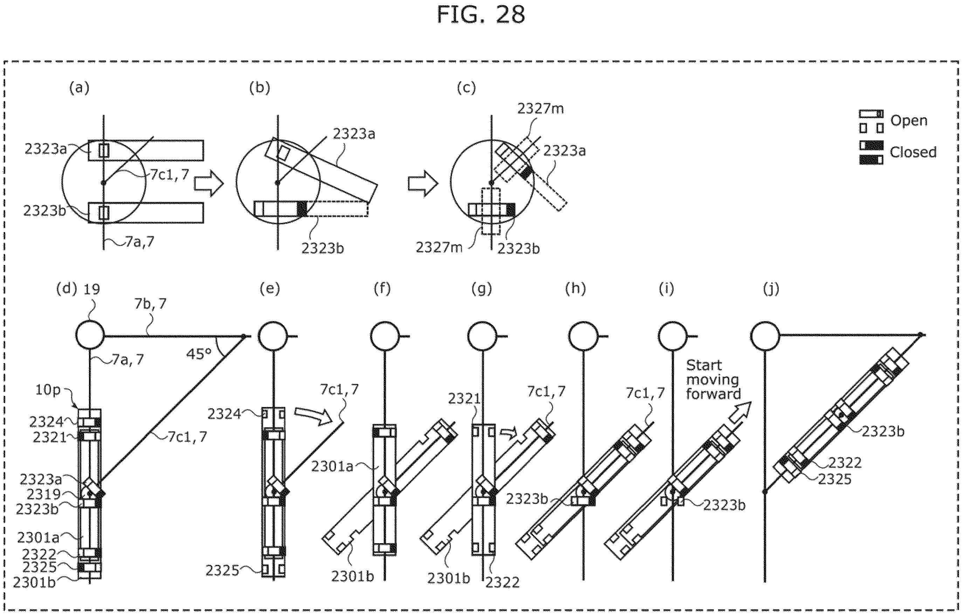

   FIG. 28 illustrates an example of another operation carried out when the package transport device according to Variation 3 of Embodiment 2 turns right.
[FIG. 29A]

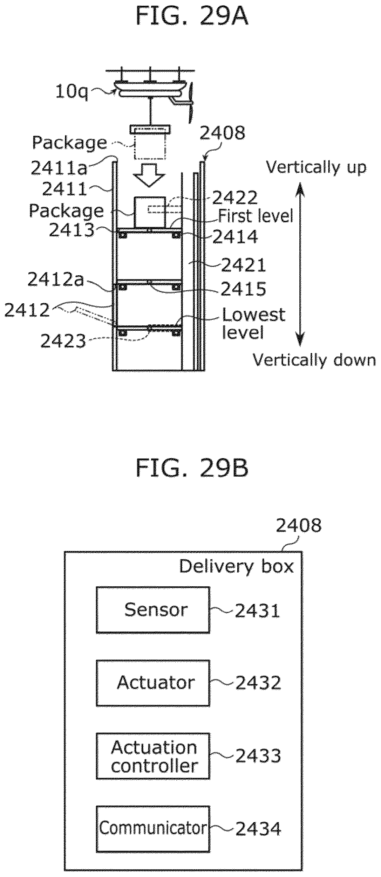

   FIG. 29A illustrates an example of a package transport device and a delivery box according to Embodiment 3.
[FIG. 29B]
   FIG. 29B is a block diagram illustrating an example of the delivery box according to Embodiment 3.
[FIG. 29C]

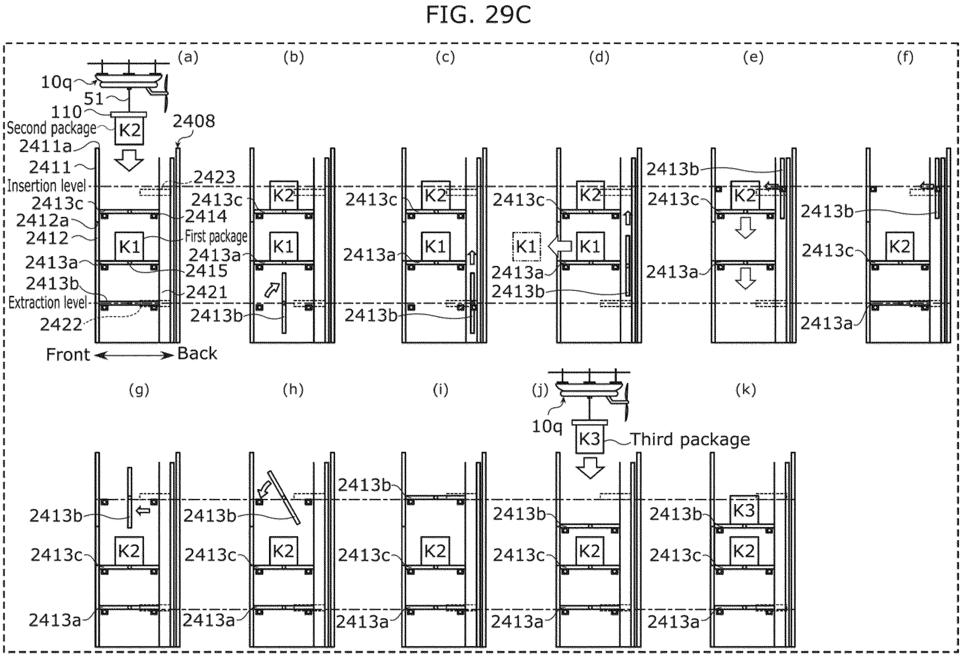

   FIG. 29C illustrates an example of how the delivery box according to Operation Example 1 of Embodiment 3 moves when viewed from the side.
[FIG. 29D]

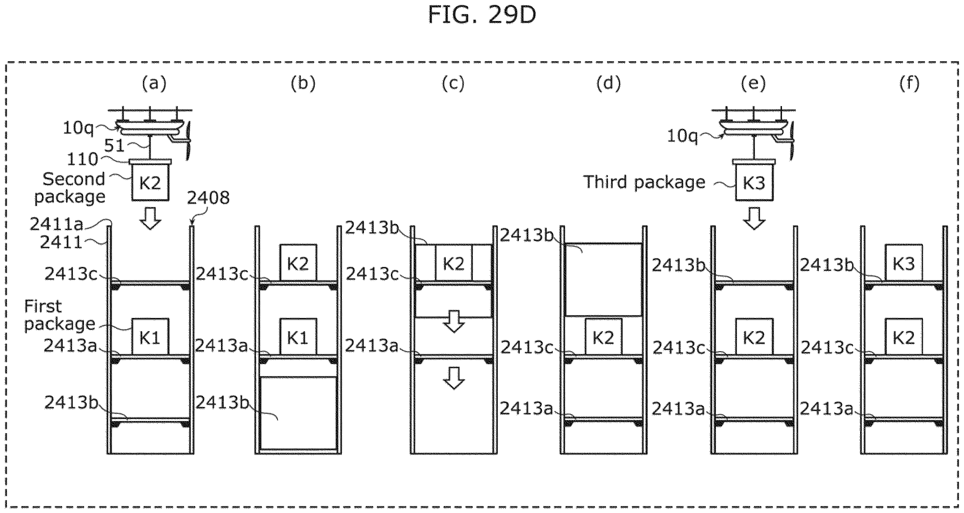

   FIG. 29D illustrates an example of how the delivery box according to Operation Example 1 of Embodiment 3 moves when viewed from the front.
[FIG. 29E]

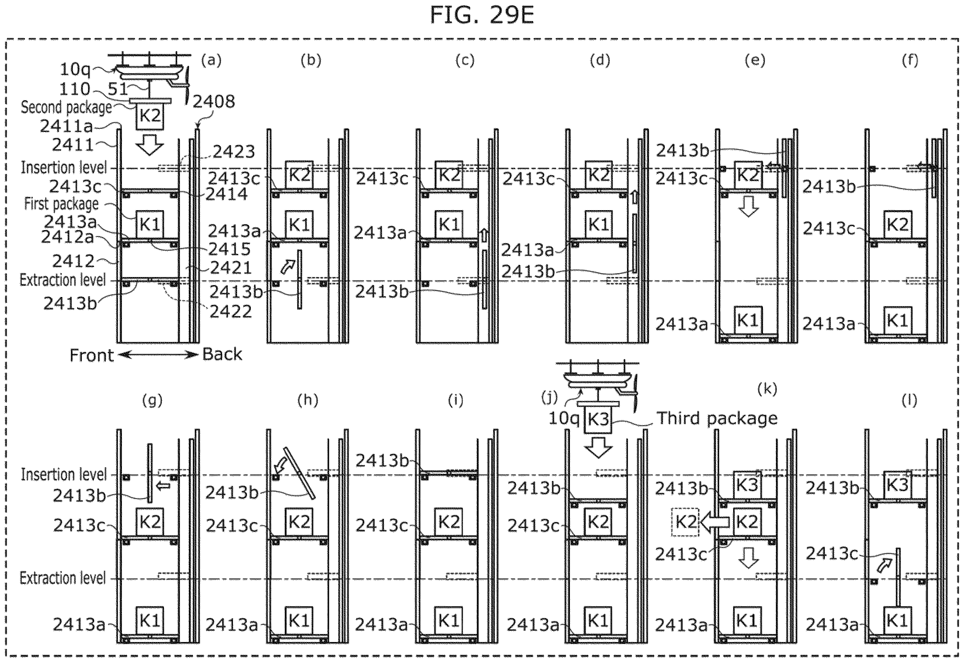

   FIG. 29E illustrates an example of how the delivery box according to Operation Example 2 of Embodiment 3 moves when viewed from the side.
[FIG. 29F]

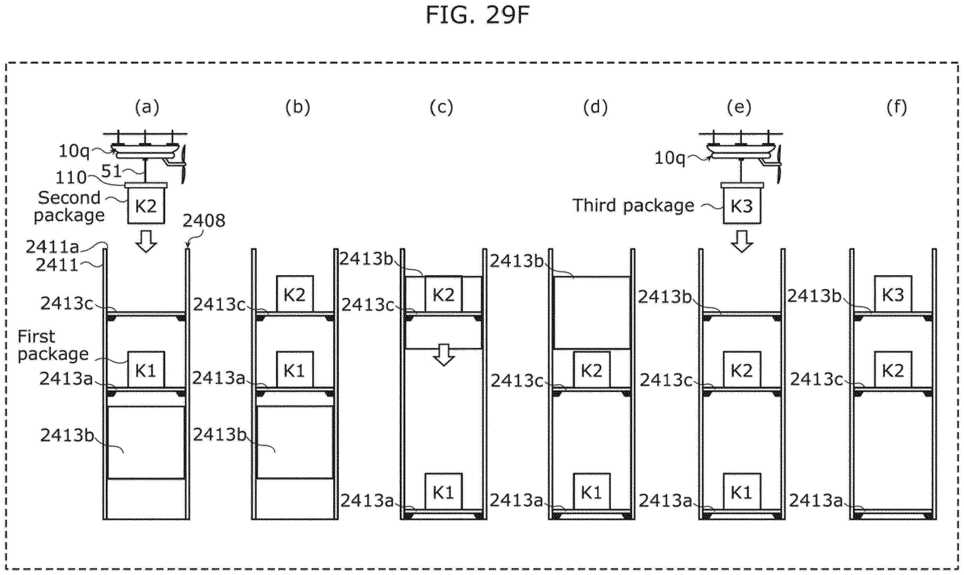

   FIG. 29F illustrates an example of how the delivery box according to Operation Example 2 of Embodiment 3 moves when viewed from the front.
[FIG. 29G]

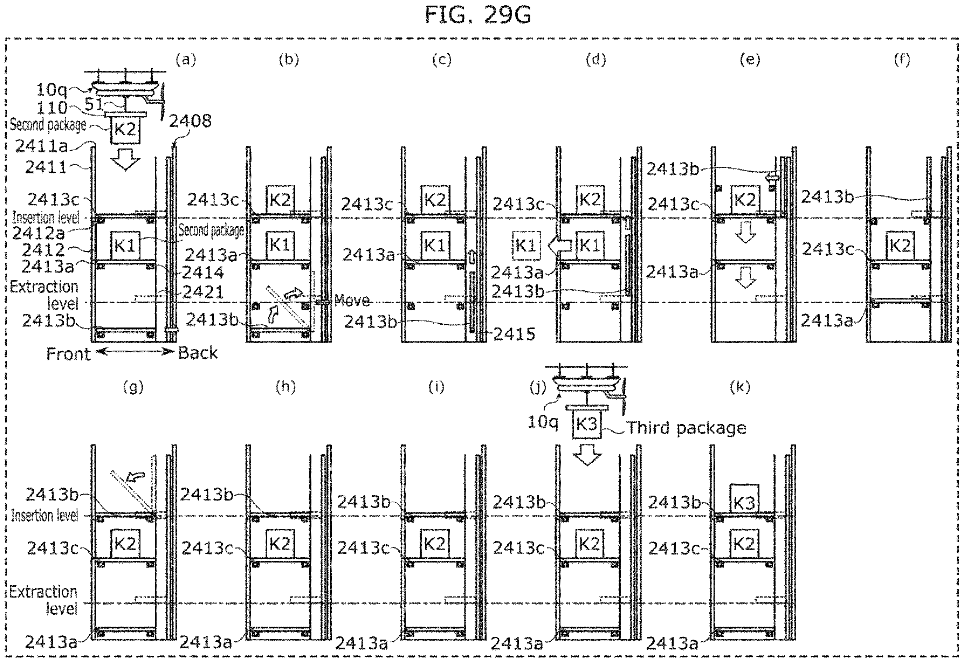

   FIG. 29G illustrates an example of how the delivery box according to Operation Example 3 of Embodiment 3 moves when viewed from the side.
[FIG. 29H]

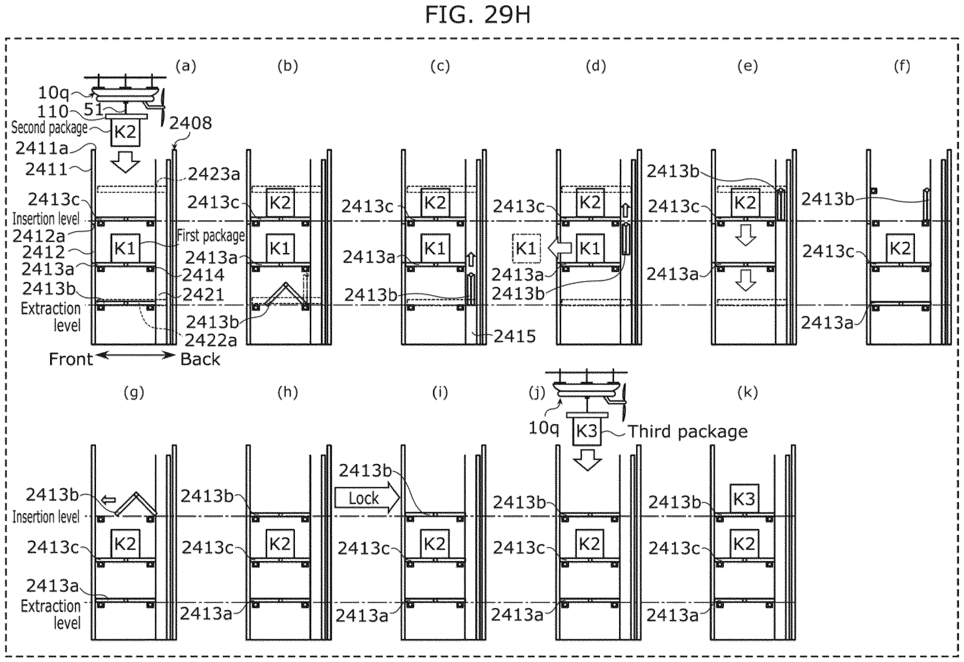

   FIG. 29H illustrates an example of how the delivery box according to Operation Example 4 of Embodiment 3 moves when viewed from the side.
[FIG. 29I]

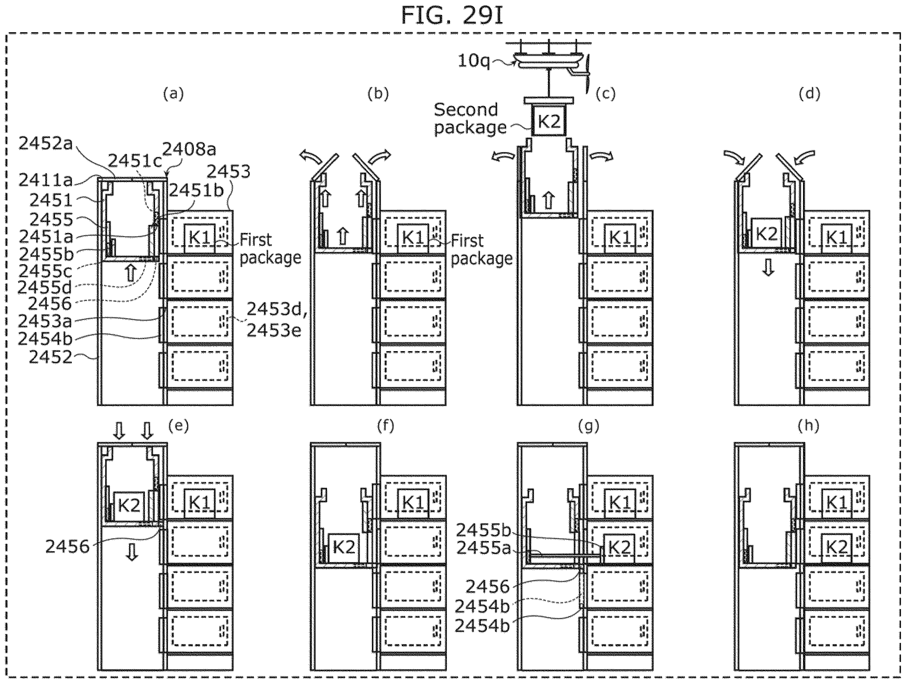

   FIG. 29I illustrates an example of how a delivery box according to a variation of Embodiment 3 moves when viewed from the side.
[FIG. 30A]

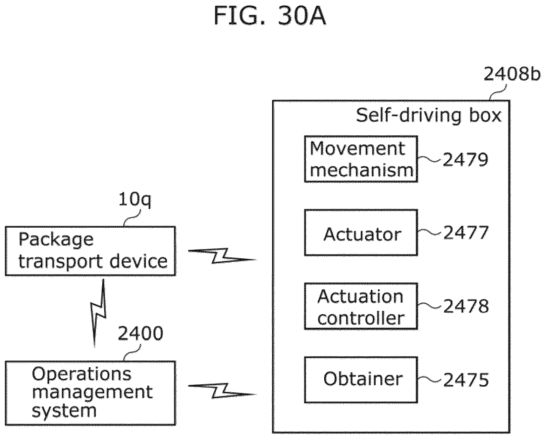

   FIG. 30A is a block diagram illustrating a self-driving box and an operations management system according to Embodiment 4.
[FIG. 30B]

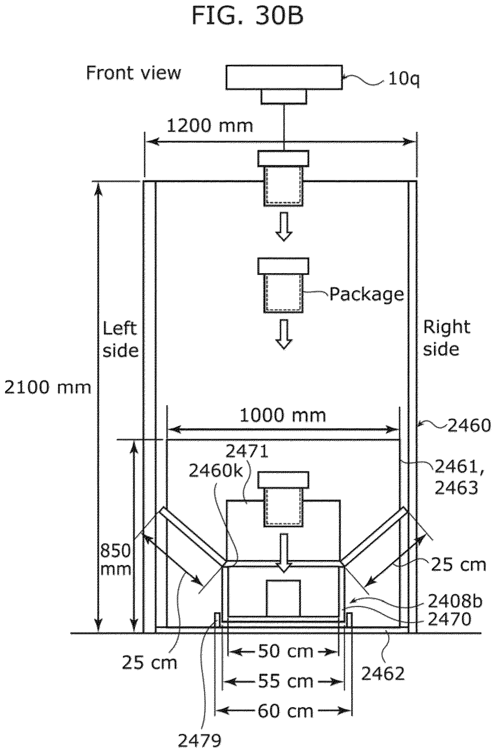

   FIG. 30B is a front view illustrating an example of the self-driving box according to Embodiment 4 when viewed from the front.
[FIG. 30C]

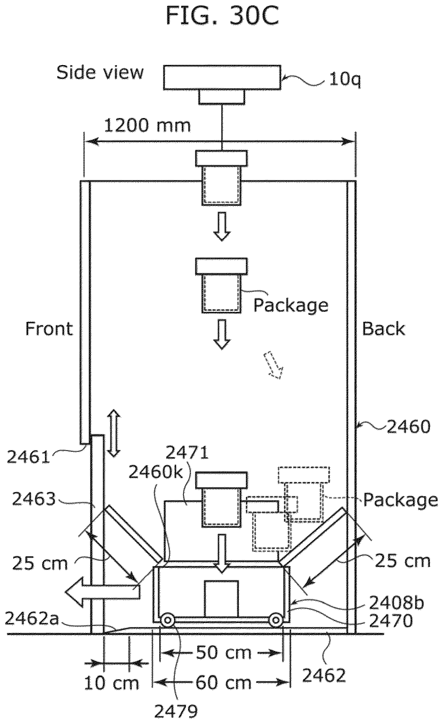

   FIG. 30C is a side view illustrating an example of the self-driving box according to Embodiment 4 when viewed from the side.
[FIG. 31]

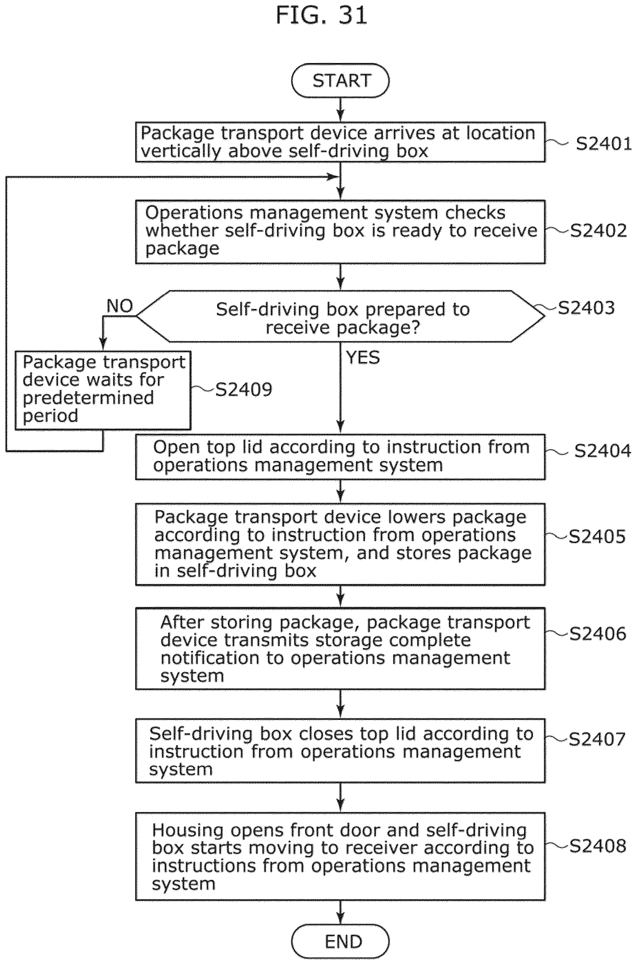

   FIG. 31 is a flowchart illustrating an example of an operation of the self-driving box according to Embodiment 4.
[FIG. 32]

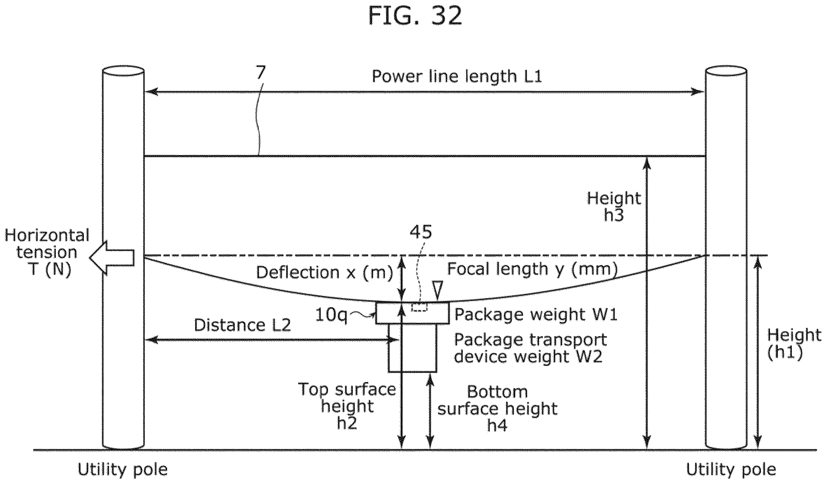

   FIG. 32 illustrates an example of the relationship between a package transport device and a power line according to Embodiment 5.
[FIG. 33A]

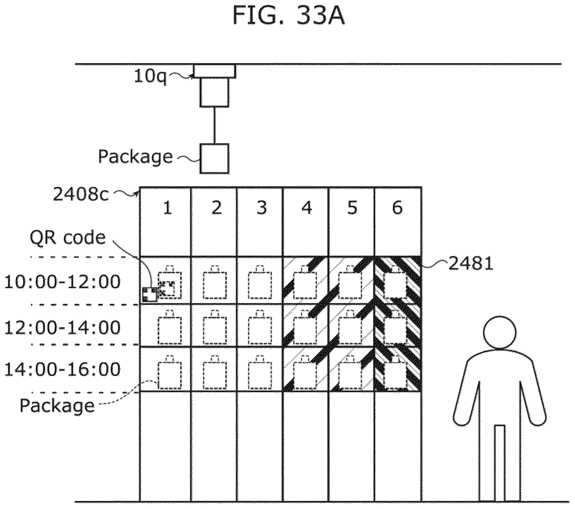

   FIG. 33A is a front view of a shipment box according to Embodiment 6.
[FIG. 33B]

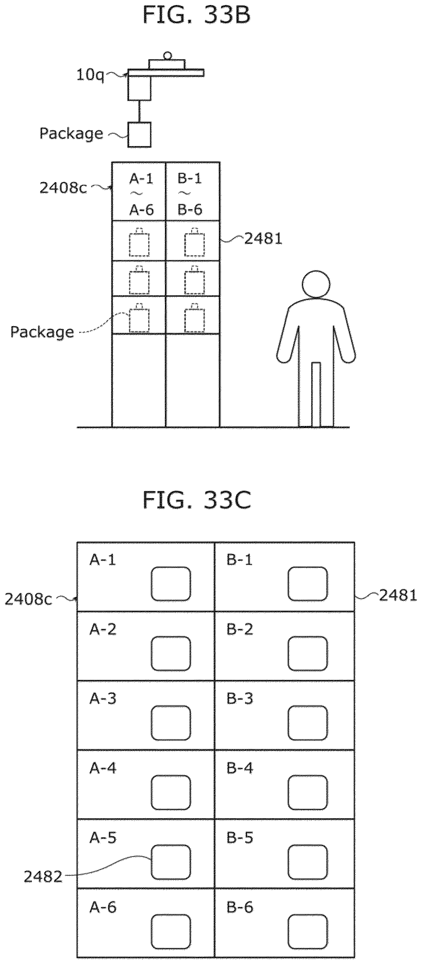

   FIG. 33B is a side view of the shipment box according to Embodiment 6.
[FIG. 33C]
   FIG. 33C is a top view of the shipment box according to Embodiment 6.
[FIG. 34]

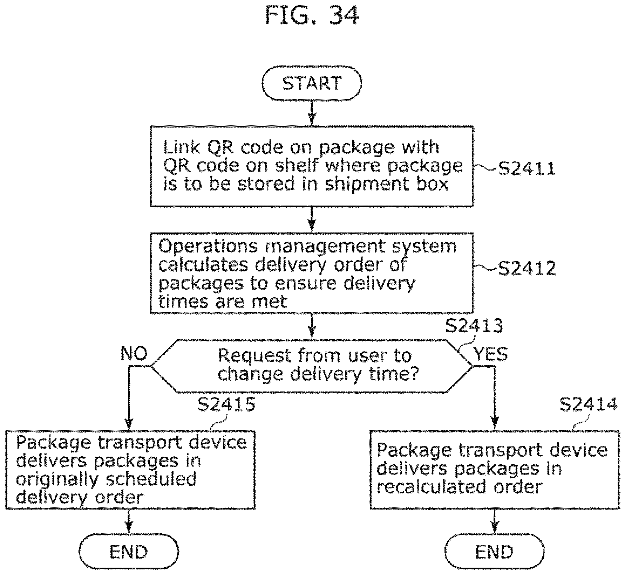

   FIG. 34 is a flowchart illustrating an example of an operation of the shipment box according to Embodiment 6.
[FIG. 35]

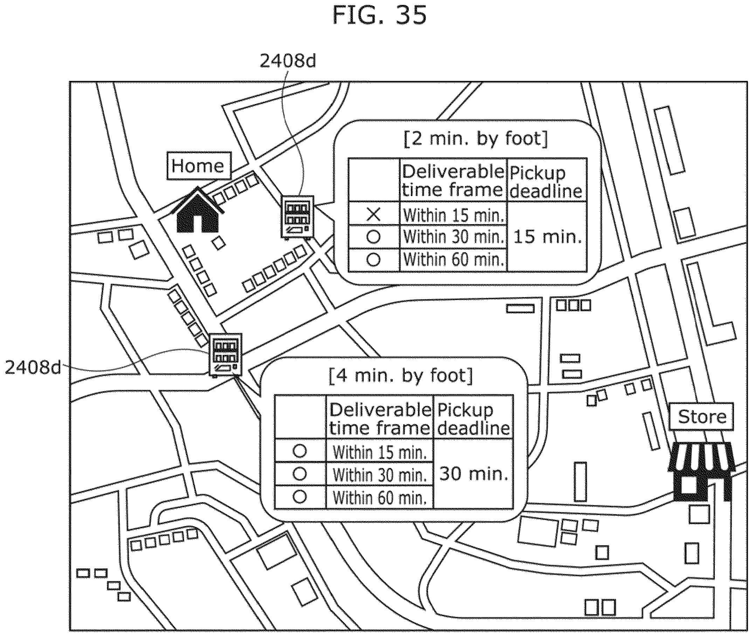

   FIG. 35 illustrates a map according to Embodiment 7 that includes, for example, the user's home and vending machines in the vicinity of the user's home.
[FIG. 36A]

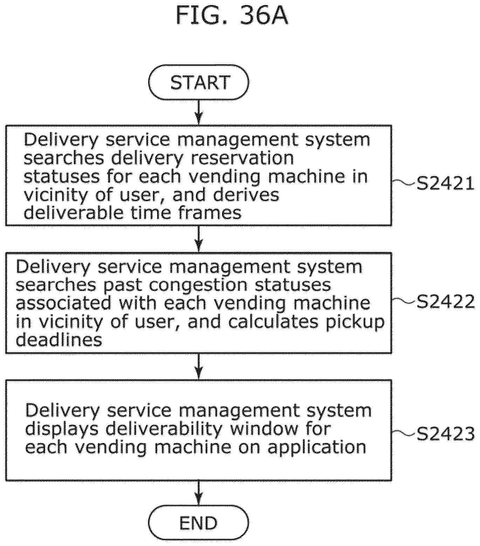

   FIG. 36A is a flowchart illustrating an example of an operation of a delivery service management system according to Embodiment 7.
[FIG. 36B]

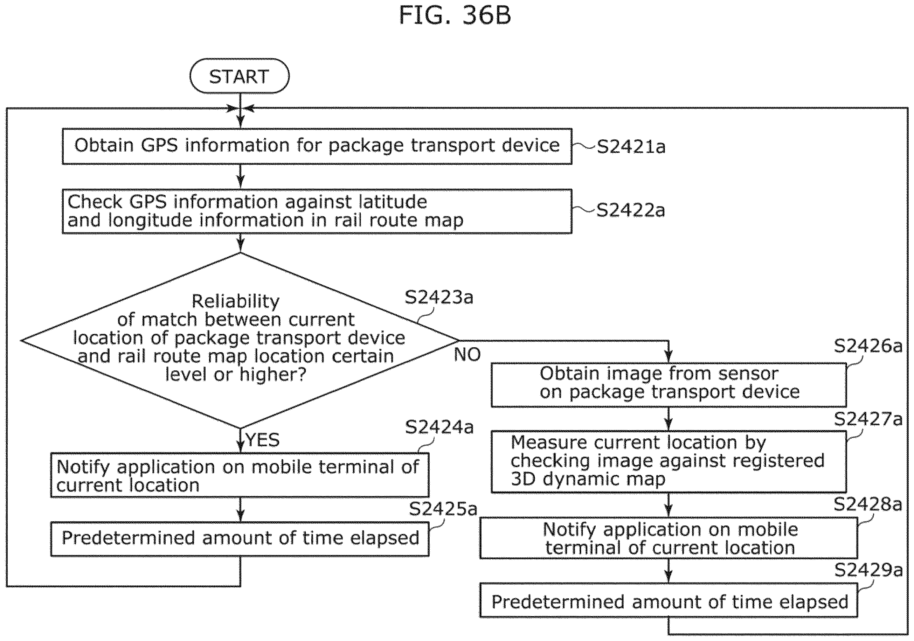

   FIG. 36B is a flowchart illustrating an example of an operation of an operations management system according to Embodiment 7.
[FIG. 37A]

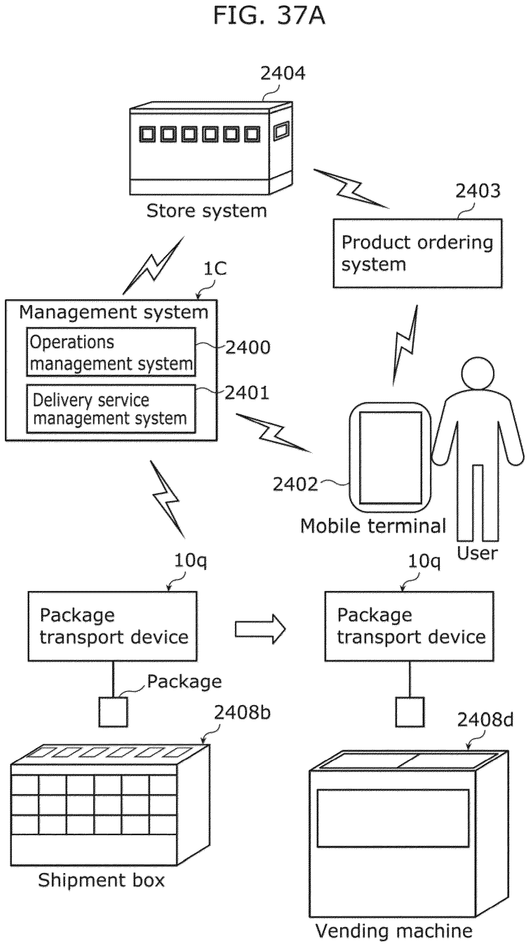

   FIG. 37A is a block diagram illustrating an example of a management system, etc., according to Embodiment 8.
[FIG. 37B]

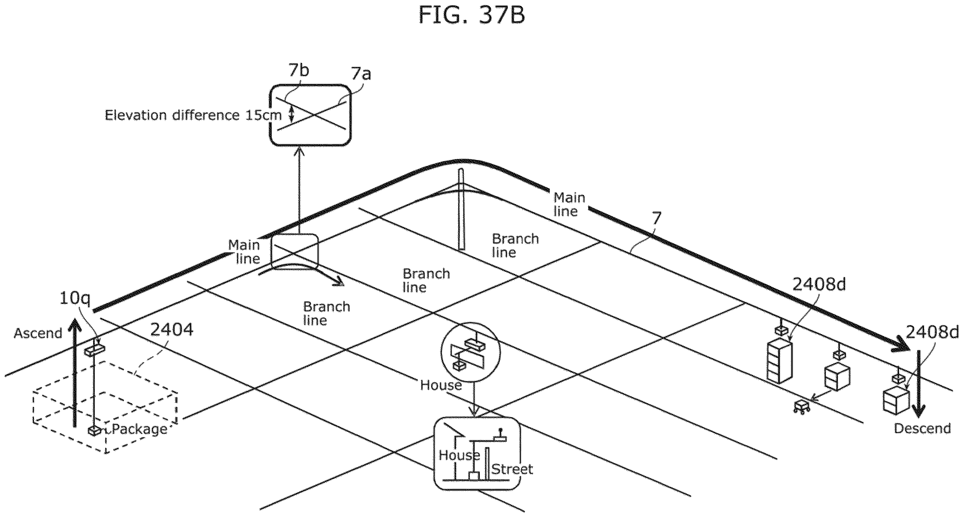

   FIG. 37B is a schematic diagram illustrating rails from the sender to the receiver.
[FIG. 38]

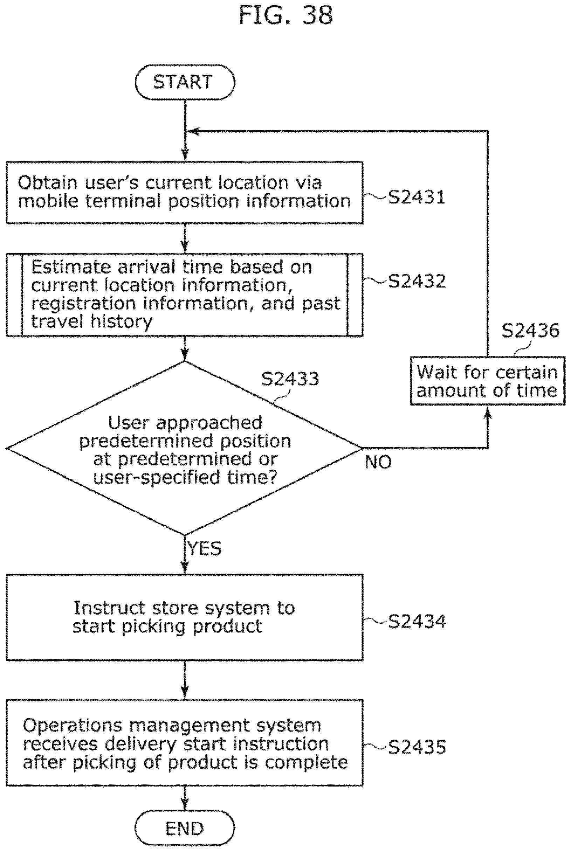

   FIG. 38 is a flowchart illustrating an example of an operation of a delivery service management system according to Operation Example 1 of Embodiment 8.
[FIG. 39]

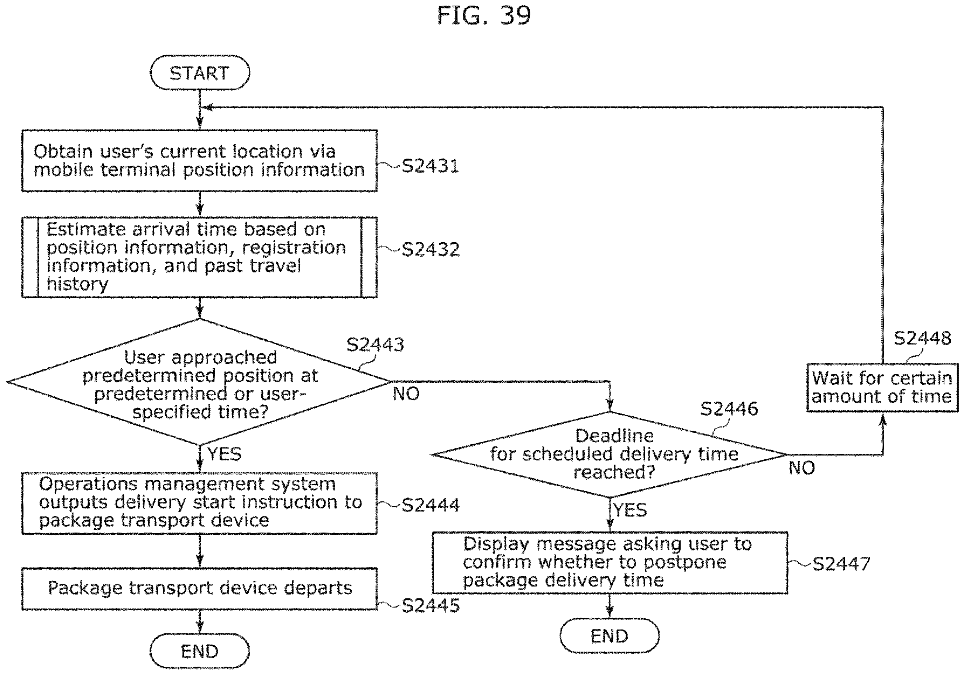

   FIG. 39 is a flowchart illustrating an example of an operation of a management system according to Operation Example 2 of Embodiment 8.
[FIG. 40A]

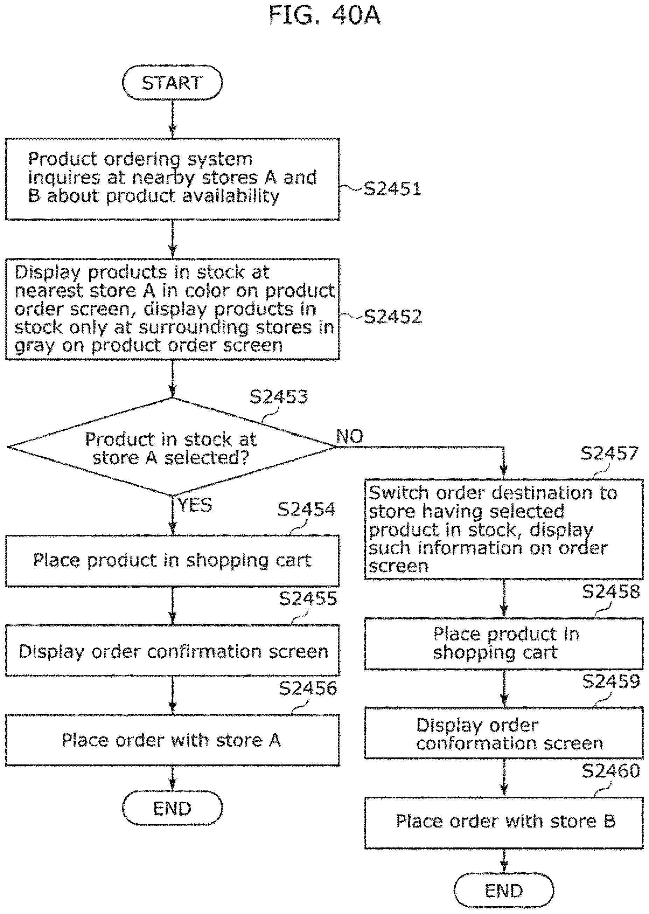

   FIG. 40A is a flowchart illustrating an example of an operation of a product ordering system according to Operation Example 3 of Embodiment 8.
[FIG. 40B]

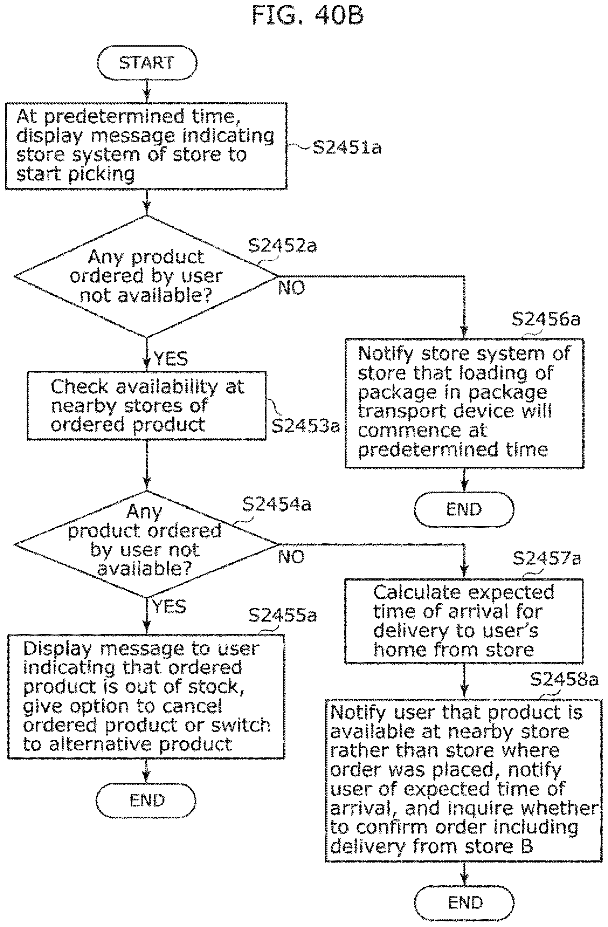

   FIG. 40B is a flowchart illustrating an example of an operation of a product ordering system according to Operation Example 4 of Embodiment 8.
[FIG. 40C]

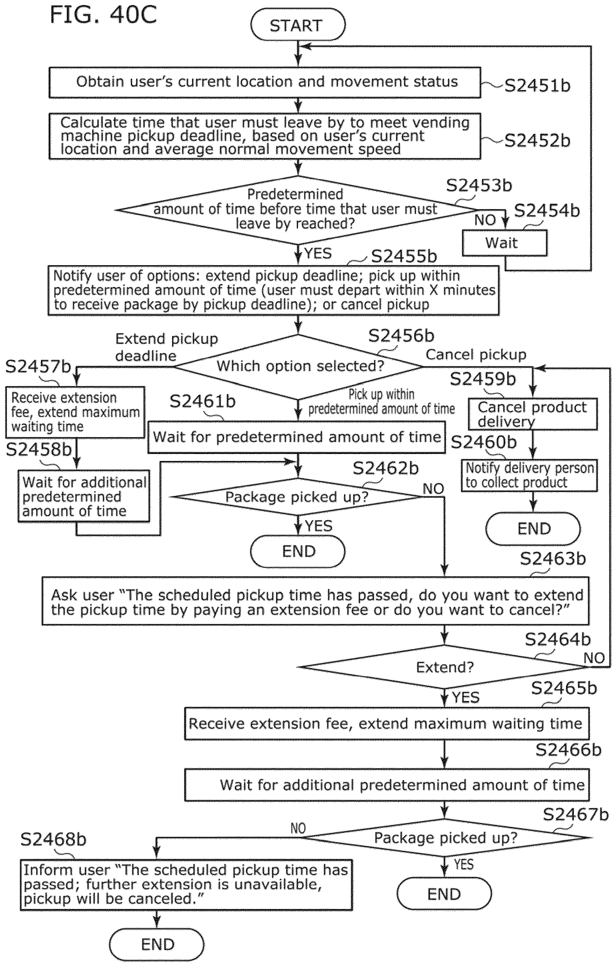

   FIG. 40C is a flowchart illustrating an example of an operation of a product ordering system according to Operation Example 5 of Embodiment 8.
[FIG. 41]

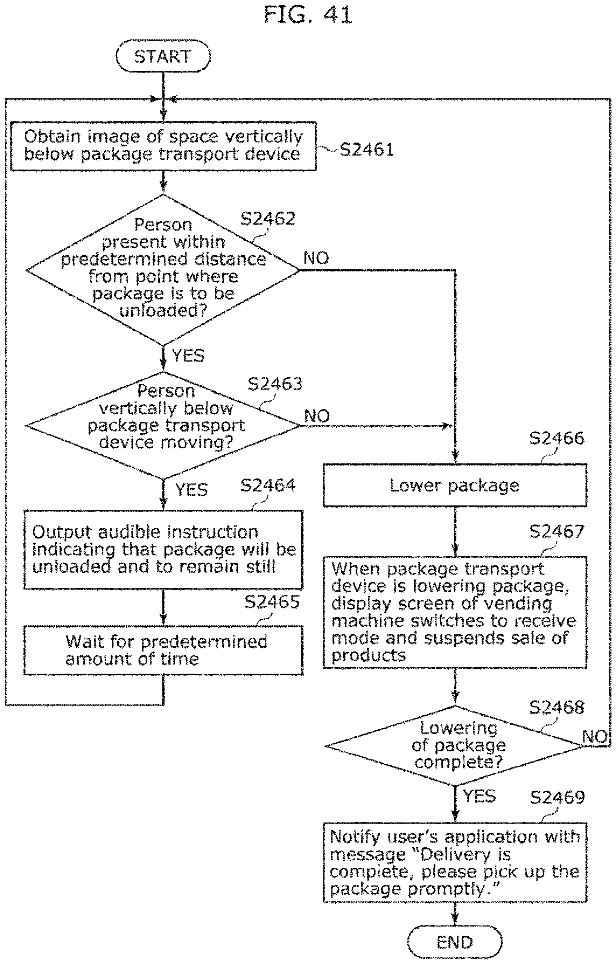

   FIG. 41 is a flowchart illustrating an example of an operation of the package transport device according to Operation Example 6 of Embodiment 8.
[FIG. 42]

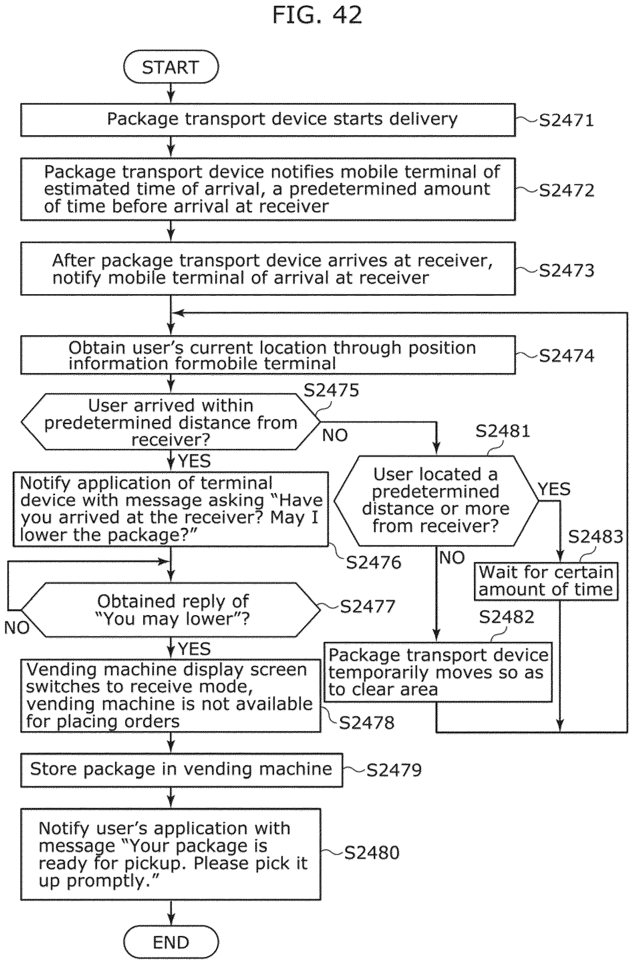

   FIG. 42 is a flowchart illustrating an example of an operation of the package transport device according to Operation Example 7 of Embodiment 8.
[FIG. 43A]

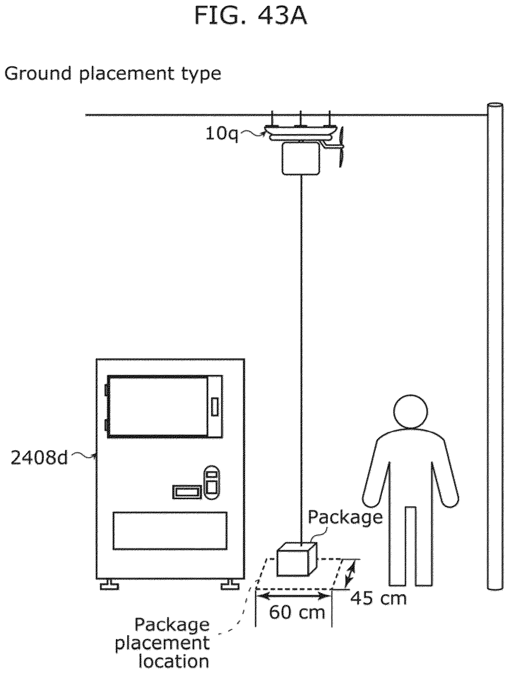

   FIG. 43A illustrates an example of an operation of a ground placement type in which a person receives a package from the package transport device according to Operation Example 8 of Embodiment 8.
[FIG. 43B]

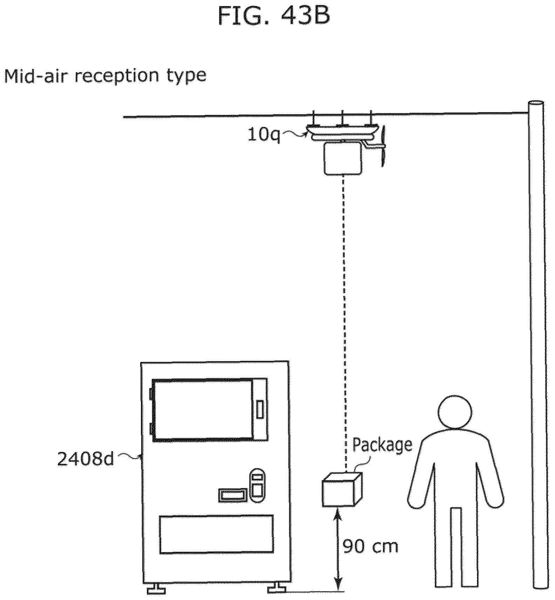

   FIG. 43B illustrates an example of an operation of an aerial pickup type in which a person receives a package directly from the package transport device according to Operation Example 8 of Embodiment 8.
[FIG. 44]

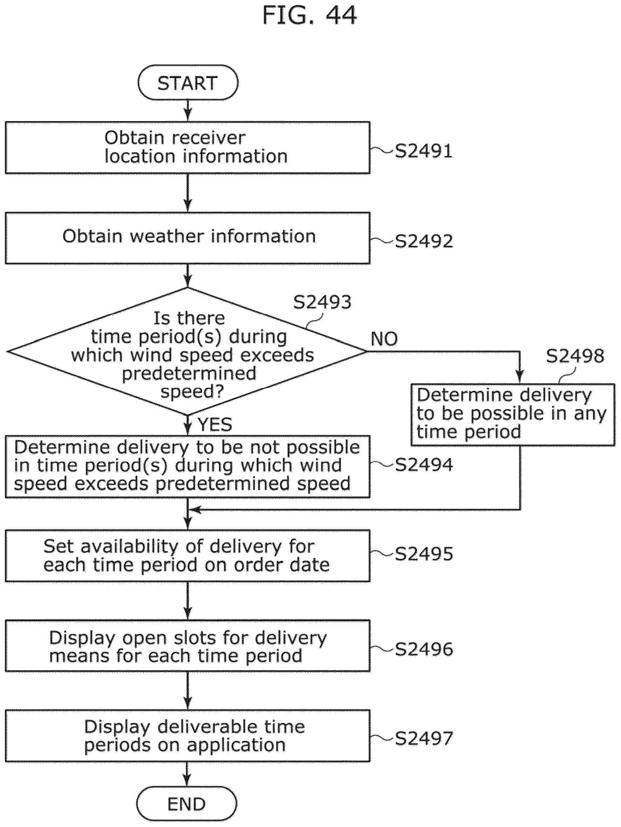

   FIG. 44 is a flowchart illustrating an example of an operation of a product ordering system according to Operation Example 9 of Embodiment 8.
[FIG. 45]

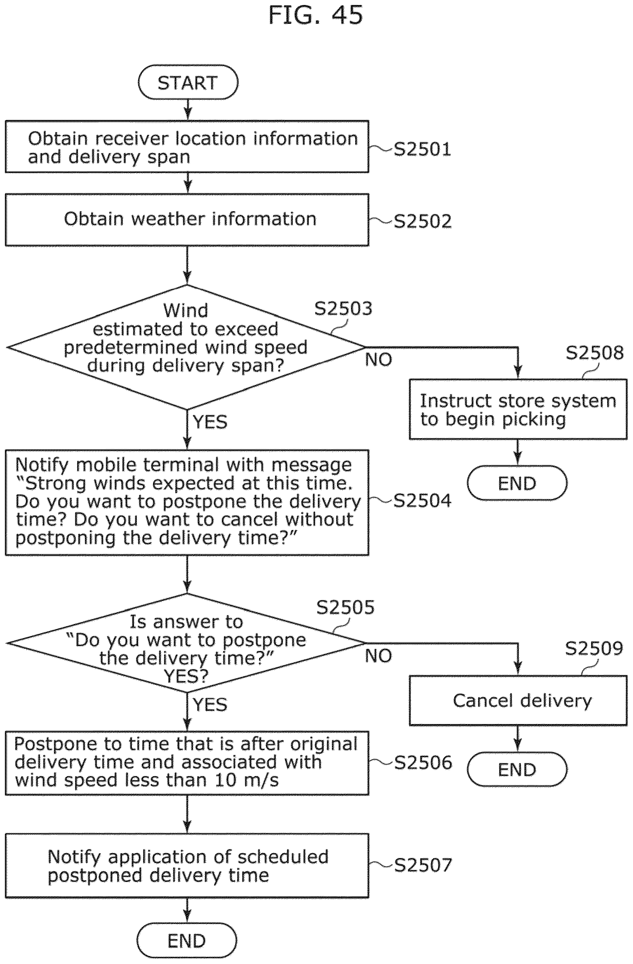

   FIG. 45 is a flowchart illustrating an example of an operation of a delivery service management system according to Operation Example 10 of Embodiment 8.
[FIG. 46]

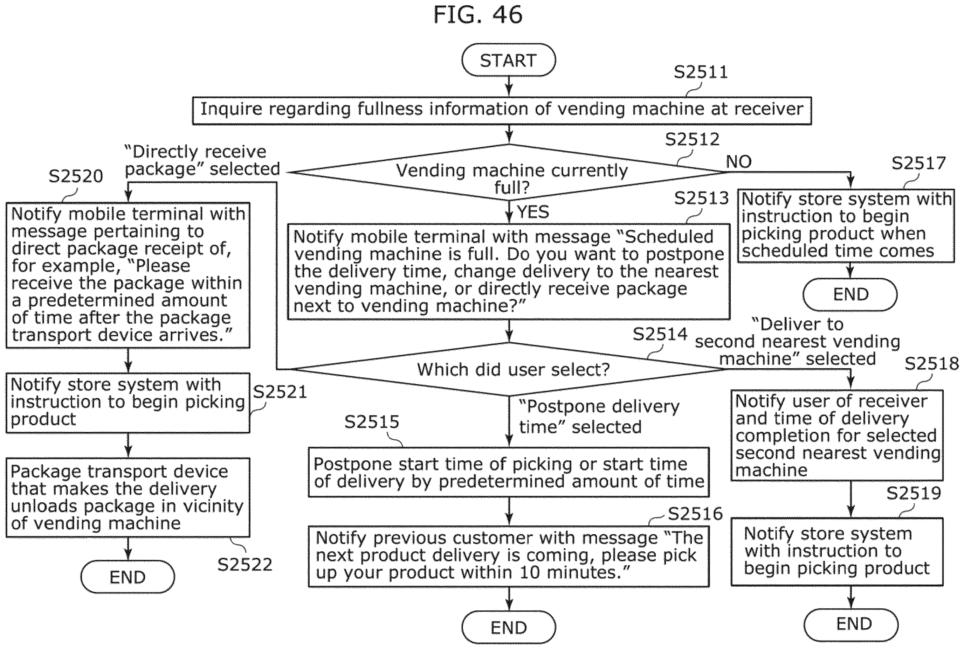

   FIG. 46 is a flowchart illustrating an example of an operation of a delivery service management system according to Operation Example 11 of Embodiment 8.
[FIG. 47A]

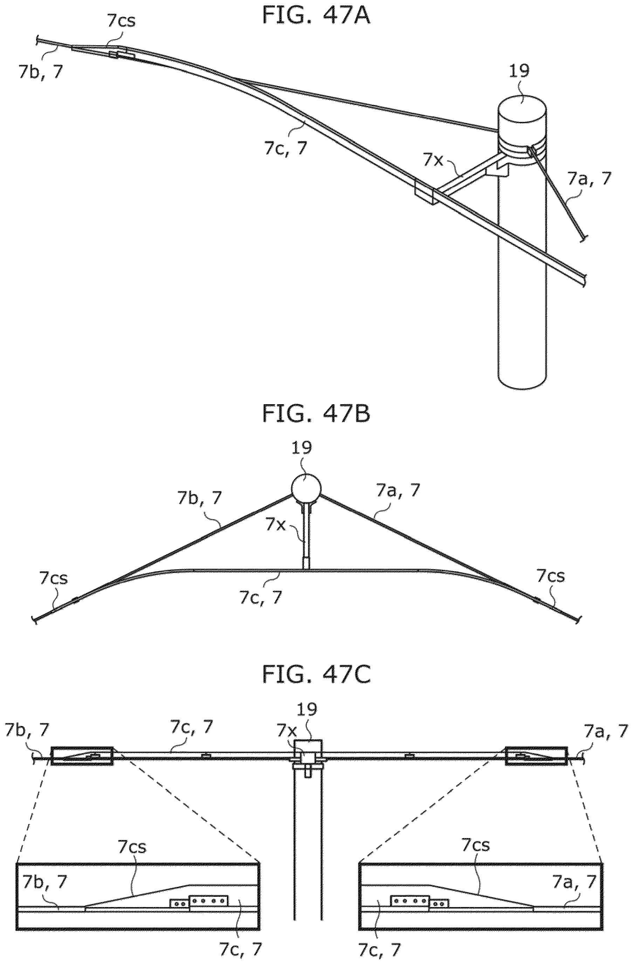

   FIG. 47A is a perspective view illustrating an example of a rail according to Embodiment 9.
[FIG. 47B]
   FIG. 47B is a top view illustrating an example of a rail according to Embodiment 9.
[FIG. 47C]
   FIG. 47C is a side view illustrating an example of a rail according to Embodiment 9.
[FIG. 47D]

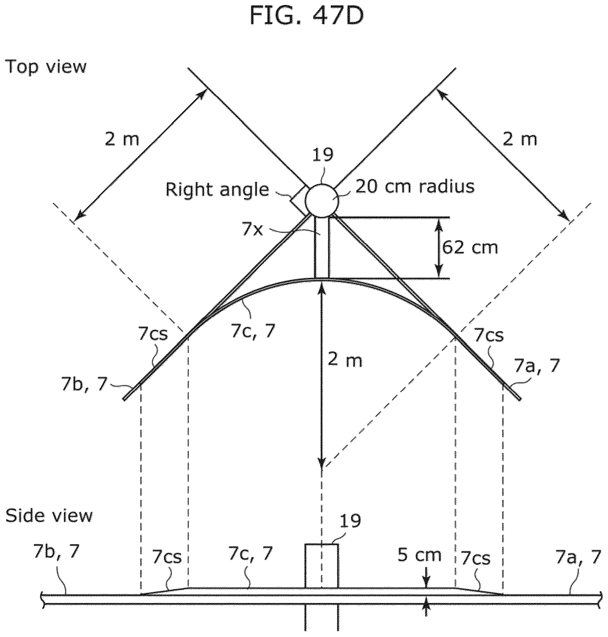

   FIG. 47D is a top view and a side view illustrating an example of a rail according to Embodiment 9.
[FIG. 48]

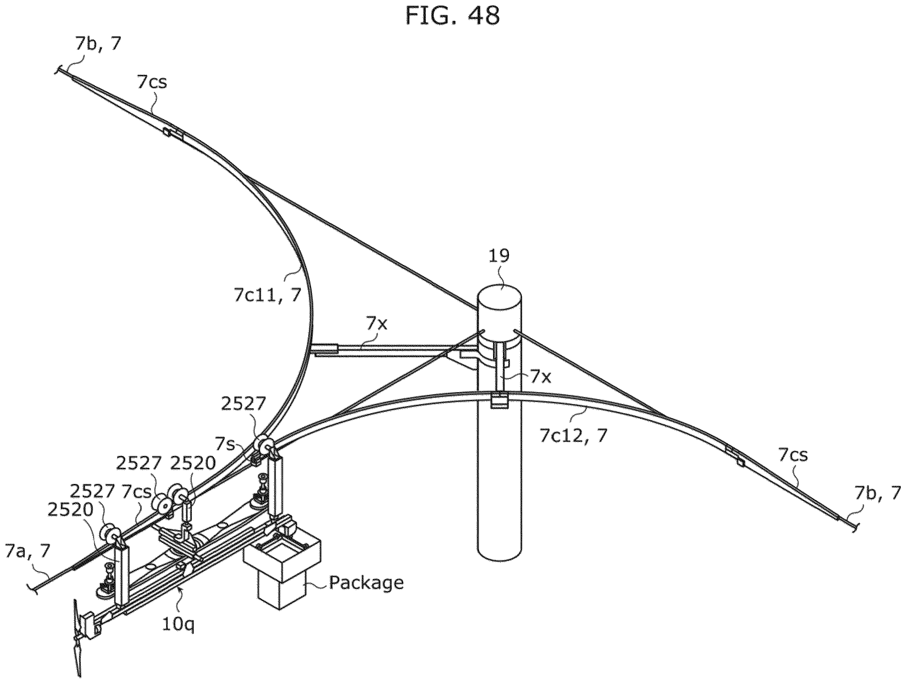

   FIG. 48 is a perspective view illustrating an example of a rail and a package transport device according to Embodiment 9.
[FIG. 49A]

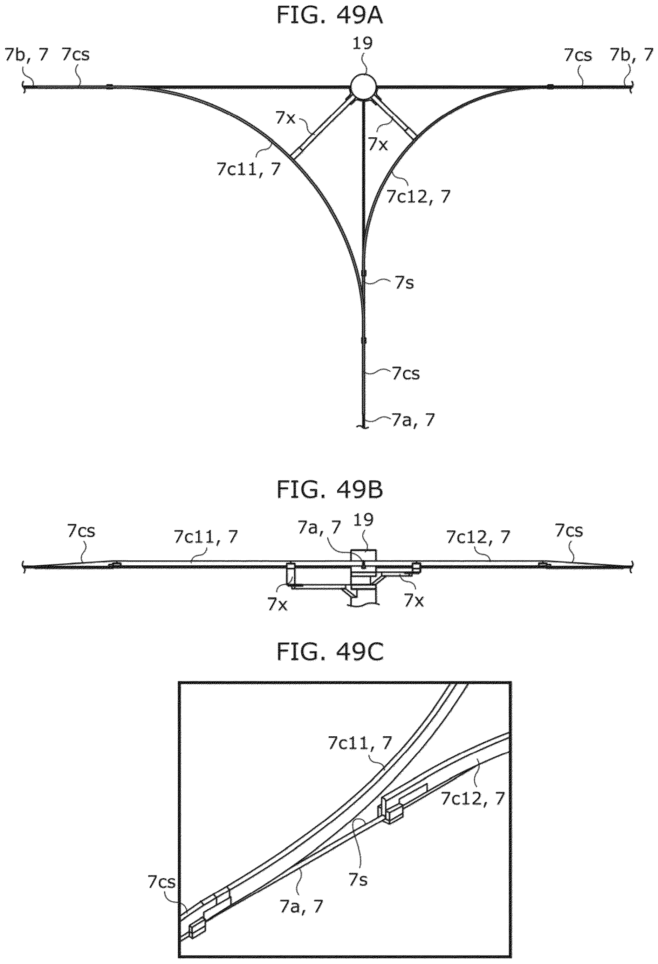

   FIG. 49A is a top view illustrating an example of a rail according to Embodiment 9.
[FIG. 49B]
   FIG. 49B is a side view illustrating an example of a rail according to Embodiment 9.
[FIG. 49C]
   FIG. 49C is an enlarged partial perspective view illustrating an example of a rail according to Embodiment 9.
[FIG. 49D]

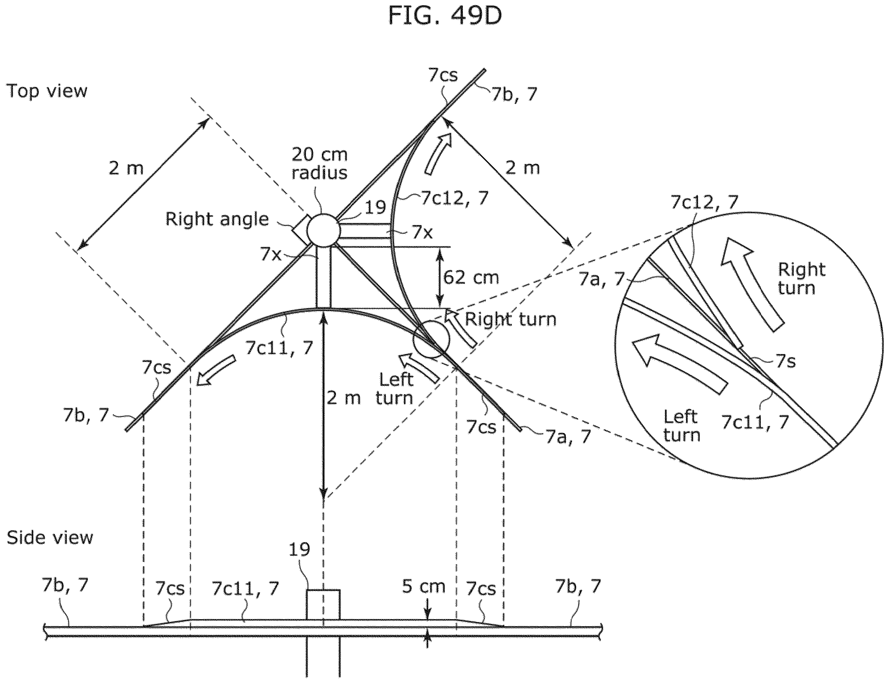

   FIG. 49D includes a top view and a side view of a rail according to Embodiment 9, and an enlarged top view at the connection portion between third rails and a first rail.
[FIG. 50]

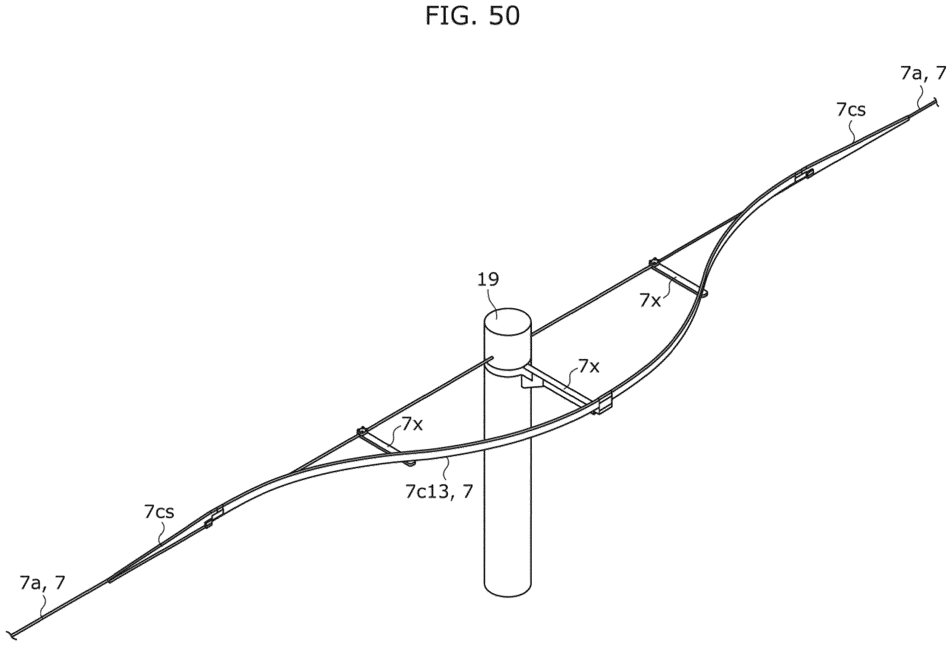

   FIG. 50 is a perspective view illustrating an example of a rail according to Embodiment 9.
[FIG. 51A]

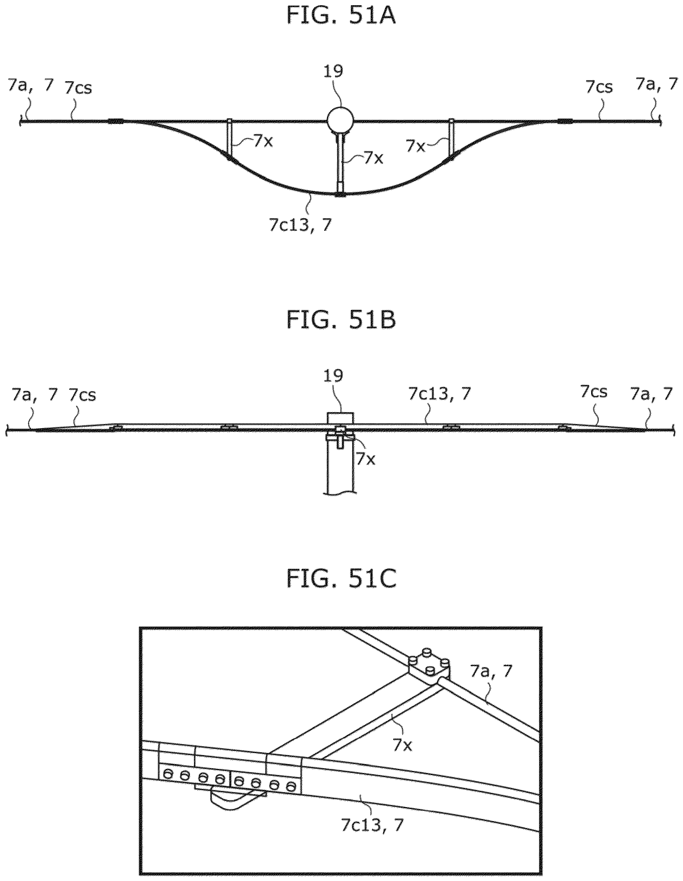

   FIG. 51A is a top view illustrating an example of a rail according to Embodiment 9.
[FIG. 51B]
   FIG. 51B is a side view illustrating an example of a rail according to Embodiment 9.
[FIG. 51C]
   FIG. 51C is an enlarged partial perspective view illustrating an example of a rail according to Embodiment 9.
[FIG. 52]

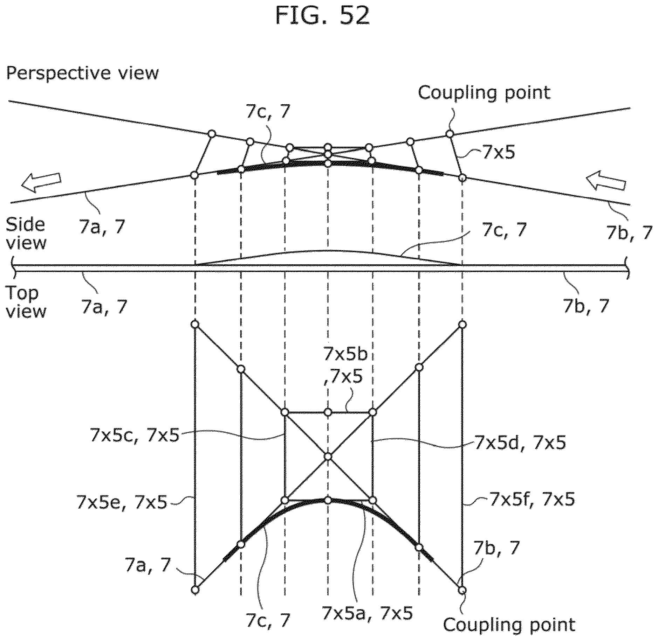

   FIG. 52 is a perspective view, a side view, and a top view of a rail and rail support members according to a variation of Embodiment 9.
[FIG. 53]

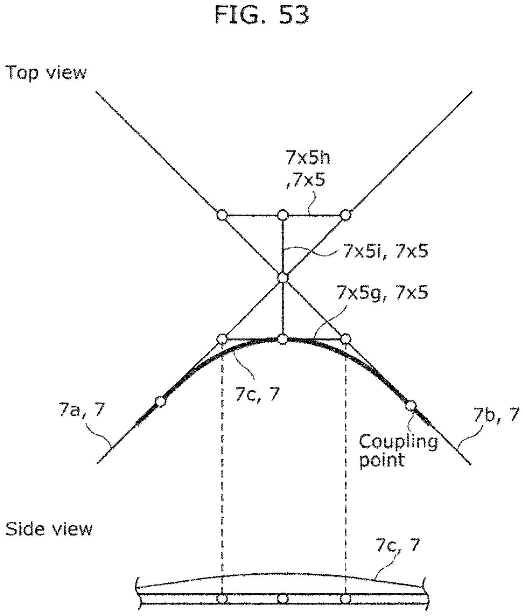

   FIG. 53 is a top view and a side view of another example of a rail and rail support members according to a variation of Embodiment 9.
[FIG. 54]

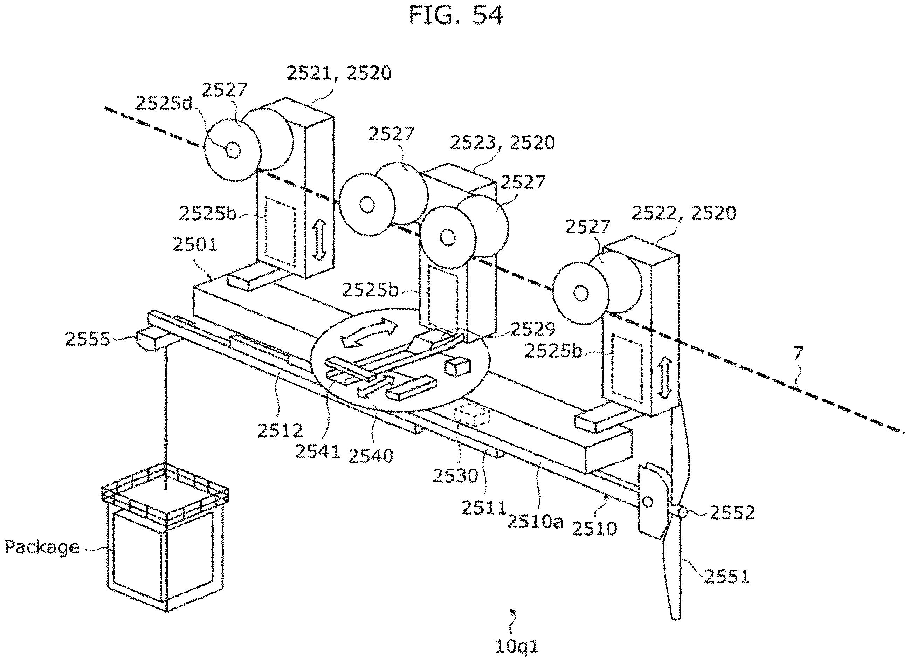

   FIG. 54 is a perspective view illustrating an example of a package transport device according to Embodiment 10.
[FIG. 55A]

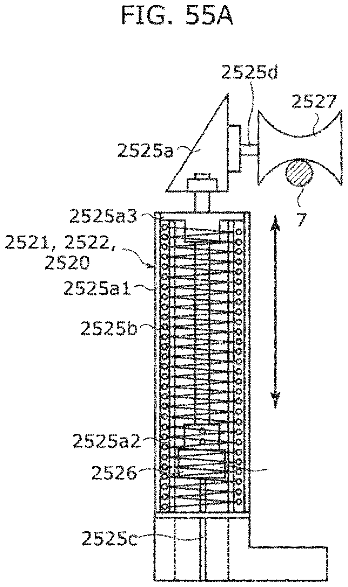

   FIG. 55A illustrates the internal structure of a first connector and a second connector of the package transport device according to Embodiment 10.
[FIG. 55B]

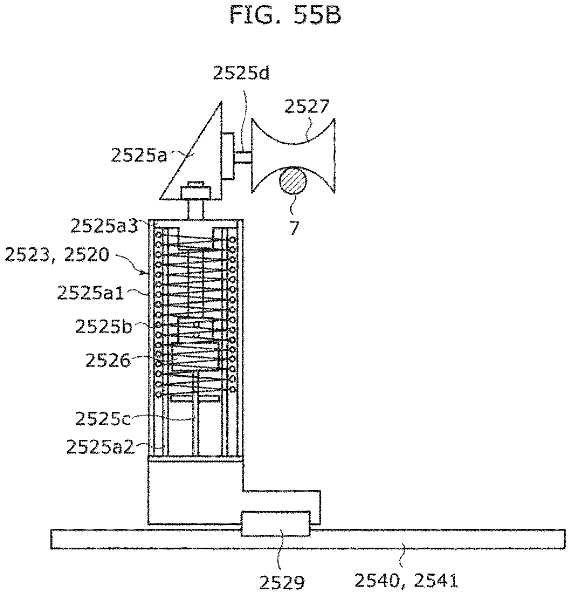

   FIG. 55B illustrates the internal structure of a third connector of the package transport device according to Embodiment 10.
[FIG. 56A]

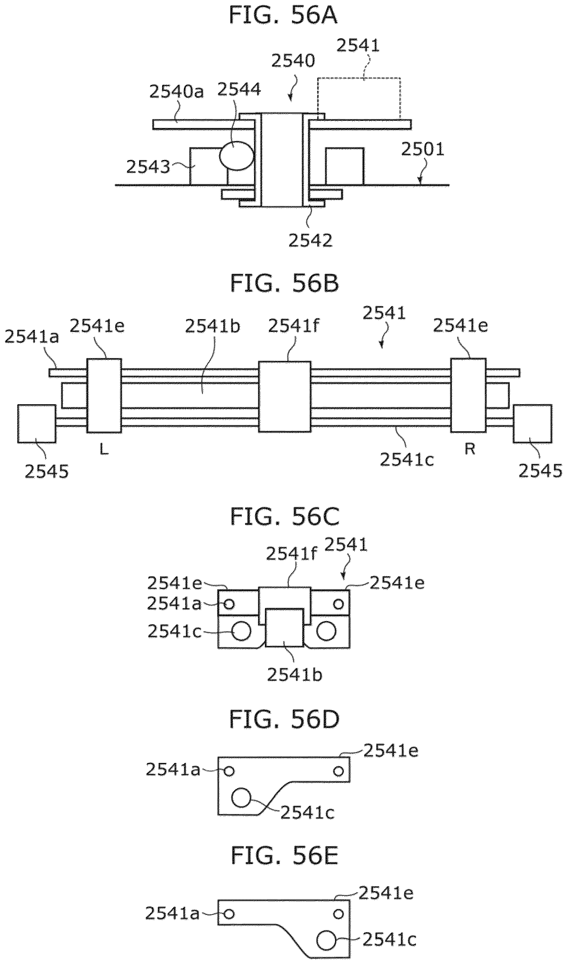

   FIG. 56A illustrates an example of the internal structure of a turntable of the package transport device according to Embodiment 10.
[FIG. 56B]
   FIG. 56B is a side view illustrating an example of a slide rail of the package transport device according to Embodiment 10.
[FIG. 56C]
   FIG. 56C is a front view illustrating an example of a slide rail of the package transport device according to Embodiment 10.
[FIG. 56D]
   FIG. 56D is a front view illustrating an example of the left side components, a pole screw, and a guide of the slide rail of the package transport device according to Embodiment 10.
[FIG. 56E]
   FIG. 56E is a front view illustrating an example of the right side components, a pole screw, and a guide of the slider of the package transport device according to Embodiment 10.
[FIG. 57]

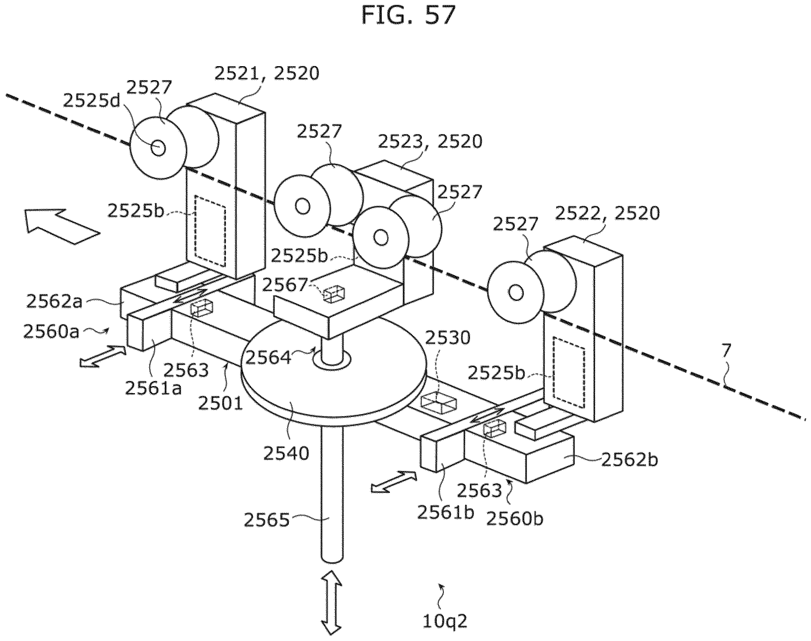

   FIG. 57 is a perspective view illustrating an example of a package transport device according to a variation of Embodiment 10.
[FIG. 58A]

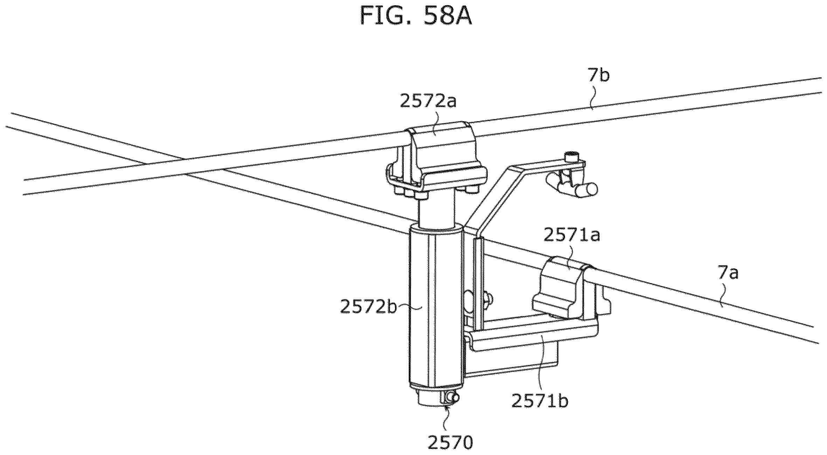

   FIG. 58A is a perspective view illustrating an example of a rail and a rail coupling according to Embodiment 11.
[FIG. 58B]

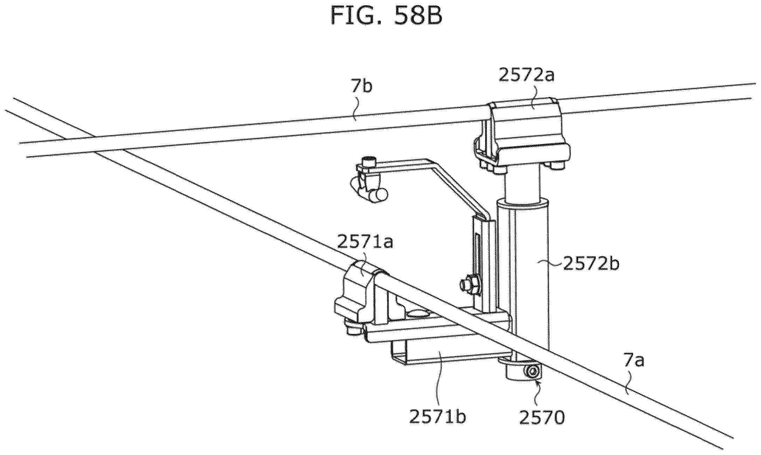

   FIG. 58B is another perspective view illustrating an example of the rail and rail the coupling according to Embodiment 11.
[FIG. 59]

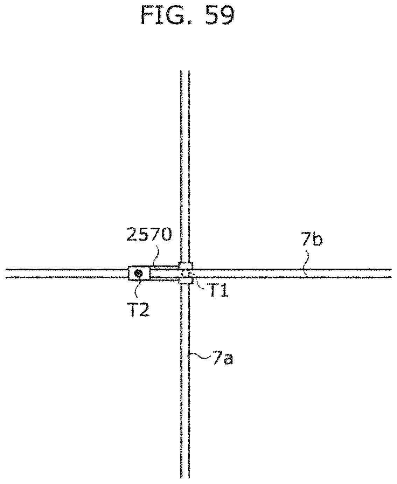

   FIG. 59 is a perspective view illustrating a first coupling point of a first rail and a second coupling point of a second rail according to Embodiment 11.
[FIG. 60]

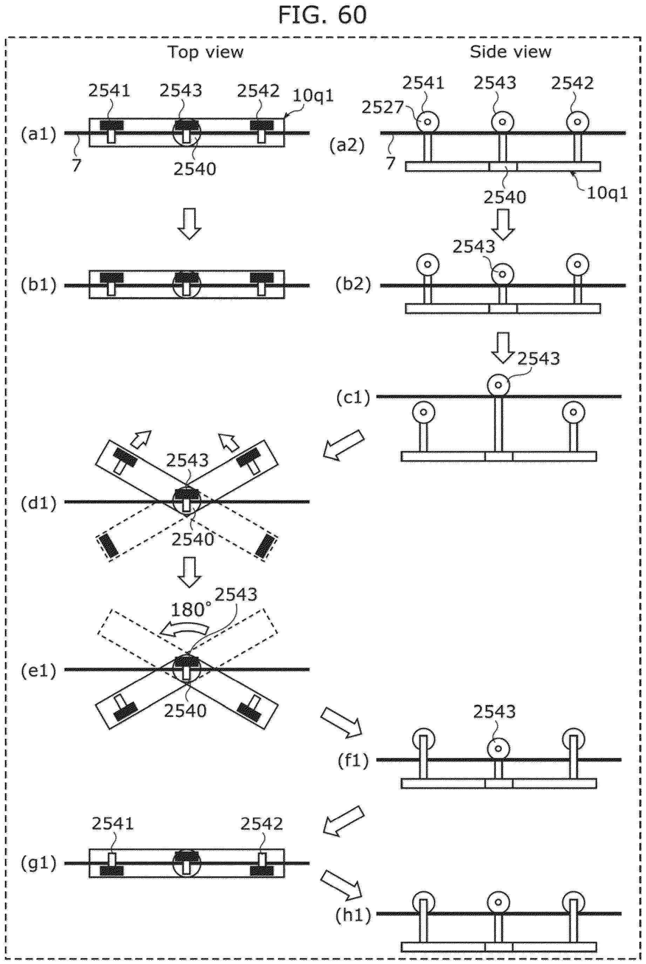

   FIG. 60 is a top view and a side view illustrating an operation of a package transport device according to Embodiment 12.
[FIG. 61A]

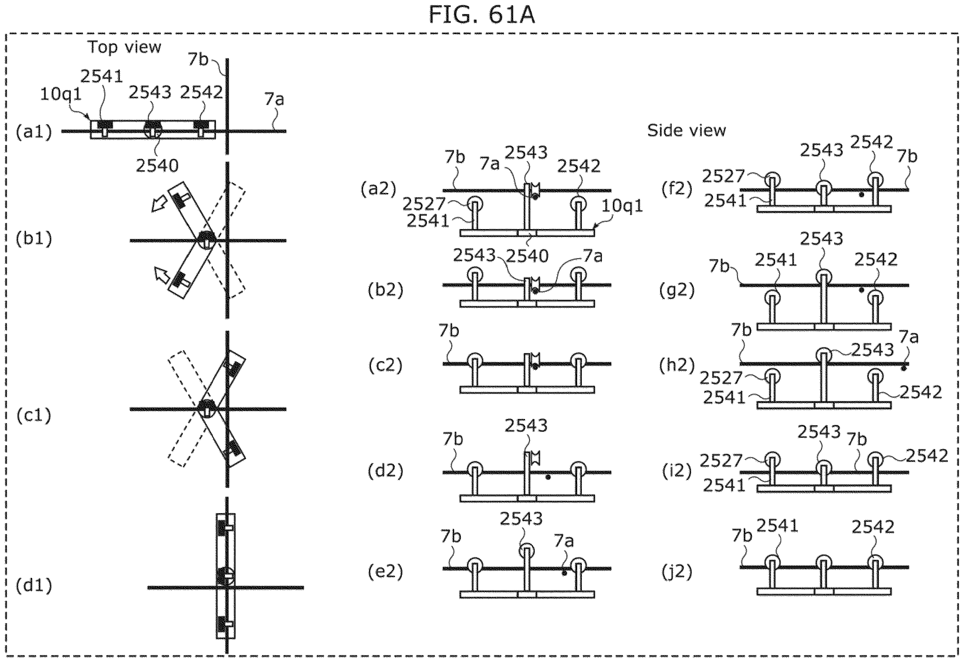

   FIG. 61A is a top view and a side view illustrating an operation in which the package transport device according to Embodiment 12 turns left at the intersection of the first rail and the second rail.
[FIG. 61B]

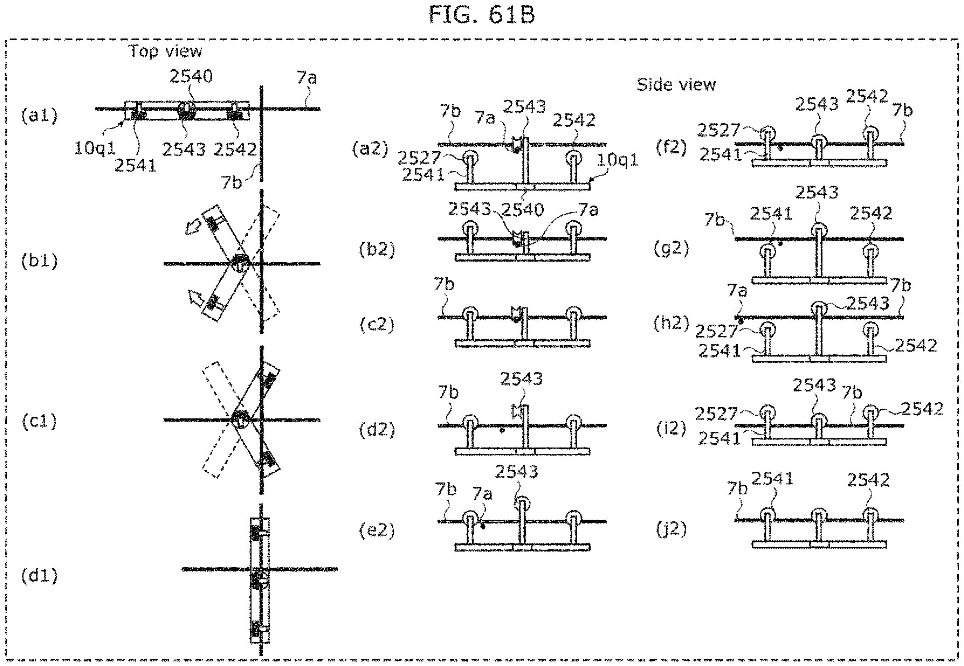

   FIG. 61B is a top view and a side view illustrating an operation in which the package transport device according to Embodiment 12 turns right at the intersection of the first rail and the second rail.
[FIG. 62]

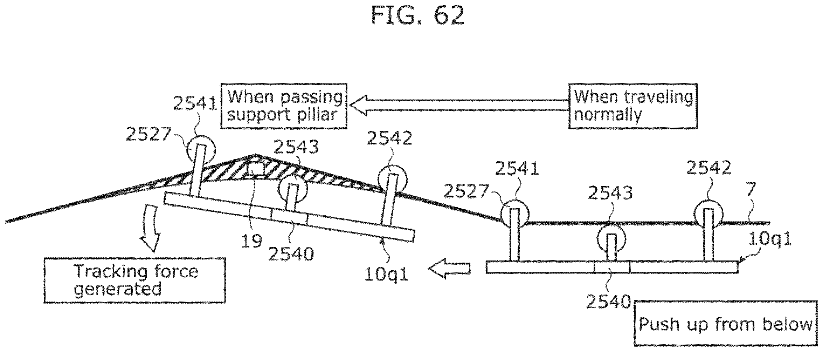

   FIG. 62 is a side view illustrating an operation in which the package transport device according to Embodiment 12 passes a support pillar that supports a rail.
[FIG. 63]

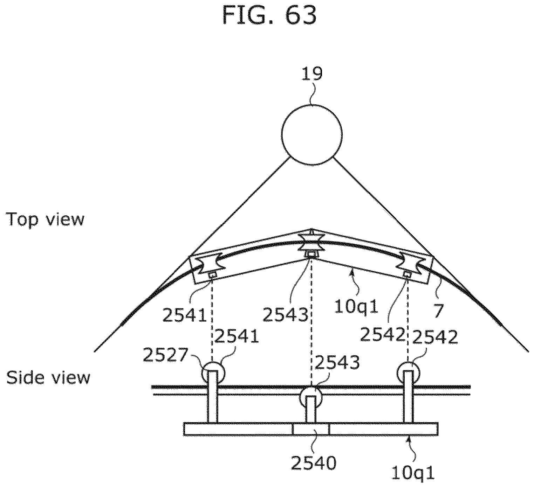

   FIG. 63 is a top view and a side view illustrating an operation of the package transport device passing a curved rail according to Embodiment 12.
[FIG. 64]

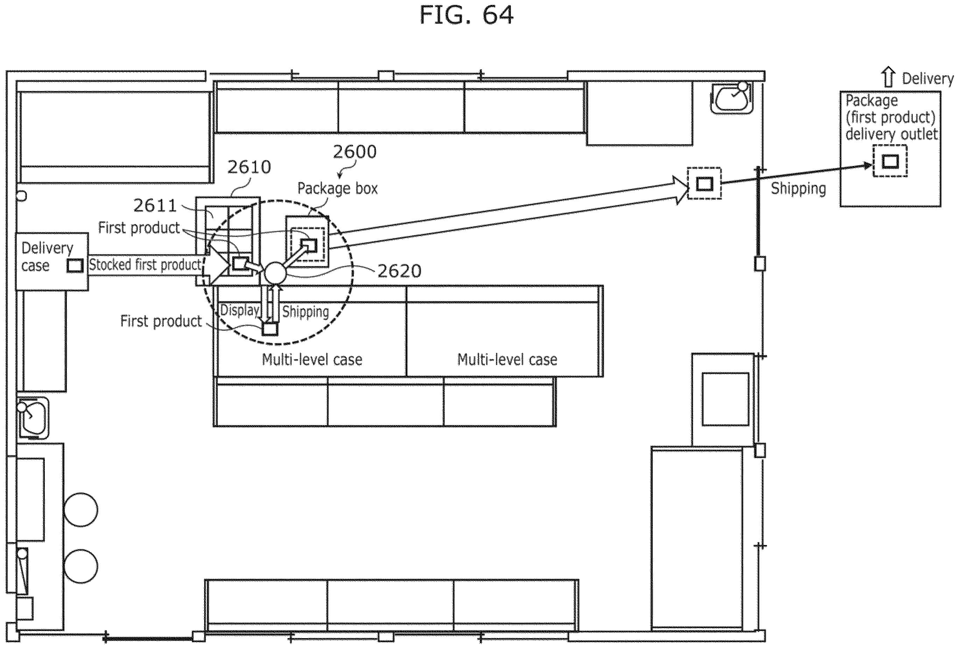

   FIG. 64 illustrates an example of a shipping system according to Embodiment 13.
[FIG. 65]

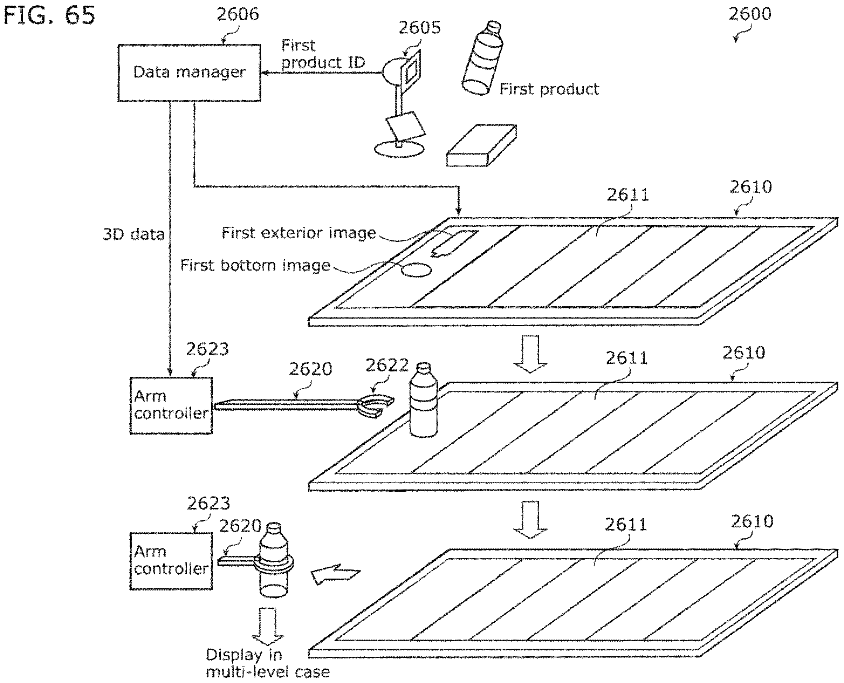

   FIG. 65 illustrates an example of a stocked first product being placed on a display device and displayed in a multi-level case in a shipping system according to Embodiment 13.
[FIG. 66]

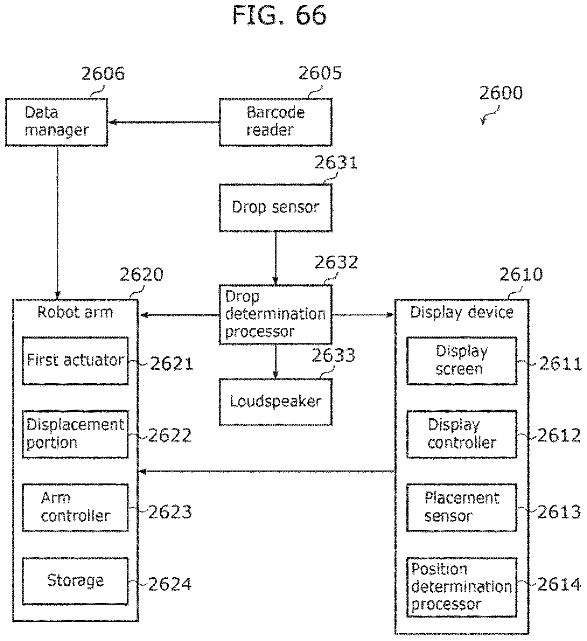

   FIG. 66 is a block diagram illustrating an example of a shipping system according to Embodiment 13.
[FIG. 67]

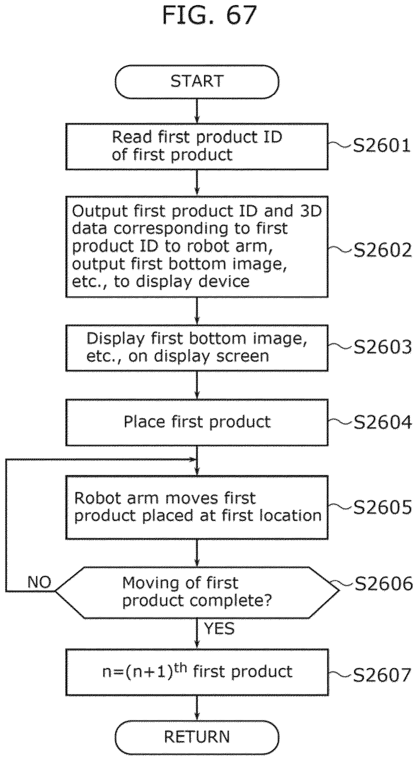

   FIG. 67 is a flowchart illustrating Operation Example 1 of the operation of a shipping system according to Embodiment 13.
[FIG. 68]

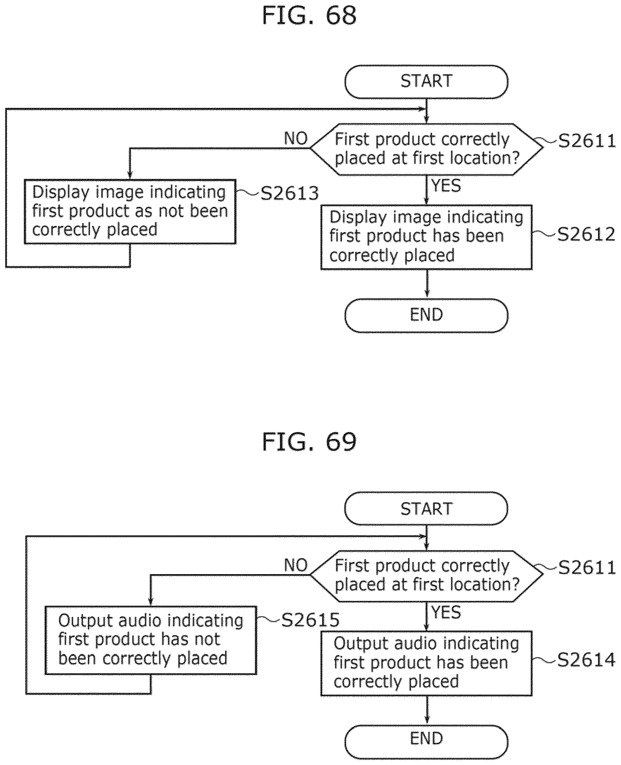

   FIG. 68 is a flowchart illustrating Operation Example 2 of the operation of a shipping system according to Embodiment 13.
[FIG. 69]
   FIG. 69 is a flowchart illustrating Operation Example 3 of the operation of a shipping system according to Embodiment 13.
[FIG. 70]

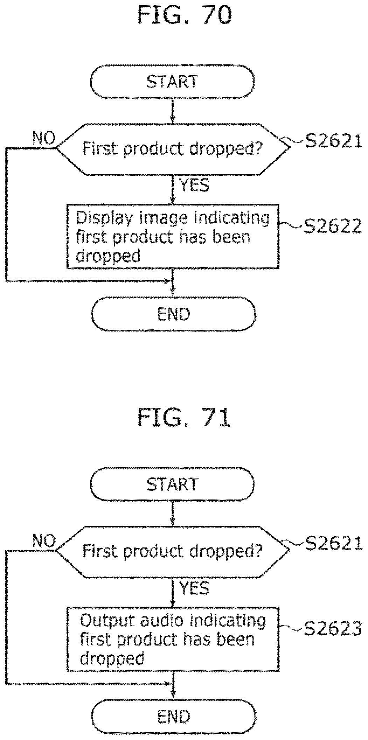

   FIG. 70 is a flowchart illustrating Operation Example 4 of the operation of a shipping system according to Embodiment 13.
[FIG. 71]
   FIG. 71 is a flowchart illustrating Operation Example 5 of the operation of a shipping system according to Embodiment 13.
[FIG. 72A]

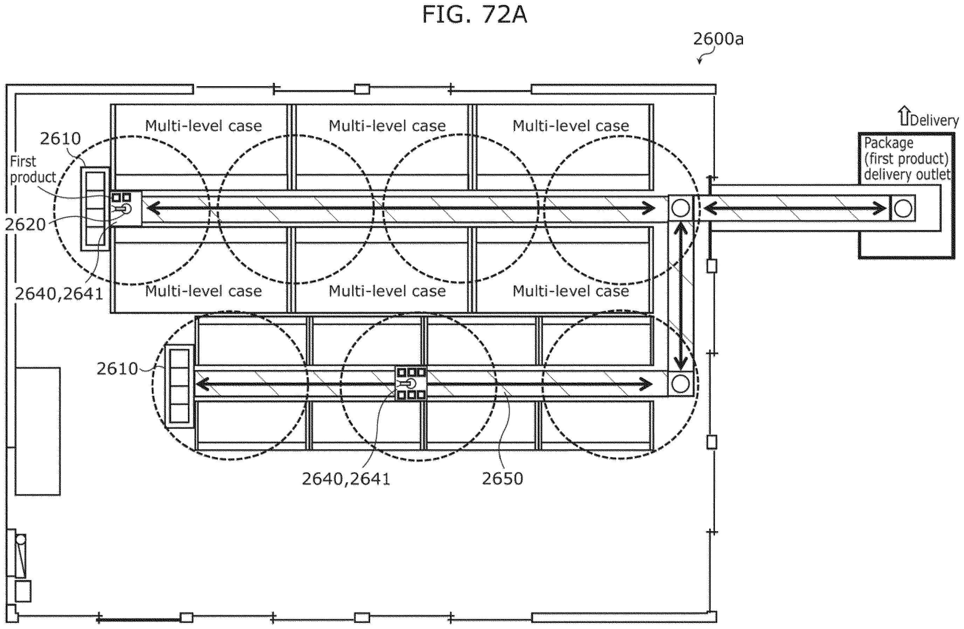

   FIG. 72A illustrates an example of a shipping system according to Variation 1 of Embodiment 13.
[FIG. 72B]

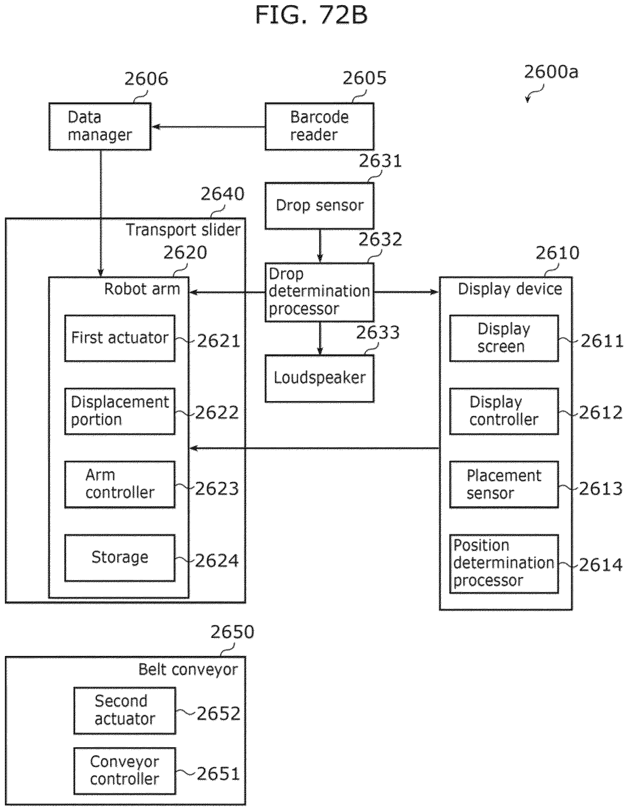

   FIG. 72B is a block diagram illustrating an example of a shipping system according to Variation 1 of Embodiment 13.
[FIG. 73A]

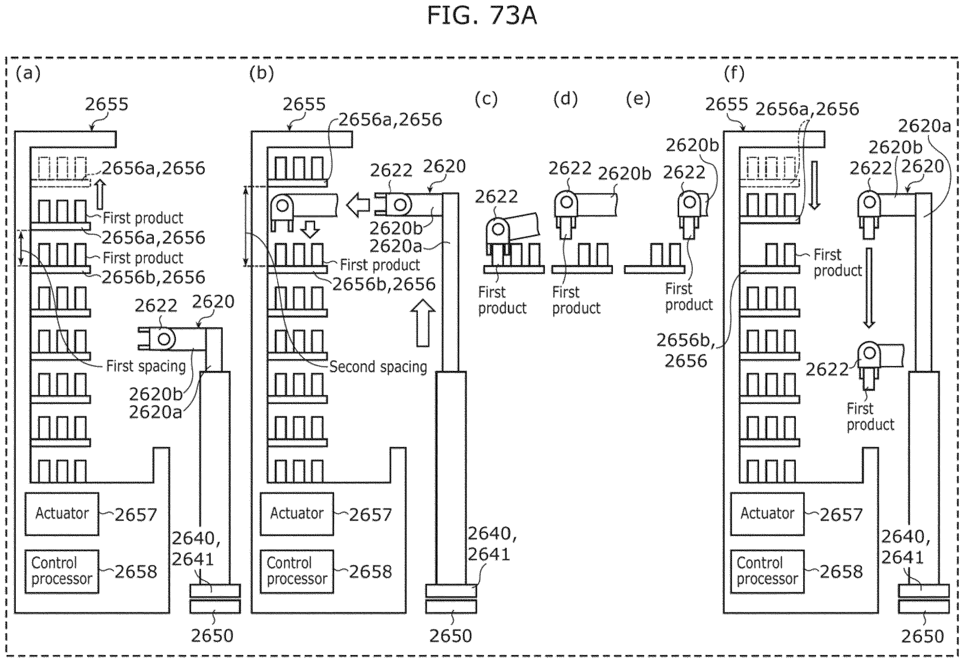

   FIG. 73A illustrates an example of a shipping system according to Variation 2 of Embodiment 13.
[FIG. 73B]

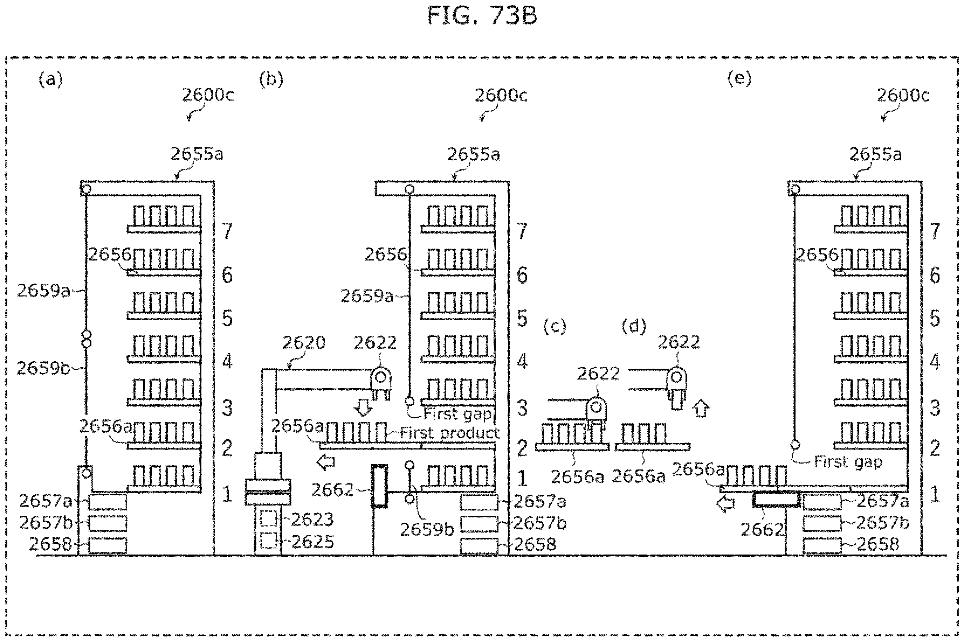

   FIG. 73B illustrates an example of a shipping system according to Variation 3 of Embodiment 13.
[FIG. 74]

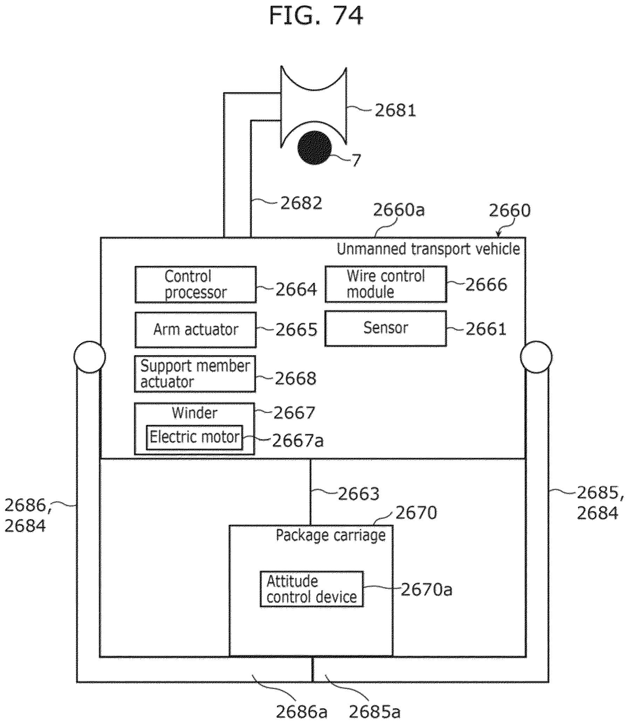

   FIG. 74 is a block diagram illustrating an example of unmanned transport vehicle according to Embodiment 14.
[FIG. 75A]

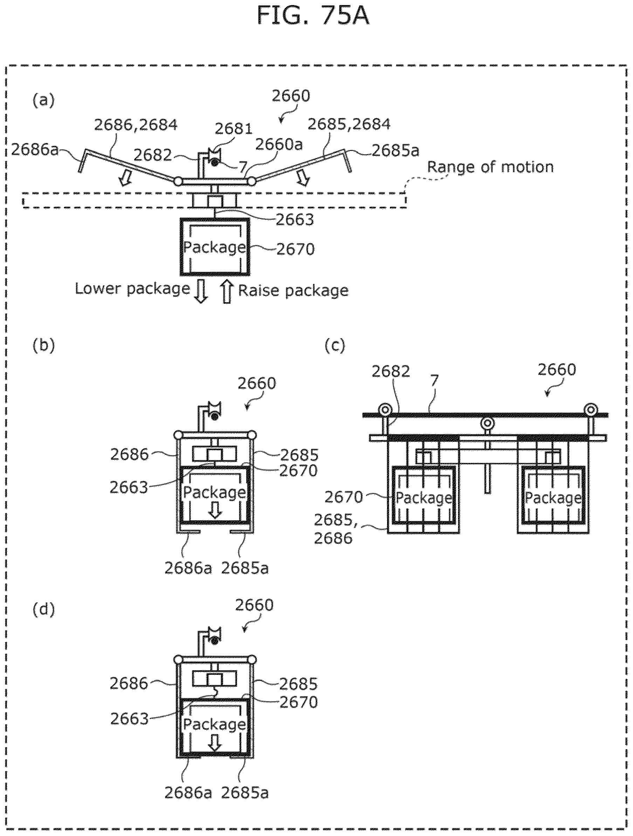

   FIG. 75A illustrates an example of the movement of a support structure and a wire of an unmanned transport vehicle according to Embodiment 14.
[FIG. 75B]

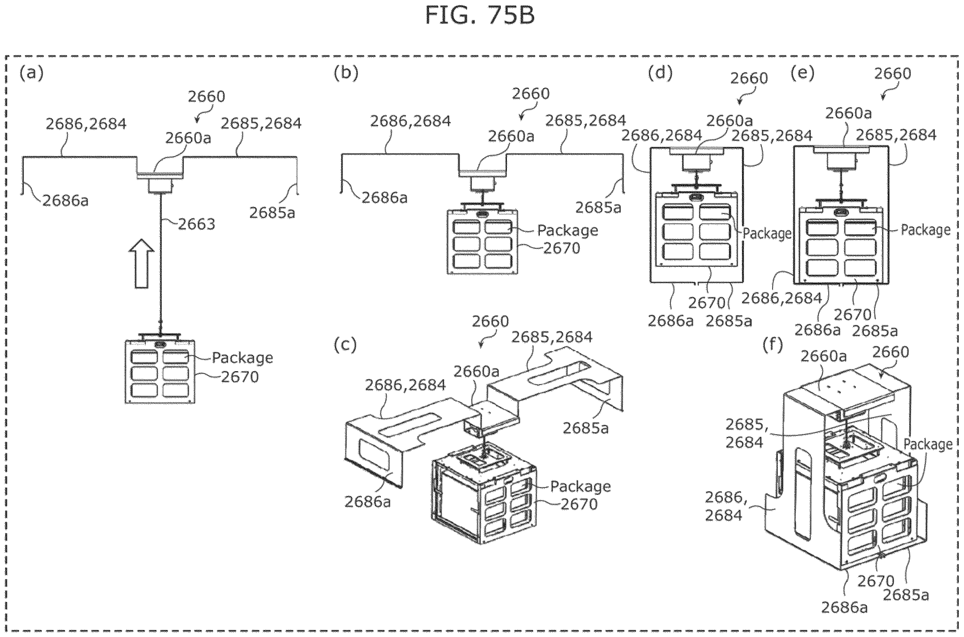

   FIG. 75B illustrates another example of the movement of a support structure and a wire of an unmanned transport vehicle according to Embodiment 14.
[FIG. 76A]

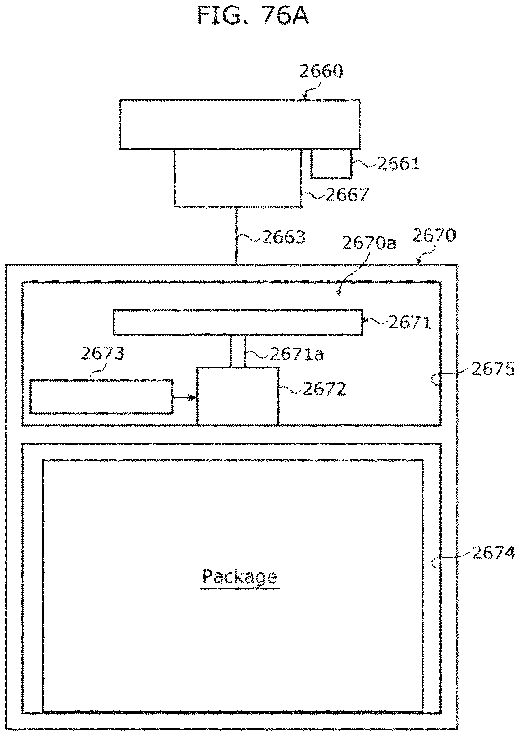

   FIG. 76A illustrates an example of a main body and a package carriage of an unmanned transport vehicle according to Embodiment 14.
[FIG. 76B]

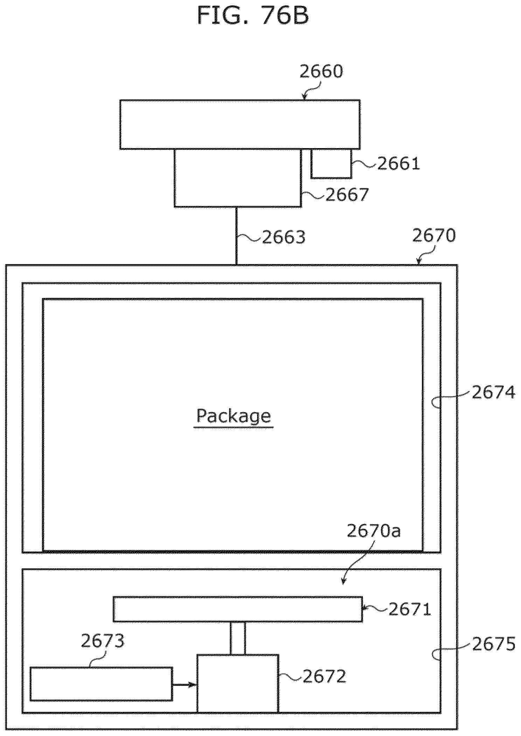

   FIG. 76B illustrates another example of a main body and another package carriage of an unmanned transport vehicle according to Embodiment 14.
[FIG. 77]

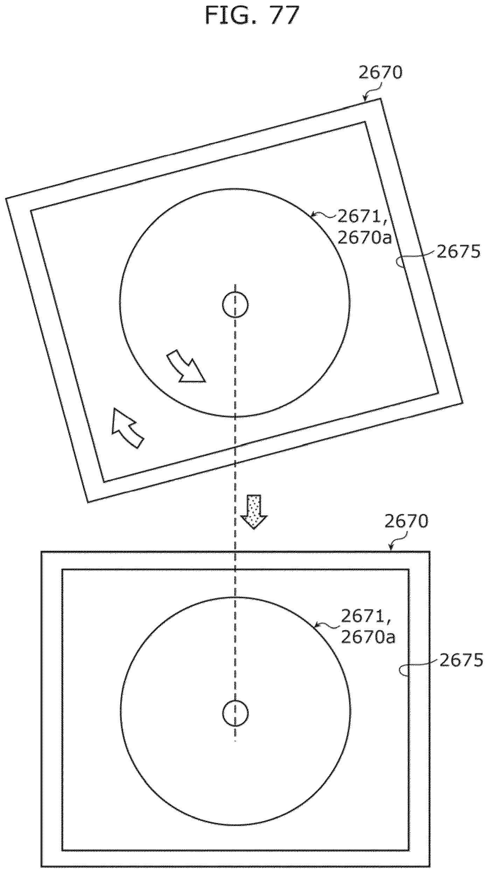

   FIG. 77 illustrates an example of how an attitude control device corrects the attitude of a package carriage of an unmanned transport vehicle according to Embodiment 14.
[FIG. 78]

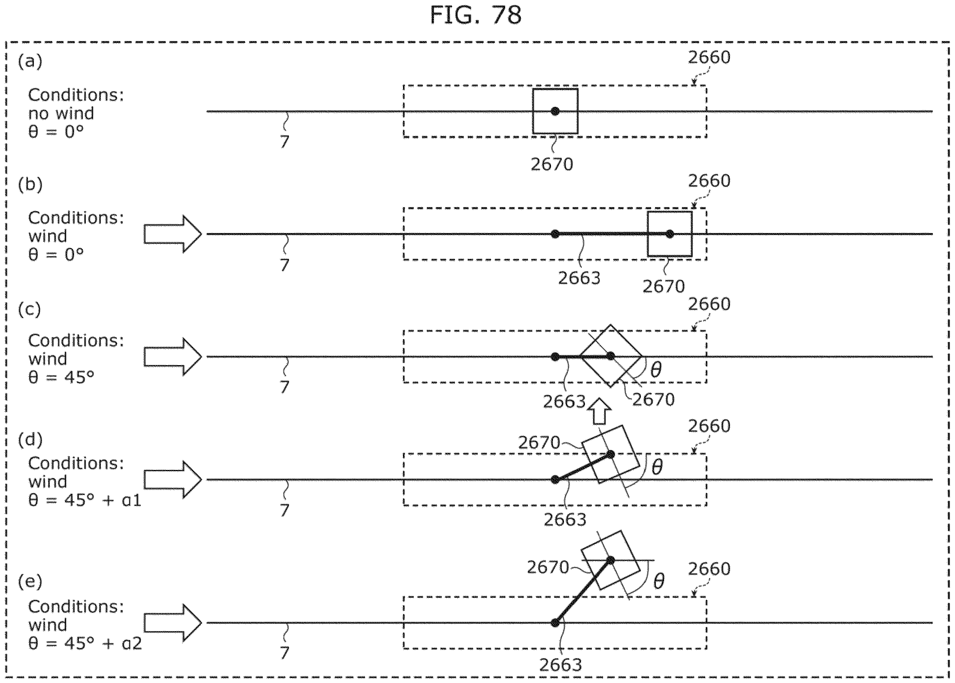

   FIG. 78 illustrates an example of the attitude of a package carriage of an unmanned transport vehicle according to Embodiment 14.
[FIG. 79]

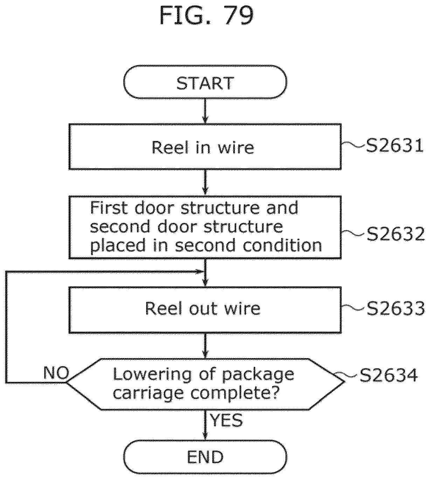

   FIG. 79 is a flowchart illustrating an example of operations performed when a package carriage of an unmanned transport vehicle descends according to Embodiment 14.
[FIG. 80]

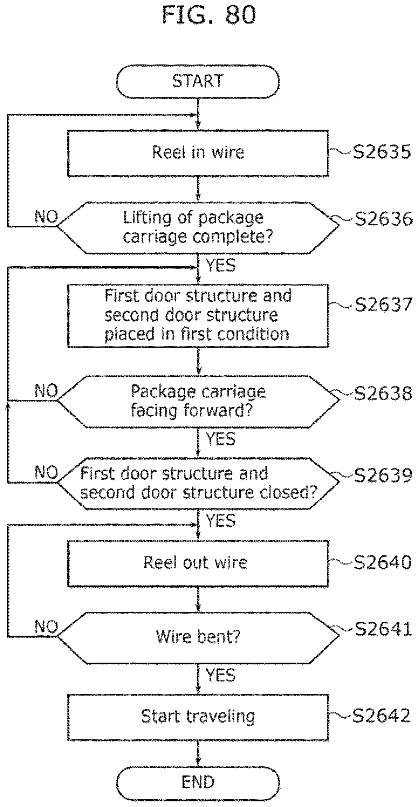

   FIG. 80 is a flowchart illustrating an example of operations from reeling in the wire of the package carriage accommodating a package until the unmanned transport vehicle starts to travel.
[FIG. 81]

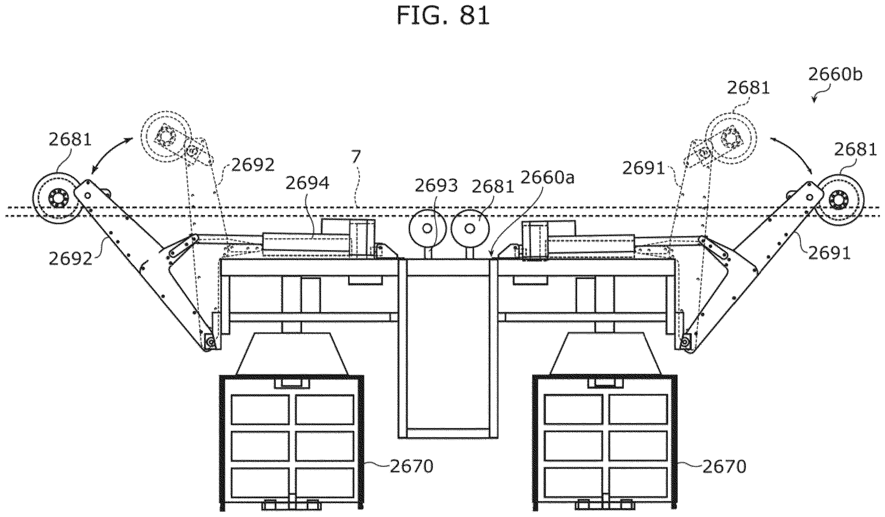

   FIG. 81 illustrates an example of a main body and a package carriage of an unmanned transport vehicle according to a variation of Embodiment 14.
[FIG. 82A]

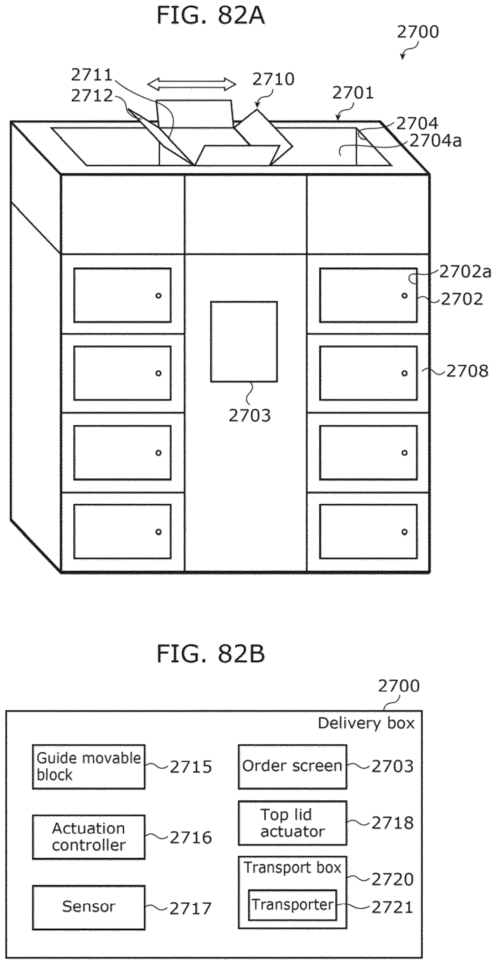

   FIG. 82A is a perspective view illustrating an example of a delivery box according to Embodiment 15.
[FIG. 82B]
   FIG. 82B is a block diagram illustrating an example of the delivery box according to Embodiment 15.
[FIG. 83]

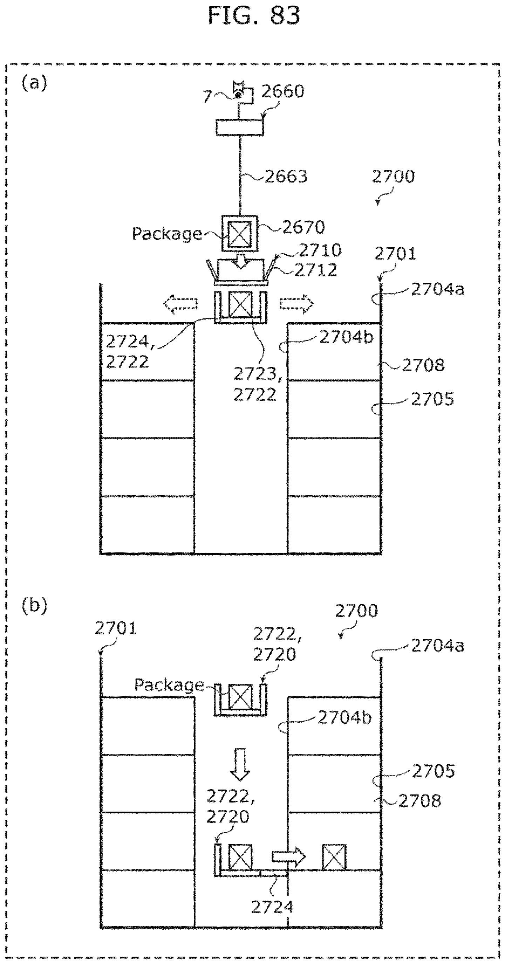

   FIG. 83 illustrates an example of how a delivery box according to Embodiment 15 moves when viewed from the front.
[FIG. 84]

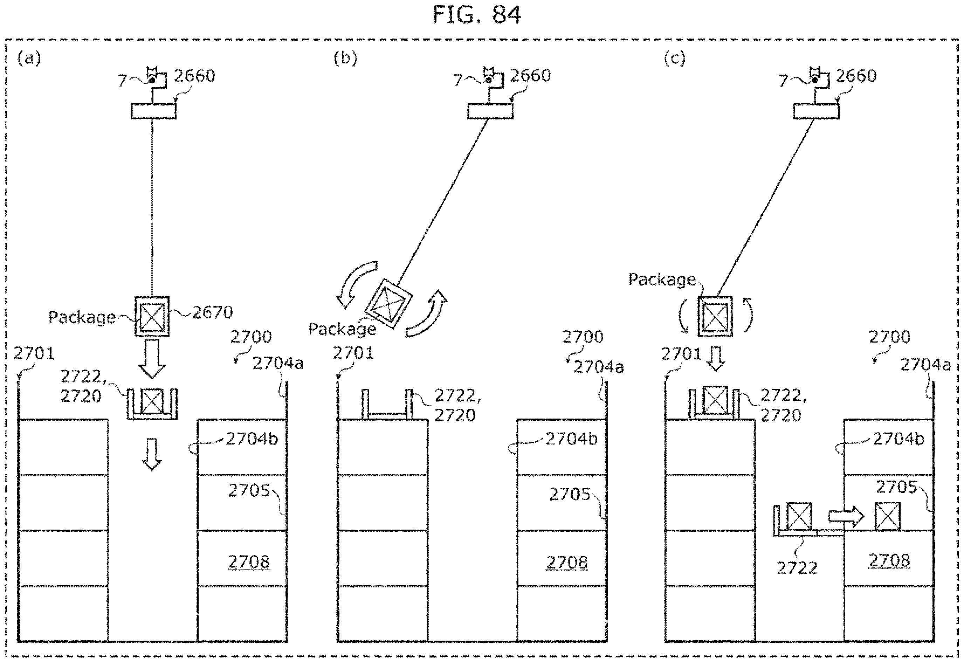

   FIG. 84 illustrates an example of how a package carriage and a delivery box move when viewed from the front.
[FIG. 85]

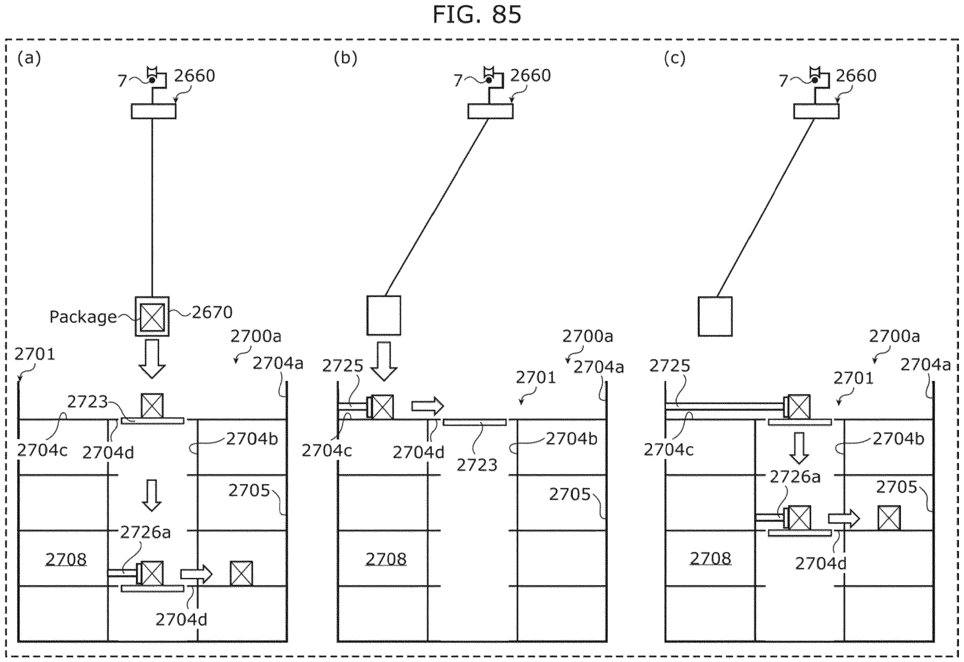

   FIG. 85 illustrates an example of how a package carriage and a delivery box move when wind blows when viewed from the front.
[FIG. 86]

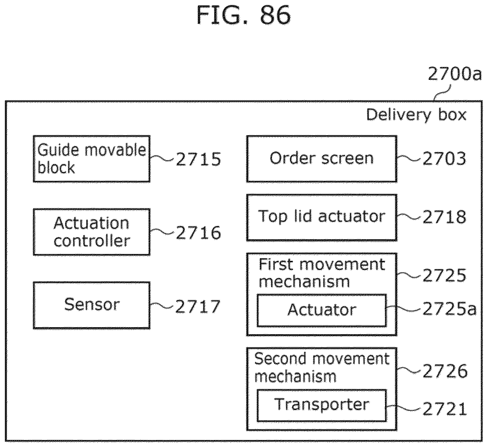

   FIG. 86 is a block diagram illustrating an example of the delivery box according to Variation 1 of Embodiment 15.
[FIG. 87]

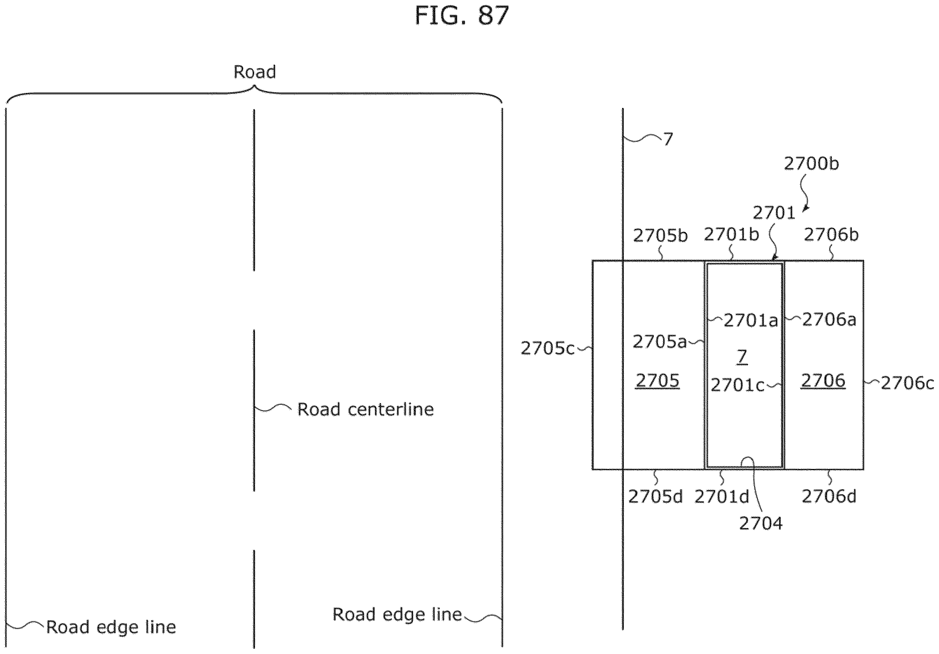

   FIG. 87 is a plan view illustrating an example of a delivery box according to Variation 2 of Embodiment 15.
[FIG. 88]

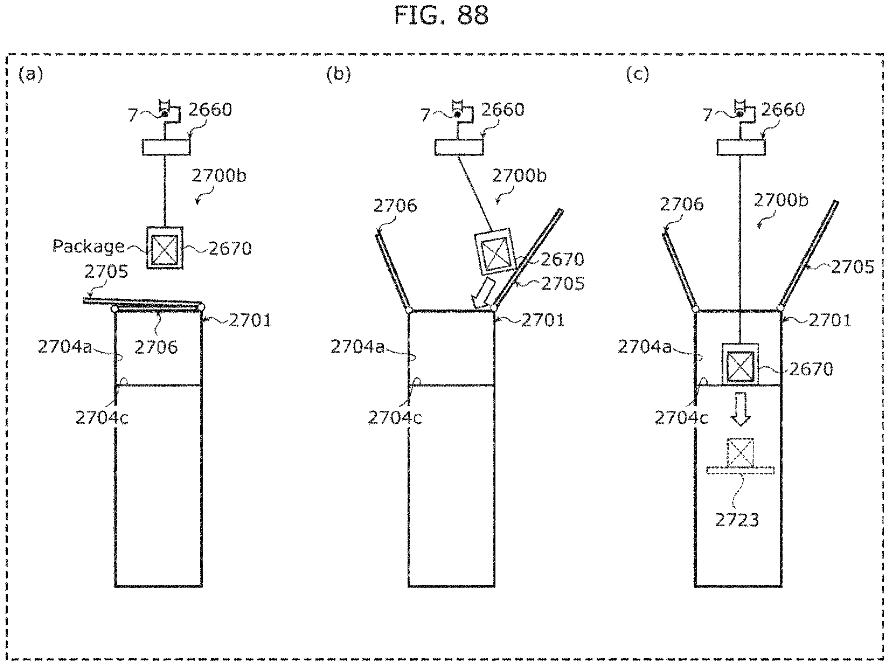

   FIG. 88 is a side view illustrating an example of a delivery box according to Variation 2 of Embodiment 15.
[FIG. 89]

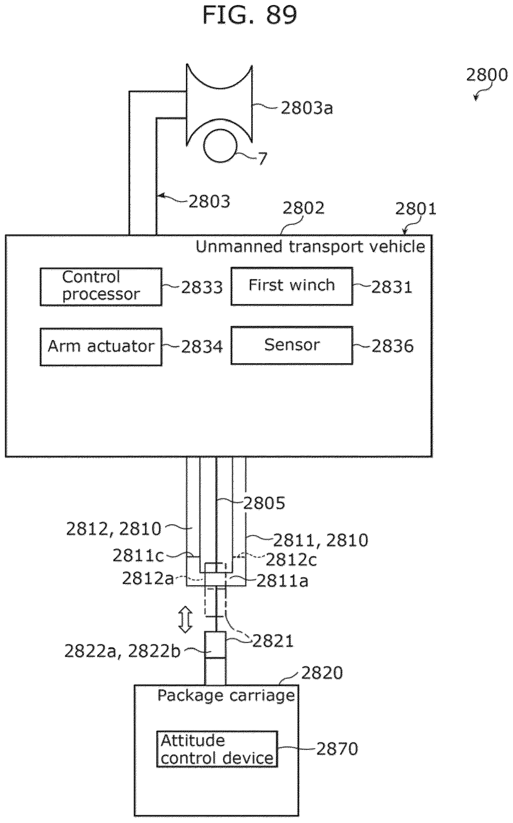

   FIG. 89 is a block diagram illustrating an example of an unmanned transport system according to Embodiment 16.
[FIG. 90A]

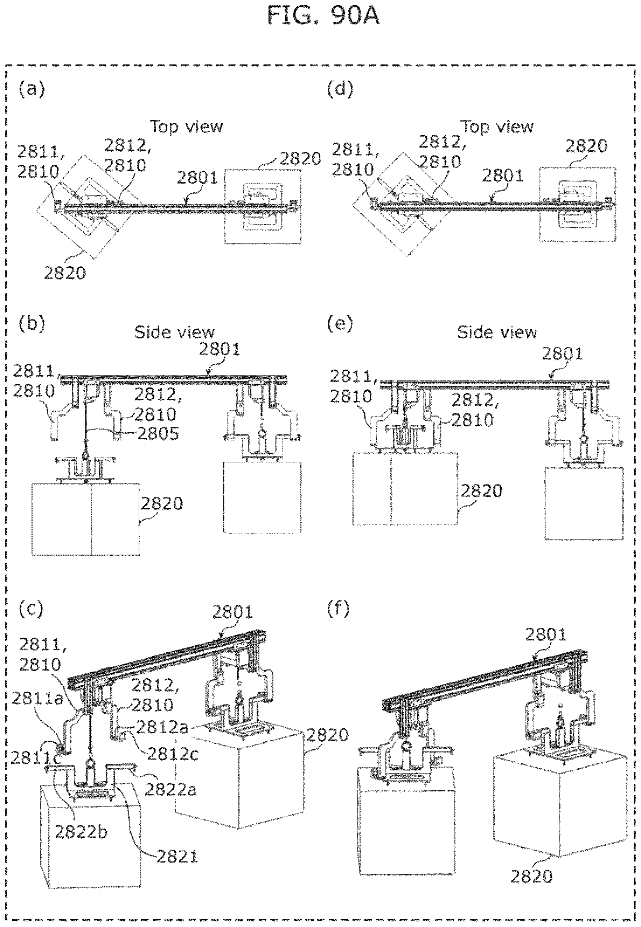

   FIG. 90A illustrates an example of an unmanned transport vehicle and a package carriage in an unmanned transport system according to Embodiment 16.
[FIG. 90B]

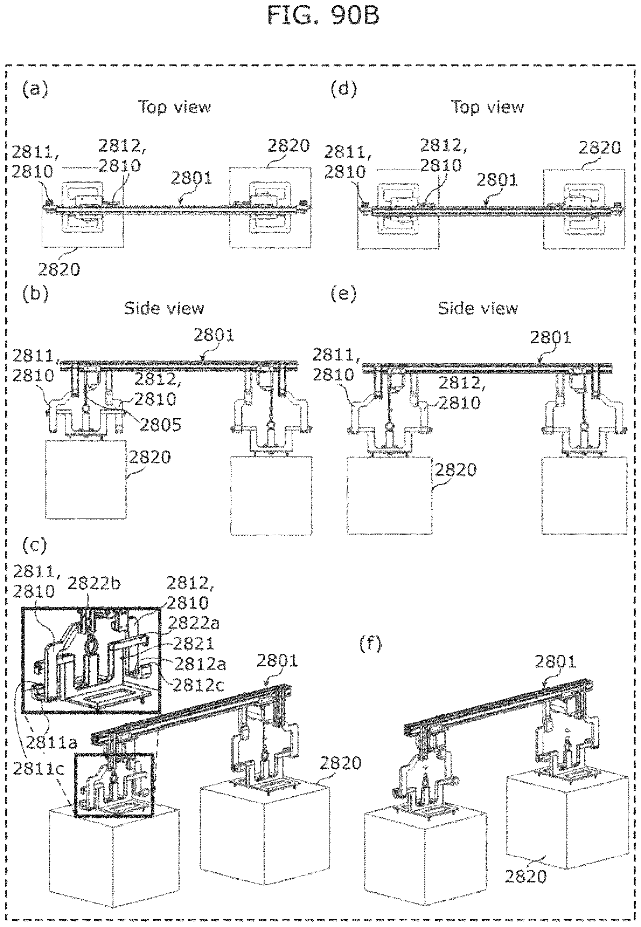

   FIG. 90B illustrates another example of an unmanned transport vehicle and a package carriage in an unmanned transport system according to Embodiment 16.
   [FIG. 90C]

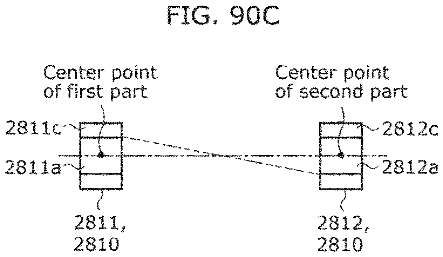

FIG. 90C is a schematic diagram illustrating an example of the positional relationship between a first other end and a second other end in a support structure.
[FIG. 91]

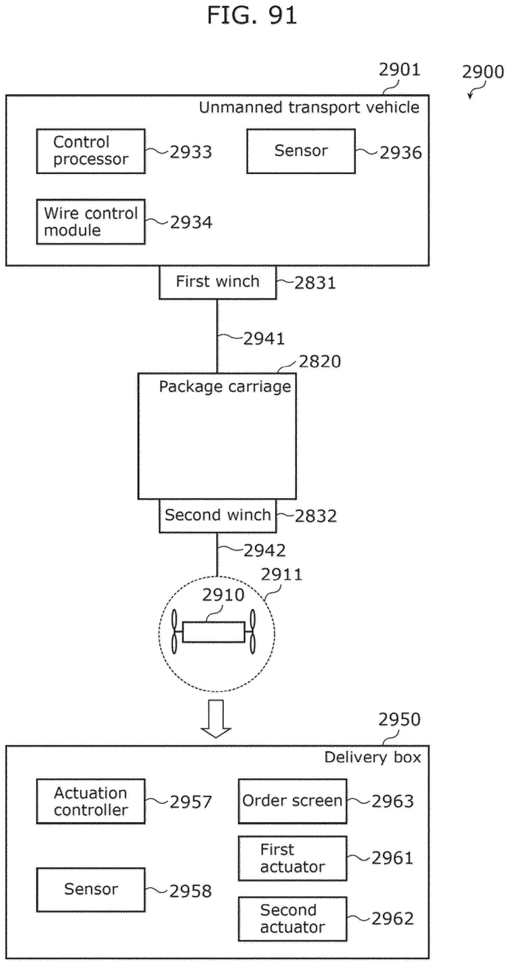

   FIG. 91 is a block diagram illustrating an example of an unmanned aerial vehicle, a package carriage, and a delivery box in an unmanned transport system.
[FIG. 92]

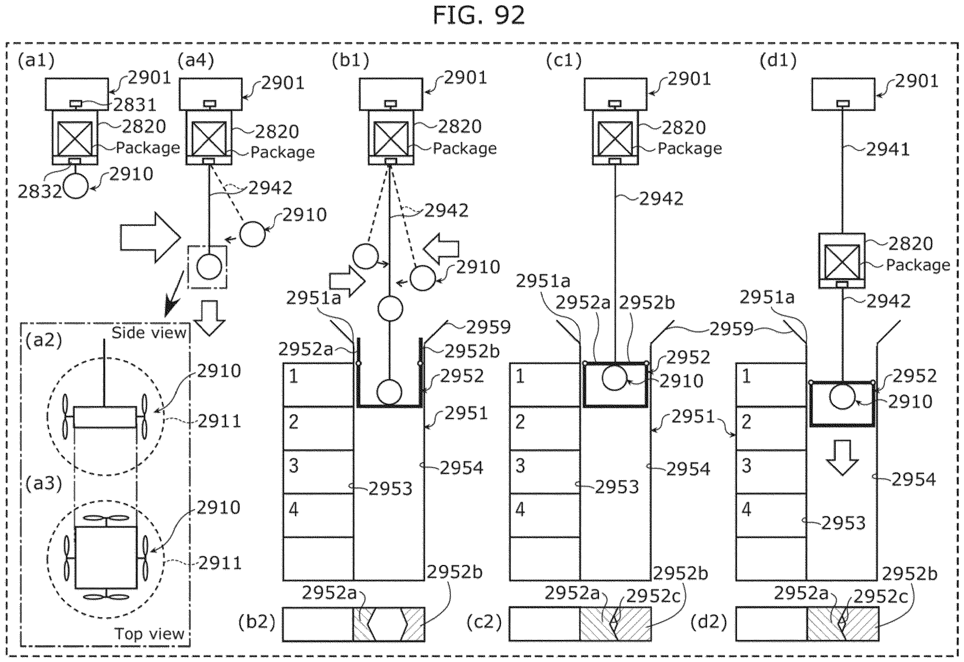

   FIG. 92 illustrates an example of an unmanned aerial vehicle and a package carriage in an unmanned transport system descending.
[FIG. 93]

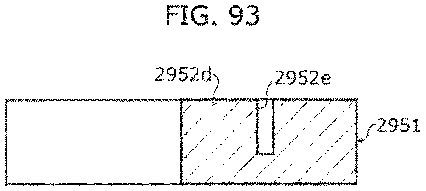

   FIG. 93 illustrates an example of one lid that is openable and closable and includes a slit.
[FIG. 94A]

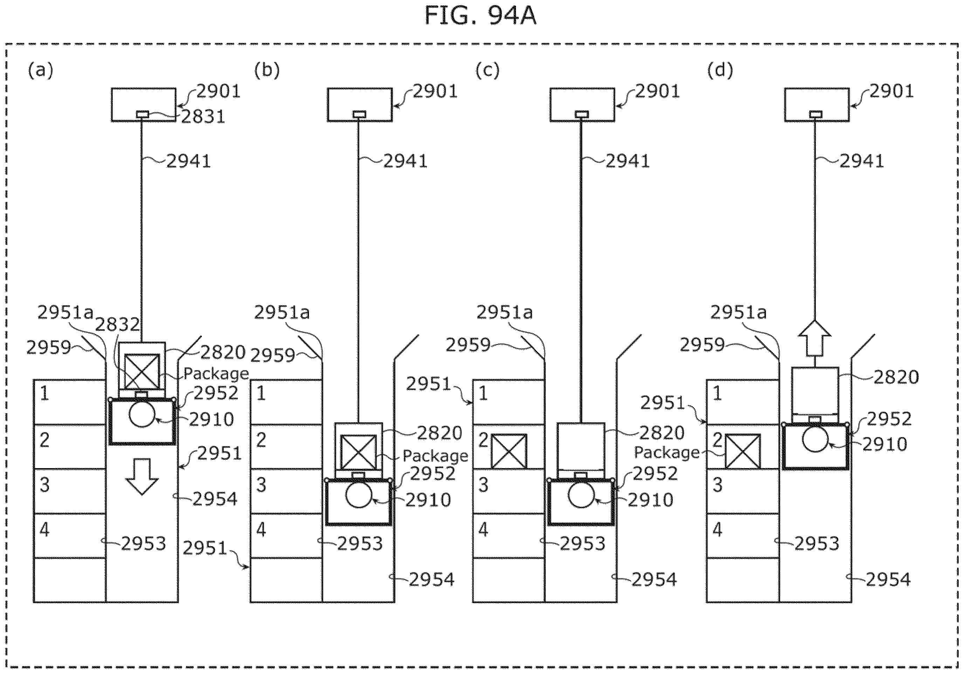

   FIG. 94A illustrates an example of a package being unloaded and a package carriage in an unmanned transport system ascending.
[FIG. 94B]

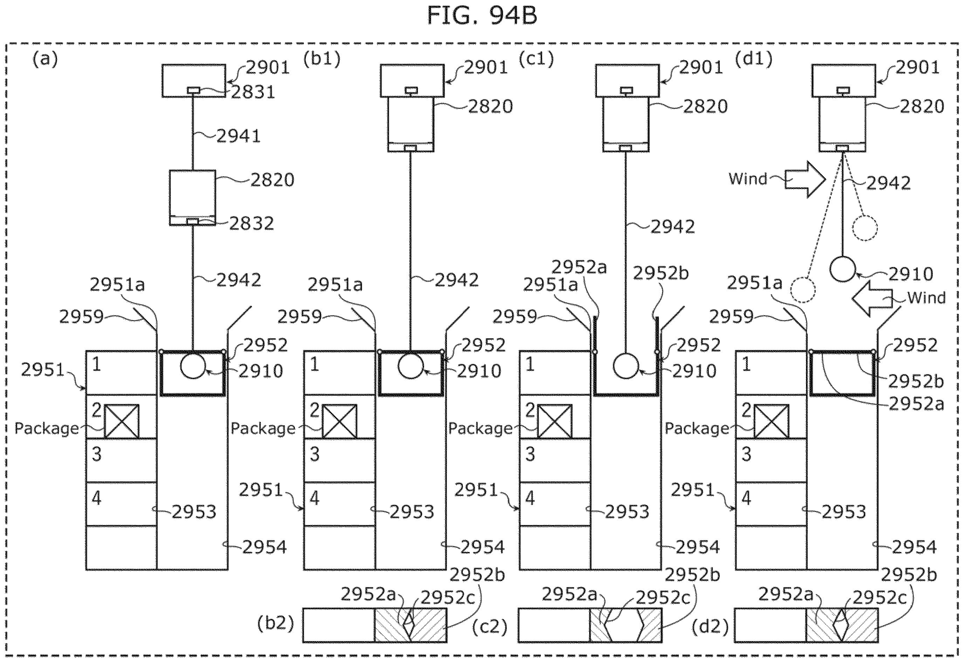

   FIG. 94B illustrates an example of a package carriage and an unmanned aerial vehicle in an unmanned transport system ascendi ng.
[FIG. 94C]

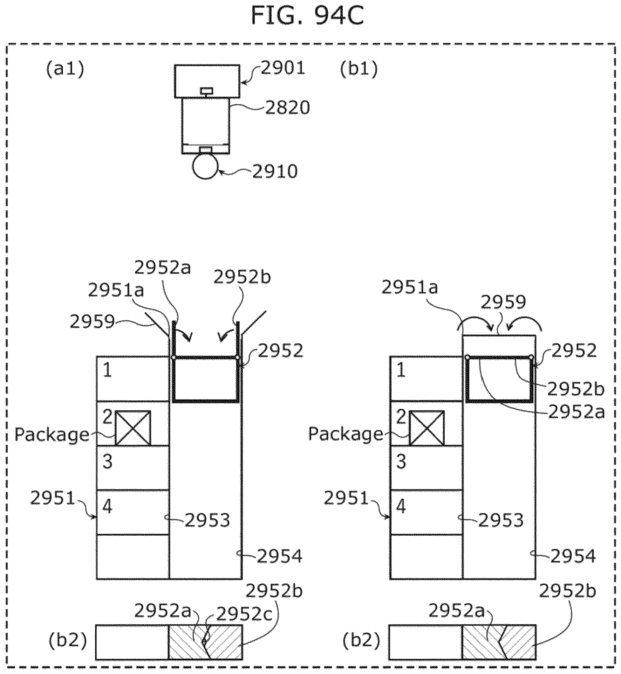

   FIG. 94C illustrates an example of closing a first lid and a second lid and closing a lid of a guide structure of an enclosure.
[FIG. 95A]

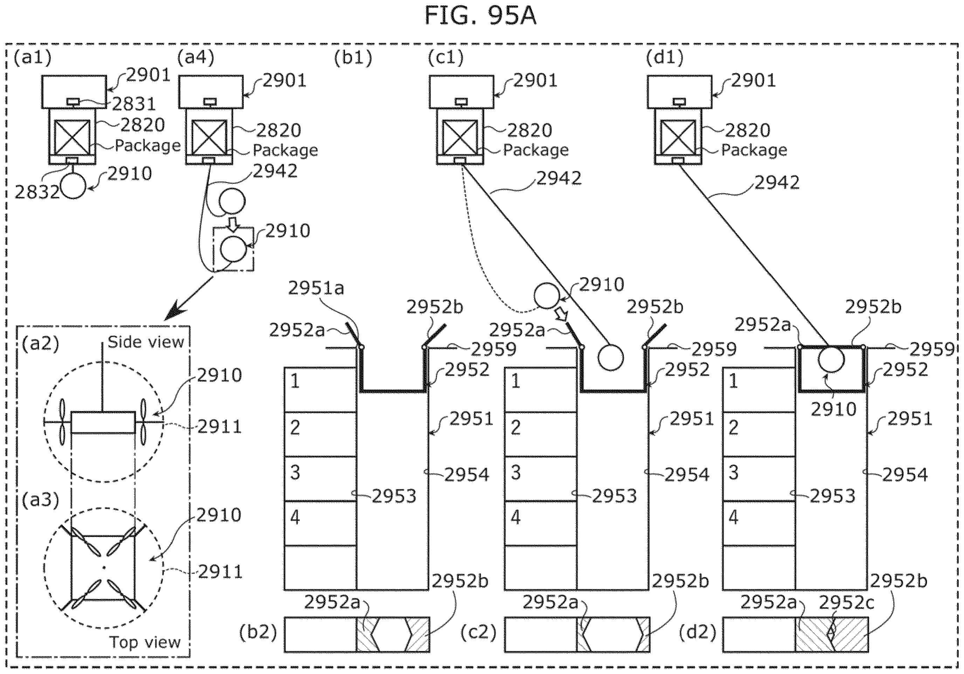

   FIG. 95A illustrates an example of an unmanned aerial vehicle with the capability to fly descending.
[FIG. 95B]

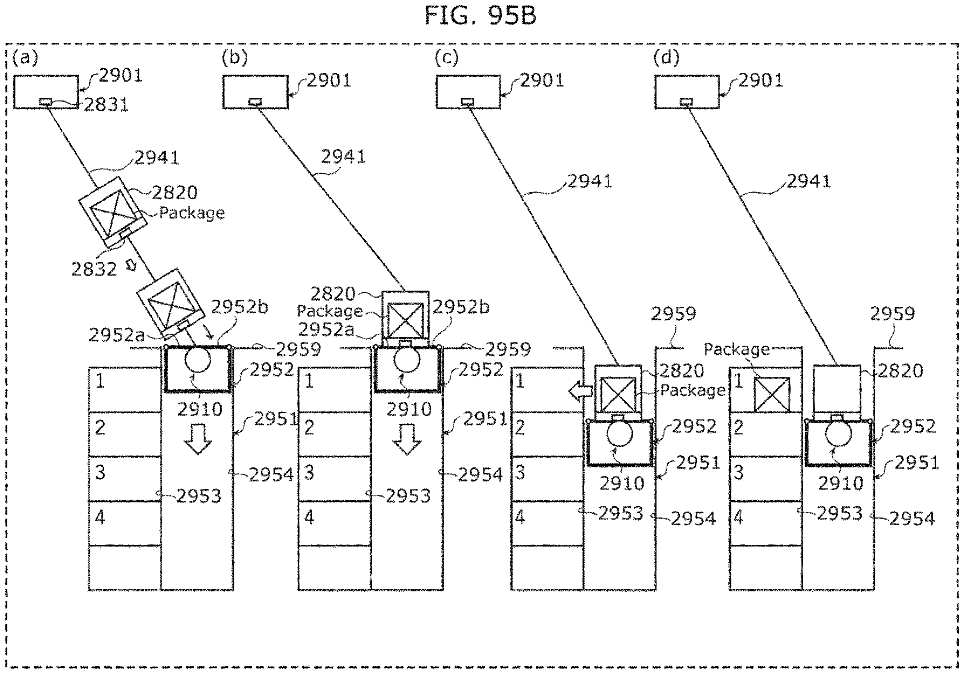

   FIG. 95B illustrates an example of a package carriage descending to unload a package after an unmanned aerial vehicle with the capability to fly has descended.
[FIG. 95C]

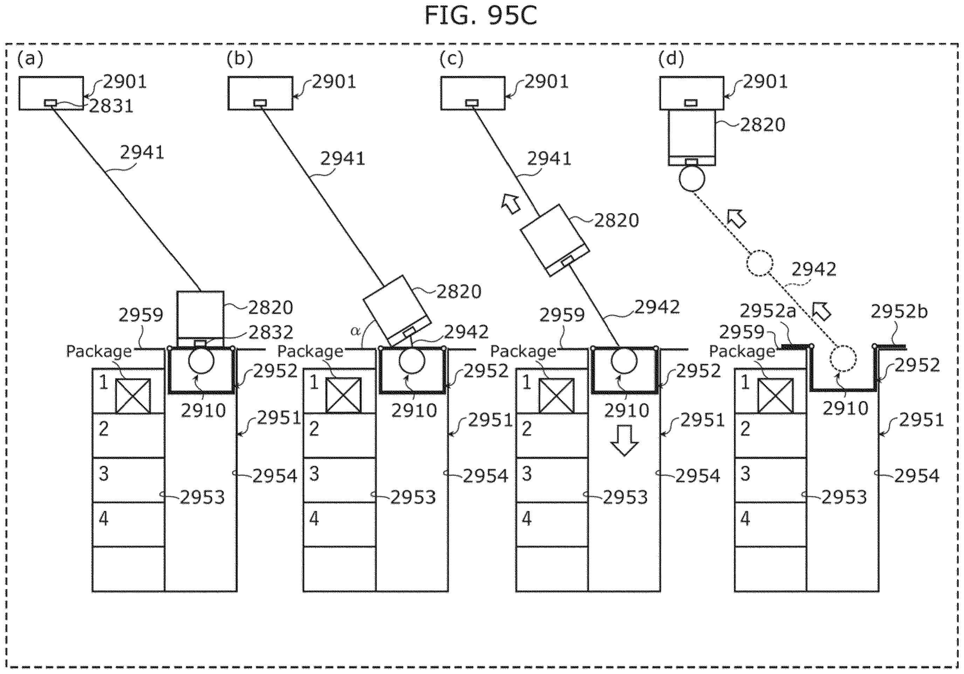

   FIG. 95C illustrates an example of a package being unloaded and a package carriage and an unmanned aerial vehicle in an unmanned transport system ascending.
[FIG. 95D]

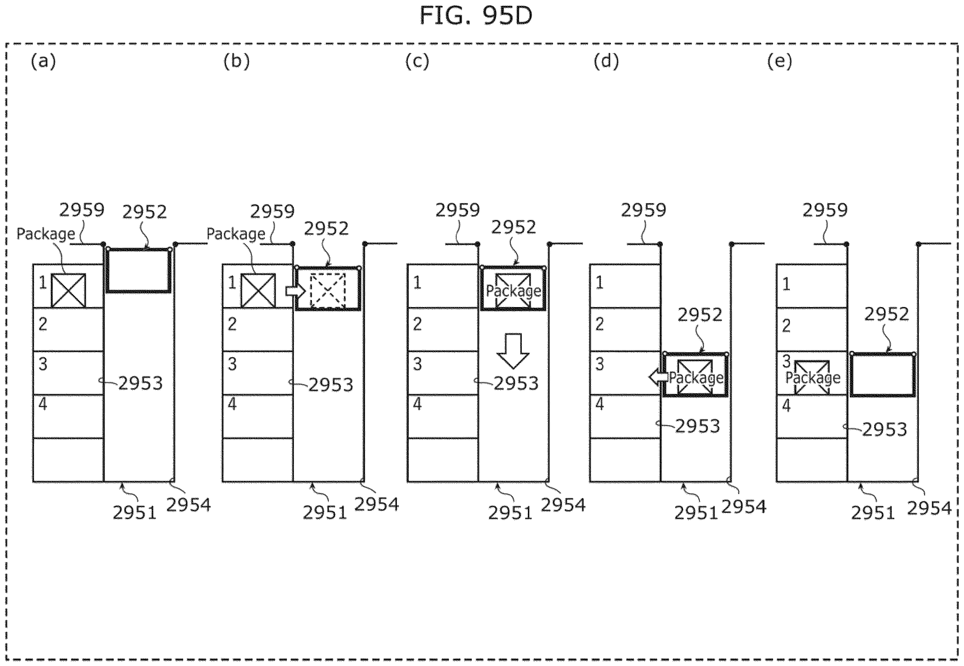

   FIG. 95D illustrates an example of moving a package placed in a temporary storage area to a predetermined package compartment.
[FIG. 96A]

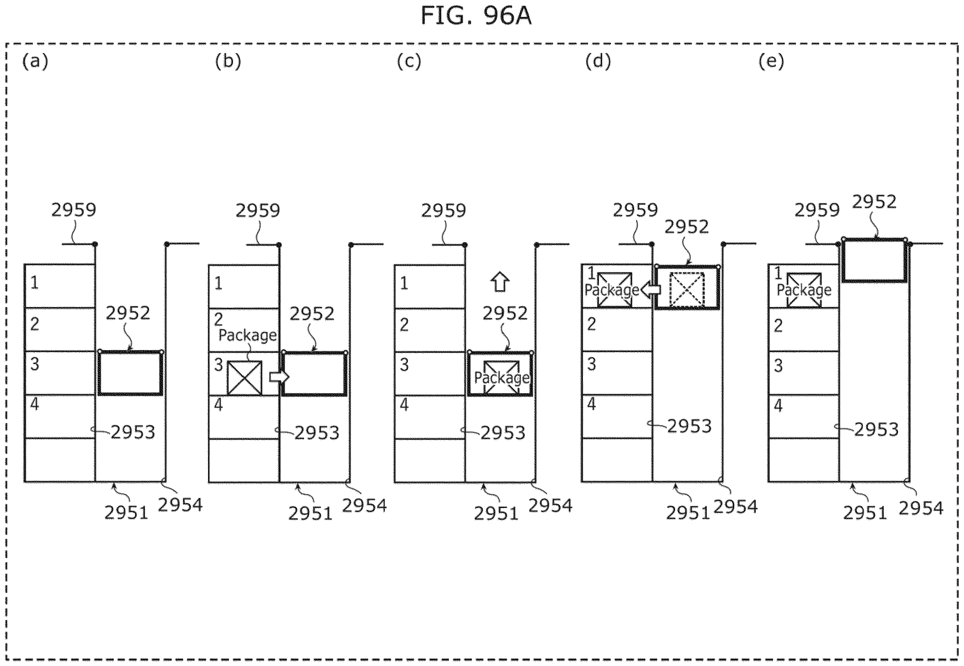

   FIG. 96A illustrates an example of collecting a package.
[FIG. 96B]

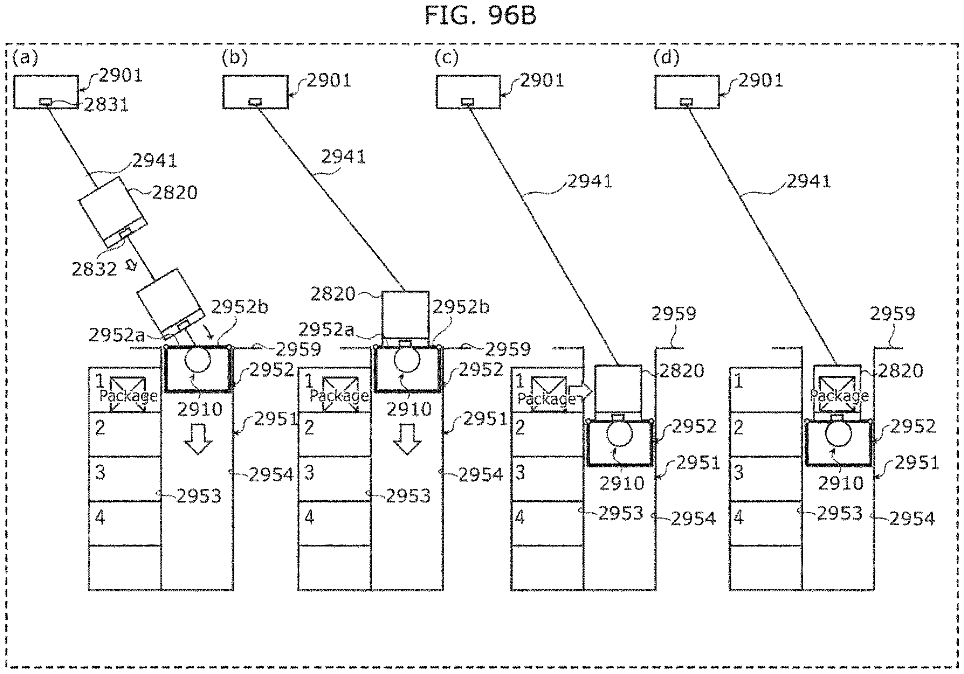

   FIG. 96B illustrates an example of lowering an unmanned aerial vehicle and a package carriage to collect a package.
[FIG. 96C]

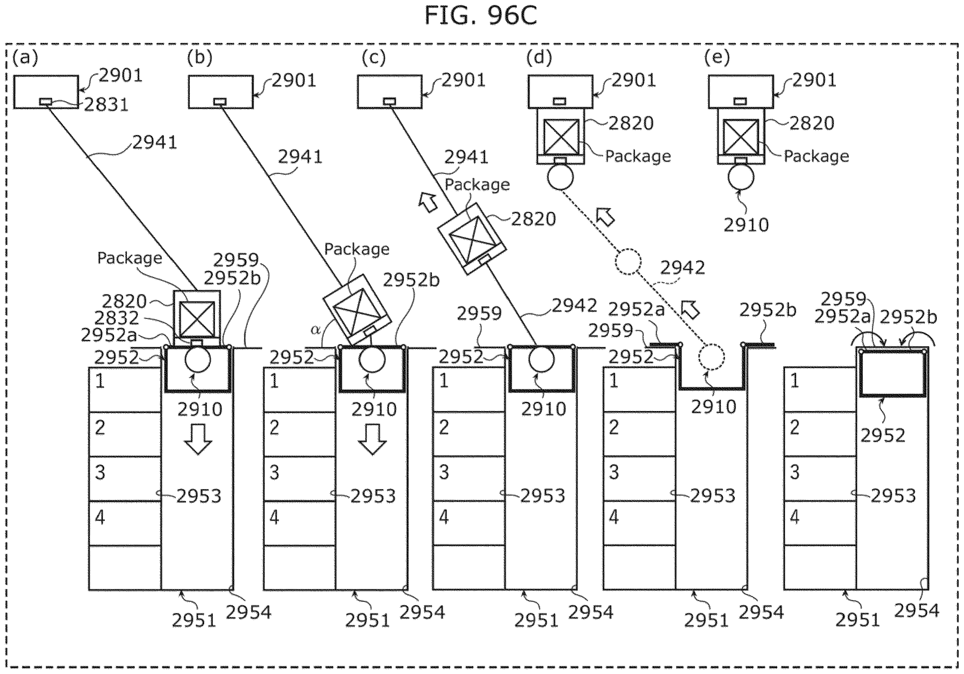

   FIG. 96C illustrates an example of a package carriage and an unmanned aerial vehicle in an unmanned transport system ascending after collecting a package.
[FIG. 97A]

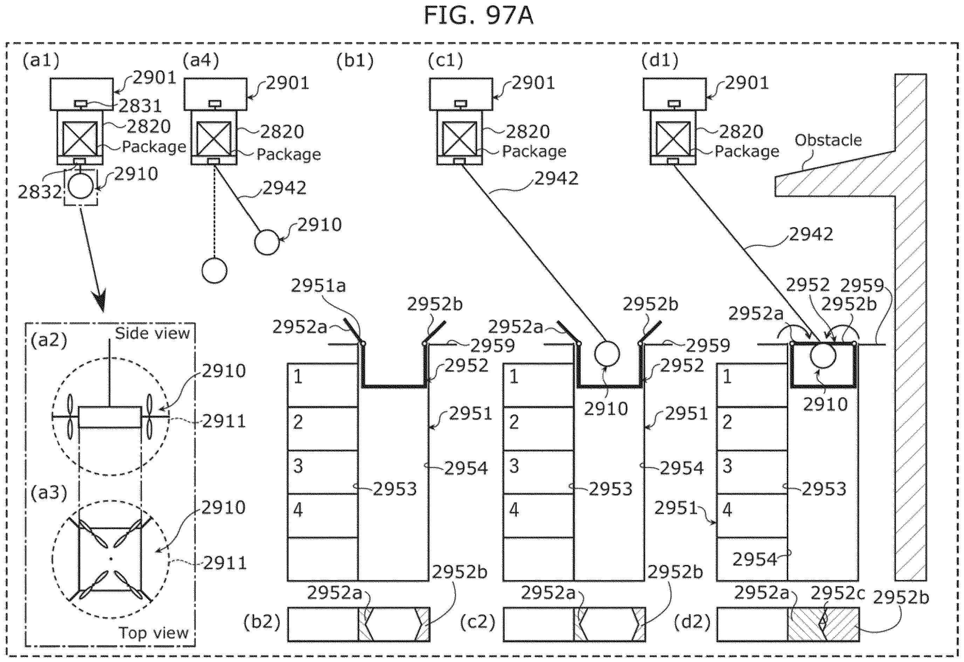

   FIG. 97A illustrates an example of an unmanned aerial vehicle in an unmanned transport system descending while avoiding an obstacle.
[FIG. 97B]

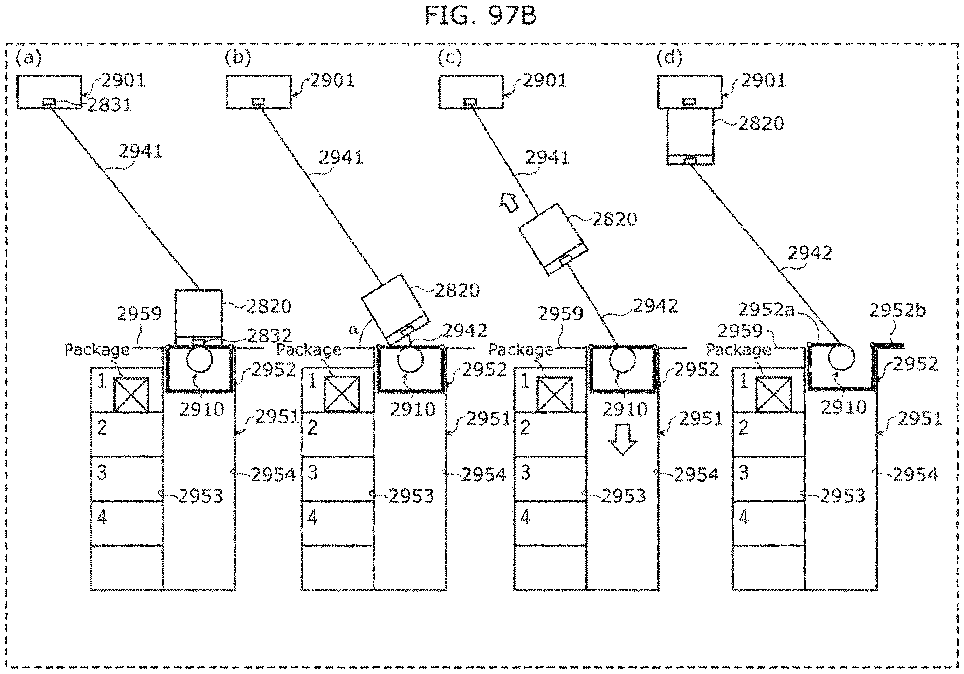

   FIG. 97B illustrates an example of a package being unloaded and a package carriage and an unmanned aerial vehicle in an unmanned transport system ascending.
[FIG. 97C]

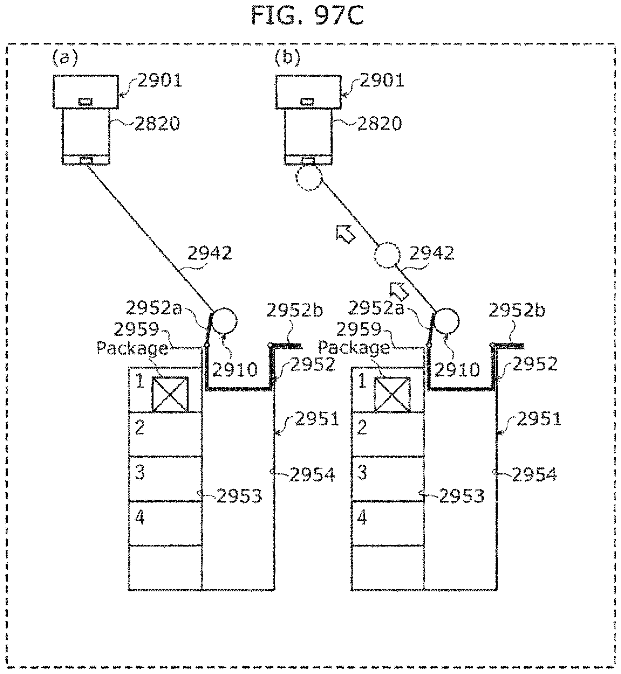

   FIG. 97C illustrates an example of a package being unloaded and an unmanned aerial vehicle in an unmanned transport system ascendi ng.
[FIG. 98]

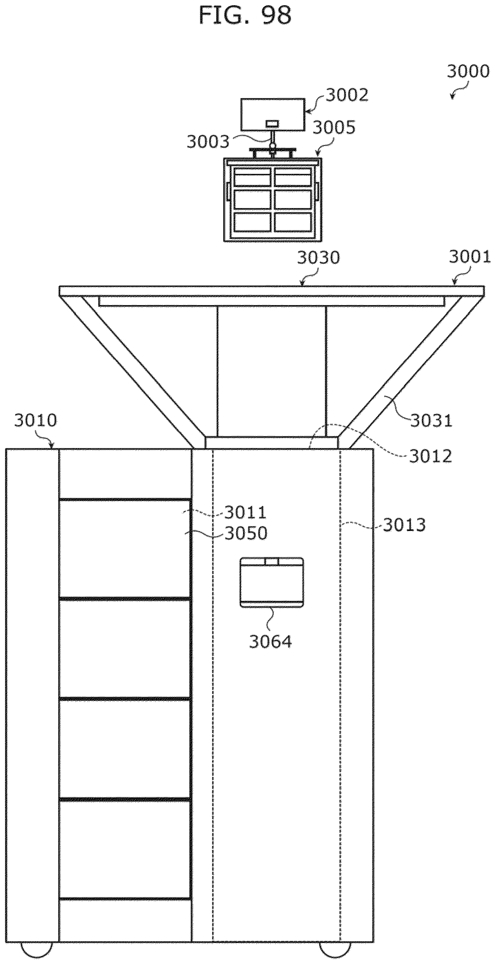

   FIG. 98 is a schematic diagram illustrating an unmanned transport vehicle, a package carriage, and a delivery box.
[FIG. 99]

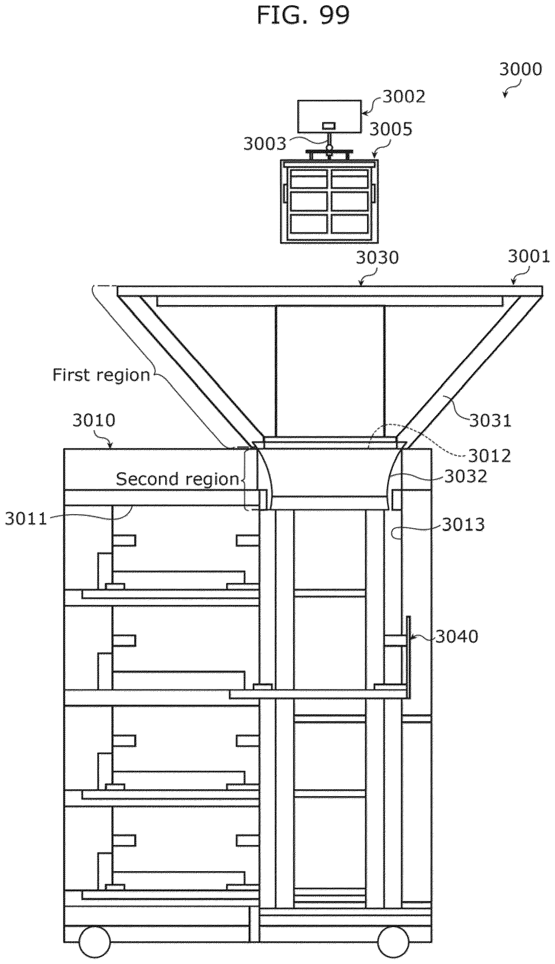

   FIG. 99 is a schematic diagram illustrating the internal structure of a delivery box in an unmanned transport system.
[FIG. 100]

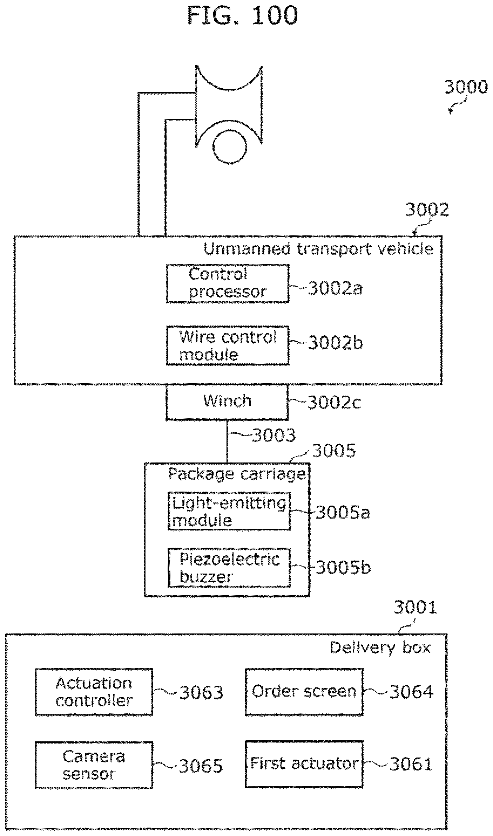

   FIG. 100 is a block diagram illustrating an unmanned transport system.
[FIG. 101]

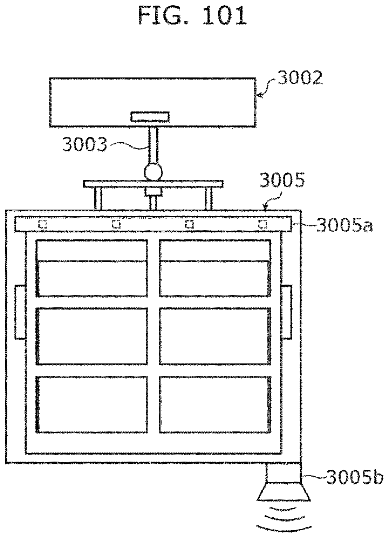

   FIG. 101 is a side view illustrating a package carriage.
[FIG. 102]

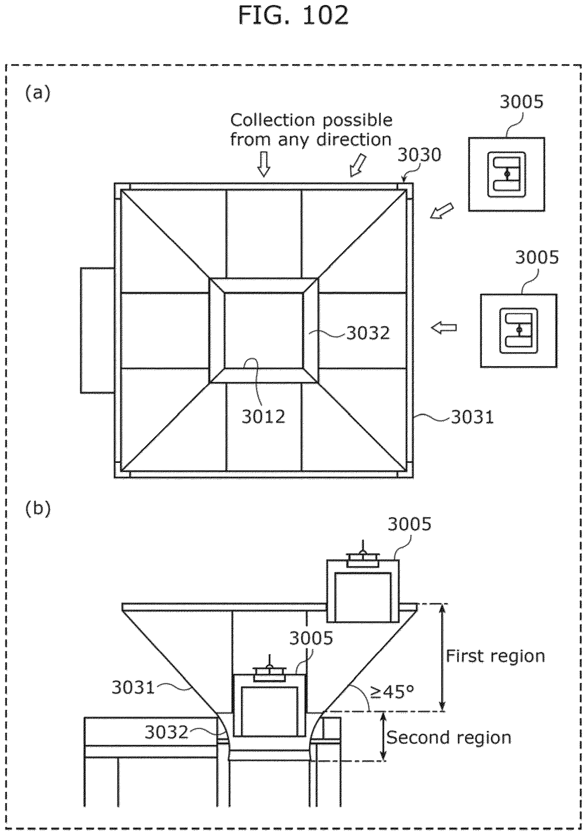

   FIG. 102 is a schematic diagram illustrating a package carriage entering a guide structure.
[FIG. 103A]

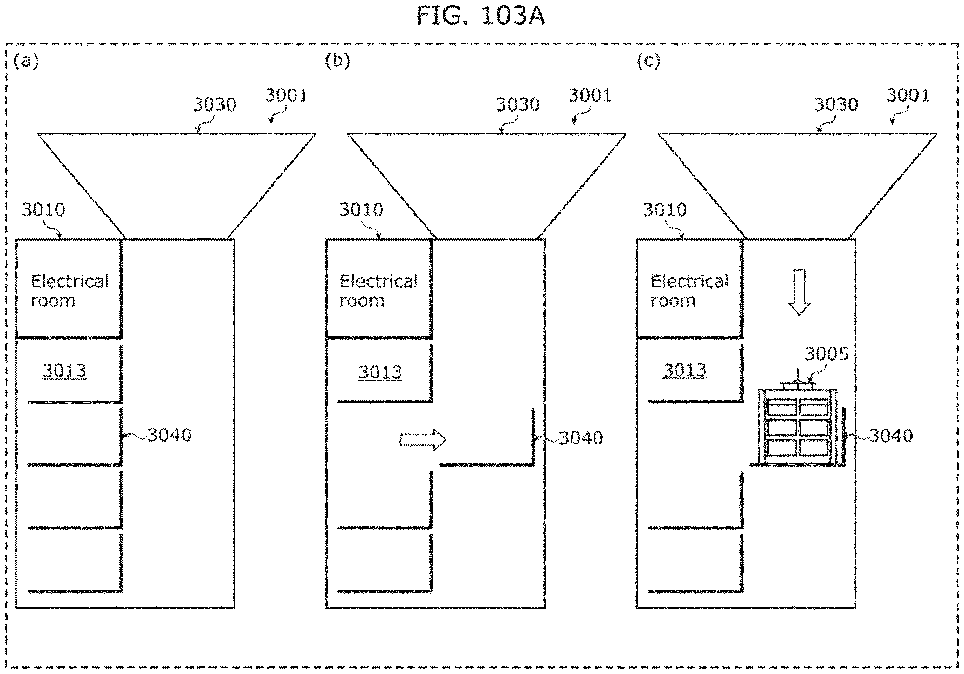

   FIG. 103A illustrates a transport body in the delivery box moving to an elevator path and a package carriage being placed on the transport body.
[FIG. 103B]

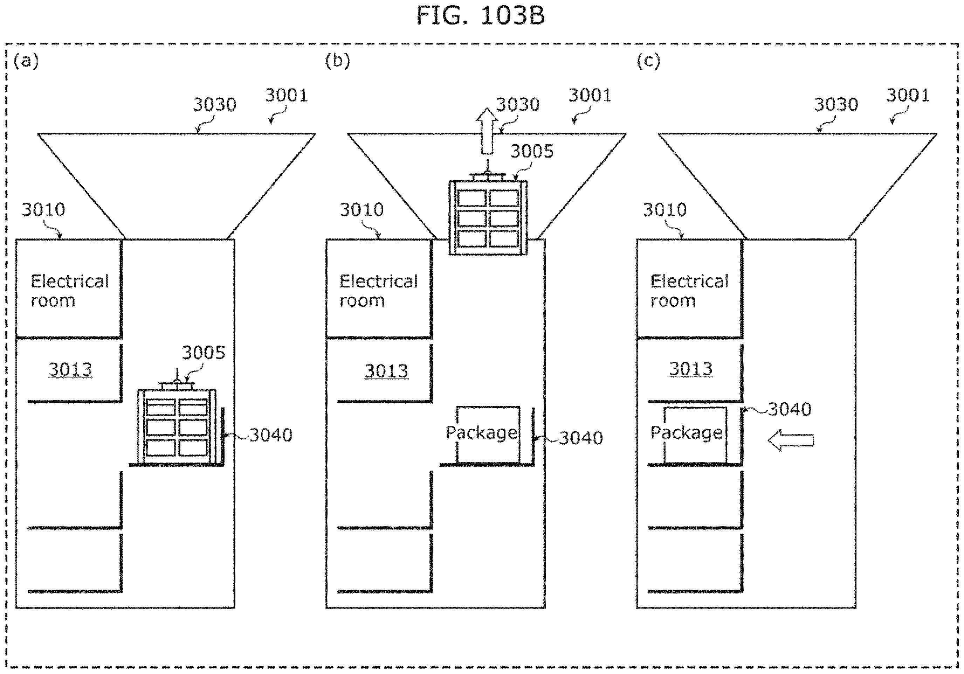

   FIG. 103B illustrates a package being placed on a transport body in a delivery box, a package carriage rising, and the transport body returning to a package compartment.
[FIG. 103C]

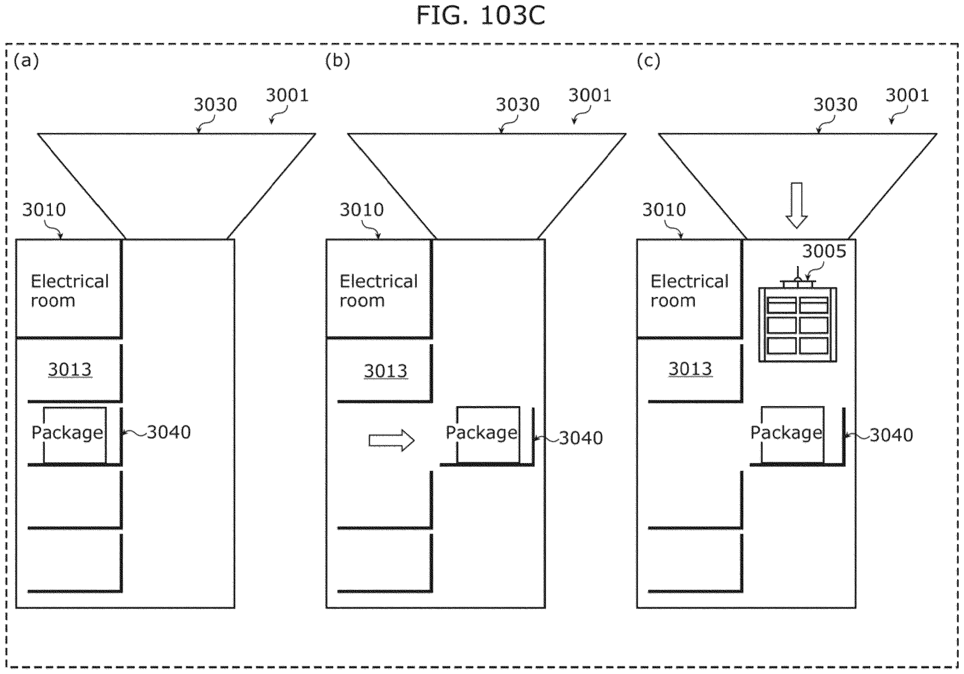

   FIG. 103C illustrates a transport body with a package for collection moving to an elevator path and a package carriage descending towards the transport body.
[FIG. 103D]

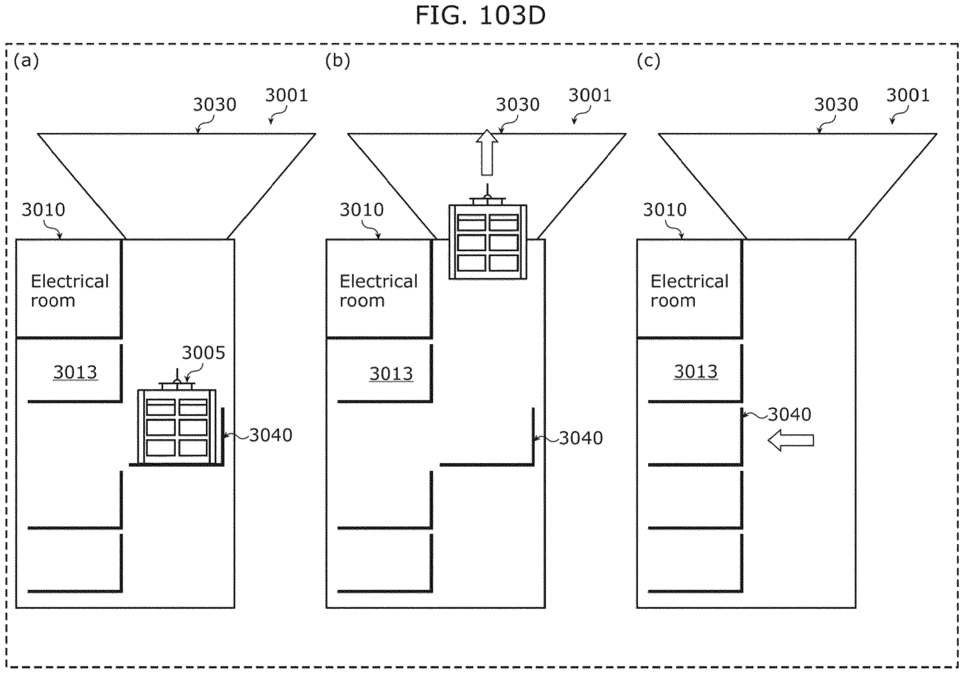

   FIG. 103D illustrates a package carriage that has collected a package rising, and a transport body returning to a package compartment.
[FIG. 104A]

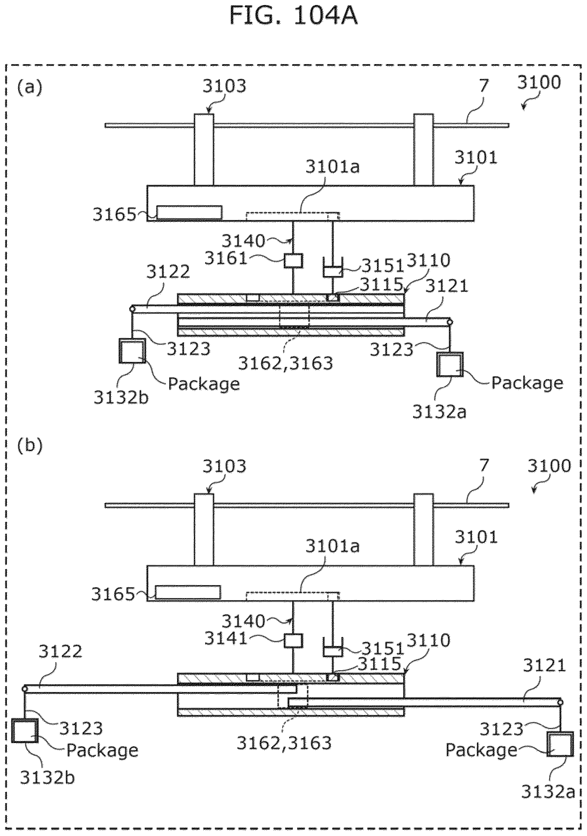

   FIG. 104A is a schematic diagram illustrating a first vehicle main body and a second vehicle main body.
[FIG. 104B]

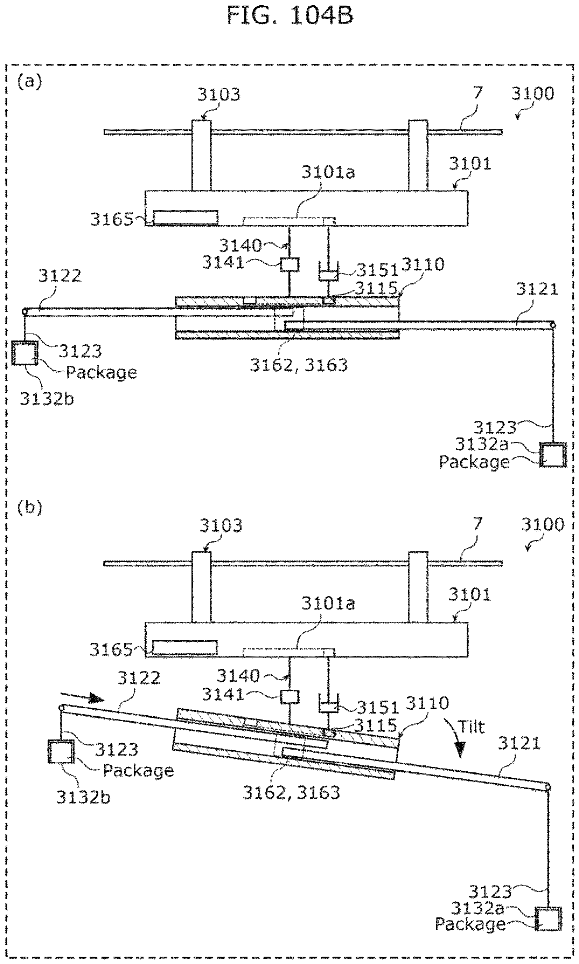

   FIG. 104B illustrates the sliding movement of a first slider and a second slider in order to lower a package carriage.
[FIG. 104C]

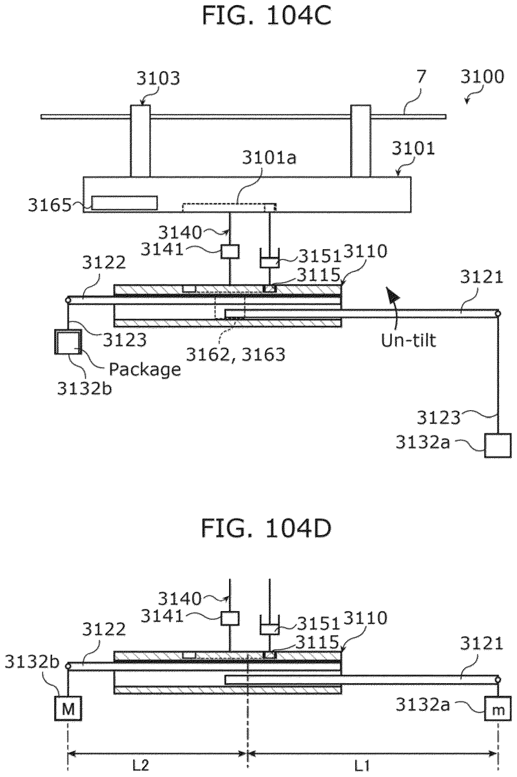

   FIG. 104C illustrates a first slider and a second slider after a package has been unloaded.
[FIG. 104D]
   FIG. 104D illustrates the rotational moment occurring in a first slider and a second slider.
[FIG. 105]

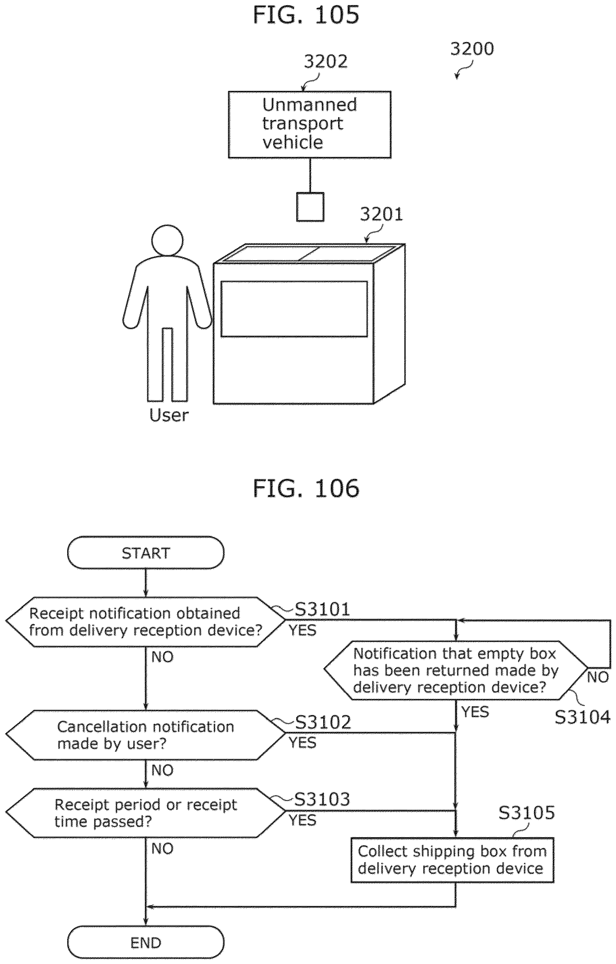

   FIG. 105 is a block diagram illustrating an example of an unmanned aerial vehicle and a delivery box in an unmanned transport system.
[FIG. 106]
   FIG. 106 is a flowchart illustrating operations according to Embodiment 20.
[FIG. 107]

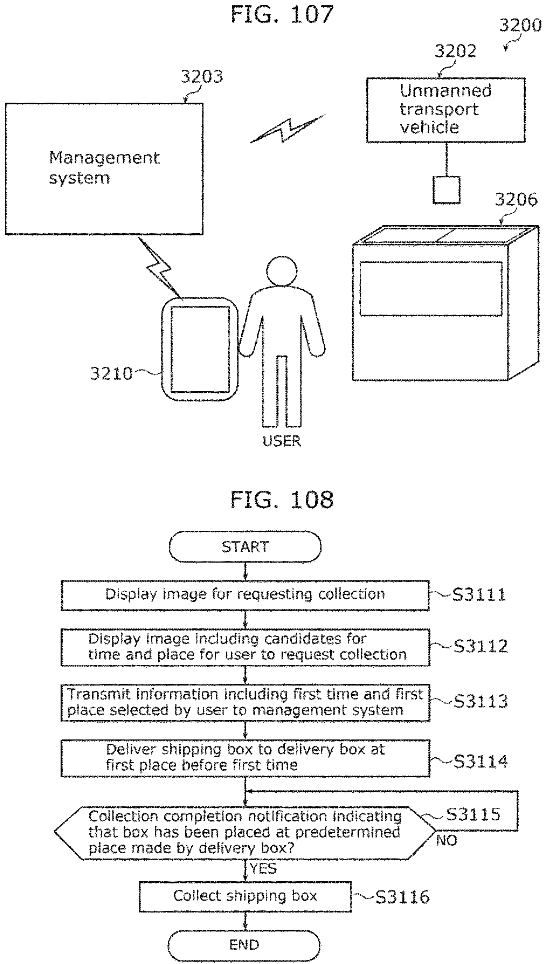

   FIG. 107 is a block diagram illustrating a management system, an information terminal, an unmanned transport vehicle, and a delivery box.
[FIG. 108]
   FIG. 108 is a flowchart illustrating operations according to Embodiment 21.

### [Description of Embodiments]

These general and specific aspects may be implemented using a system, a method, an integrated circuit, a computer program, a computer-readable recording medium such as a CD-ROM, or any combination thereof.

The embodiments described below illustrate general or specific examples. The numerical values, shapes, materials, elements, the arrangement and connectivity of the elements, steps, the order of the steps, and so on given in the following embodiments are examples and are not intended to limit the present disclosure. Among elements described in the following embodiments, those not described in any of the independent claims are presented as optional elements.

Hereinafter, embodiments are specifically described with reference to the drawings.

### [Embodiment 1]

### Configu ration

FIG. 1 is a block diagram illustrating an example of the delivery system according to Embodiment 1.

As illustrated in FIG. 1, the delivery system is a system capable of delivering a package (an article) from a sender to a receiver using unmanned transport system 6a. For example, unmanned transport system 6a delivers a package to a receiver by package transport device 10p carrying the package traveling. The sender is the party that sends the package, and the receiver is the party that receives the package. In the present embodiment, the sender is a distribution center, such as a facility of a courier company or a convenience store that serves as a relay point, etc. In the present embodiment, the receiver is the party receiving the package, i.e., the destination, such as a home, a convenience store that serves as a relay point, or a delivery box provided at a home or a convenience store or the like. Although the relay point is exemplified as a convenience store or a facility established in conjunction with a convenience store, the relay point is not limited to this example. The size of package transport device 10p may be changed depending on the size of the package to be delivered.

The delivery system includes management server 9 and unmanned transport system 6a.

### <Management Server 9>

As illustrated in FIG. 1, management server 9 is wirelessly communicably connected to unmanned transport system 6a. Management server 9 sets a travel route for unmanned transport system 6a based on position information of the receiver and position information of the sender. Management server 9 obtains position information of unmanned transport system 6a and changes the travel route according to the status of the set travel route for unmanned transport system 6a. Management server 9 sets the travel route for unmanned transport system 6a according to other unmanned transport systems 6a that are moving or scheduled to move. Management server 9 sends a departure instruction to unmanned transport system 6a based on the set travel route. Management server 9 also manages the traveling state of unmanned transport system 6a. Management server 9 is implemented as a computer, a cloud server, or the like. The travel route is a route for unmanned transport system 6a to travel through areas where rails 7 are present and areas where rails 7 are not present, and is shown in map data.

Rail 7 is, for example, located at a height of several meters to several tens of meters above the ground surface and is fixed in place by a support pillar implanted in the ground or a facility or the like. Rails 7 may be provided across the entire area above the ground or just around at least the receiver. Rails 7 are provided along the road, for example.

Rails 7 include a connection point. The connection point is a portion where one rail 7 connects to another rail 7. A sheet-, net-, or plate-shaped structure is arranged directly below the connection point.

Management server 9 includes first communicator 91, storage 92, and display 93.

First communicator 91 is a wireless module capable of wirelessly communicating with unmanned transport system 6a. In first communicator 91, for example, the receiving unit of first communicator 91 receives position information from unmanned transport system 6a, and the transmitting unit of first communicator 91 transmits a departure instruction and information indicating a travel route to unmanned transport system 6a.

Storage 92 is a recording medium on which map information indicating a route for unmanned transport system 6a to travel is stored. Storage 92 is, for example, a hard disk drive (HDD) or semiconductor memory.

Display 93 displays the current position of unmanned transport system 6a and the travel route that unmanned transport system 6a is scheduled to travel. Display 93 can also show the status of unmanned transport system 6a. The status of unmanned transport system 6a includes the altitude, the power, the travel speed, the angle of inclination relative to the horizontal plane, and the fault status.

### <Unmanned Transport System 6a>

When unmanned transport system 6a receives information indicating a travel route set by management server 9, unmanned transport system 6a moves according to the travel route indicated in the information. Unmanned transport system 6a moves from the sender to the receiver by moving along rails 7, and then delivers the package to the receiver. Unmanned transport system 6a is one example of a system.

Unmanned transport system 6a includes package transport device 10p and unmanned aerial vehicle 110.

### <Package Transport Device 10p>

Package transport device 10p moves along rail 7 provided above the ground that it is attached to. Package transport device 10p travels along rail 7 while unmanned aerial vehicle 110 is coupled via wire 51. In the present embodiment, the delivery system may include rail 7 as an element.

More specifically, package transport device 10p moves from a sender to a receiver along rails 7 while a connector, which includes wheel 31, is connected to rails 7. More specifically, package transport device 10p travels from a sender to a receiver while the connector is coupled to rails 7 (hereinafter also phrased as while "the connector is coupled to rails 7"). This allows package transport device 10p to carry a package from the sender to the receiver. Here, moving along rails 7 does not necessarily mean that the connector of package transport device 10p slides directly on rails 7. Package transport device 10p may fly while rails 7 and the connector of package transport device 10p are not in contact, since the connector and rails 7 may wear out if the connector slides directly over rails 7. In the present embodiment, since wheel 31 is provided between rail 7 and the connector, the concern regarding the wear of rail 7 is eliminated.

Although there is only one package transport device 10p in the example in the present embodiment, a plurality of package transport devices 10p, for example, a first unmanned aerial vehicle and a second unmanned aerial vehicle, may be coupled and connected by wire 51 or the like and travel.

Package transport device 10p includes vehicle main body 2301, a plurality of sensors, control processor 2318, actuation controller 12, second communicator 13, and battery 14.

Vehicle main body 2301 is equipped with propeller 22, first propeller actuation motor 23, a plurality of sensors, control processor 2318, actuation controller 12, second communicator 13, and battery 14.

Vehicle main body 2301 is elongated in the lengthwise direction of rails 7. First propeller actuation motor 23 may be fixed to the side surface of vehicle main body 2301. In such cases, first propeller actuation motor 23 may be fixed to the support portion such that the axis of rotation thereof is approximately parallel to the horizontal direction.

Vehicle main body 2301 includes main body 21, connector, propeller 22, and first propeller actuation motor 23. Vehicle main body 2301 may be an example of an unmanned aerial vehicle.

Main body 21 is configured as a rectangular frame-shaped body. Main body 21 supports first propeller actuation motor 23 at a predetermined attitude. Main body 21 may have an opening that allows unmanned aerial vehicle 110 to be arranged inside main body 21. Stated differently, when unmanned aerial vehicle 110 is mounted on vehicle main body 2301, main body 21 may be arranged to surround unmanned aerial vehicle 110 and support unmanned aerial vehicle 110 at a predetermined attitude.

The connector is coupled to rail 7. Vehicle main body 2301 is provided with a plurality of connectors, but vehicle main body 2301 may be provided with one connector.

The connector is provided with wheel 31. Wheel 31 is provided on the connector. Wheel 31 is a wheel for rotational contact with rail 7. Wheel 31 is pivotably provided on the connector. In the present embodiment, since one or more connectors are provided in vehicle main body 2301, each of the one or more connectors may be provided with wheel 31.

The connector may be J-shaped, U-shaped, V-shaped, L-shaped, etc.

Roller actuation motor 1353 is provided on each of the one or more connectors and corresponds one-to-one with wheel 31. Roller actuation motor 1353 actuates and rotates wheel 31 under control by control processor 2318. Stated differently, unmanned transport system 6a can travel over rails 7 since each roller actuation motor 1353 is controlled by control processor 2318 to actuate and rotate its corresponding wheel 31.

Propeller 22 is provided on the upper surface of vehicle main body 2301. More specifically, propeller 22 is provided on vehicle main body 2301 so that its plane of rotation is approximately parallel to a plane orthogonal to the thickness direction of vehicle main body 2301. Propeller 22 corresponds one-to-one with first propeller actuation motor 23, and the rotational actuation of first propeller actuation motor 23 causes propeller 22 to rotate around the axis of rotation of first propeller actuation motor 23 to provide thrust to package transport device 10p. Propeller 22 is provided at a corner of vehicle main body 2301, and in the present embodiment, one propeller 22 is arranged on vehicle main body 2301. However, vehicle main body 2301 may be provided with two or more propellers 22. In such cases, vehicle main body 2301 may be provided with two or more first propeller actuation motors 23.

First propeller actuation motor 23 is an electric motor that rotates propeller 22. First propeller actuation motor 23 is a motor that is actuated and controlled by control processor 2318. First propeller actuation motor 23 is fixed to a corner of main body 21 of vehicle main body 2301.

The plurality of sensors include, for example, global positioning system (GPS) sensor 41, gyro sensor 42, speed sensor 43, wind speed sensor 44, camera sensor 45, and tension sensor 46. Control processor 2318 determines whether or not support member 111 of unmanned aerial vehicle 110 is provided with a package using a sensor mounted on unmanned aerial vehicle 110. Here, the sensor may be a proximity sensor that detects a package near support member 111 of unmanned aerial vehicle 110, may be a switch sensor that is pressed down when the package is provided on support member 111 of unmanned aerial vehicle 110, and may be a weight sensor that detects the weight of unmanned transport system 6a (or unmanned aerial vehicle 110).

GPS sensor 41 detects position information indicating geographic space, such as latitude and longitude, indicating the position of package transport device 10p. GPS sensor 41 outputs position information indicating the current position of package transport device 10p to control processor 2318. GPS sensor 41 is one example of a sensor.

Gyro sensor 42 detects the angular speed and acceleration of vehicle main body 2301 of package transport device 10p while in travel. Gyro sensor 42 outputs angular speed information and acceleration information indicating the angular speed and the acceleration of vehicle main body 2301 of package transport device 10p to control processor 2318.

Speed sensor 43 is a sensor that detects the travel speed of package transport device 10p, for example, the speed of package transport device 10p during travel and in a stopped state. Speed sensor 43 outputs speed information which is information indicating the travel speed of package transport device 10p to control processor 2318.

Wind speed sensor 44 is a sensor that detects the wind speed around package transport device 10p, for example, the wind speed around package transport device 10p in a stopped state. When unmanned aerial vehicle 110 detaches from package transport device 10p and descends, wind speed sensor 44 detects a wind speed around package transport device 10p. Wind speed sensor 44 outputs wind speed information which is information indicating the wind speed around package transport device 10p to control processor 2318.

Camera sensor 45 is provided on vehicle main body 2301 and is an imaging device capable of capturing images of the package and the delivery box from above. Camera sensor 45 captures an image of the package and the delivery box and outputs image information, which is the captured image, to control processor 2318. For example, the image information includes information indicating the relative position (distance) between the package and the delivery box, the distance from vehicle main body 2301 to the package, the distance from vehicle main body 2301 to the delivery box, and the height from the ground surface to the opening of the delivery box. Camera sensor 45 may be, for example, a time-of-flight (TOF) camera or a range finding sensor or the like.

Tension sensor 46 is a sensor that detects the tension of wire 51 that couples package transport device 10p and unmanned aerial vehicle 110. Tension sensor 46 outputs, to control processor 2318, tension information indicating the tension of wire 51 that couples package transport device 10p and unmanned aerial vehicle 110.

Control processor 2318 controls the traveling state of package transport device 10p and controls the reeling in and out of wire 51. Traveling states of package transport device 10p include forward, backward, rotate right, rotate left, stopped, etc.

Control processor 2318 controls, for example, the travel speed and acceleration of package transport device 10p by obtaining position information, angular speed information, acceleration information, and speed information. More specifically, control processor 2318 controls the inclination of vehicle main body 2301 of the aircraft relative to the horizontal direction and controls the rotation rates of propellers 22 of package transport device 10p by controlling first propeller actuation motors 23, based on the position information, the angular speed information, the acceleration information, and the speed information. Control processor 2318 is one example of the controller.

Control processor 2318 also detects the amount of movement of package transport device 10p while it is in a stopped state by obtaining wind speed information or the like. More specifically, since vehicle main body 2301 is moved by the wind, control processor 2318 correct the misalignment of package transport device 10p caused by the wind by controlling the tilt of vehicle main body 2301 relative to the horizontal direction and controlling the rotation rates of propellers 22 of package transport device 10p. Note that control processor 2318 may correct misalignment of package transport device 10p caused by wind based on the position information, the angular speed information, and the speed information. The correction of misalignment may also be applied to unmanned aerial vehicle 110.

By obtaining the image information, control processor 2318 corrects the position of unmanned transport system 6a so as to position the package in the airspace above the destination point of the receiver.

Actuation controller 12 includes propeller control module 12b and wire control module 12c.

Propeller control module 12b controls the actuation of first propeller actuation motor 23 based on instructions from control processor 2318. In other words, when propeller control module 12b obtains an actuation instruction from control processor 2318, it controls, for example, the rotation rate and the direction of rotation (clockwise or counterclockwise) of propeller 22. Propeller control module 12b controls the actuation and stopping of and the rotation rate and the direction of rotation of propeller 22 actuated by first propeller actuation motor 23.

Propeller control module 12b is controlled by the actuator of actuation controller 12 by control processor 2318. Propeller control module 12b can provide thrust to package transport device 10p in a horizontal direction, that is, in a direction orthogonal to the plane of rotation of propeller 22. This allows package transport device 10p to move in the lengthwise direction of rails 7.

Wire control module 12c may control the reeling in and out of wire 51 based on instructions from control processor 2318. That is, when wire control module 12c obtains a reel-out instruction for wire 51 from control processor 2318, wire control module 12c may actuate wire actuation motor 24 so as to reel out wire 51 to separate unmanned aerial vehicle 110 from package transport device 10p. When wire control module 12c obtains a reel-in instruction for wire 51 from control processor 2318, wire control module 12c may actuate wire actuation motor 24 so as to reel in wire 51 to retrieve unmanned aerial vehicle 110.

In the present embodiment, since package transport device 10p is held while hanging by one or more connectors on one or more rails 7, as a result of control processor 2318 controlling the respective roller actuation motors 1353, and/or the respective propeller actuation motors, unmanned aerial vehicle 110 can move along rails 7 by being actuated by roller actuation motors 1353. For example, when unmanned aerial vehicle 110 moves on rail 7, control processor 2318 may carry out control to stop actuation of each propeller actuation motor and actuate each roller actuation motor 1353.

Package transport device 10p may include wire actuation motor 24. Stated differently, main body 21 of vehicle main body 2301 may be equipped with wire actuation motor 24. Wire actuation motor 24 may be an electric motor that rotates a reel that reels wire 51 in and out. Each wire actuation motor 24 may be actuated and controlled by wire control module 12c via control processor 2318.

Second communicator 13 is a wireless module capable of wirelessly communicating with management server 9. When second communicator 13 receives, for example, a departure instruction and information indicating a travel route from management server 9, the receiving unit outputs the received departure instruction to control processor 2318, and transmits position information and the like detected by GPS sensor 41 to management server 9.

Battery 14 is a battery that provides electric power to first propeller actuation motor 23 and the like for package transport device 10p to travel, and is realized as a lithium battery or the like. Battery 14 supplies power to, for example, control processor 2318 and first propeller actuation motor 23.

### <Unmanned Aerial Vehicle 110>

Unmanned aerial vehicle 110 is a device capable of correcting the position of a package relative to a delivery box. Unmanned aerial vehicle 110 can communicate with vehicle main body 2301 of package transport device 10p via wire 51, but may also communicate wirelessly using a communication module or the like. Unmanned aerial vehicle 110 may be a drone.

Unmanned aerial vehicle 110 is a first child vehicle of package transport device 10p and is attachable to and detachable from package transport device 10p.

Unmanned aerial vehicle 110 includes a vehicle main body, wire 51, a plurality of second propeller actuation motors 112, a plurality of propellers 113, actuation controller 124, wire control module 125, and camera sensor 127.

The vehicle main body is a support member capable of holding the package at a predetermined attitude by engaging with the upper portion of the package. The vehicle main body attachably and detachably holds a package. The vehicle main body may include a polygonal frame that surrounds the package. The vehicle main body may be able to hold the package at a predetermined attitude by housing the package inside an opening formed in the central region of the vehicle main body and gripping the package around the top edge of the package to clamp the package, or by connecting to the package.

The vehicle main body may be a basket-shaped package carriage. The vehicle main body may be able to accommodate a package inside.

The vehicle main body is attachable to and detachable from package transport device 10p. The lower end of wire 51 (the sub-wire to be described below) is coupled to the vehicle main body. The vehicle main body has a plan view shape that corresponds to the shape of the package. In the present embodiment, the vehicle main body has a rectangular shape, which is one example of a polygonal shape.

The vehicle main body supports the plurality of second propeller actuation motors 112. The plurality of second propeller actuation motors 112 and the plurality of propellers 113 are provided on the outer peripheral side portions of the vehicle main body. In the present embodiment, two propellers 113 and two second propeller actuation motors 112 are provided on each side of the vehicle main body.

Wire 51 connects unmanned aerial vehicle 110 and package transport device 10p. One end of wire 51 is coupled to package transport device 10p and the other end is coupled to unmanned aerial vehicle 110.

Wire 51 is capable of hanging the vehicle main body, and is directly connected to at least one connection point of the vehicle main body. Wire 51 hangs the vehicle main body by one end of wire 51 being connected to the vehicle main body and the other end being connected to an object positioned spaced apart from the ground surface. The object is, for example, rail 7 or package transport device 10p such as a drone described above. When unmanned aerial vehicle 110 is hung from an object, wire 51 holds unmanned aerial vehicle 110 at a horizontal attitude.

Wire 51 may include a communication line that communicatively connects package transport device 10p and unmanned aerial vehicle 110, and may include a power line that supplies power to package transport device 10p. In configurations in which wire 51 does not include the communication line and or the power line, wire 51 may be mere metal or resin wire 51. In such cases, package transport device 10p and unmanned aerial vehicle 110 may be communicably connected by wireless communication. In such cases, unmanned aerial vehicle 110 may include battery 14.

The plurality of second propeller actuation motors 112 are electric motors that respectively rotate the plurality of propellers 113 by the main bodies of the motors rotating rotary shafts. Each of the plurality of second propeller actuation motors 112 is individually controlled to be actuated and stopped by actuation controller 124. Second propeller actuate motors 112 may, for example, be supplied with power from battery 14 of vehicle main body 2301 of package transport device 10p via wire 51. The vehicle main body may be provided with a battery, and each of the plurality of second propeller actuation motors 112 may be supplied with power from the battery.

The plurality of second propeller actuation motors 112 are arranged on the vehicle main body. The plurality of second propeller actuation motors 112 are dispersedly arranged so as to surround the vehicle main body and are supported by the vehicle main body.

Each of the plurality of propellers 113 is disposed on the vehicle main body so as to generate a horizontal and/or vertically upward thrust.

The plurality of propellers 113 correspond one-to-one with rotary shafts of the plurality of second propeller actuation motors 112 and are fixed one-to-one with rotary shafts of the plurality of second propeller actuation motors 112. The plurality of propellers 113 are respectively actuated by the plurality of second propeller actuation motors 112, and generate thrust along the lengthwise direction of the rotary shafts.

Camera sensor 127 is provided on the package side of the vehicle main body, that is, on the vertically downward side, and outputs image information obtained by capturing an image of a delivery box to actuation controller 124. A plurality of camera sensors 127 may be provided. Moreover, camera sensor 127 is not an essential element of unmanned aerial vehicle 110. Accordingly, unmanned aerial vehicle 110 need not include camera sensor 127.

Actuation controller 124 controls the plurality of second propeller actuation motors 112 of unmanned aerial vehicle 110 to actuate at least one of the plurality of second propeller actuation motors 112 during at least part of a period of time during which wire 51 reeled out.

More specifically, actuation controller 124 calculates the positions of the delivery box and the package based on image information obtained from camera sensor 127 of unmanned aerial vehicle 110 and image information obtained from camera sensor 45 of package transport device 10p. Actuation controller 124 controls the plurality of second propeller actuation motors 112 of unmanned aerial vehicle 110 so as to position the package vertically above the opening of the delivery box, to move unmanned aerial vehicle 110 and the package so that the package fits inside the opening of the delivery box as viewed from above. More specifically, actuation controller 124 calculates an error (misalignment) between the opening of the delivery box and the package, and corrects the position of the package relative to the opening of the delivery box so as to correct the calculated error.

Actuation controller 124 also controls the rotation rate of the rotary shafts of the plurality of second propeller actuation motors 112. Actuation controller 124 controls the rotation rate of the rotary shafts by changing the value of the current supplied to the plurality of second propeller actuation motors 112. Actuation controller 124 also can also individually control the rotation rate of each of the rotary shafts of the plurality of second propeller actuation motors 112.

Actuation controller 124 controls wire control module 125 by obtaining tension information. More specifically, actuation controller 124 adjusts the distance of unmanned aerial vehicle 110 relative to package transport device 10p by controlling the reeling in or out of wire 51.

Wire control module 125 includes a wire actuation motor and a reel.

The wire actuation motor is an electric motor that rotates reel which reels wire 51 in and out. Each wire actuation motor is actuated and controlled by actuation controller 124.

The reel can reel wire 51 in and out by rotating. The reel may be substituted with a winch. Accordingly, in the present disclosure, the "reel" may be read as a "winch". The rotation of the reel is controlled by wire control module 125.

Wire control module 125 controls the reeling in and out of wire 51 based on instructions from actuation controller 124. To attach unmanned aerial vehicle 110 to package transport device 10p, wire control module 125 rotates the reel by actuating the wire actuation motor to reel in wire 51 when it obtains a reel-in instruction for wire 51 from actuation controller 124. To separate unmanned aerial vehicle 110 from package transport device 10p, wire control module 125 rotates the reel by actuating the wire actuation motor to reel out wire 51 when it obtains a reel-out instruction for (obtains an instruction to reel out) wire 51 from actuation controller 124.

Package transport device 10p may additionally include a weight sensor. In such cases control processor 2318 can calculate the tension applied to rails 7 by obtaining the weight information from a weight sensor. When a plurality of package transport devices 10p are on same rail 7, control processor 2318 may determine whether the load capacity of rail 7 is exceeded based on the weight information. If the load capacity of rail 7 is exceeded, control processor 2318 may suspend (or postpone) the traveling of package transport device 10p.

Package transport device 10p may also include an electric field sensor. In such cases, control processor 2318 may detect whether wheels 31 are disengaged from rail 7 by obtaining contact information from the electric field sensor. If wheels 31 are disengaged from rail 7, control processor 2318 may correct the attitude of package transport device 10p so that respective wheels 31 travel on rail 7, by controlling respective propeller control modules 12b to rotate propellers 22.

Control processor 2318 may obtain the electric field information from respective electric field sensors 1355 and transmit the information to management server 9 via the communicator. Control processor 2318 may transmit image information of the captured state of rail 7 from respective camera sensors 45 and 127 to management server 9 via the communicator. This allows management server 9 to inspect the condition of rails 7 based on the magnetic field information and image information received from package transport device 10p. Stated differently, management server 9 can inspect whether rails 7 are, for example, damaged or not based on the magnetic field information and the image information.

Next, the functional configuration of vehicle main body 2301, slider portion 2310, one or more connectors, turntable 2319, side propeller 22a1, and third propeller actuation motor 22a3 in package transport device 10p will be explained in detail with reference to FIG. 2. FIG. 2 illustrates an example of package transport device 10p delivering a package according to Embodiment 1. As illustrated in FIG. 2, in the present embodiment, package transport device 10p illustrates an example of delivering to the yard of the receiver, which is, but not limited to, a facility such as a house. Also, in FIG. 2, an example including a plurality of connectors is illustrated. In FIG. 2, an example of a U-shaped connector is illustrated.

Package transport device 10p may further include slider portion 2310 provided on vehicle main body 2301, turntable 2319, side propeller 22a1, and third propeller actuation motor 22a3.

Vehicle main body 2301 includes frame 2302 that is rectangular in plan view. Frame 2302 is, for example, a rectangular frame-shaped body. Vehicle main body 2301 is provided with the plurality of connectors, turntable 2319, package holder 2315, and a plurality of propellers. The plurality of connectors, turntable 2319, etc., are provided on the top of vehicle main body 2301. Package transport device 10p may include a plurality of propellers that can fly vehicle main body 2301 by being rotationally driven by a propeller actuation motor that provides lift to fly vehicle main body 2301. Vehicle main body 2301 is one example of the main body.

Slider portion 2310 is extendable with respect to vehicle main body 2301. Slider portion 2310 includes a plurality of sliders, package holder 2315, counterweight 2316, and motor actuator 2317.

The plurality of sliders include first slider 2311, second slider 2312, third slider 2313, and first auxiliary slider 2314a. In the present embodiment, the plurality of sliders include four sliders, but the plurality of sliders may include three or fewer sliders, or five or more sliders. Hereinafter, first slider 2311, second slider 2312, third slider 2313, and first auxiliary slider 2314a, etc., may be collectively referred to simply as "sliders".

First slider 2311, second slider 2312, and third slider 2313 are arranged on one side of vehicle main body 2301 and extend from the one side of vehicle main body 2301 further along the lengthwise direction of vehicle main body 2301. FIG. 2 illustrates first slider 2311, second slider 2312, and third slider 2313 extended along the lengthwise direction of vehicle main body 2301 so as to move away from vehicle main body 2301. First slider 2311, second slider 2312, and third slider 2313 are aligned from vehicle main body 2301 in this order. First slider 2311 is one example of the first slider portion. Second slider 2312 is one example of the second slider portion. Third slider 2313 is one example of the third slider portion.

More specifically, first slider 2311 is coupled on the one side of vehicle main body 2301, and can extend from the one side of vehicle main body 2301 along the lengthwise direction of vehicle main body 2301 so as to move away from vehicle main body 2301, and can be inserted into vehicle opening 2301c on the one side of vehicle main body 2301. Second slider 2312 is coupled to first slider 2311 and can extend from the one side of first slider 2311 along the lengthwise direction of vehicle main body 2301 so as to move away from vehicle main body 2301, and can be inserted into first opening 2311c of first slider 2311. Third slider 2313 is coupled to second slider 2312 and can extend from the one side of second slider 2312 along the lengthwise direction of vehicle main body 2301 so as to move away from vehicle main body 2301, and can be inserted into second opening 2312c of second slider 2312.

First auxiliary slider 2314a is located on the other side of vehicle main body 2301 and extends from the other side of vehicle main body 2301 further along the lengthwise direction of vehicle main body 2301. FIG. 2 illustrates first auxiliary slider 2314a extended along the lengthwise direction of vehicle main body 2301 so as to move away from vehicle main body 2301, in a direction away from the side on which first slider 2311, second slider 2312, and third slider 2313 are provided. More specifically, first auxiliary slider 2314a is coupled on the other side of vehicle main body 2301, and can extend from the other side of vehicle main body 2301 along the lengthwise direction of vehicle main body 2301 so as to move away from vehicle main body 2301, and can be inserted into vehicle opening 2301c on the other side of vehicle main body 2301. Stated differently, first auxiliary slider 2314a, vehicle main body 2301, first slider 2311, second slider 2312, and third slider 2313 are aligned in this order. Note that in the present embodiment, one slider is provided on the other side of vehicle main body 2301, but two or more sliders may be provided.

Package holder 2315 is provided at the leading end of slider portion 2310. In the present embodiment, package holder 2315 is provided at the leading end of third slider 2313 (the end of third slider 2313 on the side opposite the vehicle main body 2301 side).

Package holder 2315 is located at one end (the leading end on the one side) of slider portion 2310 and can hold an attached package. Note that package holder 2315 is exemplified as located at the leading end of third slider 2313, but there may be two or less or four or more sliders. In such cases, package holder 2315 is provided at the leading end of the slider farthest from vehicle main body 2301 when all sliders are extended.

Counterweight 2316 is a weighted body with a predetermined weight that is provided at the other end (the leading end on the other side) of slider portion 2310. This allows vehicle main body 2301 to work to increase the moment M of the lifting of the package, using the connector corresponding to centerline O and connected to rail 7 as a fulcrum. In the present embodiment, counterweight 2316 is provided at the leading end of first auxiliary slider 2314a (the end of first auxiliary slider 2314a on the side opposite the vehicle main body 2301 side). Counterweight 2316 is, for example, a battery that provides power to motor actuator 2317, control processor 2318, etc., for moving package transport device 10p. Counterweight 2316 may be the same weight as the weight of the package, or it may be a different weight.

When package transport device 10p arrives at rail 7 located in front of the receiver, control processor 2318 drives the motor that rotates turntable 2319 so as to rotate turntable 2319 and thus rotate vehicle main body 2301. Here, control processor 2318 controls the motor so as to rotate turntable 2319 to cause the one side of vehicle main body 2301 (the side of vehicle main body 2301 on which package holder 2315 is provided) to face the receiver. With this, vehicle main body 2301 assumes an attitude in which the lengthwise direction of vehicle main body 2301 intersects the lengthwise direction of rail 7.

After turntable 2319 rotates vehicle main body 2301, control processor 2318 controls motor actuator 2317 to extend each of the sliders with respect to vehicle main body 2301. More specifically, control processor 2318 controls motor actuator 2317 to extend first slider 2311, second slider 2312, and third slider 2313 from vehicle opening 2301c on the one side of the vehicle main body 2301 and concurrently extend first auxiliary slider 2314a from vehicle opening 2301c on the other side of vehicle main body 2301. Thus, slider portion 2310 is extended with respect to vehicle main body 2301 after turntable 2319 rotates vehicle main body 2301 with respect to third connector 2323 and rail 7.

Control processor 2318 may control the rotation rate of the plurality of propellers and side propeller 22a1, etc., so that the lengthwise direction of vehicle main body 2301 is approximately parallel to the horizontal direction, by controlling motor actuator 2317 so as to adjust the amount (length) of extension of the sliders and/or controlling the propeller actuation motor and third propeller actuation motor 22a3, etc., such that the attitude of vehicle main body 2301 is balanced between the package side and the counterweight 2316 side. In this way, slider portion 2310 extends so as to maintain balance between the weight of the package and the weight of counterweight 2316. Stated differently, first auxiliary slider 2314a can extend so as to maintain balance between the weight of the package and the buoyancy of side propeller 22a1.

With this, package holder 2315 is positioned in the airspace on the receiver side relative to vehicle main body 2301 and rail 7, and counterweight 2316 is positioned on the side opposite the receiver side relative to vehicle main body 2301 and rail 7. This allows vehicle main body 2301 to maintain its attitude while positioning the package attached to package holder 2315 in the airspace above the delivery destination point, such as a delivery box at the receiver.

After turntable 2319 rotates vehicle main body 2301, motor actuator 2317 extends each of the sliders with respect to vehicle main body 2301. More specifically, in response to a control instruction from control processor 2318, motor actuator 2317 extends first slider 2311, second slider 2312, and third slider 2313 along the lengthwise direction of vehicle main body 2301 so as to move away from vehicle main body 2301, and concurrently extends first auxiliary slider 2314a along the lengthwise direction of vehicle main body 2301.

The connector is held by (connected to) rail 7 located above vehicle main body 2301. More specifically, the connector can be connected to rail 7 located at a position spaced apart from the ground surface with vehicle main body 2301 hanging from the connector. In the present embodiment, vehicle main body 2301 is provided with a plurality of connectors. The plurality of connectors include first connector 2321, second connector 2322, and third connector 2323. In the present embodiment, three connectors-namely first connector 2321, second connector 2322, and third connector 2323—are provided as the plurality of connectors. However, the plurality of connectors may include two or four or more.

First connector 2321 is located on one side in the lengthwise direction of frame 2302. Second connector 2322 is located on the other side in the lengthwise direction of frame 2302. Third connector 2323 is located in the central region of frame 2302 between the one side and the other side in the lengthwise direction of frame 2302. Each connector is provided with a wheel. A connector is one example of the rail holder. First connector 2321 is one example of the first rail holder. Second connector 2322 is one example of the second rail holder. Third connector 2323 is one example of the third rail holder.

Turntable 2319 is provided on the upper surface of vehicle main body 2301, between vehicle main body 2301 and third connector 2323. Third connector 2323 is coupled to turntable 2319. In response to a control instruction from control processor 2318, turntable 2319 applies stress to rotate vehicle main body 2301. Accordingly, when third connector 2323 is connected to rail 7, turntable 2319 can rotate vehicle main body 2301 around center point O. With this, turntable 2319 rotates vehicle main body 2301 until the lengthwise direction of frame 2302 approximately perpendicularly intersects the extending direction of rail 7.

Side propeller 22a1 is provided on the other side of vehicle main body 2301 (the side opposite the side in the traveling direction). Side propeller 22a1 provides propulsion force to vehicle main body 2301 in a direction parallel to rail 7. More specifically, side propeller 22a1 provides propulsion force to vehicle main body 2301 by being rotated by third propeller actuation motor 22a3 attached to propeller support portion 22a9 provided on the other side of first auxiliary slider 2314a. Stated differently, third propeller actuation motor 22a3 controls the rotation rate of side propeller 22a1 in response to a control instruction from control processor 2318. Side propeller 22a1 is one example of the propulsion blade.

Note that propeller support portion 22a9 may be provided on the other side of vehicle main body 2301, as illustrated in FIG. 3. FIG. 3 illustrates an example of another package transport device 10p delivering a package according to Embodiment 1.

Side propeller 22a1 can change its attitude with respect to vehicle main body 2301 together with third propeller actuation motor 22a3 by control processor 2318 controlling the attitude of propeller support portion 22a9. Stated differently, side propeller 22a1 can provide propulsion force to vehicle main body 2301 in the vertical direction and provide propulsion force to vehicle main body 2301 in a direction intersecting the lengthwise direction, by being rotated by third propeller actuation motor 22a3. The attitude of propeller support portion 22a9 can be changed by control processor 2318 controlling a motor capable of changing the attitude of propeller support portion 22a9.

When package transport device 10p includes a propeller actuation motor and a plurality of propellers, the plurality of propellers are provided on the upper surface of vehicle main body 2301. The plurality of propellers correspond one to one to the plurality of propellers actuation motors, and by rotationally driving the propeller actuation motors, the plurality of propellers rotate around the relative axes of rotation of the propeller actuation motors to provide vehicle main body 2301 with thrust and buoyancy.

When package transport device 10p arrives at the portion of rail 7 in front of the receiver, it is positioned at approximately five meters or more above the ground surface, including the package. Assuming the load weight of the package is approximately 5 to 10 kg and the weight of counterweight 2316 is approximately 5 to 15 kg, first slider 2311, second slider 2312, third slider 2313, and first auxiliary slider 2314a can be extended as follows. For example, since there is approximately 2.5 meters from center point O of vehicle main body 2301 to the leading end of first slider 2311, approximately 3.5 meters from center point O of vehicle main body 2301 to the leading end of second slider 2312, and approximately 4.5 meters from center point O of vehicle main body 2301 to the leading end of third slider 2313, the package can be delivered reliably even if the receiver is distanced from rail 7. Since there is approximately 1.8 meters to 3.5 meters from center point O of vehicle main body 2301 to the leading end of first auxiliary slider 2314a, the attitude of vehicle main body 2301 can be maintained. Stated differently, by extending first slider 2311, second slider 2312, and third slider 2313 with respect to vehicle main body 2301 and extending first auxiliary slider 2314a with respect to vehicle main body 2301, it is possible to position the package attached to package holder 2315 in the airspace above the delivery box at the receiver while maintaining the attitude of vehicle main body 2301.

Note that one or more sliders are extended depending on the distance from rail 7 to the location where the package is to be placed at the receiver. Accordingly, not all sliders are necessarily extended as is illustrated in FIG. 2. The illustration in FIG. 2 is merely one example. The same applies to the other figures. The length of the sliders, the weight of the counterweight, and the weight of the package are non-limiting examples.

### [Variation 1]

In the present variation, an example in which package transport device 10p includes four sliders will be given with reference to FIG. 4. FIG. 4 illustrates an example of another package transport device 10p delivering a package. The present variation differs from Embodiment 1 in that package transport device 10p includes second auxiliary slider 2314b in place of third slider 2313.

The sliders of package transport device 10p include first slider 2311, second slider 2312, first auxiliary slider 2314a, and second auxiliary slider 2314b.

First slider 2311 and second slider 2312 are arranged on one side of vehicle main body 2301 and extend from the one side of vehicle main body 2301 further along the lengthwise direction of vehicle main body 2301. More specifically, first slider 2311 is coupled on the one side of vehicle main body 2301, and can extend from the one side of vehicle main body 2301 along the lengthwise direction of vehicle main body 2301 so as to move away from vehicle main body 2301, and can be inserted into vehicle opening 2301c on the one side of vehicle main body 2301. Second slider 2312 is coupled to first slider 2311 and can extend from the one side of first slider 2311 along the lengthwise direction of vehicle main body 2301 so as to move away from vehicle main body 2301, and can be inserted into first opening 2311c of first slider 2311.

First auxiliary slider 2314a and second auxiliary slider 2314b are located on the other side of vehicle main body 2301 and extend from the other side of vehicle main body 2301 further along the lengthwise direction of vehicle main body 2301. FIG. 4 illustrates first auxiliary slider 2314a and second auxiliary slider 2314b extended along the lengthwise direction of vehicle main body 2301 so as to move away from vehicle main body 2301, in a direction away from the side on which first slider 2311 and second slider 2312 are provided. More specifically, first auxiliary slider 2314a is coupled on the other side of vehicle main body 2301, and can extend from the other side of vehicle main body 2301 along the lengthwise direction of vehicle main body 2301 so as to move away from vehicle main body 2301, and can be inserted into vehicle opening 2301c on the other side of vehicle main body 2301. Second auxiliary slider 2314b is coupled to first auxiliary slider 2314a and can extend from the other side of first auxiliary slider 2314a along the lengthwise direction of vehicle main body 2301 so as to move away from vehicle main body 2301, and can be inserted into first opening 2314a1 of first auxiliary slider 2314a.

When package transport device 10p arrives at the portion of rail 7 in front of the receiver, it is positioned at five meters or more above the ground surface, including the package. For example, assuming the length of vehicle main body 2301 is approximately 1.5 meters, since there is approximately 2.5 meters from centerline O of vehicle main body 2301 to the leading end of first slider 2311, and approximately 3.5 meters from centerline O of vehicle main body 2301 to the leading end of second slider 2312, the package can be delivered reliably even if the receiver is distanced from rail 7. The present variation illustrates the delivery of a package to the balcony of a facility. Since there is approximately 1.8 meters from centerline O of vehicle main body 2301 to the leading end of first auxiliary slider 2314a and approximately 2.5 meters from centerline O of vehicle main body 2301 to the leading end of second auxiliary slider 2314b, the attitude of vehicle main body 2301 can be maintained. Stated differently, by extending first slider 2311 and second slider 2312 with respect to vehicle main body 2301 and extending first auxiliary slider 2314a and second auxiliary slider 2314b with respect to vehicle main body 2301, it is possible to position the package attached to package holder 2315 in the airspace above the delivery box at the receiver while maintaining the attitude of vehicle main body 2301.

### [Variation 2]

In the present variation, an example in which package transport device 10p includes six sliders will be given with reference to FIG.5. FIG. 5 illustrates an example of yet another package transport device 10p delivering a package. The present variation differs from Embodiment 1 in that package transport device 10p further includes second auxiliary slider 2314b and third auxiliary slider 2314c.

The sliders of package transport device 10p include first slider 2311, second slider 2312, third slider 2313, first auxiliary slider 2314a, second auxiliary slider 2314b, and third auxiliary slider 2314c.

First slider 2311, second slider 2312, and third slider 2313 are arranged on one side of vehicle main body 2301 and extend from the one side of vehicle main body 2301 further along the lengthwise direction of vehicle main body 2301. More specifically, first slider 2311 is coupled on the one side of vehicle main body 2301, and can extend from the one side of vehicle main body 2301 along the lengthwise direction of vehicle main body 2301 so as to move away from vehicle main body 2301, and can be inserted into vehicle opening 2301c on the one side of vehicle main body 2301. Second slider 2312 is coupled to first slider 2311 and can extend from the one side of first slider 2311 along the lengthwise direction of vehicle main body 2301 so as to move away from vehicle main body 2301, and can be inserted into first opening 2311c of first slider 2311. Third slider 2313 is coupled to second slider 2312 and can extend from the one side of second slider 2312 along the lengthwise direction of vehicle main body 2301 so as to move away from vehicle main body 2301, and can be inserted into second opening 2312c of second slider 2312.

First auxiliary slider 2314a, second auxiliary slider 2314b, and third auxiliary slider 2314c are disposed on the other side of vehicle main body 2301, and extend further along the lengthwise direction of vehicle main body 2301 from the other side of vehicle main body 2301. FIG. 5 illustrates first auxiliary slider 2314a, second auxiliary slider 2314b, and third auxiliary slider 2314c extended along the lengthwise direction of vehicle main body 2301 so as to move away from vehicle main body 2301, in a direction away from the side on which first slider 2311, second slider 2312, and third slider 2313 are provided. More specifically, first auxiliary slider 2314a is coupled on the other side of vehicle main body 2301, and can extend from the other side of vehicle main body 2301 along the lengthwise direction of vehicle main body 2301 so as to move away from vehicle main body 2301, and can be inserted into vehicle opening 2301c on the other side of vehicle main body 2301. Second auxiliary slider 2314b is coupled to first auxiliary slider 2314a and can extend from the other side of first auxiliary slider 2314a along the lengthwise direction of vehicle main body 2301 so as to move away from vehicle main body 2301, and can be inserted into first opening 2314a1 of first auxiliary slider 2314a. Third auxiliary slider 2314c is coupled to second auxiliary slider 2314b, and can extend from the other side of second auxiliary slider 2314b along the lengthwise direction of vehicle main body 2301 so as to move away from vehicle main body 2301, and can be inserted into second opening 2314b1 of second auxiliary slider 2314b.

When package transport device 10p arrives at the portion of rail 7 in front of the receiver, it is positioned at five meters or more above the ground surface, including the package. For example, assuming the length of vehicle main body 2301 is 1.5 meters, since there is approximately 2.5 meters from center point O of vehicle main body 2301 to the leading end of first slider 2311, approximately 3.5 meters from center point O of vehicle main body 2301 to the leading end of second slider 2312, and approximately 4.5 meters from center point O of vehicle main body 2301 to the leading end of third slider 2313, the package can be delivered reliably even if the receiver is distanced from rail 7. The present variation illustrates the delivery of a package to a facility such as an office building. Since there is approximately 1.8 meters from center point O of vehicle main body 2301 to the leading end of first auxiliary slider 2314a, approximately 2.5 meters from center point O of vehicle main body 2301 to the leading end of second auxiliary slider 2314b, and approximately 3.5 meters from center point O of vehicle main body 2301 to the leading end of third auxiliary slider 2314c, the attitude of vehicle main body 2301 can be maintained. Stated differently, by extending first slider 2311, second slider 2312, and third slider 2313 with respect to vehicle main body 2301 and extending first auxiliary slider 2314a, second auxiliary slider 2314b, and third auxiliary slider 2314c with respect to vehicle main body 2301, it is possible to position the package attached to package holder 2315 at a predetermined height while maintaining the attitude of vehicle main body 2301.

The facility of the present variation includes a package claim room. The package claim room has an entrance at a position corresponding to the height of rail 7 from the ground surface. More specifically, the entrance is of a size and position that allows package transport device 10p connected to rail 7 to insert a package by extending the plurality of sliders. Accordingly, package transport device 10p can insert a package through the entrance by extending the plurality of sliders. A belt conveyor is located below the entrance, and package transport device 10p can release the package inserted through the entrance onto the belt conveyor, and the belt conveyor can transport, to a predetermined position, the package delivered to a predetermined position.

Although the present variation gives an example in which the package claim room and the entrance are located on the second floor, this is merely one, non-limiting example. The package claim room and the entrance may be provided at an appropriate location according to, for example, the height of rail 7 and the maximum length of the plurality of sliders when extended.

### Operation Example

Next, operation performed when package transport device 10p arrives at the portion of rail 7 in front of the receiver will be described with reference to FIG. 6 and FIG. 7. FIG. 6 is a flowchart illustrating an example of an operation of package transport device 10p according to Embodiment 1. FIG. 7 illustrates an example of an operation of package transport device 10p according to Embodiment 1.

In the operation example, the plurality of sliders of package transport device 10p include first slider 2311, second slider 2312, third slider 2313, first auxiliary slider 2314a, and second auxiliary slider 2314b.

First, as illustrated in FIG. 6, control processor 2318 determines whether it has arrived in front of the receiver or not (S2321). For example, control processor 2318 can determine whether it has arrived at the receiver or not by comparing the current position obtained from the GPS sensor with the position of the receiver obtained from the management server, and determining whether or not they match.

If the current position and destination point do not match (NO in S2321), control processor 2318 returns the process to step S2321.

As illustrated in FIG. 6 and (a) and (b) in FIG. 7, if the current position and destination point match (YES in S2321), control processor 2318 determines that it has arrived in front of the receiver, and actuates a motor to rotate turntable 2319 and rotate vehicle main body 2301 (S2322). Here, control processor 2318 actuates a motor to rotate turntable 2319 and rotate vehicle main body 2301 so as to face the package toward the facility of the receiver. In the present embodiment, turntable 2319 rotates vehicle main body 2301 90°.

Control processor 2318 controls the actuator of, e.g., a motor to move the package in front of vehicle main body 2301 (S2323). Control processor 2318 also controls the actuator of, e.g., a motor to move an auxiliary package behind vehicle main body 2301. This maintains package transport device 10p in a predetermined attitude.

As illustrated in FIG. 6 and (c) and (d) in FIG. 7, control processor 2318 controls motor actuator 2317 to extend first slider 2311 from vehicle opening 2301c on the one side of vehicle main body 2301 and extend first auxiliary slider 2314a from vehicle opening 2301c on the other side of vehicle main body 2301 (S2324). In the present embodiment, first slider 2311 and first auxiliary slider 2314a are extended simultaneously.

As illustrated in FIG. 6 and (d) in FIG. 7, after first slider 2311 is extended, control processor 2318 determines whether the package is in a deliverable position (i.e., is at the delivery destination point) (S2325).

If control processor 2318 determines the package is in a deliverable position (YES in S2325), control processor 2318 controls the wire control module to reel out the wire and lower the package, and unload the package at the delivery destination point (S2330). Stated differently, package holder 2315 controls control processor 2318 to place the package at the destination point and release the package. This delivers the package to the receiver.

Turntable 2319 of package transport device 10p is provided with first hook 2323a and second hook 2323b, which includes a wheel, of third connector 2323. A portion of first hook 2323a of third connector 2323 is provided above rail 7, and the wheel of second hook 2323b is provided below rail 7. By rotating the wheel and moving vehicle main body 2301 along rail 7, fine adjustments can be made when unloading the package in step S2330 at the destination position. It is also possible to inhibit displacement of vehicle main body 2301 by third connector 2323 and second hook 2323b clamping rail 7 to keep vehicle main body 2301 from moving. It is also possible for control processor 2318 to adjust the attitude of the sliders by controlling the motor that rotates turntable 2319. Furthermore, control processor 2318 controls a motor capable of changing the attitude of propeller support portion 22a9 to change the attitude of side propeller 22a1 via propeller support portion 22a9 so that the plane of rotation of side propeller 22a1 is approximately parallel to the horizontal plane. This allows control processor 2318 to provide vertical propulsion force to vehicle main body 2301 so as to maintain the attitude of vehicle main body 2301. With this, since misalignment of the package with respect to the destination point is inhibited, package transport device 10p can deliver the package to the destination point while maintaining the attitude of vehicle main body 2301.

There is concern that the attitude of package transport device 10p cannot be maintained approximately horizontal because releasing the package reduces the weight on the package holder 2315 side of package transport device 10p, and the lengthwise direction of vehicle main body 2301 tilts with respect to approximately the horizontal direction, and. Control processor 2318 therefore controls motor actuator 2317 to gradually store the extended auxiliary sliders into vehicle opening 2301c on the other side of vehicle main body 2301 (S2331). With this, the attitude of vehicle main body 2301 is maintained so that the lengthwise direction of vehicle main body 2301 is approximately parallel to approximately the horizontal direction. Package transport device 10p then ends the operation illustrated in FIG. 6. Here, "auxiliary sliders" is a comprehensive term that includes first auxiliary slider 2314a and second auxiliary slider 2314b and the like.

As illustrated in FIG. 6 and (e) in FIG. 7, when control processor 2318 determines the package is not in a position at which the package can be delivered to the delivery destination point (NO in S2325), control processor 2318 controls motor actuator 2317 so as to extend second slider 2312 from first opening 2311c on the one side of first slider 2311 and further extend first auxiliary slider 2314a from vehicle opening 2301c on the other side of vehicle main body 2301 (S2326). In the present embodiment, second slider 2312 and first auxiliary slider 2314a are extended simultaneously.

After controlling motor actuator 2317 to extend second slider 2312 and first auxiliary slider 2314a, control processor 2318 determines whether the package is in a position at which the package can be delivered to the delivery destination point (S2327).

If control processor 2318 determines that the package is in a position at which the package can be delivered to the delivery destination point (YES in S2327), processing proceeds to step S2330. Package transport device 10p then ends the operation illustrated in FIG. 6.

As illustrated in FIG. 6 and (f) in FIG. 7, if control processor 2318 determines that the package is not in a position at which the package can be delivered to the delivery destination point (NO in S2327), control processor 2318 controls motor actuator 2317 to extend third slider 2313 from second opening 2312c on the one side of second slider 2312 and extend second auxiliary slider 2314b from first opening 2314a1 on the other side of first auxiliary slider 2314a (S2328). In the present embodiment, third slider 2313 and second auxiliary slider 2314b are extended simultaneously.

After controlling motor actuator 2317 to extend third slider 2313 and second auxiliary slider 2314b, control processor 2318 determines whether the package is in a position at which the package can be delivered to the delivery destination point (S2329).

If control processor 2318 determines that the package is in a position at which the package can be delivered to the delivery destination point (YES in S2329), processing proceeds to step S2330. Package transport device 10p then ends the operation illustrated in FIG. 6.

If control processor 2318 determines that the package is not in a position at which the package can be delivered to the delivery destination point (NO in S2329), control processor 2318 ends the processing. For example, since the package cannot be delivered, control processor 2318 controls motor actuator 2317 to retract the extended sliders. Then, since control processor 2318 has determined that the package cannot be delivered, package transport device 10p may return to the sender.

### [Embodiment 2]

### Configu ration

Hereinafter, since the basic configuration of package transport device 10p according to the present embodiment is the same as the basic configuration of the unmanned aerial vehicle of Embodiment 1 and the same as the basic configuration of package transport device 10p according to Embodiment 1 and the like, regarding the basic configuration of package transport device 10p in the present embodiment, the same reference signs as above will be used and repeated description will be omitted where appropriate. Package transport device 10p according to the present embodiment differs from Embodiment 1 in that it includes first vehicle main body 2301a and second vehicle main body 2301b. The present embodiment may also be used with unmanned aerial vehicles according to embodiments other than Embodiment 1.

FIG. 8 illustrates an example of an operation of package transport device 10p according to Embodiment 2.

As illustrated in FIG. 8, package transport device 10p includes first vehicle main body 2301a and second vehicle main body 2301b that can rotate with respect to first vehicle main body 2301a.

First vehicle main body 2301a is provided on the upper surface of second vehicle main body 2301b, between second vehicle main body 2301b and rail 7. First vehicle main body 2301a and second vehicle main body 2301b are separate vehicle main bodies 2301.

First vehicle main body 2301a includes first frame 2302a that is rectangular in plan view. First frame 2302a is, for example, a rectangular frame-shaped body. First vehicle main body 2301a is provided with a plurality of connectors, turntable 2319, etc. The plurality of connectors, turntable 2319, etc., are provided on the top of first vehicle main body 2301a. More specifically, first connector 2321, second connector 2322, and third connector 2323 are coupled on the upper surface of vehicle main body 2301a. First vehicle main body 2301a may have the same configuration as vehicle main body 2301 described above. First vehicle main body 2301a is one example of the main body. First frame 2302a is one example of the frame.

Second vehicle main body 2301b includes second frame 2302b that is rectangular in plan view. Second frame 2302b is, for example, a rectangular frame-shaped body. Second frame 2302b is longer than first frame 2302a. Second vehicle main body 2301b is provided with a plurality of connectors on its upper surface, as well as first vehicle main body 2301a, package holder 2315, etc., on its upper surface. More specifically, fourth connector 2324 and fifth connector 2325 are coupled on the upper surface of second vehicle main body 2301b. Second vehicle main body 2301b may have the same configuration as vehicle main body 2301 described above. Second vehicle main body 2301b may be one example of the main body. Second frame 2302b is one example of the frame.

Second vehicle main body 2301b applies stress for rotating second vehicle main body 2301b with respect to first vehicle main body 2301a in response to a control instruction from control processor 2318. Accordingly, when first connector 2321, second connector 2322, and third connector 2323 are connected to rail 7, second vehicle main body 2301b can be rotated with respect to first vehicle main body 2301a around the center point of turntable 2319 by control processor 2318 controlling a motor. In this way, second vehicle main body 2301b rotates until the lengthwise direction of first vehicle main body 2301a approximately perpendicularly intersects the extending direction of rail 7. Second vehicle main body 2301b may have the same configuration as the vehicle main body described above.

Note that propeller support portion 22a9 may be provided on the other side of second vehicle main body 2301b and, alternatively, may be provided on an auxiliary slider.

Second vehicle main body 2301b is provided with slider portion 2310. Stated differently, slider portion 2310 is extendable with respect to second vehicle main body 2301b.

Note that slider portion 2310 may be included in first vehicle main body 2301a. In such cases, first vehicle main body 2301a may be configured to rotate with respect to second vehicle main body 2301b.

Package transport device 10p includes a motor for rotating first connector 2321, second connector 2322, third connector 2323, fourth connector 2324, and fifth connector 2325. Control processor 2318 controls the motor to rotate the rail holder so as to release the hold of the rail holder by rail 7 so as to avoid contact between the rail support portion that supports rail 7 and the rail holder when package transport device 10p is traveling on rail 7.

### Operation Example 1

Next, an operation performed when package transport device 10p arrives at the portion of rail 7 in front of the receiver will be described. In the operation example, the plurality of sliders of package transport device 10p include first slider 2311, second slider 2312, third slider 2313, first auxiliary slider 2314a, and second auxiliary slider 2314b. Since the operation example is the same as the example in the flowchart of FIG. 6, the same reference signs are used and repeated description will be omitted where appropriate.

First, as illustrated in FIG. 6, control processor 2318 determines whether it has arrived in front of the receiver or not (S2321).

If the current position and destination point do not match (NO in S2321), control processor 2318 returns the process to step S2321.

As illustrated in FIG. 6 and (a) and (b) in FIG. 8, if the current position and destination point match (YES in S2321), control processor 2318 determines that it has arrived in front of the receiver, and actuates a motor to rotate second vehicle main body 2301b with respect to first vehicle main body 2301a (S2322). Here, control processor 2318 actuates a motor to rotate second vehicle main body 2301b with respect to first vehicle main body 2301a so as to face the package toward the facility of the receiver. In the present embodiment, second vehicle main body 2301b is rotated 90° with respect to first vehicle main body 2301a. With this, the lengthwise direction of second vehicle main body 2301b is orthogonal to the lengthwise direction of first vehicle main body 2301a.

Control processor 2318 controls the actuator of, e.g., a motor to move the package in front of second vehicle main body 2301b (S2323). Control processor 2318 also controls the actuator of, e.g., a motor to move an auxiliary package behind vehicle main body 2301. This maintains package transport device 10p in a predetermined attitude.

As illustrated in FIG. 6 and (c) in FIG. 8, control processor 2318 controls motor actuator 2317 to extend first slider 2311 from vehicle opening 2301c on the one side of second vehicle main body 2301b and extend first auxiliary slider 2314a from vehicle opening 2301c on the other side of second vehicle main body 2301b (S2324). In the present embodiment, first slider 2311 and first auxiliary slider 2314a are extended simultaneously.

After extending first slider 2311, control processor 2318 determines whether the package is in a position at which the package can be delivered to the delivery destination point (S2325).

If control processor 2318 determines the package is in a position at which the package can be delivered to the delivery destination point (YES in S2325), control processor 2318 controls the wire control module to reel out the wire and lower the package, and unload the package at the delivery destination point (S2330). Stated differently, package holder 2315 controls control processor 2318 to place the package at the destination point and release the package. This delivers the package to the receiver.

To maintain the attitude of second vehicle main body 2301b, control processor 2318 controls motor actuator 2317 to gradually store the extended auxiliary sliders into vehicle opening 2301c on the other side of second vehicle main body 2301b (S2331). With this, the attitude of vehicle main body 2301 is maintained so that the lengthwise direction of second vehicle main body 2301b is approximately parallel to approximately the horizontal direction. Package transport device 10p then ends the operation illustrated in FIG. 6.

As illustrated in FIG. 6 and (c) and (d) in FIG. 8, when control processor 2318 determines the package is not in a position at which the package can be delivered to the delivery destination point (NO in S2325), control processor 2318 controls motor actuator 2317 so as to extend second slider 2312 from first opening 2311c on the one side of first slider 2311 and further extend first auxiliary slider 2314a from vehicle opening 2301c on the other side of second vehicle main body 2301b (S2326).

As illustrated in FIG. 6 and (d) in FIG. 8, after controlling motor actuator 2317 to extend second slider 2312 and first auxiliary slider 2314a, control processor 2318 determines whether the package is in a position at which the package can be delivered to the delivery destination point (S2327). After the performing processes of steps S2327 to S2331, package transport device 10p then ends the operation illustrated in FIG. 6.

### Operation Example 2

Next, an operation performed when package transport device 10p is turning right in a case in which first rail 7a and second rail 7b intersect will be described with reference to, for example, FIG. 9A. FIG. 9A illustrates an example of an operation of package transport device 10p according to Embodiment 2 when transferring connection from first rail 7a to second rail 7b. Here, first rail 7a and second rail 7b are included in rail 7. This operation example illustrates a case in which first vehicle main body 2301a and second vehicle main body 2301b and the like rotate clockwise.

Each of first connector 2321, second connector 2322, fourth connector 2324, and fifth connector 2325 used in this operation example is a connector like that illustrated in FIG. 9B. FIG. 9B illustrates an example of a connector according to Embodiment 2. First connector 2321 and fifth connector 2325 are bilaterally symmetric with second connector 2322 and fourth connector 2324. As illustrated in (a) in FIG. 10B, first connector 2321 and fifth connector 2325 are disposed (coupled) on the right side in a view of package transport device 10p from the traveling direction, and as illustrated in (b) in FIG. 9B, second connector 2322 and fourth connector 2324 are disposed (coupled) on the left side in a view of package transport device 10p from the traveling direction. The connectors illustrated in FIG. 9B are provided with hook 2326 connected to rail 7, roller 2327m that is provided on the inner peripheral surface side (the side opposing rail 7) of hook 2326 and rotatably contacts rail 7, and motor 2328 that rotates roller 2327m. Note that these connectors need not include motor 2328; motor 2328 is not an essential element of these connectors. Hook 2326 can connect to (hook onto) rail 7. Roller 2327m is a wheel for rotatably contacting rail 7 and is rotatably provided on hook 2326. More specifically, when hook 2326 is connected to rail 7, roller 2327m is axially supported by axle support 2327s, which is the rotary shaft of motor 2328 provided to hook 2326, and rotates around axle support 2327s as an axis. Motor 2328 is actuated by control processor 2318, and rotates roller 2327m by rotating axle support 2327s. Roller 2327m is one example of a wheel.

Control processor 2318 rotates side propeller 22a1 to cause package transport device 10p to travel along first rail 7a. As illustrated in (a) and (b) in FIG. 9A and in FIG. 9B, when fourth connector 2324 approaches second rail 7b, after pivoting hook 2326 of fourth connector 2324 to open fourth connector 2324, once fourth connector 2324 passes vertically under second rail 7b, control processor 2318 pivots hook 2326 of fourth connector 2324 to close fourth connector 2324.

When package transport device 10p travels a little further and first connector 2321 approaches second rail 7b, after pivoting hook 2326 of first connector 2321 to open first connector 2321, once first connector 2321 passes vertically under second rail 7b, control processor 2318 pivots hook 2326 of first connector 2321 to close first connector 2321.

When package transport device 10p travels a little further and third connector 2323 approaches second rail 7b, control processor 2318 stops the traveling of package transport device 10p by stopping rotation of side propeller 22a1. As illustrated in (c) in FIG. 9A and in FIG. 9B, control processor 2318 pivots hooks 2326 of first connector 2321 and second connector 2322 to open first connector 2321 and second connector 2322. This releases the connection of first connector 2321 and second connector 2322 from first rail 7a, whereby first connector 2321 and second connector 2322 are disposed vertically below first rail 7a and second rail 7b so as not to contact first rail 7a and second rail 7b.

Control processor 2318 rotates first vehicle main body 2301a with respect to second vehicle main body 2301b. With this, the lengthwise direction of first vehicle main body 2301a intersects the lengthwise direction of second vehicle main body 2301b. In the present embodiment, control processor 2318 rotates first vehicle main body 2301a 90° clockwise.

When first vehicle main body 2301a is arranged vertically below second rail 7b, control processor 2318 pivots hook 2326 of first connector 2321 to close first connector 2321 and pivots hook 2326 of second connector 2322 to close second connector 2322. With this, control processor 2318 can connect first connector 2321 and second connector 2322 to second rail 7b.

Next, as illustrated in (d) in FIG. 9A and in FIG. 9B, control processor 2318 pivots hooks 2326 of fourth connector 2324 and fifth connector 2325 to open fourth connector 2324 and fifth connector 2325. This releases the connection of fourth connector 2324 and fifth connector 2325 from first rail 7a, whereby fourth connector 2324 and fifth connector 2325 are disposed vertically below first rail 7a and second rail 7b so as not to contact first rail 7a and second rail 7b.

Control processor 2318 rotates second vehicle main body 2301b with respect to first vehicle main body 2301a. With this, the lengthwise direction of first vehicle main body 2301a is approximately parallel to the lengthwise direction of second vehicle main body 2301b. In the present embodiment, control processor 2318 rotates second vehicle main body 2301b 90° clockwise.

When second vehicle main body 2301b is arranged vertically below second rail 7b, control processor 2318 pivots hook 2326 of fourth connector 2324 to close fourth connector 2324 and pivots hook 2326 of fifth connector 2325 to close fifth connector 2325. With this, control processor 2318 can connect fourth connector 2324 and fifth connector 2325 to second rail 7b.

FIG. 9C illustrates an example of another operation of package transport device 10p according to Embodiment 2 when traveling after transferring connection from first rail 7a to second rail 7b. As illustrated in FIG. 9C and FIG. 9B, control processor 2318 pivots hook 2326 of third connector 2323 to open third connector 2323. Third connector 2323 is disconnected from first rail 7a and is positioned vertically below first rail 7a and second rail 7b so that third connector 2323 does not come into contact with first rail 7a or second rail 7b. Control processor 2318 rotates open third connector 2323 around the center point of turntable 2319 by rotating turntable 2319. More specifically, control processor 2318 rotates third connector 2323 around the center point of turntable 2319 so that the planes of the openings of hooks 2326 of third connector 2323 intersect second rail 7b. This rotates third connector 2323 clockwise by the rotation of turntable 2319 and moves third connector 2323 vertically below second rail 7b. After traveling forward a little further by rotating side propeller 22a1, control processor 2318 controls third propeller actuation motor 22a3 to stop rotation of side propeller 22a1. Control processor 2318 pivots hook 2326 of third connector 2323 to close third connector 2323. Third connector 2323 connects to second rail 7b by third connector 2323 closing.

In this way, the planes of the openings of hooks 2326 of first connector 2321, second connector 2322, third connector 2323, fourth connector 2324, and fifth connector 2325 are aligned so as to oppose (approximately parallel to) one another, and all attitudes are restored. In other words, first connector 2321, second connector 2322, third connector 2323, fourth connector 2324, and fifth connector 2325 are connected to second rail 7b.

Package transport device 10p travels and when second connector 2322 approaches first rail 7a, second connector 2322 is opened, and after second connector 2322 has passed the intersection of first rail 7a and second rail 7b, second connector 2322 is closed so as to connect second connector 2322 to first rail 7a. Package transport device 10p travels and when fifth connector 2325 approaches first rail 7a, fifth connector 2325 is opened, and after fifth connector 2325 has passed the intersection of first rail 7a and second rail 7b, fifth connector 2325 is closed so as to connect fifth connector 2325 to first rail 7a. With this, package transport device 10p can transfer connection from first rail 7a to second rail 7b.

### Operation Example 3

Next, an operation performed when package transport device 10p is turning left in a case in which first rail 7a and second rail 7b intersect will be described with reference to, for example, FIG. 10A and FIG. 10B. FIG. 10A illustrates an example of another operation of the package transport device according to Embodiment 2 when transferring connection from the first rail to the second rail. FIG. 10B illustrates an example of another operation of the package transport device according to Embodiment 2 when traveling after transferring connection from the first rail to the second rail.

This operation example is an example of a case in which first vehicle main body 2301a rotates after second vehicle main body 2301b rotates counterclockwise, and information that is the same as in Operation Example 2 uses the same reference signs and repeated description will be omitted where appropriate. Note that each of first connector 2321, second connector 2322, fourth connector 2324, and fifth connector 2325 used in this operation example is also a connector like that used in Operation Example 2.

Control processor 2318 rotates side propeller 22a1 to cause package transport device 10p to travel along first rail 7a. As illustrated in (a) and (b) in FIG. 10A, when fourth connector 2324 approaches second rail 7b, after pivoting the hook of fourth connector 2324 to open fourth connector 2324, once fourth connector 2324 passes vertically under second rail 7b, control processor 2318 pivots the hook of fourth connector 2324 to close fourth connector 2324.

When package transport device 10p travels a little further and first connector 2321 approaches second rail 7b, after pivoting the hook of first connector 2321 to open first connector 2321, once first connector 2321 passes vertically under second rail 7b, control processor 2318 pivots the hook of first connector 2321 to close first connector 2321.

When package transport device 10p travels a little further and third connector 2323 approaches second rail 7b, control processor 2318 stops the traveling of package transport device 10p by stopping rotation of side propeller 22a1. As illustrated in (c) in FIG. 10A, control processor 2318 pivots the hooks of fourth connector 2324 and fifth connector 2325 to open fourth connector 2324 and fifth connector 2325. This releases the connection of fourth connector 2324 and fifth connector 2325 from first rail 7a, whereby fourth connector 2324 and fifth connector 2325 are disposed vertically below first rail 7a and second rail 7b so as not to contact first rail 7a and second rail 7b.

Control processor 2318 rotates second vehicle main body 2301b with respect to first vehicle main body 2301a. With this, the lengthwise direction of second vehicle main body 2301b intersects the lengthwise direction of first vehicle main body 2301a. In the present embodiment, control processor 2318 rotates second vehicle main body 2301b 90° counterclockwise.

When second vehicle main body 2301b is arranged vertically below second rail 7b, control processor 2318 pivots the hook of fourth connector 2324 to close fourth connector 2324 and pivots the hook of fifth connector 2325 to close fifth connector 2325. With this, control processor 2318 can connect fourth connector 2324 and fifth connector 2325 to second rail 7b.

Next, as illustrated in (d) in FIG. 10A, control processor 2318 pivots the hooks of first connector 2321 and second connector 2322 to open first connector 2321 and second connector 2322. This releases the connection of first connector 2321 and second connector 2322 from first rail 7a, whereby first connector 2321 and second connector 2322 are disposed vertically below first rail 7a and second rail 7b so as not to contact first rail 7a and second rail 7b.

Control processor 2318 rotates first vehicle main body 2301a with respect to second vehicle main body 2301b. With this, the lengthwise direction of first vehicle main body 2301a is approximately parallel to the lengthwise direction of second vehicle main body 2301b. In the present embodiment, control processor 2318 rotates first vehicle main body 2301a 90° counterclockwise.

When first vehicle main body 2301a is arranged vertically below second rail 7b, control processor 2318 pivots the hook of fourth connector 2324 to close fourth connector 2324 and pivots the hook of fifth connector 2325 to close fifth connector 2325. With this, control processor 2318 can connect fourth connector 2324 and fifth connector 2325 to second rail 7b.

As illustrated in FIG. 10B, control processor 2318 pivots the hook of third connector 2323 to open third connector 2323. Third connector 2323 is disconnected from first rail 7a and is positioned vertically below first rail 7a and second rail 7b so that third connector 2323 does not come into contact with first rail 7a or second rail 7b. Control processor 2318 rotates open third connector 2323 around the center point of turntable 2319 by rotating turntable 2319. More specifically, control processor 2318 rotates third connector 2323 around the center point of turntable 2319 so that the openings of the hooks of third connector 2323 intersect second rail 7b. This rotates third connector 2323 counterclockwise by the rotation of turntable 2319 and moves third connector 2323 vertically below second rail 7b. After traveling forward a little further by rotating side propeller 22a1, control processor 2318 controls third propeller actuation motor 22a3 to stop rotation of side propeller 22a1. Control processor 2318 pivots the hook of third connector 2323 to close third connector 2323. Third connector 2323 connects to second rail 7b by third connector 2323 closing.

In this way, the planes of the openings of hooks 1722 of first connector 2321, second connector 2322, third connector 2323, fourth connector 2324, and fifth connector 2325 are aligned so as to oppose (approximately parallel to) one another, and all attitudes are restored. In other words, first connector 2321, second connector 2322, third connector 2323, fourth connector 2324, and fifth connector 2325 are connected to second rail 7b.

Package transport device 10p travels and when second connector 2322 approaches first rail 7a, second connector 2322 is opened, and after second connector 2322 has passed the intersection of first rail 7a and second rail 7b, second connector 2322 is closed so as to connect second connector 2322 to first rail 7a. Package transport device 10p travels and when fifth connector 2325 approaches first rail 7a, fifth connector 2325 is opened, and after fifth connector 2325 has passed the intersection of first rail 7a and second rail 7b, fifth connector 2325 is closed so as to connect fifth connector 2325 to first rail 7a. With this, package transport device 10p can transfer connection from first rail 7a to second rail 7b.

### Operation Example 4

Next, in this operation, an example in which package transport device 10p is traveling from rail 7a1 toward rail 7a2 will be given with reference to, for example, FIG. 11. FIG. 11 illustrates an example of an operation of package transport device 10p according to Embodiment 2 when it is ascending on inclined rail 7. In the operation example, content similar to other operation examples are denoted with the same reference signs, and repeated description will be omitted as appropriate.

Rail 7 in this operation includes horizontal rail 7a1 that is approximately parallel to the horizontal plane and inclined rail 7a2 that is inclined relative to the horizontal plane. More specifically, one end of horizontal rail 7a1 is connected to the other end of inclined rail 7a2 via coupler 7e. Coupler 7e is connected and fixed to the rail support portion, which is provided on a utility pole or similar structure provided in the ground surface or the like.

Note that each of first connector 2321, second connector 2322, fourth connector 2324, and fifth connector 2325 used in this operation example is also a connector like that used in, for example, Operation Example 2. Third connector 2323 includes first hook 2323a and second hook 2323b, and first hook 2323a is symmetrical with second hook 2323b. At least one of first hook 2323a or second hook 2323b is provided with roller 2327m.

As illustrated in (a) in FIG. 11, package transport device 10p travels along rail 7a1 by rotating side propeller 22a1. When the distance between coupler 7e and first connector 2321 is less than a predetermined distance, control processor 2318 stops the rotation of side propeller 22a1 by controlling rear third propeller actuation motor 22a3 for rotating side propeller 22a1. This causes package transport device 10p to stop traveling.

When the distance between coupler 7e and first connector 2321 is less than a predetermined distance, control processor 2318 pivots fourth connector 2324 and first connector 2321 to open fourth connector 2324 and first connector 2321. By opening fourth connector 2324 and first connector 2321, fourth connector 2324 and first connector 2321 will not come into contact with the rail support portion when first vehicle main body 2301a and second vehicle main body 2301b pass vertically below coupler 7e.

Control processor 2318 then rotates side propeller 22a1 by controlling the rear third propeller actuation motor 22a3. With this, package transport device 10p moves forward and fourth connector 2324 and first connector 2321 pass vertically below coupler 7e.

As illustrated in (b) in FIG. 11, control processor 2318 rotates fourth connector 2324 and first connector 2321 little by little until they are half-open (or half-closed), to an extent that fourth connector 2324 and first connector 2321 can connect to rail 7a2. Rollers 2327m of fourth connector 2324 and first connector 2321 ride on and in contact with rail 7a2.

Control processor 2318 rotates first hook 2323a and second hook 2323b of third connector 2323 little by little until they are half-open (or half-closed), to an extent that third connector 2323 can connect to rail 7a2.

Control processor 2318 also pivots fifth connector 2325 and second connector 2322 to open fifth connector 2325 and second connector 2322. Thus, since half-open fourth connector 2324 and first connector 2321 are connected to rail 7a1 and half-open third connector 2323 is connected to rail 7a2, as illustrated in (c) in FIG. 11, package transport device 10p tilts with third connector 2323 and rail 7a1 as the fulcrum.

Control processor 2318 then rotates side propeller 22a1 by controlling the rear third propeller actuation motor 22a3. With this, package transport device 10p moves forward and fifth connector 2325 and second connector 2322 pass vertically below coupler 7e without contacting the rail support portion. Control processor 2318 then closes each of first connector 2321, second connector 2322, third connector 2323, fourth connector 2324, and fifth connector 2325, whereby package transport device 10p can travel after connecting to rail 7a2.

### Operation Example 5

Next, in this operation, an example in which package transport device 10p turns right will be given with reference to, for example, FIG. 12A and FIG. 12B. FIG. 12A illustrates an example of an operation of package transport device 10p according to Embodiment 2 when it is turning right on rail 7 that changes trajectory to the right. FIG. 12B illustrates an example of an operation of the package transport device according to Embodiment 2 after it has turned right and is traveling on a rail. In the operation example, content similar to other operation examples are denoted with the same reference signs, and repeated description will be omitted as appropriate.

As illustrated in FIG. 12A and FIG. 12B, rail 7 according to this operation includes horizontal rail 7a1 that is approximately parallel to the horizontal plane, and rail 7a3 whose path is angled to the right relative to the lengthwise direction of rail 7a1. Rail 7a1 and rail 7a3 are approximately parallel to the horizontal plane. More specifically, one end of horizontal rail 7a1 is connected to the other end of rail 7a3 via coupler 7e. Coupler 7e is connected and fixed to rail support portion 7x, which is provided on a utility pole or similar structure provided in the ground surface or the like. The coupling portion that couples (i) first hook 2323a and second hook 2323b in third connector 2323 and (ii) turntable 2319 is located on the right of first vehicle main body 2301a, i.e., on the opposite side that rail support portion 7x is on. The coupling portions are the blacked-out portions in FIG. 12A and FIG. 12B.

Note that each of first connector 2321, second connector 2322, fourth connector 2324, and fifth connector 2325 used in this operation example is also a connector like that used in, for example, Operation Example 2. Third connector 2323 includes first hook 2323a and second hook 2323b, and first hook 2323a is symmetrical with second hook 2323b. At least one of first hook 2323a or second hook 2323b is provided with roller 2327m.

As illustrated in (a) in FIG. 12A, package transport device 10p travels along rail 7a1 by rotating side propeller 22a1. When the distance between coupler 7e and first connector 2321 is less than a predetermined distance, control processor 2318 stops the rotation of side propeller 22a1 by controlling rear third propeller actuation motor 22a3 for rotating side propeller 22a1. This causes package transport device 10p to stop traveling.

When the distance between coupler 7e and first connector 2321 is less than a predetermined distance, control processor 2318 pivots fourth connector 2324 and first connector 2321 to open fourth connector 2324 and first connector 2321. By opening fourth connector 2324 and first connector 2321, fourth connector 2324 and first connector 2321 will not come into contact with rail support portion 7x when first vehicle main body 2301a and second vehicle main body 2301b pass vertically below coupler 7e. Note that first connector 2321 is held while extended to the rail 7a3 side so that it can couple to (grab) rail 7a3.

Control processor 2318 then rotates side propeller 22a1 by controlling the rear third propeller actuation motor 22a3. With this, package transport device 10p moves forward and fourth connector 2324 and first connector 2321 pass vertically below coupler 7e.

Note that in (a) in FIG. 12A, since rail support portion 7x extends from the left to coupler 7e, i.e., rail support portion 7x extends from the fourth connector 2324 relative to first connector 2321 to coupler 7e, by control processor 2318 opening only fourth connector 2324, first connector 2321 can pass coupler 7e without contacting rail support portion 7x.

When the distance between coupler 7e and third connector 2323 is less than a predetermined distance, control processor 2318 pivots only first hook 2323a of third connector 2323 to open only first hook 2323a. Opening only first hook 2323a of third connector 2323 prevents first hook 2323a of third connector 2323 from contacting coupler 7e when first vehicle main body 2301a and second vehicle main body 2301b pass vertically below coupler 7e.

Control processor 2318 then rotates side propeller 22a1 by controlling the rear third propeller actuation motor 22a3. With this, package transport device 10p moves forward and first hook 2323a of third connector 2323 passes vertically below coupler 7e.

As illustrated in (b) in FIG. 12A, control processor 2318 pivots the first hook 2323a of third connector 2323 to close first hook 2323a of third connector 2323. This connects first hook 2323a of third connector 2323 to rail 7a3.

As illustrated in (c) in FIG. 12A, control processor 2318 pivots second connector 2322 to open second connector 2322. Second connector 2322 releases its connection with rail 7a1 and is disposed vertically below rail 7a1 so as not to contact rail 7a1.

Control processor 2318 controls a motor to rotate first vehicle main body 2301a with respect to second vehicle main body 2301b so as to cause the lengthwise direction of first vehicle main body 2301a to be parallel to the lengthwise direction of rail 7a3. With this, the lengthwise direction of first vehicle main body 2301a intersects the lengthwise direction of second vehicle main body 2301b. In the present embodiment, control processor 2318 rotates first vehicle main body 2301a clockwise so as to cause the lengthwise direction of first vehicle main body 2301a to be approximately parallel to the lengthwise direction of rail 7a3. At this time, package transport device 10p is stable since the center of gravity of package transport device 10p does not shift.

As illustrated in (d) and (e) in FIG. 12A, control processor 2318 pivots first connector 2321 to close first connector 2321. This connects first connector 2321 to rail 7a3.

As illustrated in (e) and (f) in FIG. 12A, control processor 2318 pivots fifth connector 2325 to open fifth connector 2325. Fifth connector 2325 releases its connection with rail 7a1 and is disposed vertically below rail 7a1 so as not to contact rail 7a1.

Control processor 2318 controls a motor to rotate second vehicle main body 2301b with respect to first vehicle main body 2301a so as to cause the lengthwise direction of second vehicle main body 2301b to be parallel to the lengthwise direction of rail 7a3. With this, the lengthwise direction of second vehicle main body 2301b is approximately parallel to the lengthwise direction of first vehicle main body 2301a. In the present embodiment, control processor 2318 rotates second vehicle main body 2301b clockwise so as to cause the lengthwise direction of second vehicle main body 2301b to be approximately parallel to the lengthwise direction of rail 7a3.

Notch 2301k for avoiding interference between first connector 2321 and second connector 2322 of first vehicle main body 2301a is formed in second vehicle main body 2301b. Stated differently, a recess is formed in second vehicle main body 2301b that inhibits contact between first connector 2321 and second connector 2322 in an attitude in which the lengthwise direction of first vehicle main body 2301a and the lengthwise direction of second vehicle main body 2301b are approximately parallel. Accordingly, in an attitude in which the lengthwise direction of first vehicle main body 2301a and the lengthwise direction of second vehicle main body 2301b are approximately parallel, part of first connector 2321 and second connector 2322 (the part on the side of the coupling portion with first vehicle main body 2301a) is arranged within notch 2301k (the recess) formed in second vehicle main body 2301b.

Control processor 2318 pivots fourth connector 2324 to close fourth connector 2324. This connects fourth connector 2324 to rail 7a3.

As illustrated in (f) in FIG. 12A and FIG. 12B, control processor 2318 controls rear third propeller actuation motor 22a3 to rotate side propeller 22a1. With this, package transport device 10p moves forward and second hook 2323b of third connector 2323, as well as second connector 2322 and fifth connector 2325 pass vertically below coupler 7e.

After second hook 2323b of third connector 2323, as well as second connector 2322 and fifth connector 2325 pass vertically below coupler 7e, control processor 2318 pivots each of second hook 2323b of third connector 2323, second connector 2322, and fifth connector 2325 to close second connector 2322 and fifth connector 2325. This connects second hook 2323b of third connector 2323, second connector 2322, and fifth connector 2325 to rail 7a3. With this, package transport device 10p travels forward along rail 7a3.

### Operation Example 6

Next, in this operation, an example in which package transport device 10p turns right will be given with reference to, for example, FIG. 12C. FIG. 12C illustrates an example of another operation of package transport device 10p according to Embodiment 2 when it is turning right on rail 7 that changes trajectory to the right.

This operation differs from Operation Example 5 in that the coupling portion that couples (i) first hook 2323a and second hook 2323b in third connector 2323 and (ii) turntable 2319 is located on the left of first vehicle main body 2301a, i.e., on the opposite side that rail support portion 7x is on. The coupling portions are the blacked-out portions in FIG. 12C. Since this operation is similar to Operation Example 5, similar content is denoted with the same reference signs, and repeated description will be omitted as appropriate. In third connector 2323 according to this operation example, first hook 2323a and second hook 2323b are capable of independently pivoting with respect to the center point of turntable 2319. Accordingly, the attitudes of first hook 2323a and second hook 2323b can be mutually displaced.

As illustrated in (a) in FIG. 12C, after fourth connector 2324 and first connector 2321 pass vertically below coupler 7e, when the distance between coupler 7e and third connector 2323 becomes less than a predetermined distance, control processor 2318 pivots only first hook 2323a of third connector 2323 to open only first hook 2323a, and causes only first hook 2323a of third connector 2323 to be eccentric clockwise with respect to the center point of turntable 2319.

Control processor 2318 controls the rear third propeller actuation motor 22a3 to rotate side propeller 22a1 and cause package transport device 10p to travel forward, whereby first hook 2323a of third connector 2323 passes vertically below coupler 7e. Note that first connector 2321 is held while extended to the rail 7a3 side so that it can couple to (grab) rail 7a3.

As illustrated in (b) in FIG. 12C, control processor 2318 pivots the first hook 2323a of third connector 2323 to close first hook 2323a of third connector 2323. This connects first hook 2323a of third connector 2323 to rail 7a3.

As illustrated in (c) in FIG. 12C, control processor 2318 pivots second connector 2322 to open second connector 2322. Control processor 2318 controls a motor to rotate first vehicle main body 2301a with respect to second vehicle main body 2301b so as to cause the lengthwise direction of first vehicle main body 2301a to be parallel to the lengthwise direction of rail 7a3. With this, the lengthwise direction of first vehicle main body 2301a intersects the lengthwise direction of second vehicle main body 2301b.

As illustrated in (d) and (e) in FIG. 12C, control processor 2318 pivots first connector 2321 to close first connector 2321. This connects first connector 2321 to rail 7a3.

As illustrated in (e) and (f) in FIG. 12C, control processor 2318 pivots fifth connector 2325 to open fifth connector 2325. Fifth connector 2325 releases its connection with rail 7a1 and is disposed vertically below rail 7a1 so as not to contact rail 7a1.

Control processor 2318 controls a motor to rotate second vehicle main body 2301b with respect to first vehicle main body 2301a so as to cause the lengthwise direction of second vehicle main body 2301b to be parallel to the lengthwise direction of rail 7a3. With this, the lengthwise direction of second vehicle main body 2301b is approximately parallel to the lengthwise direction of first vehicle main body 2301a.

Control processor 2318 pivots fourth connector 2324 to close fourth connector 2324. This connects fourth connector 2324 to rail 7a3.

Control processor 2318 also pivots second hook 2323b of third connector 2323 to open second hook 2323b of third connector 2323. With this, the connection of second hook 2323b of third connector 2323 to rail 7a1 is released, and second hook 2323b of third connector 2323 is disposed vertically below rail 7a1 so that second hook 2323b of third connector 2323 and rail 7a1 do not come into contact.

Control processor 2318 then rotates side propeller 22a1 by controlling the rear third propeller actuation motor 22a3. With this, package transport device 10p moves forward and second hook 2323b of third connector 2323, as well as second connector 2322 and fifth connector 2325 pass vertically below coupler 7e.

As illustrated in (f) of FIG. 12C and in FIG. 12B, after second hook 2323b of third connector 2323 as well as second connector 2322 and fifth connector 2325 pass vertically below coupler 7e, control processor 2318 pivots each of second hook 2323b of third connector 2323, second connector 2322, and fifth connector 2325 to close second connector 2322 and fifth connector 2325. This connects second hook 2323b of third connector 2323, second connector 2322, and fifth connector 2325 to rail 7a3. With this, package transport device 10p travels forward along rail 7a3.

As illustrated in FIG. 12D, coupler 7e is connected and fixed to rail support portion 7x disposed on the right of first vehicle main body 2301a. FIG. 12D illustrates an example of an operation of package transport device 10p when it is turning right on rail 7 that changes trajectory to the right, in a case in which rail support portion 7x is provided in a different location. Here, a case in which the coupling portion that couples (i) first hook 2323a and second hook 2323b of third connector 2323 and (i) turntable 2319 is on the right of first vehicle main body 2301a, i.e., on the side that rail support portion 7x is on is the same as this operation example. Moreover, a case in which the coupling portion that couples (i) first hook 2323a and second hook 2323b of third connector 2323 and (i) turntable 2319 is on the left of first vehicle main body 2301a, i.e., on the opposite side that rail support portion 7x is on is the same as Operation Example 5.

### Operation Example 7

Next, in this operation, an example in which package transport device 10p turns right will be given with reference to, for example, FIG. 13. FIG. 13 illustrates an example of an operation of package transport device 10p according to Embodiment 2 when it is turning left on rail 7 that changes trajectory to the left.

Rail 7 according to this operation includes horizontal rail 7a1 that is approximately parallel to the horizontal plane, and rail 7a3 whose path is angled to the left relative to the lengthwise direction of rail 7a1. Rail 7a1 and rail 7a3 are approximately parallel to the horizontal plane. More specifically, one end of horizontal rail 7a1 is connected to the other end of rail 7a3 via coupler 7e. Coupler 7e is connected and fixed to the rail support portion, which is provided on a utility pole or similar structure provided in the ground surface or the like. In this operation, an example in which package transport device 10p is traveling to the right (turning right), from rail 7a1 toward rail 7a3, will be given. The coupling portion that couples (i) first hook 2323a and second hook 2323b in third connector 2323 and (ii) turntable 2319 is located on the right of first vehicle main body 2301a, i.e., on the opposite side that the rail support portion is on. The coupling portions are the blacked-out portions in FIG. 13. Since this operation example is similar to Operation Example 5, similar content is denoted with the same reference signs, and repeated description will be omitted as appropriate.

Note that each of first connector 2321, second connector 2322, fourth connector 2324, and fifth connector 2325 used in this operation example is also a connector like that used in, for example, Operation Example 2. Third connector 2323 includes first hook 2323a and second hook 2323b, and first hook 2323a is symmetrical with second hook 2323b. At least one of first hook 2323a or second hook 2323b is provided with roller 2327m.

As illustrated in (a) in FIG. 13, after fourth connector 2324 and first connector 2321 pass vertically below coupler 7e, when the distance between coupler 7e and third connector 2323 becomes less than a predetermined distance, control processor 2318 pivots only first hook 2323a of third connector 2323 to open only first hook 2323a, and causes only first hook 2323a of third connector 2323 to be eccentric clockwise with respect to the center point of turntable 2319.

Control processor 2318 controls the rear third propeller actuation motor 22a3 to rotate side propeller 22a1 and cause package transport device 10p to travel forward, whereby first hook 2323a of third connector 2323 passes vertically below coupler 7e.

As illustrated in (b) in FIG. 13, control processor 2318 controls the actuation mechanism of turntable 2319 to cause first hook 2323a of third connector 2323 to be eccentric with respect to the center point of turntable 2319. This pivots first hook 2323a of third connector 2323 counterclockwise with respect to center point of turntable 2319 and moves first hook 2323a vertically below rail 7a3.

As illustrated in (c) in FIG. 13, control processor 2318 pivots the first hook 2323a of third connector 2323 to close first hook 2323a of third connector 2323. This connects first hook 2323a of third connector 2323 to rail 7a3.

As illustrated in (d) in FIG. 13, control processor 2318 pivots fifth connector 2325 to open fifth connector 2325. Fifth connector 2325 releases its connection with rail 7a1 and is disposed vertically below rail 7a1 so as not to contact rail 7a1.

Control processor 2318 controls a motor to rotate second vehicle main body 2301b with respect to first vehicle main body 2301a so as to cause the lengthwise direction of second vehicle main body 2301b to be parallel to the lengthwise direction of rail 7a3. With this, the lengthwise direction of second vehicle main body 2301b intersects the lengthwise direction of first vehicle main body 2301a. In the present embodiment, control processor 2318 rotates second vehicle main body 2301b counterclockwise so as to cause the lengthwise direction of second vehicle main body 2301b to be approximately parallel to the lengthwise direction of rail 7a3.

As illustrated in (e) in FIG. 13, control processor 2318 pivots second connector 2322 to open second connector 2322. Second connector 2322 releases its connection with rail 7a1 and is disposed vertically below rail 7a1 so as not to contact rail 7a1.

As illustrated in (f) in FIG. 13, control processor 2318 controls a motor to rotate first vehicle main body 2301a with respect to second vehicle main body 2301b so as to cause the lengthwise direction of first vehicle main body 2301a to be parallel to the lengthwise direction of rail 7a3. With this, the lengthwise direction of first vehicle main body 2301a is approximately parallel to the lengthwise direction of second vehicle main body 2301b. In the present embodiment, control processor 2318 rotates first vehicle main body 2301a counterclockwise so as to cause the lengthwise direction of first vehicle main body 2301a to be approximately parallel to the lengthwise direction of rail 7a3.

As illustrated in (f) and (g) in FIG. 13, control processor 2318 pivots fourth connector 2324 and first connector 2321 to close fourth connector 2324 and first connector 2321. This connects fourth connector 2324 and first connector 2321 to rail 7a3.

Control processor 2318 also pivots second hook 2323b of third connector 2323 to open second hook 2323b of third connector 2323. The connection of second hook 2323b of third connector 2323 to rail 7a1 is released, and second hook 2323b of third connector 2323 is disposed vertically below rail 7a1 so that second hook 2323b of third connector 2323 and rail 7a1 do not come into contact. Note that second hook 2323b of third connector 2323 does not float relative to rail 7.

Control processor 2318 then rotates side propeller 22a1 by controlling the rear third propeller actuation motor 22a3. With this, package transport device 10p moves forward and second hook 2323b of third connector 2323 passes vertically below coupler 7e.

As illustrated in (g) in FIG. 13, after second hook 2323b of third connector 2323 passes vertically below coupler 7e, control processor 2318 also pivots second hook 2323b of third connector 2323 to close second hook 2323b of third connector 2323. This connects second hook 2323b of third connector 2323 to rail 7a3. After second connector 2322 and fifth connector 2325 pass vertically below coupler 7e, control processor 2318 pivots second connector 2322 and fifth connector 2325 to close second connector 2322 and fifth connector 2325. This connects second connector 2322 and fifth connector 2325 to rail 7a3. With this, package transport device 10p travels forward along rail 7a3.

### Operation Example 8

Next, in this operation, an example in which package transport device 10p turns travels over hump 7y will be given with reference to, for example, FIG. 14. FIG. 14 illustrates an example of an operation of package transport device 10p traveling over hump 7y according to Embodiment 2. In the operation example, content similar to other operation examples are denoted with the same reference signs, and repeated description will be omitted as appropriate.

In rail 7 according to this operation, at coupler 7e that couples rail support portion 7x and rail 7, a protruding hump 7y is formed to facilitate smooth traveling by roller 2327m. Rail 7 according to this operation is connected and fixed to rail support portion 7x, which is provided on a utility pole or similar structure provided in the ground surface or the like. In such cases, coupler 7e that couples rail support portion 7x and rail 7 may create an uneven travel surface (the upper surface of rail 7). Accordingly, when each of first connector 2321, second connector 2322, third connector 2323, and fifth connector 2325 includes roller 2327m, this uneven travel surface may make it difficult for package transport device 10p to travel. In view of this, in rail 7 according to this operation, hump 7y that enables smooth traveling by roller 2327m is formed at coupler 7e that couples rail support portion 7x and rail 7. Hump 7y includes an inclined curved surface that smoothens the surface of rail 7 that contacts roller 2327m. Package transport device 10p according to this operation example has the same configuration as package transport device 10p illustrated in, for example, FIG. 12A. Accordingly, the coupling portion that couples (i) first hook 2323a and second hook 2323b in third connector 2323 and (ii) turntable 2319 is located on the opposite side that rail support portion 7x is on.

As illustrated in (a) in FIG. 14, package transport device 10p travels along rail 7a1 by rotating side propeller 22a1. When the distance between coupler 7e and first connector 2321 is less than a predetermined distance, control processor 2318 stops the rotation of side propeller 22a1 by controlling rear third propeller actuation motor 22a3 for rotating side propeller 22a1. This causes package transport device 10p to stop traveling.

As illustrated in (b) in FIG. 14, when the distance between coupler 7e and first connector 2321 is less than a predetermined distance, control processor 2318 pivots first connector 2321 to open first connector 2321. By opening first connector 2321, first connector 2321 will not come into contact with rail support portion 7x when first vehicle main body 2301a and second vehicle main body 2301b pass vertically below coupler 7e. Moreover, since fourth connector 2324 is located on the opposite side that rail support portion 7x is on, fourth connector 2324 does not contact rail support portion 7x and can thus ride over hump 7y.

Note that control processor 2318 may open and close a connector while package transport device 10p is traveling along rail 7. Accordingly, package transport device 10p need not come to a stop when opening or closing a connector.

As illustrated in (c) in FIG. 14, control processor 2318 controls rear third propeller actuation motor 22a3 to rotate side propeller 22a1. With this, package transport device 10p moves forward and first connector 2321 passes vertically below coupler 7e.

As illustrated in (d) in FIG. 14, when connecting first connector 2321 to rail 7, control processor 2318 stops rotation of side propeller 22a1 by controlling the rear third propeller actuation motor 22a3. This causes package transport device 10p to stop traveling. After pivoting first connector 2321 and connecting first connector 2321 to rail 7, control processor 2318 controls third propeller actuation motor 22a3 to rotate side propeller 22a1 and cause package transport device 10p to travel.

As illustrated in (e) in FIG. 14, since first hook 2323a and second hook 2323b in third connector 2323 do not contact rail support portion 7x either, they can ride over hump 7y.

When the distance between coupler 7e and fifth connector 2325 is less than a predetermined distance, control processor 2318 stops the rotation of side propeller 22a1 by controlling rear third propeller actuation motor 22a3 for rotating side propeller 22a1. This causes package transport device 10p to stop traveling.

When the distance between coupler 7e and fifth connector 2325 is less than a predetermined distance, control processor 2318 pivots fifth connector 2325 to open fifth connector 2325. By opening fifth connector 2325, fifth connector 2325 will not come into contact with rail support portion 7x when first vehicle main body 2301a and second vehicle main body 2301b pass vertically below coupler 7e. Moreover, since second connector 2322 is located on the opposite side that rail support portion 7x is on, second connector 2322 does not contact rail support portion 7x and can thus ride over hump 7y.

As illustrated in (f) in FIG. 14, control processor 2318 controls rear third propeller actuation motor 22a3 to rotate side propeller 22a1. With this, package transport device 10p moves forward and fifth connector 2325 passes vertically below coupler 7e.

As illustrated in (g) in FIG. 14, when connecting fifth connector 2325 to rail 7, control processor 2318 stops rotation of side propeller 22a1 by controlling the rear third propeller actuation motor 22a3. This causes package transport device 10p to stop traveling. After pivoting fifth connector 2325 and connecting fifth connector 2325 to rail 7, control processor 2318 controls third propeller actuation motor 22a3 to rotate side propeller 22a1 and cause package transport device 10p to travel.

This is how package transport device 10p can pass rail support portion 7x.

### Advantageous Effects

Next, advantageous effects achieved by package transport device 10p according to the present embodiment will be described.

Package transport device 10p according to the present embodiment includes: a main body (vehicle main body 2301, first vehicle main body 2301a, second vehicle main body 2301b); a rail holder (connector) held by rail 7 located above the main body; turntable 2319 that is provided between the main body and the rail holder and rotates the main body; slider portion 2310 that extends with respect to the main body; package holder 2315 that holds a package attached to slider portion 2310; and a propulsion blade (side propeller 22a1) that is attached to the main body and applies a propulsion force to the main body in a direction parallel to rail 7.

With this, slider portion 2310 can carry the package holder 2315 holding the package to a position spaced away from rail 7. Accordingly, a package can be delivered to the receiver without having to install separate rails 7 at the receiver.

Moreover, since the slider portion can carry a package, package transport device 10p can be kept away from people. People are therefore less likely to feel stress from the sound or presence of package transport device 10p. Accordingly, package transport device 10p is less likely to cause anxiety when carrying a package.

A control method according to the present embodiment is a method of controlling package transport device 10p including a main body, a rail holder held by rail 7 located above the main body, turntable 2319 that is provided between the main body and the rail holder and rotates the main body, slider portion 2310 that extends with respect to the main body, package holder 2315 that holds a package attached to slider portion 2310, and a propulsion blade that applies a propulsion force to the main body in a direction parallel to rail 7. The method includes: rotating the main body by turntable 2319; and extending slider portion 2310 with respect to the main body after turntable 2319 rotates the main body.

This control method achieves the same advantageous effects as described above.

In package transport device 10p according to the present embodiment, slider portion 2310 extends with respect to the main body after turntable 2319 rotates the main body.

With this, after rotating slider portion 2310 so as to face the receiver, slider portion 2310 can be extended with respect to the main body. This makes it possible to more precisely deliver the package to the receiver.

In package transport device 10p according to the present embodiment, the main body includes frame 2302 that is rectangular in plan view, and turntable 2319 rotates the main body until the lengthwise direction of frame 2302 approximately perpendicularly intersects the extending direction of rail 7.

This makes it possible to change the attitude of frame 2302 with respect to turntable 2319 by rotating turntable 2319. It is therefore possible to adjust the direction of extension of slider portion 2310 with respect to the main body. This makes it possible to more precisely deliver the package to the receiver.

In the control method according to the present embodiment, the main body includes frame 2302 that is rectangular in plan view, and in the rotating, the main body is rotated until the lengthwise direction of frame 2302 approximately perpendicularly intersects the extending direction of rail 7.

This control method achieves the same advantageous effects as described above.

In package transport device 10p according to the present embodiment, slider portion 2310 includes package holder 2315 at one end of slider portion 2310, and counterweight 2316 of a predetermined weight at the other end of slider portion 2310, and extends so as to maintain balance between the weight of the package and the weight of counterweight 2316.

With this, when slider portion 2310 is carrying a package, the attitude of package transport device 10p can be adjusted via counterweight 2316 and the package. Accordingly, the position of counterweight 2316 relative to the main body can be adjusted so as to maintain the horizontal attitude of the main body, for example. This makes it possible to more precisely deliver the package to the receiver.

In the control method according to the present embodiment, slider portion 2310 includes package holder 2315 at one end of slider portion 2310, and counterweight 2316 of a predetermined weight at the other end of slider portion 2310, and in the extending, slider portion 2310 is extended from both ends of elongated frame 2302 in the lengthwise direction of elongated frame 2302 so as to maintain balance between the weight of the package and the weight of counterweight 2316.

This control method achieves the same advantageous effects as described above.

By adjusting the position of counterweight 2316 with respect to the main body, it is possible to tilt the attitude of package transport device 10p and extend slider portion 2310 toward the receiver located higher or lower than rail 7. For example, when package transport device 10p is at a height corresponding to the second floor of a building, it is possible to tilt vehicle main body 2301 and extend slider portion 2310 to deliver the package to the first or third floor. The package can thus be delivered even to a receiver at a different height than rail 7.

In package transport device 10p according to the present embodiment, counterweight 2316 is a battery.

This makes it possible to adjust the attitude of package transport device 10p using a device required by package transport device 10p. This eliminates the need for a separate counterweight 2316.

In package transport device 10p according to the present embodiment, the rail holder includes a first holder (fourth connector 2324, first hook 2323a of third connector 2323, second connector 2322) held by rail 7 from above rail 7, and a second holder (first connector 2321, second hook 2323b of third connector 2323, fifth connector 2325) held by rail 7 so as to push up on rail 7 from below.

With this, the rail holder can be connected to rail 7 so as to clamp rail 7 from above and below. This inhibits package transport device 10p from disengaging from rail 7, thus inhibiting package transport device 10p from falling, which ensures the safety of package transport device 10p.

In package transport device 10p according to the present embodiment, the rail holder includes: a first rail holder (first connector 2321) located on one side of frame 2302 in the lengthwise direction of frame 2302; a second rail holder (second connector 2322) located on the other side of frame 2302 in the lengthwise direction of frame 2302; and a third rail holder (third connector 2323) located in the central region of frame 2302 between the one side and the other side in the lengthwise direction of frame 2302.

This inhibits package transport device 10p from disengaging from rail 7 since package transport device 10p is supported by rail 7 by three rail holders. With this, package transport device 10p can be inhibited from falling, which ensures the safety of package transport device 10p.

Package transport device 10p according to the present embodiment includes a motor that rotates the rail holder so as to release a hold of the rail holder by rail 7 so as to avoid contact between a rail support portion that supports rail 7 and the rail holder when package transport device 10p is traveling on rail 7.

With this, when package transport device 10p is traveling on rail 7, it can avoid the rail support portion so as to not contact the rail holder. This allows package transport device 10p to travel along rail 7 toward the receiver.

### VARIATION 1 OF EMBODIMENT 2

FIG. 15 illustrates an example of a package transport device according to Variation 1 of Embodiment 2.

Hereinafter, as illustrated in FIG. 15, since the basic configuration of package transport device 10p according to the present variation is the same as the basic configuration of the unmanned aerial vehicle of Embodiment 1 and the same as the basic configuration of package transport device 10p according to Embodiment 2 and the like, regarding the basic configuration of package transport device 10p in the present variation, the same reference signs as above will be used and repeated description will be omitted where appropriate. Package transport device 10p according to the present variation differs from Embodiment 2, etc., in that the position of each roller 2327m of first connector 2321, second connector 2322, third connector 2323, fourth connector 2324, and fifth connector 2325 can be displaced. The present variation may also be used with unmanned aerial vehicles according to embodiments other than Embodiment 1.

In the present variation, as illustrated in (a) in FIG. 15, first connector 2321, second connector 2322, third connector 2323, fourth connector 2324, and fifth connector 2325 are disposed to have bilateral symmetry with respect to the lengthwise direction of rail 7. Each of first connector 2321, second connector 2322, third connector 2323, fourth connector 2324, and fifth connector 2325 may have the same configuration. First connector 2321 and fourth connector 2324 are disposed on the right side (on the right in a view from the traveling direction) of package transport device 10p, and second connector 2322 and fifth connector 2325 are disposed on the left side (on the left in a view from the traveling direction) of package transport device 10p.

The connectors illustrated in (b) through (g) in FIG. 15 are provided with hook 2326 connected to rail 7, roller 2327m that is provided on the inner peripheral surface side (the side opposing rail 7) of hook 2326 and rotatably contacts rail 7, and a motor that rotates roller 2327m. Note that these connectors need not include the motor; the motor is not an essential element of these connectors. Hook 2326 can connect to (hook onto) rail 7. Roller 2327m is a wheel for rotatably contacting rail 7, and includes a recess shaped to follow the direction of rotation (the circumferential direction) of the axle support so as to guide rail 7. When hook 2326 is contacting rail 7, roller 2327m is supported by the axle support of the motor included in hook 2326, and rotates around the axle support as an axis. The motor is actuated by control processor 2318, and rotates roller 2327m by rotating the axle support.

In the present variation, roller 2327m of each of first connector 2321, second connector 2322, fourth connector 2324, and fifth connector 2325 can move along the lengthwise direction of its connector. The same may apply for third connector 2323. In other words, when package transport device 10p is connected to rail 7 that is approximately parallel to the horizontal plane, these connectors extend vertically, so each roller 2327m can be displaced vertically along with the axle support and the motor. For example, by arranging roller 2327m of first connector 2321 above rail 7 and arranging roller 2327m of fifth connector 2325 below rail 7, or vice versa, first connector 2321 and fourth connector 2324 can clamp rail 7 from above and below. For example, by arranging roller 2327m of second connector 2322 above rail 7 and arranging roller 2327m of fifth connector 2325 below rail 7, or vice versa, second connector 2322 and fifth connector 2325 can clamp rail 7 from above and below.

The relationship, in such a configuration, between roller 2327m and hump 7y formed at coupler 7e that couples the rail support portion and rail 7 will be described with reference to FIG. 16. FIG. 16 illustrates an example of package transport device 10p according to Variation 1 of Embodiment 2 traveling over hump 7y.

In FIG. 16, hump 7y above rail 7 and hump 7y below rail 7 are formed at coupler 7e that couples the rail support portion and rail 7. In FIG. 16, hump 7y below rail 7 is larger than hump 7y above rail 7. In each pair of adjacent connectors, one is held by rail 7 from above rail 7, and the other is held by rail 7 so as to push up on rail 7 from below. In other words, the plurality of connectors include one connector and another connector. The pairs of adjacent connectors are, for example: first connector 2321 and fourth connector 2324; first hook 2323a and second hook 2323b of third connector 2323; and second connector 2322 and fifth connector 2325.

As illustrated in (a) in FIG. 16, distance α1 between the horizontal plane touching the peak of hump 7y below rail 7 and the horizontal plane touching the lowest surface of recess 2327m1 of roller 2327m in the other connector displaces as package transport device 10p travels along rail 7 and rides over hump 7y above rail 7 and hump 7y below rail 7.

As illustrated in (b) in FIG. 16, when roller 2327m of the one connector rides over hump 7y above rail 7, roller 2327m of the one connector is pushed vertically upward relative to the one connector. When roller 2327m of the other connector rides over hump 7y below rail 7, roller 2327m of the other connector is pushed vertically downward relative to the other connector. With this, distance a2 between the horizontal plane touching the peak of hump 7y below rail 7 and the horizontal plane touching the lowest surface of recess 2327m1 of roller 2327m in the other connector is shorter than distance α1.

In the present variation, first connector 2321 and fifth connector 2325 are preferably less than or equal to a certain distance apart, first hook 2323a and second hook 2323b of third connector 2323 are preferably less than or equal to a certain distance apart, and second connector 2322 and fourth connector 2324 are preferably less than or equal to a certain distance apart. When rail 7 is connected via first connector 2321 and fifth connector 2325 as well as via second connector 2322 and fourth connector 2324, if the distance between first connector 2321 and fifth connector 2325, the distance between first hook 2323a and second hook 2323b of third connector 2323, and the distance between second connector 2322 and fourth connector 2324 are greater than or equal to a predetermined distance, there is concern that rail 7 may detach from between first connector 2321 and fifth connector 2325, between first hook 2323a and second hook 2323b of third connector 2323, and between second connector 2322 and fourth connector 2324. Accordingly, when package transport device 10p is traveling at speeds between 3 km/h and 60 km/h, the maximum gap between first connector 2321 and fifth connector 2325, between first hook 2323a and second hook 2323b of third connector 2323, and between second connector 2322 and fourth connector 2324 is preferably in a range from 5 cm to 10 cm. Note that third connector 2323 may be open while package transport device 10p is traveling.

### Operation Example

Next, an operation of package transport device 10p when hump 7y is formed above rail 7 will be described with reference to FIG. 17. FIG. 17 illustrates an example of what happens to the connectors when package transport device 10p according to Variation 1 of Embodiment 2 travels over hump 7y. In the operation example, content similar to other operation examples are denoted with the same reference signs, and repeated description will be omitted as appropriate.

In this operation example, among pairs of adjacent connectors, fourth connector 2324 and second connector 2322 are held by rail 7 from above rail 7, and first connector 2321 and fifth connector 2325 are held by rail 7 so as to push up on rail 7 from below. In third connector 2323, first hook 2323a is held by rail 7 from above rail 7, and second hook 2323b is held by rail 7 so as to push up on rail 7 from below.

As illustrated in (a) in FIG. 17, package transport device 10p travels along rail 7a1 by rotating side propeller 22a1. When the distance between coupler 7e and first connector 2321 is less than a predetermined distance, control processor 2318 stops the rotation of side propeller 22a1 by controlling rear third propeller actuation motor 22a3 for rotating side propeller 22a1. This causes package transport device 10p to stop traveling.

When the distance between coupler 7e and first connector 2321 is less than a predetermined distance, control processor 2318 pivots first connector 2321 to open first connector 2321. By opening first connector 2321, first connector 2321 will not come into contact with the rail support portion when first vehicle main body 2301a and second vehicle main body 2301b pass vertically below coupler 7e. Moreover, since fourth connector 2324 is located on the opposite side that the rail support portion is on, fourth connector 2324 does not contact the rail support portion and can thus ride over hump 7y.

Note that control processor 2318 may open and close a connector while package transport device 10p is traveling along rail 7.

As illustrated in (b) in FIG. 17, control processor 2318 controls rear third propeller actuation motor 22a3 to rotate side propeller 22a1. With this, fourth connector 2324 rides up on hump 7y, and package transport device 10p travels forward so that first connector 2321 passes vertically below coupler 7e. Here, roller 2327m of fourth connector 2324 is pushed upward by hump 7y, causing it to slide vertically upward along fourth connector 2324.

As illustrated in (c) in FIG. 17, fourth connector 2324 rides over and past hump 7y, and first connector 2321 passes vertically below coupler 7e. Once fourth connector 2324 rides over and past hump 7y, roller 2327m of fourth connector 2324 returns to the position it was at on fourth connector 2324 before riding onto hump 7y.

As illustrated in (d) in FIG. 17, when connecting first connector 2321 to rail 7, control processor 2318 stops rotation of side propeller 22a1 by controlling the rear third propeller actuation motor 22a3. This causes package transport device 10p to stop traveling. After pivoting first connector 2321 and connecting first connector 2321 to rail 7, control processor 2318 controls third propeller actuation motor 22a3 to rotate side propeller 22a1 and cause package transport device 10p to travel.

When the distance between coupler 7e and third connector 2323 is less than a predetermined distance, control processor 2318 stops the rotation of side propeller 22a1 by controlling rear third propeller actuation motor 22a3 for rotating side propeller 22a1. This causes package transport device 10p to stop traveling.

When the distance between coupler 7e and second hook 2323b of third connector 2323 is less than a predetermined distance, control processor 2318 pivots second hook 2323b of third connector 2323 to open second hook 2323b of third connector 2323. Opening second hook 2323b of third connector 2323 prevents second hook 2323b of third connector 2323 from contacting the rail support portion when first vehicle main body 2301a and second vehicle main body 2301b pass vertically below coupler 7e. Moreover, since first hook 2323a of third connector 2323 is located on the opposite side that the rail support portion is on, first hook 2323a of third connector 2323 and can ride over hump 7y without contacting the rail support portion. Second hook 2323b of third connector 2323 can pass vertically below coupler 7e.

Thereafter, second hook 2323b of third connector 2323 connects to rail 7, and after opening fifth connector 2325 as well, second connector 2322 rides over hump 7y, fifth connector 2325 passes vertically below coupler 7e, and fifth connector 2325 is connected to rail 7. This is how package transport device 10p can pass the rail support portion.

Note that control processor 2318 may open and close a connector while package transport device 10p is traveling along rail 7.

### VARIATION 2 OF EMBODIMENT 2

FIG. 18 illustrates an example of a package transport device according to Variation 2 of Embodiment 2.

Hereinafter, as illustrated in FIG. 18, since the basic configuration of package transport device 10p according to the present variation is the same as the basic configuration of the unmanned aerial vehicle of Embodiment 1 and the same as the basic configuration of package transport device 10p according to Embodiment 2 and the like, regarding the basic configuration of package transport device 10p in the present variation, the same reference signs as above will be used and repeated description will be omitted where appropriate. Package transport device 10p according to the present variation differs from Embodiment 2, etc., in that the position of each of first connector 2321, second connector 2322, third connector 2323, fourth connector 2324, and fifth connector 2325 can be displaced along with roller 2327m. The present variation may also be used with unmanned aerial vehicles according to embodiments other than Embodiment 1.

In the present variation, first connector 2321, second connector 2322, third connector 2323, fourth connector 2324, and fifth connector 2325 are disposed to have bilateral symmetry with respect to the lengthwise direction of rail 7. Each of first connector 2321, second connector 2322, third connector 2323, fourth connector 2324, and fifth connector 2325 may have the same configuration. First connector 2321, second hook 2323b of third connector 2323, and fifth connector 2325 are connectors disposed on the right side (on the right in a view from the traveling direction) of package transport device 10p, and fourth connector 2324, first hook 2323a of third connector 2323, and fourth connector 2324 are connectors disposed on the left side (on the left in a view from the traveling direction) of package transport device 10p.

In the present variation, first connector 2321, second connector 2322, and third connector 2323 can vertically slide with respect to first vehicle main body 2301a. Fourth connector 2324 and fifth connector 2325 can vertically slide with respect to second vehicle main body 2301b.

As illustrated in (a) and (b) in FIG. 18, when first connector 2321, second hook 2323b of third connector 2323, and second connector 2322 pass hump 7y below rail 7, they are slid vertically downward as a result of riding onto hump 7y. In other words, when the axle support of each roller 2327m of first connector 2321, second hook 2323b of third connector 2323, and second connector 2322 rides onto hump 7y below rail 7, first connector 2321, second hook 2323b of third connector 2323, and second connector 2322 are pushed so as to slide vertically downward with respect to first vehicle main body 2301a via the axle support, to a position higher than when they are on a portion of rail 7 other than hump 7y.

When fourth connector 2324, second hook 2323b of third connector 2323, and fifth connector 2325 pass hump 7y above rail 7, they are slid vertically upward as a result of riding onto hump 7y. In other words, when the axle support of each roller 2327m of fourth connector 2324, second hook 2323b of third connector 2323, and fifth connector 2325 rides onto hump 7y above rail 7, fourth connector 2324, second hook 2323b of third connector 2323, and fifth connector 2325 are pushed so as to slide vertically upward with respect to first vehicle main body 2301a via the axle support, to a position higher than when they on a portion of rail 7 other than hump 7y.

In FIG. 18, (a) illustrates a side view of first connector 2321, second connector 2322, third connector 2323, fourth connector 2324, and fifth connector 2325 traveling along rail 7. In FIG. 18, (b) illustrates a front view of first connector 2321, second connector 2322, third connector 2323, fourth connector 2324, and fifth connector 2325 traveling along rail 7.

As illustrated in (A) in (a) and (b) in FIG. 18, second connector 2322 and fifth connector 2325 clamp rail 7 via rollers 2327m of second connector 2322 and fifth connector 2325. In other words, since recess 2327m1 of roller 2327m of second connector 2322 and recess 2327m1 of roller 2327m of fifth connector 2325 clamp rail 7, rollers 2327m of second connector 2322 and fifth connector 2325 are inhibited from disengaging from rail 7.

As illustrated in (B) in (a) and (b) in FIG. 18, since roller 2327m of first hook 2323a of third connector 2323 rides up on hump 7y above rail 7, and roller 2327m of second hook 2323b of third connector 2323 rides up on hump 7y below rail 7, first hook 2323a and second hook 2323b of third connector 2323 maintain a state in which rollers 2327m of first hook 2323a and second hook 2323b are clamping hump 7y above rail 7 and hump 7y below rail 7. In other words, since recess 2327m1 of roller 2327m of first hook 2323a of third connector 2323 and recess 2327m1 of roller 2327m of second hook 2323b of third connector 2323 clamp rail 7, rollers 2327m of first hook 2323a and second hook 2323b of third connector 2323 are inhibited from disengaging from rail 7.

As illustrated in (C) in (a) and (b) in FIG. 18, since roller 2327m of fourth connector 2324 rides up on hump 7y above rail 7, and roller 2327m of first connector 2321 rides up on hump 7y below rail 7, fourth connector 2324 and first connector 2321 maintain a state in which rollers 2327m of fourth connector 2324 and first connector 2321 are clamping hump 7y above rail 7 and hump 7y below rail 7. In other words, since recess 2327m1 of roller 2327m of fourth connector 2324 and recess 2327m1 of roller 2327m of first connector 2321 clamp rail 7, rollers 2327m of fourth connector 2324 and first connector 2321 are inhibited from disengaging from rail 7.

Package transport device 10p configured in this way may travel several tens of km/h over hump 7y of rail 7. This could conceivably cause fourth connector 2324 and first connector 2321 to derail when riding over hump 7y below rail 7 and hump 7y above rail 7. However, since second connector 2322 and fifth connector 2325 clamp rail 7 and first hook 2323a and second hook 2323b of third connector 2323 clamp rail 7, the connection of the connectors to rail 7 is reinforced. This inhibits package transport device 10p from falling due to derailment when it rides over humps 7y.

Next, specific configurations of the connectors will be described in more detail with reference to FIG. 19. FIG. 19 illustrates an example of the positions of the connectors of another package transport device according to Variation 2 of Embodiment 2 being displaced. Here, first connector 2321, second connector 2322, third connector 2323, fourth connector 2324, and fifth connector 2325 will be collectively referred to as "connectors".

As described above, the connectors include a hook connected to rail 7 and roller 2327m that rotatably contacts rail 7. In the present variation, the connectors do not need to include a motor for rotating roller 2327m. The connectors further include first spring 2351, second spring 2352, and slide motor 2353.

The hook includes roller support portion 2361 that is connected to rail 7 and vertically slides with respect to first vehicle main body 2301a, and slide main body portion 2362 that slidably supports roller support portion 2361.

Roller support portion 2361 has an elongated hook shape. Roller 2327m and an axle support that rotatably supports roller 2327m are provided at the leading end (vertical top end) of roller support portion 2361. In other words, roller support portion 2361 includes an axle support. Roller support portion 2361 slides along the vertical direction, which corresponds to the lengthwise direction of slide main body portion 2362. First spring 2351 is fixed between first spring support piece 2361a of roller support portion 2361 and second spring support piece 2361b of slide main body portion 2362, and second spring 2352 is fixed between first spring support piece 2361a of roller support portion 2361 and third spring support piece 2361c of slide main body portion 2362.

First spring support piece 2361a is located between second spring support piece 2361b and third spring support piece 2361c, is provided on roller support portion 2361, and can be vertically displaced as roller support portion 2361 slides. Second spring support piece 2361b is located vertically above slide main body portion 2362, and can be vertically displaced. Third spring support piece 2361c is a fixed end located vertically below slide main body portion 2362.

Slide main body portion 2362 is elongated in a predetermined direction with respect to first vehicle main body 2301a and second vehicle main body 2301b, and is connected to first vehicle main body 2301a and second vehicle main body 2301b. More specifically slide main body portion 2362 can vertically slide with respect to first vehicle main body 2301a and second vehicle main body 2301b, by slide motor 2353 provided in first vehicle main body 2301a and second vehicle main body 2301b.

Slide main body portion 2362 guides roller support portion 2361 so that it can slide along its own lengthwise direction.

Slide main body portion 2362 can rotate about an axis parallel to the lengthwise direction of rail 7. Slide main body portion 2362 rotates about the axis by motor 2355 provided in first vehicle main body 2301a and second vehicle main body 2301b being controlled by control processor 2318.

Slide motor 2353 is provided in first vehicle main body 2301a and second vehicle main body 2301b, and is controlled by control processor 2318 to vertically slide main body portion 2362 with respect to first vehicle main body 2301a and second vehicle main body 2301b.

First spring 2351 is a spring with a higher spring constant (Young's modulus) than second spring 2352. First spring 2351 is arranged along the lengthwise direction of roller support portion 2361 by having one end fixed to first spring support piece 2361a of roller support portion 2361 and the other end fixed to second spring support piece 2361b of slide main body portion 2362. When a package is held by package holder 2315 of package transport device 10p, first spring 2351 can support that package.

Second spring 2352 is disposed vertically below first spring 2351. Second spring 2352 is arranged along the lengthwise direction of roller support portion 2361 by having one end fixed to first spring support piece 2361a of roller support portion 2361 and the other end fixed to third spring support piece 2361c of slide main body portion 2362.

### Operation Example 1

Next, an example of an operation performed by package transport device 10p when hump 7y is formed above rail 7 and hump 7y is also formed below rail 7 will be given with reference to, for example, FIG. 20. FIG. 20 illustrates an example of what happens to the connectors when a different package transport device according to Variation 2 of Embodiment 2 travels over a hump. This operation example is the same as the operation example according to Variation 1 of Embodiment 2 except that hump 7y is also formed below rail 7. In the operation example, content similar to other operation examples are denoted with the same reference signs, and repeated description will be omitted as appropriate.

As illustrated in (a) in FIG. 20, package transport device 10p travels along rail 7a1 by rotating side propeller 22a1. When the distance between coupler 7e and first connector 2321 is less than a predetermined distance, control processor 2318 slows the rotation of side propeller 22a1 by controlling rear third propeller actuation motor 22a3 for rotating side propeller 22a1. This slows down package transport device 10p. For example, the speed of package transport device 10p is reduced to around 20 km/h.

As illustrated in (a) and (b) in FIG. 20, fourth connector 2324 rides onto hump 7y above rail 7, and first connector 2321 rides onto hump 7y below rail 7. Here, roller 2327m of fourth connector 2324 is pushed upward by hump 7y above rail 7, causing it to gradually slide vertically upward along fourth connector 2324. Roller 2327m of first connector 2321 is pushed upward by hump 7y below rail 7, causing it to gradually slide vertically downward along first connector 2321.

As illustrated in (c) and (d) in FIG. 20, once roller 2327m of fourth connector 2324 passes the peak of hump 7y above rail 7, it gradually slides vertically downward along fourth connector 2324. Once roller 2327m of first connector 2321 passes the peak of hump 7y below rail 7, it gradually slides vertically upward along first connector 2321.

Once fourth connector 2324 rides over and past hump 7y above rail 7, roller 2327m of fourth connector 2324 returns to the position it was at on fourth connector 2324 before riding onto hump 7y above rail 7. Once first connector 2321 rides over and past hump 7y below rail 7, roller 2327m of first connector 2321 returns to the position it was at on first connector 2321 before riding onto hump 7y below rail 7.

Fourth connector 2324 and first connector 2321 can thus ride over hump 7y above rail 7 and hump 7y below rail 7. The combination of first hook 2323a and second hook 2323b of third connector 2323 can ride over hump 7y above rail 7 and hump 7y below rail 7 as well, just as with the combination of fifth connector 2325 and second connector 2322. Accordingly, package transport device 10p can pass a rail support portion without having to stop package transport device 10p or without having to rotate a connector.

### Operation Example 2

Next, movement of the connectors with respect to rail 7, hump 7y above rail 7, and hump 7y below rail 7 will be described with reference to, for example, FIG. 19. In the operation example, content similar to other operation examples are denoted with the same reference signs, and repeated description will be omitted as appropriate.

As illustrated in FIG. 19, this operation example pertains to an operation of moving roller 2327m from vertically above rail 7 to vertically below rail 7. This example assumes that the connectors according to this operation example are connected to the left sides of first vehicle main body 2301a and second vehicle main body 2301b in a case in which rail support portions are provided on the right side of rail 7 in a view of rail 7 in the traveling direction. The connectors in this operation example are fourth connector 2324, first hook 2323a of third connector 2323, and second connector 2322, or first connector 2321, second hook 2323b of third connector 2323, and fifth connector 2325.

As illustrated in (a) in FIG. 19, when package transport device 10p is traveling along rail 7 in a typical fashion, the height from the top end of slide motor 2353 to the leading end of roller support portion 2361 is approximately 25.0 cm, the height from the top end of slide motor 2353 to the center of rail 7 is approximately 20.0 cm, the height from the axis of the axle support to the leading end of roller support portion 2361 is approximately 5.0 cm, and the height of first spring 2351 is approximately 5.0 cm. The load placed on first spring 2351 by the package carried by package transport device 10p is 5 to 30 kg. In such cases, the amount of unevenness that can be absorbed by hump 7y during travel is approximately 5 cm, and the load capacity is approximately 10 kg.

In FIG. 19, (b) illustrates a case in which the connector is separated from rail 7. In this case, control processor 2318 controls slide motor 2353 to move slide main body portion 2362 vertically upward to thereby also move roller support portion 2361 vertically upward. This separates roller 2327m of roller support portion 2361 from rail 7 in a vertically upward direction. Here, the height from the top end of slide motor 2353 to the leading end of roller support portion 2361 is approximately 30.0 cm.

In FIG. 19, (c) illustrates a case in which the connector is rotated counterclockwise. In this case, control processor 2318 controls motor 2355 to rotate slide main body portion 2362 counterclockwise and thereby also rotate roller support portion 2361 counterclockwise. Roller 2327m of roller support portion 2361 is detached from vertically above rail 7 so as not to be present vertically above rail 7. Motor 2355 rotates slide main body portion 2362 approximately 10° counterclockwise.

In FIG. 19, (d) illustrates a case in which slide main body portion 2362 of the connector is moved vertically below slide main body portion 2362. In this case, control processor 2318 controls slide motor 2353 to move slide main body portion 2362 vertically downward to thereby also move roller support portion 2361 vertically downward. This moves roller 2327m of roller support portion 2361 vertically lower than rail 7. Here, the height from the top end of slide motor 2353 to the leading end of roller support portion 2361 is approximately 15.0 cm.

In FIG. 19, (d) and (e) illustrate a case in which the connector is rotated clockwise and roller 2327m pushes up on rail 7 from below. In this case, control processor 2318 controls motor 2355 to rotate slide main body portion 2362 clockwise and thereby also rotate roller support portion 2361 clockwise. This moves roller 2327m of roller support portion 2361 to a position vertically below rail 7. Motor 2355 rotates slide main body portion 2362 approximately 10° clockwise.

In (e) and (f) in FIG. 19, control processor 2318 controls slide motor 2353 to move slide main body portion 2362 vertically upward to thereby also move roller support portion 2361 vertically upward. This pushes roller 2327m of roller support portion 2361 vertically upward from below rail 7. Roller 2327m is pushed against rail 7 by the elastic force of second spring 2352 between first spring support piece 2361a of roller support portion 2361 and third spring support piece 2361c of slide main body portion 2362. Here, the force of roller 2327m of roller support portion 2361 pushing up on rail 7 from below is approximately 1 kg to 10 kg, the length of second spring 2352 is approximately 25.0 cm, and the height from the top end of slide motor 2353 to the center of rail 7 is approximately 20.0 cm.

In FIG. 19, (g) illustrates a case in which roller 2327m travels over hump 7y below rail 7. In this case, since roller 2327m is pushed vertically downward by hump 7y, roller support portion 2361 moves vertically downward along with roller 2327m. Here, a significant amount of force is exerted vertically upward onto rail 7 by second spring 2352. For example, when roller 2327m moves approximately 10.0 cm vertically downward when traveling over hump 7y below rail 7, the distance from the top end of slide motor 2353 to the center of rail 7 is approximately 10.0 cm, and the length of second spring 2352 is approximately 15.0 cm.

In this way, when riding up onto hump 7y after traveling in a typical fashion along rail 7, second spring 2352 contracts and extends to exert a pressing force on hump 7y, which makes it possible to inhibit roller 2327m from derailing from hump 7y.

### Operation Example 3

Next, movement of the connectors with respect to rail 7, hump 7y above rail 7, and hump 7y below rail 7 will be described with reference to, for example, FIG. 21. FIG. 21 illustrates another example of the positions of the connectors of package transport device 10p according to Variation 2 of Embodiment 2 being displaced. In the operation example, content similar to Operation Example 2 is denoted with the same reference signs, and repeated description will be omitted as appropriate.

This operation example pertains to an operation of moving roller 2327m from vertically above rail 7 to vertically below rail 7. This example assumes that the connectors according to this operation example are connected to the right sides of first vehicle main body 2301a and second vehicle main body 2301b in a case in which rail support portions are provided on the left side of rail 7 in a view of rail 7 in the traveling direction. The connectors in this operation example are first connector 2321, second hook 2323b of third connector 2323, and fifth connector 2325, or fourth connector 2324, first hook 2323a of third connector 2323, and second connector 2322.

As illustrated in (a) in FIG. 21, when package transport device 10p is traveling along rail 7 in a typical fashion, the height from the top end of slide motor 2353 to the leading end of roller support portion is 2361 approximately 25.0 cm, the height from the top end of slide motor 2353 to the center of rail 7 is approximately 20.0 cm, the height from the axis of the axle support to the leading end of roller support portion 2361 is approximately 5.0 cm, and the height of first spring 2351 is approximately 5.0 cm. The load placed on first spring 2351 by the package carried by package transport device 10p is 5 to 30 kg. In such cases, the amount of unevenness that can be absorbed by hump 7y during travel is approximately 5 cm, and the load capacity is approximately 10 kg.

In FIG. 21, (b) illustrates a case in which the connector is separated from rail 7. In this case, control processor 2318 controls slide motor 2353 to move slide main body portion 2362 vertically upward to thereby also move roller support portion 2361 vertically upward. This separates roller 2327m of roller support portion 2361 from rail 7 in a vertically upward direction. Here, the height from the top end of slide motor 2353 to the leading end of roller support portion 2361 is approximately 30.0 cm.

In FIG. 21, (c) illustrates a case in which the connector is rotated clockwise. In this case, control processor 2318 controls motor 2355 to rotate slide main body portion 2362 clockwise and thereby also rotate roller support portion 2361 clockwise. Roller 2327m of roller support portion 2361 is detached from vertically above rail 7 so as not to be present vertically above rail 7. Motor 2355 rotates slide main body portion 2362 approximately 10° clockwise.

In FIG. 21, (d) illustrates a case in which slide main body portion 2362 of the connector is moved vertically below slide main body portion 2362. In this case, control processor 2318 controls slide motor 2353 to move slide main body portion 2362 vertically downward to thereby also move roller support portion 2361 vertically downward. This moves roller 2327m of roller support portion 2361 vertically lower than rail 7. Here, the height from the top end of slide motor 2353 to the leading end of roller support portion 2361 is approximately 15.0 cm.

In FIG. 21, (d) and (e) illustrate a case in which the connector is rotated counterclockwise and roller 2327m pushes up on rail 7 from below. In this case, control processor 2318 controls motor 2355 to rotate slide main body portion 2362 counterclockwise and thereby also rotate roller support portion 2361 counterclockwise. This moves roller 2327m of roller support portion 2361 to a position vertically below rail 7. Motor 2355 rotates slide main body portion 2362 approximately 10° counterclockwise.

In (e) and (f) in FIG. 21, control processor 2318 controls slide motor 2353 to move slide main body portion 2362 vertically upward to thereby also move roller support portion 2361 vertically upward. This pushes roller 2327m of roller support portion 2361 vertically upward from below rail 7. Roller 2327m is pushed against rail 7 by the elastic force of second spring 2352 between first spring support piece 2361a of roller support portion 2361 and third spring support piece 2361c of slide main body portion 2362. Here, the force of roller 2327m of roller support portion 2361 pushing up on rail 7 from below is approximately 1 kg to 10 kg, the length of second spring 2352 is approximately 25.0 cm, and the height from the top end of slide motor 2353 to the center of rail 7 is approximately 20.0 cm.

In FIG. 21, (g) illustrates a case in which roller 2327m travels over hump 7y below rail 7. In this case, since roller 2327m is pushed vertically downward by hump 7y, roller support portion 2361 moves vertically downward along with roller 2327m. Here, a significant amount of force is exerted vertically upward onto rail 7 by second spring 2352. For example, when roller 2327m moves approximately 10.0 cm vertically downward when traveling over hump 7y below rail 7, the distance from the top end of slide motor 2353 to the center of rail 7 is approximately 10.0 cm, and the length of second spring 2352 is approximately 15.0 cm.

In this way, when riding up onto hump 7y after traveling in a typical fashion along rail 7, second spring 2352 contracts and extends to exert a pressing force on hump 7y, which makes it possible to inhibit roller 2327m from derailing from hump 7y.

In this case, roller 2327m and the connector when package transport device 10p travels over hump 7y will be described with reference to FIG. 22. FIG. 22 illustrates a detailed example of what happens to the connectors when package transport device 10p according to Variation 2 of Embodiment 2 travels over hump 7y. Although FIG. 22 uses fourth connector 2324 and first connector 2321 as examples, the same applies to second connector 2322, third connector 2323, and fifth connector 2325, so repeated description will be omitted.

As illustrated in (A) and (B) in FIG. 22, fourth connector 2324 and first connector 2321 clamp rail 7 via rollers 2327m of fourth connector 2324 and first connector 2321. Here, by fourth connector 2324 hanging from the top of rail 7 and first connector 2321 pushing up on rail 7 from below, the recess of roller 2327m of fourth connector 2324 and the recess of roller 2327m of first connector 2321 clamp rail 7. In other words, since the recess of roller 2327m of fourth connector 2324 and the recess of roller 2327m of first connector 2321 clamp rail 7, rollers 2327m of fourth connector 2324 and first connector 2321 are inhibited from disengaging from rail 7.

As illustrated in (C) and (D) in FIG. 22, since roller 2327m of fourth connector 2324 rides up on hump 7y above rail 7, and roller 2327m of first connector 2321 rides up on hump 7y below rail 7, fourth connector 2324 and first connector 2321 maintain a state in which rollers 2327m of fourth connector 2324 and first connector 2321 are clamping hump 7y above rail 7 and hump 7y below rail 7. In other words, since the recess of roller 2327m of fourth connector 2324 and the recess of roller 2327m of first connector 2321 clamp rail 7, rollers 2327m of fourth connector 2324 and first connector 2321 are inhibited from disengaging from rail 7.

### VARIATION 3 OF EMBODIMENT 2

FIG. 23 illustrates an example of the turntable of the package transport device according to Variation 3 of Embodiment 2.

Hereinafter, as illustrated in FIG. 23, since the basic configuration of package transport device 10p according to the present variation is the same as the basic configuration of the unmanned aerial vehicle of Embodiment 1 and the same as the basic configuration of package transport device 10p according to Embodiment 2 and the like, regarding the basic configuration of package transport device 10p in the present variation, the same reference signs as above will be used and repeated description will be omitted where appropriate. Package transport device 10p according to the present variation differs from, for example, Embodiment 2 in that first hook 2323a and second hook 2323b of third connector 2323 can be pivoted independent of one another with respect to center point O of turntable 2319. The present variation may also be used with unmanned aerial vehicles according to embodiments other than Embodiment 1.

Turntable 2319 according to the present variation is a double turntable. Stated differently, turntable 2319 includes first table 2319a and second table 2319b smaller in diameter than first table 2319a. Second table 2319b is provided on the upper surface of first vehicle main body 2301a and is arranged on the lower surface of first table 2319a. Stated differently, second table 2319b is arranged so as to be sandwiched between first table 2319a and first vehicle main body 2301a. The central axes of first table 2319a and second table 2319b, which are each other's center points of rotation O, are coincident. Thus, first table 2319a and second table 2319b can rotate independently. First hook 2323a is coupled to the outer circumferential edge of first table 2319a, and second hook 2323b is coupled to the outer circumferential edge of second table 2319b.

Control processor 2318 can separately control the rotation of first table 2319a and the rotation of second table 2319b by controlling a drive mechanism. For example, control processor 2318 can displace the position of first hook 2323a by controlling the drive mechanism to rotate only first table 2319a clockwise or counterclockwise, thereby eccentering only first hook 2323a clockwise or counterclockwise with respect to the center point O of first table 2319a. FIG. 23 illustrates an example of how only first table 2319a is rotated 90° counterclockwise. Control processor 2318 can cause only second hook 2323b to be eccentric clockwise or counterclockwise with respect to center point O of second table 2319b by controlling the drive mechanism to rotate only second table 2319b clockwise or counterclockwise. Control processor 2318 can also cause first hook 2323a and second hook 2323b to be eccentric clockwise or counterclockwise with respect to center point O of turntable 2319 by simultaneously rotating first table 2319a and second table 2319b clockwise or counterclockwise by controlling the drive mechanism.

### Operation Example 1

Next, an example will be given with reference to FIG. 24 of package transport device 10p making a left turn when first rail 7a and second rail 7b are connected and fixed to support pillar 19. FIG. 24 illustrates an example of an operation carried out when the package transport device according to Variation 3 of Embodiment 2 turns left.

In this operation example, first rail 7a and second rail 7b are directly fixed to support pillar 19. In FIG. 24, package transport device 10p bypasses support pillar 19. This operation example also includes third rail 7c1 that connects first rail 7a and second rail 7b, as illustrated in (a) and (b) in FIG. 24. In the operation example, content similar to other operation examples are denoted with the same reference signs, and repeated description will be omitted as appropriate.

First rail 7a extends in the traveling direction of package transport device 10p to support pillar 19, and second rail 7b extends from support pillar 19 to the left in the figure, approximately orthogonal to the lengthwise direction of first rail 7a. Third rail 7c1 is connected to and supported by first rail 7a and second rail 7b so as to intersect first rail 7a and second rail 7b.

In the operation example, package transport device 10p can turn left by switching (switching connections) from first rail 7a to third rail 7c1 and then further switching to second rail 7b to the left of support pillar 19 (left side of the figure).

This operation example illustrates a case in which the coupling portions that couple turntable 2319 to first hook 2323a and second hook 2323b of third connector 2323 are arranged alternately so as to have point symmetry with respect to the center point of turntable 2319.

As illustrated in (c) in FIG. 24, control processor 2318 causes the open fourth connector 2324, the open first connector 2321, and the open first and second hooks 2323a and 2323b of third connector 2323 to pass vertically below coupler 7e, and controls a motor to close and connect fourth connector 2324 to first rail 7a. Control processor 2318 controls the drive mechanism to rotate first table 2319a and place only the open first hook 2323a of third connector 2323 vertically below third rail 7c1. Control processor 2318 controls the motor to close first hook 2323a and second hook 2323b of third connector 2323. This connects first hook 2323a of third connector 2323 to third rail 7c1 and second hook 2323b of third connector 2323 to first rail 7a.

As illustrated in (d) in FIG. 24, control processor 2318 pivots second connector 2322 to open second connector 2322. Second connector 2322 is disconnected from first rail 7a and is disposed vertically below first rail 7a so that second connector 2322 does not contact first rail 7a.

As illustrated in (e) in FIG. 24, control processor 2318 controls a motor to rotate first vehicle main body 2301a with respect to second vehicle main body 2301b so as to cause the lengthwise direction of first vehicle main body 2301a to be parallel to the lengthwise direction of third rail 7c1. With this, the lengthwise direction of first vehicle main body 2301a intersects the lengthwise direction of second vehicle main body 2301b. In the present embodiment, control processor 2318 rotates first vehicle main body 2301a counterclockwise so as to cause the lengthwise direction of first vehicle main body 2301a to be approximately parallel to the lengthwise direction of third rail 7c1.

As illustrated in (f) in FIG. 24, control processor 2318 pivots first connector 2321 to close first connector 2321. This connects first connector 2321 to third rail 7c1.

As illustrated in (f) and (g) in FIG. 24, control processor 2318 controls a motor to rotate second vehicle main body 2301b with respect to first vehicle main body 2301a so as to cause the lengthwise direction of second vehicle main body 2301b to be parallel to the lengthwise direction of third rail 7c1. With this, the lengthwise direction of second vehicle main body 2301b is approximately parallel to the lengthwise direction of first vehicle main body 2301a. In the present embodiment, control processor 2318 rotates second vehicle main body 2301b counterclockwise so as to cause the lengthwise direction of second vehicle main body 2301b to be approximately parallel to the lengthwise direction of third rail 7c1.

Control processor 2318 pivots fourth connector 2324 to close fourth connector 2324. This connects fourth connector 2324 to third rail 7c1.

As illustrated in (h) in FIG. 24, control processor 2318 also pivots second hook 2323b of third connector 2323 to open second hook 2323b of third connector 2323. The connection of second hook 2323b of third connector 2323 to first rail 7a is released, and second hook 2323b of third connector 2323 is disposed vertically below first rail 7a so that second hook 2323b of third connector 2323 and first rail 7a do not come into contact. Control processor 2318 controls the drive mechanism to rotate second table 2319b such that the opening of second hook 2323b of third connector 2323 is approximately parallel to the plane of the opening of first hook 2323a.

Control processor 2318 then rotates side propeller 22a1 by controlling the rear third propeller actuation motor 22a3. With this, package transport device 10p moves forward and second hook 2323b of third connector 2323 passes vertically below coupler 7e.

As illustrated in (i) in FIG. 24, after second hook 2323b of third connector 2323 passes vertically below coupler 7e, control processor 2318 also pivots second hook 2323b of third connector 2323 to close second hook 2323b of third connector 2323. This connects second hook 2323b of third connector 2323 to third rail 7c1. After second connector 2322 and fifth connector 2325 pass vertically below coupler 7e, control processor 2318 pivots second connector 2322 and fifth connector 2325 to close second connector 2322 and fifth connector 2325. This connects second connector 2322 and fifth connector 2325 to third rail 7c1. With this, package transport device 10p travels forward along third rail 7c1.

### Operation Example 2

Next, an example will be given with reference to FIG. 25 of package transport device 10p making a left turn when first rail 7a and second rail 7b are connected and fixed to support pillar 19. FIG. 25 illustrates another example of an operation carried out when the package transport device according to Variation 3 of Embodiment 2 turns left. In the operation example, content similar to other operation examples are denoted with the same reference signs, and repeated description will be omitted as appropriate.

This operation example differs from Operation Example 1 in that the coupling portions that couple turntable 2319 to first hook 2323a and second hook 2323b of third connector 2323 are adjacent and arranged on the same directional side with respect to the center point of turntable 2319. Since other points in this operation example are the same as in Operation Example 1, repeated description thereof will be omitted where necessary.

As illustrated in (a) through (d) in FIG. 25, control processor 2318 causes the open fourth connector 2324, the open first connector 2321, and the open first and second hooks 2323a and 2323b of third connector 2323 to pass vertically below coupler 7e, and controls a motor to close and connect fourth connector 2324 to first rail 7a. Control processor 2318 controls the motor to close first hook 2323a of third connector 2323. This connects first hook 2323a of third connector 2323 to third rail 7c1. Control processor 2318 controls the drive mechanism to rotate first table 2319a and close the open second hook 2323b of third connector 2323. This connects second hook 2323b of third connector 2323 to first rail 7a.

In FIG. 25, (e) through (j) are the same as (d) through (i) in FIG. 24. Package transport device 10p travels forward along third rail 7c1 by transferring from first rail 7a to third rail 7c1.

### Operation Example 3

Next, an example will be given with reference to FIG. 26 of package transport device 10p making a right turn when first rail 7a and second rail 7b are connected and fixed to support pillar 19. FIG. 26 illustrates an example of an operation carried out when package transport device 10p according to Variation 3 of Embodiment 2 turns right.

This operation example also includes third rail 7c2 that connects first rail 7a and second rail 7b.

First rail 7a extends in the traveling direction of package transport device 10p to support pillar 19, and second rail 7b extends from support pillar 19 to the right in the figure, approximately orthogonal to the lengthwise direction of first rail 7a. Third rail 7c1 is connected to and supported by first rail 7a and second rail 7b so as to intersect first rail 7a and second rail 7b.

In the operation example, package transport device 10p can turn right by switching (switching connections) from first rail 7a to third rail 7c2 and then further switching to second rail 7b to the right of support pillar 19 (right side of the figure).

In this operation example, the coupling portions that couple turntable 2319 to first hook 2323a and second hook 2323b of third connector 2323 are adjacent and arranged on the same directional side with respect to the center point of turntable 2319.

Since this operation example is similar to Operation Example 1, repeated description of the same content will be omitted as appropriate. In the operation example, content similar to other operation examples are denoted with the same reference signs, and repeated description will be omitted as appropriate. The coupling portions are the white-painted portions.

As illustrated in (a) in FIG. 26, control processor 2318 causes the open fourth connector 2324, the open first connector 2321, and the open first and second hooks 2323a and 2323b of third connector 2323 to pass vertically below coupler 7e, and controls a motor to close and connect fourth connector 2324 to first rail 7a. Control processor 2318 controls the drive mechanism to rotate first table 2319a and place only the open first hook 2323a of third connector 2323 vertically below third rail 7c2. Control processor 2318 controls the motor to close first hook 2323a and second hook 2323b of third connector 2323. This connects first hook 2323a of third connector 2323 to third rail 7c2 and second hook 2323b of third connector 2323 to first rail 7a.

As illustrated in (b) in FIG. 26, control processor 2318 pivots fourth connector 2324 and fifth connector 2325 to open fourth connector 2324 and fifth connector 2325. This releases the connection of fourth connector 2324 and fifth connector 2325 from first rail 7a, whereby fourth connector 2324 and fifth connector 2325 are disposed vertically below first rail 7a so as not to contact first rail 7a.

As illustrated in (b) and (c) in FIG. 26, control processor 2318 controls a motor to rotate second vehicle main body 2301b with respect to first vehicle main body 2301a so as to cause the lengthwise direction of second vehicle main body 2301b to be parallel to the lengthwise direction of third rail 7c2. With this, the lengthwise direction of second vehicle main body 2301b intersects the lengthwise direction of first vehicle main body 2301a. In the present embodiment, control processor 2318 rotates second vehicle main body 2301b clockwise so as to cause the lengthwise direction of second vehicle main body 2301b to be approximately parallel to the lengthwise direction of third rail 7c2. Note that package transport device 10p is stable because first vehicle main body 2301a and second vehicle main body 2301b do not tilt easily when turning right. The same also applies when turning left.

As illustrated in (c) in FIG. 26, control processor 2318 pivots fourth connector 2324 to close fourth connector 2324. This connects fourth connector 2324 to third rail 7c2.

As illustrated in (d) and (e) in FIG. 26, control processor 2318 controls a motor to rotate first vehicle main body 2301a with respect to second vehicle main body 2301b so as to cause the lengthwise direction of first vehicle main body 2301a to be parallel to the lengthwise direction of third rail 7c2. With this, the lengthwise direction of first vehicle main body 2301a is approximately parallel to the lengthwise direction of second vehicle main body 2301b. In the present embodiment, control processor 2318 rotates first vehicle main body 2301a clockwise so as to cause the lengthwise direction of first vehicle main body 2301a to be approximately parallel to the lengthwise direction of third rail 7c2.

Control processor 2318 pivots first connector 2321 to close first connector 2321. This connects first connector 2321 to third rail 7c2.

As illustrated in (f) and (g) in FIG. 26, control processor 2318 also pivots second hook 2323b of third connector 2323 to open second hook 2323b of third connector 2323. The connection of second hook 2323b of third connector 2323 to first rail 7a is released, and second hook 2323b of third connector 2323 is disposed vertically below first rail 7a so that second hook 2323b of third connector 2323 and first rail 7a do not come into contact. Control processor 2318 controls the drive mechanism to rotate second table 2319b such that the opening of second hook 2323b of third connector 2323 is approximately parallel to the plane of the opening of first hook 2323a.

Control processor 2318 then rotates side propeller 22a1 by controlling the rear third propeller actuation motor 22a3. With this, package transport device 10p moves forward and second hook 2323b of third connector 2323 passes vertically below coupler 7e.

As illustrated in (g) in FIG. 26, after second hook 2323b of third connector 2323 passes vertically below coupler 7e, control processor 2318 also pivots second hook 2323b of third connector 2323 to close second hook 2323b of third connector 2323. This connects second hook 2323b of third connector 2323 to third rail 7c2. After second connector 2322 and fifth connector 2325 pass vertically below coupler 7e, control processor 2318 pivots second connector 2322 and fifth connector 2325 to close second connector 2322 and fifth connector 2325. This connects second connector 2322 and fifth connector 2325 to third rail 7c2. With this, package transport device 10p travels forward along third rail 7c2.

### Operation Example 4

Next, an example will be given with reference to FIG. 27 of package transport device 10p making a right turn when first rail 7a and second rail 7b are connected and fixed to support pillar 19. This operation example differs from Operation Example 3 in that the coupling portions that couple turntable 2319 to first hook 2323a and second hook 2323b of third connector 2323 are arranged alternately so as to have point symmetry with respect to the center point of turntable 2319. In the operation example, content similar to Operation Example 3 is denoted with the same reference signs, and repeated description will be omitted as appropriate.

As illustrated in (a) in FIG. 27, control processor 2318 causes the open fourth connector 2324, the open first connector 2321, and the open first hook 2323a of third connector 2323 to pass vertically below coupler 7e, and controls a motor to close and connect fourth connector 2324, first connector 2321, and first hook 2323a of third connector 2323 to first rail 7a.

As illustrated in (b) and (c) in FIG. 27, control processor 2318 pivots fourth connector 2324 and fifth connector 2325 to open fourth connector 2324, fifth connector 2325, and first hook 2323a and second hook 2323b of third connector 2323. The connections of fourth connector 2324, fifth connector 2325, and first hook 2323a and second hook 2323b of third connector 2323 to first rail 7a are released, and fourth connector 2324, fifth connector 2325, and first hook 2323a and second hook 2323b of third connector 2323 are disposed vertically below first rail 7a so that fourth connector 2324, fifth connector 2325, and first hook 2323a and second hook 2323b of third connector 2323 do not come into contact with first rail 7a.

As illustrated in (c) and (c1) in FIG. 27, control processor 2318 controls a motor to rotate second vehicle main body 2301b with respect to first vehicle main body 2301a so as to cause the lengthwise direction of second vehicle main body 2301b to be parallel to the lengthwise direction of third rail 7c2. With this, the lengthwise direction of second vehicle main body 2301b intersects the lengthwise direction of first vehicle main body 2301a. In the present embodiment, control processor 2318 rotates second vehicle main body 2301b clockwise so as to cause the lengthwise direction of second vehicle main body 2301b to be approximately parallel to the lengthwise direction of third rail 7c2.

Control processor 2318 pivots fourth connector 2324 to close fourth connector 2324. This connects fourth connector 2324 to third rail 7c2.

As illustrated in (c), (c1), (d), and (d1) in FIG. 27, control processor 2318 controls rear third propeller actuation motor 22a3 to slightly rotate side propeller 22a1. With this, package transport device 10p moves forward slightly along third rail 7c2 and second hook 2323b of third connector 2323 passes vertically below coupler 7e. Control processor 2318 controls the drive mechanism to rotate second table 2319b and place only the open second hook 2323b of third connector 2323 vertically below third rail 7c2.

As illustrated in (e), (e1), (f), and (f1) in FIG. 27, control processor 2318 also pivots second hook 2323b of third connector 2323 to close second hook 2323b of third connector 2323. This connects second hook 2323b of third connector 2323 to third rail 7c2. Accordingly, by second hook 2323b of third connector 2323 hooking onto third rail 7c2, package transport device 10p is pulled to the third rail 7c2. Control processor 2318 also pivots first hook 2323a of third connector 2323 to open first hook 2323a of third connector 2323. The connection of first hook 2323a of third connector 2323 to first rail 7a is released, and first hook 2323a of third connector 2323 is disposed vertically below first rail 7a so that first hook 2323a of third connector 2323 and first rail 7a do not come into contact.

As illustrated in (g) in FIG. 27, control processor 2318 pivots first connector 2321 and second connector 2322 to open first connector 2321 and second connector 2322. This releases the connection of first connector 2321 and second connector 2322 from first rail 7a, whereby first connector 2321 and second connector 2322 are disposed vertically below first rail 7a so as not to contact first rail 7a.

As illustrated in (g) and (h) in FIG. 27, control processor 2318 controls a motor to rotate first vehicle main body 2301a with respect to second vehicle main body 2301b so as to cause the lengthwise direction of first vehicle main body 2301a to be approximately parallel to the lengthwise direction of third rail 7c2. With this, the lengthwise direction of first vehicle main body 2301a is approximately parallel to the lengthwise direction of second vehicle main body 2301b. In the present embodiment, control processor 2318 rotates first vehicle main body 2301a clockwise so as to cause the lengthwise direction of first vehicle main body 2301a to be approximately parallel to the lengthwise direction of third rail 7c2. Control processor 2318 controls the drive mechanism to rotate first table 2319a such that the opening of first hook 2323a of third connector 2323 is approximately parallel to the plane of the opening of second hook 2323b, so as to place only the open first hook 2323a of third connector 2323 vertically below third rail 7c2. Control processor 2318 controls the motor to close first hook 2323a of third connector 2323. This connects first hook 2323a of third connector 2323 to third rail 7c2.

As illustrated in (i) in FIG. 27, after second connector 2322 and fifth connector 2325 pass vertically below coupler 7e, control processor 2318 pivots second connector 2322 and fifth connector 2325 to close second connector 2322 and fifth connector 2325. This connects second connector 2322 and fifth connector 2325 to third rail 7c2. With this, package transport device 10p travels forward along third rail 7c2.

### Operation Example 5

Next, an example will be given with reference to FIG. 28 of package transport device 10p making a right turn when first rail 7a and second rail 7b are connected and fixed to support pillar 19. FIG. 28 illustrates an example of another operation carried out when package transport device 10p according to Variation 3 of Embodiment 2 turns right.

Just as in Operation Example 3, in this operation example as well, the coupling portions that couple turntable 2319 to first hook 2323a and second hook 2323b of third connector 2323 are adjacent and arranged on the same directional side with respect to the center point of turntable 2319. Since this operation example is similar to Operation Example 3, repeated description of the same content will be omitted as appropriate.

As illustrated in (a) in FIG. 28, control processor 2318 causes the open fourth connector 2324, the open first connector 2321, and the open first hook 2323a of third connector 2323 to pass vertically below coupler 7e, and controls a motor to close and connect fourth connector 2324 and first connector 2321 to first rail 7a. Control processor 2318 controls the drive mechanism to rotate first table 2319a and place only the open first hook 2323a of third connector 2323 vertically below third rail 7c2. Control processor 2318 controls the motor to close first hook 2323a and second hook 2323b of third connector 2323. This connects first hook 2323a of third connector 2323 to third rail 7c2 and second hook 2323b of third connector 2323 to first rail 7a.

In FIG. 28, (b), (c), (d), (e), (f), and (g) are the same as (b), (c), (d), (e), (f), and (g) in FIG. 26. Package transport device 10p travels forward along third rail 7c2 by transferring from first rail 7a to third rail 7c2.

### [Embodiment 3]

FIG. 29A illustrates an example of package transport device 10q and delivery box 2408 according to Embodiment 3. FIG. 29B is a block diagram illustrating an example of delivery box 2408 according to Embodiment 3.

Hereinafter, as illustrated in FIG. 29A and FIG. 29B, the basic configuration of package transport device 10q according to the present embodiment is the same as the basic configuration of the package transport device according to Embodiment 1, etc. Delivery box 2408 according to the present embodiment differs from, for example, Embodiment 2 in that it can move a plurality of packages in the vertical direction, but the basic configuration of delivery box 2408 is the same as the basic configuration of the delivery box according to Embodiment 1, etc. Accordingly, regarding the basic configurations of package transport device 10q and delivery box 2408 according to the present embodiment, the same reference signs as above are used, and repeated description will be omitted where appropriate. The present embodiment may also be used with unmanned aerial vehicles and delivery boxes according to embodiments other than Embodiment 1, instead of package transport device 10q and delivery box 2408.

Delivery box 2408 includes container 2411, retrieval lid 2412, a plurality of base plates 2413, a plurality of placement pieces 2414, pivot axle 2415, first guide portion 2421, second guide portion 2422, third guide portion 2423, sensor 2431, actuator 2432, actuation controller 2433, and communicator 2434.

Container 2411 has a rectangular or cylindrical shape. Container 2411 defines a space for storing a package. The space is divided by each of the plurality of base plates 2413 arranged inside container 2411. More specifically, the space is divided by the plurality of base plates 2413 such that a package can be placed between two adjacent base plates 2413. Accordingly, a plurality of levels (chambers) are formed in container 2411 by the plurality of base plates 2413.

Container 2411 is an enclosure for storing a package. Container 2411 is exemplified as rectangular in shape, but may be of any shape as long as it can store a package. Top opening 2411a through which packages pass is formed in the top portion on the vertical top of container 2411. Side opening 2412a that is coverable by closing retrieval lid 2412 is formed in the side portion of container 2411. Side opening 2412a according to the present embodiment is formed on the lowest of the levels formed in container 2411. Top opening 2411a and side opening 2412a are in communication with the space of container 2411.

Retrieval lid 2412 is provided on the side portion of container 2411 and can open and close side opening 2412a for retrieving a package in the space through side opening 2412a. When closed, retrieval lid 2412 covers side opening 2412a, and when open, retrieval lid 2412 exposes side opening 2412a. Retrieval lid 2412 is held by container 2411 so as to be pivotable around a predetermined axis.

The plurality of base plates 2413 are housed inside container 2411, and are arranged in a vertical line in the space in container 2411. Since the plurality of base plates 2413 divide the inside of container 2411 into a plurality of spaces, a plurality of packages can be housed separately in delivery box 2408. In the present embodiment, delivery box 2408 is exemplified as including three base plates 2413. However, delivery box 2408 may include two or fewer or four or more base plates 2413.

Since each base plate 2413 is arranged on a plurality of placement pieces 2414 formed inside container 2411, each base plate 2413 is arranged approximately parallel to the horizontal direction. Since arranging each base plate 2413 on a plurality of placement pieces 2414 makes it possible to divide the space, packages can be stored separately.

Each base plate 2413 can be rotated to displace into an orientation that is approximately parallel to the vertical direction or approximately parallel to the horizontal direction.

Note that each base plate 2413 may be configured of a single plate or a plurality of plates and hinges so as to be foldable.

For example, when a package is placed on the first-level base plate 2413, which is the most vertically upward positioned base plate 2413 among the plurality of base plates 2413, the lowest-level base plate 2413, which is the most vertically downward positioned base plate 2413 among the plurality of base plates 2413, slides upward on first guide portion 2421 so as to be the most vertically upward positioned base plate 2413, and all base plates 2413 except that lowest-level base plate 2413 move vertically downward. More specifically, when a package is placed on the first-level base plate 2413, the lowest-level base plate 2413 pivots around the axis of pivot axle 2415 into an orientation that is approximately parallel to the vertical direction. Then, the lowest-level base plate 2413 slides vertically upward, and all base plates 2413 except the lowest-level base plate 2413 are vertically lowered in an orientation that is approximately parallel to the horizontal direction. In other words, when a package is placed on the first-level base plate 2413, the second- and subsequent-level base plates 2413 excluding the lowest-level base plate 2413 move down one level each. With this, the lowest-level base plate 2413 moves so as to be the most vertically upward positioned base plate 2413 among the plurality of base plates 2413.

Pivot axle 2415 is formed in the lengthwise central region of base plate 2413. Note that pivot axle 2415 may be formed at one or both lengthwise ends of base plate 2413. Pivot axle 2415 is rotated by actuation controller 2433 to displace base plate 2413 into an orientation that is approximately parallel to the vertical direction or approximately parallel to the horizontal direction.

The plurality of placement pieces 2414 are provided inside container 2411, and are protrusions that can hold base plate 2413 in an orientation that is approximately parallel to the horizontal direction. Four placement pieces 2414 are provided per level. Stated differently, four placement pieces 2414 can hold one base plate 2413 in an orientation that is approximately parallel to the horizontal direction. In other words, by placing one base plate 2413 on four placement pieces 2414, the space can be divided into a plurality of subspaces so that a plurality of packages can be stored.

Moreover, the plurality of placement pieces 2414 can move in the vertical direction like a lift in one level, or every four placement pieces 2414. Note that three or less or five or more placement pieces 2414 may be provided per level.

First guide portion 2421 is an elongated guide formed along the vertical direction inside container 2411. First guide portion 2421 vertically guides base plate 2413 that has been displaced into an orientation that is approximately parallel to the vertical direction.

Second guide portion 2422 is an elongated guide formed along the horizontal direction inside the container 2411. Second guide portion 2422 can guide base plate 2413 that has been displaced into an orientation that is approximately parallel to the vertical direction so as to move horizontally. Second guide portion 2422 is formed at a position corresponding to side opening 2412a of container 2411. More specifically, second guide portion 2422 is disposed inside container 2411 so that it is level with the vertical lower edge of side opening 2412a. Note that a plurality of second guide portions 2422 may be formed in accordance with the number of packages that can be placed, i.e., the number of base plates 2413.

Third guide portion 2423 is an elongated guide formed along the horizontal direction inside container 2411. Third guide portion 2423 is a guide for inserting the lowest-level base plate 2413 when the lowest-level base plate 2413 is moved vertically upward. In other words, third guide portion 2423 is an insertion level that inserts base plate 2413 where the lowest level was.

Third guide portion 2423 is arranged vertically above second guide portion 2422 in container 2411. Stated differently, the insertion level is the highest level, and is located vertically higher than the first level.

Sensor 2431 can detect that a package has been placed on the first-level base plate 2413. Sensor 2431 is, for example, a gravity sensor or an image sensor. When a package is placed on the first-level base plate 2413, sensor 2431 transmits, to actuation controller 2433, placement information, which is information indicating that a package has been placed.

Actuation controller 2433 controls actuator 2432 to change the orientation of base plates 2413 or move base plates 2413. More specifically, actuation controller 2433 controls actuator 2432 to pivot base plates 2413 around their respective pivot axles 2415. When base plate 2413 is oriented approximately parallel to the vertical direction, actuation controller 2433 controls actuator 2432 to slide base plate 2413 along second guide portion 2422 and first guide portion 2421. This moves base plate 2413 that was on the lowest level to the highest level.

Actuator 2432 is an actuator including a hoist, pulley, belt, etc. Actuator 2432 can move the plurality of placement pieces 2414 by moving and pivoting the plurality of base plates 2413.

Note that when a package is on the lowest-level base plate 2413, actuation controller 2433 may be configured to not pivot the lowest-level base plate 2413 even when a package is placed on the first-level base plate 2413.

Communicator 2434 is a wireless module capable of wirelessly communicating with, for example, package transport device 10q and a management server. Communicator 2434 receives, for example, position information and information indicating that package transport device 10q has arrived from package transport device 10q, and other information indicating the contents, number of pieces, time, etc., of the packages to arrive, from the management server. Communicator 2434 also transmits information indicating that a package has been stored to package transport device 10q, management server, etc.

In this way, each time a package is placed on the first-level base plate 2413, each of the plurality of base plates 2413 excluding the first-level base plate 2413 is moved down one level, and the lowest-level base plate 2413 is pivoted and moved to the first level. Accordingly, delivery box 2408 can lower and raise base plates 2413 like a lift.

Note that delivery box 2408 may include a top lid. The top lid may be provided on the top portion of container 2411 and may be capable of closing and opening top opening 2411a for inserting a package into delivery box 2408. The top lid covers top opening 2411a when closed and opens top opening 2411a when opened. The top lid may be held so as to be pivotable around a predetermined axis relative to container 2411.

Note that retrieval lid 2412 and the top lid open outward relative to container 2411, but may open inward into delivery box 2408. Retrieval lid 2412 and the top lid are not limited to a single-swing opening mechanism, and may employ a dual-swing opening mechanism.

With this, a package can be placed into the space of delivery box 2408 from above delivery box 2408, and a package stored in the space can be removed from the side of delivery box 2408. Accordingly, a package can be easily removed.

### Operation Example 1

FIG. 29C illustrates an example of how delivery box 2408 according to Operation Example 1 of Embodiment 3 moves when viewed from the side. FIG. 29D illustrates an example of how delivery box 2408 according to Operation Example 1 of Embodiment 3 moves when viewed from the front.

This operation example pertains to an operation in a case in which delivery box 2408 includes three base plates 2413, namely first base plate 2413a, second base plate 2413b, and third base plate 2413c. In (a) in FIG. 29C and (a) in FIG. 29D in this operation example, first package K1 is on first base plate 2413a. The operation example also includes a first level, a second level after the first level, and a third level after the second level, from up to down in the vertical direction. In delivery box 2408 according to the present operation example, second guide portion 2422 is formed at a position corresponding to the third level.

First, package transport device 10q stops at a location vertically above delivery box 2408 so as to arrange first package K1 vertically above top opening 2411a of delivery box 2408. Next, package transport device 10q starts reeling out wire 51, and lowers first package K1 of package transport device 10q. Here, package transport device 10q lowers first package K1 so that it is positioned at top opening 2411a of delivery box 2408.

Once first package K1 has been placed on the first-level first base plate 2413a of delivery box 2408, package transport device 10q stores first package K1 in delivery box 2408. Sensor 2431 then detects first package K1 placed on the first-level first base plate 2413a and thus transmits placement information to actuation controller 2433.

Upon obtaining placement information, actuation controller 2433 controls actuator 2432 so as to move base plate 2413. More specifically, actuation controller 2433 controls actuator 2432 to pivot the third-level third base plate 2413c and displace third base plate 2413c into an orientation that is approximately parallel to the vertical direction. Next, actuation controller 2433 controls actuator 2432 to move the displaced third base plate 2413c to first guide portion 2421 by sliding it along second guide portion 2422 located on the third level. Next, actuation controller 2433 controls actuator 2432 to vertically upwardly slide, along first guide portion 2421, third base plate 2413c that was moved to first guide portion 2421. Next, actuation controller 2433 controls actuator 2432 to slide third base plate 2413c to a position that corresponds to the insertion level, and then holds third base plate 2413c for a predetermined period. Next, actuation controller 2433 controls actuator 2432 to lower first base plate 2413a and second base plate 2413b. Once the predetermined period, which is the amount of time required for first base plate 2413a and second base plate 2413b to be lowered, elapses, actuation controller 2433 ends the holding of third base plate 2413c, and controls actuator 2432 to slide third base plate 2413c along third guide portion 2423, which is the insertion level. Here, actuation controller 2433 controls actuator 2432 to slide third base plate 2413c on third guide portion 2423 up to the horizontal central portion of the side portion of container 2411, i.e., the central portion in the widthwise direction of the side portion. Actuation controller 2433 then controls actuator 2432 to pivot the third-level third base plate 2413c and displace third base plate 2413c into an orientation that is approximately parallel to the horizontal direction. With this, delivery box 2408 is in the state illustrated in (a) in FIG. 29C and (a) in FIG. 29D.

In this way, by actuation controller 2433 controlling actuator 2432, each time a package is placed on the first-level base plate 2413, the third-level base plate 2413 is moved to the first level.

As illustrated in (a) in FIG. 29C and (a) in FIG. 29D, package transport device 10q stops at a location vertically above delivery box 2408 so as to arrange second package K2 vertically above top opening 2411a of delivery box 2408.

Next, package transport device 10q starts reeling out wire 51, and lowers second package K2 of package transport device 10q. Once second package K2 has been placed on the first-level third base plate 2413c of delivery box 2408, package transport device 10q disconnects second package K2.

Next, as illustrated in (b) in FIG. 29C and (b) in FIG. 29D, second package K2 is placed on the first-level third base plate 2413c of delivery box 2408. Stated differently, second package K2 is stored in delivery box 2408. Sensor 2431 then detects second package K2 placed on the first-level third base plate 2413c and thus transmits placement information to actuation controller 2433.

Actuation controller 2433 obtains placement information from sensor 2431, and controls actuator 2432 to pivot the third-level second base plate 2413b and displace second base plate 2413b into an orientation that is approximately parallel to the vertical direction. The third level is an extraction level at which base plate 2413 can be extracted.

Next, as illustrated in (c) in FIG. 29C, actuation controller 2433 controls actuator 2432 to move the displaced second base plate 2413b to first guide portion 2421 by sliding it along second guide portion 2422 located on the third level.

Next, as illustrated in (d) in FIG. 29C, actuation controller 2433 controls actuator 2432 to vertically upwardly slide, along first guide portion 2421, second base plate 2413b that was moved to first guide portion 2421. The user retrieves first package K1 on first base plate 2413a by opening retrieval lid 2412 to uncover side opening 2412a of delivery box 2408.

Next, as illustrated in (e) in FIG. 29C and (c) in FIG. 29D, actuation controller 2433 controls actuator 2432 to slide second base plate 2413b to a position corresponding to the insertion level, and then holds second base plate 2413b for a predetermined period. Actuation controller 2433 then controls actuator 2432 to lower third base plate 2413c and first base plate 2413a.

Next, as illustrated in (f) in FIG. 29C and (d) in FIG. 29D, actuation controller 2433 controls actuator 2432 to lower third base plate 2413c from the first level to the second level and lower first base plate 2413a from the second level to the third level.

Once the predetermined period, which is the amount of time required for third base plate 2413c and first base plate 2413a to be lowered, elapses, actuation controller 2433 controls actuator 2432 to slide third base plate 2413c along third guide portion 2423, which is the insertion level, as illustrated in (g) in FIG. 29C. Here, actuation controller 2433 controls actuator 2432 to slide second base plate 2413b on third guide portion 2423 up to the horizontal central portion of the side portion of container 2411, i.e., the central portion in the widthwise direction of the side portion.

Next, as illustrated in (h) in FIG. 29C, actuation controller 2433 then controls actuator 2432 to pivot the third-level second base plate 2413b and displace second base plate 2413b into an orientation that is approximately parallel to the horizontal direction. With this, delivery box 2408 is in the state illustrated in (i) in FIG. 29C.

Next, second base plate 2413b lowers with placement pieces 2414 to a position below third guide portion 2423, so as to be arranged at the fourth level, to achieve the state illustrated in (j) in FIG. 29C.

Next, as illustrated in (j) in FIG. 29C and (e) in FIG. 29D, package transport device 10q stops at a location vertically above delivery box 2408 so as to arrange third package K3 vertically above top opening 2411a of delivery box 2408.

Next, package transport device 10q starts reeling out wire 51, and lowers third package K3 of package transport device 10q. Once third package K3 has been placed on the first-level second base plate 2413b of delivery box 2408, package transport device 10q disconnects third package K3.

With this, as illustrated in (k) in FIG. 29C and (f) in FIG. 29D, third package K3 is placed on the first-level second base plate 2413b of delivery box 2408. Stated differently, third package K3 is stored in delivery box 2408. The operation thereafter is similar to that described above in (b) in FIG. 29C.

### Operation Example 2

FIG. 29E illustrates an example of how delivery box 2408 according to Operation Example 2 of Embodiment 3 moves when viewed from the side. FIG. 29F illustrates an example of how delivery box 2408 according to Operation Example 2 of Embodiment 3 moves when viewed from the front.

This operation example pertains to an operation performed when a given package among a plurality of packages is an unnecessary package, and the unnecessary package is placed on the lowest level. FIG. 29E and FIG. 29F illustrate first package K1, which is the unnecessary package in this example, being moved to the lowest level. This operation example also includes an insertion level, a first level after the insertion level, a second level after the first level, a third level after the second level, and a fourth level after the third level, from up to down in the vertical direction. In delivery box 2408 according to the present operation example, second guide portion 2422 is formed at a position corresponding to the third level, and a fourth level for placing an unnecessary package is further provided.

In the operation example, operations similar to Operation Example 1 are denoted with the same reference signs, and repeated description will be omitted as appropriate.

As illustrated in (a) in FIG. 29E and (a) in FIG. 29F, package transport device 10q stops at a location vertically above delivery box 2408 so as to arrange second package K2 vertically above top opening 2411a of delivery box 2408.

Next, package transport device 10q starts reeling out wire 51, and lowers second package K2 of package transport device 10q. Once second package K2 has been placed on the first-level third base plate 2413c of delivery box 2408, package transport device 10q disconnects second package K2.

Next, as illustrated in (b) in FIG. 29E and (b) in FIG. 29F, second package K2 is placed on the first-level third base plate 2413c of delivery box 2408. This causes sensor 2431 to transmit placement information to actuation controller 2433.

Actuation controller 2433 obtains placement information from sensor 2431, and controls actuator 2432 to pivot the third-level second base plate 2413b and displace second base plate 2413b into an orientation that is approximately parallel to the vertical direction.

Next, as illustrated in (c) in FIG. 29E, actuation controller 2433 controls actuator 2432 to move the displaced second base plate 2413b to first guide portion 2421 by sliding it along second guide portion 2422 located on the third level.

Next, as illustrated in (d) in FIG. 29E, actuation controller 2433 controls actuator 2432 to vertically upwardly slide, along first guide portion 2421, second base plate 2413b that was moved to first guide portion 2421.

Next, as illustrated in (e) in FIG. 29E, actuation controller 2433 controls actuator 2432 to slide second base plate 2413b to a position corresponding to the insertion level, and then holds second base plate 2413b for a predetermined period.

Delivery box 2408 may obtain, from a server or package transport device 10q or the like, unnecessary package information indicating that the package is unnecessary. If obtained, as illustrated in (c) in FIG. 29F, delivery box 2408 places the unnecessary package in the space located at the fourth level of delivery box 2408 so that the package corresponding to the obtained unnecessary package information is not collected. Unwanted packages are packages that were delivered in error, packages whose delivery was cancelled, etc. Once delivery box 2408 obtains unnecessary package information, actuation controller 2433 then controls actuator 2432 to lower third base plate 2413c and first base plate 2413a.

As illustrated in (f) in FIG. 29E and (d) in FIG. 29F, actuation controller 2433 controls actuator 2432 to lower third base plate 2413c from the first level to the second level and lower first base plate 2413a from the second level to the fourth level. The fourth level is the bottom of delivery box 2408. Since first package K1 placed on first base plate 2413a is an unnecessary package, actuation controller 2433 lowers first base plate 2413a to the fourth level, which is the above the bottom of delivery box 2408.

Once the predetermined period, which is the amount of time required for third base plate 2413c and first base plate 2413a to be lowered, elapses, actuation controller 2433 controls actuator 2432 to slide third base plate 2413c along third guide portion 2423, which is the insertion level, as illustrated in (g) in FIG. 29E and (d) in FIG. 29F. Here, actuation controller 2433 controls actuator 2432 to slide second base plate 2413b on third guide portion 2423 up to the horizontal central portion of the side portion of container 2411, i.e., the central portion in the widthwise direction of the side portion.

Next, as illustrated in (h) in FIG. 29E, actuation controller 2433 then controls actuator 2432 to pivot the third-level second base plate 2413b and displace second base plate 2413b into an orientation that is approximately parallel to the horizontal direction. With this, delivery box 2408 is in the state illustrated in (i) in FIG.29E.

Next, second base plate 2413b lowers with placement pieces 2414 to a position below third guide portion 2423, so as to be arranged at the first level, to achieve the state illustrated in (j) in FIG. 29E.

Next, as illustrated in (j) in FIG. 29E and (e) in FIG. 29F, package transport device 10q stops at a location vertically above delivery box 2408 so as to arrange third package K3 vertically above top opening 2411a of delivery box 2408.

Next, package transport device 10q starts reeling out wire 51, and lowers third package K3 of package transport device 10q. Once third package K3 has been placed on the first-level second base plate 2413b of delivery box 2408, package transport device 10q disconnects third package K3.

Next, as illustrated in (k) in FIG. 29E and (f) in FIG. 29F, third package K3 is placed on the first-level second base plate 2413b of delivery box 2408. Stated differently, third package K3 is stored in delivery box 2408.

With this, as illustrated in (I) in FIG. 29E and (f) in FIG. 29F, actuation controller 2433 obtains placement information from sensor 2431, and controls actuator 2432 to pivot the third-level third base plate 2413c and displace third base plate 2413c into an orientation that is approximately parallel to the vertical direction. The operation thereafter is similar to that described above in (c) in FIG. 29E.

Operation Example 3

FIG. 29G illustrates an example of how delivery box 2408 according to Operation Example 3 of Embodiment 3 moves when viewed from the side.

This operation example pertains to an operation performed when pivot axles 2415 of delivery box 2408 are formed at the edges of first base plate 2413a, second base plate 2413b, and third base plate 2413c. This operation example also includes an insertion level, a first level after the insertion level, a second level after the first level, a third level after the second level, and a fourth level after the third level, from up to down in the vertical direction. Base plates 2413 are pivoted at the fourth level.

In the operation example, operations similar to Operation Example 1 are denoted with the same reference signs, and repeated description will be omitted as appropriate.

As illustrated in (a) in FIG. 29G, package transport device 10q stops at a location vertically above delivery box 2408 so as to arrange second package K2 vertically above top opening 2411a of delivery box 2408.

Next, package transport device 10q starts reeling out wire 51, and lowers second package K2 of package transport device 10q. Once second package K2 has been placed on the first-level third base plate 2413c of delivery box 2408, package transport device 10q disconnects second package K2.

Next, as illustrated in (b) in FIG. 29G, second package K2 is placed on the first-level third base plate 2413c of delivery box 2408. This causes sensor 2431 to transmit placement information to actuation controller 2433.

Actuation controller 2433 obtains placement information from sensor 2431, and controls actuator 2432 to pivot second base plate 2413b that has been moved to the fourth level and displace second base plate 2413b into an orientation that is approximately parallel to the vertical direction.

Next, as illustrated in (c) in FIG. 29G, actuation controller 2433 controls actuator 2432 to move the displaced second base plate 2413b to first guide portion 2421 by sliding it along second guide portion 2422 located on the third level.

Next, as illustrated in (d) in FIG. 29G, actuation controller 2433 controls actuator 2432 to vertically upwardly slide, along first guide portion 2421, second base plate 2413b that was moved to first guide portion 2421.

Next, as illustrated in (e) in FIG. 29G, actuation controller 2433 controls actuator 2432 to slide second base plate 2413b to a position corresponding to the insertion level, and then holds second base plate 2413b for a predetermined period.

Next, as illustrated in (f) in FIG. 29G, actuation controller 2433 controls actuator 2432 to lower third base plate 2413c from the first level to the second level and lower first base plate 2413a from the second level to the third level.

Once the predetermined period, which is the amount of time required for third base plate 2413c and first base plate 2413a to be lowered, elapses, actuation controller 2433 controls actuator 2432 to slide third base plate 2413c along third guide portion 2423, which is the insertion level, as illustrated in (g) in FIG. 29G. Here, actuation controller 2433 controls actuator 2432 to slide second base plate 2413b on third guide portion 2423. First base plate 2413a is lowered from the third level to the fourth level.

Next, as illustrated in (h) in FIG. 29G, actuation controller 2433 then controls actuator 2432 to pivot the third-level second base plate 2413b and displace second base plate 2413b into an orientation that is approximately parallel to the horizontal direction. With this, delivery box 2408 is in the state illustrated in (i) in FIG. 29G.

Next, second base plate 2413b lowers with placement pieces 2414 to a position below third guide portion 2423, so as to be arranged at the first level, to achieve the state illustrated in (j) in FIG. 29G.

Next, as illustrated in (j) in FIG. 29G, package transport device 10q stops at a location vertically above delivery box 2408 so as to arrange third package K3 vertically above top opening 2411a of delivery box 2408.

Next, package transport device 10q starts reeling out wire 51, and lowers third package K3 of package transport device 10q. Once third package K3 has been placed on the first-level second base plate 2413b of delivery box 2408, package transport device 10q disconnects third package K3.

Next, as illustrated in (k) in FIG. 29G, second base plate 2413b is placed on the first-level third base plate 2413c of delivery box 2408. Stated differently, third package K3 is stored in delivery box 2408. The operation thereafter is similar to that described above in (b) in FIG. 29G.

### Operation Example 4

FIG. 29H illustrates an example of how delivery box 2408 according to Operation Example 4 of Embodiment 3 moves when viewed from the side.

This operation example pertains to an operation performed when foldable base plates 2413 are used in delivery box 2408. The operation example also includes a first level, a second level after the first level, and a third level after the second level, from up to down in the vertical direction. Base plates 2413 are pivoted at the third level.

In the operation example, operations similar to Operation Example 1 are denoted with the same reference signs, and repeated description will be omitted as appropriate.

As illustrated in (a) in FIG. 29H, package transport device 10q stops at a location vertically above delivery box 2408 so as to arrange second package K2 vertically above top opening 2411a of delivery box 2408.

Next, package transport device 10q starts reeling out wire 51, and lowers second package K2 of package transport device 10q. Once second package K2 has been placed on the first-level third base plate 2413c of delivery box 2408, package transport device 10q disconnects second package K2.

Next, as illustrated in (b) in FIG. 29H, second package K2 is placed on the first-level third base plate 2413c of delivery box 2408. This causes sensor 2431 to transmit placement information to actuation controller 2433.

Actuation controller 2433 obtains placement information from sensor 2431, and controls actuator 2432 to pivot second base plate 2413b that has been moved to the fourth level and displace second base plate 2413b into an orientation that is approximately parallel to the vertical direction. More specifically, actuation controller 2433 controls actuator 2432 to pivot second base plate 2413b around its axis of rotation, whereby second base plate 2413b is bent at the hinge in the center portion thereof and folded as illustrated in (c) in FIG. 29H.

Next, as illustrated in (c) in FIG. 29H, actuation controller 2433 controls actuator 2432 to move the displaced second base plate 2413b to first guide portion 2421 by sliding it along second guide portion 2422a located on the third level.

Next, as illustrated in (d) in FIG. 29H, actuation controller 2433 controls actuator 2432 to vertically upwardly slide, along first guide portion 2421, second base plate 2413b that was moved to first guide portion 2421.

Next, as illustrated in (e) in FIG. 29H, actuation controller 2433 controls actuator 2432 to slide second base plate 2413b to a position corresponding to the first level, and then holds second base plate 2413b for a predetermined period.

Next, as illustrated in (f) in FIG. 29H, actuation controller 2433 controls actuator 2432 to lower third base plate 2413c from the first level to the second level and lower first base plate 2413a from the second level to the third level.

Next, it waits for a predetermined period of time, which is an amount of time required for third base plate 2413c and first base plate 2413a to be lowered.

Next, as illustrated in (g) in FIG. 29H, actuation controller 2433 controls actuator 2432 to expand the folded second base plate 2413b. Simply by having actuator 2432 rotate second base plate 2413b around pivot axle 2415, second base plate 2413b is expanded at the first level by third guide section 2423a and displaced into an orientation that is approximately parallel to the horizontal direction. This places second base plate 2413b in the state illustrated in (h) in FIG. 29H.

Next, as illustrated in (i) in FIG. 29H, actuation controller 2433 controls actuator 2432 to lock second base plate 2413b to prevent second base plate 2413b from being displaced.

Next, as illustrated in (j) in FIG. 29H, package transport device 10q stops at a location vertically above delivery box 2408 so as to arrange third package K3 vertically above top opening 2411a of delivery box 2408.

Next, package transport device 10q starts reeling out wire 51, and lowers third package K3 of package transport device 10q. Once third package K3 has been placed on the first-level second base plate 2413b of delivery box 2408, package transport device 10q disconnects third package K3.

Next, as illustrated in (k) in FIG. 29H, third package K3 is placed on the first-level second base plate 2413b of delivery box 2408. Stated differently, third package K3 is stored in delivery box 2408. The operation thereafter is similar to that described above in (b) in FIG. 29H.

### VARIATION OF EMBODIMENT 3

FIG. 29I illustrates an example of how delivery box 2408a according to a variation of Embodiment 3 moves when viewed from the side.

Hereinafter, as illustrated in FIG. 29I, the basic configuration of the package transport device according to the present variation is the same as the basic configuration of the package transport device according to Embodiment 3, etc. Although the delivery box according to the present variation differs from Embodiment 3, etc., in that it stores a package inside box 2453 after moving a plurality of packages vertically, the basic configuration of delivery box 2408a according to the present variation is the same as the basic configuration of the delivery box according to, for example, Embodiment 1. Accordingly, regarding the basic configurations of package transport device 10q and delivery box 2408a according to the present variation, the same reference signs as above are used, and repeated description will be omitted where appropriate. The present variation may also be used with unmanned aerial vehicles according to embodiments other than Embodiment 1.

Delivery box 2408a according to the present variation is an elevator, and is capable of vertically moving carriage 2451 inside elevator path 2452. Delivery box 2408a includes carriage 2451 that stores a package, elevator path 2452 along which carriage 2451 is moved up and down, and box 2453 that stores a package.

Carriage 2451 is a bottomed container with an open top, and is capable of storing a package through top opening 2411a.

Carriage 2451 is moved up and down by actuation controller 2433 controlling actuator 2432. Actuator 2432 includes ropes, balancing weights, winders, pulleys, etc. When moving up or down, carriage 2451 moves vertically by being guided along a guide rail provided in elevator path 2452.

Carriage 2451 also includes unloading opening 2451a for carrying packages into the interior of box 2453. Carriage 2451 includes unloading door 2451b that can open and close unloading opening 2451a. Unloading door 2451b can open and close unloading opening 2451a for carrying out packages. Unloading door 2451b can be opened and closed by door actuator 2451c provided in carriage 2451 being controlled by actuation controller 2433.

Carriage 2451 includes pin 2456. Pin 2456 is arranged on the bottom of carriage 2451. Pin 2456 is protruded and retracted by pin actuator 2455d provided in box 2453. When protruded, pin 2456 can press down on loading door 2454b that covers loading opening 2453a of elevator path 2452 to slide loading door 2454b and open loading opening 2453a. In other words, pin 2456 is provided on the bottom of carriage 2451, on the side of elevator path 2452 where loading door 2454b is located. When retracted, pin 2456 does not press loading door 2454b, which covers loading opening 2453a of elevator path 2452.

Carriage 2451 includes unloading device 2455 that can push a package stored therein out through unloading opening 2451a. When unloading opening 2451a and loading opening 2453a of box 2453 are in communication, unloading device 2455 can push the stored package into box 2453. More specifically, unloading device 2455 includes an extendable arm 2455a, pushing plate 2455b, and pushing actuator 2455c. In unloading device 2455, actuation controller 2433 controls pushing actuator 2455c to cause arm 2455a to extend and pushing plate 2455b to push the package. After pushing the package, actuation controller 2433 controls pushing actuator 2455c to retract arm 2455a, which pulls pushing plate 2455b back near the side wall inside carriage 2451.

Elevator path 2452 is an enclosure that extends vertically, and can house carriage 2451 therein. Elevator path 2452 allows carriage 2451 to be moved vertically by means of a guide rail.

Top opening 2411a through which packages pass is formed in the top portion on the vertical top of elevator path 2452. Elevator path 2452 includes top lid 2452a. Top lid 2452a is provided on the top portion of elevator path 2452, and is capable of opening and closing top opening 2411a for bringing packages into the space through top opening 2411a. Top lid 2452a covers top opening 2411a when closed and opens top opening 2411a when opened.

Top lid 2452a is pivoted by the force of carriage 2451 moving vertically upward, which presses it vertically upward and opens top opening 2411a. When top lid 2452a is no longer pressed as a result of carriage 2451 moving vertically downward, it is pivoted by spring hinges so as to close top opening 2411a. Stated differently, the spring hinges are biased such that top lid 2452a closes top opening 2411a.

Note that top lid 2452a opens outward relative to elevator path 2452, but may open inward into the space inside elevator path 2452. Top lid 2452a is not limited to a single-swing opening mechanism, and may employ a dual-swing opening mechanism.

Loading opening 2453a through which a package can be carried in is formed on the side portion of elevator path 2452. Elevator path 2452 includes loading door 2454b that can open and close loading opening 2453a. In the present embodiment, a plurality of incoming openings 2453a are formed on elevator path 2452 along the vertical direction. Accordingly, elevator path 2452 according to the present embodiment includes a plurality of loading doors 2454b.

Loading doors 2454b are provided on the side portion of elevator path 2452, and are capable of opening and closing loading openings 2453a by moving in the vertical direction to bring in, through loading opening 2453a, packages from carriage 2451 that moves inside elevator path 2452. Each loading door 2454b opens loading opening 2453a by being pushed down by pin 2456 of carriage 2451 and sliding vertically downward. Once loading door 2454b is no longer pressed down by pin 2456 of carriage 2451, the force of the spring slides loading door 2454b vertically upward so as to close loading opening 2453a. Stated differently, the spring biases loading door 2454b so as to close loading opening 2453a.

The plurality of loading openings 2453a are coupled to the plurality of boxes 2453 in one-to-one correspondence. More specifically, the plurality of boxes 2453 are coupled to elevator path 2452. The plurality of boxes 2453 are arranged vertically so as to correspond one-to-one with the plurality of loading openings 2453a in elevator path 2452.

Retrieval opening 2453d through which packages can be retrieved is formed in each of the plurality of boxes 2453. Each of the plurality of boxes 2453 includes retrieval door 2453e that can open and close retrieval opening 2453d.

Retrieval door 2453e is provided on the side portion of box 2453 and can open and close retrieval opening 2453d for retrieving packages placed in the interior space through retrieval opening 2453d. Retrieval door 2453e covers retrieval opening 2453d when closed and exposes retrieval opening 2453d when opened.

### Operation Example

As illustrated in FIG. 29I, with delivery box 2408a according to this operation example, four side openings 2412a are formed in elevator path 2452. Delivery box 2408a includes four loading doors 2454b that cover the four side openings 2412a, and four boxes 2453. In this operation example, a package is stored in box 2453 on the first level from the vertical top, and exemplifies a case in which a package is put into box 2453 on the second level from the vertical top.

First, as illustrated in (a) in FIG. 29I, right before package transport device 10q arrives at a location vertically above elevator path 2452, actuation controller 2433 of delivery box 2408a controls actuator 2432 to move carriage 2451 vertically upward. This moves carriage 2451 vertically upward and causes carriage 2451 to contact top lid 2452a of elevator path 2452. For example, actuation controller 2433 receives the position information of package transport device 10q from package transport device 10q, and/or obtains arrival alert signal alerting of the arrival of package transport device 10q from package transport device 10q, and controls actuator 2432 so as to move carriage 2451 vertically upward when package transport device 10q arrives.

Next, as illustrated in (b) in FIG. 29I, actuation controller 2433 controls actuator 2432 to move carriage 2451 further vertically upward. This causes carriage 2451 to push top lid 2452a vertically upward and thus pivot top lid 2452a and open top opening 2411a.

Next, as illustrated in (c) in FIG. 29I, actuation controller 2433 controls actuator 2432 to move carriage 2451 to the top end of elevator path 2452. This causes carriage 2451 to push top lid 2452a vertically upward by the force of the vertically upward movement, and thus pivot top lid 2452a and completely open top opening 2411a. Package transport device 10q then arrives or has arrived at a location vertically above top opening 2411a. Package transport device 10q therefore extends the wire to lower the package, which is then stored in carriage 2451.

Next, as illustrated in (d) in FIG. 29I, when the package is stored in carriage 2451, actuation controller 2433 controls actuator 2432 to move carriage 2451 vertically downward. This causes carriage 2451 to move vertically downward which stops carriage 2451 from pressing top lid 2452a, causing top lid 2452a to pivot via spring hinges and close top opening 2411a as illustrated in (e) in FIG. 29I.

As illustrated in (e) in FIG. 29I, actuation controller 2433 controls pin actuator 2455d to cause pin 2456 to protrude. More specifically, actuation controller 2433 causes pin 2456 to protrude so that pin 2456 is positioned between loading door 2454b of the first-level box 2453 and loading door 2454b of the second-level box 2453.

Next, as illustrated in (f) in FIG. 29I, in order to place a package in box 2453 on the second level from the vertical top, actuation controller 2433 controls actuator 2432 to move carriage 2451 to a position at which loading opening 2453a of the second-level box 2453 and unloading opening 2451a of carriage 2451 oppose each other, and stops carriage 2451. Here, by pin 2456 pushing on loading door 2454b of the second-level box 2453, carriage 2451 moves vertically downward and loading door 2454b slides vertically downward. Here, the second-level loading door 2454b is housed within the third-level loading door 2454b. Stated differently, the top end of loading door 2454b is open and a cavity is formed inside. Loading door 2454b may be a flat plate, in which case it may overlap with the third-level loading door 2454b.

This opens loading opening 2453a. Stated differently unloading opening 2451a and loading opening 2453a oppose and are in communication with each other.

Next, as illustrated in (g) in FIG. 29I, since unloading opening 2451a and loading opening 2453a of box 2453 are in communication, unloading device 2455 pushes the package on carriage 2451 into box 2453. More specifically, actuation controller 2433 controls pushing actuator 2455c to extend arm 2455a and push the package via pushing plate 2455b. This moves package from carriage 2451 into box 2453 through unloading opening 2451a and loading opening 2453a.

Next, as illustrated in (h) in FIG. 29I, once the package is pushed and disposed in box 2453, actuation controller 2433 controls pushing actuator 2455c to retract arm 2455a and bring pushing plate 2455b back near the side wall inside carriage 2451. Actuation controller 2433 controls pin actuator 2455d to pull pin 2456 back in. Loading door 2454b slides vertically upward to close loading opening 2453a by spring force. This closes loading opening 2453a with loading door 2454b. Actuation controller 2433 controls door actuator 2451c to close unloading opening 2451a with unloading door 2451b. This closes unloading opening 2451a with unloading door 2451b.

Thus, in the present variation, carriage 2451 of delivery box 2408a can be raised and lowered vertically like an elevator to bring packages into the chambers.

Delivery box 2408a according to the present variation determines which box 2453 will house the package received by carriage 2451. Actuation controller 2433 of delivery box 2408a may check the availability of box 2453 and give priority to box 2453 on an upper level or box 2453 on a lower level to store packages.

Some of the plurality of boxes 2453 in delivery box 2408a according to the present variation may have refrigeration and/or freezing capabilities. In such cases, delivery box 2408a may obtain, from package transport device 10q or the management system that manages the delivery, etc., carried out by package transport device 10q, storage temperature information indicating whether a package it receives from package transport device 10q needs to be stored at room temperature, needs to be refrigerated, or needs to be kept frozen. By obtaining the storage temperature information of the package, delivery box 2408a stores the package in one of a room-temperature box, a refrigerated box, or a freezer box that corresponds to the temperature indicated in the storage temperature information of the package.

### [Embodiment 4]

FIG. 30A is a block diagram illustrating self-driving box 2408b and operations management system 2400 according to Embodiment 4. FIG. 30B is a front view illustrating an example of self-driving box 2408b according to Embodiment 4 when viewed from the front. FIG. 30C is a side view illustrating an example of self-driving box 2408b according to Embodiment 4 when viewed from the side.

Hereinafter, as illustrated in FIG. 30B and FIG. 30C, the basic configuration of package transport device 10q according to the present embodiment is the same as the basic configuration of the unmanned aerial vehicle according to Embodiment 1, etc., and the same as the basic configuration of package transport device 10q according to Embodiment 1, etc. Although self-driving box 2408b according to the present embodiment differs from Embodiment 3, etc., in that it can travel, the basic configuration of self-driving box 2408b is the same as the basic configuration of the delivery box according to Embodiment 1, etc. Accordingly, regarding the basic configurations of package transport device 10q and self-driving box 2408b according to the present embodiment, the same reference signs as above are used, and repeated description will be omitted where appropriate. The present embodiment may also be used with unmanned aerial vehicles according to embodiments other than Embodiment 1.

Self-driving box 2408b is an Unmanned Ground Vehicle (UGV) that is capable of self-driving. Self-driving box 2408b houses a plurality of packages. In other words, self-driving box 2408b can house a plurality of packages to be delivered to different receivers. Thus, self-driving box 2408b can deliver packages to each of the different receivers. Self-driving box 2408b is one example of the delivery box.

Self-driving box 2408b is housed in housing 2460 at the receiver. The vertical top of housing 2460 is open, and housing 2460 can receive packages transported by package transport device 10q. Housing 2460 includes opening 2461 through which self-driving box 2408b can enter and exit, and bottom portion 2462. Opening 2461 is provided with front door 2463. Front door 2463 is movable along the vertical direction. When self-driving box 2408b is loaded with a package and self-driving box 2408b delivers the package to its destination, front door 2463 of housing 2460 moves vertically upward to open opening 2461 of housing 2460. When self-driving box 2408b is done delivering the package to its destination, front door 2463 of housing 2460 moves vertically upward to open opening 2461 of housing 2460. When self-driving box 2408b departs or returns from housing 2460, front door 2463 of housing 2460 moves vertically downward, closing opening 2461 of housing 2460. Housing 2460 includes bottom portion 2462 on which self-driving box 2408b can be placed. Bottom portion 2462 is a floor plate that is approximately several centimeters thick. Accordingly, bottom portion 2462 includes slope 2462a that guides to opening 2461. Housing 2460 is one example of the delivery box.

Self-driving box 2408b waits inside housing 2460 and causes top lid 2471, which covers top opening 2460k, to open when package transport device 10q brings a package. This stores the package in self-driving box 2408b. Self-driving box 2408b opens or closes top opening 2460k according to instructions (opening instruction or closing instruction) of operations management system 2400 and/or package transport device 10q.

Operations management system 2400 manages the operation of package transport device 10q. More specifically, operations management system 2400 manages the travel route, travel speed, delivery order of packages, etc., based on the position information of the receiver, estimated time of arrival at the receiver, position information of the sender, and delivery time disclosed by the sender. Operations management system 2400 may be provided in package transport device 10q or provided in a management server that manages self-driving box 2408b and package transport device 10q, etc.

If there is no vacancy inside self-driving box 2408b, since self-driving box 2408b will not be able to store a package even if one is delivered, self-driving box 2408b transmits the internal vacancy status to operations management system 2400.

Next, the size of housing 2460 and the size of self-driving box 2408b will be described.

Housing 2460 has a height of 2100 mm and a width of 1200 mm. Opening 2461 has a height of 850 mm and a width of 1000 mm. Regarding self-driving box 2408b, container 2470 has an inner dimension of 50 cm, an outer dimension of 55 cm, and self-driving box 2408b has a width of 60 cm. The length of top lid 2471 is 25 cm. The length of slope 2462a is 10 cm. Note that the disclosed sizes of housing 2460 and self-driving box 2408b are non-limiting examples.

As illustrated in FIG. 30A through FIG. 30C, self-driving box 2408b includes container 2470, top lid 2471, obtainer 2475, actuator 2477, actuation controller 2478, and movement mechanism 2479.

Container 2470 defines a space for storing a package. Container 2470 is an enclosure for storing a package. Container 2470 is exemplified as rectangular in shape, but may be of any shape as long as it can store a package. Top opening 2460k coverable by the closing of top lid 2471 is formed in the top portion of container 2470, which is located in the vertically upward part of container 2470.

Top lid 2471 is provided on the top of container 2470, and is capable of opening and closing top opening 2460k for inserting a package into the space through top opening 2460k. Top lid 2471 covers top opening 2460k when closed and opens top opening 2460k when opened. Top lid 2471 is held so as to be pivotable around a predetermined axis relative to container 2470.

Obtainer 2475 can obtain an opening instruction and can obtain a closing instruction, which are instructions to open or close top lid 2471, from operations management system 2400 and/or package transport device 10q. Obtainer 2475 may be a camera sensor capable of detecting package transport device 10q or a package located vertically above self-driving box 2408b. In such cases, obtainer 2475 may output its detection results to actuation controller 2478.

In the present embodiment, top opening 2460k of self-driving box 2408b is square, so top lid 2471 is provided on each of the four sides. However, three or fewer or five or more top lids 2471 may be provided on self-driving box 2408b.

When obtainer 2475 obtains an opening instruction, or when obtainer 2475 detects package transport device 10q or a package, actuation controller 2478 can control actuator 2477 to open top lid 2471.

Actuator 2477 is an actuator including gears, belts, etc. Actuator 2477 is capable of pivoting a plurality of top lids 2471.

Movement mechanism 2479 includes wheels, wheel actuators, an ECU, etc. The wheels are provided on container 2470. The ECU can rotate the wheels by controlling the wheel actuators. The ECU can drive self-driving box 2408b based on map information mapped by the receiver.

### Operation Example

FIG. 31 is a flowchart illustrating an example of an operation of self-driving box 2408b according to Embodiment 4.

First, package transport device 10q flies to a location vertically above self-driving box 2408b, which is the receiver, and arrives at a location vertically above self-driving box 2408b (S2401).

Next, operations management system 2400 checks with self-driving box 2408b at the receiver where package transport device 10q is to deliver the package to see if self-driving box 2408b is ready to receive the package (S2402).

Stated differently, operations management system 2400 determines whether self-driving box 2408b is prepared to receive the package (S2403). More specifically, operations management system 2400 obtains information from self-driving box 2408b at the receiver indicating the internal vacancy status, i.e., whether a package can be stored or not. From the information indicating vacancy status, operations management system 2400 determines whether or not there is room inside self-driving box 2408b at the receiver to store the package.

If operations management system 2400 determines that self-driving box 2408b is not prepared to receive the package (NO in S2403), operations management system 2400 causes package transport device 10q to wait for a predetermined period (S2409), and then returns to step S2402.

However, if operations management system 2400 determines that self-driving box 2408b is prepared to receive the package (YES in S2403), operations management system 2400 transmits an opening instruction to self-driving box 2408b at the receiver.

Next, upon receiving the opening instruction from operations management system 2400, self-driving box 2408b opens top opening 2460k by opening top lid 2471 (S2404). Here, as illustrated in FIG. 30B and FIG. 30C, top lid 2471 is open in four directions around top opening 2460k. Accordingly, top lid 2471 can close the gap between container 2470 of self-driving box 2408b and housing 2460 in an upward sloping position from top opening 2460k to housing 2460. Stated differently, when package transport device 10q lowers a package to self-driving box 2408b, top lid 2471 can guide the package into top opening 2460k.

For example, even if the package is not aligned with top opening 2460k of self-driving box 2408b, as illustrated by the dashed lines in FIG. 30C, the package will still be guided to top lid 2471 by the contact of the package with top lid 2471. Even if the package gets caught on top lid 2471, the package can be more securely stored in self-driving box 2408b because package transport device 10q can smoothly guide the package to top lid 2471 by reeling up and/or reeling down the wire about a centimeter to move the package.

Next, operations management system 2400 sends a package lowering instruction to package transport device 10q that has arrived at the receiver. This causes package transport device 10q to lower the package and store the package in self-driving box 2408b (S2405).

Next, after storing the package in self-driving box 2408b, package transport device 10q transmits a storage complete notification to operations management system 2400 (S2406).

Next, upon receipt of the storage complete notification from package transport device 10q, operations management system 2400 transmits a closing instruction to self-driving box 2408b at the receiver. As a result, upon receipt of the closing instruction from operations management system 2400, self-driving box 2408b closes top opening 2460k by closing top lid 2471 (S2407).

Next, operations management system 2400 transmits an opening instruction for opening front door 2463 to housing 2460, and transmits a delivery instruction to self-driving box 2408b. Housing 2460 opens front door 2463 according to the instruction from operations management system 2400 (S2408). This opens opening 2461 of front door 2463. Upon receipt of the delivery instruction from operations management system 2400, self-driving box 2408b starts moving to the receiver.

Although instructions are obtained from operations management system 2400 in this operation example, instructions may be obtained from package transport device 10q and executed.

### [Embodiment 5]

FIG. 32 illustrates an example of the relationship between package transport device 10q and a power line according to Embodiment 5.

Hereinafter, as illustrated in FIG. 32, since the basic configuration of package transport device 10q according to the present embodiment is the same as the basic configuration of the unmanned aerial vehicle of Embodiment 1 and the same as the basic configuration of the package transport device according to Embodiment 1 and the like, regarding the basic configuration of package transport device 10q in the present embodiment, the same reference signs as above will be used and repeated description will be omitted where appropriate. Package transport device 10q according to the present embodiment differs from Embodiment 1, etc., in that it can inspect the state of the power line. The present embodiment may also be used with unmanned aerial vehicles according to embodiments other than Embodiment 1.

Package transport device 10q includes camera sensor 45 and a processor in addition to the vehicle main body, the communicator, the battery, the storage, etc.

Camera sensor 45 is an imaging device that is provided in package transport device 10q and can capture images of power lines arranged along rail 7. Camera sensor 45 captures an image of the power line and outputs image information, which is the captured image, to the processor. For example, the image information includes information indicating the relative position (distance) and the like between the power line and camera sensor 45. Camera sensor 45 may be, for example, a time-of-flight (TOF) camera or a range finding sensor or the like.

The processor determines the presence or absence of degradation in the power line based on the image information obtained from camera sensor 45. Degradation includes, for example, cracks, breaks, etc., in the power line. Based on the image information, the processor associates the information indicating the degraded position of the power line if it is degraded and the image information corresponding to the degraded position and stores the associated information in the storage. The processor may transmit the information indicating the degraded position and the image information corresponding to the degraded position to the operations management system via the communicator.

The processor also calculates the amount of deflection of rail 7 when package transport device 10q carrying a package is traveling on rail 7.

More specifically, as illustrated in FIG. 32, two adjacent utility poles are strung with rail 7 and a power line. Here, power line length is L1, power line height is h3, rail 7 height is h1, and rail 7 horizontal tension is T (N). The weight of the package is W1, and the weight of package transport device 10q is W2.

Here, the amount of deflection x is expressed as x = (W1 + W2) × L1² / 8T [Expression 1].

The processor can accurately calculate the distance from camera sensor 45 to the power line by calculating the amount of deflection using the above Expression 1. Therefore, the processor corrects the focus of camera sensor 45 according to the distance from camera sensor 45 to the power line and causes camera sensor 45 to capture an image of the power line. Since weights W1 and W2 are displaced by the weight of the package or the type of package transport device 10q, each time package transport device 10q travels along rail 7, the processor calculates the amount of deflection of rail 7, corrects the focus of camera sensor 45, and causes camera sensor 45 to capture an image of the power line. This allows for clear imaging of the power lines, which means the supervisors of the power lines can accurately assess the condition of the power lines.

It may not be possible to accurately obtain at least one of the following: power line length L1, power line height h3, rail 7 height h1, or horizontal tension T of rail 7.

In such cases, package transport device 10q may include an altitude sensor and a distance sensor. The altitude sensor can measure the distance from package transport device 10q to the ground surface. The distance sensor can measure the distance from the distance sensor to a utility pole. Package transport device 10q can obtain bottom surface height h4, which is the height from the ground surface to the package, from the altitude sensor. Package transport device 10q can also obtain distance L2, which is the distance from a utility pole to the distance sensor, from the distance senso r.

The processor may estimate the amount of deflection based on distance L2 and bottom height h4. The processor may also estimate power line length L1 based on the traveling speed of package transport device 10q and distance L2. The processor may calculate horizontal tension T from the estimated power line length L1, deflection x, and weights W1 and W2 using the above Expression 1.

Each time package transport device 10q travels along rail 7, the processor may search for the optimum focal distance by imaging the power line at varying focal distances. Once the optimum focal length is found, the processor may calculate power line height h3.

### [Embodiment 6]

FIG. 33A is a front view of shipment box 2408c according to Embodiment 6. FIG. 33B is a side view of shipment box 2408c according to Embodiment 6. FIG. 33C is a top view of shipment box 2408c according to Embodiment 6.

Hereinafter, as illustrated in FIG. 33A, FIG. 33B, and FIG. 33C, since the basic configuration of package transport device 10q according to the present embodiment is the same as the basic configuration of the unmanned aerial vehicle of Embodiment 1 and the same as the basic configuration of the package transport device according to Embodiment 1 and the like, regarding the basic configuration of package transport device 10q in the present embodiment, the same reference signs as above will be used and repeated description will be omitted where appropriate. Shipment box 2408c according to the present embodiment differs from Embodiment 1, etc., in that the packages are segmented. The present embodiment may also be used with unmanned aerial vehicles according to embodiments other than Embodiment 1.

Shipment box 2408c can house a plurality of packages. Shipment box 2408c is divided into several interior spaces by a plurality of partition plates. Stated differently, shipment box 2408c is provided with a plurality of shelves 2481 (chambers). Shipment box 2408c is one example of the delivery box.

A user may use one shelf 2481 per receiver. Stated differently, a user cannot place packages for different receivers on one shelf 2481.

Shipment box 2408c illustrated in FIG. 33A includes three levels of shelves 2481 along the vertical direction. Each level is set up to have different delivery times. For example, the delivery time for the first-level shelves 2481, which is the uppermost level, is set to from 10:00 to 12:00. The delivery time for the next, second-level shelves 2481 is set to from 12:00 to 14:00. The delivery time for the next, third-level shelves 2481 is set to from 14:00 to 16:00.

Each of the first, second, and third levels has six shelves 2481 arranged along the left-and-right direction. Each of the first, second, and third levels has shelves that can accommodate room temperature packages, packages that need to be refrigerated, and packages that need to be kept frozen.

The delivery time, the number of shelves 2481 in shipment box 2408c, and the number of shelves 2481 in the left-and-right direction exemplified in the present embodiment are non-limiting examples.

Each shelf 2481 has a door, which is not illustrated in the figure. The door is marked with a QR code (registered trademark) that can identify shelf 2481. Shelf information, which is the information indicated by the QR code marked on shelf 2481, includes the identifier of shelf 2481, the location of shelf 2481 in shipment box 2408c, and the controlled temperature (room temperature, refrigerated, or frozen) of shelf 2481. Shelves 2481 whose controlled temperature is refrigerated are shown with shaded hatching, and shelves 2481 whose controlled temperature is frozen are shown with fine shaded hatching.

Packages are also marked with a QR code (registered trademark). Package information, which is the information indicated by the QR code (registered trademark) marked on the package, includes the contents of the package, the address of the receiver, and the delivery time.

When a user sends a package, the package information indicated by the QR code (registered trademark) marked on the package to be sent is linked to the shelf information of the QR code (registered trademark) marked on shelf 2481 that holds the package to be sent.

Thus, the terminal device of the user houses the package on shelf 2481 of shipment box 2408c and requests the operations management system to deliver the package. Here, the terminal device transmits, for example, the delivery time, the package information, and the shelf information. The operations management system sends package transport device 10q to shipment box 2408c corresponding to the delivery request for pickup. This causes package transport device 10q to arrive at a position vertically above shipment box 2408c. Package transport device 10q lowers the package through opening 2482 in the top of shipment box 2408c and removes the requested package for delivery from shipment box 2408c. More specifically, when a user sends a package, since the package information indicated by the QR code (registered trademark) marked on the package to be sent and the shelf information indicated by the QR code (registered trademark) marked on shelf 2481 are linked, by obtaining this information from the operations management system, package transport device 10q can stop at a position vertically above opening 2482 through which the package associated with the delivery request can be retrieved.

### Operation Example

FIG. 34 is a flowchart illustrating an example of an operation of shipment box 2408c according to Embodiment 6.

First, if sending a package, the user links the QR code (registered trademark) marked on the package with the QR code (registered trademark) marked on shelf 2481 of shipment box 2408c where the package is to be stored (S2411). Here, the user may link the QR codes (registered trademark) by reading the QR codes (registered trademark) using their terminal device. The user may link the QR codes (registered trademark) by reading the QR code (registered trademark) marked on the package using shipment box 2408c. In this way, when a package is stored in shipment box 2408c, the package information of the package to be delivered is linked to the shelf information of shelf 2481 where the package to be sent is stored. Note that the package's QR code (registered trademark) is marked on the package by the user when the user sends the package.

Next, the operations management system refers to the linked package information and shelf information in shipment box 2408c for all packages to be delivered that are stored in shipment box 2408c. The operations management system calculates the order in which the packages are to be delivered to ensure that each package is delivered by the delivery time indicated in the package information (S2412).

Next, the operations management system determines whether the user has requested a change in the delivery time of the package (S2413).

If the operations management system determines the user has requested a change in the delivery time of the package (YES in S2413), the operations management system recalculates the order in which the packages are to be delivered to ensure that each package is delivered by the delivery time indicated in the package information. The operations management system transmits instructions to package transport device 10q to deliver the packages in the recalculated order instead of the originally scheduled delivery order. Package transport device 10q then delivers the packages in the recalculated order (S2414).

If the operations management system determines the user has not requested a change in the delivery time of the package (NO in S2413), the operations management system transmits instructions to package transport device 10q to deliver the packages in the originally scheduled delivery order. Package transport device 10q then delivers the packages in the originally scheduled delivery order (S2415).

Thus, even if a user requests a change in the delivery time for a package, the operations management system can recalculate the order in which packages are delivered for all packages stored in shipment box 2408c because the package information is linked to the shelf information. This optimizes the order in which packages are delivered. For example, in a store, an employee can simply place packages in shipment box 2408c, and package transport device 10q will automatically retrieve the packages and deliver them to their receivers in an order optimized by package transport device 10q.

### [Embodiment 7]

Hereinafter, since the basic configuration of package transport device 10q according to the present embodiment is the same as the basic configuration of the unmanned aerial vehicle of Embodiment 1 and the same as the basic configuration of the package transport device according to Embodiment 1 and the like, regarding the basic configuration of package transport device 10q in the present embodiment, the same reference signs as above will be used and repeated description will be omitted where appropriate. The operations management system according to the present embodiment differs from that of Embodiment 1, etc., in that it calculates a deliverability window, for example. The present embodiment may also be used with lifting systems and unmanned aerial vehicles according to embodiments other than Embodiment 1.

### Operation Example 1

FIG. 35 illustrates a map according to Embodiment 7 that includes, for example, the user's home and vending machines 2408d in the vicinity of the user's home. FIG. 36A is a flowchart illustrating an example of an operation of a delivery service management system according to Embodiment 7. Note that in the present disclosure, "vending machine" 2408d may be read as a "delivery reception box" or a "delivery reception device".

This operation example pertains to a case in which package transport device 10q delivers packages to delivery boxes in the user's vicinity, during the deliverable time frames of the delivery boxes. In this operation example, vending machine 2408d is used as one example of the delivery box.

First, the user opens the application operated by the delivery service management system using a terminal device.

Next, the delivery service management system searches delivery reservation statuses associated with each vending machine 2408d in the vicinity of the user. For example, as illustrated in FIG. 35, the delivery service management system searches for vending machines 2408d in the vicinity of the user's home and searches the statuses delivery reservations made by a plurality of users for each vending machine 2408d retrieved. As illustrated in FIG. 35 and FIG. 36A, the delivery service management system derives the deliverable time frames reserved by a plurality of users for all retrieved vending machines 2408d (S2421).

Next, the delivery service management system searches past congestion statuses associated with each vending machine 2408d in the vicinity of the user. The delivery service management system calculates pickup deadlines based on retrieved past congestion statuses (S2422). The pickup deadline is a predetermined period of time, starting when the product ordered by the user is delivered to vending machine 2408d, the user has to pick up the product.

As illustrated in FIG. 35, the pickup deadline is set to 15 minutes if, for example, the average occupancy rate of vending machine 2408d per hour is at least 70% in past congestion statuses. If the average occupancy rate of vending machine 2408d per hour is greater than or equal to 40% and less than 70%, the pickup deadline is set to 30 minutes. If the average occupancy rate of vending machine 2408d per hour is less than 40%, the pickup deadline is set to 1 hour. Note that the above values are non-limiting examples of average occupancy rates and pickup deadlines for those rates. Accordingly, the occupancy rates and the pickup deadlines for those rates can be set and changed as needed. The average occupancy rate is the percentage of time that the vending machine 2408d is full during the operating hours in which delivery service is provided.

Next, as illustrated in FIG. 36A, the delivery service management system displays, on the application operated by the delivery service management system, the deliverability window for each vending machine 2408d (S2423). More specifically, as illustrated in FIG. 35, the delivery service management system displays, as the deliverability window, a table including delivery time frames, pickup deadlines, and symbols (circles and Xs) indicating whether or not delivery is possible on the display screen showing the application. The delivery service management system then ends the processing illustrated in the flowchart of FIG. 36A.

### Operation Example 2

FIG. 36B is a flowchart illustrating an example of an operation of an operations management system according to Embodiment 7.

This operation example assumes a case in which package transport device 10q moves to transport a package to the receiver while checking its current location based on GPS information and a rail route map.

First, the operations management system obtains GPS information for package transport device 10q (S2421a).

Next, the operations management system checks the GPS information against the latitude and longitude information in the rail route map (S2422a). The rail route map includes not only a route map from the sender to the receiver, but map data for all rails. Latitude and longitude information is linked to the rail route map.

Next, the operations management system determines whether the reliability of the match of the current location of package transport device 10q with the rail route map location is a certain level or higher (S2423a). Stated differently, the operations management system determines whether the GPS information for package transport device 10q is consistent with its location on the rail route map.

When the reliability of the match of the current location of package transport device 10q with the rail route map location is a certain level or higher (YES in S2423a), the operations management system notifies the user's mobile terminal application of the current location of package transport device 10q (S2424a). Reliable means that the GPS information for package transport device 10q is consistent with its location on the rail route map. For example, reliable means that the current position of package transport device 10q is within a predetermined range of distance from its position on the rail route map. Within a predetermined range of distance means within tens of centimeters or within a few centimeters.

Next, the operations management system repeats the process of step S2421a after a predetermined amount of time has elapsed (S2425a). Here, a predetermined amount of time means a few seconds.

However, when the reliability of the match of the current location of package transport device 10q with the rail route map location is less than a certain level (NO in S2423a), the operations management system obtains an image from a sensor on package transport device 10q (S2426a).

Next, the operations management system measures the current location by checking an image from the sensor on package transport device 10q against a registered 3D dynamic map (S2427a).

Next, the operations management system notifies the user's mobile terminal application of the current location of package transport device 10q (S2428a).

Next, the operations management system repeats the process of step S2421a after a predetermined amount of time has elapsed (S2429a).

### [Embodiment 8]

FIG. 37A is a block diagram illustrating an example of management system 1C, etc., according to Embodiment 8. FIG. 37B is a schematic diagram illustrating rails 7 from a sender (for example, store system 2404) to a receiver (for example, vending machine 2408d).

Hereinafter, since the basic configuration of package transport device 10q according to the present embodiment is the same as the basic configuration of the unmanned aerial vehicle of Embodiment 1 and the same as the basic configuration of the package transport device according to Embodiment 1 and the like, regarding the basic configuration of package transport device 10q in the present embodiment, the same reference signs as above will be used and repeated description will be omitted where appropriate. Management system 1C according to the present embodiment differs from Embodiment 1, etc., in that it sets package delivery timing according to the user's current location. The present embodiment may also be used with unmanned aerial vehicles according to embodiments other than Embodiment 1.

Management system 1C according to the present embodiment includes operations management system 2400 and delivery service management system 2401. Operations management system 2400 manages the operation statuses of package transport devices 10q, including their order, travel route, travel speed, and delivery disclosure time. Delivery service management system 2401 extracts time slots when package transport device 10q can deliver the package, and calculates an expected time of arrival.

In management system 1C according to the present embodiment, when a user orders a product using an application on mobile terminal 2402 used by the user, the user can receive the package they ordered at a predetermined location, at a predetermined or user-specified time. Here, the predetermined time is a time specified by management system 1C when the user orders the product.

Here, mobile terminal 2402 includes terminals such as smartphones owned by the user, vending machines 2408d with which products can be ordered, and dedicated terminals installed with an application with which products can be ordered. The user-specified time is a time set by the user when the user orders the product. The predetermined location is a location specified by the user or a location specified by management system 1C when the user orders the product, and is the receiver or a place located a predetermined distance from the receiver.

When a user orders a product using product ordering system 2403, the warehouse managed by product ordering system 2403 may not have the item in stock. In such cases, product ordering system 2403 inquires about the availability of the product selected by the user at nearby stores. If the product selected by the user is in stock at the store nearest to the user, the nearest store is displayed in color, and if the product is in stock at surrounding stores other than the nearest store, the surrounding stores are displayed in gray. In this way, the display differs depending on the proximity of the store from the user.

Even if the product is not in stock at the time of order picking, product ordering system 2403 can check with nearby stores to see if they have the product in stock, and if they do, it can receive permission from the user to deliver the product from the nearby store, offer an alternative product, confirm whether the product can be cancelled, etc.

Since there may be cases in which the user may not or cannot receive the package (product) after ordering the product from product ordering system 2403, management system 1C can change the time of receipt or cancel the product.

When package transport device 10q arrives at the airspace above vending machine 2408d after the user orders a product from product ordering system 2403, if a person within a predetermined distance from vending machine 2408d is moving, package transport device 10q alerts that person with a sound. When no person is present, package transport device 10q lowers the package to vending machine 2408d and stores the package in vending machine 2408d.

When package transport device 10q arrives at the airspace above vending machine 2408d after the user orders a product from product ordering system 2403, package transport device 10q confirms with mobile terminal 2402 whether to lower the package, and if package transport device 10q receives a response consenting the lowering of the package, it lowers the package into vending machine 2408d and stores the package in vending machine 2408d.

When package transport device 10q arrives at the airspace above vending machine 2408d after the user orders a product from product ordering system 2403, package transport device 10q may hand the package directly to the user by lowering the package right in front of the user, and, alternatively, may hand the package to the user by lowering the package to the ground or a pedestal in front of the user.

If, at the time of delivery after the user orders a product from product ordering system 2403, the weather prevents delivery of the package during the specified time slot, a deliverable time slot is extracted, and user's mobile terminal 2402 is notified of the extracted deliverable time slot. Mobile terminal 2402 displays the notification on the application operated by product ordering system 2403.

If, at the time of delivery after the user orders a product from product ordering system 2403, the weather prevents delivery of the package during the specified time slot, the user's mobile terminal 2402 is notified that the product delivery time will be postponed. Product ordering system 2403 confirms whether the user is willing to postpone the delivery time via notification to mobile terminal 2402. If the user gives consent to postpone the delivery time, product ordering system 2403 can deliver the product at the changed delivery time, and if the user does not give consent to postpone the delivery time, the product can be cancelled.

There may be cases in which, in delivery service management system 2401, the user orders a product using their mobile terminal 2402 and schedules to receive the product at vending machine 2408d, and the scheduled vending machine 2408d is full. In such cases, delivery service management system 2401 notifies mobile terminal 2402 of the following options: postpone the delivery time, change the delivery to another vending machine 2408d, or pick up near the scheduled vending machine. Delivery service management system 2401 can give the user a choice of how to receive the product by presenting the user with options.

### Operation Example 1

FIG. 38 is a flowchart illustrating an example of an operation of delivery service management system 2401 according to Operation Example 1 of Embodiment 8.

This operation example assumes a case in which the user orders a product using mobile terminal 2402, and the picking of the ordered product is started when the user approaches a predetermined position in order to pick up the package at the pickup location.

First, delivery service management system 2401 of management system 1C obtains the user's current location via the position information for mobile terminal 2402 (S2431). More specifically, delivery service management system 2401 obtains the position information for mobile terminal 2402 using the GPS function installed in mobile terminal 2402 possessed by the user. The position information for mobile terminal 2402 is position information indicating the user's current location, such as latitude and longitude.

Next, delivery service management system 2401 estimates the user's arrival time based on the user's current location information (position information), the user's registration information, and the user's past travel history (S2432). Delivery service management system 2401 repeats this process until the user arrives at the predetermined position.

Here, the user's registration information is information such as the user's age, the user's gender, etc. The user's past travel history includes the user's travel speed, travel route, and the difference in the user's arrival time relative to the user's specified time. The predetermined position is the location designated by the user to pick up the package, i.e., the location of the receiver.

Next, delivery service management system 2401 determines whether the user has approached the predetermined position at the predetermined or user-specified time (S2433).

If delivery service management system 2401 determines that the user has not approached the predetermined position at the predetermined or user-specified time (NO in S2433), delivery service management system 2401 outputs an instruction to package transport device 10q to wait for a certain amount of time. With this, package transport device 10q waits for a certain amount of time (S2436). The processing in the flowchart of FIG. 38 then returns to step S2431.

However, if delivery service management system 2401 determines that the user has approached the predetermined position at the predetermined or user-specified time (YES in S2433), delivery service management system 2401 instructs store system 2404 to start picking the product (S2434). With this, store system 2404 starts picking the product. Note that a store employee may start picking the product. Here, picking is the process of collecting items instructed to be shipped from among products stored in, for example, a warehouse. Store system 2404 displays on the display that it has started picking the product in response to an instruction from delivery service management system 2401.

Next, when store system 2404 completes the picking of the product, it obtains picking completion information, which is information indicating that the picking of the product is complete. Once picking is completed, the product is stored as a package in, for example, a shipment box depending on the receiver. Store system 2404 also transmits a delivery start instruction to operations management system 2400 of management system 1C. Since operations management system 2400 obtains the delivery start instruction after the picking of the product is complete (S2435), it outputs the delivery start instruction to package transport device 10q and causes package transport device 10q to start delivery of the package. This causes package transport device 10q to ship the package in the shipment box to the user at a predetermined position, at the predetermined or user-specified time.

With this, in operations management system 2400, package transport device 10q can ship the package to the predetermined location at the predetermined or user-specified time. Accordingly, management system 1C can reduce the time that a user is required to wait to pick up a package at the receiver (delivery destination).

### Operation Example 2

FIG. 39 is a flowchart illustrating an example of an operation of management system 1C according to Operation Example 2 of Embodiment 8.

This operation example assumes a case in which after picking of a product ordered by the user using mobile terminal 2402 is complete, package transport device 10q loaded with the package waits at a predetermined position. In this operation example, it is assumed that package transport device 10q starts delivering the package when the user approaches a predetermined position. Operations similar to Operation Example 1 are denoted with the same reference signs, and repeated description will be omitted as appropriate.

First, delivery service management system 2401 of management system 1C obtains the user's current location via the position information for mobile terminal 2402 (S2431).

Next, delivery service management system 2401 estimates the user's arrival time based on the user's current location information, the user's registration information, and the user's past travel history (S2432). Delivery service management system 2401 repeats this process until the user arrives at the predetermined position.

Next, delivery service management system 2401 determines whether the user has approached the predetermined position at the predetermined or user-specified time (S2443).

If delivery service management system 2401 determines that the user has approached the predetermined position at the predetermined or user-specified time (YES in S2443), delivery service management system 2401 outputs a delivery start instruction to operations management system 2400 of management system 1C. With this, operations management system 2400 outputs the delivery start instruction to package transport device 10q (S2444). This causes package transport device 10q to depart (S2445) and ship the package in the shipment box to the user at a predetermined position, at the predetermined or user-specified time. Delivery service management system 2401 then ends the processing illustrated in the flowchart.

If delivery service management system 2401 determines that the user has not approached the predetermined position at the predetermined or user-specified time (NO in S2443), delivery service management system 2401 determines whether the deadline for the scheduled delivery time has been reached (S2446).

If delivery service management system 2401 determines that the deadline for the scheduled delivery time has been reached (YES in S2446), delivery service management system 2401 displays a message on mobile terminal 2402 of the user asking the user to confirm whether to postpone the delivery time of the package (S2447). Stated differently, if the user does not arrive at the predetermined position at the predetermined or user-specified time, the user will not be able to receive the package, and thus delivery service management system 2401 confirms with the user whether the delivery time of the package should be postponed. In such cases, the user can take action such as postponing the delivery time by operating mobile terminal 2402. The processing in the flowchart of FIG. 39 then ends.

However, if delivery service management system 2401 determines that the deadline for the scheduled delivery time has not been reached (NO in S2446), delivery service management system 2401 outputs an instruction to package transport device 10q to wait for a certain amount of time. With this, package transport device 10q waits for a certain amount of time (S2448). The processing in the flowchart of FIG. 39 then returns to step S2431.

With this, in management system 1C, package transport device 10q can ship the package to the predetermined location at the predetermined or user-specified time. Accordingly, management system 1C can reduce the time that a user is required to wait to pick up a package at the receiver (delivery destination).

### Operation Example 3

FIG. 40A is a flowchart illustrating an example of an operation of product ordering system 2403 according to Operation Example 3 of Embodiment 8.

The operation example assumes a case in which the user uses mobile terminal 2402 to order a product with product ordering system 2403 displayed on the display screen of mobile terminal 2402.

First, the user opens the application operated by product ordering system 2403, selects a product with product ordering system 2403, and orders the selected product. Stated differently, the user presses the order button for the product they want to order in the application operated by product ordering system 2403 displayed on the display screen of mobile terminal 2402. Here, product ordering system 2403 inquires at a plurality of stores A and B near the user about the availability of the product selected by the user (S2451).

Next, product ordering system 2403 displays, on the product order screen, the products in stock at the nearest store A in color, and the products in stock only at the surrounding stores in gray (S2452). Stated differently, product ordering system 2403 displays products that are in stock at the nearest store A and products that are in stock only at surrounding stores in a different manner.

Next, if the product to be ordered is in stock at the nearest store A, product ordering system 2403 determines whether the product the user wants to order has been selected (S2453).

If the product the user wants to order is in stock at the nearest store A and the product the user wants to order is determined by product ordering system 2403 to have been selected (YES in S2453), the product the user wants to order is placed in the shopping cart in the application operated by product ordering system 2403 (S2454).

Next, the application operated by product ordering system 2403 displays an order confirmation screen (S2455) for the product the user wants to order. This causes the product order screen to display an order confirmation screen for the product selected by the user. When the user finishes confirming the selected product, they press the confirm button.

Next, product ordering system 2403 orders the product selected by the user from store B in response to the confirm button being pressed by the user (S2456). The processing in the flowchart of FIG. 40A then ends.

If product ordering system 2403 determines that the product the user wants to order is not in stock at the nearest store A (NO in S2453), product ordering system 2403 switches the order destination to a store that has the selected product in stock and displays this information on the order screen (S2457).

Next, the product the user wants to order is placed in the shopping cart in the application operated by product ordering system 2403 (S2458).

Next, the application operated by product ordering system 2403 displays an order confirmation screen (S2459) for the product the user wants to order. This causes the product order screen to display an order confirmation screen for the product selected by the user. When the user finishes confirming the selected product, they press the confirm button.

Next, product ordering system 2403 orders the product selected by the user from store A in response to the confirm button being pressed by the user (S2460). The processing in the flowchart of FIG. 40A then ends.

In this way, if a warehouse managed by product ordering system 2403 does not have the product the user wants to order in stock, product ordering system 2403 can inquire at a store near the user about the availability. This allows product ordering system 2403 to deliver products that users want to order from nearby stores.

### Operation Example 4

FIG. 40B is a flowchart illustrating an example of an operation of product ordering system 2403 according to Operation Example 4 of Embodiment 8.

This operation example assumes a case in which, after a user orders a product from product ordering system 2403, if the store does not have the product in stock when the store starts picking the product, the store will, for example, check the availability of the product from a nearby store, present an alternative product to the user, or cancel the product order. In this operation example, it is assumed that after a product is ordered, the product is unavailable at the start of picking.

First, when the user orders a product, product ordering system 2403 displays, at a predetermined time, a message indicating store system 2404 to start picking the product (S2451a).

Next, product ordering system 2403 determines whether any of the products ordered by the user are not available (S2452a).

If product ordering system 2403 determines that not one of the products ordered by the user is not available (NO in S2452a), that is, if it determines that all of the products ordered by the user are in stock, it causes the store system of the store to display a message that at a predetermined time, it will start loading the package into the package transport device (S2456a). Product ordering system 2403 then ends the processing illustrated in the flowchart.

If product ordering system 2403 determines that any of the products ordered by the user is unavailable (YES in S2452a), it checks the availability of the product with stores nearby the store where the product was ordered (S2453a). With this, product ordering system 2403 notifies the store systems of the nearby stores with an instruction to check the availability of the product. An instruction to check the availability of the product ordered by the user will be displayed on the display screen of the store systems of the nearby stores.

Next, product ordering system 2403 determines whether any of the products ordered by the user are not available at the nearby stores (S2454a).

If product ordering system 2403 determines that the product ordered by the user is in stock at a nearby store and that not one of the products is unavailable (NO in S2454a), it calculates the expected time of arrival for delivery to the user's home from the nearby store where the product is in stock (S2457a).

Next, product ordering system 2403 notifies the user's mobile terminal 2402 that the product is available at a nearby store instead of the store where the product was ordered, notifies the calculated expected time of arrival, and inquires whether to confirm the order which includes delivery from the nearby store (S2458a). This allows the user to choose whether to confirm or cancel the order. Product ordering system 2403 then ends the processing illustrated in the flowchart.

However, if product ordering system 2403 determines that the product ordered by the user is not in stock at any nearby store and that any of the products is unavailable (YES in S2454a), it notifies user's mobile terminal 2402 that the ordered product is not in stock and inquires whether to cancel the order or switch to an alternative product. This causes mobile terminal 2402 to display a message indicating that the ordered product is out of stock, as well as options asking whether to cancel the ordered product or switch to an alternative product (S2455a). This allows the user to choose whether to cancel the order or switch to an alternative product. Product ordering system 2403 then ends the processing illustrated in the flowchart.

Thus, even if an ordered product is out of stock at the time of picking, it is possible to check with nearby stores to see if they have the product in stock, and if they do, the product can be delivered to the user who ordered the product. Even if the product is not in stock, an alternative product can be offered or the order can be canceled.

### Operation Example 5

FIG. 40C is a flowchart illustrating an example of an operation of product ordering system 2403 according to Operation Example 5 of Embodiment 8.

This operation example assumes a case in which management system 1C can change the time of receipt or cancel the product since there are cases in which the user may not or cannot receive the package (product) after ordering the product from product ordering system 2403. This operation example also assumes that management system 1C manages vending machine 2408d.

First, management system 1C obtains the user's current location and movement status from user's mobile terminal 2402 (S2451b). Stated differently, management system 1C can obtain information indicating the user's current location and movement status by obtaining information indicating position information, information indicating movement speed, etc., from mobile terminal 2402 based on the GPS function installed in mobile terminal 2402.

Next, management system 1C calculates the time that the user must leave by to meet the pickup deadline of vending machine 2408d, based on the user's current location and movement speed indicated by the information indicating position information and the information indicating movement speed obtained from mobile terminal 2402 (S2452b).

Next, management system 1C determines whether a predetermined amount of time before the time that the user must leave by has been reached (S2453b).

If management system 1C determines that a predetermined amount of time before the time that the user must leave by has not been reached (NO in S2453b), management system 1C waits for a predetermined period (S2454b), and returns to the processing of step S2451b.

If management system 1C determines that a predetermined amount of time before the time that the user must leave by has been reached (YES in S2453b), management system 1C notifies the user of the following options: extend pickup deadline, pick up within the predetermined time (user must depart within X minutes to receive the package by the pickup deadline), or cancel pickup. (S2455b). Stated differently, management system 1C notifies mobile terminal 2402 of these options. Mobile terminal 2402 then presents these options.

Next, management system 1C determines which option the user selected (S2456b).

If the user chooses to cancel pickup ("cancel pickup" in S2456b), management system 1C cancels the product delivery (S2459b).

Next, management system 1C notifies the delivery person to collect the product (S2460b). With this, the delivery person collects the cancelled product. Management system 1C then ends the processing illustrated in the flowchart.

If the user chooses to pick up the product within a predetermined time ("pick up within predetermined time" in S2456b), management system 1C waits for a predetermined time (S2461b). Management system 1C then proceeds to step S2462b.

Next, management system 1C determines whether the package has been picked up by the user (S2462b).

If management system 1C determines that the package has been picked up by the user (YES in S2462b), the flowchart ends because the product has been delivered to the user.

However, if management system 1C determines that the package has not been picked up by the user (NO in S2462b), management system 1C notifies the user's mobile terminal 2402, asking the user "The scheduled pickup time has passed, do you want to extend the pickup time by paying an extension fee or do you want to cancel?" (S2463b). This causes mobile terminal 2402 to display the notification from management system 1C.

Next, management system 1C determines whether the user has selected to extend the pickup time (S2464b).

If management system 1C determines that the user has not selected to extend the pickup time, i.e., has selected to cancel the product (NO in S2464b) management system performs the processing of S2459b.

However, if management system 1C determines that the user has selected to extend the pickup time (YES in S2464b), management system 1C receives an extension fee and extends the maximum waiting time (S2465b).

Next, management system 1C waits for an additional predetermined time (S2466b). The predetermined time is, for example, 20 minutes. A limit may also be set as the maximum storage period, for example, up to 60 minutes from the start of storage. The predetermined time and maximum storage period given here are non-limiting examples.

Next, management system 1C determines whether the package has been picked up by the user (S2467b).

If management system 1C determines that the package has been picked up by the user (YES in S2467b), the flowchart ends because the product has been delivered to the user.

However, if management system 1C determines that the package has not been picked up by the user (NO in S2467b), management system 1C notifies the user's mobile terminal 2402, informing the user "The scheduled pickup time has passed; further extension is unavailable, pickup will be canceled." (S2468b). Mobile terminal 2402 then presents this notification. Management system 1C then ends the processing illustrated in the flowchart.

If the user chooses to extend the pickup deadline ("extend pickup deadline" in S2456b), management system 1C receive an extension fee from the user and extends the maximum waiting time (S2457b). Stated differently, management system 1C extends the maximum waiting time by informing the user in advance that an extension fee will be incurred and obtaining approval from the user.

Next, management system 1C waits for an additional predetermined time (S2458b). Management system 1C then proceeds to step S2462b.

Next, after waiting for the additional predetermined time, management system 1C determines whether the package has been picked up by the user (S2462b).

If management system 1C determines that the package has been picked up by the user (YES in S2462b), the flowchart ends because the product has been delivered to the user.

However, if management system 1C determines that the package has not been picked up by the user (NO in S2462b), management system 1C notifies the user's mobile terminal 2402, asking the user "The scheduled pickup time has passed, do you want to extend the pickup time by paying an extension fee or do you want to cancel?" (S2463b). This causes mobile terminal 2402 to display the notification from management system 1C again.

Next, management system 1C determines whether the user has selected to extend the pickup time (S2464b).

If management system 1C determines that the user has not selected to extend the pickup time, i.e., has selected to cancel the product (NO in S2464b) management system performs the processing of S2459b.

However, if management system 1C determines that the user has selected to extend the pickup time (YES in S2464b), management system 1C receives an extension fee again and further extends the maximum waiting time (S2465b).

Next, management system 1C further waits for an additional predetermined time (S2466b).

Next, management system 1C determines whether the package has been picked up by the user (S2467b).

If management system 1C determines that the package has been picked up by the user (YES in S2467b), the flowchart ends because the product has been delivered to the user.

However, if management system 1C determines that the package has not been picked up by the user (NO in S2467b), management system 1C notifies the user's mobile terminal 2402, informing the user "The scheduled pickup time has passed; further extension is unavailable, pickup will be canceled." (S2468b). Mobile terminal 2402 then presents this notification. Management system 1C then ends the processing illustrated in the flowchart.

Thus, even if a user orders a product, the user may not pick it up or may not be able to pick it up, so notifying user's mobile terminal 2402 of the time that the user must depart allows the user to choose whether or not they are willing to pick up the product. This streamlines the delivery of products in management system 1C, as the package can be delivered if the user is willing to pick up the product, and the product can be canceled if the user is not willing to pick up the product.

### Operation Example 6

FIG. 41 is a flowchart illustrating an example of an operation of package transport device 10q according to Operation Example 6 of Embodiment 8.

This operation example assumes a case in which, when package transport device 10q is to lower the package at the receiver, the presence or absence of people present in the vicinity and the movement of those present determine whether or not the package is lowered toward vending machine 2408d. The operation example also assumes that the user orders a product and picks up the package at vending machine 2408d.

First, package transport device 10q obtains an image of the space vertically below using a sensor (S2461). More specifically, when package transport device 10q arrives at the receiver, package transport device 10q obtains an image of the space vertically below by a sensor on package transport device 10q capturing an image of the space vertically below package transport device 10q.

Next, package transport device 10q determines from the obtained image whether or not a person is present within a predetermined distance from the point where the package is to be unloaded (S2462).

If package transport device 10q determines that a person is present within a predetermined distance from the point where the package is to be unloaded (YES in S2462), package transport device 10q determines whether a person vertically below package transport device 10q is moving (S2463).

If package transport device 10q determines that a person vertically below package transport device 10q is moving (YES in S2463), package transport device 10q outputs an alert to that person. For example, package transport device 10q outputs an audible standby instruction via an acoustic device mounted on package transport device 10q to the effect of, for example, "package will now be unloaded, please remain still" (S2464).

Next, package transport device 10q waits for a predetermined time after the audio output (S2465). Then, package transport device 10q returns to the process in step S2461.

If package transport device 10q determines that no person is present within a predetermined distance from the point where the package is to be unloaded (NO in S2462), or if package transport device 10q determines that a person vertically below package transport device 10q is not moving (NO in S2463), package transport device 10q transmits, to vending machine 2408d, an opening instruction to open the top lid. When vending machine 2408d receives the opening instruction, it opens the top lid so that the delivered package can be stored. This causes package transport device 10q to begin lowering the package and continue lowering the package to vending machine 2408d (S2466).

Next, when package transport device 10q is lowering the package, vending machine 2408d suspends the sale of products. Stated differently, upon receipt of the opening instruction, the display screen of vending machine 2408d switches to receive mode, and vending machine 2408d suspends the sale of products (S2467).

Next, package transport device 10q determines whether or not the lowering of the package is complete (S2468). Stated differently, package transport device 10q lowers the package and determines if the package has been stored in vending machine 2408d.

If package transport device 10q determines that the lowering of the package is not complete (NO in S2468), package transport device 10q returns to the processing of step S2461.

However, if package transport device 10q determines that the lowering of the package is complete (YES in S2468), it notifies user's mobile terminal 2402 with a message such as "Delivery is complete, please pick up the package promptly." (S2469). This allows the user to pick up the package from vending machine 2408d, since the contents of the notification are displayed on the application on the display screen of mobile terminal 2402. The content of the notification in step S2469 given here is merely one, non-limiting example. The processing in the flowchart of FIG. 41 then ends.

Thus, when lowering the package, package transport device 10q audibly alerts people if people are present or moving around vending machine 2408d, since the package may come in contact with them. This will ensure their safety as they will follow the alert.

### Operation Example 7

FIG. 42 is a flowchart illustrating an example of an operation of package transport device 10q according to Operation Example 7 of Embodiment 8.

This operation example assumes a case in which after the user orders a product using mobile terminal 2402, the package is lowered and housed in vending machine 2408d if package transport device 10q receives the user's consent from mobile terminal 2402, at the location where the package, which is the product, is to be picked up.

First, package transport device 10q starts delivering the package (S2471).

Next, package transport device 10q notifies user's mobile terminal 2402 of the estimated time of arrival, a predetermined time before arrival at the receiver (S2472). Here, it is assumed that the user has set the application of product ordering system 2403 ahead of time to "want to be notified X minutes before the estimated time of arrival".

Next, after package transport device 10q arrives at the receiver, package transport device 10q notifies user's mobile terminal 2402 that it has arrived at the receiver (S2473).

Next, package transport device 10q obtains the user's current location (current location of mobile terminal 2402) through the position information for mobile terminal 2402 (S2474). More specifically, package transport device 10q obtains the position information for mobile terminal 2402 using the GPS function installed in mobile terminal 2402 possessed by the user. Package transport device 10q obtains the position information for mobile terminal 2402 at predetermined intervals. Note that the position information for mobile terminal 2402 possessed by the user may be obtained by management system 1C.

Next, package transport device 10q determines whether the user has arrived within a predetermined distance from the receiver based on the obtained position information for mobile terminal 2402 (S2475). Note that management system 1C may make the determination in step S2475.

If package transport device 10q determines that the user has not arrived within a predetermined distance from the receiver (NO in S2475), package transport device 10q determines whether the user is located a predetermined distance or more from the receiver based on the obtained position information for mobile terminal 2402 (S2481).

If package transport device 10q determines that the user is located a predetermined distance or more from the receiver (YES in S2481), package transport device 10q waits for a certain amount of time (S2483). Then, package transport device 10q returns to the process in step S2474.

However, if package transport device 10q determines that the user is not located a predetermined distance or more from the receiver (NO in S2481), package transport device 10q temporarily clears the area of the receiver by moving from the receiver to another location (S2482). Stated differently, package transport device 10q moves slightly away from the receiver, and package transport device 10q waits at a location other than the receiver so that other package transport devices are not obstructed from storing packages in vending machine 2408d. Then, package transport device 10q returns to the process in step S2474.

If, in step S2475, package transport device 10q determines that the user has arrived within a predetermined distance from the receiver (YES in S2475), a notification is made to the application on mobile terminal 2402 asking, for example, "Have you arrived at the receiver? May I lower the package?" (S2476). Mobile terminal 2402 obtains the notification from package transport device 10q, and the application of mobile terminal 2402 displays the notification. This allows the user to receive the notification sent by package transport device 10q via mobile terminal 2402. The content of the notification in step S2476 given here is merely one, non-limiting example.

Next, package transport device 10q determines whether it has obtained a response to the notification of step S2476 from mobile terminal 2402, such as a reply of "You may lower." (S2477). The content of the reply in step S2477 given here is merely one, non-limiting example.

If package transport device 10q has not obtained a "you may lower" reply from mobile terminal 2402 (NO in S2477), package transport device 10q repeats the process in step S2477.

Here, the reply "You may lower." to the notification asking "Have you arrived at the receiver? May I drop the package?" is made by the user via the application on mobile terminal 2402. Stated differently, the user enters the reply, "You may lower.", into mobile terminal 2402.

If package transport device 10q obtains a "you may descend" reply from mobile terminal 2402 (YES in S2477), the display screen of vending machine 2408d switches to receive mode and vending machine 2408d is not available for placing orders (S2478). Stated differently, vending machine 2408d does not accept other orders while in receive mode to ensure that the user receives the package delivered by package transport device 10q from vending machine 2408d.

Next, package transport device 10q lowers the package to vending machine 2408d and stores the package in vending machine 2408d (S2479).

Next, package transport device 10q notifies the user's application with, for example, the message "Your package is ready for pickup. Please pick it up promptly." (S2480). Mobile terminal 2402 obtains the notification from package transport device 10q, and the application of mobile terminal 2402 displays the notification. The user then promptly picks up the package from vending machine 2408d. When the user completes the picking up of the package, vending machine 2408d exits receive mode and returns to the normal mode in which it accepts orders. The content of the notification in step S2479 given here is merely one, non-limiting example.

### Operation Example 8

FIG. 43A illustrates an example of an operation of a ground placement type in which a person receives a package from package transport device 10q according to Operation Example 8 of Embodiment 8. FIG. 43B illustrates an example of an operation of an aerial pickup type in which a person receives a package directly from package transport device 10q according to Operation Example 8 of Embodiment 8.

This operation example describes how the user receives the product that the user ordered. This operation example assumes that the user ordered the product by operating vending machine 2408d. This operation example also assumes that the user waits near vending machine 2408d until the ordered product arrives. This operation example may be applied when the user orders a product on the application operated by product ordering system 2403 via mobile terminal 2402.

Methods for the user to receive the product include: package transport device 10q placing the product ordered by the user in a predetermined position and the user receiving the placed product; and the user receiving the ordered product directly from package transport device 10q.

As illustrated in FIG. 43A, in order for the user to receive a product carried by package transport device 10q, package transport device 10q arrives vertically above a package placement location provided in the vicinity of vending machine 2408d, lowers the package, and places the package at the package placement location to complete the delivery.

Here, the package placement location is a region provided in the vicinity of vending machine 2408d. To make the package placement location recognizable to the user, a pedestal, plate-like frame, or the above-described delivery box may be provided at the package placement location, or the package placement location may be marked with tape or the like.

This allows the user to receive a package delivered to the package placement location.

As illustrated in FIG. 43B, to hand the ordered product directly over to the user from package transport device 10q, package transport device 10q arrives vertically above the package placement location provided in the vicinity of vending machine 2408d, and lowers the package until it is in front of the user. When the package is positioned in front of the user, package transport device 10q stops the lowering of the package. At this time, the package is positioned in front of the user's abdominal area. For example, the package is placed at a height of about 90 cm from the ground.

This allows the user to receive the package placed in front of him or her by removing the package from the wire(s) of package transport device 10q.

In this way, in this operation example, a user can receive a package in a variety of ways. Vending machine 2408d may allow the user to choose how to receive the package.

### Operation Example 9

FIG. 44 is a flowchart illustrating an example of an operation of product ordering system 2403 according to Operation Example 9 of Embodiment 8.

This operation example assumes a case in which product ordering system 2403 obtains weather information to extract deliverable time slots.

First, when the user orders the product, product ordering system 2403 obtains receiver location information, which is information indicating the location (address or latitude and longitude) of the receiver of the product (S2491).

Next, product ordering system 2403 obtains weather information for an area between the location of sender and the location of the receiver indicated in the receiver location information (S2492). The location of the sender is held in advance by product ordering system 2403.

Next, based on the obtained weather information and receiver location information, product ordering system 2403 determines whether there is a time period during which the wind speed exceeds a predetermined speed between the location of the sender and the location of the receiver (S2493).

If product ordering system 2403 determines, based on the obtained weather information, that there is a time period during which the wind speed exceeds a predetermined speed between the location of the sender and the location of the receiver (YES in S2493), product ordering system 2403 determines that delivery is not possible (S2494) in time period(s) during which the wind speed exceeds the predetermined speed. Product ordering system 2403 then proceeds to the pressing in step S2495.

However, if product ordering system 2403 determines, based on the obtained weather information, that there is no time period during which the wind speed exceeds a predetermined speed between the location of the sender and the location of the receiver (NO in S2493), product ordering system 2403 determines that delivery is possible in any time period (S2498). Product ordering system 2403 then proceeds to the pressing in step S2495.

Next, when the user orders the product, product ordering system 2403 sets the availability of delivery for each time period on the order date (S2495). More specifically, if YES in step S2493, product ordering system 2403 sets the available time periods to those in which the product can be delivered excluding the time period(s) during which the wind speed exceeds the predetermined speed. If NO in step S2493, product ordering system 2403 sets the product as deliverable in all time periods.

Next, if YES in step S2493, product ordering system 2403 displays to the user the deliverable time periods excluding the time period(s) during which the wind speed exceeds the predetermined speed (S2496).

However, if NO in step S2493, product ordering system 2403 displays to the user all time periods, during each of which the product is deliverable (S2496).

Next, product ordering system 2403 displays the time periods during which the product is deliverable on the application operated by product ordering system 2403 (S2497). More specifically, product ordering system 2403 displays a table of deliverable time periods, etc., on the display screen displaying the application. This allows the user to select the time period in which they wish to have the product delivered from the deliverable time periods displayed on the display screen. This thus allows the user to choose the time of day when the product can be delivered. This makes it more difficult for the customer to fail to receive the ordered product in the set time period due to weather changes.

### Operation Example 10

FIG. 45 is a flowchart illustrating an example of an operation of delivery service management system 2401 according to Operation Example 10 of Embodiment 8.

This operation example assumes a case in which the delivery time is changed when, upon starting the picking of the product, the weather at the time of delivery of the package is expected to change.

First, when the user orders the product, delivery service management system 2401 obtains receiver location information, which is information indicating the location (address or latitude and longitude) of the receiver of the product, and a delivery span (S2501). The delivery span is calculated based on, for example, the location of the sender, the location of the receiver, the time of day the user wishes the product to be delivered, and the expected time of delivery, and is the span of time required for delivery in a predetermined time period.

Next, delivery service management system 2401 obtains weather information for an area between the location of sender and the location of the receiver indicated in the receiver location information (S2502).

Next, delivery service management system 2401 determines whether the wind speed, between the location of the sender and the location of the receiver, is estimated to exceed a predetermined speed during the delivery span based on the obtained weather information, receiver location information, and delivery span (S2503). Stated differently, delivery service management system 2401 determines whether there is a time period during which the wind speed exceeds a predetermined speed in the delivery span.

If delivery service management system 2401 determines that the wind speed, between the location of the sender and the location of the receiver, is not estimated to exceed a predetermined speed during the delivery span based on the obtained weather information, receiver location information, and delivery span (NO in S2503), delivery service management system 2401 instructs store system 2404 to begin the picking of the product (S2508). Delivery service management system 2401 then ends the processing illustrated in the flowchart.

However, if delivery service management system 2401 determines that the wind speed, between the location of the sender and the location of the receiver, is estimated to exceed a predetermined speed during the delivery span based on the obtained weather information, receiver location information, and delivery span (YES in S2503), delivery service management system 2401 notifies the user's mobile terminal 2402 with a message such as "Strong winds expected at this time. Do you want to postpone the delivery time? Do you want to cancel without postponing the delivery time?" (S2504). The content of the notification in step S2504 given here is merely one, non-limiting example.

Next, delivery service management system 2401 determines whether the answer to, for example, "Do you want to postpone the delivery time?" is YES or not (S2505). The content of the answer in step S2505 given here is merely one, non-limiting example.

If the answer to "Do you want to postpone the delivery time?" is NO (NO in S2505), delivery service management system 2401 cancels the order of the product by the user (S2509).

However, if the answer to "Do you want to postpone the delivery time?" is YES (YES in S2505), delivery service management system 2401 postpones the delivery time to a time that is after the scheduled delivery time and is associated with a wind speed less than 10 m/s (S2506). More specifically, delivery service management system 2401 determines a time period that is after the scheduled delivery time and is associated with a wind speed less than 10 m/s based on the weather information. Delivery service management system 2401 may, for example, automatically change the delivery time to the nearest time associated with a wind speed less than 10 m/s, or it may present delivery times associated with a wind speed less than 10 m/s on mobile terminal 2402 for the user to select.

Next, delivery service management system 2401 notifies the application on mobile terminal 2402 of the scheduled postponed delivery time (S2507). For example, delivery service management system 2401 may notify mobile terminal 2402 in the user's possession or vending machine 2408d. Delivery service management system 2401 then ends the processing illustrated in the flowchart.

This allows delivery service management system 2401 to change the delivery time for the product ordered by the user to the user, even if weather conditions prevent the delivery of the product to the receiver. Delivery service management system 2401 also allows the user to cancel their order of the product, even if weather conditions prevent the delivery of the product to the receiver.

### Operation Example 11

FIG. 46 is a flowchart illustrating an example of an operation of delivery service management system 2401 according to Operation Example 11 of Embodiment 8.

This operation example assumes a case in which the user checks the fullness of vending machine 2408d when ordering a product.

Delivery service management system 2401 inquires the receiver of the product ordered by the user regarding the fullness information of vending machine 2408d at the receiver (S2511). Vending machine 2408d confirms its fullness in response to the inquiry regarding fullness information from delivery service management system 2401, and responds with fullness information resulting from the confirmation. The fullness information is, for example, information indicating whether or not vending machine 2408d is full, or information indicating the number of available spaces in vending machine 2408d.

Next, upon obtaining the fullness information from vending machine 2408d, delivery service management system 2401 determines whether vending machine 2408d is currently full (S2512).

If delivery service management system 2401 determines that vending machine 2408d is not currently full (NO in S2512), delivery service management system 2401 notifies store system 2404 with an instruction to begin picking the product when the scheduled time comes (S21517). With this, store system 2404 obtains an instruction to start picking the product, and thus starts picking the product. Delivery service management system 2401 then ends the processing illustrated in the flowchart.

If delivery service management system 2401 determines that vending machine 2408d is currently full (YES in S2512), delivery service management system 2401 notifies mobile terminal 2402 with the message "Scheduled vending machine 2408d is full. Do you want to postpone the delivery time, change delivery to the nearest vending machine 2408d, or directly receive package next to vending machine 2408d?" (S2513). The content of the notification in step S2513 given here is merely one, non-limiting example.

Next, delivery service management system 2401 determines which of the options the user selected in response to the notification in step S2513 (S2514).

If, in step S2514, delivery service management system 2401 determines that the user has selected to postpone the delivery time, it postpones the start time of the picking or the start time of the delivery by a predetermined amount of time, i.e., resets the delivery time by postponing the delivery time (S2515). If the start time of the picking or the start time of delivery is postponed for a predetermined amount of time, i.e., if the delivery time is postponed, delivery service management system 2401 sets the time so that the picking up of the product at the receiver by the user does not overlap with the time of delivery of another product ordered by a different user.

Next, delivery service management system 2401 notifies the customer who placed an order before the user whose product delivery time was postponed in step S2515 with the message "The next product delivery is coming, please pick up your product within 10 minutes." (S2516). Delivery service management system 2401 then ends the processing illustrated in the flowchart. The content of the notification in step S2516 given here is merely one, non-limiting example.

If, in step S2514, delivery service management system 2401 determines that the user has selected to change the delivery to the second nearest vending machine 2408d, delivery service management system 2401 notifies the user of the receiver and the time of delivery completion for the selected second nearest vending machine 2408d (S2518).

Next, delivery service management system 2401 notifies store system 2404 with an instruction to begin picking the product (S2519). With this, store system 2404 obtains an instruction to start picking the product, and thus starts picking the product. Delivery service management system 2401 then ends the processing illustrated in the flowchart.

If, in step S2514, delivery service management system 2401 determines that the user has selected to directly receive the package, delivery service management system 2401 notifies mobile terminal 2402 with a message pertaining to direct package receipt of, for example, "Please receive the package within a predetermined amount of time after package transport device 10q arrives." (S2520). This allows the user to be mindful to pick up the package, which is the product, as soon as package transport device 10q arrives. The content of the notification in step S2520 given here is merely one, non-limiting example.

Next, delivery service management system 2401 notifies store system 2404 with an instruction to begin picking the product (S2521). With this, store system 2404 obtains an instruction to start picking the product, and thus starts picking the product.

Next, package transport device 10q that makes the delivery unloads the package in the vicinity of vending machine 2408d (S2522). This allows the user to receive the package from package transport device 10q. Delivery service management system 2401 then ends the processing illustrated in the flowchart.

### [Embodiment 9]

FIG. 47A is a perspective view illustrating an example of rail 7 according to Embodiment 9. FIG. 47B is a top view illustrating an example of rail 7 according to Embodiment 9. FIG. 47C is a side view illustrating an example of rail 7 according to Embodiment 9. FIG. 47D is a top view and a side view illustrating an example of rail 7 according to Embodiment 9.

Hereinafter, as illustrated in FIG. 47A through FIG. 47D, since the basic configuration of rail 7 according to the present embodiment is the same as the basic configuration of the rail according to Embodiment 1 and the like, regarding the basic configuration of rail 7 in the present embodiment, the same reference signs as above will be used and repeated description will be omitted where appropriate. Additionally, since the basic configuration of the package transport device according to the present embodiment is the same as the basic configuration of the unmanned aerial vehicle of Embodiment 1 and the same as the basic configuration of the package transport device according to Embodiment 1 and the like, regarding the basic configuration of the package transport device in the present embodiment, the same reference signs as above will be used and repeated description will be omitted where appropriate. The present embodiment may also be used with unmanned aerial vehicles and delivery boxes according to embodiments other than Embodiment 1.

First, an example will be given in which rail 7 extends in two directions about support pillar 19.

Rail 7 includes first rail 7a, second rail 7b, and third rail 7c.

First rail 7a is arranged to extend in a predetermined direction to support pillar 19, and second rail 7b is arranged to extend from support pillar 19 to the left in the drawing, so as to intersect the lengthwise direction of first rail 7a.

Third rail 7c is connected to and supported by first rail 7a and second rail 7b so that it is continuous with first rail 7a and second rail 7b. More specifically, one end of third rail 7c is connected to first rail 7a and the other end of third rail 7c is connected to second rail 7b.

Third rail 7c is fixed to support pillar 19 via rail support portion 7x and is positioned away from support pillar 19 so as to avoid support pillar 19. Rail support portion 7x is fixed to support pillar 19 so as to protrude in a direction perpendicular to the direction in which support pillar 19 extends. Stated differently, one end of rail support portion 7x is coupled to support pillar 19, and the other end of rail support portion 7x is coupled to third rail 7c.

At one end of third rail 7c, slope 7cs is formed so that the package transport device can ride from first rail 7a to third rail 7c or vice versa when traveling on rail 7. At the other end of third rail 7c as well, slope 7cs is formed so that the package transport device can ride from second rail 7b to third rail 7c and vice versa when traveling on rail 7. In other words, slopes 7cs are formed at both ends of third rail 7c. The package transport device can thus smoothly transfer between first rail 7a and third rail 7c and between second rail 7b and third rail 7c.

In the present embodiment, as illustrated in FIG. 47D, the distance from one end of third rail 7c to support pillar 19 and the distance from the other end of third rail 7c to support pillar 19 are set to 2 meters. The minimum distance from support pillar 19 to third rail 7c is set to 62 centimeters. Third rail 7c is arc-shaped with a radius of 2 meters. The radius of support pillar 19 is set to 20 centimeters. The height of third rail 7c is set to 5 centimeters.

Next, an example will be given in which rail 7 extends in three directions about support pillar 19 with reference to FIG. 48 through FIG. 49D.

FIG. 48 is a perspective view illustrating an example of rail 7 and package transport device 10q according to Embodiment 9. FIG. 49A is a top view illustrating an example of rail 7 according to Embodiment 9. FIG. 49B is a side view illustrating an example of rail 7 according to Embodiment 9. FIG. 49C is an enlarged partial perspective view illustrating an example of rail 7 according to Embodiment 9. FIG. 49D includes a top view and a side view of rail 7 according to Embodiment 9, and an enlarged top view at the connection portion between third rails 7c11 and 7c12 and first rail 7a.

As illustrated in FIG. 48 through FIG. 49D, rail 7 includes first rail 7a, second rail 7b, and third rails 7c11 and 7c12.

In a view of first rail 7a, second rail 7b and third rails 7c11 and 7c12 along the horizontal direction, third rails 7c11 and 7c12 are arranged on the upper surfaces of first rail 7a and second rail 7b.

First rail 7a is fixed to support pillar 19 at one end and extends from support pillar 19 in a predetermined direction. Second rail 7b extends in a direction intersecting first rail 7a, is fixed to support pillar 19 located at the intersection with first rail 7a, and extends in two directions so as to be point symmetrical about support pillar 19. Stated differently, first rail 7a and second rail 7b form a T-shape in top view.

Slopes 7cs are formed at both ends of third rail 7c11, as in FIG. 47C.

At the other end of third rail 7c12, slope 7cs is formed so that package transport device 10q can ride from second rail 7b to third rail 7c12 or vice versa when traveling on rail 7. Slope 7cs is formed at the one end of third rail 7c12. The one end of third rail 7c12 is connected to first rail 7a, spaced apart from the one end of third rail 7c11. Stated differently, gap 7s is formed between the one end of third rail 7c12 and third rail 7c11.

For example, when package transport device 10q travels on first rail 7a and turns left, package transport device 10q can turn left at a high speed because package transport device 10q can travel as-is unobstructed. When package transport device 10q travels on first rail 7a and turns right, package transport device 10q lifts connector 2520, moves roller 2527 away from third rail 7c11, and moves package transport device 10q forward at a low speed so that package transport device 10q can cross gap 7s between the one end of third rail 7c12 and third rail 7c11, from third rail 7c11. When package transport device 10q crosses gap 7s, it lowers connector 2520 and places rollers 2527 on third rail 7c12. Package transport device 10q can turn right at low speed by doing so for all connectors 2520. Roller 2527 is one example of the rotating roller. Connector 2520 is one example of an arm.

Next, an example of a case in which one first rail 7a is supported by support pillar 19 will be given.

FIG. 50 is a perspective view illustrating an example of rail 7 according to Embodiment 9. FIG. 51A is a top view illustrating an example of rail 7 according to Embodiment 9. FIG. 51B is a side view illustrating an example of rail 7 according to Embodiment 9. FIG. 51C is an enlarged partial perspective view illustrating an example of rail 7 according to Embodiment 9.

As illustrated in FIG. 50 through FIG. 51C, rail 7 includes first rail 7a and bypass rail 7c13.

First rail 7a extends in two directions so as to have point symmetry around support pillar 19. Stated differently, one side of first rail 7a extends in a predetermined direction and the other side extends in the direction opposite to the predetermined direction.

Bypass rail 7c13 is connected to and supported by first rail 7a so that it intersects first rail 7a. More specifically, one end of bypass rail 7c13 is connected to the one side of first rail 7a and the other end is connected to the other side of first rail 7a. Bypass rail 7c13 is fixed to support pillar 19 via rail support portion 7x and to first rail 7a via rail support portion 7x. Bypass rail 7c13 is spaced apart from support pillar 19 so as to bypass support pillar 19.

Rail support portion 7x is fixed to support pillar 19 so as to protrude in a direction perpendicular to the direction in which support pillar 19 extends. Stated differently, one end of rail support portion 7x is coupled to first rail 7a, and the other end of rail support portion 7x is coupled bypass rail 7c13.

At the one end of bypass rail 7c13, slope 7cs is formed so that package transport device 10q can ride from first rail 7a to bypass rail 7c13 or vice versa when traveling on the one side of rail 7. At the other end of bypass rail 7c13, slope 7cs is formed so that package transport device 10q can ride from first rail 7a to bypass rail 7c13 or vice versa when traveling on the other side of rail 7. In other words, slopes 7cs are formed at both ends of bypass rail 7c13. Bypass rail 7c13 is one example of the third rail.

### VARIATION OF EMBODIMENT 9

FIG. 52 is a perspective view, a side view, and a top view of rail 7 and rail support members 7x5 according to a variation of Embodiment 9.

Hereinafter, as illustrated in FIG. 52, since the basic configuration of rail 7 according to the present variation is the same as the basic configuration of the rail according to Embodiment 1 and the like, regarding the basic configuration of rail 7 in the present variation, the same reference signs as above will be used and repeated description will be omitted where appropriate. Rail 7 according to the present variation differs from Embodiment 9 in that it includes a plurality of rail support members 7x5.

Rail 7 includes first rail 7a, second rail 7b, and third rail 7c.

First rail 7a and second rail 7b intersect.

First rail 7a and second rail 7b are coupled and supported by a plurality of rail support members 7x5. Four of the plurality of rail support members 7x5 are coupled to first rail 7a and second rail 7b so as to surround the intersection of first rail 7a and second rail 7b.

Rail support member 7x5a, which is one of the four rail support members 7x5, includes one end coupled to one side of first rail 7a and another end coupled to one side of second rail 7b. Here, the term "side" is relative to the intersection of first rail 7a and second rail 7b. Rail support member 7x5a is also coupled to third rail 7c and support third rail 7c.

Rail support member 7x5b, which is a different one of the four rails 7x5, is arranged approximately parallel to the lengthwise direction of rail support member 7x5a. Rail support member 7x5b includes one end coupled to the other side of first rail 7a and another end coupled to the other side of second rail 7b.

Rail support member 7x5c, which is yet a different one of the four rail support members 7x5, includes one end coupled to the coupling point of rail support member 7x5a and the one side of first rail 7a, and another end coupled to the coupling point of rail support member 7x5b and the other side of second rail 7b.

Rail support member 7x5d, which is the remaining one of the four rail support members 7x5, includes one end coupled to the coupling point of rail support member 7x5a and the one side of second rail 7b, and another end coupled to the coupling point of rail support member 7x5b and the other side of first rail 7a.

Other rail support members 7x5e are arranged approximately parallel to the lengthwise direction of rail support member 7x5c. Rail support members 7x5e include one end coupled to the one side of first rail 7a and another end coupled to the other side of second rail 7b.

Yet other rail support members 7x5f are arranged approximately parallel to the lengthwise direction of rail support member 7x5d. Rail support members 7x5f include one end coupled to the one side of second rail 7b and another end coupled to the other side of first rail 7a.

FIG. 52 illustrates an example of rail support members 7x5, but rail support members 7x5 may support rail 7 as in FIG. 53. FIG. 53 is a top view and a side view of another example of rail 7 and rail support members 7x5 according to a variation of Embodiment 9.

First rail 7a and second rail 7b are coupled and supported by a plurality of rail support members 7x5.

Rail support member 7x5g, which is one of rail support members 7x5, includes one end coupled to one side of first rail 7a and another end coupled to one side of second rail 7b. Here, the term "side" is relative to the intersection of first rail 7a and second rail 7b. Rail support member 7x5g is also coupled to third rail 7c and support third rail 7c.

Rail support member 7x5h, which is one of rail support members 7x5, is arranged approximately parallel to the lengthwise direction of rail support member 7x5g. Rail support member 7x5h includes one end coupled to the other side of first rail 7a and another end coupled to the other side of second rail 7b.

Rail support member 7x5i, which is one of rail support members 7x5, includes one end coupled to a coupling point on rail support member 7x5g, and another end coupled to a coupling point on rail support member 7x5h.

Thus, since a plurality of rail support members 7x5 are coupled at the intersection of first rail 7a and second rail 7b, when package transport device 10q moves from first rail 7a to second rail 7b via third rail 7c or vice versa, rail 7 can be inhibited from bending vertically downward due to the weight of package transport device 10q. Thus, when package transport device 10q turns right or left at the intersection of first rail 7a and second rail 7b, package transport device 10q can maintain its attitude (inclination) when traveling on rail 7. This makes it more difficult for package transport device 10q to fall off rail 7.

### [Embodiment 10]

FIG. 54 is a perspective view illustrating an example of package transport device 10q1 according to Embodiment 10. FIG. 55A illustrates the internal structure of first connector 2521 and second connector 2522 of package transport device 10q1 according to Embodiment 10. FIG. 55B illustrates the internal structure of third connector 2523 of package transport device 10q1 according to Embodiment 10.

Hereinafter, as illustrated in FIG. 54 through FIG. 55B, since the basic configuration of package transport device 10q1 according to the present embodiment is the same as the basic configuration of the unmanned aerial vehicle of Embodiment 1 and the same as the basic configuration of the package transport device according to Embodiment 1 and the like, regarding the basic configuration of package transport device 10q1 in the present embodiment, the same reference signs as above will be used and repeated description will be omitted where appropriate.

Package transport device 10q1 is an unmanned mobile body or the like that travels on rail 7. In other words, package transport device 10q1 can move along rail 7 provided above the ground that it is attached to. For example, package transport device 10q1 can carry a package from the sender to the receiver while a plurality of connectors 2520 are connected to rail 7.

Package transport device 10q1 includes vehicle main body 2501, rail slider portion 2510, control processor 2530, a plurality of connectors 2520, turntable 2540, side propeller 2551, and propeller actuation motor 2552.

Vehicle main body 2501 is a rectangular enclosure elongated in the lengthwise direction of rail 7. The plurality of connectors 2520, turntable 2540, etc., are provided on the top of vehicle main body 2501. Rail slider portion 2510, etc., is provided on the bottom of vehicle main body 2501. Package transport device 10q1 may include a plurality of propellers that can fly vehicle main body 2501 by being rotationally driven by a propeller actuation motor.

Rail slider portion 2510 is extendable with respect to vehicle main body 2501. Rail slider portion 2510 includes slider main body 2510a, package holder 2555, and a motor actuator.

Slider main body 2510a is coupled to vehicle main body 2501. Slider main body 2510a is elongated in the lengthwise direction of vehicle main body 2501. In the present embodiment, slider main body 2510a is exemplified as coupled to the lower surface of vehicle main body 2501, but slider main body 2510a may be configured to extend in the lengthwise direction of vehicle main body 2501 and retract to the original position.

Slider main body 2510a includes first slider 2511 and second slider 2512. Although slider main body 2510a is exemplified as including two sliders, slider main body 2510a may include one or three or more sliders. Note that first slider 2511 and second slider 2512 and the like may be collectively referred to simply as "sliders". Although not illustrated, a balancer may be provided on the side propeller 2551 side of the sliders to balance the weight with the package.

First slider 2511 and second slider 2512 are arranged on one side of vehicle main body 2501 and are configured to extend from the one side of vehicle main body 2501 further along the lengthwise direction of vehicle main body 2501 and retract to their original positions. First slider 2511, second slider 2512, and slider main body 2510a are aligned in listed order when first slider 2511 and second slider 2512 are extended away from vehicle main body 2501.

More specifically, first slider 2511 is arranged vertically below vehicle main body 2501, and can extend from the one side of vehicle main body 2501 along the lengthwise direction of vehicle main body 2501 so as to move away from vehicle main body 2501, and can retract to a position vertically below vehicle main body 2501. Second slider 2512 is coupled to the vertical lower surface of first slider 2511 and can extend from the one side of first slider 2511 along the lengthwise direction of vehicle main body 2501 so as to move away from vehicle main body 2501, and can retract to a position vertically below vehicle main body 2501.

Package holder 2555 is provided at the leading end of rail slider portion 2510. In the present embodiment, package holder 2555 is provided at the leading end of second slider 2512.

Package holder 2555 is arranged at one end of rail slider portion 2510 and can hold attached packages. Note that package holder 2555 is exemplified as provided at the leading end of second slider 2512, but there may be one or three or more sliders. In such cases, package holder 2555 is provided at the leading end of the slider farthest from vehicle main body 2501 when all sliders are extended.

Once package transport device 10q1 has arrived at rail 7 located in front of the receiver, control processor 2530 controls a motor capable of rotating turntable 2540 so as to rotate turntable 2540 and thus rotate third connector 2523. Control processor 2530 is one example of the controller.

After turntable 2540 rotates vehicle main body 2501, control processor 2530 controls the motor actuator so as to extend each of the sliders with respect to vehicle main body 2501. More specifically, control processor 2530 controls the motor actuator so as to extend first slider 2511 and second slider 2512 from vehicle main body 2501.

Control processor 2530 controls the rear propeller actuation motor 2552 for rotating side propeller 2551 to control the traveling speed of package transport device 10q1 (rotation speed of side propeller 2551) or stop the traveling of package transport device 10q1.

The motor actuator extends each of the sliders with respect to vehicle main body 2501. More specifically, in response to a control instruction from control processor 2530, the motor actuator extends first slider 2511 and second slider 2512 along the lengthwise direction of vehicle main body 2501 so as to move away from vehicle main body 2501.

Connector 2520 is held by (connected to) rail 7 located above vehicle main body 2501. More specifically, connector 2520 can be connected to rail 7 located at a position spaced apart from the ground surface with vehicle main body 2501 hanging from the connector. In the present embodiment, vehicle main body 2501 includes a plurality of connectors 2520. The plurality of connectors 2520 include first connector 2521, second connector 2522, and third connector 2523. In the present embodiment, three connectors 2520-namely first connector 2521, second connector 2522, and third connector 2523-are provided as the plurality of connectors 2520. However, the plurality of connectors 2520 may include two or four or more.

First connector 2521 is located on one side in the lengthwise direction of vehicle main body 2501. Second connector 2522 is located on the other side in the lengthwise direction of vehicle main body 2501. Third connector 2523 is located in the central region of vehicle main body 2501 between the one side and the other side in the lengthwise direction of vehicle main body 2501. Connectors 2520 are one example of the rail holder. First connector 2521, second connector 2522, and third connector 2523 are examples of the arm.

As illustrated in FIG. 55A and FIG. 55B, each of first connector 2521, second connector 2522, and third connector 2523 includes roller support portion 2525a, spring 2525b, shaft 2525c, slide motor 2526, roller 2527, and roller axle support 2525d.

Roller support portion 2525a can extend and retract along the vertical direction with respect to vehicle main body 2501.

More specifically, roller support portion 2525a includes outer enclosure 2525a1 and spring guide portion 2525a2.

Outer enclosure 2525a1 is an elongated, bottomed, cylindrical shape with a vertical upper opening, and houses spring 2525b and spring guide portion 2525a2 therein. Spring guide portion 2525a2 is an elongated, bottomed, cylindrical shape with a vertical downward opening, and houses slide motor 2526 and part of shaft 2525c therein. Flange 2525a3 for supporting one end of spring 2525b is formed at the vertical upper end portion of spring guide portion 2525a2. Spring 2525b is provided around the outer circumference of spring guide portion 2525a2.

Spring guide portion 2525a2 can move vertically upward with respect to outer enclosure 2525a1 by being driven by slide motor 2526. At this time, spring guide portion 2525a2 slides while being guided by outer enclosure 2525a1.

Spring 2525b is a coil spring and is provided around the outer circumference of spring guide portion 2525a2 while inserted into spring guide portion 2525a2. One end of spring 2525b is supported by flange 2525a3 of spring guide portion 2525a2, and the other end of spring 2525b is supported by the bottom of outer enclosure 2525a1.

When the driving by slide motor 2526 stops, the elastic force of spring 2525b causes spring 2525b to pull spring guide portion 2525a2, thereby moving spring guide portion 2525a2 vertically downward and housing spring guide portion 2525a2 inside outer enclosure 2525a1.

Shaft 2525c is inserted through outer enclosure 2525a1, and includes one end coupled to vehicle main body 2501 and another end provided with roller 2527 and roller axle support 2525d. Slide motor 2526 is attached to shaft 2525c. Part of shaft 2525c can move vertically upward by being driven by slide motor 2526.

More specifically, shaft 2525c extends in the vertical direction and includes a cylindrical first shaft and a cylindrical second shaft with a portion of the first shaft inserted inside. One end of the first shaft is a free end that is inserted inside the second shaft and can move vertically, and the other end of the first shaft is coupled to vehicle main body 2501. One end of the second shaft is coupled to the top end of spring guide portion 2525a2, and the other end of the second shaft is coupled to slide motor 2526. Therefore, when slide motor 2526 is driven, the second shaft moves vertically while being guided by the first shaft.

For example, slide motor 2526 is a stepping motor, and is housed inside spring guide portion 2525a2. Slide motor 2526 is controlled by control processor 2530 to apply a vertical upward force from outer enclosure 2525a1 to spring guide portion 2525a2 via shaft 2525c so that spring guide portion 2525a2 extends from outer enclosure 2525a1. Stated differently, slide motor 2526 can slide spring guide portion 2525a2 vertically upward with respect to outer enclosure 2525a1. Slide motor 2526 is one example of the motor.

Roller 2527 can travel on rail 7 by rotatably contacting rail 7. Roller 2527 is rotatably supported by roller axle support 2525d at the vertical upper end of roller support portion 2525a. A recess that can engage rail 7 is formed in roller 2527. This makes it difficult for this roller 2527 to derail from rail 7.

Roller axle support 2525d is fixed to the vertical upper end of roller support portion 2525a and extends in a direction orthogonal to the lengthwise direction of roller support portion 2525a. Roller axle support 2525d rotatably supports roller 2527 with respect to rail 7. Roller axle support 2525d may include an electric motor. In such cases, roller 2527 rotates by being coupled to the rotary shaft of the electric motor.

As illustrated in FIG. 55B, third connector 2523 further includes slide block 2529 that slides on slide rail 2541 provided on turntable 2540. Slide block 2529 is coupled to the vertical lower end of third connector 2523.

In the present embodiment, third connector 2523 is exemplified as including two rollers 2527 and two roller axle supports 2525d, but third connector 2523 may include three or more of each or one of each. Similarly, first connector 2521 and second connector 2522 are each exemplified as including one roller 2527 and one roller axle support 2525d, but first connector 2521 and second connector 2522 each may include two or more of each of these.

Here, roller 2527 of first connector 2521 is one example of the first rotating roller. Roller 2527 of second connector 2522 is one example of the second rotating roller. The two rollers 2527 of third connector 2523 are one example of the third rotating roller and the fourth rotating roller.

Turntable 2540 is provided on the upper surface of vehicle main body 2501, between vehicle main body 2501 and third connector 2523. Third connector 2523 is coupled to turntable 2540. In response to a control instruction from control processor 2530, turntable 2540 applies stress to rotate vehicle main body 2501. Accordingly, when third connector 2523 is connected to rail 7, turntable 2540 can rotate vehicle main body 2501 around center point O. With this, turntable 2540 rotates vehicle main body 2501 until the lengthwise direction of the frame approximately perpendicularly intersects the extending direction of rail 7.

Turntable 2540 includes a straight slide rail 2541 that includes the center of rotation. Slide block 2529 provided on third connector 2523 slides on slide rail 2541. Stoppers are arranged at both ends of slide rail 2541 to prevent slide block 2529 from coming off slide rail 2541.

FIG. 56A illustrates an example of the internal structure of turntable 2540 of the package transport device according to Embodiment 10.

As illustrated in FIG. 56A, turntable 2540 includes rotary shaft 2542 and platform 2540a that is rotated by rotary shaft 2542. Rotary shaft 2542 extends in the vertical direction, orthogonal to the upper surface of vehicle main body 2501. Rotary shaft 2542 is driven by motor 2543 provided in vehicle main body 2501 being controlled by control processor 2530, which rotates via motor 2543 and worm 2544. Platform 2540a is coupled vertically above rotary shaft 2542. Platform 2540a is disc-shaped. Rotary shaft 2542 is coupled to the central region of platform 2540a. As illustrated in FIG. 54, slide rail 2541 is arranged on the upper surface of platform 2540a.

FIG. 56B is a side view illustrating an example of slide rail 2541 of package transport device 10q1 according to Embodiment 10. FIG. 56C is a top view illustrating an example of slide block 2529 of package transport device 10q1 according to Embodiment 10. Note that illustration of motor 2545 is omitted in FIG. 56C. FIG. 56D is a front view illustrating an example of the left side components, pole screw 2541c, and guide 2541a of slide block 2529 of package transport device 10q1 according to Embodiment 10. FIG. 56E is a front view illustrating an example of the right side components, pole screw 2541c, and guide 2541a of a slider of package transport device 10q1 according to Embodiment 10.

As illustrated in FIG. 56B through FIG. 56E, slide rail 2541 is, for example, a linear guide. Slide rail 2541 includes, for example, two guides 2541a, guide rail 2541b, two pole screws 2541c, and motor 2545. The two motors 2541d rotate the two pole screws 2541c in a one-to-one synchronized manner while the two guides 2541a maintain the attitude of slide block 2529, allowing slide block 2529 to move along the lengthwise direction of guide rail 2541b. Slide block 2529 includes, for example, two clutch blocks 2541e and linear block 2541f. Slide block 2529 can move along slide rail 2541 by motor 2545 provided in turntable 2540 being controlled by control processor 2530.

As illustrated in FIG. 54, side propeller 2551 is provided on the other side of vehicle main body 2501 (the side opposite the side in the traveling direction). Side propeller 2551 provides propulsion force to vehicle main body 2501 in a direction parallel to rail 7. More specifically, side propeller 2551 is rotated by propeller actuation motor 2552 attached to propeller support portion 22a9 to provide propulsion force to vehicle main body 2501.

Propeller actuation motor 2552 controls the rotation rate of side propeller 2551 in response to a control instruction from control processor 2530.

With package transport device 10q1 configured in this manner, roller 2527 can be separated from rail 7 by extending connector 2520. Similarly, roller 2527 can be placed on rail 7 by retracting connector 2520. Although all connectors 2520 are arranged on the right side in a view along the traveling direction in the example in FIG. 54, third connector 2523 can be arranged on the left side in a view along the traveling direction by rotating turntable 2540. By rotating turntable 2540 in a state in which only third connector 2523 is coupled to rail 7, vehicle main body 2501 rotates, which makes it possible to reverse the traveling direction of package transport device 10q1. Third connector 2523 can be transferred horizontally by moving slide block 2529 provided on slide rail 2541 of turntable 2540. Stated differently, rollers 2527 of third connector 2523 can be moved horizontally away from or closer to rail 7. First slider 2511 and second slider 2512 can also be extended to deliver the package to a location spaced horizontally away from package transport device 10q1.

### VARIATION OF EMBODIMENT 10

FIG. 57 is a perspective view illustrating an example of package transport device 10q2 according to a variation of Embodiment 10.

Hereinafter, as illustrated in FIG. 57, since the basic configuration of package transport device 10q2 according to the present variation is the same as the basic configuration of the unmanned aerial vehicle of Embodiment 1 and the same as the basic configuration of the package transport device according to Embodiment 10 and the like, regarding the basic configuration of package transport device 10q2 in the present variation, the same reference signs as above will be used and repeated description will be omitted where appropriate. Package transport device 10q2 according to the present variation differs from the package transport device according to Embodiment 10 in that first connector 2521, second connector 2522, turntable 2540, and third connector 2523 move with respect to vehicle main body 2501. Package transport device 10q2 according to the present variation does not include the slide rail of Embodiment 10, but may include a slide rail. Third connector 2523 of package transport device 10q2 does not include a lifting mechanism achieved by spring 2525b, slide motor 2526, etc.

Package transport device 10q2 according to the present variation includes first sliding mechanisms 2560a and 2560b that move first connector 2521 and second connector 2522.

First sliding mechanism 2560a is arranged between first connector 2521 and vehicle main body 2501 and extends with respect to vehicle main body 2501. First sliding mechanism 2560b is also arranged between first connector 2521 and vehicle main body 2501 and extends with respect to vehicle main body 2501. First sliding mechanism 2560a is one example of the second slider portion. First sliding mechanism 2560b is one example of the third slider portion.

More specifically, first sliding mechanism 2560a includes connector support portion 2562a that slides in a direction that is horizontal and orthogonal to the lengthwise direction of vehicle main body 2501, and slide main body portion 2561a that slidably supports connector support portion 2562a. First sliding mechanism 2560b includes connector support portion 2562b that slides in a direction orthogonal to the lengthwise direction of vehicle main body 2501 and in the horizontal direction, and slide main body portion 2561b that slidably supports connector support portion 2562b.

Connector support portion 2562a is provided on the front (the side in the traveling direction) and on the rear (the side opposite the traveling direction side) of vehicle main body 2501, and connector support portion 2562b is provided on the front (the side in the traveling direction) and on the rear (the side opposite the traveling direction side) of vehicle main body 2501. Connector support portions 2562a and 2562b slide in the lengthwise direction of slide main body portions 2561a and 2561b, which is a horizontal direction. More specifically, connector support portions 2562a and 2562b slide in a direction that is orthogonal to the lengthwise direction of vehicle main body 2501 and approximately parallel to the horizontal direction.

Slide main body portions 2561a and 2561b are elongated in predetermined direction with respect to vehicle main body 2501 and are connected to vehicle main body 2501. More specifically, slide main body portions 2561a and 2561b are provided horizontally relative to the lengthwise direction of vehicle main body 2501 by slide motor 2563 provided in vehicle main body 2501. Accordingly, slide main body portions 2561a and 2561b guide connector support portions 2562a and 2562b in a direction orthogonal to the lengthwise direction of vehicle main body 2501.

Slide motor 2563 is provided on vehicle main body 2501 and controlled by control processor 2530 so as to move slide main body portions 2561a and 2561b vertically with respect to vehicle main body 2501.

Package transport device 10q2 according to the present variation further includes second sliding mechanism 2564 that moves turntable 2540 and third connector 2523 vertically.

Second sliding mechanism 2564 includes turntable 2540, shaft motor 2567, and shaft 2565 that is inserted through turntable 2540 and coupled to third connector 2523.

Turntable 2540 is disposed between third connector 2523 and vehicle main body 2501. After extending first sliding mechanism 2560a and first sliding mechanism 2560b and separating first connector 2521 and second connector 2522 from the rail, turntable 2540 rotates vehicle main body 2501 under control by control processor 2530.

Shaft motor 2567 is controlled by control processor 2530 so as to move shaft 2565 vertically with respect to vehicle main body 2501 and turntable 2540.

Shaft 2565 inserts through the center of turntable 2540, and third connector 2523 is coupled to the vertical upper end of shaft 2565. Shaft motor 2567 can be controlled by control processor 2530 to move shaft 2565 vertically.

### [Embodiment 11]

FIG. 58A is a perspective view illustrating an example of rail 7 and rail coupling 2570 according to Embodiment 11. FIG. 58B is another perspective view illustrating an example of rail 7 and rail coupling 2570 according to Embodiment 11. FIG. 59 is a perspective view illustrating first coupling point T1 of first rail 7a and second coupling point T2 of second rail 7b according to Embodiment 11.

Hereinafter, as illustrated in FIG. 58A, FIG. 58B, and FIG. 59, since the basic configuration of rail 7 according to the present embodiment is the same as the basic configuration of rail 7 according to Embodiment 1 and the like, regarding the basic configuration of rail 7 in the present embodiment, the same reference signs as above will be used and repeated description will be omitted where appropriate.

The present embodiment gives an example in which first rail 7a and second rail 7b are coupled by rail coupling 2570.

Rail coupling 2570 has an L-shape or inverted L-shape and can couple first rail 7a and second rail 7b at the point where first rail 7a and second rail 7b intersect three-dimensionally. FIG. 58A illustrates rail coupling 2570 that is L-shaped in a view along the lengthwise direction of first rail 7a, i.e., positioned on the left side in a view along the traveling direction. FIG. 58B illustrates rail coupling 2570 that is inverted L-shaped in a view along the lengthwise direction of first rail 7a, i.e., positioned on the right side in a view along the traveling direction.

Rail coupling 2570 can also couple first rail 7a to second rail 7b so that first rail 7a is inverted L-shaped in a view along the lengthwise direction of first rail 7a.

Rail coupling 2570 includes first rail coupler 2571a, first rail extension 2571b, second rail coupler 2572a, and second rail extension 2572b.

First rail coupler 2571a couples to first rail 7a. More specifically, first rail 7a is inserted into a first insertion hole of first rail coupler 2571a to couple first rail coupler 2571a to first rail 7a. The vertical lower surface of first rail coupler 2571a is connected to first rail extension 2571b.

One end of first rail extension 2571b is connected to first rail coupler 2571a, and the other end of first rail extension 2571b is connected to the other end of second rail coupler 2572a. First rail extension 2571b extends from first rail coupler 2571a in a direction that is orthogonal to the lengthwise direction of first rail 7a and horizontal.

Second rail coupler 2572a couples to second rail 7b. More specifically, second rail 7b is inserted into a second insertion hole of second rail coupler 2572a to couple second rail coupler 2572a to second rail 7b. The vertical lower surface of second rail coupler 2572a is connected to second rail extension 2572b.

One end of second rail extension 2572b is connected to second rail coupler 2572a, and the other end of second rail extension 2572b is connected to the other end of first rail coupler 2571a. Second rail extension 2572b extends from second rail coupler 2572a in a direction that is orthogonal to the lengthwise direction of second rail 7b and vertical.

Thus, as illustrated in FIG. 58A through FIG. 59, rail coupling 2570 is coupled to second rail 7b at a position farther from a position on second rail 7b vertically above first coupling point T1 where rail coupling 2570 is coupled to first rail 7a. Stated differently, second rail coupler 2572a and second rail extension 2572b are positioned away from first rail 7a. In other words, in a view of first rail 7a and second rail 7b in the vertical direction, first coupling point T1 of rail coupling 2570 and first rail 7a and second coupling point T2 of rail coupling 2570 and second rail 7b do not overlap, but are spaced apart from each other. Thus, a space is formed between first rail 7a and second rail coupler 2572a for rollers 2527 of package transport device 10q2 to pass through.

Therefore, in FIG. 58A, it is easy for package transport device 10q2 to turn right from first rail 7a to second rail 7b. In FIG. 58B, it is easy for package transport device 10q2 to turn left from first rail 7a to second rail 7b.

Note that package transport device 10q2 is capable of turning left in FIG. 58A and capable of turning right in FIG. 58B.

### [Embodiment 12]

Hereinafter, since the basic configuration of package transport device 10q1 according to the present embodiment is the same as the basic configuration of the package transport device according to Embodiment 10 and the like, regarding the basic configuration of package transport device 10q1 in the present embodiment, the same reference signs as above will be used and repeated description will be omitted where appropriate. Hereinafter, since the basic configuration of package transport device 10q1 according to the present embodiment is the same as the basic configuration of the unmanned aerial vehicle of Embodiment 1 and the same as the basic configuration of the package transport device according to Embodiment 1 and the like, regarding the basic configuration of package transport device 10q1 in the present embodiment, the same reference signs as above will be used and repeated description will be omitted where appropriate. The present embodiment may also be used with unmanned aerial vehicles and delivery boxes according to embodiments other than Embodiment 1.

### Operation Example 1

FIG. 60 is a top view and a side view illustrating an operation of package transport device 10q1 according to Embodiment 12.

This operation example illustrates a case in which package transport device 10q1 rotates vehicle main body 180° on rail 7. This example assumes that package transport device 10q1 is stopped on rail 7 and first connector 2521, second connector 2522, and third connector 2523 of package transport device 10q1 are coupled to rail 7.

First, as illustrated in (a1) and (a2) in FIG. 60, the control processor of package transport device 10q1 controls the slide motor of third connector 2523 so as to retract third connector 2523 of package transport device 10q1.

As illustrated in (b1) and (b2) in FIG. 60, this lifts the vehicle main body of package transport device 10q1, and rollers 2527 of first connector 2521 and second connector 2522 separate from rail 7. At this time, since first connector 2521, second connector 2522, and third connector 2523 are coupled offset from the center of the vehicle main body toward one side of the vehicle main body, the vehicle main body is tilted with respect to the horizontal plane. The control processor may control, for example, the slide rail of turntable 2540 so as to tilt the vehicle main body and shift the position of third connector 2523 with respect to the vehicle main body.

Next, as illustrated in (c1) in FIG. 60, the control processor of package transport device 10q1 controls the slide motor of third connector 2523 so as to extend third connector 2523 of package transport device 10q1. Thus, rollers 2527 of first connector 2521 and second connector 2522 are positioned vertically below rail 7, without first connector 2521 and second connector 2522 contacting rail 7.

Next, as illustrated in (d1) and (e1) in FIG. 60, the control processor of package transport device 10q1 controls turntable 2540 so as to rotate it 180°. This will reverse the orientation of package transport device 10q1.

Next, as illustrated in (f1) in FIG. 60, the control processor of package transport device 10q1 controls the slide motor of third connector 2523 so as to retract third connector 2523 of package transport device 10q1. This lifts the vehicle main body of package transport device 10q1 and places rollers 2527 of first connector 2521 and second connector 2522 vertically above rail 7. This also places first connector 2521 and second connector 2522 on the opposite side of rail 7 that third connector 2523 is on. At this time, since third connector 2523 is offset from the center of the vehicle main body toward one side of the vehicle main body, and first connector 2521 and second connector 2522 are offset from the center of the vehicle main body toward the other side of the vehicle main body, the vehicle main body is approximately parallel to the horizontal plane or slightly inclined to the other side of the vehicle main body.

Next, as illustrated in (g1) and (h1) in FIG. 60, the control processor of package transport device 10q1 controls the slide motor of third connector 2523 so as to return third connector 2523 of package transport device 10q1 to its original position. This places rollers 2527 of first connector 2521 and second connector 2522 on rail 7. Package transport device 10q1 then begins traveling.

The control processor of package transport device 10q1 may also control the slide motor of third connector 2523 so as to extend third connector 2523 of package transport device 10q1 and separate roller 2527 of third connector 2523 from rail 7. The control processor of package transport device 10q1 controls the slide motor of third connector 2523 so as to retract third connector 2523 of package transport device 10q1 and place roller 2527 of third connector 2523 vertically below rail 7. Next, the control processor of package transport device 10q1 controls turntable 2540 so as to rotate it 180°. This places third connector 2523 on the other side of the vehicle main body along with first connector 2521 and second connector 2522. Package transport device 10q1 then begins traveling.

### Operation Example 2

FIG. 61A is a top view and a side view illustrating an operation in which package transport device 10q1 according to Embodiment 12 turns left at the intersection of first rail 7a and second rail 7b.

FIG. 61A assumes a left turn is made from first rail 7a to second rail 7b. Moreover, it is assumed that first rail 7a and second rail 7b are coupled by the rail coupling of FIG. 58B, i.e., a rail coupling located on the right side when viewed along first rail 7a. First connector 2521, second connector 2522, and third connector 2523 of package transport device 10q1 are assumed to be located on the opposite side of first rail 7a from the side where the rail coupling is located. This example assumes that package transport device 10q1 is stopped on first rail 7a and first connector 2521, second connector 2522, and third connector 2523 of package transport device 10q1 are coupled to first rail 7a.

First, as illustrated in (a1) in FIG. 61A, the control processor of package transport device 10q1 controls the slide motor of third connector 2523 so as to retract third connector 2523 of package transport device 10q1. This lifts the vehicle main body of package transport device 10q1 and separates rollers 2527 of first connector 2521 and second connector 2522 from first rail 7a. Next, the control processor of package transport device 10q1 controls the slide motor of third connector 2523 so as to extend third connector 2523 of package transport device 10q1. Thus, rollers 2527 of first connector 2521 and second connector 2522 are positioned vertically below first rail 7a, without first connector 2521 and second connector 2522 contacting first rail 7a or second rail 7b.

Next, as illustrated in (b1) and (c1) in FIG. 61A, the control processor of package transport device 10q1 controls turntable 2540 so as to rotate it 90° counterclockwise.

This places package transport device 10q1 in an attitude where the lengthwise direction of package transport device 10q1 is parallel to the lengthwise direction of the second rail, as illustrated in (a2) in FIG. 61A. In other words, this places rollers 2527 of first connector 2521 and second connector 2522 vertically below second rail 7b.

Next, as illustrated in (b2) in FIG. 61A, the control processor of package transport device 10q1 controls the slide motor of third connector 2523 so as to retract third connector 2523 of package transport device 10q1. This lifts the vehicle main body of package transport device 10q1 and places rollers 2527 of first connector 2521 and second connector 2522 vertically above second rail 7b.

Next, as illustrated in (c2) in FIG. 61A, the control processor of package transport device 10q1 controls the slide motor of third connector 2523 so as to return third connector 2523 of package transport device 10q1 to its original position. This places rollers 2527 of first connector 2521 and second connector 2522 on second rail 7b.

Next, as illustrated in (d2) in FIG. 61A, the control processor of package transport device 10q1 controls the slide motor of third connector 2523 so as to extend third connector 2523 of package transport device 10q1 and move roller 2527 of third connector 2523 away from first rail 7a. At this time, roller 2527 of third connector 2523 is vertically above first rail 7a and second rail 7b.

Next, as illustrated in (e2) in FIG. 61A, the control processor of package transport device 10q1 controls turntable 2540 so as to rotate it 90° clockwise. This places roller 2527 of third connector 2523 vertically above second rail 7b. The control processor of package transport device 10q1 controls the motor of first connector 2521 and the motor of second connector 2522 so as to rotate rollers 2527 to slightly advance second connector 2522 closer to first rail 7a.

Next, as illustrated in (f2) in FIG. 61A, the control processor of package transport device 10q1 controls the slide motor of third connector 2523 so as to retract third connector 2523 of package transport device 10q1. This lifts the vehicle main body of package transport device 10q1 and separates rollers 2527 of first connector 2521 and second connector 2522 from second rail 7b.

Next, as illustrated in (g2) in FIG. 61A, the control processor of package transport device 10q1 controls the slide motor of third connector 2523 so as to extend third connector 2523 of package transport device 10q1. Thus, rollers 2527 of first connector 2521 and second connector 2522 are positioned vertically below second rail 7b, without first connector 2521 and second connector 2522 contacting first rail 7a or second rail 7b.

Next, as illustrated in (h2) in FIG. 61A, the control processor of package transport device 10q1 controls the motor of third connector 2523 so as to move second connector 2522 forward until it passes first rail 7a.

Next, as illustrated in (i2) in FIG. 61A, the control processor of package transport device 10q1 controls the slide motor of third connector 2523 so as to retract third connector 2523 of package transport device 10q1 and place rollers 2527 of first connector 2521 and second connector 2522 vertically above second rail 7b.

Next, as illustrated in (j2) in FIG. 61A, the control processor of package transport device 10q1 controls the slide motor of third connector 2523 so as to return third connector 2523 of package transport device 10q1 to its original position. This places rollers 2527 of first connector 2521 and second connector 2522 on second rail 7b.

Package transport device 10q1 then begins traveling.

While FIG. 61A illustrates a case in which a left turn is made, FIG. 61B illustrates a case in which a right turn is made.

FIG. 61B is a top view and a side view illustrating an operation in which the package transport device according to Embodiment 12 turns right at the intersection of the first rail and the second rail. Since the operation in the case of a right turn is the same as the operation in the case of a left turn as illustrated in FIG. 61A, repeated description will be omitted where appropriate.

FIG. 61B assumes a right turn is made from first rail 7a to second rail 7b. Moreover, it is assumed that first rail 7a and second rail 7b are coupled by the rail coupling of FIG. 58A, i.e., a rail coupling located on the left side when viewed along first rail 7a. First connector 2521, second connector 2522, and third connector 2523 of package transport device 10q1 are assumed to be located on the opposite side of first rail 7a from the side where the rail coupling is located. This example assumes that package transport device 10q1 is stopped on first rail 7a and first connector 2521, second connector 2522, and third connector 2523 of package transport device 10q1 are coupled to first rail 7a.

First, as illustrated in (a1) in FIG. 61B, the control processor of package transport device 10q1 controls the slide motor of third connector 2523 so as to retract third connector 2523 of package transport device 10q1. This lifts the vehicle main body of package transport device 10q1 and separates rollers 2527 of first connector 2521 and second connector 2522 from first rail 7a. Next, the control processor of package transport device 10q1 controls the slide motor of third connector 2523 so as to extend third connector 2523 of package transport device 10q1. Thus, rollers 2527 of first connector 2521 and second connector 2522 are positioned vertically below first rail 7a, without first connector 2521 and second connector 2522 contacting first rail 7a or second rail 7b.

Next, as illustrated in (b1) and (c1) in FIG. 61B, the control processor of package transport device 10q1 controls turntable 2540 so as to rotate it 90° clockwise.

This places package transport device 10q1 in an attitude where the lengthwise direction of package transport device 10q1 is parallel to the lengthwise direction of the second rail, as illustrated in (a2) in FIG. 61B. In other words, this places rollers 2527 of first connector 2521 and second connector 2522 vertically below second rail 7b.

Next, as illustrated in (b2) in FIG. 61B, the control processor of package transport device 10q1 controls the slide motor of third connector 2523 so as to retract third connector 2523 of package transport device 10q1. This lifts the vehicle main body of package transport device 10q1 and places rollers 2527 of first connector 2521 and second connector 2522 vertically above second rail 7b.

Next, as illustrated in (c2) in FIG. 61B, the control processor of package transport device 10q1 controls the slide motor of third connector 2523 so as to return third connector 2523 of package transport device 10q1 to its original position. This places rollers 2527 of first connector 2521 and second connector 2522 on second rail 7b.

Next, as illustrated in (d2) in FIG. 61B, the control processor of package transport device 10q1 controls the slide motor of third connector 2523 so as to extend third connector 2523 of package transport device 10q1 and move roller 2527 of third connector 2523 away from first rail 7a. At this time, roller 2527 of third connector 2523 is vertically above first rail 7a and second rail 7b.

Next, as illustrated in (e2) in FIG. 61B, the control processor of package transport device 10q1 controls turntable 2540 so as to rotate it 90° counterclockwise. This places roller 2527 of third connector 2523 vertically above second rail 7b. The control processor of package transport device 10q1 controls the motor of first connector 2521 and the motor of second connector 2522 so as to rotate rollers 2527 to slightly advance first connector 2521 closer to first rail 7a.

Next, as illustrated in (f2) in FIG. 61B, the control processor of package transport device 10q1 controls the slide motor of third connector 2523 so as to retract third connector 2523 of package transport device 10q1. This lifts the vehicle main body of package transport device 10q1 and separates rollers 2527 of first connector 2521 and second connector 2522 from second rail 7b.

Next, as illustrated in (g2) in FIG. 61B, the control processor of package transport device 10q1 controls the slide motor of third connector 2523 so as to extend third connector 2523 of package transport device 10q1. Thus, rollers 2527 of first connector 2521 and second connector 2522 are positioned vertically below second rail 7b, without first connector 2521 and second connector 2522 contacting first rail 7a or second rail 7b.

Next, as illustrated in (h2) in FIG. 61B, the control processor of package transport device 10q1 controls the motor of third connector 2523 so as to move first connector 2521 forward until it passes first rail 7a.

Next, as illustrated in (i2) in FIG. 61B, the control processor of package transport device 10q1 controls the slide motor of third connector 2523 so as to retract third connector 2523 of package transport device 10q1 and place rollers 2527 of first connector 2521 and second connector 2522 vertically above second rail 7b.

Next, as illustrated in (j2) in FIG. 61B, the control processor of package transport device 10q1 controls the slide motor of third connector 2523 so as to return third connector 2523 of package transport device 10q1 to its original position. This places rollers 2527 of first connector 2521 and second connector 2522 on second rail 7b.

Package transport device 10q1 then begins traveling.

Note that even in the case of the rail coupling of FIG. 58A, package transport device 10q1 can still turn left, and even in the case of the rail coupling of FIG. 58B, package transport device 10q1 can still turn right.

### Operation Example 3

First, a case in which package transport device 10q1 passes over a partially raised rail 7 will be discussed.

FIG. 62 is a side view illustrating an operation in which package transport device 10q1 according to Embodiment 12 passes support pillar 19 that supports rail 7.

This operation example assumes a case in which that first and second connectors 2521 and 2522 and third connector 2523 of package transport device 10q1 sandwich rail 7 when package transport device 10q1 passes support pillar 19.

When traveling normally, as illustrated in FIG. 62, the control processor of package transport device 10q1 controls the slide motor of third connector 2523 so as to extend and then retract third connector 2523 of package transport device 10q1 to place only roller 2527 of third connector 2523 vertically below rail 7 and cause roller 2527 of third connector 2523 to push up on rail 7 from below.

This allows rail 7 to be sandwiched between first and second connectors 2521 and 2522 and third connector 2523 of package transport device 10q1. Stated differently, third connector 2523 holds rail 7 while pushing rail 7 up from below, while first and second connectors 2521 and 2522 are held by rail 7 above rail 7.

When package transport device 10q1 passes support pillar 19, even if rail 7 around support pillar 19 is raised, first and second connectors 2521 and 2522 and third connector 2523 sandwich rail 7, giving package transport device 10q1 a tracking force along the slope of rail 7, and making it difficult for package transport device 10q1 to detach from rail 7.

Next, a case in which package transport device 10q1 passes over a curved rail 7 will be discussed.

FIG. 63 is a top view and a side view illustrating an operation of package transport device 10q1 passing a curved rail 7 according to Embodiment 12.

This operation example assumes a case in which that first and second connectors 2521 and 2522 and third connector 2523 of package transport device 10q1 sandwich a curved rail 7 when package transport device 10q1 passes support pillar 19.

In this case as well, when package transport device 10q1 passes a curved rail 7, first and second connectors 2521 and 2522 and third connector 2523 sandwich rail 7, giving package transport device 10q1 a tracking force along the slope of rail 7, and making it difficult for package transport device 10q1 to detach from rail 7.

### [Embodiment 13]

Hereinafter, shipping system 2600 according to the present embodiment will be described with reference to FIG. 64 through FIG. 66.

FIG. 64 illustrates an example of shipping system 2600 according to Embodiment 13. FIG. 65 illustrates an example of a stocked first product being placed on display device 2610 and displayed in a multi-level case in shipping system 2600 according to Embodiment 13. The dashed line in FIG. 65 illustrates the range of motion of robot arm 2620. FIG. 66 is a block diagram illustrating an example of shipping system 2600 according to Embodiment 13.

As illustrated in FIG. 64 through FIG. 66, when a user orders a first product via a terminal device and order information indicating the ordered first product is obtained, shipping system 2600 is used, for example, to ship (pick) the first product indicated in the obtained order information or to display the stocked first product in a multi-level case. Therefore, in shipping system 2600, the first product ordered by the user is first stocked and displayed in a multi-level case, and then the first product ordered by the user is delivered by the unmanned aerial vehicle, package transport device, etc., described in Embodiment 1, etc., above.

More specifically, in a store where the first product is displayed and shipped, this shipping system 2600 allows first products delivered to the store and removed from the delivery case, i.e., stocked first products, to be automatically displayed in a multi-level case using robot arm 2620 and display device 2610, etc. By placing the stocked first product in the placement area, which is display screen 2611 of display device 2610, robot arm 2620 in shipping system 2600 can lift the first product and display it in a predetermined location in the multi-level case. In shipping system 2600, when shipping the ordered first product, robot arm 2620 can remove the ordered first product from the multi-level case and move it into a package box for delivery. Since this allows a worker to carry the first product that has been moved to the package box and attach the first product to the unmanned transport device, the unmanned transport unit can deliver the first product to the user who ordered it.

Shipping system 2600 includes barcode reader 2605, data manager 2606, display device 2610, and robot arm 2620.

Barcode reader 2605 is capable of reading the barcode on the stocked first product when the first product is stocked. Barcode reader 2605 can read the barcode on the stocked first product by being used by a worker, but barcode reader 2605 may also be able to automatically read the barcode on the first product. Barcode reader 2605 outputs a unique first product ID associated with the read first product to data manager 2606. Barcode reader 2605 is one example of a sensor.

Data manager 2606 holds first and second databases, which are information on all products that users can order, and manages the first and second databases. Data manager 2606 includes storage 2624 such as memory, and storage 2624 stores the first and second databases.

The first database includes a plurality of items of data, each of which associates a product ID with a bottom image, arranged in a list. The product ID is an ID for identifying a product. The bottom image is an image showing the shape of the bottom of the product corresponding to the associated product ID. The first database may further include a plurality of items of data, each of which associates a product ID with an exterior image, arranged in a list. The product ID is an ID for identifying a product. The exterior image is an image showing the external appearance of the product corresponding to the associated product ID. Stated differently, the first database is a data table in which for each product, at least a product ID is associated with a bottom image, for example. The exterior image of the product may be an orthographic projection such as a plan view or frontal view of the product when the product is viewed from vertically above, or a product image showing the external appearance of the product.

The second database includes a plurality of items of data, each of which associates a product ID, which is an ID for identifying the product, with 3D data of the product corresponding to the product ID, arranged in a list. Stated differently, the second database is a data table in which for each product, a product ID is associated with 3D data of the product. Here, the 3D data includes the three-dimensional shape of the product, the size of the product, the height of the product, etc.

Data manager 2606 can obtain a first product ID identifying the first product based on the sensing data obtained from barcode reader 2605. When data manager 2606 obtains the first product ID from barcode reader 2605, it identifies the first bottom image, first exterior image, and 3D data corresponding to the obtained first product ID, from the first and second databases. Here, the first bottom image is an image showing the shape of the bottom of the first product, and is the bottom image corresponding to the first product ID among the plurality of bottom images included in the first database. The first exterior image is an image showing the external shape of the first product, and is the exterior image corresponding to first product ID among the plurality of exterior images included in the first database. The 3D data is the 3D data of the first product, and is the 3D data corresponding to the first product ID among the plurality of 3D data included in the first database.

Data manager 2606 outputs the identified first product ID and 3D data to robot arm 2620 and outputs the first bottom image and the first exterior image to display device 2610.

Display device 2610 is a display for displaying the first bottom image and the first exterior image of the first product on display screen 2611. For example, when the product is a container such as a PET bottle, if the first bottom image is circular when the PET bottle is upright, display device 2610 can display a first bottom image on display screen 2611 that is similar in shape and size to the bottom of the PET bottle. Display device 2610 displays the first bottom image and the first exterior image of the first product on display screen 2611 after barcode reader 2605 reads the first product ID of the first product.

More specifically, display device 2610 includes display controller 2612 that performs control for displaying the first bottom image and the first exterior image corresponding to the first product for which the first product ID has been read on display screen 2611. Note that display controller 2612 may be configured to display only the first bottom image on display screen 2611. Note that display controller 2612 need not be equipped in display device 2610 and may be a separate device from display device 2610.

More specifically, display device 2610 can obtain the first bottom image of the first product based on the first database and the obtained first product ID. This allows display controller 2612 of display device 2610 to display the first bottom image on display screen 2611, which is in the placement area for placing the first product. The placement area corresponds to the area on the display where the first bottom image is displayed, is the same size and shape as display screen 2611, and is synonymous with display screen 2611.

Note that display device 2610 may include a touch panel in the placement area where the image is displayed on display screen 2611. In such cases, display device 2610 may be configured to make it recognizable that the first product has been placed in the placement area. Display device 2610 may be a projector for projecting the first bottom image onto a screen. In such cases, the placement area corresponds to the area on the screen where the first bottom image is projected, and the area where the first bottom image is projected corresponds to display screen 2611.

Display device 2610 can also obtain the first exterior image, which is an image showing the external appearance of the first product, based on the first database and the obtained first product ID. This allows display controller 2612 of display device 2610 to display the first bottom image and additionally the first exterior image on display screen 2611, which is in the placement area for placing the first product.

Thus, since the first bottom image of the first product is displayed on display screen 2611 of display device 2610 or the first exterior image is displayed on display screen 2611 of display device 2610, a worker can place the first product whose first product ID has been read so that the first product is superimposed on a first location at which the first bottom image or the first exterior image is displayed on display screen 2611.

Display device 2610 further includes position determination processor 2614 that, when the first product is placed in the placement area, determines whether the first product is correctly placed at the first location in the placement area where the first bottom image is displayed on display screen 2611. Note that position determination processor 2614 need not include display device 2610; it is sufficient so long as position determination processor 2614 is included as an element of shipping system 2600. For example, position determination processor 2614 may be a separate device from display device 2610.

If position determination processor 2614 determines that the first product is correctly placed at the first location on the placement area, display controller 2612 controls display screen 2611 so as to display an image on display screen 2611 indicating that the first product is correctly placed at the first location. If position determination processor 2614 determines that the first product is not correctly placed at the first location, display controller 2612 controls display screen 2611 so as to display an image on display screen 2611 indicating that the first product is not correctly placed at the first location.

Shipping system 2600 may include loudspeaker 2633. In such cases, if position determination processor 2614 determines that the first product is correctly placed at the first location on the placement area, it may control loudspeaker 2633 to output audio indicating that the first product is correctly placed at the first location. If position determination processor 2614 determines that the first product is not correctly placed at the first location on the placement area, it may control loudspeaker 2633 to output audio indicating that the first product is not correctly placed at the first location.

In addition to display screen 2611 displaying an image indicating that the first product has been placed correctly, loudspeaker 2633 may output audio indicating that the first product has been placed correctly. In addition to display screen 2611 displaying an image indicating that the first product has not been placed correctly, loudspeaker 2633 may output audio indicating that the first product has not been placed correctly.

Shipping system 2600 may include drop sensor 2631 that detects dropping of the first product. In such cases, shipping system 2600 may further include drop determination processor 2632 that determines whether the first product lifted by robot arm 2620 has been dropped based on sensing data obtained from drop sensor 2631. Drop sensor 2631 is, for example, an infrared sensor or a camera sensor, and is one example of a sensor. Drop sensor 2631 may be installed in the store or on robot arm 2620.

If drop determination processor 2632 determines that the first product lifted by robot arm 2620 has been dropped, display controller 2612 may control display screen 2611 to display an image on display screen 2611 indicating that the first product has been dropped. If drop determination processor 2632 determines that the first product lifted by robot arm 2620 has been dropped, it may control loudspeaker 2633 to output audio indicating that the first product has been dropped.

If the first product lifted by robot arm 2620 has dropped, display screen 2611 may display an image indicating that the first product has dropped, and loudspeaker 2633 may output audio indicating that the first product has dropped.

Shipping system 2600 may include a camera capable of outputting image information, which is information indicating an image capturing the placement area and the first product placed in the placement area. In such cases, position determination processor 2614 may determine whether the first product is correctly placed at the first location based on image information obtained from the camera.

If position determination processor 2614 determines based on image information that the first product is correctly placed at the first location, display controller 2612 may control display screen 2611 so as to display an image on display screen 2611 indicating that the first product is correctly placed at the first location. Additionally, if position determination processor 2614 determines based on image information that the first product is correctly placed at the first location, it may cause loudspeaker 2633 to output audio indicating that the first product is correctly placed at the first location. If position determination processor 2614 determines based on image information that the first product is not correctly placed at the first location, display controller 2612 may control display screen 2611 so as to display an image on display screen 2611 indicating that the first product is not correctly placed at the first location. If position determination processor 2614 determines based on image information that the first product is not correctly placed at the first location, it may cause loudspeaker 2633 to output audio indicating that the first product is not correctly placed at the first location.

When the first product is placed at the first location where the first bottom image is displayed on display screen 2611, display controller 2612 outputs, to robot arm 2620, the first location information, which is information indicating the first location where the first bottom image is displayed in the placement area that is display screen 2611. The first location information is expressed, for example, as the coordinates of the first bottom image on the placement area. These coordinates are the same or substantially the same as the coordinates of the product placed in the placement area. The first location information may further include location information, which is information indicating the location where the first exterior image is displayed.

Display device 2610 may further include placement sensor 2613 that detects the placement of the first product at the first location where the first bottom image and the first exterior image of the first product are displayed on display screen 2611. Placement sensor 2613 is, for example, a camera, a pressure sensor, or an infrared sensor, and is one example of a sensor. When placement sensor 2613 detects the placement of the first product at the first location where the first bottom image and the first exterior image of the first product are displayed on display screen 2611, display controller 2612 stops displaying the first bottom image and the first exterior image of the first product on display screen 2611. Placement sensor 2613 is one example of a camera.

Robot arm 2620 is includes a plurality of arms and a plurality of joints (axles), etc., and can move freely, enabling it to lift and move the first product. Stated differently, robot arm 2620 can move the first product placed in the placement area of display device 2610 to a multi-level case for display, or move the first product displayed in the multi-level case to a package box.

More specifically, robot arm 2620 includes displacement portion 2622, first actuator 2621, arm controller 2623, and storage 2624.

Displacement portion 2622 can be actuated by first actuator 2621 to lift a target first product, which is one or more first products placed in the placement area, and change the position of the first product. Displacement portion 2622 includes a gripping portion capable of holding the first product by pinching the first product, a suction portion capable of holding the first product by sucking in air, or a magnetic portion capable of holding the first product by attracting the first product through magnetic force. In FIG. 65 and the like, an example is illustrated in which a gripping portion is used as one example of displacement portion 2622. Here, a target refers to the product that displacement portion 2622 is to lift.

Displacement portion 2622 can lift the first product placed in the placement area of display device 2610 and move the first product to inside the multi-level case to display it in the multi-level case. Displacement portion 2622 can lift the first product displayed in the multi-level case and move the first product to the package box.

First actuator 2621 can be controlled by arm controller 2623 to actuate displacement portion 2622. For example, under control by arm controller 2623, first actuator 2621 causes displacement portion 2622 to lift the first product placed in the placement area of display device 2610 and move the first product.

Arm controller 2623 can control the actuation of first actuator 2621. Arm controller 2623 can cause displacement portion 2622 to lift the first product by controlling first actuator 2621. More specifically, arm controller 2623 determines a method for lifting the first product using displacement portion 2622 by controlling first actuator 2621, using the second database, the first product ID, and the first location information, which is information indicating the first location where the first bottom image is displayed in the placement area.

Here, arm controller 2623 determining the method for lifting the first product using displacement portion 2622 includes arm controller 2623 determining a first part, which is a part for lifting the first product. More specifically, after the first product is placed at the first location in the placement area, arm controller 2623 controls first actuator 2621 to connect the first part of the first product placed in the placement area to displacement portion 2622. Stated differently, arm controller 2623 determines which part of the first product to connect to displacement portion 2622 in order to move the first product. This makes it less likely for the first product to drop from displacement portion 2622 even if the first product is moved after displacement portion 2622 lifts the first product.

After the first product is placed at the first location in the placement area, arm controller 2623 controls first actuator 2621 to lift the first product placed in the placement area using displacement portion 2622 according to the determined method, and move the first product into the multi-level case for display.

Based on information about the multi-level case stored in storage 2624 of robot arm 2620, control commands for first actuator 2621, etc., arm controller 2623 can link the first product ID with the placement location for the first product stored in multi-level case and store this information in storage 2624 upon robot arm 2620 storing the first product in a predetermined placement location in the multi-level case. Information about the multi-level case is information indicating, for example, the number of shelves in the multi-level case, the height of each shelf, the position of each shelf, the storage space of each shelf, and the distance from robot arm 2620 to each shelf. Therefore, robot arm 2620 can grab the first product having the first product ID indicated in the order information from the multi-level case and move it to the package box without a camera sensor or the like since the position of each first product displayed in the multi-level case is stored in storage 2624. This allows the first product indicated in the order information to be shipped.

Shipping system 2600 configured in this way may be included in, for example, operations management system according to, for example, Embodiment 11.

### Operation Example 1

In this operation example, the operations from reading the first product ID of the stocked first product to displaying the product in the multi-level case will be described with reference to FIG. 67.

FIG. 67 is a flowchart illustrating Operation Example 1 of the operation of shipping system 2600 according to Embodiment 13.

First, as illustrated in FIG. 67, barcode reader 2605 reads the barcode on the stocked nth first product when the first product is stocked (S2601). Barcode reader 2605 outputs the first product ID associated with the read nth first product to data manager 2606.

Next, when data manager 2606 obtains the first product ID from barcode reader 2605, it identifies the first bottom image corresponding to the obtained first product ID from the first database, and identifies the 3D data corresponding to the obtained first product ID from the second database. Data manager 2606 outputs the identified first product ID and 3D data corresponding to the first product ID from the second database to robot arm 2620, and outputs the identified first bottom image from the first database to display device 2610 (S2602). When data manager 2606 obtains the first product ID from barcode reader 2605, it may further identify the first exterior image corresponding to the obtained first product ID, from the first database. In such cases, data manager 2606 may output the first exterior image to display device 2610.

Next, once display device 2610 obtains the first bottom image from data manager 2606, display device 2610 displays the obtained first bottom image on display screen 2611 (S2603). In other words, display controller 2612 of display device 2610 displays the first bottom image at the first location on display screen 2611, which is in the placement area for placing the first product. If display device 2610 obtains the first exterior image from data manager 2606, it may display the obtained first exterior image on display screen 2611. In such cases, display controller 2612 may additionally display the first exterior image at a specified location on display screen 2611, which is in the placement area for placing the first product. Display device 2610 outputs, to robot arm 2620, first location information in which the first bottom image is displayed on the placement area.

Next, the first product whose first product ID has been read by barcode reader 2605 is placed at the first location in the placement area (S2604). Although a worker places the first product whose first product ID has been read at the first location in the placement area in the present embodiment, a robot may place the first product at the first location in the placement area.

Next, robot arm 2620 moves the first product placed at the first location (S2605). More specifically, once the 3D data in the second database that corresponds to the identified first product ID and the first product ID are obtained from data manager 2606 and the first location information is obtained from display device 2610, robot arm 2620 causes displacement portion 2622 to lift and move the first product placed at the first location indicated by the first location information.

Next, robot arm 2620 determines whether or not the moving of the first product is complete (S2606). Stated differently, robot arm 2620 causes displacement portion 2622 to lift the first product placed at the first location and move the first product into the multi-level case by arm controller 2623 controlling first actuator 2621. At this time, robot arm 2620 determines whether the process of displaying the first product in the multi-level case has finished.

If robot arm 2620 determines that the moving of the first product is not complete (NO in S2606), robot arm 2620 returns to and executes step S2605.

However, if robot arm 2620 determines that the moving of the first product is complete (YES in S2606), it sets n = n + 1, which is the next first product (S2607). Shipping system 2600 then returns to step S2601 and repeats the process for the next product, the n+1th first product. Thus, when a first product is delivered to the store, shipping system 2600 reads the respective first product ID of each first product and lifts the first product placed in the placement area to display it in a multi-level case.

### Operation Example 2

In this operation example, the operations for a case in which the result of determining whether the first product has been correctly placed in the first location is displayed in an image in step S2604 of FIG. 67 will be described with reference to FIG. 68.

FIG. 68 is a flowchart illustrating Operation Example 2 of the operation of shipping system 2600 according to Embodiment 13.

First, as illustrated in FIG. 68, when the first product is placed in the placement area, position determination processor 2614 of display device 2610 determines whether the first product is correctly placed at the first location in the placement area where the first bottom image is displayed on display screen 2611 (S2611).

If position determination processor 2614 determines that the first product is correctly placed at the first location on the placement area (YES in S2611), display controller 2612 of display device 2610 controls display screen 2611 so as to display an image on display screen 2611 indicating that the first product is correctly placed at the first location (S2612). The processing in the flowchart of FIG. 68 then ends. As a result, since display device 2610 outputs, to robot arm 2620, first location information, which is information indicating the first location where the first product is placed, robot arm 2620 can lift the first product placed in the first location.

However, if position determination processor 2614 determines that the first product is not correctly placed at the first location (NO in S2611), display controller 2612 controls display screen 2611 so as to display an image on display screen 2611 indicating that the first product is not correctly placed at the first location (S2613), and the processing returns to step S2611 and executes step S2611. In such cases, the worker can recognize that the stocked first product is not placed in the correct location, and they can re-place the stocked first product in the correct location, i.e., the first location. As a result, since display device 2610 outputs, to robot arm 2620, first location information, which is information indicating the first location where the first product, after being repositioned, is placed, robot arm 2620 can lift the first product placed in the first location.

### Operation Example 3

In this operation example, the operations for a case in which the result of determining whether the first product has been correctly placed in the first location is outputted as audio in step S2604 of FIG. 67 will be described with reference to FIG. 69. Operations that are the same as in FIG. 68 are assigned with the same reference signs, and repeated description will be omitted as appropriate.

FIG. 69 is a flowchart illustrating Operation Example 3 of the operation of shipping system 2600 according to Embodiment 13.

As illustrated in FIG. 69, if YES in step S2611, shipping system 2600 causes loudspeaker 2633 to output audio indicating that the first product has been correctly placed in the first location (S2614). The processing in the flowchart of FIG. 69 then ends. As a result, since display device 2610 outputs, to robot arm 2620, first location information, which is information indicating the first location where the first product is placed, robot arm 2620 can lift the first product placed in the first location.

If NO in step S2611, shipping system 2600 causes loudspeaker 2633 to output audio indicating that the first product has not been correctly placed in the first location (S2615), and returns to and executes step S2611. In such cases, the worker can recognize that the stocked first product is not placed in the correct location, and they can re-place the stocked first product in the correct location, i.e., the first location. As a result, since display device 2610 outputs, to robot arm 2620, first location information, which is information indicating the first location where the first product, after being repositioned, is placed, robot arm 2620 can lift the first product placed in the first location.

### Operation Example 4

In this operation example, the operations for a case in which the result of determining whether the first product has fallen while being lifted and moved is displayed in an image in step S2606 of FIG. 67 will be described with reference to FIG. 70.

FIG. 70 is a flowchart illustrating Operation Example 4 of the operation of shipping system 2600 according to Embodiment 13.

First, as illustrated in FIG. 70, drop determination processor 2632 of shipping system 2600 determines whether the first product lifted by robot arm 2620 has been dropped (S2621).

If drop determination processor 2632 determines that the first product lifted by robot arm 2620 has been dropped (YES in S2621), display controller 2612 controls display screen 2611 so as to display an image on display screen 2611 indicating that the first product has been dropped (S2622). The processing in the flowchart of FIG. 70 then ends. This allows a worker to recognize that a stocked first product has been dropped, and they can have robot arm 2620 grab the stocked first product again. If drop determination processor 2632 determines that the first product lifted by robot arm 2620 has been dropped, it may stop the actuation of robot arm 2620.

However, if drop determination processor 2632 determines that the first product lifted by robot arm 2620 has not been dropped (NO in S2621), the processing in the flowchart of FIG. 70 ends.

### Operation Example 5

In this operation example, the operations for a case in which the result of determining whether the first product has fallen while being lifted and moved is outputted as audio in step S2606 of FIG. 67 will be described with reference to FIG. 71.

FIG. 71 is a flowchart illustrating Operation Example 5 of the operation of shipping system 2600 according to Embodiment 13.

As illustrated in FIG. 71, if YES in step S2621, shipping system 2600 controls display screen 2611 and causes loudspeaker 2633 to output audio indicating that the first product has been dropped (S2623). The processing in the flowchart of FIG. 71 then ends. This allows a worker to recognize that a stocked first product has been dropped, and they can have robot arm 2620 grab the stocked first product again.

However, if drop determination processor 2632 determines that the first product lifted by robot arm 2620 has not been dropped (NO in S2621), the processing in the flowchart of FIG. 71 ends.

### Advantageous Effects

Next, advantageous effects achieved by shipping system 2600 according to the present embodiment will be described.

The control method according to the present embodiment is a control method in a system including display device 2610, and includes: obtaining a first product ID identifying a first product, based on sensing data obtained from a sensor; obtaining a first bottom image showing a shape of a bottom of the first product, based on (i) a first database that associates and manages product IDs and images, each of which shows a shape of a bottom surface of the product corresponding to the product ID, and (ii) the obtained first product ID; and controlling display device 2610 to display the first bottom image in a placement area for placing the first product.

With this, since display device 2610 can display the first bottom image of the first product, the first product can be placed at the location where the first bottom image is displayed. Therefore, the location where the first product is placed can be presumed to be the location where the first bottom image is displayed without having to identify the location where the first product is placed using, for example, a sensor.

Therefore, with this control method, it is possible to easily presume the location where the first product is placed and inhibit a surge in the cost of the system.

The system according to the present embodiment executes the above-described control method.

This achieves the same above-described advantageous effects achieved by the control method.

The program according to the present embodiment is a program for causing the system to execute the control method.

This achieves the same above-described advantageous effects achieved by the control method.

In the control method according to the present embodiment, the first database further associates and manages product IDs and images, each which of which shows the external appearance of the product corresponding to the product ID. The control method obtains the first bottom image and a first exterior image, which is an image showing the external appearance of the first product, based on the first database and the obtained first product ID, and controls display device 2610 to display the first bottom image and the first exterior image in the placement area.

With this, since display device 2610 can display the first bottom image and the first exterior image, the correct first product can be placed at the location where the first bottom image and the first exterior image are displayed. Therefore, by enabling smooth picking operations, etc., of stocked products, this system can inhibit a surge in the cost of energy, including the system, and human resources.

In the control method according to the present embodiment, the system further includes robot arm 2620. Robot arm 2620 includes displacement portion 2622 that can lift a target first product, which is one or more first products placed in the placement area, and change the position of the first product. Displacement portion 2622 is actuated by first actuator 2621. The control method further includes: determining a method for lifting the first product using displacement portion 2622 using (i) a second database that associates and manages product IDs and 3D data, each item of 3D data being of the product corresponding to the product ID, (ii) the first product ID, and (iii) the first location information, which is information indicating the first location in the placement area where the first bottom image is displayed; and after the first product is placed at the first location in the placement area, controlling first actuator 2621 to lift the first product on the placement area using displacement portion 2622 according to the determined method.

With this, robot arm 2620 can lift the first product placed in the placement area of display device 2610 and move it to another location. Accordingly, this allows the stocked first product to be displayed in a predetermined location and allows the first product displayed to be removed and shipped.

The control method according to the present embodiment further includes: when the first product is placed on the placement area, determining whether the first product is correctly placed at the first location; if the first product is determined to be correctly placed at the first location, controlling display device 2610 to display an image on display device 2610 indicating that the first product is correctly placed at the first location; and if the first product is determined to be not correctly placed at the first location, controlling display device 2610 to display an image on display device 2610 indicating that the first product is not correctly placed at the first location.

With this, if the first product is correctly placed at the first location, an image indicating that the first product is correctly placed at the first location can be displayed. If the first product is not correctly placed at the first location, an image indicating that the first product is not correctly placed at the first location can be displayed. Accordingly, a worker can easily recognize whether the first product is correctly placed or not.

In the control method according to the present embodiment, the system further includes loudspeaker 2633. The control method further includes: when the first product is placed on the placement area, determining whether the first product is correctly placed at the first location; if the first product is determined to be correctly placed at the first location, controlling loudspeaker 2633 to cause loudspeaker 2633 to output audio indicating that the first product is correctly placed at the first location; and if the first product is determined to be not correctly placed, controlling loudspeaker 2633 to cause loudspeaker 2633 to output audio indicating that the first product is not correctly placed at the first location.

With this, if the first product is correctly placed at the first location, audio indicating that the first product is correctly placed at the first location can be output. If the first product is not correctly placed at the first location, audio indicating that the first product is not correctly placed at the first location can be output. Accordingly, a worker can easily recognize whether the first product is correctly placed or not.

The control method according to the present embodiment determines whether the first product is correctly placed based on image information obtained from the camera.

With this, it is possible to determine whether the first product is correctly placed or not using a camera. Additionally, it is possible to accurately determine whether the first product is correctly placed or not based on image information.

In the control method according to the present embodiment, displacement portion 2622 includes a gripping portion capable of holding the first product by pinching the first product, a suction portion capable of holding the first product by sucking in air, or a magnetic portion capable of holding the first product by attracting the first product through magnetic force.

With this, any type of first product can be lifted.

In the control method according to the present embodiment, displacement portion 2622 is a device for holding by pinching. In the control method, determining a method for lifting the first product using displacement portion 2622 includes determining a first part, which is a part for lifting the first product. The control method includes, after the first product is placed at the first location in the placement area, controlling the actuator to lift the first part of the first product in the placement area using displacement portion 2622.

With this, by determining a part of the first product by which to lift the first product and lifting the first product, it is possible to inhibit the lifted first product from dropping.

In the control method according to the present embodiment, the system further includes loudspeaker 2633. The control method further includes: determining whether the first product lifted by displacement portion 2622 has been dropped, based on the sensing result obtained from the sensor (drop sensor 2631); and after it is determined that the first product has been dropped, controlling loudspeaker 2633 to output audio indicating that the first product has been dropped.

With this, if the first product lifted by robot arm 2620 is dropped, audio indicating that the first product has been dropped can be output. Since a worker can easily recognize whether the first product is correctly placed or not, the worker can take measures such as collecting the dropped first product.

The control method according to the present embodiment further includes: determining whether the first product lifted by displacement portion 2622 has been dropped, based on the sensing result obtained from the sensor; and after it is determined that the first product has been dropped, controlling display device 2610 to output an image indicating that the first product has been dropped.

With this, if the first product lifted by robot arm 2620 is dropped, an image indicating that the first product has been dropped can be displayed. Since a worker can easily recognize whether the first product is correctly placed or not, the worker can take measures such as collecting the dropped first product.

In the control method according to the present embodiment, display device 2610 is a display for displaying, in the placement area, the first bottom image of the first product. The placement area corresponds to the area on the display where the first bottom image is displayed.

This enables the first bottom image to be displayed using a general-purpose display.

In the control method according to the present embodiment, the area on the display where the first bottom image is displayed includes a touch panel.

With this, by simply placing the stocked first product in the area where the first bottom image is displayed on the display, this can be used when determining whether the first product has been placed correctly.

In the control method according to the present embodiment, display device 2610 is a projector for projecting the first bottom image onto a screen. The placement area corresponds to the area on the screen where the first bottom image is projected.

With this, it is possible to determine whether the first product has been placed correctly or not using a projector.

### VARIATION 1 OF EMBODIMENT 13

Hereinafter, since the basic configuration of shipping system 2600a according to the present variation is the same as the basic configuration of the shipping system according to Embodiment 13, the same reference signs as above are used and repeated description of the basic configuration of shipping system 2600a in the present variation will be omitted where appropriate.

The configuration of the present variation will be described with reference to FIG. 72A through FIG. 72B.

FIG. 72A illustrates an example of shipping system 2600a according to Variation 1 of Embodiment 13. The dashed line in FIG. 72A illustrates the range of motion of robot arm 2620 when platform 2641 moves to a predetermined location on belt conveyor 2650. FIG. 72B is a block diagram illustrating an example of shipping system 2600a according to Variation 1 of Embodiment 13.

As illustrated in FIG. 72A and FIG. 72B, shipping system 2600a further includes belt conveyor 2650 for moving robot arm 2620.

Belt conveyor 2650 includes second actuator 2652, conveyor controller 2651, and transport slider 2640.

Belt conveyor 2650 is illustrated by the shaded hatching in FIG. 72A and is arranged along the direction in which the plurality of multi-level cases are lined up. Stated differently, a plurality of multi-level cases are arranged along the lengthwise direction of belt conveyor 2650. Belt conveyor 2650 can be actuated by second actuator 2652 to transport slider 2640 arranged on belt conveyor 2650 in the lengthwise direction of belt conveyor 2650, as indicated by the arrow.

Second actuator 2652 can be controlled by conveyor controller 2651 to actuate belt conveyor 2650. For example, second actuator 2652 can be controlled by conveyor controller 2651 to move transport slider 2640 to the front of a given multi-level case among the plurality of multi-level cases.

Conveyor controller 2651 can control the actuation of second actuator 2652. Conveyor controller 2651 can actuate or stop belt conveyor 2650 by controlling second actuator 2652. With this, since conveyor controller 2651 can control the movement of transport slider 2640 placed on belt conveyor 2650, conveyor controller 2651 can thus move transport slider 2640 to the front of a given multi-level case.

Transport slider 2640 includes platform 2641 that moves with robot arm 2620 by being actuated by belt conveyor 2650. Stated differently, platform 2641 is arranged on belt conveyor 2650 and can be moved by the actuation of belt conveyor 2650. Robot arm 2620 is arranged on platform 2641, and by being actuated by belt conveyor 2650, platform 2641 and robot arm 2620 move to the front of a given multi-level case.

Platform 2641 includes a cache area where a plurality of products can be placed. The cache area corresponds to the area on the upper surface of platform 2641. The cache area can also be said to correspond to the area on the upper surface of platform 2641 connected to robot arm 2620.

When placing a product on platform 2641, displacement portion 2622 of robot arm 2620 moves the first product from the placement area onto the cache area for temporary placement of the first product. Once at least the first product has been placed in the cache area, the cache area of platform 2641 moves with robot arm 2620 in accordance with the actuation of second actuator 2652.

When placing a plurality of products on platform 2641 of transport slider 2640, robot arm 2620 moves the first product, which is the first of the products, from the placement area and places it onto the cache area for temporary placement of the first product. After the second product is placed at the second location in the placement area, robot arm 2620 moves the second product from the placement area onto the cache area according to the determined method. Stated differently, robot arm 2620 moves the second product, which is the second of the products, from the placement area and places it onto the cache area for temporary placement of the second product.

After lifting the first product via displacement portion 2622, shipping system 2600a may actuate second actuator 2652 to move robot arm 2620 on belt conveyor 2650 to a first predetermined location for display. Stated differently, conveyor controller 2651 may control second actuator 2652 to move transport slider 2640 to a first predetermined location for display.

After robot arm 2620 arranged on belt conveyor 2650 moves to the first predetermined location, robot arm 2620 may actuate first actuator 2621 to move the first product lifted by displacement portion 2622 to a second predetermined location, which is a predetermined placement location.

In shipping system 2600a configured in this way, after a worker places the stocked first product in the placement area of display device 2610, robot arm 2620 can move the first product placed in the placement area onto the upper surface of platform 2641. More specifically, once a worker places the first product, which is the first of the products, in the placement area of display device 2610, robot arm 2620 places the first product in the cache area on the upper surface of platform 2641 after lifting the first product using displacement portion 2622. At this time, based on information about platform 2641 stored in storage 2624 and control commands for first actuator 2621, etc., robot arm 2620 can link the first product ID with the placement location for the first product placed in the cache area and store this information in storage 2624 upon placing the first product in the cache area. Information about platform 2641 is information indicating, for example, the height of platform 2641, the location of the cache area, the space of the cache area, and the distance from robot arm 2620 to the cache area. Therefore, robot arm 2620 can move to the first predetermined location, grab the first product having the first product ID placed in the cache area, and move it to the second predetermined location in the multi-level case without a camera sensor or the like, since the position of the first product placed in the cache area is stored in storage 2624. This allows the first product delivered to the store to be displayed in a multi-level case.

When a plurality of products such as the first product and the second product are placed in the cache area, once a worker places the first product, which is the first of the products, in the placement area of display device 2610, robot arm 2620 places the first product in the cache area on the upper surface of platform 2641. Subsequently, once a worker places the second product, which is the second of the products, in the placement area of display device 2610, robot arm 2620 places the second product in the cache area on the upper surface of platform 2641 after lifting the second product using displacement portion 2622. At this time, based on information about platform 2641 stored in storage 2624 and control commands for first actuator 2621, etc., robot arm 2620 can link the second product ID with the placement location for the second product placed in the cache area and store this information in storage 2624 upon placing the second product in the cache area. Therefore, robot arm 2620 can move to the first predetermined location, grab the second product having the second product ID placed in the cache area, and move it to the second predetermined location in the multi-level case without a camera sensor or the like, since the position of the second product placed in the cache area is stored in storage 2624. This allows the second product delivered to the store to be displayed in a multi-level case.

In the present variation, if the first product lifted by robot arm 2620 drops on belt conveyor 2650, belt conveyor 2650 may be actuated to move the first product to an unobstructed position. In such cases, a weight sensor may be provided to detect the first product dropped on belt conveyor 2650.

Next, advantageous effects achieved by shipping system 2600a according to the present variation will be described.

In the control method according to the present variation, the system (shipping system 2600a) further includes belt conveyor 2650 for moving robot arm 2620. Belt conveyor 2650 is actuated by second actuator 2652. The control method further includes: actuating second actuator 2652 to move robot arm 2620 on belt conveyor 2650 to a first predetermined location after the first product is lifted by displacement portion 2622; and after robot arm 2620 on belt conveyor 2650 has moved to the first predetermined location, actuating first actuator 2621 to move the first product lifted by displacement portion 2622 to the second predetermined location.

This allows robot arm 2620 that has lifted the first product to move with the first product on belt conveyor 2650. This allows robot arm 2620 to move the first product to the second predetermined location even if the distance from the placement area to the second predetermined location is far.

The control method according to the present variation is a control method in a system including robot arm 2620 and display device 2610. Robot arm 2620 includes displacement portion 2622 which can lift a target and change the position of the target. Displacement portion 2622 is actuated by first actuator 2621, and the system further includes belt conveyor 2650 for moving robot arm 2620. Belt conveyor 2650 is actuated by second actuator 2652. The control method includes: obtaining a first product ID identifying a first product, based on sensing data obtained from a sensor; obtaining a first bottom image showing the shape of the bottom of the first product, based on (i) a first database that associates and manages product IDs and images, each of which shows a shape of a bottom surface of the product corresponding to the product ID, and (ii) the obtained first product ID; controlling display device 2610 to display the first bottom image in a placement area for placing the product; obtaining a second product ID identifying a second product, based on sensing data obtained from the sensor; obtaining a second bottom image showing the shape of the bottom of the second product, based on the first database and the obtained second product ID; controlling display device 3610 to display the second bottom image in the placement area; determining a method for lifting the first product using displacement portion 2622 using (i) a second database that associates and manages product IDs and 3D data, each item of 3D data being of the product corresponding to the product ID, (ii) the first product ID, and (iii) first location information, which is information indicating the first location in the placement area where the first bottom image is displayed; after the first product is placed in the first location in the placement area, controlling first actuator 2621 to lift the first product in the placement area using displacement portion 2622 according to the determined method; after lifting the first product, controlling first actuator 2621 to move the first product lifted by displacement portion 2622 to a cache area for temporary placement of the first product. The cache area moves with robot arm 2620 in accordance with the actuation of second actuator 2652. The control method further includes: determining a method for lifting the second product using displacement portion 2622 using the second database, the second product ID, and second location information, which is information indicating a second location in the placement area where the second bottom image is displayed; after the second product is placed at the second location in the placement area, controlling first actuator 2621 to lift the second product on the placement area using displacement portion 2622 according to the determined method; after lifting the second product, controlling first actuator 2621 to move the second product lifted by displacement portion 2622 to a cache area for temporary placement of the second product.

For example, if there is no cache area, the robot arm must lift the first product one at a time, move to a predetermined location for placing the first product, and then return after the move.

In contrast, with the present embodiment, it is possible to place a plurality of products on the cache area. This allows robot arm 2620 to collect a plurality of products in a short period of time, efficiently move them to a predetermined location, and place the products after the move.

Since display device 2610 can display the first bottom image of the first product, the first product can be placed at the location where the first bottom image is displayed. Therefore, the location where the first product is placed can be presumed to be the location where the first bottom image is displayed without having to identify the location where the first product is placed using, for example, a sensor. The same applies to the second product. Accordingly, with this control method, it is possible to easily identify the location where the first product and the second product are placed and inhibit a surge in the cost of the system.

Robot arm 2620 can lift the first product placed in the placement area of display device 2610 according to the 3D data of the first product, and can also move the first product to the cache area. After lifting the first product, robot arm 2620 can subsequently lift another second product according to the 3D data of that second product, and can also move that second product to the cache area. Thus, a plurality of products can be placed in the cache area in succession. This makes it possible to place a plurality of stocked products (first and second products) in the cache area, thus allowing a plurality of products to be moved at once. This allows a plurality of products to be displayed in a predetermined location and a plurality of displayed products to be removed and shipped.

Therefore, by enabling smooth picking operations, etc., of stocked products, this system can inhibit a surge in the cost of energy, including the system, and human resources.

In the control method according to the present variation, the cache area corresponds to the area of a part connected to robot arm 2620.

With this, since robot arm 2620 can be placed in the cache area, the first and second products along with robot arm 2620 can be moved to a second predetermined location, and thus a plurality of products can be displayed in a predetermined location and a plurality of displayed products can be removed and shipped. This makes it possible to inhibit an increase in the time required to display and ship a plurality of products.

In the control method according to the present variation, the cache area corresponds to an area on the upper surface of platform 2641 that moves with robot arm 2620 via belt conveyor 2650.

With this, robot arm 2620 can easily place the first and second products it lifted onto the upper surface of the platform.

### VARIATION 2 OF EMBODIMENT 13

Hereinafter, since the basic configuration of shipping system 2600b according to the present variation is the same as the basic configuration of the shipping system according to Embodiment 13, the same reference signs as above are used and repeated description of the basic configuration of shipping system 2600b in the present variation will be omitted where appropriate.

The configuration of the present variation will be described with reference to FIG. 73A.

FIG. 73A illustrates an example of a shipping system according to Variation 2 of Embodiment 13. In FIG. 73A, (a) illustrates an example of first shelf 2656a, on which the first product is displayed, moving upward. The double-dotted lines indicate first shelf 2656a after it has been raised. In FIG. 73A, (b) illustrates an example of robot arm 2620 extending its second arm 2620b for the first product located at the back of second shelf 2656b. In FIG. 73A, (c) illustrates displacement portion 2622 of robot arm 2620 grabbing the first product. In FIG. 73A, (d) illustrates displacement portion 2622 of robot arm 2620 lifting the first product. In FIG. 73A, (e) illustrates robot arm 2620, which has lifted the first product, shortening its extended second arm 2620b. In FIG. 73A, (f) illustrates robot arm 2620 moving the first product it has lifted.

As illustrated in FIG. 73A, shipping system 2600b further includes multi-level case 2655. Shipping system 2600b may further include belt conveyor 2650 for moving the above-described robot arm 2620.

In multi-level case 2655, a plurality of shelves 2656 are arranged in a plurality of levels in the vertical direction. More specifically, multi-level case 2655 includes a plurality of shelves 2656, actuator 2657 that changes the vertical position of each of the plurality of shelves 2656, and control processor 2658 that controls the actuation of actuator 2657. Multi-level case 2655 is one example of a showcase.

Each of the plurality of shelves 2656 is plate-shaped and arranged in an attitude parallel to the horizontal direction. Each of the plurality of shelves 2656 is a shelf for placing the first product. The plurality of shelves 2656 are aligned in a plurality of levels in the vertical direction. The first product is displayed on each of the plurality of shelves 2656 by robot arm 2620.

The plurality of shelves 2656 include first shelf 2656a and second shelf 2656b located one level below first shelf 2656a. In the present embodiment, two of the plurality of shelves 2656 that are adjacent to each other in the vertical direction, namely first shelf 2656a and second shelf 2656b, will be used as an example.

Each of the plurality of shelves 2656 can be moved in the vertical direction by the actuation of actuator 2657 controlled by control processor 2658.

Actuator 2657 can be controlled by control processor 2658 to move each of the plurality of shelves 2656 in the vertical direction. For example, actuator 2657 is controlled by control processor 2658 to move from, among the plurality of shelves 2656, the top shelf 2656 to a specified shelf 2656 in the vertical direction.

Control processor 2658 can change the distance between first shelf 2656a and second shelf 2656b by controlling actuator 2657. More specifically, when control processor 2658 obtains a first signal for requesting a larger vertical spacing between the first shelf 2656a and the second shelf 2656b, control processor 2658 can control actuator 2657 to change the spacing from a first spacing to a second spacing greater than the first spacing.

For example, as illustrated in (a) in FIG. 73A, when robot arm 2620 is to take the first product displayed on second shelf 2656b, which is the second shelf from the top, upon receiving the first signal from robot arm 2620, control processor 2658 can control actuator 2657 to raise the top shelf, which is first shelf 2656a. Since this causes first shelf 2656a to be raised by actuator 2657, the vertical spacing from second shelf 2656b changes from the first spacing to the second spacing.

To prevent the first product from contacting the ceiling of multi-level case 2655, before first shelf 2656a is raised, it is preferable that the spacing between first shelf 2656a on which the first product is placed and the ceiling of multi-level case 2655 is a third spacing that is greater than the first spacing. The third spacing may be the same as the second spacing, and, alternatively, may be greater than the second spacing. Stated differently, a space larger than the first spacing is formed between top shelf 2656 in multi-level case 2655 and the ceiling of multi-level case 2655.

As illustrated in (f) in FIG. 73A, when robot arm 2620 is to take the first product displayed at the back on second shelf 2656b, which is the second shelf from the top, upon receiving the second signal from robot arm 2620, control processor 2658 can control actuator 2657 to lower the top shelf, which is first shelf 2656a, back to its original position. Since this causes first shelf 2656a to be lowered by actuator 2657, the vertical spacing from second shelf 2656b changes from the second spacing to the first spacing.

Next, an operation example of shipping system 2600b according to the present variation will be given.

For example, in shipping system 2600, when shipping a first product based on order information from a user, it may be necessary to remove the first product to be shipped from the back of shelf 2656. Since shipping system 2600 manages all first products and multi-level cases 2655, it manages which first product to be shipped is located on which shelf 2656 of which multi-level case 2655. Upon shipping system 2600 using robot arm 2620 to remove a target first product from the back of shelf 2656, the target first product may be difficult to remove due to a first product located on the front of shelf 2656.

This operation example assumes that robot arm 2620 lifts and removes a target first product that is placed on second shelf 2656b and hidden behind another first product, and then ships the removed first product.

First, as illustrated in (a) in FIG. 73A, by moving transport slider 2640 using belt conveyor 2650, robot arm 2620 moves to the front of multi-level case 2655 that is displaying the target first product. Robot arm 2620 then outputs a first signal for requesting multi-level case 2655 to increase the vertical spacing between first shelf 2656a and second shelf 2656b. With this, control processor 2658 of multi-level case 2655 obtains the first signal.

Next, as illustrated in (a) and (b) in FIG. 73A, when control processor 2658 obtains the first signal, control processor 2658 controls actuator 2657 to change the vertical spacing between first shelf 2656a and second shelf 2656b from the first spacing to a second spacing greater than the first spacing. Stated differently, actuator 2657 is controlled by control processor 2658 to raise first shelf 2656a so that the first product does not touch the ceiling of multi-level case 2655. This increases the spacing between second shelf 2656b and first shelf 2656a where the target first product is located, allowing robot arm 2620 to insert displacement portion 2622 between them.

Next, as illustrated in (b) in FIG. 73A, robot arm 2620 extends first arm 2620a upward so that displacement portion 2622 is positioned at a height between first shelf 2656a and second shelf 2656b, and then extends second arm 2620b in the horizontal direction. Robot arm 2620 positions displacement portion 2622 above the target first product, which is located at the back of second shelf 2656b and hidden behind another first product, and displaces displacement portion 2622 to change the attitude of displacement portion 2622 so that the target first product can be grabbed.

Next, as illustrated in (c) and (d) in FIG. 73A, displacement portion 2622 of robot arm 2620 grabs and lifts the target first product.

Next, as illustrated in (e) in FIG. 73A, robot arm 2620 lifts the target first product and retracts the extended second arm 2620b.

Next, as shown in (f) of FIG. 73A, after robot arm 2620 removes the target first product, it outputs a second signal for requesting multi-level case 2655 to decrease (return to original) the vertical spacing between first shelf 2656a and second shelf 2656b. With this, control processor 2658 of multi-level case 2655 obtains the second signal.

Next, when control processor 2658 obtains the second signal, control processor 2658 controls actuator 2657 to change the vertical spacing between first shelf 2656a and second shelf 2656b from the second spacing to the first spacing. This returns the spacing between second shelf 2656b and first shelf 2656a to the original first spacing.

Next, as illustrated in (f) in FIG. 73A, when second arm 2620b of robot arm 2620 retracts to a predetermined amount, first arm 2620a retracts downward to a predetermined amount.

Robot arm 2620 can then place the lifted first product on platform 2641 of transport slider 2640. Robot arm 2620 does this until the target first product is removed from multi-level case 2655. Robot arm 2620 may move the target first product to the package box while the target first product is lifted, without placing the target first product on platform 2641 of transport slider 2640.

In shipping system 2600b, in cases in which the target first product is to be removed, it may be determined in advance whether the target first product can be removed without raising shelf 2656. If shipping system 2600b determines that shelf 2656 cannot be removed without raising the shelf, the shipping system 2600b may perform the operation example described above.

Although only top shelf 2656 is raised in the example given in the present variation, when, for example, the target first product is placed at the back on the third shelf 2656 from the top and hidden by another first product, upon receiving the first signal, control processor 2658 can control actuator 2657 to change the vertical spacing between second shelf 2656b and the third shelf (the third shelf 2656 from the top) from the first spacing to the second spacing. Stated differently, actuator 2657 is controlled by control processor 2658 to raise first shelf 2656a and second shelf 2656b so that the first product does not touch the ceiling of multi-level case 2655. This increases the spacing between second shelf 2656b and the third shelf where the target first product is located, allowing robot arm 2620 to insert displacement portion 2622. Thus, in the present variation, when robot arm 2620 takes a first product placed at the back of shelf 2656 and hidden behind another first product, it raises all of the shelves that are positioned above shelf 2656 where the target first product is placed.

Next, advantageous effects achieved by shipping system 2600b according to the present variation will be described.

In the control method according to the present variation, the system (shipping system 2600b) further includes a showcase (multi-level case 2655), the showcase includes a plurality of shelves 2656 for placing a first product, the plurality of shelves 2656 forming a plurality of levels in a vertical direction, and actuator 2657 that changes the vertical position of each of shelves 2656. The plurality of shelves 2656 include first shelf 2656a and second shelf 2656b located one level below first shelf 2656a. When the system obtains a first signal for requesting a larger vertical spacing between first shelf 2656a and second shelf 2656b, the system controls actuator 2657 to change the spacing from a first spacing to a second spacing greater than the first spacing.

With this, in the plurality of shelves 2656, even if the first product placed on shelf 2656 is placed at the back of shelf 2656 and hidden by another first product, robot arm 2620 can lift the first product at the back of shelf 2656 by increasing the vertical spacing between first shelf 2656a and second shelf 2656b. This allows the first product to be displayed in such a way that the space above shelf 2656 is effectively utilized, since the first product can be lifted no matter where the first product is placed on shelf 2656.

### VARIATION 3 OF EMBODIMENT 13

Hereinafter, since the basic configuration of shipping system 2600c according to the present variation is the same as the basic configuration of shipping system 2600c according to Embodiment 13, the same reference signs as above are used and repeated description of the basic configuration of shipping system 2600c in the present variation will be omitted where appropriate.

The configuration of the present variation will be described with reference to FIG. 73B. FIG. 73B illustrates an example of shipping system 2600c according to Variation 3 of Embodiment 13. In FIG. 73B, (a) illustrates an example of a plurality of shelves 2656 on which the first product is displayed. In FIG. 73B, (b) illustrates an example of robot arm 2620 extending its arm for the first product located at the back of first shelf 2656a. In FIG. 73B, (c) illustrates displacement portion 2622 of robot arm 2620 grabbing the first product. In FIG. 73B, (d) illustrates displacement portion 2622 of robot arm 2620 lifting the first product. In FIG. 73B, (e) illustrates an example of shelf 2656, on which the first product is displayed, sliding after front wall 2662 is rotated and tilted down. Note that the numbers 1 through 7 illustrated next to FIG. 73B indicate the number of levels of shelves 2656.

Shipping system 2600c includes multi-level case 2655a and robot arm 2620. Shipping system 2600c is one example of a showcase system.

As illustrated in (a) and (b) in FIG. 73B, multi-level case 2655a includes a plurality of shelves 2656 forming a plurality of levels in the vertical direction, first actuator 2657a that moves first shelf 2656a included in the plurality of shelves 2656 in the horizontal direction, control processor 2658, first curtain 2659a, second curtain 2659b, and second actuator 2657b. Multi-level case 2655a is one example of a showcase.

Each of the plurality of shelves 2656 is plate-shaped and arranged in an attitude parallel to the horizontal direction. Each of the plurality of shelves 2656 is a shelf for placing the first product. The plurality of shelves 2656 are aligned in the vertical direction. Each of the plurality of shelves 2656 is moved in the horizontal direction by first actuator 2657a.

First shelf 2656a of the plurality of shelves 2656 can be moved to a first position and a second position that is forward of the first position by being actuated by first actuator 2657a. The first position is a position where first shelf 2656a is housed in multi-level case 2655a. The second position is a position where first shelf 2656a slides and extends in the horizontal direction from multi-level case 2655a so as to protrude from multi-level case 2655a.

First curtain 2659a is located on the front of the plurality of shelves 2656 and extends from the upper area of multi-level case 2655a to the lower area. More specifically, the top end of first curtain 2659a is connected to the top plate of multi-level case 2655a, and the bottom end of first curtain 2659a can contact the top end of second curtain 2659b.

Second curtain 2659b is located on the front of the plurality of shelves 2656 and extends from the lower area of multi-level case 2655a to the upper area. More specifically, the bottom end of second curtain 2659b is connected to the bottom plate of multi-level case 2655a, and the top end of second curtain 2659b can contact the bottom end of first curtain 2659a.

The opening of multi-level case 2655a is covered by the bottom end of first curtain 2659a and the top end of second curtain 2659b contacting each other.

Second actuator 2657b actuates first curtain 2659a and second curtain 2659b. With this, the bottom end of first curtain 2659a and the top end of second curtain 2659b can move in the vertical direction. By separating the bottom end of first curtain 2659a from the top end of second curtain 2659b, the inside of multi-level case 2655a can be opened, exposing the plurality of shelves 2656. Note that second actuator 2657b may be provided for each of first curtain 2659a and second curtain 2659b.

Second actuator 2657b is controlled by control processor 2658 of multi-level case 2655a. When control processor 2658 obtains a signal instructing that first shelf 2656a should be moved forward, control processor 2658 controls first actuator 2657a to move first shelf 2656a from the first position to the second position. More specifically, when the opening of multi-level case 2655a is covered, when control processor 2658 obtains a signal instructing that first shelf 2656a should be moved forward, control processor 2658 (1) controls second actuator 2657b to form a first gap between the bottom end of first curtain 2659a and the top end of second curtain 2659b, and (2) controls first actuator 2657a to move first shelf 2656a from the first position to the second position through the first gap. Control processor 2658 is one example of the controller.

Robot arm 2620 includes displacement portion 2622, arm controller 2623, and arm actuator 2625.

Displacement portion 2622 can be actuated by arm actuator 2625 to lift a target product (the first product), which is one or more products placed on first shelf 2656a, and change the position of the target product. Displacement portion 2622 includes a gripping portion capable of holding the first product by pinching the first product, a suction portion capable of holding the first product by sucking in air, or a magnetic portion capable of holding the first product by attracting the first product through magnetic force.

Displacement portion 2622 can lift the first product placed on shelf 2656 and move the first product to inside multi-level case 2655a to display it on another shelf 2656 or in another multi-level case 2655a.

Arm actuator 2625 actuates displacement portion 2622. More specifically, arm actuator 2625 can be controlled by arm controller 2623 to actuate displacement portion 2622. "Arm actuator 2625" may be read as "first actuator 2621" described above. Therefore, arm actuator 2625 may have the same functional configuration as first actuator 2621.

When arm controller 2623 obtains a signal instructing it to remove the first product on first shelf 2656a, the first actuator is controlled by control processor 2658 to move first shelf 2656a from the first position to the second position, and arm actuator 2625 is controlled to displace the position of the first product on first shelf 2656a using displacement portion 2622.

When the opening (the front retrieval opening) of multi-level case 2655a is covered by first curtain 2659a and second curtain 2659b, when control processor 2658 obtains a signal instructing to remove the first product from first shelf 2656a, control processor 2658 (1) controls second actuator 2657b to form a first gap between the bottom end of first curtain 2659a and the top end of second curtain 2659b, and (2) controls first actuator 2657a to move first shelf 2656a from the first position to the second position through the first gap. Arm controller 2623 (3) controls arm actuator 2625 to displace the position of the first product on first shelf 2656a using displacement portion 2622.

Next, an operation example of shipping system 2600c according to the present variation will be given.

As illustrated in (b) in FIG. 73B, for example, in shipping system 2600c, when shipping a first product based on order information from a user, it may be necessary to remove the first product to be shipped from the back of shelf 2656. Since shipping system 2600c manages all first products and multi-level cases 2655a, it manages which first product to be shipped is located on which shelf 2656 of which multi-level case 2655a. Upon shipping system 2600c using robot arm 2620 to remove a target first product from the back of shelf 2656, the target first product may be difficult to remove due to a first product located on the front of shelf 2656.

This operation example assumes that robot arm 2620 lifts and removes a target first product by moving shelf 2656, and then ships the removed first product.

First, as illustrated in (a) in FIG. 73B, there are times when the opening of multi-level case 2655a is covered. Therefore, when robot arm 2620 goes to remove the first product, control processor 2658 obtains a signal from the data manager instructing that first shelf 2656a should be moved forward when the opening of multi-level case 2655a is covered.

As illustrated in (b) of FIG. 73B, when control processor 2658 obtains a signal instructing that first shelf 2656a should be moved forward, control processor 2658 controls second actuator 2657b to form a first gap between the bottom end of first curtain 2659a and the top end of second curtain 2659b. Control processor 2658 controls second actuator 2657b so as to form a first gap in front of the shelf from which the first product is to be removed (first shelf 2656a). This separates the bottom end of first curtain 2659a from the top end of second curtain 2659b, creating a first gap in front of first shelf 2656a from which the first product is to be removed. In (b) in FIG. 73B, an example is illustrated in which the first gap is formed in front of the second shelf 2656 from the bottom.

Next, based on a signal instructing that first shelf 2656a should be moved forward, control processor 2658 controls first actuator 2657a to move first shelf 2656a from the first position to the second position through the first gap. This causes first shelf 2656a, from which the first product is to be removed, to slide and move in the horizontal direction from the first position to the second position. This allows first shelf 2656a to protrude from multi-level case 2655a along with the first product, whereby robot arm 2620 can grab the first product from above.

Next, as illustrated in (b) in FIG. 73B, when arm controller 2623 obtains a signal instructing it to remove the first product on first shelf 2656a, it controls arm actuator 2625 to move displacement portion 2622 to a position vertically above the first product to be removed. More specifically, robot arm 2620 moves displacement portion 2622 in the horizontal direction to a position vertically above the first product to be removed.

Next, as illustrated in (c) and (d) in FIG. 73B, displacement portion 2622 of robot arm 2620 descends, grabs, and lifts the target first product to be retrieved.

This results in arm controller 2623 controlling arm actuator 2625 to displace the position of the first product on first shelf 2656a using displacement portion 2622.

In this way, displacement portion 2622 can lift the first product placed on first shelf 2656a and place it into a package box for shipping.

Note that as illustrated in (d) in FIG. 73B, for example, when horizontally sliding and moving shelf 2656 located at the lowest level among the plurality of shelves 2656 of multi-level case 2655a (i.e., moving it from the first position to the second position), it comes into contact with front wall 2662 of multi-level case 2655a. Therefore, when horizontally sliding and moving shelf 2656 that comes into contact with front wall 2662 of multi-level case 2655a among the plurality of shelves 2656, a configuration in which front wall 2662 of multi-level case 2655a is rotated and tilted down to inhibit contact between front wall 2662 of multi-level case 2655a and shelf 2656 is acceptable. More specifically, control processor 2658 may control another actuator of multi-level case 2655a to rotate front wall 2662 in cases in which shelf 2656 which would come into contact with front wall 2662 of multi-level case 2655a is to be moved from the first position to the second position.

### [Embodiment 14]

Hereinafter, since the basic configuration of unmanned transport vehicle 2660 according to the present embodiment is the same as the basic configuration of the unmanned aerial vehicle and package transport device of Embodiment 1 and the basic configuration of the delivery system is the same as the basic configuration of the shipping system according to Embodiment 13 and the like, regarding the basic configuration of unmanned transport vehicle 2660 according to the present embodiment, the same reference signs as above will be used and repeated description will be omitted where appropriate. The configurations of the flying system, unmanned aerial vehicle, and package transport device, etc., according to Embodiment 1, etc., may be applied to the present embodiment.

First, the control method of the delivery system including unmanned transport vehicle 2660 according to the present embodiment will be described with reference to FIG. 74 through FIG. 78.

FIG. 74 is a block diagram illustrating an example of unmanned transport vehicle 2660 according to Embodiment 14. FIG. 75A illustrates an example of the movement of support structure 2684 and wire 2663 of unmanned transport vehicle 2660 according to Embodiment 14. In (a) in FIG. 75A, an example in which first door structure 2685 and second door structure 2686 are in an open state is illustrated. In (b) in FIG. 75A, an example in which first door structure 2685 and second door structure 2686 are in a closed state is illustrated. In FIG. 75A, (c) illustrates an example of a side view of unmanned transport vehicle 2660 in the state in (b) in FIG. 75A. In (d) in FIG. 75A, an example in which first door structure 2685 and second door structure 2686 are in the first door state is illustrated. FIG. 75B illustrates another example of the movement of support structure 2684 and wire 2663 of unmanned transport vehicle 2660 according to Embodiment 14. FIG. 76A illustrates an example of vehicle main body 2660a and package carriage 2670 of unmanned transport vehicle 2660 according to Embodiment 14. FIG. 76B illustrates an example of vehicle main body 2660a and another package carriage 2670 of unmanned transport vehicle 2660 according to Embodiment 14. FIG. 77 illustrates an example of how attitude control device 2670a corrects the attitude of package carriage 2670 of unmanned transport vehicle 2660 according to Embodiment 14. FIG. 78 illustrates an example of the attitude of package carriage 2670 of unmanned transport vehicle 2660 according to Embodiment 14.

As illustrated in FIG. 74 and FIG. 75A, the delivery system uses a control method of the system that includes unmanned transport vehicle 2660. The delivery system is a system capable of delivering a package from a sender to a receiver using unmanned transport vehicle 2660. For example, the delivery system can deliver a package to a receiver by unmanned transport vehicle 2660 carrying the package flying or traveling. The sender is the party that sends the package, and the receiver is the party that receives the package. In the present embodiment, the sender is a distribution center, such as a facility of a courier company or a store like a convenience store that serves as a relay point. In the present embodiment, the receiver is the party receiving the package, i.e., the destination, such as a home, a convenience store that serves as a relay point, or a delivery box provided at a home or a convenience store or the like. The delivery system according to the present embodiment is one example of a system. The delivery box is one example of a delivery reception box.

Delivery system includes unmanned transport vehicle 2660 and package carriage 2670.

Unmanned transport vehicle 2660 is, for example, a flying body such as a drone or a mobile body equipped with wheel 2681. Unmanned transport vehicle 2660 not only flies in the air, but can also travel along rails 7 provided above the ground. While coupled to wire 2663, unmanned transport vehicle 2660 can transport packages by traveling along rail 7 in a state in which it is coupled to package carriage 2670. In the present embodiment, the delivery system may include rail 7 as an element.

Unmanned transport vehicle 2660 includes vehicle main body 2660a, control processor 2664, suspension arm 2682, arm actuator 2665, wheel 2681, wire control module 2666, winder 2667, support structure 2684, and support member actuator 2668. Note that vehicle main body 2660a may include wire 2663 as an element.

Vehicle main body 2660a is a rectangular mobile body. Vehicle main body 2660a supports control processor 2664, suspension arm 2682, arm actuator 2665, wheel 2681, wire control module 2666, winder 2667, support structure 2684, and support member actuator 2668 at a predetermined attitude. Note that when vehicle main body 2660a is capable of attaching package carriage 2670, vehicle main body 2660a may support package carriage 2670 in a predetermined attitude. Vehicle main body 2660a is one example of the main body.

Note that vehicle main body 2660a may include a plurality of propellers. In such cases, vehicle main body 2660a may provide thrust to unmanned transport vehicle 2660 via the rotational actuation of the propeller actuation motor provided in vehicle main body 2660a.

Suspension arm 2682 is a hook capable of connecting to rail 7, and can therefore be hooked onto rail 7. The bottom end of suspension arm 2682 is coupled to vehicle main body 2660a, and wheel 2681, which can rotate and make contact with rail 7, is coupled to the other end, i.e., the leading end of suspension arm 2682. In the present embodiment, vehicle main body 2660a is provided with a plurality of suspension arms 2682. Note that suspension arm 2682 may be provided with a motor that rotates the rotary shaft of wheel 2681. The arm, hook, connector, etc., described in the above embodiments may be used for suspension arm 2682 in the present embodiment. Suspension arm 2682 is one example of an arm.

Arm actuator 2665 can displace suspension arm 2682 to change the attitude of suspension arm 2682 by actuating suspension arm 2682. More specifically, arm actuator 2665 can be controlled by control processor 2664 to rotate suspension arm 2682 around an axis extending in the lengthwise direction of rail 7, thereby making wheel 2681 contact rail 7 and connecting suspension arm 2682 to rail 7. Arm actuator 2665, when controlled by control processor 2664, can rotate suspension arm 2682 around an axis extending in the lengthwise direction of rail 7, thereby separating wheel 2681 from rail 7 and disconnecting from rail 7. Arm actuator 2665 is one example of a second actuator for actuating suspension arm 2682.

Wheel 2681 is a roller that can contactably rotate freely with respect to rail 7, allowing it to travel on rail 7. The rotary shaft of wheel 2681 extends in a direction orthogonal to the lengthwise direction of rail 7. When suspension arm 2682 is connected to rail 7, wheel 2681 provided on suspension arm 2682 rotates around the axis of the rotary shaft.

Control processor 2664 can control the flying state of unmanned transport vehicle 2660, adjust the position of unmanned transport vehicle 2660, and control the reeling in and out of wire 2663.

Flying states of unmanned transport vehicle 2660 include forward, backward, rotate right, rotate left, hovering, etc. More specifically, control processor 2664 controls the inclination of vehicle main body 2660a of unmanned transport vehicle 2660 relative to the horizontal direction and controls the rotation rates of the propellers by controlling the propeller actuation motors, based on the position information, the angular speed information, the acceleration information, and the speed information.

Adjusting the position of unmanned transport vehicle 2660 involves displacing the position of vehicle main body 2660a of unmanned transport vehicle 2660 relative to rail 7. More specifically, unmanned transport vehicle 2660 can transition between a third state where the distance between vehicle main body 2660a and rail 7 is a first distance, and a fourth state where the distance between vehicle main body 2660a and rail 7 is a second distance greater than the first distance, by the actuation by arm actuator 2665. While unmanned transport vehicle 2660 is traveling, control processor 2664 controls arm actuator 2665 to place unmanned transport vehicle 2660 in the third state. When unmanned transport vehicle 2660 is traveling, the distance between vehicle main body 2660a and rail 7 decreases while the distance between vehicle main body 2660a and the ground surface increases, making it easier for vehicle main body 2660a to avoid obstacles. While unmanned transport vehicle 2660 is unloading a package, control processor 2664 controls arm actuator 2665 to place unmanned transport vehicle 2660 in the fourth state. When unmanned transport vehicle 2660 is unloading a package, the distance between vehicle main body 2660a and rail 7 increases while the distance between vehicle main body 2660a and the ground surface decreases, making unloading easier.

The reeling out and in of wire 2663 are performed by wire control module 2666 controlling winder 2667. That is, when wire control module 2666 obtains a reel-out instruction for wire 2663 from control processor 2664, it may control winder 2667 to reel out wire 2663 and separate package carriage 2670 from unmanned transport vehicle 2660. When wire control module 2666 obtains a reel-in instruction for wire 2663 from control processor 2664, it may control winder 2667 to reel in wire 2663 and collect package carriage 2670.

Wire control module 2666 can control electric motor 2667a of winder 2667 to reel in wire 2663 until the length of wire 2663 extending from vehicle main body 2660a to package carriage 2670 becomes a first length, as illustrated in (a) and (b) in FIG. 75A. After wire 2663 has reached the first length, control processor 2664 controls support member actuator 2668 to change support structure 2684 from a second door state to a first door state. As illustrated in (d) in FIG. 75A, after support structure 2684 has transitioned to the first door state, wire control module 2666 controls electric motor 2667a of winder 2667 to reel out wire 2663 so that the length of wire 2663 extending from vehicle main body 2660a to package carriage 2670 becomes a second length longer than the first length. When the length of wire 2663 extending from vehicle main body 2660a to package carriage 2670 becomes the second length, package carriage 2670 is supported by end portion 2685a of first door structure 2685 of support structure 2684 and end portion 2686a of second door structure 2686 of support structure 2684. Note that wire control module 2666 may be able to recognize the length of wire 2663 based on the rotation amount of the rotary shaft of electric motor 2667a, and may be able to recognize the length of wire 2663 by using a senso r.

Here, wire 2663 is configured to be freely reeled out and in by the actuation of electric motor 2667a of winder 2667. Wire 2663 can extend to a length at least five times the height (thickness) of unmanned transport vehicle 2660 via the actuation of electric motor 2667a.

As illustrated in FIG. 74 and FIG. 75A, winder 2667 includes electric motor 2667a, and by reeling in or out wire 2663 via the actuation of electric motor 2667a, it can adjust the length of wire 2663 extending from vehicle main body 2660a of unmanned transport vehicle 2660 to package carriage 2670. In the present disclosure, winder 2667 may also be referred to as a reel or a winch. Electric motor 2667a of winder 2667 can rotate a reel capable of reeling out and in wire 2663. Winder 2667 may be actuated and controlled by wire control module 2666 based on a reel-out instruction for wire 2663 or a reel-in instruction for wire 2663 from control processor 2664. Electric motor 2667a is one example of the motor.

Support structure 2684 is a support member capable of supporting package carriage 2670. Support structure 2684 can be actuated by support member actuator 2668 to change between the first door state in which package carriage 2670 is supported by support structure 2684 without the tension of wire 2663 and the second door state in which package carriage 2670 is suspended by the tension of wire 2663.

More specifically, support structure 2684 is pivotably connected to vehicle main body 2660a and includes first door structure 2685 and second door structure 2686. Note that support structure 2684 may include wire 2663 as an element.

First door structure 2685 is coupled to one crosswise side of vehicle main body 2660a that is elongated along rail 7. Second door structure 2686 is coupled to the other crosswise side of vehicle main body 2660a that is elongated along rail 7.

First door structure 2685 and second door structure 2686 are hook-shaped support arms capable of supporting package carriage 2670. First door structure 2685 and second door structure 2686 have one end coupled to vehicle main body 2660a, and are pivotable about the coupling portion as a fulcrum. First door structure 2685 and second door structure 2686 can support package carriage 2670 with their other ends, namely end portions 2685a and 2686a. Therefore, first door structure 2685 and second door structure 2686 can support package carriage 2670 by assuming a closed orientation in the first door state, and can open package carriage 2670 by assuming an open orientation in the second door state.

Here, the first door state corresponds to a state in which first door structure 2685 and second door structure 2686 are close to package carriage 2670. Stated differently, the first door state is a state in which first door structure 2685 and second door structure 2686 are in the closed orientation. In the first door state, end portion 2685a of first door structure 2685 and end portion 2686a of second door structure 2686 are positioned below package carriage 2670, and they support package carriage 2670 by contacting the bottom of package carriage 2670. End portion 2685a of first door structure 2685 is one example of a first part of first door structure 2685. End portion 2686a of second door structure 2686 is one example of a second part of second door structure 2686.

Here, the second door state corresponds to a state in which first door structure 2685 and second door structure 2686 are away from package carriage 2670. Stated differently, the second door state is a state in which first door structure 2685 and second door structure 2686 are not supporting package carriage 2670. In the second door state, it is possible that end portion 2685a of first door structure 2685 and end portion 2686a of second door structure 2686 are not positioned below package carriage 2670.

Support member actuator 2668 is capable of actuating support structure 2684. More specifically, support member actuators 2668 are provided to correspond to each of first door structure 2685 and second door structure 2686. One support member actuator 2668 is capable of pivoting first door structure 2685 around the fulcrum of vehicle main body 2660a. The other support member actuator 2668 is capable of pivoting second door structure 2686 around the fulcrum of vehicle main body 2660a. With this, support member actuators 2668 can displace support structure 2684 to an open orientation or to a closed orientation. Support member actuator 2668 is one example of a first actuator for actuating support structure 2684.

Package carriage 2670 is connected to wire 2663 extending downward from the main body of unmanned transport vehicle 2660. Package carriage 2670 can accommodate a package to be delivered by unmanned transport vehicle 2660.

As illustrated in FIG. 76A and FIG. 76B, package carriage 2670 includes first accommodation space 2674 for accommodating a package, and second accommodation space 2675 for accommodating attitude control device 2670a and rotary member 2671.

As illustrated in FIG. 76A, in package carriage 2670, attitude control device 2670a may be positioned above first accommodation space 2674. Stated differently, first accommodation space 2674 may be positioned below second accommodation space 2675. In this case, since the package is below attitude control device 2670a, it becomes possible to lower package carriage 2670 suspended by wire 2663 and easily place the package at the destination point, which is the receiver. First accommodation space 2674 is one example of an accommodation space.

As illustrated in FIG. 76B, in package carriage 2670, attitude control device 2670a may be positioned below first accommodation space 2674. Stated differently, first accommodation space 2674 may be positioned above second accommodation space 2675. In such cases, since attitude control device 2670a for heavy objects is below the package, the attitude of package carriage 2670 can be stabilized when reeling out wire 2663 to lower package carriage 2670.

Here, the attitude of package carriage 2670 when unmanned transport vehicle 2660 lowers package carriage 2670 by reeling out wire 2663 will be described.

When unmanned transport vehicle 2660 lowers package carriage 2670 by reeling out wire 2663, package carriage 2670 may shift from the destination point due to disturbances such as wind, or rotate around the connection portion with wire 2663, causing its attitude to shift. In such cases, even if package carriage 2670 is lowered by reeling out wire 2663, it may become difficult to insert it into the top opening of the delivery box, which is the destination point.

For example, as illustrated in (a) in FIG. 78, when there is no wind and the angle between one side of package carriage 2670 and the lengthwise direction of rail 7 is θ = 0°, it is possible to insert package carriage 2670 into the top opening of the delivery box, which is the destination point, even if lowered by reeling out wire 2663. As illustrated in FIG. 77 and in (b) in FIG. 78, when there is wind and the angle between one side of package carriage 2670 and the lengthwise direction of rail 7 is θ = 0°, it is possible to accommodate package carriage 2670 into the delivery box, which is the destination point, even if lowered by reeling out wire 2663, by moving unmanned transport vehicle 2660 and/or moving the position of the opening of the delivery box. As illustrated in FIG. 77 and in (c) in FIG. 78, when there is wind and the angle between one side of package carriage 2670 and the lengthwise direction of rail 7 is θ = 45°, it is difficult to accommodate the package into the delivery box even if lowering package carriage 2670 by reeling out wire 2663, as package carriage 2670 may get stuck on the top opening of the delivery box. As illustrated in (d) and (e) in FIG. 78, when there is wind and the angle between one side of package carriage 2670 and the lengthwise direction of rail 7 is θ = 45° + α1 or θ = 45° + α2, it is difficult to accommodate the package into delivery box even if lowering package carriage 2670 by reeling out wire 2663, as package carriage 2670 is not positioned vertically above the top opening of the delivery box.

Therefore, as illustrated in FIG. 77, package carriage 2670 controls its own attitude. More specifically, as illustrated in FIG. 74, FIG. 76A, and FIG. 76B, package carriage 2670 includes attitude control device 2670a that controls the attitude of package carriage 2670 suspended by wire 2663 by controlling rotary member 2671. The rotary member is typically a disc-shaped plate.

Attitude control device 2670a can, for example, correct the attitude of package carriage 2670 to the correct attitude by controlling rotary member 2671, examples of which include a reaction wheel and a flywheel. Attitude control device 2670a includes sensor 2661 that detects the attitude of package carriage 2670, motor actuation controller 2673 that actuates electric motor 2672 based on the sensing result of sensor 2661, and electric motor 2672 that rotates rotary member 2671 by rotating rotary shaft 2671a. Here, controlling rotary member 2671 includes controlling the rotation rate of rotary member 2671 and controlling the direction of the rotary shaft 2671a of rotary member 2671. Note that rotary shaft 2671a may be included as an element of rotary member 2671 or as an element of electric motor 2672.

More specifically, attitude control device 2670a can obtain sensing results from sensor 2661 capable of detecting the attitude of package carriage 2670. Sensor 2661 is, for example, a camera sensor or an angular speed sensor. In the present embodiment, sensor 2661 is provided on vehicle main body 2660a and is a camera sensor capable of capturing images of the space vertically below vehicle main body 2660a.

When unmanned transport vehicle 2660 has arrived at the receiver, attitude control device 2670a can recognize the attitude of package carriage 2670 based on the sensing result from sensor 2661 that sensed the attitude of package carriage 2670. Thus, attitude control device 2670a can determine whether the attitude of package carriage 2670 is a target attitude. Stated differently, attitude control device 2670a can determine whether package carriage 2670 is in an attitude that will allow for accommodation in a delivery box. Here, a target attitude refers to an attitude in which one side of the plan view rectangular package carriage 2670 is parallel to the lengthwise direction of rail 7, i.e., an attitude in which θ is within a predetermined range of angles where the angle between that side and the lengthwise direction of rail 7 is θ = 0° as a reference. In the target attitude, package carriage 2670 is capable of accommodating a package in the delivery box. The target attitude includes an attitude in which the up-down direction parallel to the vertical direction (i.e., in which the vertical direction) and the up-down direction of package carriage 2670 match.

Based on the sensing result obtained by sensor 2661, i.e., the sensing result of the attitude of package carriage 2670 by sensor 2661, attitude control device 2670a can control rotary member 2671 to orient the attitude of package carriage 2670 to the target attitude. For example, if package carriage 2670 rotates counterclockwise by an arbitrary angle in a plan view, attitude control device 2670a rotates rotary member 2671 counterclockwise by an arbitrary angle as indicated by the white arrow, causing package carriage 2670 to rotate clockwise by an arbitrary angle as indicated by the white arrow. Thus, the attitude of package carriage 2670 is corrected to be θ = 0°. For example, although illustration is omitted in the figures, if package carriage 2670 rotates clockwise by an arbitrary angle in a plan view, attitude control device 2670a rotates rotary member 2671 clockwise by an arbitrary angle, causing package carriage 2670 to rotate counterclockwise by an arbitrary angle. Thus, the attitude of package carriage 2670 is corrected to be θ = 0°.

Thus, in unmanned transport vehicle 2660, as illustrated in FIG. 75B, when a package is accommodated in package carriage 2670 of unmanned transport vehicle 2660, it is in attitude where first door structure 2685 and second door structure 2686 are open (second door state). Wire control module 2666 controls electric motor 2667a of winder 2667 to reel in wire 2663 extending from vehicle main body 2660a to package carriage 2670. This lifts package carriage 2670 in which the package is accommodated. When package carriage 2670 approaches vehicle main body 2660a of unmanned transport vehicle 2660, wire control module 2666 controls electric motor 2667a of winder 2667 to stop reeling in wire 2663.

Support member actuators 2668, under control by control processor 2664, pivot first door structure 2685 around the fulcrum of vehicle main body 2660a and pivot second door structure 2686 around the fulcrum of vehicle main body 2660a. With this, first door structure 2685 and second door structure 2686 assume a closed orientation (the first door state). Under control by control processor 2664, wire control module 2666 operates electric motor 2667a of winder 2667 to reel out wire 2663. With this, package carriage 2670 can be placed on end portion 2685a of first door structure 2685 and end portion 2686a of second door structure 2686. Thereafter, when unmanned transport vehicle 2660 starts traveling, it is possible to inhibit swaying of package carriage 2670 due to the travel of unmanned transport vehicle 2660, and first door structure 2685 and second door structure 2686 can inhibit package carriage 2670 from falling.

### Operation Example 1

In the present operation example, the operations from lowering package carriage 2670 to loading a package onto package carriage 2670 will be described with reference to, for example, FIG. 79.

FIG. 79 is a flowchart illustrating an example of operations performed when package carriage 2670 of unmanned transport vehicle 2660 descends according to Embodiment 14.

First, unmanned transport vehicle 2660 is suspended from rail 7 with suspension arm 2682 connected to rail 7, as illustrated in (a) in FIG. 75A and in FIG. 79. To allow a worker to accommodate a package in package carriage 2670 of unmanned transport vehicle 2660, first door structure 2685 and second door structure 2686 are in the first door state. For this reason, wire control module 2666 controls electric motor 2667a of winder 2667 to reel in wire 2663 until the length of wire 2663 extending from vehicle main body 2660a to package carriage 2670 becomes a first length (S2631).

With this, the bottom of package carriage 2670 is spaced apart from end portion 2685a of first door structure 2685 and end portion 2686a of second door structure 2686. Stated differently, package carriage 2670 is suspended by the tension of wire 2663, placing first door structure 2685 and second door structure 2686 in the second door state, which is a state separated from package carriage 2670 (S2632). Support member actuators 2668, under control by control processor 2664, pivot first door structure 2685 around the fulcrum of vehicle main body 2660a and pivot second door structure 2686 around the fulcrum of vehicle main body 2660a.

Next, wire control module 2666 controls electric motor 2667a of winder 2667 to reel out wire 2663 (S2633), thereby lowering package carriage 2670.

Next, control processor 2664 determines whether the lowering of package carriage 2670 has completed (S2634).

If control processor 2664 determines that the lowering of package carriage 2670 is not complete (NO in S2634), the process returns to step S2633.

However, if control processor 2664 determines that the lowering of package carriage 2670 has been completed (YES in S2634), the processing in the flowchart of FIG. 79 ends. This allows a worker to accommodate a package in package carriage 2670.

### Operation Example 2

In the present operation example, the operations from loading a package onto package carriage 2670 to unmanned transport vehicle 2660 starting to travel will be described with reference to, for example, FIG. 80.

FIG. 80 is a flowchart illustrating an example of operations from reeling in wire 2663 of package carriage 2670 accommodating a package until unmanned transport vehicle 2660 starts to travel.

First, as illustrated in (b) and (c) in FIG. 75A and in FIG. 80, after a worker loads a package into package carriage 2670, wire control module 2666 controls the operation of winder 2667 to reel in wire 2663 upon obtaining a reel-in instruction for wire 2663 from control processor 2664 (S2635). For example, wire control module 2666 controls electric motor 2667a of winder 2667 to reel in wire 2663 until the length of wire 2663 extending from vehicle main body 2660a to package carriage 2670 becomes a first length. This lifts package carriage 2670 in which the package is accommodated, bringing it close to the vicinity of vehicle main body 2660a.

Next, control processor 2664 determines whether the lifting of package carriage 2670 has finished (S2636).

If control processor 2664 determines that the lifting of package carriage 2670 has not finished (NO in S2636), the process returns to step S2635.

However, if control processor 2664 determines that the lifting of package carriage 2670 has finished (YES in S2636), support member actuators 2668, under control by control processor 2664, pivot first door structure 2685 around the fulcrum of vehicle main body 2660a and pivot second door structure 2686 around the fulcrum of vehicle main body 2660a. With this, first door structure 2685 and second door structure 2686 assume a closed orientation, i.e., enter the first door state (S2637).

Next, control processor 2664 determines whether package carriage 2670 is facing forward (S2638).

If control processor 2664 determines that package carriage 2670 is not facing forward (NO in S2638), the process returns to step S2637.

However, if control processor 2664 determines that package carriage 2670 is facing forward (YES in S2638), it determines whether first door structure 2685 and second door structure 2686 are closed (completely closed) or not (S2639), as illustrated in (d) in FIG. 75A and in FIG. 80.

If control processor 2664 determines that first door structure 2685 and second door structure 2686 are not closed (NO in S2639), the process returns to step S2637.

However, if control processor 2664 determines that first door structure 2685 and second door structure 2686 are closed (YES in S2639), wire control module 2666 is controlled by control processor 2664 to operate electric motor 2667a of winder 2667 so as to reel out wire 2663 so that the length of wire 2663 extending from vehicle main body 2660a to package carriage 2670 becomes a second length longer than the first length (S2640).

Control processor 2664 determines whether wire 2663 has become bent when it is reeled out (S2641). Whether wire 2663 has become bent or not can be determined by a tension sensor provided in winder 2667.

If control processor 2664 determines that wire 2663 has not become bent when it was reeled out (NO in S2641), the process returns to step S2640.

However, if control processor 2664 determines that wire 2663 has become bent when it was reeled out (YES in S2641), since the length of wire 2663 extending from vehicle main body 2660a to package carriage 2670 becomes the second length, package carriage 2670 is supported by end portion 2685a of first door structure 2685 and end portion 2686a of second door structure 2686. Stated differently, package carriage 2670 is placed on end portion 2685a of first door structure 2685 and end portion 2686a of second door structure 2686.

Next, unmanned transport vehicle 2660 starts traveling (S2642). The processing in the flowchart of FIG. 80 then ends.

### Advantageous Effects

Next, advantageous effects achieved by unmanned transport vehicle 2660 according to the present embodiment will be described.

A system according to the present embodiment is a system including unmanned transport vehicle 2660, and includes: unmanned transport vehicle 2660; a first winch (winder 2667) connected to unmanned transport vehicle 2660 and capable of reeling out and in wire 2663; package carriage 2670 connected to wire 2663, for putting a package to be transported by unmanned transport vehicle 2660 into; and a controller (control processor 2664). Package carriage 2670 includes attitude control device 2670a including a flywheel (rotary member 2671) that rotates around rotary shaft 2671a extending in a vertical direction. Package carriage 2670 includes an accommodation space (first accommodation space 2674) for accommodating the package. The controller: obtains a sensing result from sensor 2661 capable of detecting an attitude of package carriage 2670; and based on the sensing result obtained, controls rotation of the flywheel to rotate package carriage 2670 around rotary shaft 2671a and orient package carriage 2670 to a target attitude.

With this, even if the attitude of package carriage 2670 is tilted relative to the horizontal direction or rotates around the vertical direction, attitude control device 2670a can control rotary member 2671 to orient package carriage 2670 to the target attitude. As a result, the package can be delivered to the recipient's delivery reception box (delivery box).

The system according to the present embodiment executes the control method.

This achieves the same above-described advantageous effects achieved by the control method.

The program according to the present embodiment is a program for causing the system to execute the control method.

This achieves the same above-described advantageous effects achieved by the control method.

In the system according to the present embodiment, in package carriage 2670, when viewed from above in the vertical direction, the position of rotary shaft 2671a overlaps the position of wire 2663, and attitude control device 2670a is located above the accommodation space.

With this, since the package is located below attitude control device 2670a, the package can be easily removed from package carriage 2670 when lowering package carriage 2670 by suspension.

Furthermore, because the position of rotary shaft 2671a is set to overlap with the position of wire 2663 when viewed from above in the vertical direction, package carriage 2670 can be rotated stably.

In the system according to the present embodiment, when viewed from above in the vertical direction, the position of rotary shaft 2671a overlaps the position of wire 2663, and in package carriage 2670, attitude control device 2670a is located below the accommodation space.

With this, since attitude control device 2670a for heavy objects is below the package, the attitude of package carriage 2670 can be stabilized when lowering package carriage 2670 by suspension.

Furthermore, because the position of rotary shaft 2671a is set to overlap with the position of wire 2663 when viewed from above in the vertical direction, package carriage 2670 can be rotated stably.

In the system according to the present embodiment, the first winch is capable of extending wire 2663 to a length at least five times the height of unmanned transport vehicle 2660.

With this, even if the attitude of package carriage 2670 is tilted relative to the horizontal direction or rotates around the vertical direction when wire 2663 is lengthily extended, attitude control device 2670a can control rotary member 2671 to orient package carriage 2670 to the target attitude. As a result, the package can be delivered to the recipient's delivery reception box.

In the control method according to the present embodiment, the system further includes: a motor; winder 2667 that adjusts the length of wire 2663 extending from the main body of unmanned transport vehicle 2660 to package carriage 2670 by reeling in or out wire 2663 via actuation by the motor; support structure 2684 for supporting package carriage 2670; and a first actuator (support member actuator 2668) for actuating support structure 2684. Support structure 2684 can be actuated by the first actuator to change between the first door state in which package carriage 2670 is supported by support structure 2684 without the tension of wire 2663 and the second door state in which package carriage 2670 is suspended by the tension of wire 2663.

With this, for example, support structure 2684 can support package carriage 2670 when unmanned transport vehicle 2660 is delivering a package. Furthermore, when unmanned transport vehicle 2660 is unloading a package, it can be lowered using the tension of wire 2663. Thus, unmanned transport vehicle 2660 does not need to be lowered using the tension of wire 2663 when delivering a package, which can inhibit the degradation of wire 2663. Furthermore, since support structure 2684 supports the package, the package can be optimally supported even while unmanned transport vehicle 2660 is traveling.

The system according to the present embodiment further includes: a first actuator for actuating support structure 2684. Support structure 2684 includes first door structure 2685 and second door structure 2686 that are pivotably connected to unmanned transport vehicle 2660. First door structure 2685 and second door structure 2686 are transitionable between a first door state and a second door state by the first actuator being controlled. The first door state corresponds to a state in which first door structure 2685 and second door structure 2686 have been pivoted close to package carriage 2670. The second door state corresponds to a state in which first door structure 2685 and second door structure 2686 have been pivoted away from package carriage 2670. To transition unmanned transport vehicle 2660 and package carriage 2670 to the first state, the controller (1) controls the first winch (winder 2667) to reel in wire 2663 until a length of wire 2663 extending from unmanned transport vehicle 2660 to package carriage 2670 becomes a second first length, (2) after the length of wire 2663 is the second first length, controls the first actuator to transition support structure 2684 from the second door state to the first door state, and (3) after support structure 2684 is in the first door state, controls a motor of winder 2667 to reel out wire 2663 until the length of wire 2663 extending from unmanned transport vehicle 2660 to package carriage 2670 becomes a second length longer than the second first length and package carrier 2670 is supported via the first part of first door structure 2685 located below package carriage 2670 and the first part (end part 2685a) of second door structure 2686 located below package carriage 2670.

With this, when first door structure 2685 and second door structure 2686 are in the first door state, the first part of first door structure 2685 and the second part of second door structure 2686 can support package carriage 2670. Thus, unmanned transport vehicle 2660 does not need to be lowered using the tension of wire 2663 when delivering a package, which can inhibit the degradation of wire 2663. Furthermore, since support structure 2684 supports the package, the package can be optimally supported even while unmanned transport vehicle 2660 is traveling.

Furthermore, the length of wire 2663 can be set to a second length so that package carriage 2670 is supported by support structure 2684. Thus, support structure 2684 can support package carriage 2670 when unmanned transport vehicle 2660 is delivering a package, which can inhibit the degradation of wire 2663. Furthermore, since support structure 2684 supports the package, the package can be optimally supported even while unmanned transport vehicle 2660 is traveling.

In the control method according to the present embodiment, unmanned transport vehicle 2660 transports the package by traveling along rail 7. Unmanned transport vehicle 2660 further includes: wheel 2681 for traveling on rail 7; an arm (suspension arm 2682) connected to a main body of unmanned transport vehicle 2660 and wheel 2681; and a second actuator (arm actuator 2665) for actuating the arm. Unmanned transport vehicle 2660 is capable of transitioning between a third state and a fourth state via actuation of the second actuator, the third state being a state in which the distance between the main body and rail 7 is a first distance and the fourth state being a state in which the distance between the main body and rail 7 is a second distance greater than the first distance.

With this, the state of unmanned transport vehicle 2660 can be switched between the third state and the fourth state depending on whether unmanned transport vehicle 2660 is traveling or unloading a package.

In the control method according to the present embodiment, while unmanned transport vehicle 2660 is traveling, the second actuator is controlled to place unmanned transport vehicle 2660 in the third state, and while unmanned transport vehicle 2660 is unloading the package, the second actuator is controlled to place unmanned transport vehicle 2660 in the fourth state.

With this, when unmanned transport vehicle 2660 is traveling, the distance between vehicle main body 2660a and rail 7 decreases while the distance between vehicle main body 2660a and the ground surface increases, making it easier for vehicle main body 2660a to avoid obstacles. While unmanned transport vehicle 2660 is unloading a package, control processor 2664 controls arm actuator 2665 to place unmanned transport vehicle 2660 in the fourth state. When unmanned transport vehicle 2660 is unloading a package, the distance between vehicle main body 2660a and rail 7 increases while the distance between vehicle main body 2660a and the ground surface decreases, making unloading easier.

In the control method according to the present embodiment, the target attitude includes an attitude in which an up-down direction parallel to the vertical direction and an up-down direction of package carriage 2670 match.

With this, package carriage 2670 can be corrected to the target attitude, which allows the package to be delivered to the recipient's delivery reception box.

### VARIATION OF EMBODIMENT 14

Hereinafter, since the basic configuration of unmanned transport vehicle 2660b according to the present variation is the same as the basic configuration of the unmanned transport vehicle according to Embodiment 14 and the like, the same reference signs as above are used and repeated description of the basic configuration of unmanned transport vehicle 2660b in the present variation will be omitted where appropriate. The configurations of the flying system, unmanned aerial vehicle, and package transport device, etc., according to Embodiment 1, etc., may be applied to the present variation.

First, unmanned transport vehicle 2660b according to the present variation will be described with reference to FIG. 81.

FIG. 81 illustrates an example of vehicle main body 2660a and package carriage 2670 of unmanned transport vehicle 2660b according to a variation of Embodiment 14.

As illustrated in FIG. 81, unmanned transport vehicle 2660b can proceed along rail 7. Unmanned transport vehicle 2660b includes first connector 2691, second connector 2692, and third connector 2693. First connector 2691 is positioned on one side in the traveling direction of vehicle main body 2660a of unmanned transport vehicle 2660b, and second connector 2692 is positioned on the other side in the traveling direction of vehicle main body 2660a of unmanned transport vehicle 2660b. Third connector 2693 is positioned at the central portion of vehicle main body 2660a of unmanned transport vehicle 2660b, and is positioned between first connector 2691 and second connector 2692. Wheel 2681 of first connector 2691 and wheel 2681 of second connector 2692 are located on top of rail 7, and wheel 2681 of third connector 2693 is located below rail 7.

In the present variation, first connector 2691 and second connector 2692 can pivot with respect to vehicle main body 2660a by the operation of arm actuator 2694. More specifically, the bottom ends of first connector 2691 and second connector 2692 are provided on vehicle main body 2660a so as to be capable of pivoting around the crosswise direction of vehicle main body 2660a as an axis. Furthermore, each of first connector 2691 and second connector 2692 is coupled to a corresponding arm actuator 2694 at a location between wheel 2681 and the bottom end, and is pivotable with respect to the corresponding arm actuator 2694. Since each arm actuator 2694 is a damper or the like, arm actuators 2694 can be controlled by control processor 2664 to push or pull first connector 2691 and second connector 2692. With this, arm actuators 2694 can pivot first connector 2691 and second connector 2692 with respect to vehicle main body 2660a.

For example, when arm actuators 2694 push first connector 2691 and second connector 2692, first connector 2691 rotates clockwise and second connector 2692 rotates counterclockwise, causing vehicle main body 2660a to approach rail 7, reducing the distance between vehicle main body 2660a and rail 7 and increasing the distance between vehicle main body 2660a and the ground surface. When arm actuators 2694 pull first connector 2691 and second connector 2692, first connector 2691 rotates counterclockwise and second connector 2692 rotates clockwise, increasing the distance between vehicle main body 2660a and rail 7 and reducing the distance between vehicle main body 2660a and the ground surface.

### [Embodiment 15]

Hereinafter, since the basic configuration of delivery box 2700 according to the present embodiment is the same as the basic configuration of the delivery box according to Embodiment 1 and the like, the same reference signs as above are used and repeated description of the basic configuration of delivery box 2700 in the present embodiment will be omitted where appropriate. The configurations of the flying system, unmanned aerial vehicle, and package transport device, etc., according to Embodiment 1, etc., may be applied to the present embodiment.

First, a control method that uses delivery box 2700 according to the present embodiment will be described with reference to FIG. 82A through FIG. 83.

FIG. 82A is a perspective view illustrating an example of delivery box 2700 according to Embodiment 15. FIG. 82B is a block diagram illustrating an example of the delivery box according to Embodiment 15. FIG. 83 illustrates an example of how delivery box 2700 according to Embodiment 15 moves when viewed from the front. In FIG. 83, (a) illustrates an example of how carriage structure 2722 of transport box 2720 receives a package when viewed from the front of delivery box 2700, and (b) illustrates an example of how carriage structure 2722 delivers the received package to a predetermined box 2708 among a plurality of boxes 2708. Illustration of guide structure 2710 is omitted in (b) in FIG. 83.

As illustrated in FIG. 82A through FIG. 83, delivery box 2700 is a delivery reception box for receiving packages from unmanned transport vehicle 2660. Delivery box 2700 is included in the shipping system according to the above-described embodiment. Delivery box 2700 may be provided with order screen 2703 via which the ordering of products is possible. Delivery box 2700 is one example of a delivery reception box.

Delivery box 2700 includes enclosure 2701, guide structure 2710, guide movable block 2715, actuation controller 2716, and transport box 2720.

Enclosure 2701 has a rectangular or cylindrical shape and is a container capable of storing a plurality of packages. Enclosure 2701 includes top opening 2704 formed at the top portion in the vertically upward direction of enclosure 2701, reception space 2704a which is a space for receiving packages that have passed through top opening 2704, and elevator path 2704b for delivering a received package to a predetermined box 2708 among the plurality of boxes 2708 arranged in enclosure 2701.

Top opening 2704 is formed on the vertical upper surface of enclosure 2701. Top opening 2704 is located vertically below the rail and elongated in the lengthwise direction of the rail. A package delivered by unmanned transport vehicle 2660 passes through top opening 2704 by being lowered through it. Stated differently, top opening 2704 is an entrance for packages. Top opening 2704 is one example of an opening of enclosure 2701.

Reception space 2704a is continuous with top opening 2704 and is a space formed above the plurality of boxes 2708 arranged in enclosure 2701. In reception space 2704a, packages that have passed through top opening 2704, that is, packages that have been delivered by unmanned transport vehicle 2660, can be received. Transport box 2720, which can receive the package when unmanned transport vehicle 2660 delivers a package to delivery box 2700, is arranged in reception space 2704a. Therefore, in reception space 2704a, packages that have been delivered by unmanned transport vehicle 2660 can be received.

Elevator path 2704b is connected to reception space 2704a. In elevator path 2704b, transport box 2720 that has received a package in reception space 2704a can be allowed to move vertically, similar to an elevator. Stated differently, elevator path 2704b is a passage for transport box 2720 to deliver the package received in reception space 2704a to a predetermined box 2708 among the plurality of boxes 2708.

The plurality of boxes 2708 are arranged along elevator path 2704b so as to correspond one-to-one with the plurality of loading openings that are in communication with elevator path 2704b. In the present embodiment, the plurality of boxes 2708 are arranged in two columns in the vertical direction, with elevator path 2704b disposed therebetween. The loading opening is a reception port for loading packages delivered by transport box 2720. The loading opening may include a loading door that can open and close.

Retrieval opening 2702a through which packages placed in the interior space of box 2708 can be retrieved is formed in each of the plurality of boxes 2708. Each of the plurality of boxes 2708 includes retrieval door 2702 that can open and close retrieval opening 2702a. Retrieval door 2702 can open and close retrieval opening 2702a.

Guide structure 2710 is a frame-like structure that is capable of guiding a package. Guide structure 2710 includes opening 2711 through which packages pass.

Guide structure 2710 includes a plurality of top lids 2712 that can guide package carriage 2670 descending when lowering a package unmanned transport vehicle 2660 delivered, and top lid actuator 2718 that pivots the plurality of top lids 2712.

When actuation controller 2716 obtains the sensing result from sensor 2717, the plurality of top lids 2712 cause opening 2711 to open by actuation controller 2716 controlling top lid actuator 2718 of guide structure 2710. Here, since the plurality of top lids 2712 are maintained at an inclined attitude, when unmanned transport vehicle 2660 lowers package carriage 2670, package carriage 2670 can be guided into opening 2711, that is, guided into top opening 2704. When actuation controller 2716 obtains the sensing result from sensor 2717, the plurality of top lids 2712 cause opening 2711 to close by actuation controller 2716 controlling top lid actuator 2718 of guide structure 2710.

Here, the sensing result from sensor 2717 is, for example, position information of unmanned transport vehicle 2660, but the sensing result may include information indicating that unmanned transport vehicle 2660 is lowering package carriage 2670, or information indicating that the loading of a package into delivery box 2700 has been completed.

Guide structure 2710 is provided on top opening 2704 of enclosure 2701 and is slidable by being actuated by guide movable block 2715. Stated differently, guide structure 2710 is movable in the lengthwise direction of top opening 2704. Thus, when unmanned transport vehicle 2660 lowers the delivered package, even if package carriage 2670 is blown down by wind or the like, the package can be received by guide structure 2710 moving. Stated differently, guide structure 2710 is located at the upper part of enclosure 2701 and can receive a package in package carriage 2670 that descends via wire 2663 from unmanned transport vehicle 2660 located above delivery box 2700.

Guide movable block 2715 is an actuator that can slide guide structure 2710 disposed at top opening 2704 of enclosure 2701, under control by actuation controller 2716. Guide movable block 2715 is one example of a third actuator.

When package carriage 2670 and the package descend via wire 2663, actuation controller 2716 controls guide movable block 2715, based on the sensing result from sensor 2717, to move guide structure 2710 to cause package carriage 2670 and guide structure 2710 to overlap in a view from above in the vertical direction. Here, the sensing result from sensor 2717 includes obtaining position information indicating the position of package carriage 2670. The position information may include information indicating the relative positional relationship between package carriage 2670 and delivery box 2700, as well as information indicating the relative positional relationship between package carriage 2670 and transport box 2720. The position information may be information obtained based on image information obtained by a camera. The camera may be provided on unmanned transport vehicle 2660 or on package carriage 2670.

When unmanned transport vehicle 2660 is lowering package carriage 2670, actuation controller 2716 can control top lid actuator 2718 of guide structure 2710 to actuate the plurality of top lids 2712 so as to open or close opening 2711 of guide structure 2710.

Under control by actuation controller 2716, transport box 2720 can move through reception space 2704a and elevator path 2704b within enclosure 2701.

For example, as illustrated in (a) in FIG. 83, when unmanned transport vehicle 2660 lowers package carriage 2670, transport box 2720 moves under control by actuation controller 2716 so as to be positioned vertically below guide structure 2710. More specifically, when package carriage 2670 and package descend via wire 2663, actuation controller 2716 controls transporter 2721 of transport box 2720, based on the sensing result from sensor 2717, to move transport box 2720 to cause package carriage 2670 and transport box 2720 to overlap in a view from above in the vertical direction.

Transport box 2720 includes transporter 2721 and carriage structure 2722.

Transporter 2721 can move carriage structure 2722 along the path under control by actuation controller 2716. Stated differently, under control by actuation controller 2716, transporter 2721 can move through reception space 2704a as indicated by the dashed line arrows in (a) in FIG. 83, reach elevator path 2704b, and descend through elevator path 2704b illustrated in (b) in FIG. 83 to move to a location in front of box 2708 that is the receiver. More specifically, by actuation controller 2716 obtaining information indicating the receiver, once a package is received from package carriage 2670, transport box 2720 can move to a location in front of predetermined box 2708 that is the receiver. In this way, after the package moves from package carriage 2670 to transport box 2720, actuation controller 2716 can control transporter 2721 of transport box 2720 to move carriage structure 2722 along the path. Transporter 2721 is one example of an actuator for wire 2663. Reception space 2704a and elevator path 2704b are one example of a path.

Carriage structure 2722 includes base plate 2723 and unloading door 2724. Base plate 2723 can receive a package when unmanned transport vehicle 2660 lowers package carriage 2670, and can place the received package. Unloading door 2724 is a door for unloading a package toward box 2708, and can be opened when accommodating a package into box 2708 and closed after the package is accommodated. Unloading door 2724 can be opened and closed by a door actuator (not shown) provided in transport box 2720 being controlled by actuation controller 2716. When unloading door 2724 is opened, it can guide a package placed on base plate 2723 from base plate 2723 to the loading opening of box 2708. The package placed on base plate 2723 is discharged by a discharge unit (not illustrated in the drawings) that is disposed in carriage structure 2722, and accommodated into predetermined box 2708.

### Operation Example

Next, operation examples will be described with reference to FIG. 84, including an example of operations performed when package carriage 2670 is lowered into delivery box 2700 with the correct attitude and an example of operations performed when the attitude of package carriage 2670 is corrected after being misaligned before being lowered into delivery box 2700.

FIG. 84 illustrates an example of how package carriage 2670 and delivery box 2700 move when viewed from the front. More specifically, in FIG. 84, (a) illustrates an example in which transport box 2720 of delivery box 2700 receives a package when package carriage 2670 is in the correct attitude. In FIG. 84, (b) illustrates an example in which transport box 2720 of delivery box 2700 receives a package after the attitude of package carriage 2670 is corrected from being tilted relative to the horizontal direction. In FIG. 84, (c) illustrates an example in which transport box 2720 of delivery box 2700 receives a package after the attitude of package carriage 2670 is corrected from a state in which it was rotated around the vertical axis. Note that in FIG. 84, guide structure 2710 may be provided in delivery box 2700, and, alternatively may be not provided in delivery box 2700.

In (a) in FIG. 84, when unmanned transport vehicle 2660 lowers package carriage 2670, transport box 2720 moves under control by actuation controller 2716 so as to be positioned vertically below guide structure 2710. With this, as package carriage 2670 descends and is guided by guide structure 2710 to reach transport box 2720, transport box 2720 can receive a package from package carriage 2670.

In (b) in FIG. 84, when unmanned transport vehicle 2660 is lowering package carriage 2670, because the attitude of package carriage 2670 is tilted relative to the horizontal direction, the attitude control device of package carriage 2670, such as the one in the above-described embodiment, can correct the attitude of package carriage 2670 by controlling both the rotation rate of the rotary member and the direction of the rotary shaft of the rotary member. This makes the bottom surface of package carriage 2670 parallel to the horizontal direction.

In (c) in FIG. 84, when unmanned transport vehicle 2660 is lowering package carriage 2670, because the attitude of package carriage 2670 is off due to rotating around the vertical axis, the attitude control device of package carriage 2670, such as the one in the above-described embodiment, can correct the attitude of package carriage 2670 by controlling the rotation rate of the rotary member.

With this, when viewed from above in the vertical direction, package carriage 2670 assumes an attitude in which it is positioned within opening 2711 of guide structure 2710. Therefore, by lowering package carriage 2670, as package carriage 2670 is guided by guide structure 2710 to reach transport box 2720, transport box 2720 can receive a package from package carriage 2670.

### Advantageous Effects

Next, advantageous effects achieved by delivery box 2700 according to the present embodiment will be described.

In the control method according to the present embodiment, the system further includes a delivery reception box (delivery box 2700) for receiving a package from unmanned transport vehicle 2660. Delivery reception box includes: enclosure 2701; guide structure 2710 that is located at the upper part of enclosure 2701 and is for receiving a package in package carriage 2670 that descends via wire 2663 from unmanned transport vehicle 2660 located above the delivery reception box; and a third actuator (guide movable block 2715) for moving guide structure 2710. In the control method, when package carriage 2670 and package descend via wire 2663, the third actuator is controlled to move guide structure 2710 to cause package carriage 2670 and guide structure 2710 to overlap in a view from above in the vertical direction, based on position information indicating the position of package carriage 2670.

With this, even if package carriage 2670 shifts due to wind or the like when unmanned transport vehicle 2660 is lowering a package, since guide structure 2710 moves so that guide structure 2710 and package carriage 2670 overlap, guide structure 2710 can guide package carriage 2670. Therefore, the delivery reception box can receive a package from package carriage 2670.

In the control method according to the present embodiment, the system further includes a delivery reception box for receiving a package from unmanned transport vehicle 2660. The delivery reception box includes: enclosure 2701; and a carriage movement mechanism (transport box 2720) that is located in enclosure 2701, includes carriage structure 2722 and an actuator (transporter 2721), and moves carriage structure 2722 along a path by actuation by the actuator. In the control method, when package carriage 2670 and package descend via wire 2663, the actuator of the carriage movement mechanism is controlled to move carriage structure 2722 to cause package carriage 2670 and carriage structure 2722 to overlap in a view from above in the vertical direction, based on position information indicating the position of package carriage 2670. After the package has been moved from package carriage 2670 to carriage structure 2722, the actuator of the carriage movement mechanism is controlled to move carriage structure 2722 along the path.

With this, even if package carriage 2670 shifts due to wind or the like when unmanned transport vehicle 2660 is lowering a package, since guide structure 2710 moves so that guide structure 2710 and package carriage 2670 overlap, guide structure 2710 can guide package carriage 2670. Therefore, the delivery reception box can receive a package from package carriage 2670. Carriage structure 2722 can move the received package to a predetermined location. This allows a package to be placed in a predetermined location.

### VARIATION 1 OF EMBODIMENT 15

Hereinafter, since the basic configuration of delivery box 2700a according to the present variation is the same as the basic configuration of the delivery box according to Embodiment 1 and the like, the same reference signs as above are used and repeated description of the basic configuration of delivery box 2700a in the present variation will be omitted where appropriate. The configurations of the flying system, unmanned aerial vehicle, and package transport device, etc., according to Embodiment 1, etc., may be applied to the present variation.

First, a control method that uses delivery box 2700a according to the present embodiment will be described with reference to FIG. 85 and FIG. 86.

FIG. 85 illustrates an example of how package carriage 2670 and delivery box 2700a move when wind blows and viewed from the front. FIG. 86 is a block diagram illustrating an example of the delivery box according to Variation 1 of Embodiment 15.

As illustrated in FIG. 85 and FIG. 86, enclosure 2701 of delivery box 2700a includes placement portion 2704c located in enclosure 2701 for placing a package, base plate 2723 located in enclosure 2701 for placing a package, and protrusion 2704d formed in elevator path 2704b.

Placement portion 2704c is the bottom part that can receive and on which the package can be placed when unmanned transport vehicle 2660 delivers a package to delivery box 2700a. Since placement portion 2704c is located at the bottom surface of reception space 2704a, placement portion 2704c and enclosure 2701 together form reception space 2704a. Placement portion 2704c is one example of a first floor.

Base plate 2723 is a movable plate onto which a package that is placed on placement portion 2704c can be placed by being moved by first movement mechanism 2725. Since base plate 2723 can move along elevator path 2704b, functioning like an elevator, as a result of transporter 2721 being actuated under control by actuation controller 2716, the loaded package can be moved to a location in front of predetermined box 2708. Base plate 2723 is one example of a second floor.

Protrusion 2704d is a projection extending outward in a way that narrows a portion of elevator path 2704b. More specifically, protrusion 2704d extends into elevator path 2704b in a way that it does not come into contact with base plate 2723 that moves vertically in elevator path 2704b. A plurality of protrusions 2704d are formed to correspond to the plurality of boxes 2708 arranged vertically. More specifically, protrusion 2704d is formed on the top end edge of each of the plurality of boxes 2708.

Delivery box 2700a further includes first movement mechanism 2725 and second movement mechanism 2726.

First movement mechanism 2725 is located in enclosure 2701 and includes actuator 2725a for moving a package placed on placement portion 2704c. Stated differently, under control by actuation controller 2716, first movement mechanism 2725 causes actuator 2725a to move the package. First movement mechanism 2725 may move a package from placement portion 2704c to base plate 2723 by, for example, operating a push rod using actuator 2725a and pushing the package with the push rod. Placement portion 2704c itself may be a belt conveyor, in which case the package may be moved by actuator 2725a actuating the belt conveyor.

Second movement mechanism 2726 is located in enclosure 2701, includes transporter 2721, and can move base plate 2723 along the path via the actuation of transporter 2721. Stated differently, under control by actuation controller 2716, second movement mechanism 2726 causes transporter 2721 to move the package. Transporter 2721 is one example of an actuator for second movement mechanism 2726.

After a package in package carriage 2670 that descends via wire 2663 from unmanned transport vehicle 2660 located above delivery box 2700a is placed on placement portion 2704c, actuation controller 2716 can control actuator 2725a of first movement mechanism 2725 to move the package from placement portion 2704c to base plate 2723.

After the package has moved to base plate 2723, second movement mechanism 2726 can control transporter 2721 to move base plate 2723 along the path.

Next, operation examples will be described with reference to FIG. 85, including an example of operations performed when package carriage 2670 has been lowered onto base plate 2723 and an example of operations performed when the package has shifted from the pickup position from base plate 2723 due to, for example, wind after package carriage 2670 has descended, and the package is moved to base plate 2723.

More specifically, in FIG. 85, (a) illustrates an example in which package carriage 2670 descends onto base plate 2723 without being affected by wind, etc., and a package is received. In FIG. 85, (b) illustrates an example in which the position of a package received from package carriage 2670 has shifted from base plate 2723 due to package carriage 2670 swaying from wind, etc., and the package is moved to base plate 2723. In FIG. 85, (c) illustrates an example of a package that has been moved to base plate 2723 being accommodated into a predetermined box 2708 after base plate 2723 moves to a location in front of the predetermined box 2708.

As illustrated in (a) in FIG. 85, since package carriage 2670 lowered by unmanned transport vehicle 2660 reaches base plate 2723, base plate 2723 can receive a package from package carriage 2670. When base plate 2723 receives a package from package carriage 2670, it moves to a location in front of a predetermined box 2708. The package is moved by another actuator 2726a, rides onto protrusion 2704d from base plate 2723, and is accommodated into predetermined box 2708.

As illustrated in (b) in FIG. 85, due to package carriage 2670 swaying from wind, etc., when package carriage 2670 descends to placement portion 2704c, which is a position shifted from base plate 2723, placement portion 2704c can receive a package from package carriage 2670. First movement mechanism 2725 moves the package from placement portion 2704c onto base plate 2723 by actuating actuator 2725a. More specifically, the package can be moved from placement portion 2704c via protrusion 2704d onto base plate 2723 by actuator 2725a moving the package placed on placement portion 2704c. As a result, a package can be guided onto base plate 2723 without the package getting caught in the gap between base plate 2723 and protrusion 2704d.

As illustrated in (c) in FIG. 85, when a package is placed on base plate 2723, base plate 2723 moves along elevator path 2704b like an elevator as a result of being actuated by transporter 2721 of second movement mechanism 2726 controlled by actuation controller 2716. Base plate 2723 moves to a location in front of predetermined box 2708. The package is moved by another actuator 2726a, rides onto protrusion 2704d from base plate 2723, and is accommodated into predetermined box 2708. More specifically, when base plate 2723 moves to a location in front of predetermined box 2708, the package placed on base plate 2723 can be accommodated into predetermined box 2708 by another actuator 2726a moving the package from base plate 2723 via protrusion 2704d. As a result, a package can be guided onto predetermined box 2708 without the package getting caught in the gap between base plate 2723 and protrusion 2704d.

Next, advantageous effects achieved by the control method in delivery box 2700a according to the present variation will be described.

In the control method according to the present variation, the system further includes a delivery reception box (delivery box 2700a) for receiving a package from unmanned transport vehicle 2660. Delivery reception box includes: enclosure 2701 including a first floor (placement portion 2704c) for placing a package, a second floor (base plate 2723) located in enclosure 2701 for placing a package, first movement mechanism 2725 located in enclosure 2701 that includes actuator 2725a for moving a package placed on the first floor, and second movement mechanism 2726 located in enclosure 2701 that includes an actuator (transporter 2721) and moves the second floor along a path by actuation of the actuator. In the control method, after a package in package carriage 2670, which descends via wire 2663 from unmanned transport vehicle 2660 located above the delivery reception box, is placed on the first floor, actuator 2725a of first movement mechanism 2725 is controlled to move the package from the first floor to the second floor, and after the package has been moved to the second floor, the actuator of second movement mechanism 2726 is controlled to move the second floor along the path.

With this, even if package carriage 2670 shifts due to wind or the like when unmanned transport vehicle 2660 is lowering a package, the package can be received from package carriage 2670 on the first floor. Since the package placed on the first floor can be moved to the second floor by first movement mechanism 2725, the package can be moved to a predetermined location within enclosure 2701.

### VARIATION 2 OF EMBODIMENT 15

Hereinafter, since the basic configuration of delivery box 2700b according to the present variation is the same as the basic configuration of the delivery box according to Embodiment 1 and the like, the same reference signs as above are used and repeated description of the basic configuration of delivery box 2700b in the present variation will be omitted where appropriate. The configurations of the flying system, unmanned aerial vehicle, and package transport device, etc., according to Embodiment 1, etc., may be applied to the present variation.

First, a control method that uses delivery box 2700b according to the present embodiment will be described with reference to FIG. 87 and FIG. 88.

FIG. 87 is a plan view illustrating an example of delivery box 2700b according to Variation 2 of Embodiment 15. FIG. 88 is a side view illustrating an example of delivery box 2700b according to Variation 2 of Embodiment 15. FIG. 87 illustrates an example in which delivery box 2700b is located off to the side of the road, beyond the edge line of the road, and is arranged facing the road.

In a view from above in the vertical direction, enclosure 2701 of delivery box 2700b according to the present variation includes first first side 2701a, first second side 2701b adjacent to first first side 2701a, first third side 2701c adjacent to first second side 2701b, and first fourth side 2701d adjacent to both first third side 2701c and first first side 2701a.

More specifically, in a top view, the shape of enclosure 2701 is rectangular. Even more specifically, first first side 2701a is approximately parallel to first third side 2701c, both first first side 2701a and first third side 2701c are of the same length, both first second side 2701b and first fourth side 2701d are of the same length, and first first side 2701a is longer than first second side 2701b. First second side 2701b is connected to one end of first first side 2701a and one end of first third side 2701c, and first third side 2701c is connected to the other end of first first side 2701a and the other end of first third side 2701c.

Enclosure 2701 includes first flap 2705, which is connected to first first side 2701a and configured to open and close top opening 2704 of enclosure 2701, and second flap 2706, which is connected to first third side 2701c and configured to open and close top opening 2704 of enclosure 2701.

First flap 2705 is a lid that includes second first side 2705a and second second side 2705b adjacent to second first side 2705a. First flap 2705 further includes second third side 2705c that is parallel to second first side 2705a, and second fourth side 2705d that is parallel to second second side 2705b. Second second side 2705b is connected to one end of second first side 2705a and one end of second third side 2705c, and second fourth side 2705d is connected to the other end of second first side 2705a and the other end of second third side 2705c. Second first side 2705a is connected to first first side 2701a. First flap 2705 is positioned below rail 7 when top opening 2704 of enclosure 2701 is opened.

Second flap 2706 is a lid that includes third first side 2706a and third second side 2706b adjacent to third first side 2706a. Second flap 2706 further includes third third side 2706c that is parallel to third first side 2706a, and third fourth side 2706d that is parallel to third second side 2706b. Third second side 2706b is connected to one end of third first side 2706a and one end of third third side 2706c, and third fourth side 2706d is connected to the other end of third first side 2706a and the other end of third third side 2706c. Third first side 2706a is connected to first third side 2701c.

Stated differently, first flap 2705 and second flap 2706 are pivotably connected to enclosure 2701.

Note that first flap 2705 and second flap 2706 may have a configuration similar to the aforementioned top lid and may be pivoted by the top lid actuator.

Second second side 2705b is set to be longer than third second side 2706b. Stated differently, as illustrated in FIG. 88, the length of first flap 2705 is set to be longer than the length of second flap 2706 in a view of first flap 2705 and second flap 2706 from the side.

In delivery box 2700b configured in this way, delivery box 2700b is positioned such that first first side 2701a is parallel to rail 7 in a view of the road, delivery box 2700b, and rail 7 on which unmanned transport vehicle 2660 travels from above in the vertical direction. Delivery box 2700b is further positioned such that rail 7, first first side 2701a, and first third side 2701c are arranged in this order in the direction moving away from the centerline of the road. Stated differently, because first flap 2705 is positioned facing the road more than enclosure 2701 relative to second flap 2706, even if package carriage 2670 shifts due to wind or the like when unmanned transport vehicle 2660 is lowering a package, first flap 2705 and second flap 2706 can guide the package. This makes it possible to inhibit packages from falling onto the road.

Next, advantageous effects achieved by the control method in delivery box 2700b according to the present variation will be described.

In the control method according to the present variation, in a view from above in the vertical direction, enclosure 2701 includes first first side 2701a, first second side 2701b adjacent to first first side 2701a, first third side 2701c adjacent to first second side 2701b, and first fourth side 2701d adjacent to both first third side 2701c and first first side 2701a, and enclosure 2701 includes first flap 2705 connected to first first side 2701a and configured to open and close top opening 2704 of enclosure 2701, and second flap 2706 connected to first third side 2701c and configured to open and close top opening 2704 of enclosure 2701.

With this, first flap 2705 and second flap 2706 can be arranged along first first side 2701a and first third side 2701c of enclosure 2701. Therefore, when a package is being accommodated from top opening 2704 of enclosure 2701, even if package carriage 2670 shifts due to wind or the like when unmanned transport vehicle 2660 is lowering a package, first flap 2705 and second flap 2706 can guide the package.

In the control method according to the present variation, first first side 2701a and first third side 2701c have a same length, first second side 2701b and first fourth side 2701d have a same length, first first side 2701a is longer than first second side 2701b, and delivery reception box (delivery box 2700b) is arranged facing a road. In a view of the road, the delivery reception box, and rail 7 from above in the vertical direction, first first side 2701a is parallel to rail 7, and the delivery reception box is further arranged to have rail 7, first first side 2701a, and first third side 2701c arranged in listed order in a direction moving away from a centerline of road. First flap 2705 includes second first side 2705a and second second side 2705b adjacent to second first side 2705a, second first side 2705a is connected to first first side 2701a, second flap 2706 includes third first side 2706a and third second side 2706b adjacent to third first side 2706a, third first side 2706a is connected to first third side 2701c, and second second side 2705b is longer than third second side 2706b.

With this, because first flap 2705 including second second side 2705b that is longer than third second side 2706b can be arranged adjacent to the road side, even if package carriage 2670 shifts due to wind or the like when unmanned transport vehicle 2660 is lowering a package, first flap 2705 and second flap 2706 can guide the package. This makes it possible to inhibit packages from falling onto the road.

### [Embodiment 16]

Unmanned transport system 2800 according to the present embodiment differs from Embodiment 1 and the like in that support structure 2810 is provided on vehicle main body 2802 of unmanned transport vehicle 2801, and package carriage 2820 includes first metal structure 2811 and second metal structure 2812. Hereinafter, since the basic configuration of unmanned transport system 2800 according to the present embodiment is the same as the basic configuration of the unmanned transport system according to Embodiment 1 and the like, the same reference signs as above are used and repeated description of the basic configuration of unmanned transport system 2800 in the present embodiment will be omitted where appropriate. The configurations of the delivery system, unmanned aerial vehicle, and package transport device, etc., according to Embodiment 1, etc., may be applied to the present embodiment.

### Function and Configuration

First, unmanned transport system 2800 according to the present embodiment will be described with reference to FIG. 89 and FIG. 90A through FIG. 90C.

FIG. 89 is a block diagram illustrating an example of unmanned transport system 2800 according to Embodiment 16. FIG. 90A illustrates an example of unmanned transport vehicle 2801 and package carriage 2820 in unmanned transport system 2800 according to Embodiment 16. FIG. 90B illustrates another example of unmanned transport vehicle 2801 and package carriage 2820 in unmanned transport system 2800 according to Embodiment 16. Note that illustration of rail 7 and connector 2803 is omitted in FIG. 90A and FIG. 90B. FIG. 90C is a schematic diagram illustrating an example of the positional relationship between first other end 2811c and second other end 2812c in support structure 2810.

### Function and Configuration

As illustrated in FIG. 89 through FIG. 90B, unmanned transport system 2800 includes unmanned transport vehicle 2801, support structure 2810, package carriage 2820, first winch 2831, and control processor 2833. Unmanned transport system 2800 is one example of a system.

Unmanned transport vehicle 2801 can proceed along rail 7. Stated differently, unmanned transport vehicle 2801 can transport package carriage 2820 by traveling along rail 7.

More specifically, unmanned transport vehicle 2801 is provided with vehicle main body 2802 and connector 2803. Although unmanned transport vehicle 2801 according to the present embodiment includes two connectors 2803 (for example, the first connector and the second connector), unmanned transport vehicle 2801 may include three or more connectors 2803. Connector 2803 is one example of an arm.

Vehicle main body 2802 is elongated in the lengthwise direction of rail 7. Vehicle main body 2802 is provided with a first connector, a second connector, support structure 2810, etc. Vehicle main body 2802 according to the present embodiment, which is structured to include two support structures 2810, may include a first recess for placing one support structure 2810 and package carriage 2820, and a second recess for placing the other support structure 2810 and package carriage 2820. Due to such a configuration, when viewing the side of vehicle main body 2802 in the crosswise direction of vehicle main body 2802, vehicle main body 2802 may be T-shaped.

First connector is positioned on one side in the traveling direction of vehicle main body 2802 of unmanned transport vehicle 2801, and second connector is positioned on the other side in the traveling direction of vehicle main body 2802 of unmanned transport vehicle 2801.

First connector includes wheel 2803a for traveling along rail 7, and an arm to which wheel 2803a is connected and which is connected to vehicle main body 2802 of unmanned transport vehicle 2801. Second connector also includes wheel 2803a for traveling along rail 7, and an arm to which wheel 2803a is connected and which is connected to vehicle main body 2802 of unmanned transport vehicle 2801.

Wheel 2803a of the first connector and wheel 2803a of the second connector are arranged above rail 7 when unmanned transport vehicle 2801 travels along rail 7. Wheel 2803a of the first connector is disposed at the top end of the first connector on one side of the first connector. Wheel 2803a of the second connector is disposed at the top end of the second connector on one side of the second connector. In other words, wheel 2803a of the first connector and wheel 2803a of the second connector are disposed on the same side of each connector.

In the present embodiment, the bottom ends of the arm-shaped first connector and the arm-shaped second connector are provided on vehicle main body 2802 so as to be capable of pivoting around the crosswise direction of vehicle main body 2802 as an axis. In the present embodiment, the arm-shaped first connector and the arm-shaped second connector can pivot with respect to vehicle main body 2802 by actuation by each arm actuator 2834 (one example of an actuator) for actuating the connectors.

Each arm actuator 2834 can be controlled by control processor 2833 to push or pull the first connector and the second connector. With this, arm actuators 2834 can pivot the first connector and the second connector with respect to vehicle main body 2802. For example, unmanned transport vehicle 2801 can transition between a first distance state where the distance between vehicle main body 2802 and rail 7 is a first distance, and a second distance state where the distance between vehicle main body 2802 and rail 7 is a second distance greater than the first distance, by the actuation by an actuator.

Support structure 2810 is provided on vehicle main body 2802 and is coupleable to package carriage 2820. Support structure 2810 is capable of supporting package carriage 2820 connected to unmanned transport vehicle 2801. Accordingly, package carriage 2820 is attached to vehicle main body 2802 by support structure 2810.

Support structure 2810 includes first metal structure 2811 that includes first part 2811a, and second metal structure 2812 that includes second part 2812a.

First metal structure 2811 extends from a first one end connected to unmanned transport vehicle 2801 towards first part 2811a of support structure 2810 located vertically downwards, turns back at first part 2811a of support structure 2810, and then extends to first other end 2811c located vertically upwards. Stated differently, first metal structure 2811 includes a long section that extends in the vertical direction from the lower surface of vehicle main body 2802, first part 2811a that bends and extends in a direction intersecting the long section from the bottom end of the long section, and a protrusion that projects vertically upwards from the leading end of first part 2811a. The first one end is coupled to the lower surface of vehicle main body 2802.

Second metal structure 2812 extends from a second one end connected to unmanned transport vehicle 2801 towards second part 2812a of support structure 2810 located vertically downwards, turns back at second part 2812a of support structure 2810, and then extends to second other end 2812c located vertically upwards. Stated differently, second metal structure 2812 includes a long section that extends in the vertical direction from the lower surface of vehicle main body 2802, second part 2812a that bends and extends in a direction intersecting the long section from the bottom end of the long section, and a protrusion that projects vertically upwards from the leading end of second part 2812a. The second one end is coupled to the lower surface of vehicle main body 2802.

Second part 2812a extends in a direction opposite to that of first part 2811a. First part 2811a and second part 2812a extend along the crosswise direction of vehicle main body 2802, in a direction away from vehicle main body 2802.

Therefore, as illustrated in FIG. 90C, first metal structure 2811 and second metal structure 2812 are arranged symmetrically. In this case, in a view of support structure 2810 from above in the vertical direction, it can be said that first metal structure 2811 and second metal structure 2812 are arranged such that the straight single-dotted line connecting first other end 2811c and second other end 2812c intersects the straight double-dotted line connecting the center point of first part 2811a of support structure 2810 and the center point of second part 2812a of support structure 2810.

In the present embodiment, support structure 2810 is a pair of hooks that includes first part 2811a and second part 2812a. One set of the pair of hooks includes one hook arranged on one side of vehicle main body 2802 and the other hook arranged on the other side of vehicle main body 2802. Since support structure 2810 can attach one package carriage 2820, two package carriages 2820 can be attached to vehicle main body 2802. Note that one pair or three or more pairs of hooks (support structures 2810) may be provided on vehicle main body 2802.

Support structure 2810 is arranged on the bottom end surface of vehicle main body 2802. Package carriage 2820 is coupled to support structure 2810 by the pair of couplers 2821 of package carriage 2820 engaging with the pair of hooks (support structure 2810) one-to-one.

In the present embodiment, support structure 2810 is not limited to a pair of hooks. Support structure 2810 may be an engaging structure capable of grabbing package carriage 2820, and may be a clamping structure capable of clamping package carriage 2820. Support structure 2810 may be a simple columnar member, and may be a ring-shaped member. Stated differently, package carriage 2820 may be capable of hooking onto support structure 2810.

In the present embodiment, package carriage 2820 includes a pair of couplers 2821. The pair of couplers 2821 includes third part 2822a and fourth part 2822b. The pair of couplers 2821 may be a pair of hooks capable of coupling one-to-one with the pair of hooks (support structure 2810), may be an engaging structure capable of grabbing support structure 2810, and may be a clamping structure capable of clamping support structure 2810. The pair of couplers 2821 may be columnar members or ring-shaped members capable of hooking onto support structure 2810.

First part 2811a of the pair of hooks (support structure 2810) and second part 2812a of the pair of hooks (support structure 2810) are arranged a predetermined length apart from each other. Stated differently, first part 2811a and second part 2812a are disposed spaced apart from each other. Third part 2822a of the pair of couplers 2821 and fourth part 2822b of the pair of couplers 2821 are arranged a predetermined length apart from each other. Stated differently, third part 2822a and fourth part 2822b are disposed spaced apart from each other.

Due to the configuration of support structure 2810 and the pair of couplers 2821, first part 2811a of support structure 2810 couples with third part 2822a of the pair of couplers 2821, and second part 2812a of support structure 2810 couples with fourth part 2822b of the pair of couplers 2821. In this case, package carriage 2820 is in a first state in which it is supported by support structure 2810. When package carriage 2820 is in the first state, unmanned transport vehicle 2801 travels along rail 7.

When first winch 2831 of unmanned transport vehicle 2801 reels in wire 2805, the coupling between first part 2811a of support structure 2810 and third part 2822a of the pair of couplers 2821 is released, and the coupling between second part 2812a of support structure 2810 and fourth part 2822b of the pair of couplers 2821 is released. In such cases, package carriage 2820 is in a second state in which it is not supported by support structure 2810 and is suspended by wire 2805. When package carriage 2820 is in the second state, package carriage 2820 is lowered toward the destination point located vertically below unmanned transport vehicle 2801 via wire 2805.

Here, the control of the reeling of wire 2805 is executed by control processor 2833. Control processor 2833 is one example of the controller.

For example, to transition package carriage 2820 from the second state to the first state, control processor 2833 (1) controls first winch 2831 to reel in wire 2805 until the length of wire 2805 extending from unmanned transport vehicle 2801 to package carriage 2820 becomes a first length. With this, the height of third part 2822a of package carriage 2820 becomes higher than the position of first part 2811a of support structure 2810, and the height of fourth part 2822b of package carriage 2820 becomes higher than the position of second part 2812a of support structure 2810.

Next, control processor 2833 (2) controls attitude control device 2870 to rotate package carriage 2820. With this, third part 2822a of package carriage 2820 is positioned directly above first part 2811a of support structure 2810, and fourth part 2822b of package carriage 2820 is positioned directly above second part 2812a of support structure 2810.

Next, control processor 2833 (3) controls first winch 2831 to reel out wire 2805. With this, third part 2822a of package carriage 2820 is coupled to first part 2811a of support structure 2810, and fourth part 2822b of package carriage 2820 is coupled to second part 2812a of support structure 2810, thereby changing package carriage 2820 to the first state.

A package to be transported by unmanned transport vehicle 2801 can be put in package carriage 2820. Stated differently, package carriage 2820 includes an accommodation space for accommodating a package.

The upper surface of package carriage 2820 is connected to wire 2805. Since control processor 2833 controls first winch 2831 to reel out or reel in wire 2805, package carriage 2820 can ascend by the reeling in of wire 2805 and descend by the reeling out of wire 2805.

Package carriage 2820 includes attitude control device 2870 that controls the attitude of package carriage 2820 suspended by wire 2805 by controlling the rotary member. Attitude control device 2870 can, for example, correct the attitude of package carriage 2820 to the correct attitude by controlling the rotary member, examples of which include a reaction wheel and a flywheel.

First winch 2831 is connected to unmanned transport vehicle 2801 and is capable of reeling out and in wire 2805. Stated differently, first winch 2831, under control by control processor 2833, reels out wire 2805 to raise package carriage 2820 and reels in wire 2805 to lower package carriage 2820. First winch 2831, under control by control processor 2833, can change package carriage 2820 between the first state and the second state. In the present disclosure, the "winch" may be read as a "reel".

The correction of the attitude of package carriage 2820 is executed by control processor 2833.

For example, control processor 2833 obtains the sensing result from sensor 2836 capable of detecting the attitude of package carriage 2820, and based on the obtained sensing result, controls the rotary member of attitude control device 2870 to orient package carriage 2820 to the target attitude. Stated differently, attitude control device 2870 can recognize the attitude of package carriage 2820 based on the sensing result from sensor 2836 that sensed the attitude of package carriage 2820. Based on the sensing result, if the attitude of package carriage 2820 is not in the target attitude, control processor 2833 controls attitude control device 2870 to orient package carriage 2820 to the target attitude. Sensor 2836 is, for example, a camera sensor or an angular speed sensor.

### Advantageous Effects

Next, advantageous effects achieved by unmanned transport system 2800 according to the present embodiment will be described.

As described above, in unmanned transport system 2800 according to the present embodiment, unmanned transport vehicle 2801 transports package carriage 2820 by traveling along rail 7. Unmanned transport vehicle 2801 further includes support structure 2810 that is connected to unmanned transport vehicle 2801 and is for supporting package carriage 2820. Unmanned transport vehicle 2801 and package carriage 2820 can transition between the first state in which package carriage 2820 is supported by support structure 2810 and the second state in which package carriage 2820 is not supported by support structure 2810 and is suspended by wire 2805. Unmanned transport vehicle 2801 and package carriage 2820 are in the first state when traveling along rail 7, and in the second state when lowering package carriage 2820 toward the destination point located vertically below unmanned transport vehicle 2801 via wire 2805.

With this, as a result of package carriage 2820 entering the first state, unmanned transport vehicle 2801 can travel while supporting package carriage 2820. Unmanned transport vehicle 2801 can therefore deliver the package accommodated inside package carriage 2820 from the sender to the destination point of the receiver.

As a result of package carriage 2820 entering the second state, stationary unmanned transport vehicle 2801 can lower package carriage 2820, thereby enabling the delivery of the package to the destination point of the receiver.

As described above, in unmanned transport system 2800 according to the present embodiment, support structure 2810 includes first part 2811a and second part 2812a. First part 2811a of support structure 2810 and second part 2812a of support structure 2810 are a predetermined length apart. Package carriage 2820 includes third part 2822a and fourth part 2822b. Third part 2822a of package carriage 2820 and fourth part 2822b of package carriage 2820 are the predetermined length apart. In the first state, first part 2811a of support structure 2810 and third part 2822a of package carriage 2820 are coupled, and second part 2812a of support structure 2810 and fourth part 2822b of package carriage 2820 are coupled. To transition unmanned transport vehicle 2801 and package carriage 2820 to the first state, control processor 2833 (1) controls first winch 2831 to reel in wire 2805 until the length of wire 2805 extending from unmanned transport vehicle 2801 to package carriage 2820 becomes a first length which positions third part 2822a of package carriage 2820 higher than first part 2811a of support structure 2810 and positions fourth part 2822b of package carriage 2820 higher than second part 2812a of support structure 2810, (2) controls attitude control device 2870 to rotate package carriage 2820 to position third part 2822a of package carriage 2820 directly above first part 2811a of support structure 2810 and position fourth part 2822b of package carriage 2820 directly above second part 2812a of support structure 2810, and (3) controls first winch 2831 to reel out wire 2805 to couple third part 2822a of package carriage 2820 to first part 2811a of support structure 2810 and couple fourth part 2822b of package carriage 2820 to second part 2812a of support structure 2810.

With this, control processor 2833 controls first winch 2831 to place package carriage 2820 in the first state. This allows unmanned transport vehicle 2801 to travel while supporting package carriage 2820.

### [Embodiment 17]

Unmanned transport system 2900 according to the present embodiment differs from Embodiment 16 and the like in that package carriage 2820 includes second winch 2832 and the like. Hereinafter, since the basic configuration of unmanned transport system 2900 according to the present embodiment is the same as the basic configuration of the unmanned transport system according to Embodiment 1 and the like, the same reference signs as above are used and repeated description of the basic configuration of unmanned transport system 2900 in the present embodiment will be omitted where appropriate. The configurations of the delivery system, unmanned aerial vehicle, and package transport device, etc., according to Embodiment 1, etc., may be applied to the present embodiment.

### Function and Configuration

First, unmanned transport system 2900 according to the present embodiment will be described with reference to FIG. 91 through FIG. 97C.

FIG. 91 is a block diagram illustrating an example of unmanned aerial vehicle 2910, package carriage 2820, and delivery box 2950 in unmanned transport system 2900. FIG. 92 illustrates an example of unmanned aerial vehicle 2910 and package carriage 2820 in unmanned transport system 2900 descending. FIG. 93 illustrates an example of one lid 2952d that is openable and closable and includes slit 2952e. FIG. 94A illustrates an example of a package being unloaded and package carriage 2820 in unmanned transport system 2900 ascending. FIG. 94B illustrates an example of package carriage 2820 and unmanned aerial vehicle 2910 in unmanned transport system 2900 ascending. FIG. 94C illustrates an example of closing first lid 2952a and second lid 2952b and closing lid 2959 of a guide structure of enclosure 2951. FIG. 95A illustrates an example of unmanned aerial vehicle 2910 with the capability to fly descending. FIG. 95B illustrates an example of package carriage 2820 descending to unload a package after unmanned aerial vehicle 2910 with the capability to fly has descended. FIG. 95C illustrates an example of a package being unloaded from package carriage 2820 and unmanned aerial vehicle 2910 in unmanned transport system 2900 ascending. FIG. 95D illustrates an example of moving a package placed in a temporary storage area to predetermined package compartment 2953. FIG. 96A illustrates an example of collecting a package. FIG. 96B illustrates an example of lowering unmanned aerial vehicle 2910 and package carriage 2820 to collect a package. FIG. 96C illustrates an example of a package being unloaded from package carriage 2820 and unmanned aerial vehicle 2910 in unmanned transport system 2900 ascending after collecting the package. FIG. 97A illustrates an example of unmanned aerial vehicle 2910 in unmanned transport system 2900 descending while avoiding an obstacle. FIG. 97B illustrates an example of a package being unloaded from package carriage 2820 and unmanned aerial vehicle 2910 in unmanned transport system 2900 ascending. FIG. 97C illustrates an example of package being unloaded and unmanned aerial vehicle 2910 in unmanned transport system 2900 ascending. Note that illustration of the rail and the connector according to the present disclosure is omitted in FIG. 91 through FIG. 97C.

As illustrated in FIG. 91 and (a1) through (a3) in FIG. 92, unmanned transport system 2900 includes unmanned transport vehicle 2901, protective case 2911, first winch 2831, package carriage 2820, second winch 2832, unmanned aerial vehicle 2910, control processor 2933, and delivery box 2950.

Unmanned transport vehicle 2901 is, for example, a mobile body equipped with a wheel (omitted from the figure). Unmanned transport vehicle 2901 not only flies in the air, but can also travel along rails provided above the ground. While coupled to first wire 2941, unmanned transport vehicle 2901 can transport packages by traveling along rails in a state in which it is coupled to package carriage 2820. Unmanned transport vehicle 2901 may be a flying body such as a drone. Stated differently, unmanned transport vehicle 2901 may include a propeller, and may be configured not including a propeller.

Unmanned transport vehicle 2901 includes a vehicle main body, control processor 2933, a connector (suspension arm), an arm actuator, a wheel, wire control module 2934, and first winch 2831. Note that the vehicle main body may include first wire 2941 as an element. Illustration of the connector, the arm actuator, and the wheel is omitted in FIG. 91 and the like.

The vehicle main body is a rectangular mobile body. The vehicle main body includes the connector and supports first winch 2831 at a predetermined attitude. Vehicle main body is one example of the main body.

Note that the vehicle main body may include a plurality of propellers. In such cases, the vehicle main body may provide thrust to unmanned transport vehicle 2901 via the rotational actuation of the propeller actuation motor provided in the vehicle main body.

The connector is a hook capable of connecting to a rail, and can therefore be hooked onto the rail. The bottom end of connector is coupled to the vehicle main body, and the wheel, which can rotate and make contact with the rail, is coupled to the other end, i.e., the leading end. The vehicle main body is provided with a plurality of connectors. Note that the connector may be provided with a motor that rotates the wheel. The arm, hook, connector, etc., described in the above embodiments may be used for the connector in the present embodiment. Note that the connector may include both the arm and the wheel, and, alternatively may include only the arm.

The arm actuator can actuate the connector to displace the connector and change the attitude of the connector. More specifically, the arm actuator can be controlled by control processor 2933 to rotate the connector around an axis extending in the lengthwise direction of the rail, thereby making the wheel contact the rail and connecting the connector to the rail. Arm actuator can be controlled by control processor 2933 to rotate the connector around an axis extending in the lengthwise direction of the rail, thereby separating the wheel from the rail and disconnecting from the rail. The arm actuator is one example of a second actuator for actuating connector.

The wheel is a roller that can contactably rotate freely with respect to the rail, allowing it to travel on the rail. The rotary shaft of the wheel extends in a direction orthogonal to the lengthwise direction of the rail. When the connector is connected to the rail, the wheel provided on the connector rotates around the axis of the rotary shaft.

Control processor 2933 can control the flying condition of unmanned transport vehicle 2901. More specifically, flying states of unmanned transport vehicle 2901 include forward, backward, rotate right, rotate left, hovering, etc. Control processor 2933 controls the inclination of the vehicle main body of unmanned transport vehicle 2901 relative to the horizontal direction and controls the rotation rates of the propellers by controlling the propeller actuation motors, based on the position information, the angular speed information, the acceleration information, and the speed information.

Unmanned transport vehicle 2901 is connected to package carriage 2820 via first wire 2941. Stated differently, one end of first wire 2941 is coupled to unmanned transport vehicle 2901, and the other end of first wire 2941 is coupled to unmanned transport vehicle 2901.

By controlling wire control module 2934, control processor 2933 enables wire control module 2934 to reel in and out first wire 2941. Stated differently, the reeling out and in of first wire 2941 are performed by wire control module 2934 actuating and controlling first winch 2831. More specifically, when wire control module 2934 obtains a reel-out instruction for first wire 2941 from control processor 2933, it may control first winch 2831 to reel out first wire 2941 and separate package carriage 2820 from unmanned transport vehicle 2901. When wire control module 2934 obtains a reel-in instruction for first wire 2941 from control processor 2933, it may control first winch 2831 to reel in first wire 2941 and collect package carriage 2820. Wire control module 2934 may be integrally provided with first winch 2831.

First winch 2831 is provided below unmanned transport vehicle 2901 and is capable of reeling out and in first wire 2941. Stated differently, first winch 2831, under control by control processor 2933, reels out first wire 2941 to raise package carriage 2820 and reels in first wire 2941 to lower package carriage 2820.

A package to be transported by unmanned transport vehicle 2901 can be put in package carriage 2820, which is connected to first wire 2941. Stated differently, package carriage 2820 includes an accommodation space for accommodating a package.

The upper surface of package carriage 2820 is connected to first wire 2941. Since control processor 2933 controls first winch 2831 to reel out or reel in first wire 2941, package carriage 2820 can ascend by the reeling in of first wire 2941 and descend by the reeling out of first wire 2941.

Package carriage 2820 is provided with second winch 2832. Second winch 2832 is provided below package carriage 2820 and is capable of reeling out and in second wire 2942. Stated differently, second winch 2832, under control by control processor 2933, reels out second wire 2942 to raise unmanned aerial vehicle 2910 and reels in second wire 2942 to lower unmanned aerial vehicle 2910.

Unmanned aerial vehicle 2910 is connected to package carriage 2820 via second wire 2942. Stated differently, one end of second wire 2942 is coupled to package carriage 2820, and the other end of second wire 2942 is coupled to protective case 2911.

Unmanned aerial vehicle 2910 is covered by protective case 2911 for protecting unmanned aerial vehicle 2910. Unmanned aerial vehicle 2910 is fixed to protective case 2911 and is connected to second wire 2942 via protective case 2911. Protective case 2911 covers the entirety of unmanned aerial vehicle 2910. Note that unmanned aerial vehicle 2910 need not be provided with protective case 2911. In such cases, second wire 2942 is directly connected to unmanned aerial vehicle 2910. Note that protective case 2911 may cover only a part of unmanned aerial vehicle 2910.

Unmanned aerial vehicle 2910 is, for example, a flying body capable of flight such as a drone. Unmanned aerial vehicle 2910 flies while coupled to second wire 2942 via protective case 2911. Accordingly, the longer second wire 2942 is unreeled from second winch 2832 of package carriage 2820, the farther unmanned aerial vehicle 2910 can move away from package carriage 2820.

By controlling wire control module 2934, control processor 2933 enables second winch 2832 to reel in and out second wire 2942. Stated differently, the reeling out and in of second wire 2942 are performed by wire control module 2934 actuating and controlling second winch 2832. More specifically, when wire control module 2934 obtains a reel-out instruction for second wire 2942 from control processor 2933, it may control second winch 2832 to reel out second wire 2942 and separate package carriage 2820 from unmanned transport vehicle 2901. When wire control module 2934 obtains a reel-in instruction for second wire 2942 from control processor 2933, it may control second winch 2832 to reel in second wire 2942 and collect package carriage 2820.

Note that wire control module 2934 may include separate modules for actuating and controlling first winch 2831 and for actuating and controlling second winch 2832.

Delivery box 2950 is a delivery reception box for receiving packages from unmanned transport vehicle 2901 or for collecting packages. Delivery box 2950 may be provided with order screen 2963 via which ordering of products deliverable to delivery box 2950 or requesting package collection is possible.

As illustrated in FIG. 91 and in (a1) through (b2) in FIG. 92, delivery box 2950 includes enclosure 2951, box structure 2952, a plurality of package compartments 2953, sensor 2958, first actuator 2961, and second actuator 2962.

Enclosure 2951 has a rectangular or tubular shape and is a container capable of storing a plurality of packages. Enclosure 2951 includes top opening 2951a formed at the top portion in the vertically upward direction of enclosure 2951, and elevator path 2954 for delivering a received package to predetermined package compartment 2953 among the plurality of package compartments 2953 arranged in enclosure 2951. Top opening 2951a includes lid 2959 with a guide structure capable of guiding package carriage 2820. Therefore, as illustrated in (b1) in FIG. 92, even if package carriage 2820 sways due to wind and shifts from top opening 2951a, lid 2959 can guide package carriage 2820.

Box structure 2952 includes a lid that can open and close the entrance. The lid includes first lid 2952a and second lid 2952b. In box structure 2952, when first lid 2952a and second lid 2952b are closed, as illustrated in (c2) in FIG. 92, hole 2952c is defined by a part of first lid 2952a and a part of second lid 2952b. The lid moves by first actuator 2961.

First actuator 2961 can be controlled by actuation controller 2957 to open and close the lid of box structure 2952. Stated differently, first actuator 2961 can be controlled by actuation controller 2957 to operate first lid 2952a and second lid 2952b, thereby opening and closing the entrance of box structure 2952. Note that first actuator 2961 may be provided for each of first lid 2952a and second lid 2952b.

Box structure 2952 moves along elevator path 2954 of enclosure 2951 by being actuated by second actuator 2962 controlled by actuation controller 2957.

Elevator path 2954 is a path that extends in the vertical direction, from top opening 2951a of enclosure 2951 to the bottom of enclosure 2951. Top opening 2951a is the upper surface portion vertically above elevator path 2954 through which unmanned aerial vehicle 2910 and package carriage 2820 pass. Elevator path 2954 can house box structure 2952 and package carriage 2820 therein. Elevator path 2954 is one example of a first path.

A plurality of adjacent package compartments 2953 are arranged in elevator path 2954. Each of the plurality of package compartments 2953 is provided in enclosure 2951 and is provided to face elevator path 2954. The plurality of package compartments 2953 are arranged vertically along elevator path 2954.

Second actuator 2962 can move box structure 2952 along elevator path 2954 from a standby position located above enclosure 2951. Stated differently, second actuator 2962 moves box structure 2952 in the vertical direction along elevator path 2954 from the standby position, which is its current position, and stops box structure 2952 within elevator path 2954 so that a package can be accommodated in one of the plurality of package compartments 2953. This enables a package to be accommodated in one of the plurality of package compartments 2953.

Box structure 2952 defines an entrance through which unmanned aerial vehicle 2910 is able to pass, and can restrain unmanned aerial vehicle 2910.

More specifically, when unmanned transport vehicle 2901 is positioned in the airspace above delivery box 2950 in order to store a package in delivery box 2950, control processor 2933 controls unmanned aerial vehicle 2910 to insert unmanned aerial vehicle 2910 into box structure 2952 with the lid open.

More specifically, control processor 2933 controls wire control module 2934 to cause second winch 2832 to reel out second wire 2942, and controls unmanned aerial vehicle 2910 to detach unmanned aerial vehicle 2910 from package carriage 2820. Control processor 2933 controls unmanned aerial vehicle 2910 so as to cause unmanned aerial vehicle 2910 to enter through the entrance of box structure 2952.

As illustrated in FIG. 91 and in (c1) and (c2) in FIG. 92, after unmanned aerial vehicle 2910 passes through the entrance of box structure 2952 and unmanned transport vehicle 2901 enters into box structure 2952, delivery box 2950 obtains an entrance notification from unmanned aerial vehicle 2910. Stated differently, delivery box 2950 and unmanned aerial vehicle 2910 are equipped with a communicator (not illustrated in the figures). Upon receiving the entrance notification, actuation controller 2957 controls first actuator 2961 to close first lid 2952a and second lid 2952b of box structure 2952. When unmanned aerial vehicle 2910 lands at the bottom of box structure 2952, actuation controller 2957 may control first actuator 2961 to close first lid 2952a and second lid 2952b of box structure 2952. With first lid 2952a and second lid 2952b closed, second wire 2942, which connects protective case 2911 of unmanned aerial vehicle 2910 and package carriage 2820, is inserted through hole 2952c defined by a part of first lid 2952a and a part of second lid 2952b, preventing unmanned aerial vehicle 2910 from passing through hole 2952c. Hole 2952c is smaller than unmanned transport vehicle 2901, so unmanned transport vehicle 2901 cannot pass through hole 2952c. Stated differently, it can be said that the size (opening area) of hole 2952c is smaller than the projected area of unmanned aerial vehicle 2910 in a plan view. As a result, when first lid 2952a and second lid 2952b of box structure 2952 are closed, unmanned aerial vehicle 2910 is restrained within box structure 2952.

Although an example using first lid 2952a and second lid 2952b have been given, the present disclosure is not limited to this example. For example, as illustrated in FIG. 93, the lid may be formed from one lid 2952d that is openable and closable and includes slit 2952e. The size (opening area) of slit 2952e may be such that it allows for the insertion of second wire 2942 but prevents unmanned aerial vehicle 2910 from passing through.

As illustrated in FIG. 91 and in (d1) and (d2) in FIG. 92, after first lid 2952a and second lid 2952b of box structure 2952 are closed, control processor 2933 controls wire control module 2934 to actuate first winch 2831 and second winch 2832 to adjust the length of first wire 2941 and second wire 2942 and move package carriage 2820 towards a location above the lid of box structure 2952.

As illustrated in FIG. 91 and in (a) through (c) in FIG. 94A, after package carriage 2820 moves to the lid of box structure 2952 and is placed on the lid, actuation controller 2957 controls second actuator 2962 to move package carriage 2820 on box structure 2952 in front of one of the plurality of package compartments 2953 in order to move the package inside box structure 2952 into package compartment 2953. More specifically, after unmanned aerial vehicle 2910 is restrained to box structure 2952, control processor 2933 controls wire control module 2934 to actuate first winch 2831 and second winch 2832 to adjust the length of first wire 2941 and second wire 2942 and place package carriage 2820 on the lid of box structure 2952. Next, control processor 2933 controls wire control module 2934 to actuate first winch 2831 and adjust the length of first wire 2941. Here, actuation controller 2957 controls second actuator 2962 to move package carriage 2820 in front of one of the plurality of package compartments 2953 (a predetermined package compartment 2953). The package can be accommodated in a predetermined package compartment 2953 by moving the package inside package carriage 2820 into the predetermined package compartment 2953. The means for moving the package inside package carriage 2820 into package compartment 2953 can be realized by using means disclosed in the present disclosure or known means.

As illustrated in FIG. 91 and in (d) in FIG. 94A, after moving the package inside package carriage 2820 into the predetermined package compartment 2953, actuation controller 2957 controls second actuator 2962 to move box structure 2952 on which package carriage 2820 is placed towards the standby position. With this, box structure 2952 and package carriage 2820 placed on the lid of box structure 2952 can be raised along elevator path 2954.

As illustrated in FIG. 91 and in (a) through (b2) in FIG. 94B, after box structure 2952 moves to the standby position, control processor 2933 controls wire control module 2934 to actuate first winch 2831 and second winch 2832 to adjust the length of first wire 2941 and second wire 2942 and move package carriage 2820 towards unmanned transport vehicle 2901. With this, package carriage 2820 ascends from the top of box structure 2952 to unmanned transport vehicle 2901.

As illustrated in FIG. 91 and in (c1) through (d2) in FIG. 94B, after package carriage 2820 moves towards unmanned transport vehicle 2901, actuation controller 2957 controls first actuator 2961 to open first lid 2952a and second lid 2952b. As a result, since unmanned aerial vehicle 2910 is released from box structure 2952, control processor 2933 controls wire control module 2934 to actuate second winch 2832 and raise unmanned aerial vehicle 2910.

As illustrated in FIG. 91 and in (a1) through (b2) in FIG. 94C, when unmanned aerial vehicle 2910 separates from box structure 2952, actuation controller 2957 controls first actuator 2961 to close first lid 2952a and second lid 2952b. Thereafter, actuation controller 2957 controls first actuator 2961 to also close lid 2959 of enclosure 2951. With this, even when it is raining or snowing, by closing first lid 2952a, second lid 2952b, and lid 2959 of enclosure 2951, it is possible to inhibit rain and snow from entering inside delivery box 2950.

Sensor 2958 has the same configuration as the sensor on the delivery box according to the above-described embodiment. For example, when unmanned aerial vehicle 2910 is descending, actuation controller 2957 controls first actuator 2961 based on the sensing result from sensor 2958 to actuate lid 2959 of enclosure 2951 or actuate first lid 2952a and second lid 2952b.

Next, unmanned aerial vehicle 2910 moves to the lower surface side of package carriage 2820, and both unmanned aerial vehicle 2910 and package carriage 2820 are attached to unmanned transport vehicle 2901. Unmanned transport vehicle 2901 then moves to the next destination.

Here, a case in which unmanned aerial vehicle 2910 autonomously flies will be described with reference to FIG. 91 and FIG. 95A through FIG. 95C.

As illustrated in FIG. 91 and in (a) through (c2) in FIG. 95A, when unmanned transport vehicle 2901 moves to the airspace above delivery box 2950, unmanned aerial vehicle 2910 moves toward box structure 2952 of delivery box 2950 before unmanned transport vehicle 2901 lowers package carriage 2820. More specifically, when control processor 2933 determines that it has moved to the airspace above delivery box 2950 based on sensor 2936 and the like, control processor 2933 controls wire control module 2934 to actuate second winch 2832 and reel out second wire 2942, and controls unmanned aerial vehicle 2910 to move toward the entrance of box structure 2952 of delivery box 2950. At this time, control processor 2933 controls wire control module 2934 to actuate second winch 2832 to reel out second wire 2942 so as to slacken second wire 2942. As a result, the increase in tension applied to second wire 2942 due to the flight of unmanned aerial vehicle 2910 can be inhibited.

As illustrated in FIG. 91 and in (c1) in FIG. 95A, when unmanned aerial vehicle 2910 enters the entrance of box structure 2952 of delivery box 2950, control processor 2933 controls wire control module 2934 to actuate second winch 2832 and reel in second wire 2942 so that there is no slack in second wire 2942. As a result, when unmanned aerial vehicle 2910 enters the entrance of box structure 2952 of delivery box 2950, the tension applied to second wire 2942 can be increased.

As illustrated in FIG. 91 and in (d1) and (d2) in FIG. 95A, when unmanned aerial vehicle 2910 lands on the bottom of box structure 2952, actuation controller 2957 controls first actuator 2961 to close first lid 2952a and second lid 2952b. When first lid 2952a and second lid 2952b of box structure 2952 are closed, unmanned aerial vehicle 2910 is restrained within box structure 2952. Here, control processor 2933 may determine that unmanned aerial vehicle 2910 has landed on the bottom of box structure 2952 by using sensor 2936 provided on unmanned aerial vehicle 2910 to detect the landing of unmanned aerial vehicle 2910 on the bottom of box structure 2952.

Control processor 2933 controls wire control module 2934 to actuate second winch 2832 to reel in second wire 2942 when first lid 2952a and second lid 2952b of box structure 2952 close. With this, unmanned aerial vehicle 2910 is lifted within box structure 2952 and catches on the lid of box structure 2952. Here, second wire 2942 is in a state where the tension has increased and it is being pulled.

As illustrated in FIG. 91 and in (a) and (b) in FIG. 95B, control processor 2933 controls wire control module 2934 to actuate first winch 2831 and second winch 2832 to adjust the length of first wire 2941 and second wire 2942 and move package carriage 2820 towards the lid of box structure 2952. Package carriage 2820 is then placed on the lid of box structure 2952.

As illustrated in FIG. 91 and in (c) and (d) in FIG. 95B, after package carriage 2820 moves to the lid of box structure 2952 and is placed on the lid, actuation controller 2957 actuates and controls box structure 2952 by controlling second actuator 2962 to move package carriage 2820 on box structure 2952 in front of one of the plurality of package compartments 2953. Here, since package carriage 2820 is placed on the lid, control processor 2933 controls wire control module 2934 to actuate first winch 2831 and adjust the length of first wire 2941. The package can be accommodated in a predetermined package compartment 2953 by moving the package inside package carriage 2820 into the predetermined package compartment 2953.

As illustrated in FIG. 91 and in (a) in FIG. 95C, after moving the package inside package carriage 2820 into predetermined package compartment 2953, actuation controller 2957 controls second actuator 2962 to move box structure 2952 on which package carriage 2820 is placed towards the standby position. With this, box structure 2952 and package carriage 2820 placed on the lid of box structure 2952 ascend along elevator path 2954, and box structure 2952 moves to the standby position.

As illustrated in FIG. 91 and in (b) in FIG. 95C, after box structure 2952 moves to the standby position, control processor 2933 controls wire control module 2934 to actuate first winch 2831 and second winch 2832 to adjust the length of first wire 2941 and second wire 2942 and tilt the attitude of package carriage 2820. For example, the attitude of package carriage 2820 is tilted so that the angle between first wire 2941 and horizontal plane becomes α. As a result, the tension of first wire 2941 increases, and the upper surface of package carriage 2820 faces unmanned transport vehicle 2901.

As illustrated in FIG. 91 and in (c) in FIG. 95C, after tilting unmanned transport vehicle 2901, control processor 2933 controls wire control module 2934 to actuate first winch 2831 and second winch 2832 to adjust the length of first wire 2941 and second wire 2942 and move package carriage 2820 towards unmanned transport vehicle 2901. With this, package carriage 2820 ascends from the top of box structure 2952 to unmanned transport vehicle 2901.

As illustrated in FIG. 91 and in (d) in FIG. 95C, when package carriage 2820 moves towards unmanned transport vehicle 2901 and package carriage 2820 is attached to unmanned transport vehicle 2901, actuation controller 2957 controls first actuator 2961 to open first lid 2952a and second lid 2952b. This releases unmanned aerial vehicle 2910 from box structure 2952. Next, control processor 2933 controls wire control module 2934 to actuate second winch 2832, and controls unmanned aerial vehicle 2910 to raise unmanned aerial vehicle 2910. Next, when unmanned aerial vehicle 2910 separates from box structure 2952, actuation controller 2957 controls first actuator 2961 to close first lid 2952a and second lid 2952b. Next, unmanned aerial vehicle 2910 moves to the lower surface side of package carriage 2820, and both unmanned aerial vehicle 2910 and package carriage 2820 are attached to unmanned transport vehicle 2901. Unmanned transport vehicle 2901 then moves to the next destination.

Next, a case in which the topmost package compartment 2953 among the plurality of package compartments 2953 of delivery box 2950 is set as a temporary storage area will be described with reference to FIG. 91 and FIG. 95D.

As illustrated in FIG. 91 and in (a) in FIG. 95D, the package that was loaded in package carriage 2820 is temporarily accommodated in the topmost package compartment 2953. When package carriage 2820 and unmanned aerial vehicle 2910 are attached to unmanned transport vehicle 2901 and unmanned aerial vehicle 2910 begins moving to the next destination, delivery box 2950 reaccommodates the package from the topmost package compartment 2953 into package compartment 2953 to which the package is intended to be delivered.

Specifically, as illustrated in FIG. 91 and in (a) through (c) in FIG. 95D, actuation controller 2957 of delivery box 2950 moves the package from the uppermost package compartment 2953 into box structure 2952, and controls second actuator 2962 to move box structure 2952 in front of package compartment 2953 to which the package is to be delivered.

Next, as illustrated in FIG. 91 and in (d) and (e) in FIG. 95D, by moving the package inside box structure 2952 into package compartment 2953 to which the package is intended to be delivered, actuation controller 2957 can accommodate the package in package compartment 2953 to which the package is intended to be delivered. The means for moving the package from the uppermost package compartment 2953 into box structure 2952, and the means for moving the package inside package carriage 2820 into package compartment 2953 can be realized by using means disclosed in the present disclosure or known means.

Here, a case in which delivery box 2950 collects a package will be described with reference to FIG. 96A through FIG. 96C.

As illustrated in FIG. 91 and in (a) in FIG. 96A, when user stores a package in predetermined package compartment 2953 of delivery box 2950, actuation controller 2957 of delivery box 2950 controls second actuator 2962 to move box structure 2952 in front of package compartment 2953 from which the package is to be collected.

Next, as illustrated in FIG. 91 and in (b) through (e) in FIG. 96A, actuation controller 2957 moves the package to be collected from package compartment 2953 into box structure 2952, and then controls second actuator 2962 to move box structure 2952 in front of the uppermost package compartment 2953 which serves as a temporary storage area. Actuation controller 2957 can accommodate the package in the uppermost package compartment 2953 by moving the package in box structure 2952 into the uppermost package compartment 2953.

As illustrated in FIG. 91 and in (a) in FIG. 96B, when unmanned transport vehicle 2901 arrives at the airspace above delivery box 2950 for collection, unmanned aerial vehicle 2910 moves toward box structure 2952 of delivery box 2950. More specifically, when control processor 2933 determines that it has moved to the airspace above delivery box 2950 based on sensor 2936 and the like, control processor 2933 controls wire control module 2934 to actuate second winch 2832 and reel out second wire 2942, and controls unmanned aerial vehicle 2910 to move toward the entrance of box structure 2952 of delivery box 2950. When unmanned aerial vehicle 2910 lands on the bottom of box structure 2952, actuation controller 2957 controls first actuator 2961 to close first lid 2952a and second lid 2952b. When first lid 2952a and second lid 2952b of box structure 2952 are closed, unmanned aerial vehicle 2910 is restrained within box structure 2952.

As illustrated in FIG. 91 and in (b) in FIG. 96B, control processor 2933 controls wire control module 2934 to actuate first winch 2831 and second winch 2832 to adjust the length of first wire 2941 and second wire 2942 and move package carriage 2820 towards the lid of box structure 2952. Package carriage 2820 is then placed on the lid of box structure 2952.

As illustrated in FIG. 91 and in (c) and (d) in FIG. 96B, after package carriage 2820 moves to the lid of box structure 2952 and is placed on the lid, actuation controller 2957 controls second actuator 2962 to move package carriage 2820 on box structure 2952 in front of uppermost package compartment 2953. Here, since package carriage 2820 is placed on the lid, control processor 2933 controls wire control module 2934 to actuate first winch 2831 and adjust the length of first wire 2941. The package can be accommodated in package carriage 2820 by moving the package inside uppermost package compartment 2953 into package carriage 2820. The means for moving the package from uppermost package compartment 2953 into package carriage 2820 can be realized by using means disclosed in the present disclosure or known means.

As illustrated in FIG. 91 and in (a) in FIG. 96C, after moving the package inside uppermost package compartment 2953 into package carriage 2820, actuation controller 2957 controls second actuator 2962 to move box structure 2952 on which package carriage 2820 is placed towards the standby position. With this, box structure 2952 and package carriage 2820 placed on the lid of box structure 2952 ascend along elevator path 2954, and box structure 2952 moves to the standby position.

As illustrated in FIG. 91 and in (b) in FIG. 96C, after box structure 2952 moves to the standby position, control processor 2933 controls wire control module 2934 to actuate first winch 2831 and second winch 2832 to adjust the length of first wire 2941 and second wire 2942 and tilt the attitude of package carriage 2820. For example, the attitude of package carriage 2820 is tilted so that the angle between first wire 2941 and horizontal plane becomes α. As a result, the tension of first wire 2941 increases, and the upper surface of package carriage 2820 faces unmanned transport vehicle 2901.

As illustrated in FIG. 91 and in (c) and (d) in FIG. 96C, after tilting unmanned transport vehicle 2901, control processor 2933 controls wire control module 2934 to actuate first winch 2831 and second winch 2832 to adjust the length of first wire 2941 and second wire 2942 and move package carriage 2820 towards unmanned transport vehicle 2901. With this, package carriage 2820 in which the package is accommodated ascends from the top of box structure 2952 to unmanned transport vehicle 2901.

As illustrated in FIG. 91 and in (d) and (e) in FIG. 96C, when package carriage 2820 moves towards unmanned transport vehicle 2901 and package carriage 2820 is attached to unmanned transport vehicle 2901, actuation controller 2957 controls first actuator 2961 to open first lid 2952a and second lid 2952b. This releases unmanned aerial vehicle 2910 from box structure 2952. Control processor 2933 controls wire control module 2934 to actuate second winch 2832, and controls unmanned aerial vehicle 2910 to raise unmanned aerial vehicle 2910. When collection is complete and unmanned aerial vehicle 2910 separates from box structure 2952, actuation controller 2957 controls first actuator 2961 to close first lid 2952a and second lid 2952b. Thereafter, actuation controller 2957 controls first actuator 2961 to also close lid 2959 of enclosure 2951.

Next, unmanned aerial vehicle 2910 moves to the lower surface side of package carriage 2820, and both unmanned aerial vehicle 2910 and package carriage 2820 are attached to unmanned transport vehicle 2901. Unmanned transport vehicle 2901 then moves to the next destination.

Here, a case in which delivery box 2950 delivers a package and there is an obstacle such as an eave vertically above delivery box 2950 will be described with reference to FIG. 91, FIG. 95B, and FIG. 97A through FIG. 97C. Since operations are the same, FIG. 95B will used in the explanation between FIG. 97A and FIG. 97B.

As illustrated in FIG. 91 and in (a) through (d2) in FIG. 97A, when unmanned transport vehicle 2901 moves to the airspace above delivery box 2950, unmanned aerial vehicle 2910 moves toward box structure 2952 of delivery box 2950 before unmanned transport vehicle 2901 lowers package carriage 2820. Here, unmanned transport vehicle 2901 is located at a place away from the airspace above delivery box 2950 so as not to contact the obstacle.

More specifically, when control processor 2933 determines that it has moved to the airspace above delivery box 2950 based on sensor 2936 and the like, control processor 2933 controls wire control module 2934 to actuate second winch 2832 and reel out second wire 2942, and controls unmanned aerial vehicle 2910 to move toward the entrance of box structure 2952 of delivery box 2950. At this time, control processor 2933 controls wire control module 2934 to actuate second winch 2832 to reel out second wire 2942. When unmanned aerial vehicle 2910 enters the entrance of box structure 2952 of delivery box 2950, control processor 2933 controls wire control module 2934 to actuate second winch 2832 and reel in second wire 2942 so that there is no slack in second wire 2942. As a result, when unmanned aerial vehicle 2910 enters the entrance of box structure 2952 of delivery box 2950, the tension applied to second wire 2942 can be increased.

As illustrated in FIG. 91 and in (d1) and (d2) in FIG. 97A, when unmanned aerial vehicle 2910 lands on the bottom of box structure 2952, actuation controller 2957 controls first actuator 2961 to close first lid 2952a and second lid 2952b. When first lid 2952a and second lid 2952b of box structure 2952 are closed, unmanned aerial vehicle 2910 is restrained within box structure 2952. Next, this will be described with reference to FIG. 91 and FIG. 95B.

As illustrated in FIG. 91 and in (a) in FIG. 95B, control processor 2933 controls wire control module 2934 to actuate second winch 2832 to reel in second wire 2942 when first lid 2952a and second lid 2952b of box structure 2952 close. With this, unmanned aerial vehicle 2910 is lifted within box structure 2952 and catches on the lid of box structure 2952. Here, second wire 2942 is in a state where the tension has increased and it is being pulled.

As illustrated in FIG. 91 and in (b) in FIG. 95B, control processor 2933 controls wire control module 2934 to actuate first winch 2831 and second winch 2832 to adjust the length of first wire 2941 and second wire 2942 and move package carriage 2820 towards the lid of box structure 2952. Package carriage 2820 is then placed on the lid of box structure 2952.

As illustrated in FIG. 91 and in (c) and (d) in FIG. 95B, after package carriage 2820 moves to the lid of box structure 2952 and is placed on the lid, actuation controller 2957 controls second actuator 2962 to move package carriage 2820 on box structure 2952 in front of one of the plurality of package compartments 2953. Here, since package carriage 2820 is placed on the lid, control processor 2933 controls wire control module 2934 to actuate first winch 2831 and adjust the length of first wire 2941. The package can be accommodated in a predetermined package compartment 2953 by moving the package inside package carriage 2820 into the predetermined package compartment 2953. Next, this will be described with reference to FIG. 91 and FIG. 97B.

As illustrated in FIG. 91 and in (a) in FIG. 97B, after moving the package inside package carriage 2820 into predetermined package compartment 2953, actuation controller 2957 controls second actuator 2962 to move box structure 2952 on which package carriage 2820 is placed towards the standby position. With this, box structure 2952 and package carriage 2820 placed on the lid of box structure 2952 ascend along elevator path 2954, and box structure 2952 moves to the standby position.

As illustrated in FIG. 91 and in (b) in FIG. 97B, after box structure 2952 moves to the standby position, control processor 2933 controls wire control module 2934 to actuate first winch 2831 and second winch 2832 to adjust the length of first wire 2941 and second wire 2942 and tilt the attitude of package carriage 2820.

As illustrated in FIG. 91 and in (c), (d) in FIG. 97B, after tilting unmanned transport vehicle 2901, control processor 2933 controls wire control module 2934 to actuate first winch 2831 and second winch 2832 to adjust the length of first wire 2941 and second wire 2942 and move package carriage 2820 towards unmanned transport vehicle 2901. With this, package carriage 2820 ascends from the top of box structure 2952 to unmanned transport vehicle 2901.

As illustrated in FIG. 91 and in (a) in FIG. 97C, when package carriage 2820 moves towards unmanned transport vehicle 2901 and package carriage 2820 is attached to unmanned transport vehicle 2901, actuation controller 2957 controls first actuator 2961 to close the lid on the package carriage 2820 side and open the other lid out of first lid 2952a and second lid 2952b. Here, actuation controller 2957 controls wire control module 2934 to actuate second winch 2832 while controlling first actuator 2961 to gradually open the lid on the package carriage 2820 side. Unmanned aerial vehicle 2910 is slowly released from box structure 2952. With this, unmanned transport vehicle 2901 slowly moves towards unmanned aerial vehicle 2910 as the length of second wire 2942 is adjusted.

As illustrated in FIG. 91 and in (b) in FIG. 97C, actuation controller 2957 controls first actuator 2961 to maintain the attitude of the lid on the package carriage 2820 side so as to guide unmanned aerial vehicle 2910 towards unmanned transport vehicle 2901. The attitude of the lid on the package carriage 2820 side may be maintained so that the lid on the package carriage 2820 side becomes a predetermined angle with the horizontal plane. Unmanned aerial vehicle 2910 is guided by the lid on the package carriage 2820 side due to the actuation of second winch 2832. In this way, unmanned aerial vehicle 2910 moves to the lower surface side of package carriage 2820, and both unmanned aerial vehicle 2910 and package carriage 2820 are attached to unmanned transport vehicle 2901.

Note that package carriage 2820 according to the present embodiment may be attached to the slider portion of the present disclosure (for example, slider portion 2310 in FIG. 2, rail slider portion 2510 in FIG. 54, etc.). In other words, first winch 2831, first wire 2941, package carriage 2820, second winch 2832, and unmanned aerial vehicle 2910 may be attached to the slider portion of the present disclosure. Here, for example, package holder 2315 in FIG. 2 or package holder 2555 in FIG. 54 may correspond to first winch 2831.

### Advantageous Effects

Next, advantageous effects achieved by unmanned transport system 2900 according to the present embodiment will be described.

For example, in a case in which a package carriage transported by an unmanned transport vehicle is lowered toward a delivery box vertically below the unmanned transport vehicle, the package carriage may sway due to the influence of wind or the like. As a result, it may become difficult to lower the package carriage toward the entrance of the delivery box, which is the destination point. In cases in which the delivery box is located in a place other than vertically below the unmanned transport vehicle, it may become difficult to lower the package carriage toward the entrance of the delivery box from the unmanned transport vehicle.

As described above, unmanned transport system 2900 according to present embodiment further includes: second winch 2832 that is connected to package carriage 2820 and can reel out and reel in second wire 2942; and unmanned aerial vehicle 2910 that is connected to second wire 2942.

With this, unmanned aerial vehicle 2910 can be inserted into delivery box 2950 by reeling out second wire 2942 with respect to package carriage 2820 before inserting package carriage 2820 into delivery box 2950. As a result, package carriage 2820 can be guided to the entrance of delivery box 2950. As a result, package carriage 2820 can be lowered toward the entrance of delivery box 2950 more easily compared to conventional techniques.

Unmanned transport system 2900 according to present embodiment further includes: unmanned aerial vehicle 2910 that is connected to second wire 2942; and a delivery reception box (delivery box 2950). The delivery reception box includes: enclosure 2951; box structure 2952 that defines an entrance through which unmanned aerial vehicle 2910 is able to pass and restrains unmanned aerial vehicle 2910; first actuator 2961 that opens and closes the lid of box structure 2952; and second actuator 2962 that moves box structure 2952 along a first path from a standby position above enclosure 2951. Box structure 2952 includes a lid that can open and close the entrance. Lid includes first lid 2952a and second lid 2952b. When first lid 2952a and second lid 2952b are closed, hole 2952c is defined by a part of first lid 2952a and a part of second lid 2952b. The controller: controls unmanned aerial vehicle 2910 to insert unmanned transport vehicle 2901 into box structure 2952 in a state in which the lid is open; controls first actuator 2961 to close first lid 2952a and second lid 2952b after unmanned transport vehicle 2901 is inserted in box structure 2952, wherein in a state in which first lid 2952a and second lid 2952b are closed, second wire 2942 is inserted through hole 2952c, hole 2952c is smaller than unmanned transport vehicle 2901, and unmanned transport vehicle 2901 is restrained by box structure 2952, unable to pass through hole 2952c; and after first lid 2952a and second lid 2952b have been closed, actuates first winch 2831 and second winch 2832 connected to package carriage 2820 and capable of reeling out and in second wire 2942, to adjust a length of first wire 2941 and a length of second wire 2942 and move package carriage 2820 towards a location above the lid of box structure 2952.

With this, unmanned aerial vehicle 2910 can be inserted into delivery box 2950 by reeling out second wire 2942 with respect to package carriage 2820 before inserting package carriage 2820 into delivery box 2950. Since unmanned aerial vehicle 2910 restrained by box structure 2952 when inserted into delivery box 2950 unmanned aerial vehicle 2910 is in a state as if fixed to box structure 2952. Stated differently, by unmanned aerial vehicle 2910 catching on the lid of box structure 2952, unmanned aerial vehicle 2910 and second wire 2942 can function similar to a hook that guides package carriage 2820. As a result, package carriage 2820 can be guided to the entrance of delivery box 2950. As a result, package carriage 2820 can be lowered toward the entrance of delivery box 2950 more easily compared to conventional techniques.

### [Embodiment 18]

Unmanned transport system 3000 according to the present embodiment differs from Embodiment 17 and the like in that delivery box 3001 includes guide structure 3030 and the like. Hereinafter, since the basic configuration of unmanned transport system 3000 according to the present embodiment is the same as the basic configuration of the unmanned transport system according to Embodiment 1 and the like, the same reference signs as above are used and repeated description of the basic configuration of unmanned transport system 3000 in the present embodiment will be omitted where appropriate. The configurations of the delivery system, unmanned aerial vehicle, and package transport device, etc., according to Embodiment 1, etc., may be applied to the present embodiment.

### Function and Configuration

First, unmanned transport system 3000 according to the present embodiment will be described with reference to FIG. 98 through FIG. 103D.

FIG. 98 is a schematic diagram illustrating unmanned transport vehicle 3002, package carriage 3005, and delivery box 3001. FIG. 99 is a schematic diagram illustrating the internal structure of delivery box 3001 in an unmanned transport system. FIG. 100 is a block diagram illustrating an unmanned transport system. FIG. 101 is a side view illustrating package carriage 3005. In FIG. 102, (a) illustrates a top view of guide structure 3030 and package carriage 3005 when viewed from above. In FIG. 102, (b) is schematic diagram illustrating package carriage 3005 entering guide structure 3030. FIG. 103A illustrates transport body 3040 in delivery box 3001 moving to elevator path 3013 and package carriage 3005 being placed on transport body 3040. FIG. 103B illustrates a package being placed on transport body 3040 in delivery box 3001, package carriage 3005 rising, and transport body 3040 returning to package compartment 3011. FIG. 103C illustrates transport body 3040 with a package for collection moving to elevator path 3013 and package carriage 3005 descending towards transport body 3040. FIG. 103D illustrates package carriage 3005 that has collected a package rising, and transport body 3040 returning to package compartment 3011.

As illustrated in FIG. 98 through FIG. 100, delivery box 3001 of unmanned transport system 3000 is a delivery reception box for receiving packages from unmanned transport vehicle 3002 or for collecting packages. Delivery box 3001 is provided with order screen 3064 via which ordering of products deliverable to delivery box 3001 or requesting package collection is possible.

Delivery box 3001 includes enclosure 3010, guide structure 3030, a plurality of transport bodies 3040, door 3050, first actuator 3061, and actuation controller 3063.

Enclosure 3010 has a rectangular or tubular shape and is a container capable of storing a plurality of packages. Enclosure 3010 includes an electrical room. Enclosure 3010 includes a plurality of package compartments 3011 aligned in the vertical direction, top opening 3012 formed at the top portion in the vertically upward direction of enclosure 3010, and elevator path 3013 for delivering a received package to predetermined package compartment 3011 among the plurality of package compartments 3011 arranged in enclosure 3010. Top opening 3012 is an opening for receiving a package to be transported by unmanned transport vehicle 3002. Top opening 3012 is one example of an opening. The package is one example of a transported object.

Guide structure 3030 is a tapered tube, specifically, a funnel-shaped tube. Guide structure 3030 is positioned above top opening 3012, is coupled to top opening 3012 of enclosure 3010, and is provided so as to be in communication with top opening 3012. Accordingly, guide structure 3030 is capable of guiding a package toward top opening 3012. Guide structure 3030 may have a mesh or plate-like structure. By giving guide structure 3030 a mesh structure, it is possible to inhibit delivery box 3001 from falling over even if blown by strong winds.

Within delivery box 3001 is elevator path 3013 that extends vertically downward from top opening 3012 so as to span from guide structure 3030 to enclosure 3010, and in which packages can be moved up and down via wire 3003 extended from unmanned transport vehicle 3002.

Elevator path 3013 is a path that extends in the vertical direction, from top opening 3012 of enclosure 3010 to the bottom of enclosure 3010. Top opening 3012 is the upper surface portion vertically above elevator path 3013 through which package carriage 3005 passes. Elevator path 3013 can house package carriage 3005 therein.

A plurality of adjacent package compartments 3011 are arranged in elevator path 3013. Each of the plurality of package compartments 3011 is provided in enclosure 3010 and is provided to face elevator path 3013. The plurality of package compartments 3011 are arranged vertically along elevator path 3013. Elevator path 3013 is one example of a transport space.

When delivery box 3001 is viewed from a direction perpendicular to the vertical direction, guide structure 3030 occupies a first region and a second region in delivery box 3001. The first region is a tapered region that narrows from up to down vertically. The second region is connected to the first region, located vertically below the first region, and is a region having a curved surface shape that bulges towards elevator path 3013. Stated differently, guide structure 3030 includes first guide portion 3031 and second guide portion 3032. First guide portion 3031 is capable of guiding a package carried in from unmanned transport vehicle 3002. First guide portion 3031 has a tapered shape. First guide portion 3031 corresponds to the first region of guide structure 3030. Second guide portion 3032 is connected to the guide portion from vertically below the guide portion, and can guide a package guided by the guide portion to transport body 3040 provided in elevator path 3013. Second guide portion 3032 has a curved surface shape that bulges towards elevator path 3013. The curved surface shape is an arc shape that bulges towards elevator path 3013. Stated differently, second guide portion 3032 has an arc shape that bulges in a way that narrows elevator path 3013. Second guide portion 3032 corresponds to the second region of guide structure 3030.

As illustrated in FIG. 102, when delivery box 3001 is viewed from a direction perpendicular to the vertical direction, the side surface of the first region of guide structure 3030 is at an angle greater than or equal to 45° relative to the horizontal plane. Stated differently, first guide portion 3031, which corresponds to the first region of guide structure 3030, is set up to have an attitude greater than or equal to 45° relative to the horizontal plane.

Transport body 3040 is capable of moving between a first position facing elevator path 3013 and a second position included in elevator path 3013, by being actuated by first actuator 3061. Stated differently, when actuated by first actuator 3061, with a package loaded, transport body 3040 can move in the horizontal direction from elevator path 3013 (the second position) to a predetermined package compartment 3011 (the first position), and can move in the horizontal direction from the predetermined package compartment 3011 (the first position) to elevator path 3013 (the second position).

Transport body 3040 forms package compartment 3011 at the first position. Stated differently, as a result of being accommodated in a predetermined package compartment 3011 among the plurality of package compartments 3011, transport body 3040 forms package compartment 3011. Enclosure 3010 is provided with a plurality of transport bodies 3040. A plurality of transport bodies 3040 are provided in enclosure 3010 so as to correspond one-to-one with the plurality of package compartments 3011. With this, the plurality of transport bodies 3040 can also be said to form the plurality of package compartments 3011 at the first position.

Door 3050 is provided on enclosure 3010 of delivery box 3001 and leads to package compartment 3011. Enclosure 3010 includes an opening through which packages can be inserted or removed. Door 3050 automatically opens and closes the opening by actuation controller 3063 controlling the actuator of door 3050. Door 3050 is automatically locked or automatically unlocked by actuation controller 3063 controlling the actuator of door 3050.

Enclosure 3010 is provided with a plurality of doors 3050. With this, the plurality of doors 3050 are provided in enclosure 3010 so as to correspond one-to-one with the plurality of package compartments 3011. With this, the plurality of doors 3050 are provided so as to correspond one-to-one with the plurality of package compartments 3011.

First actuator 3061 can move transport body 3040 in the horizontal direction between the first position and the second position. Note that first actuator 3061 may move transport body 3040 in the vertical direction in elevator path 3013.

More specifically, first actuator 3061 can move transport body 3040 between package compartment 3011 that includes the first position and faces elevator path 3013, and elevator path 3013 that includes a second position included in elevator path 3013. Stated differently, first actuator 3061 can move transport body 3040 between the first position that forms package compartment 3011 and the second position included in elevator path 3013. This enables transport body 3040 to accommodate a package in one of the plurality of package compartments 3011 or to collect a package accommodated in package compartment 3011.

Actuation controller 3063 controls first actuator 3061 to move transport body 3040. More specifically, when receiving a package from unmanned transport vehicle 3002, actuation controller 3063 controls first actuator 3061 to move transport body 3040 from the first position to the second position. After receiving the package, actuation controller 3063 controls first actuator 3061 to move transport body 3040 from the second position to the first position. Actuation controller 3063 is one example of the controller.

After detecting that a package has entered through door 3050, actuation controller 3063 controls first actuator 3061 to move transport body 3040 from the first position to the second position, after which the package is collected by unmanned transport vehicle 3002.

Here, a case in which delivery box 3001 delivers a package will be described with reference to FIG. 103A and FIG. 103B.

As illustrated in FIG. 100 and in (a) and (b) in FIG. 103A, when unmanned transport vehicle 3002 moves to the airspace above delivery box 3001, delivery box 3001, in response to obtaining an arrival notification from unmanned transport vehicle 3002, moves transport body 3040, which is the receiver for the package to be delivered by unmanned transport vehicle 3002, from the first position to the second position.

When unmanned transport vehicle 3002 obtains a ready-to-receive notification from delivery box 3001 indicating that transport body 3040 has moved from the first position to the second position, it lowers package carriage 3005. More specifically, when control processor 3002a of unmanned transport vehicle 3002 obtains a ready-to-receive notification from delivery box 3001, it controls wire control module 3002b to actuate winch 3002c of unmanned transport vehicle 3002 and reel out wire 3003. This lowers package carriage 3005.

Here, as illustrated in FIG. 102, even if package carriage 3005 descends to a position away from top opening 3012 of delivery box 3001, package carriage 3005, is guided to top opening 3012 of delivery box 3001 by first guide portion 3031 while sliding on first guide portion 3031 of guide structure 3030 upon contacting guide structure 3030. Package carriage 3005 is inserted into elevator path 3013 from top opening 3012, proceeds to second guide portion 3032 via first guide portion 3031, and is guided by second guide portion 3032, whereby the attitude of package carriage 3005 is corrected and it is then placed on transport body 3040. Stated differently, in a view of delivery box 3001 from vertically above, the attitude of package carriage 3005 is corrected by package carriage 3005 being guided by guide structure 3030, so that it assumes an attitude in which it perfectly overlaps with top opening 3012 of delivery box 3001.

Note that the means for detecting the placement of package carriage 3005 on transport body 3040 may be any sensor that can detect the placement of package carriage 3005 on transport body 3040, such as a tension sensor that detects the tension of wire 3003, an image sensor that captures images of the space below package carriage 3005, a gravity sensor that detects the gravity on transport body 3040, or a pressure sensor that detects the pressure exerted by package carriage 3005. Moreover, the placement of package carriage 3005 on transport body 3040 may be detected by a known senso r.

Moreover, as illustrated in FIG. 100 and FIG. 101, package carriage 3005 may be equipped with light-emitting module 3005a such as an LED element, piezoelectric buzzer 3005b, etc. Light-emitting module 3005a may be located on the side surface (upper side surface in FIG. 101) of package carriage 3005. Piezoelectric buzzer 3005b may be located on the lower side surface or lower surface of package carriage 3005. Stated differently, piezoelectric buzzer 3005b is arranged on package carriage 3005 in such a way that the directional sound of piezoelectric buzzer 3005b is directed towards the lower side of package carriage 3005. In such cases, control processor 3002a may control light-emitting module 3005a to cause light-emitting module 3005a to emit solid light or blinking light when lowering or raising package carriage 3005. In order to notify the surrounding area that package carriage 3005 is descending, light-emitting module 3005a may emit light in a prominent color such as red. Piezoelectric buzzer 3005b may output a sound when lowering or raising package carriage 3005.

If people are detected in the surrounding area, package carriage 3005 may output an alarm to the people in the surrounding area using sound and/or light through alarm means such as light-emitting module 3005a and/or piezoelectric buzzer 3005b. Note that if people in the surrounding area do not move out of the way despite the alarm being output, control processor 3002a may stop the lowering of package carriage 3005.

As illustrated in FIG. 100 and in (c) in FIG. 103A, when package carriage 3005 is placed on transport body 3040, package carriage 3005 places the package it is carrying inside onto transport body 3040. For example, control processor 3002a controls package carriage 3005 to place the package on transport body 3040.

As illustrated in FIG. 100 and in (a) and (b) in FIG. 103B, when the package is placed on transport body 3040, control processor 3002a controls wire control module 3002b to actuate winch 3002c to reel in wire 3003. With this, package carriage 3005 ascends to unmanned transport vehicle 3002.

As illustrated in FIG. 100 and in (c) in FIG. 103B, after package carriage 3005 ascends towards unmanned transport vehicle 3002, delivery box 3001 moves transport body 3040 from the second position to the first position. For example, when delivery box 3001 obtains, from unmanned transport vehicle 3002, an attachment completion notification indicating that package carriage 3005 has been attached to unmanned transport vehicle 3002, actuation controller 3063 controls first actuator 3061 to move transport body 3040 from the second position to the first position. With this, the package placed on transport body 3040 is accommodated into the predetermined package compartment 3011.

When the user receives a package from delivery box 3001, the user can display an identification code such as a QR Code (registered trademark) on the terminal device the user possesses and have camera sensor 3065 provided in delivery box 3001 read the identification code from the terminal device. The identification code is a code used by the user who ordered the product to receive the product (package), and as disclosed above, when the user orders a product and sets delivery to delivery box 3001, the identification code is transmitted to the user's terminal device.

Actuation controller 3063 of delivery box 3001 reads the identification code from terminal device via camera sensor 3065, and controls the actuator of door 3050 to unlock door 3050 of package compartment 3011 corresponding to the identification code (package compartment 3011 where the product ordered by the user is stored) and automatically open door 3050. This allows the user to retrieve the package from the predetermined package compartment 3011 as door 3050, which is locked, is automatically opened. Upon the user retrieving the package from package compartment 3011, actuation controller 3063 of delivery box 3001 controls the actuator of door 3050 to automatically close and lock door 3050.

Here, a case in which delivery box 3001 collects a package will be described with reference to FIG. 103C and FIG. 103D.

As illustrated in FIG. 100 and in (a) and (b) in FIG. 103C, after the user stores a package in the predetermined package compartment 3011 of delivery box 3001, the package is on transport body 3040. Thereafter, when unmanned transport vehicle 3002 arrives in the airspace above delivery box 3001, actuation controller 3063 of delivery box 3001 controls first actuator 3061 to move transport body 3040 from the first position to the second position.

As illustrated in FIG. 100 and in (c) in FIG. 103C, when unmanned transport vehicle 3002 obtains a ready-to-collect notification from delivery box 3001 indicating that transport body 3040 has moved from the first position to the second position, it lowers package carriage 3005. More specifically, when control processor 3002a of unmanned transport vehicle 3002 obtains a ready-to-collect notification from delivery box 3001, it controls wire control module 3002b to actuate winch 3002c of unmanned transport vehicle 3002 and reel out wire 3003. This lowers package carriage 3005. Here, even if package carriage 3005 descends to a position away from top opening 3012 of delivery box 3001, package carriage 3005, is guided to top opening 3012 of delivery box 3001 by first guide portion 3031 while sliding on first guide portion 3031 of guide structure 3030 upon contacting guide structure 3030. Package carriage 3005 is inserted into elevator path 3013 from top opening 3012, proceeds to second guide portion 3032 via first guide portion 3031, and is guided by second guide portion 3032, whereby the attitude of package carriage 3005 is corrected and it is then placed on transport body 3040.

As illustrated in FIG. 100 and in (a) in FIG. 103D, upon package carriage 3005 being placed on transport body 3040, package carriage 3005 is placed on transport body 3040 while collecting the package placed on transport body 3040. Once package carriage 3005 collects the package placed on transport body 3040, unmanned transport vehicle 3002 obtains a collection completion notification indicating that package carriage 3005 has collected the package from package carriage 3005.

As illustrated in FIG. 100 and in (b) in FIG. 103D, control processor 3002a of unmanned transport vehicle 3002 controls wire control module 3002b to actuate winch 3002c to reel in wire 3003. With this, package carriage 3005 ascends to unmanned transport vehicle 3002.

As illustrated in FIG. 100 and in (c) in FIG. 103D, after package carriage 3005 ascends towards unmanned transport vehicle 3002, delivery box 3001 moves transport body 3040 from the second position to the first position. For example, when delivery box 3001 obtains an attachment completion notification indicating that package carriage 3005 has been attached to unmanned transport vehicle 3002, actuation controller 3063 controls first actuator 3061 to move transport body 3040 from the second position to the first position. With this, the package placed on transport body 3040 is accommodated into the predetermined package compartment 3011.

### Advantageous Effects

Next, advantageous effects achieved by unmanned transport system 3000 according to the present embodiment will be described.

As described above, unmanned transport system 3000 according to the present embodiment further includes a delivery reception box (delivery box 3001). The delivery reception box includes: enclosure 3010 including an opening for receiving a transported object transported by unmanned transport vehicle 3002; and guide structure 3030 located above the opening, for guiding the transported object towards the opening. Within the delivery reception box is provided a transport space (elevator path 3013) that extends vertically downward from the opening and in which the transported object can be moved up and down via wire 3003 extended from unmanned transport vehicle 3002. In a view of the delivery reception box in a direction perpendicular to the vertical direction, guide structure 3030 occupies a first region and a second region of the delivery reception box, the first region being a tapered region that narrows from up to down vertically, the second region being connected to the first region, located vertically below the first region, and having an arc shape that bulges towards the transport space.

With this, even if package carriage 3005 shifts from the opening due to the influence of wind or the like when unmanned transport vehicle 3002 is lowering a package, since guide structure 3030 can guide package carriage 3005, package carriage 3005 can enter through the opening of delivery box 3001.

When package carriage 3005 is in elevator path 3013, wire 3003 may come into contact with guide structure 3030. In such cases, wire 3003 may rub against guide structure 3030, potentially damaging wire 3003. However, according to the present embodiment, since guide structure 3030 includes a second region that is an arc shape bulging towards the transport space, even when package carriage 3005 is in elevator path 3013, damage to wire 3003 can be inhibited by having wire 3003 come into contact with the second region of guide structure 3030. Accordingly, this inhibits wire 3003 from being damaged or package carriage 3005 from falling.

### [Embodiment 19]

Unmanned transport system 3100 according to the present embodiment differs from Embodiment 18 and the like in that, for example, it includes first slider 3121 and second slider 3122 that are extendable. Hereinafter, since the basic configuration of unmanned transport system 3100 according to the present embodiment is the same as the basic configuration of the unmanned transport system according to Embodiment 1 and the like, the same reference signs as above are used and repeated description of the basic configuration of unmanned transport system 3100 in the present embodiment will be omitted where appropriate. The configurations of the delivery system, unmanned aerial vehicle, and package transport device, etc., according to Embodiment 1, etc., may be applied to the present embodiment.

### Function and Configuration

First, unmanned transport system 3100 according to the present embodiment will be described with reference to FIG. 104A through FIG. 104D.

FIG. 104A is a schematic diagram illustrating first vehicle main body 3101 and second vehicle main body 3110. FIG. 104B illustrates the sliding movement of first slider 3121 and second slider 3122 in order to lower package carriage 3132a. FIG. 104C illustrates first slider 3121 and second slider 3122 after a package has been unloaded. FIG. 104D illustrates the rotational moment occurring in first slider 3121 and second slider 3122. FIG. 104A through FIG. 104D illustrate the internal structure of second vehicle main body 3110.

As illustrated in (a) and (b) in FIG. 104A, unmanned transport system 3100 includes an unmanned transport vehicle, first connecting device 3103, second connecting device 3140, damper 3151, first actuator 3161, first slider 3121, second slider 3122, second actuator 3162, third actuator 3163, and control processor 3165.

The unmanned transport vehicle is a mobile body or the like that travels on rail 7. Stated differently, the unmanned transport vehicle can move along rail 7 provided above the ground that it is attached to. This unmanned transport vehicle can carry a package from the sender to the receiver while a plurality of connectors are connected to rail 7.

The unmanned transport vehicle includes first vehicle main body 3101 and second vehicle main body 3110.

First vehicle main body 3101, which is elongated, can move along rail 7 while being connected to rail 7 by at least one first connecting device 3103. First vehicle main body 3101 is one example of the first main body.

First vehicle main body 3101 is provided with at least one first connecting device 3103 that can be suspended from the rail located above the unmanned transport vehicle. In the present embodiment, as first connecting device 3103, a first connector and a second connector provided on the unmanned transport vehicle.

The first connector is located on one side in the lengthwise direction of first vehicle main body 3101 of the unmanned transport vehicle. The second connector is located on the other side in the lengthwise direction of first vehicle main body 3101 of the unmanned transport vehicle.

In a view of first vehicle main body 3101 from vertically above, the bottom surface of first vehicle main body 3101 includes a circular, annular groove centered on second connecting device 3140. The top end of damper 3151 is slidably connected to annular groove 3101a of first vehicle main body 3101.

Second vehicle main body 3110 is elongated and is located below the unmanned transport vehicle. Second vehicle main body 3110 is connected to first vehicle main body 3101 via second connecting device 3140 and damper 3151. More specifically, in a view of second vehicle main body 3110 from vertically above, the upper surface of second vehicle main body 3110 includes a circular, annular groove centered on second connecting device 3140. The bottom end of damper 3151 is slidably connected to annular groove 3115 of second vehicle main body 3110. Annular groove 3115 of second vehicle main body 3110 is formed to correspond to annular groove 3101a of first vehicle main body 3101. Second vehicle main body 3110 is one example of the second main body.

Second connecting device 3140 rotatably connects first vehicle main body 3101 and second vehicle main body 3110. More specifically, second connecting device 3140 is a connector that is elongated in the vertical direction, with its bottom end connected to the central portion in the lengthwise direction of second vehicle main body 3110, and its top end connected to the central portion in the lengthwise direction of first vehicle main body 3101.

Second connecting device 3140 includes first actuator 3161 that is controlled by control processor 3165, and can rotate second vehicle main body 3110 with respect to first vehicle main body 3101. More specifically, when actuated, first actuator 3161 of second connecting device 3140 can rotate second vehicle main body 3110 with respect to first vehicle main body 3101, with the lengthwise direction of second connecting device 3140 as an axis. Therefore, second vehicle main body 3110 can rotate with respect to first vehicle main body 3101 around an axis parallel to the vertical direction.

Damper 3151 is a connector that is elongated in the vertical direction, and is connected between first vehicle main body 3101 and second vehicle main body 3110. Damper 3151 is slidably connected to both first vehicle main body 3101 and second vehicle main body 3110. Note that it is sufficient for damper 3151 to be slidably connected to either first vehicle main body 3101 or second vehicle main body 3110.

More specifically, damper 3151 has its top end slidably connected near second connecting device 3140 in the lengthwise direction of first vehicle main body 3101. Damper 3151 has its bottom end slidably connected near second connecting device 3140 in the lengthwise direction of second vehicle main body 3110. More specifically, the top end of damper 3151 is slidably connected to an annular groove formed on the lower surface of first vehicle main body 3101. The bottom end of damper 3151 is slidably connected to an annular groove formed on the upper surface of second vehicle main body 3110. Accordingly, damper 3151 slides with respect to first vehicle main body 3101 and second vehicle main body 3110 as a result of first actuator 3161 of second connecting device 3140 rotating, and may also circle around second connecting device 3140 with second connecting device 3140 as the center.

Damper 3151 can absorb vibrations. For example, damper 3151 can absorb vibrations that occur when second vehicle main body 3110 is unloading packages, as well as vibrations that occur when second vehicle main body 3110 rotates with respect to first vehicle main body 3101.

First actuator 3161 is a motor that rotates second vehicle main body 3110 with respect to the rail, i.e., first vehicle main body 3101. First actuator 3161 is actuated under control by control processor 3165.

Second vehicle main body 3110 can accommodate first slider 3121 and second slider 3122, and can extend first slider 3121 and second slider 3122 from second vehicle main body 3110.

When actuated by second actuator 3162, first slider 3121 can extend with respect to second vehicle main body 3110 in a first direction that extends in the lengthwise direction of second vehicle main body 3110. More specifically, as a result of being actuated by second actuator 3162, first slider 3121 is arranged on one side of second vehicle main body 3110 and extends from the one side of second vehicle main body 3110 further in a first direction that extends in the lengthwise direction of second vehicle main body 3110. Even more specifically, as a result of being actuated by second actuator 3162, first slider 3121 is coupled on the one side of second vehicle main body 3110, and can extend from the one side of second vehicle main body 3110 along the lengthwise direction of second vehicle main body 3110 so as to move away from second vehicle main body 3110, and can retract into the interior of second vehicle main body 3110.

As a result of being actuated by third actuator 3163, second slider 3122 can extend with respect to second vehicle main body 3110 in a second direction opposite to the first direction. More specifically, as a result of being actuated by third actuator 3163, second slider 3122 is arranged on the other side of second vehicle main body 3110 and extends from the other side of second vehicle main body 3110 further in a second direction that extends in the lengthwise direction of second vehicle main body 3110. Even more specifically, as a result of being actuated by third actuator 3163, second slider 3122 is coupled on the other side of second vehicle main body 3110, and can extend from the other side of second vehicle main body 3110 along the lengthwise direction of second vehicle main body 3110 so as to move away from second vehicle main body 3110, and can retract into the interior of second vehicle main body 3110.

Second actuator 3162 is equipped in second vehicle main body 3110 and can actuate first slider 3121 under control by control processor 3165.

Third actuator 3163 is equipped in second vehicle main body 3110 and can actuate second slider 3122 under control by control processor 3165.

Control processor 3165 can control first actuator 3161, second actuator 3162, and third actuator 3163.

More specifically, when first package carriage 3132a, which accommodates a first package, is connected to first slider 3121, and second package carriage 3132b, which accommodates a second package, is connected to second slider 3122, control processor 3165 controls second actuator 3162 and third actuator 3163 so as to extend first slider 3121 and second slider 3122 in such a manner that the rotational moment generated by first slider 3121 and the rotational moment generated by second slider 3122 are offset by each other.

For example, when control processor 3165 controls second actuator 3162, causing first slider 3121, to which first package carriage 3132a is connected, to extend from second vehicle main body 3110, a rotational moment in the vertical direction of first package carriage 3132a is generated, using the area between second connecting device 3140 and damper 3151 as a fulcrum. Accordingly, when control processor 3165 controls second actuator 3162 and third actuator 3163, causing second slider 3122, to which second package carriage 3132b is connected, to extend from second vehicle main body 3110, a rotational moment in the vertical direction of second package carriage 3132b is generated, using the area between second connecting device 3140 and damper 3151 as a fulcrum. Stated differently, by simultaneously controlling second actuator 3162 and third actuator 3163, control processor 3165 extends first slider 3121 and second slider 3122, thereby offsetting the rotational moments generated by first slider 3121 and second slider 3122.

Here, a case in which second vehicle main body 3110 of the unmanned transport vehicle rotates with respect to first vehicle main body 3101 and then unloads a package will be described with reference to FIG. 104B and FIG. 104C.

When the unmanned transport vehicle moves to the vicinity of the airspace above the delivery box, before the unmanned transport vehicle lowers the package carriage, second vehicle main body 3110 rotates with respect to first vehicle main body 3101. More specifically, before lowering the package at the receiver, control processor 3165 controls first actuator 3161 to rotate second vehicle main body 3110 with respect to first vehicle main body 3101. Here, control processor 3165 actuates first actuator 3161 to rotate second vehicle main body 3110 with respect to first vehicle main body 3101 so that the package carriage (for example, first package carriage 3132a) accommodating the package to be delivered (for example, the first package) faces toward the receiver. Here, damper 3151 slides along annular groove 3101a of first vehicle main body 3101 and annular groove 3115 of second vehicle main body 3110, with second connecting device 3140 as the center, while absorbing vibrations. In the present embodiment, second vehicle main body 3110 is rotated 90° with respect to first vehicle main body 3101. With this, the lengthwise direction of second vehicle main body 3110 is orthogonal to the lengthwise direction of first vehicle main body 3101.

As illustrated in (a) in FIG. 104B, control processor 3165 controls second actuator 3162 to extend first slider 3121 from one side of second vehicle main body 3110, and controls third actuator 3163 to extend second slider 3122 from the other side of second vehicle main body 3110. In the present embodiment, first slider 3121 and second slider 3122 are extended simultaneously. As a result, first slider 3121, when actuated by second actuator 3162, extends in the first direction with respect to second vehicle main body 3110, and second slider 3122, when actuated by third actuator 3163, extends in the second direction with respect to second vehicle main body 3110. Stated differently, control processor 3165 extends first slider 3121 and second slider 3122 in such a manner that the rotational moment generated by first slider 3121 and the rotational moment generated by second slider 3122 are offset by each other.

As illustrated in (b) in FIG. 104B, after extending first slider 3121 and second slider 3122, control processor 3165 controls a wire control module (not illustrated) to reel out wire 3123, thereby lowering first package carriage 3132a. Here, control processor 3165 controls third actuator 3163 to gradually retract second slider 3122 that is on the other side of second vehicle main body 3110 into the interior of second vehicle main body 3110. Stated differently, control processor 3165 extends first slider 3121 and second slider 3122 in such a manner that the rotational moment generated by first slider 3121 becomes greater than the rotational moment generated by second slider 3122. This causes second vehicle main body 3110 to include toward the first package carriage 3132a side relative to the horizontal plane. Here, damper 3151 can absorb vibrations that occur in second vehicle main body 3110.

As illustrated in FIG. 104C, when the package is unloaded from first package carriage 3132a to the destination point, the weight of the package is removed from first package carriage 3132a, causing second vehicle main body 3110 to return to an attitude that is approximately parallel to the horizontal plane. Here, damper 3151 can absorb vibrations that occur in second vehicle main body 3110.

Control processor 3165 controls the wire control module to reel in wire 3123 and raise first package carriage 3132a. Unmanned aerial vehicle then moves to the next destination.

Note that in the present embodiment, the weight of the first package accommodated in first package carriage 3132a and the weight of the second package accommodated in second package carriage 3132b may differ. In such cases, m × L1 ≈ M × L2, where m is the weight of the package in first package carriage 3132a, M is the weight of the package in second package carriage 3132b, L1 is the horizontal distance from first package carriage 3132a to the center of the rotational moment, and L2 is the horizontal distance from second package carriage 3132b to the center of the rotational moment, as illustrated in FIG. 104D. Control processor 3165 may offset the rotational moments generated by first slider 3121 and second slider 3122 by extending first slider 3121 or second slider 3122 by simultaneously controlling second actuator 3162 and third actuator 3163.

### [Embodiment 20]

Unmanned transport system 3200 according to the present embodiment differs from Embodiment 1 and the like in that, for example, unmanned transport vehicle 3202 collects the shipping box of the package delivered by unmanned transport vehicle 3202. Hereinafter, since the basic configuration of unmanned transport system 3200 according to the present embodiment is the same as the basic configuration of the unmanned transport system according to Embodiment 1 and the like, the same reference signs as above are used and repeated description of the basic configuration of unmanned transport system 3200 in the present embodiment will be omitted where appropriate. The configurations of the delivery system, unmanned aerial vehicle, and package transport device, etc., according to Embodiment 1, etc., may be applied to the present embodiment.

### Function and Configuration

First, unmanned transport system 3200 according to the present embodiment will be described with reference to FIG. 105.

FIG. 105 is a block diagram illustrating an example of unmanned transport vehicle 3202 and delivery reception device 3201 of unmanned transport system 3200.

First, as illustrated in FIG. 105, when delivering a package to delivery reception device 3201, which is the receiver of the package, the package may be accommodated in a shipping box for delivery. In such cases, the shipping box may be collected from delivery reception device 3201. Delivery reception device 3201 is, for example, the delivery box or delivery reception box according to the present disclosure.

For example, unmanned transport system 3200 may obtain a signal indicating that a product has been received as a result of the user using delivery reception device 3201 and a signal transmitted from delivery reception device 3201 indicating that an empty box has been returned. In such cases, unmanned transport system 3200 transports unmanned transport vehicle 3202 towards delivery reception device 3201 to collect the shipping box of the package delivered by unmanned transport vehicle 3202 to delivery reception device 3201.

For example, unmanned transport system 3200 may obtain a signal indicating that the user has canceled receipt of the product as a result of the user using delivery reception device 3201. In such cases, unmanned transport system 3200 transports unmanned transport vehicle 3202 towards delivery reception device 3201 to collect the shipping box of the package delivered by unmanned transport vehicle 3202 to delivery reception device 3201.

For example, unmanned transport system 3200 may obtain a signal indicating that the receipt period or receipt time for the user to receive the product has passed as a result of the user using delivery reception device 3201. In such cases, unmanned transport system 3200 transports unmanned transport vehicle 3202 towards delivery reception device 3201 to collect the shipping box of the package delivered by unmanned transport vehicle 3202 to delivery reception device 3201.

### Operation Example

Next, operations for collecting the shipping box will be described with reference to FIG. 106.

FIG. 106 is a flowchart illustrating operations according to Embodiment 20.

First, unmanned transport system 3200 determines whether a receipt notification has been obtained from delivery reception device 3201 (S3101). More specifically, unmanned transport system 3200 determines whether a signal indicating that a product has been received and a signal transmitted from delivery reception device 3201 indicating that an empty box has been returned have been obtained from delivery reception device 3201.

If unmanned transport system 3200 determines that a receipt notification has been obtained from delivery reception device 3201 (YES in S3101), unmanned transport system 3200 determines whether a notification that an empty box has been returned has been made by delivery reception device 3201 (S3104).

If unmanned transport system 3200 determines that a notification that an empty box has been returned has not been made by delivery reception device 3201 (NO in S3104), unmanned transport system 3200 repeats the process of step S3104.

However, if unmanned transport system 3200 determines that a notification that an empty box has been returned has been made by delivery reception device 3201 (YES in S3104), unmanned transport system 3200 collects the shipping box from delivery reception device 3201 by transporting unmanned transport vehicle 3202 towards delivery reception device 3201 (S3105). Unmanned transport system 3200 then ends the processing in the flowchart of FIG. 106.

If unmanned transport system 3200 determines that a receipt notification has not been obtained from delivery reception device 3201 (NO in S3101), unmanned transport system 3200 determines whether a cancellation notification has been made by the user (S3102). More specifically, unmanned transport system 3200 determines whether a signal indicating that the user has canceled receipt of the product has been obtained from delivery reception device 3201.

If unmanned transport system 3200 determines that a cancellation notification has been made by the user (YES in S3102), unmanned transport system 3200 collects the shipping box from delivery reception device 3201 by transporting unmanned transport vehicle 3202 towards delivery reception device 3201 (S3105). Unmanned transport system 3200 then ends the processing in the flowchart of FIG. 106.

However, if unmanned transport system 3200 determines that a cancellation notification has not been made by the user (NO in S3102), unmanned transport system 3200 determines whether the receipt period or receipt time has passed (S3103). More specifically, unmanned transport system 3200 determines whether a signal indicating that the receipt period or receipt time for the user to receive the product has passed has been obtained from delivery reception device 3201.

If unmanned transport system 3200 determines that the receipt period or receipt time has passed (YES in S3103), unmanned transport system 3200 collects the shipping box from delivery reception device 3201 by transporting unmanned transport vehicle 3202 towards delivery reception device 3201 (S3105). Unmanned transport system 3200 then ends the processing in the flowchart of FIG. 106.

However, if unmanned transport system 3200 determines that the receipt period or receipt time has not passed (NO in S3103), the processing in the flowchart of FIG. 106 ends.

### [Embodiment 21]

Hereinafter, information terminal 3210 according to the present embodiment differs from Embodiment 20 and the like in that, for example, it allows a user to specify the time and place where the package is to be collected. Hereinafter, since the basic configuration of unmanned transport system 3200 according to the present embodiment is the same as the basic configuration of the unmanned transport system according to Embodiment 1 and the like, the same reference signs as above are used and repeated description of the basic configuration of unmanned transport system 3200 in the present embodiment will be omitted where appropriate. The configurations of the delivery system, unmanned aerial vehicle, and package transport device, etc., according to Embodiment 1, etc., may be applied to the present embodiment.

### Function and Configuration

First, unmanned transport system 3200 according to the present embodiment will be described with reference to FIG. 107.

FIG. 107 is a block diagram illustrating management system 3203, information terminal 3210, unmanned transport vehicle 3202, and delivery box 3206.

As illustrated in FIG. 107, unmanned transport system 3200 includes information terminal 3210, unmanned transport vehicle 3202, and delivery box 3206.

An application for use in a service for delivering products is installed on information terminal 3210. The user can request the collection of a product via the application on information terminal 3210.

Information terminal 3210 is communicably connected to management system 3203, which is used in a service for delivering products from delivery box 3206 using unmanned transport vehicle 3202. Delivery box 3206 is one example of the collection device.

When the user activates the application, information terminal 3210 can display an image on the display that includes candidates for the time (point in time, period) and place for which the user requests collection. When a user selects (inputs) a candidate for the time and place for requesting collection on information terminal 3210, information terminal 3210 sends information including the selected first time (first point in time, first period) and the selected first place (address, latitude and longitude) to management system 3203.

Management system 3203 receives information including the first time and the first place selected by the user from information terminal 3210 of the user. Based on the information including the first time and the first place, management system 3203 transmits an instruction to unmanned transport vehicle 3202 that instructs unmanned transport vehicle 3202 to arrive at the first place by the first time.

### Operation Example

Next, operations performed by management system 3203 in a case in which a user specifies the time and place for package collection will be described with reference to FIG. 108.

FIG. 108 is a flowchart illustrating operations according to Embodiment 21.

First, when the user opens the application on information terminal 3210, the application for use by the user is displayed on the display of information terminal 3210. The application displays an image for requesting collection (S3111). The user operates the application to request collection.

Next, the application displays an image that includes candidates for the time and place for the user to request collection (S3112). The user selects the candidate time and place for requesting collection.

Next, the application transmits information including the first time and first place selected by the user to management system 3203 via information terminal 3210 (S3113). Management system 3203 obtains information including the first time and the first place, and based on the information including the first time and the first place, sets a departure time for unmanned transport vehicle 3202 that is before the first time.

Next, unmanned transport vehicle 3202 delivers the shipping box to delivery box 3206 at the first place before the first time (S3114). Stated differently, when the current time becomes the departure time set by management system 3203, unmanned transport vehicle 3202 delivers the shipping box to delivery box 3206 at the first place. Note that unmanned transport vehicle 3202 may also serve as a package receiver like delivery box 3206 when delivering the shipping box.

With this, the user accommodates the package in the shipping box delivered to delivery box 3206, and re-accommodates the shipping box containing the package into delivery box 3206. With this, delivery box 3206 transmits a collection completion notification to management system 3203, indicating that the shipping box containing the package has been accommodated inside delivery box 3206 and that the box has been placed at a predetermined location.

Next, management system 3203 determines whether a collection completion notification indicating that the box has been placed at the predetermined location has been made by delivery box 3206 (S3115).

If management system 3203 determines that a delivery completion notification has not been made by unmanned transport vehicle 3202 (NO in S3115), management system 3203 repeats the process of step S3115.

However, if management system 3203 determines that a delivery completion notification has been made by unmanned transport vehicle 3202 (YES in S3115), unmanned transport vehicle 3202 collects the shipping box containing the package (S3116). The processing in the flowchart of FIG. 108 then ends.

### OTHER VARIATIONS

Although the present disclosure has been described above based on various embodiments, the present disclosure is not limited to these embodiments.

The unmanned transport system according to the embodiment described above may be applied to an autonomous aerial vehicle instead of an unmanned aerial vehicle, for example. In this case, the term "unmanned aerial vehicle" or "drone" used in the foregoing descriptions is replaced with "autonomous aerial vehicle" as appropriate. Alternatively, the techniques described above may be applied to any aerial vehicle regardless of whether the aerial vehicle is manned or unmanned or regardless of whether the aerial vehicle is autonomously driven or manually driven.

Each element included in the system according to the above embodiments may be implemented by dedicated hardware or through execution of a software program suitable for the element. Each element may be implemented by a program executing unit, such as a CPU or a processor, reading and executing a software program recorded on a recording medium, such as a hard disk or a semiconductor memory.

The processors functioning as the elements in the system are typically implemented as an LSI circuit, which is an integrated circuit. These processors may be realized as individual chips, or a portion or all of the processors may be realized collectively as a single chip.

Moreover, circuit integration is not limited to LSI; the processors may be realized as dedicated circuits or generic processors. A field programmable gate array (FPGA) that is programmable after the LSI circuit is manufactured, or a reconfigurable processor whose connections and settings regarding circuit cells in the LSI circuit are reconfigurable, may be used.

In the above embodiments, each element may be implemented by dedicated hardware or through execution of a software program suitable for the element. Each element may be implemented by a program executing unit, such as a CPU or a processor, reading and executing a software program recorded on a recording medium, such as a hard disk or a semiconductor memory.

All of the values used above are mere examples used for illustrative purposes; the embodiments of the present disclosure are not limited to the exemplary values.

The block diagrams illustrate one example of the division of functional blocks; a plurality of functional blocks may be realized as a single functional block, a single functional block may be broken up into a plurality of functional blocks, and part of one function may be transferred to another functional block. The functions of a plurality of functional blocks having similar functions may be processed by a single piece of hardware or software in parallel or by time-division.

The order in which the steps in the flowcharts are executed are mere examples in order to specifically describe the present disclosure, and may include orders other than those exemplified. Moreover, some of the steps may be executed at the same time as (in parallel with) other steps.

### [Additional Comments]

An unmanned aerial vehicle is an unmanned aerial vehicle that delivers a package, and the unmanned aerial vehicle includes a plurality of rotary wings, a plurality of first motors that respectively rotate the plurality of rotary wings, a main body that supports the plurality of first motors, a connector that is to be connected to a rail provided at a position spaced apart from a ground surface with the main body hanging from the connector, a movable block that sets an inclination of an virtual plane containing the plurality of rotary wings relative to a support direction in which the connector is supported on the rail, and a control circuit that controls the plurality of first motors and the movable block. The connector includes a first end connected to the main body and a second end to be slidably connected to the rail. The support direction extends from the first end toward the second end of the connector. When the second end of the connector is connected to the rail, the control circuit (i) sets a rotation rate of the plurality of first motors to a rotation rate that is lower than a minimum rotation rate necessary for causing the unmanned aerial vehicle to float and that is higher than a minimum rotation rate necessary for propelling the unmanned aerial vehicle in a direction in which the rail extends and (ii) causes the movable block to increase an angle formed by a normal direction of the virtual plane relative to the support direction of the connector.

According to this configuration, the unmanned aerial vehicle can move along the rail while the connector is connected to the rail. In the case of (i), the control circuit controls the rotation rate of the plurality of first motors so as to achieve the rotation rate that is lower than the minimum rotation rate necessary for causing the unmanned aerial vehicle to hover and that is higher than the minimum rotation rate necessary for propelling the unmanned aerial vehicle. Thus, the unmanned aerial vehicle can move along the rail at an appropriate speed. In the case of (ii), the control circuit controls the actuator so as to change the inclination of the virtual plane containing the plurality of rotary wings relative to the support direction of the connector. This makes it possible to regulate the speed of the unmanned aerial vehicle.

A delivery system may include an unmanned aerial vehicle, a plurality of support pillars, and a rail spanning between two adjacent support pillars among the plurality of support pillars.

The movable block may be located between the main body and the connector.

This configuration allows the movable block to change the angle of the connector relative to the main body with ease.

For example, in a case where the connector is disposed at or around the center of gravity of the main body, the movable block is also disposed at or around the center of gravity of the main body. This configuration makes it possible to balance the center of gravity of the unmanned aerial vehicle.

The unmanned aerial vehicle further includes a pair of wings.

According to this configuration, for example, the unmanned aerial vehicle can be rotated in the horizontal direction if the pair of wings are yaw wings, or the unmanned aerial vehicle can be rotated in the vertical direction if the pair of wings are pitch wings. Therefore, the traveling direction of the unmanned aerial vehicle can be steered freely, and the unmanned aerial vehicle can be moved stably.

After the control circuit has increased the angle with the movable block, the control circuit may disengage the connector from the rail if the propelling speed of the unmanned aerial vehicle has exceeded a predetermined value.

This configuration can keep the connector from making contact with the rail, and thus the safety of the unmanned aerial vehicle can be increased.

If the connector is being disengaged from the rail, the control circuit may cause the movable block to reduce the angle and control the rotation rate of the plurality of first motors so as to achieve a rotation rate higher than the minimum rotation rate necessary for causing the unmanned aerial vehicle to hover.

According to this configuration, when the connector is disengaged from the rail, reducing the angle allows the unmanned aerial vehicle to hover to a predetermined height from the ground surface. This can keep the unmanned aerial vehicle from making contact with an object, and thus the safety of the unmanned aerial vehicle can be increased.

The control circuit may control the rotation rate of the plurality of first motors so as to increase the angle to greater than 15 degrees in (ii).

With these, the speed of the unmanned aerial vehicle can be appropriate.

The control circuit may control the rotation rate of the plurality of first motors so as to increase the angle to greater than 45 degrees in (ii).

The control circuit may control the rotation rate of the plurality of first motors so as to increase the angle to greater than 65 degrees in (ii).

The control circuit may control the rotation rate of the plurality of first motors so as to increase the angle to greater than 80 degrees in (ii).

The connector may include a support portion swingably connected to the main body and a first arm connected to one end of the support portion.

This configuration allows the first arm to swing along with a swinging movement of the support portion. Therefore, the first arm can connect itself to the rail more easily.

The first arm may be a hanger for hanging the unmanned aerial vehicle from the rail.

According to this configuration, the first arm can be hung on the rail when the unmanned aerial vehicle has stopped. Therefore, a package can be placed at a receiver with the unmanned aerial vehicle hanging from the rail.

The connector may further include a wheel for rotatable contact with the rail that is connected to the first arm.

According to this configuration, when the unmanned aerial vehicle becomes connected to the rail, the unmanned aerial vehicle can move along the rail with the wheel making contact with the rail. The wheel starts rotating upon friction with the rail. Therefore, the unmanned aerial vehicle can travel on the rail solely with the propelling force produced by the rotation of the rotary wings in the traveling direction. Thus, this configuration renders it unnecessary for the unmanned aerial vehicle to use the rotary force of the rotary wings as a lifting force for lifting itself up. As a result, the energy consumed by the unmanned aerial vehicle can be reduced.

The connector may further include a second arm connected to one end of the support portion.

According to this configuration, not only the first arm but also the second arm can be connected to the rail. Therefore, the possibility that the unmanned aerial vehicle falls off from the rail can be reduced, and the safety in the system that includes the unmanned aerial vehicle can be further increased.

The first arm may be a first hanger for hanging the unmanned aerial vehicle from the rail. The second arm may be a second hanger for hanging the unmanned aerial vehicle from the rail. The connector may further include a first actuator that sets the angle of the first arm relative to the support portion and a second actuator that sets the angle of the second arm relative to the support portion.

This configuration makes it possible to hang the unmanned aerial vehicle from the rail reliably. Therefore, the possibility that the unmanned aerial vehicle falls off from the rail can be reduced, and the safety in the system that includes the unmanned aerial vehicle can be further increased.

The connector may further include a base disposed between the support portion and the first and second arms, and a third actuator that sets the angle of the base relative to the support portion.

According to this configuration, the height of the first arm relative to the main body or the height of the second arm relative to the main body can be changed only by changing the angle of the base. Therefore, the heights of the first arm and the second arm can be changed without tilting the main body, and thus the stability of the unmanned aerial vehicle can be maintained.

The first arm may include a first hook that extends from a first connected end connected to the first actuator to a first open end. The second arm may include a second hook that extends from a second connected end connected to the second actuator to a second open end. The first hook may include a first bent portion that is bent in a first direction and that is located between the first connected end and the first open end. The second hook may include a second bent portion that is bent in a second direction opposite the first direction and that is located between the second connected end and the second open end.

According to this configuration, the horizontal attitude of the main body can be maintained when the first hook is hung on the rail, and the horizontal attitude of the main body can be maintained also when the second hook is hung on the rail. Therefore, the first hook and the second hook can maintain an appropriate attitude of the unmanned aerial vehicle.

The first hook and the second hook make it easier to hook the unmanned aerial vehicle to the rail.

When the unmanned aerial vehicle is slidably hung from a first rail via first the hook, the control circuit may control the second actuator so as to hook the second hook onto a second rail that extends along and adjacent to the first rail and control the first actuator so as to disengage the first hook from the first rail.

According to this configuration, for example, when the first hook of the unmanned aerial vehicle is connected to the first rail and if the first hook is disengaged from the first rail after the second hook has become connected to the second rail, the unmanned aerial vehicle can switch the connection from the first rail to the second rail serving as another rail and move along the second rail. Therefore, the unmanned aerial vehicle can reliably switch from one rail to another rail at the branching point of these rails. Thus, the possibility that the unmanned aerial vehicle falls off can be reduced, and the safety in the system that includes the unmanned aerial vehicle can be further increased.

A delivery system may include an unmanned aerial vehicle, a plurality of support pillars, and the first rail and the second rail spanning between two adjacent support pillars among the plurality of support pillars.

When the unmanned aerial vehicle is slidably hung from a first rail via first the hook and the second hook, the control circuit may control the second actuator so as to disengage the second hook from the first rail and hook the second hook onto a second rail that extends along and adjacent to the first rail and control the first actuator so as to disengage the first hook from the first rail and hook the first hook onto the second rail.

According to this configuration, for example, when the first hook and the second hook of the unmanned aerial vehicle are connected to the first rail and if the first hook is disengaged from the first rail and connected to the second rail after the second hook has disengaged from the first rail and become connected to the second rail, the unmanned aerial vehicle can switch the connection from the first rail to the second rail serving as another rail and move along the second rail. Therefore, the unmanned aerial vehicle can reliably switch from one rail to another rail at the branching point of these rails. Thus, the possibility that the unmanned aerial vehicle falls off can be reduced, and the safety in the system that includes the unmanned aerial vehicle can be further increased.

When the second hook is to be hooked onto the second rail, the control circuit may tilt the main body or the support portion in a second direction so as to position the second connected end higher than the first connected end. When the first hook is to be disengaged from the first rail, the control circuit may tilt the main body or the support portion in a first direction so as to position the first connected end higher than the second connected end.

According to this configuration, by tilting the main body or the support portion, the first hook and the second hook can be hooked onto the rail with ease, or the first hook and the second hook can be disengaged from the rail with ease.

The unmanned aerial vehicle may further include a hanging wire that is connected to the main body and that hangs a package therefrom and a lift motor that can reel in the hanging wire. The control circuit may position the unmanned aerial vehicle at a position vertically above a storage device for storing a package with the connector being connected to the rail. Then, the control circuit may reel out the hanging wire by driving the lift motor and lower the package from the main body so as to store the package into the storage device.

According to this configuration, upon the unmanned aerial vehicle arriving at the destination point, the control circuit controls the lift motor so as to reel out the hanging wire. Thus, the unmanned aerial vehicle can lower the package and store the package into the storage device. Therefore, the unmanned aerial vehicle can deliver the package to the receiver.

While the control circuit is reeling out the hanging wire, the control circuit may adjust at least one of the position and the orientation of the main body in accordance with the position of the package relative to the storage device.

According to this configuration, even if the position of the unmanned aerial vehicle fails to match the position directly above the storage device, the control circuit can position the main body relative to the storage device by adjusting at least one of the position and the orientation of the main body. Therefore, the unmanned aerial vehicle can reliably lower the package and store the package into the storage device, which in turn makes it possible to reliably deliver the package to the receiver.

In particular, even if the unmanned aerial vehicle moves from a position directly above the storage device due to the wind or the like, the unmanned aerial vehicle can position the main body relative to the storage device.

When the position of the package is displaced in a third direction from the position vertically above the storage device, the control circuit may move the unmanned aerial vehicle in a fourth direction opposite the third direction, along the direction in which the rail extends.

According to this configuration, even if the position of the package has changed (moved) in the third direction via the hanging wire due to the wind or the like, the control circuit can change the position of the unmanned aerial vehicle in the fourth direction, which is the opposite direction of the third direction. Therefore, the unmanned aerial vehicle can reliably lower the package and store the package into the storage device, which in turn makes it possible to more reliably deliver the package to the receiver.

When the position of the package is displaced in a fifth direction from the position vertically above the storage device, the control circuit may swing the unmanned aerial vehicle about the rail and move the center of gravity of the unmanned aerial vehicle in a sixth direction, which is the opposite direction of the fifth direction.

According to this configuration, even if the package displaces (moves) in the fifth direction via the hanging wire due to the wind or the like, the control circuit can change the position of the unmanned aerial vehicle in the sixth direction, which is the opposite direction of the fifth direction, by moving the center of gravity of the unmanned aerial vehicle. Therefore, the unmanned aerial vehicle can reliably lower the package and store the package into the storage device, which in turn makes it possible to more reliably deliver the package to the receiver.

The unmanned aerial vehicle may further include a thruster device that is attachable to and detachable from a package, and the thruster device may include a plurality of propellers, a plurality of second motors that respectively rotate the plurality of propellers, and a support member that supports the plurality of second motors.

With this, even if the unmanned aerial vehicle is misaligned relative to a position directly above the storage device, the thruster device can guide the package to the storage device. Therefore, the unmanned aerial vehicle can reliably lower the package and store the package into the storage device, which in turn makes it possible to more reliably deliver the package to the receiver. Even in a situation in which the opening of the storage device is narrow and it is difficult to insert a package, the unmanned aerial vehicle can reliably insert the package into the storage device. This eliminates the need for a large area to land the unmanned aerial vehicle.

In particular, even if the unmanned aerial vehicle moves from a position directly above the storage device due to the wind or the like, the thruster device can store the package in the storage device.

The plurality of propellers may include a first propeller disposed on a first side portion of the support member and a second propeller disposed on a second side portion different than the first side portion of the support member.

With this, the position and orientation of the thruster device relative to the storage device can be adjusted. Therefore, with this unmanned aerial vehicle, the thruster device can more reliably store the package in the storage device.

The control circuit may control the thruster device to actuate at least one of the plurality of second motors during at least part of a period of time during which the hanging wire is being reeled out.

With this, when lowering the package from the unmanned aerial vehicle, the position and orientation of the thruster device relative to the storage device can be adjusted. Therefore, with this unmanned aerial vehicle, the package can be smoothly stored in the storage device.

In the delivery system, the plurality of support pillars may each be a utility pole.

According to this configuration, existing utility poles can be used as support pillars, and no new support pillars need to be installed for the rails. Therefore, this system can prevent a surge in the cost of installation.

The delivery system may further include a lead-in support pillar disposed within a predetermined site and a lead-in wire stretched to the rail. The height from the ground surface to a first connection point at which the lead-in wire and the lead-in support pillar are connected to each other may be lower than the height from the ground surface to a second connection point at which the lead-in wire and the rail are connected to each other.

According to this configuration, the rail is disposed at a position higher than the first connection point, and thus the unmanned aerial vehicle can move along a high position. Since the unmanned aerial vehicle travels along a position where the unmanned aerial vehicle is less likely to be recognized by people, the privacy of the user at the receiver and the privacy of people in a facility, such as a home, that is located so as to face a rail can be protected.

The utility pole may support a power transmission line, and the rail may be provided at a position that is lower than the power transmission line and higher than the leading end of the lead-in support pillar.

According to this configuration, since the rail is disposed under the power transmission line, the rail can be disposed at a position where the unmanned aerial vehicle will not make contact with the power transmission line, and the unmanned aerial vehicle can travel along the rail. Therefore, the safety of the unmanned aerial vehicle delivering packages can be ensured.

The plurality of support pillars may be streetlights.

According to this configuration, existing streetlights can be used as support pillars, and no new support pillars need to be installed for the rails. Therefore, this system can prevent a surge in the cost of installation.

The delivery system may further include a protective net stretched along a position vertically below the approaching region of the first rail and the second rail. The approaching region is a region where the distance between the first rail and the second rail is smaller than or equal to the width of the unmanned aerial vehicle.

According to this configuration, since the distance between the first rail and the second rail is smaller than the width (the size) of the main body, the unmanned aerial vehicle can make a switch from the first rail to the second rail with ease and then move along the second rail.

As the protective net is provided along a position vertically below the approaching region of the first rail and the second rail, even if the unmanned aerial vehicle becomes disengaged from the first rail and the second rail, the possibility that the unmanned aerial vehicle falls to the ground can be reduced. Therefore, the safety in the system that includes the unmanned aerial vehicle can be further increased.

The height of at least a portion of the second rail may be higher than the height of an adjacent first rail.

According to this configuration, when two unmanned aerial vehicles are traveling along the first rail in opposite directions, one unmanned aerial vehicle of the two unmanned aerial vehicles can take refuge on the second rail. In other words, the second rail can be used as a refuge track. This configuration can keep the unmanned aerial vehicles from colliding with each other or inhibit the congestion of unmanned aerial vehicles.

The angle may be at least -30 degrees and at most +30 degrees.

Since this inhibits an increase in the amount of thrust the device produces for hovering, for example, it is possible to inhibit the wire from becoming slack due the device suddenly rising.

The device may further include a protective member surrounding the plurality of propellers.

With this, since the protective member can protect the rotating propellers, the propellers can be prevented from coming into contact with other objects.

The device may further include a reel to which the other end of the wire is connected, and a lift motor that rotates the reel to reel out the wire. When the reel is positioned vertically above a storage device for storing the package, the controller starts actuating the plurality of motors after the length of the portion of the wire that has been reeled out exceeds a predetermined length.

With this, since the device starts adjusting its position relative to the predetermined position when the device approaches the storage device, it easier for the device to align itself relative to the predetermined position.

The predetermined length may be equivalent to half the distance from the storage device to the reel.

With this, since the device starts adjusting its position relative to the predetermined position when the device is positioned near the storage device, it even easier for the device to align itself relative to the predetermined position.

Each of the plurality of propellers may include a plurality of blades. A plurality of protrusions may be provided on the surface of each of the plurality of blades. The plurality of protrusions may form a striped pattern extending in the direction of rotation of the plurality of blades.

This makes it possible to reduce the influence of wind during flight of the device. This makes it even easier to align the device relative to the predetermined position, because the attitude of the device can be stabilized even in windy conditions.

A storage device may include: a container that defines a space for storing a package; a top lid that is provided on a top portion of the container and can open and close a top opening for inserting the package into the space through the top opening; and a side lid that is provided on a side portion of the container and can open and close a side opening for removing the package in the space through the side opening.

With this, a package can be placed into the space of the storage device from above the storage device, and a package stored in the space can be removed from the side of the storage device. Accordingly, a package can be easily removed.

A system may include a storage device and a lifting device that is attachable to and detachable from a package and can be lowered from vertically above the storage device. The lifting device may include a protrusion. The storage device may include a hole that is provided in the top portion and accommodates the insertion of the protrusion, and a mechanism for opening the top lid when the protrusion is inserted into the hole.

With this, when the lifting device stores the package in the storage device, the lifting device can be aligned with the top opening of the storage device by inserting the protrusion into the hole. As a result, the package can be stored with certainty in the space in the storage device.

An unmanned aerial vehicle may include: a plurality of rotary wings; a plurality of motors that respectively rotate the plurality of rotary wings; a main body that supports the plurality of motors; and a connector for connecting to a rail positioned separated from the ground surface while the main body is hanging. The connector may include: a fixed portion; a first arm including one end connected to the fixed portion and another end that opens and closes with respect to the fixed portion; a second arm including one end connected to the fixed portion and another end that opens and closes with respect to the fixed portion; a first actuator that opens and closes the first arm; a second actuator that opens and closes the second arm; and a controller that controls the first actuator and the second actuator. A first region enclosed by the first arm in the closed state and the fixed portion may be separated from a second region enclosed by the second arm in the closed state and the fixed portion.

With this, when the first arm of the unmanned aerial vehicle is connected to a first rail, which is one example of the rail, the first arm can be disconnected from the first rail after the second arm is connected to a second rail. This allows the unmanned aerial vehicle to switch connections from the first rail to the second rail, which is one example of another rail, and continue moving.

The fixed portion may extend upwardly from the main body and include a partition portion separating the first region and the second region.

With this, a single connector can be used to connect to two rails. Accordingly, the attitude of the connector can be maintained more stably than when two connectors are used.

The controller may control the first actuator and the second actuator so that at least one of the first arm and the second arm is in a closed state.

With this, if a rail is present in at least one of the closed first region and the closed second region, the unmanned aerial vehicle can securely hang from the rail.

When the controller receives an instruction to change the first arm from the closed state to the open state, the controller may determine whether the second arm is in the closed state or not. When the second arm is in the closed state, the controller may change the first arm to the open state. When the second arm is in the open state, the controller may maintain the first arm in the closed state.

With this, when a second rail is connected to the second arm in the closed state, a first rail can be connected to the first arm. When the second arm is in the open state, if a first rail is connected to the first arm in the closed state, the first arm can be maintained in the closed state without placing the first arm in the open state. In this way, the unmanned aerial vehicle can reliably hang from a rail, thereby inhibiting the unmanned aerial vehicle from falling.

When the controller receives an instruction to change the second arm from the closed state to the open state, the controller may determine whether the first arm is in the closed state or not. When the first arm is in the closed state, the controller may change the second arm to the open state. When the first arm is in the open state, the controller may maintain the second arm in the closed state.

With this, when a first rail is connected to the first arm in the closed state, a second rail can be connected to the second arm. When the first arm is in the open state, if a second rail is connected to the second arm in the closed state, the second arm can be maintained in the closed state without placing the second arm in the open state. In this way, the unmanned aerial vehicle can reliably hang from a rail, thereby inhibiting the unmanned aerial vehicle from falling.

The controller may further control the rotational speed of the plurality of motors, and when the first arm is in the open state, the second arm is in the closed state, and the second arm is hanging from the rail passing through the second region, the controller may increase a first rotational speed of a first motor, which is the motor closest to the first arm among the plurality of motors, to a rotational speed greater than a second rotational speed of a second motor, which is the motor closest to the second arm among the plurality of motors. Alternatively, when the second arm is in the open state, the first arm is in the closed state, and the first arm is hanging from the rail passing through the first region, the controller may increase the second rotational speed of the second motor, which is the motor closest to the second arm among the plurality of motors, to a rotational speed greater than the first rotational speed of the first motor, which is the motor closest to the first arm among the plurality of motors.

With this, if the second arm is in the closed state and the first arm is in the open state, the weight of the first arm moves the center of gravity to the first arm side. Therefore, by making the first rotational speed of the first motor on the first arm side greater than the second rotational speed of the second motor on the second arm side, an amount of buoyancy equivalent to the weight of the center of gravity displaced to the first arm side can be imparted to the unmanned aerial vehicle.

If the first arm is in the closed state and the second arm is in the open state, the weight of the second arm moves the center of gravity to the second arm side. Therefore, by making the second rotational speed of the second motor on the second arm side greater than the first rotational speed of the first motor on the first arm side, an amount of buoyancy equivalent to the weight of the center of gravity displaced to the second arm side can be imparted to the unmanned aerial vehicle.

As a result, the unmanned aerial vehicle can maintain the attitude of the main body of the unmanned aerial vehicle approximately parallel to the horizontal direction, even if the center of gravity is displaced from the center of the main body of the unmanned aerial vehicle.

The connector may further include a third actuator that changes the angle of the fixed portion relative to the main body. The controller may further control the third actuator. When the first arm is in the open state, the second arm is in the closed state, and the second arm is hanging from the rail passing through the second region, the controller may change the angle via the third actuator to position the second region directly above the center of the main body. When the second arm is in the open state, the first arm is in the closed state, and the first arm is hanging from the rail passing through the first region, the controller may change the angle via the third actuator to position the first region directly above the center of the main body.

With this, if the first arm is in the open state and the second arm hanging on the second rail is in the closed state, the first rail present in the first region may be let outside of the first region by simply changing the attitude (angle) of the fixed portion relative to the main body of the unmanned aerial vehicle.

If the second arm is in the open state and the first arm hanging on the first rail is in the closed state, the second rail present in the second region can be let outside of the second region by simply changing the attitude (angle) of the fixed portion relative to the main body of the unmanned aerial vehicle.

Thus, the first rail can be easily disconnected from the connector and the second rail can be easily disconnected from the connector by simply inclining the fixed portion relative to the main body. This also makes it easy to switch the connector connected to the first rail to the second rail or to switch the connector connected to the second rail to the first rail.

A system including the unmanned aerial vehicle and the rail, wherein the rail may be provided with a marker including predetermined information.

This allows the unmanned aerial vehicle to read the predetermined information indicated by the marker added to the rail. For example, the package can be more accurately delivered to the predetermined position by the predetermined information including an address or position information or the like.

A system including the unmanned aerial vehicle and the rail, wherein the rail may be provided with an uneven portion including predetermined information.

This allows the unmanned aerial vehicle to obtain predetermined information from the uneven portion added to the rail as it moves along the rail. For example, the package can be more accurately delivered to the predetermined position by the predetermined information including an address or position information or the like.

An unmanned aerial vehicle may include: a plurality of rotary wings; a plurality of motors that respectively rotate the plurality of rotary wings; a main body that supports the plurality of motors; a connector for connecting to a rail positioned separated from the ground surface while the main body is hanging; an actuator that changes the angle of the normal direction of a virtual plane including the plurality of rotary wings relative to a support direction in which the connector is supported by the rail; and a controller that controls the plurality of motors and the actuator. The connector may include a first end connected to the main body and a second end for slidably connecting to the rail. The support direction may be a direction from the first end of the connector toward the second end of the connector. In a first mode, the controller may align the normal direction of the virtual plane with the support direction via the actuator, and in a second mode, the controller may make the normal direction of the virtual plane orthogonal to the support direction via the actuator.

With this, the controller can change the attitude of the main body of the unmanned aerial vehicle relative to the support direction when traveling on the rail. For example, when the unmanned aerial vehicle is to travel on the rail, the second mode can be implemented, and when the unmanned aerial vehicle is to leave the rail, the first mode can be implemented. Accordingly, the unmanned aerial vehicle can change its flight mode as appropriate depending on the situation.

In a third mode, the controller may make the angle at least 10 degrees and at most 30 degrees via the actuator.

This allows the unmanned aerial vehicle to move along the rail without contact between the rail and the support member.

The unmanned aerial vehicle may further include a sensor that detects the inclination of the rail. The controller may change the angle according to the inclination of the rail.

With this, even when the rail is inclined relative to the horizontal direction, the unmanned aerial vehicle can move along the inclined rail.

The controller may align the normal direction of the virtual plane with the inclination of the rail via the actuator.

This allows the connector to move along the rail, thereby inhibiting the rail from coming into contact with the support member.

When the controller receives a first instruction to propel the unmanned aerial vehicle in a first direction along the rail, the controller may incline the normal direction of the virtual plane from the support direction toward a second direction, rotate the rotary wings of a first motor among the plurality of motors that is positioned in the first direction from the center of the main body in a first direction of rotation, and rotate the rotary wings of a second motor among the plurality of motors that is positioned in the second direction from the center of the main body in a second direction of rotation. The second direction may be the opposite of the first direction, and the second direction of rotation may be the opposite of the first direction of rotation.

This allows the unmanned aerial vehicle to move forward while maintaining the attitude of the unmanned aerial vehicle with respect to the main body relative to the support direction in a desired state.

When the controller obtains a second instruction to propel the unmanned aerial vehicle in the second direction along the rail, the controller may rotate the rotary wings of the first motor in the second direction of rotation and rotate the rotary wings of the second motor in the first direction of rotation.

With this, by reversing the directions of rotation of the first motor and the second motor, the unmanned aerial vehicle can move in reverse. For example, after the package is delivered, the unmanned aerial vehicle can return along the same rail along which it arrived.

When the controller obtains the second instruction, the controller may further incline the normal direction of the virtual plane from the support direction toward the first direction via the actuator, rotate the rotary wings of the first motor in the first direction of rotation, and rotate the rotary wings of the second motor in the second direction of rotation.

This allows the unmanned aerial vehicle to reverse the inclination of the main body of the unmanned aerial vehicle relative to the support direction. The inclination of the normal direction of the virtual plane changes from inclining toward the second direction to inclining toward the first direction relative to the support direction. This allows the unmanned aerial vehicle to move in reverse. For example, in this case as well, after the package is delivered, the unmanned aerial vehicle can return along the same rail along which it arrived.

The connector may include a fixed portion connected to a main body, an arm connected to the rail, and a second actuator that is disposed between the fixed portion and the arm and is rotatable about an axis of rotation parallel to the support direction. When the controller receives a second instruction to propel the unmanned aerial vehicle in the second direction along the rail, the controller may reverse the orientation of the main body by rotating the main body via the second actuator about the axis of rotation that is parallel to the support direction.

This makes it possible to invert the inclination of the main body of the unmanned aerial vehicle symmetrically with respect to the support direction by the fixed portion rotating relative to the arm about the axis of rotation that is parallel to the support direction. This allows the unmanned aerial vehicle to move in reverse. For example, in this case as well, after the package is delivered, the unmanned aerial vehicle can return along the same rail along which it arrived.

The connector may include an arm that is connected to the rail and can be opened and closed, and a third actuator that opens and closes the arm. When the controller receives a second instruction to propel the unmanned aerial vehicle in the second direction along the rail, the controller may change the arm from a closed state to an open state via the third actuator, control the plurality of motors to reverse the orientation of the main body about the support direction, and change the arm from the open state to the closed state via the third actuator.

With this, the unmanned aerial vehicle is temporarily disconnected from the rail, the orientation of the unmanned aerial vehicle is reversed, and then the connector of the unmanned aerial vehicle is reconnected to the rail. For example, in this case as well, after the package is delivered, the unmanned aerial vehicle can return along the same rail along which it arrived.

The connector may include an arm connected to the rail, and a roller that is provided on the inner peripheral surface of the arm and rotatably contacts the rail.

Accordingly, when the connector of the unmanned aerial vehicle is connected to the rail, the roller contacts the rail, allowing the unmanned aerial vehicle to move along the rail. The unmanned aerial vehicle is able to move along the rail using only its own propulsion in the traveling direction. Since the unmanned aerial vehicle does not have to expend energy on lift force to lift itself, the unmanned aerial vehicle can save energy.

The connector may include a pair of brake pads and a braking mechanism that changes the distance between the pair of brake pads so as to sandwich the rail between the pair of brake pads.

Accordingly, when the connector of the unmanned aerial vehicle is connected to the rail, the rail can be sandwiched between the pair of brake pads. This makes it easy to decelerate or stop the unmanned aerial vehicle that is moving.

When the controller obtains a stop instruction to stop the unmanned aerial vehicle, the controller may rotate the rotary wings of the first motor in the second direction of rotation and rotate the rotary wings of the second motor in the first direction of rotation.

This makes it possible to reverse the directions of rotation of the rotary wings of the first motor and the rotary wings of the second motor, in accordance with the stop instruction, relative to the directions of rotation of the rotary wings of the first motor and the rotary wings of the second motor when traveling forward. This makes it possible to stop movement of the unmanned aerial vehicle.

A storage device capable of storing a package delivered by an unmanned aerial vehicle may include: a container including a bottom portion and a side portion; a top lid provided above the container; and a load support member capable of supporting the load of the unmanned aerial vehicle carrying a package. The unmanned aerial vehicle may include a plurality of legs that can land on the load support member. The load support member may include a plurality of recesses that can support the plurality of legs. Each of the plurality of recesses may be a bowl-shaped or cone-shaped recess that opens upwardly.

With this, the plurality of recesses can engage with the plurality of legs to guide the plurality of legs when the unmanned aerial vehicle descends. As a result, the load support member can hold the unmanned aerial vehicle at a predetermined attitude. When the unmanned aerial vehicle delivers a package, the unmanned aerial vehicle can thus position itself vertically above the container. As a result, a package can be stored with certainty in the storage device.

A storage device capable of storing package delivered by an unmanned aerial vehicle may include: a container including a bottom portion and a side portion; a lid rotatably coupled to the container; a load support member capable of supporting the load of the unmanned aerial vehicle carrying a package; and one or more link rods coupled between the load support member and the lid. When the unmanned aerial vehicle applies a load to the load support member, the one or more link rods may transfer the load to the lid and open the lid.

With this, the lid of the container can be automatically opened simply by the unmanned aerial vehicle hanging from the load support member. Accordingly, the package delivered by the unmanned aerial vehicle can be stored in the container.

A method for storing a package delivered by an unmanned aerial vehicle into a storage device may include: supporting the unmanned aerial vehicle using a load support member of the storage device; storing the package in a container after a lid of the storage device opens and the package is lowered from the unmanned aerial vehicle via a wire; disconnecting the connection between the package and the wire; reeling in the wire; and separating the unmanned aerial vehicle from the load support member.

The lid may close to cover the top portion of the container when the load applied to the load support member is removed.

With this, the lid of the container can be automatically closed by the unmanned aerial vehicle flying away from the load support member.

The load support member may be disposed above the container.

With this, since the lid of the container is opened so long as the unmanned aerial vehicle is hanging from the load support member, the package delivered by the unmanned aerial vehicle can be easily stored in the container.

The load support member may be a suspension rod from which the unmanned aerial vehicle can hang.

With this, the load of the unmanned aerial vehicle hanging from the load support member can be reliably supported.

The suspension rod may include a V-shaped or U-shaped bend directly above the container.

This makes it easier to position the unmanned aerial vehicle because the unmanned aerial vehicle can easily be caught by the bend. Accordingly, since the lid of the container is opened so long as the unmanned aerial vehicle is hanging from the load support member, the package delivered by the unmanned aerial vehicle can be stored in the container even more easily.

The one or more link rods may include a first link rod, a second link rod, and a third link rod. A first end of the first link rod may be rotatably coupled to the suspension rod, a second end of the first link rod may be rotatably coupled to a third end of the second link rod, a fourth end of the second link rod may be rotatably coupled to a fifth end of the third link rod, and a sixth end of the third link rod may be rotatably coupled to the lid.

With this, when the unmanned aerial vehicle is hanging from the suspension rod, the suspension rod flexes vertically downward due to the load of the unmanned aerial vehicle. As a result, the load thereof is transferred, via the suspension rod, to the lid of the container via the first link rod, the second link rod, and the third link rod. Accordingly, the lid of the container can be reliably opened simply by the unmanned aerial vehicle hanging from the suspension rod. Accordingly, with this storage device, the package delivered by the unmanned aerial vehicle can be stored in the container more easily.

The storage device may further include a first axle that supports rotation of the load support member at a position between the two ends of the suspension rod, and a second axle that supports rotation of the third link rod at a position between the fifth end and the sixth end of the third link rod.

With this, the load of the unmanned aerial vehicle can be reliably transferred to the first link rod via the first axle. The load of the unmanned aerial vehicle transferred to the third link rod can be reliably transferred to the lid of the container via the second axle. This makes it possible to open the lid of the container.

The storage device may further include a support member that fixes the positions of the first axle and the second axle.

With this, the weight of the unmanned aerial vehicle hanging from the suspension rod can be reliably transferred to the lid of the container via the first link rod, the second link rod, and the third link rod, so that the lid of the container can be reliably opened.

The storage device may further include a door provided on the side portion of the container, and a first interlocking portion that locks the door when the lid is opened.

This inhibits a package from going through the door upon storing the package in the container. Locking the door makes it possible to inhibit forgetting to lock the door manually, which is excellent for convenience because it can inhibit theft of a package stored in the storage device.

The storage device may further include a second interlocking portion that locks the lid when the lid is closed.

With this, the lid can be automatically locked when the lid is closed. This reduces the frequency of having to lock the lid by hand. Locking the lid makes it possible to inhibit forgetting to lock the lid manually, which is excellent for convenience because it can inhibit theft of a package stored in the storage device.

A system may include the storage device and the unmanned aerial vehicle.

The unmanned aerial vehicle may include a first arm for hanging from the load support member.

With this, since the unmanned aerial vehicle can securely hang from the load support member, the unmanned aerial vehicle can maintain its attitude even if the actuation of a motor, for example, is stopped.

In the system, the unmanned aerial vehicle may include: a wire; a second arm that is connected to one end of the wire and holds a package; a reel that is connected to the other end of the wire and is capable of reeling in the wire; and a controller. The controller may reel out the wire to place the package into the container after the lid is opened, and after the package is placed on the bottom portion of the container, may cause the second arm to let go of the package and cause the reel to reel in the wire.

Accordingly, when the unmanned aerial vehicle is hanging from the load support member, the second arm and the package can be lowered toward the container by reeling out the wire. Once the package is placed on the bottom portion of the container, the second arm can be moved away from the package. Thus, the system can ensure that the package is stored inside the container.

In the system, the unmanned aerial vehicle may further include a camera capable of capturing images of the inside of the container.

This enables the unmanned aerial vehicle to confirm whether or not the package has been stored in the container. This can also prevent the second arm from separating from the package if the package is not correctly stored inside the container. After pulling up the package, the package can be stored in the container once again.

In the system, the controller may obtain an image of the inside of the storage device via the camera, and based on the image, execute an authenticated process that confirms that the unmanned aerial vehicle has stored the package.

This ensures the certainty that the package was stored in the container since the storing of the package into the storage device can be verified.

Based on the description of the above embodiments, the following techniques are disclosed.

A package transport device according to one aspect of the present disclosure includes: a main body; a rail holder held by a rail located above the main body; a turntable that rotates the main body; a first slider portion that extends with respect to the main body; and a package holder that holds a package attached to the first slider portion. Note that the turntable may be provided between the main body and the rail holder.

With this, the first slider portion can carry the package holder holding the package to a position spaced away from the rail. Accordingly, a package can be delivered to the receiver without having to install separate rails at the receiver.

Moreover, since the first slider portion can carry a package, the package transport device can be kept away from people. People are therefore less likely to feel stress from the sound or presence of the package transport device. Accordingly, the package transport device is less likely to cause anxiety when carrying a package.

A control method according to another aspect of the present disclosure is a method of controlling a package transport device. The package transport device includes: a main body; a rail holder held by a rail located above the main body; a turntable that is provided between the main body and the rail holder and rotates the main body; a first slider portion that extends with respect to the main body; and a package holder that holds a package attached to the first slider portion. The method includes: rotating the main body by the turntable; and extending the first slider portion with respect to the main body after the turntable rotates the main body.

This control method achieves the same advantageous effects as described above.

In the control method according to another aspect of the present disclosure, the first slider portion includes the package holder at one end of the first slider portion, and a counterweight of a predetermined weight at an other end of the first slider portion. In the rotating, the main body is rotated until a lengthwise direction of the frame approximately perpendicularly intersects an extending direction of the rail. In the extending, the first slider portion is extended from both ends of the frame in the lengthwise direction of the rectangular frame so as to maintain balance between a weight of the package and a weight of the counterweight. Note that the main body may include a frame that is rectangular in plan view. The main body may have a first length in the first direction that is longer than a second length in the second direction orthogonal to the first direction.

This control method achieves the same advantageous effects as described above.

In the control method according to another aspect of the present disclosure, the rail holder includes: a first rail holder located on one side of the frame in the lengthwise direction of the frame; a second rail holder located on an other side of the frame in the lengthwise direction of the frame; and a third rail holder located in a central region of the frame between the one side and the other side in the lengthwise direction of the frame. The package transport device further includes: a second slider portion that is disposed between the first rail holder and the main body and extends with respect to the main body; and a third slider portion that is disposed between the second rail holder and the main body and extends with respect to the main body. The turntable is disposed between the third rail holder and the main body. In the rotating, the turntable is rotated after the second slider portion and the third slider portion are extended to separate the first rail holder and the second rail holder from the rail.

This control method achieves the same advantageous effects as described above. By adjusting the position of the counterweight with respect to the main body, it is possible to tilt the attitude of the package transport device and extend the slider portion toward the receiver located higher or lower than the rail. Accordingly, the package can be delivered even to a receiver at a different height than the rail.

In the package transport device according to another aspect of the present disclosure, the first slider portion extends with respect to the main body after the turntable rotates the main body.

With this, after rotating the first slider portion so as to face the receiver, the first slider portion can be extended with respect to the main body. This makes it possible to more precisely deliver the package to the receiver.

In the package transport device according to another aspect of the present disclosure, the turntable rotates the main body until a lengthwise direction of the frame approximately perpendicularly intersects an extending direction of the rail. Note that the main body may include a frame that is rectangular in plan view. The main body may have a first length in the first direction that is longer than a second length in the second direction orthogonal to the first direction.

This makes it possible to change the attitude of the frame with respect to the turntable by rotating the turntable. It is therefore possible to adjust the direction of extension of the first slider portion with respect to the main body. This makes it possible to more precisely deliver the package to the receiver.

In the package transport device according to another aspect of the present disclosure, the package holder may be a first winch capable of reeling out and in a first wire, and the package transport device may further include: a package carriage connected to the first wire, for holding a package transported by the unmanned transport vehicle; a second winch connected to the package carriage and capable of reeling out and in a second wire; and an unmanned aerial vehicle connected to the second wire.

In the package transport device according to another aspect of the present disclosure, the first slider portion: includes the package holder at one end of the first slider portion, and a counterweight of a predetermined weight at an other end of the first slider portion; and extends so as to maintain balance between a weight of the package and a weight of the counterweight.

With this, when the first slider portion is carrying a package, the attitude of the package transport device can be adjusted via the counterweight and the package. Accordingly, the position of the counterweight relative to the main body can be adjusted so as to maintain the horizontal attitude of the main body, for example. This makes it possible to more precisely deliver the package to the receiver.

In the package transport device according to another aspect of the present disclosure, the counterweight is a battery.

This makes it possible to adjust the attitude of the package transport device using a device required by the package transport device. This eliminates the need for a separate counterweight.

In the package transport device according to another aspect of the present disclosure, the first slider portion: includes the package holder at one end of the first slider portion, and a rotary wing at an other end of the first slider portion; and extends so as to maintain balance between a weight of the package and a buoyancy of the rotary wing.

With this, even if the package is heavy, the package transport device can deliver the package to a predetermined position at a predetermined height because it is difficult for the package transport device to be in a tilted attitude with respect to the horizontal plane.

In the package transport device according to another aspect of the present disclosure, the rail holder includes: a first holder held by the rail from above the rail; and a second holder held by the rail so as to push up on the rail from below.

With this, the rail holder can be connected to the rail so as to clamp the rail from above and below. This inhibits the package transport device from disengaging from the rail, thus inhibiting the package transport device from falling, which ensures the safety of the package transport device.

In the package transport device according to another aspect of the present disclosure, the rail holder includes: a first rail holder located on one side of the frame in the lengthwise direction of the frame; a second rail holder located on an other side of the frame in the lengthwise direction of the frame; and a third rail holder located in a central region of the frame between the one side and the other side in the lengthwise direction of the frame.

This inhibits the package transport device from disengaging from the rail since the package transport device is supported by the rail by three rail holders. With this, the package transport device can be inhibited from falling, which ensures the safety of the package transport device.

In the package transport device according to another aspect of the present disclosure, the first rail holder includes a first rotating roller that contacts the rail and is actuated by an electric motor, the second rail holder includes a second rotating roller that contacts the rail and is actuated by an electric motor, the third rail holder includes a third rotating roller and a fourth rotating roller that contact the rail and are actuated by an electric motor.

This allows the package transport device to move along the rail because the rotating rollers contact the rail. Moreover, since four rotating rollers contact the rail, the package transport device can stably move along the rail.

The package transport device according to another aspect of the present disclosure further includes: a second slider portion that is disposed between the first rail holder and the main body and extends with respect to the main body; and a third slider portion that is disposed between the second rail holder and the main body and extends with respect to the main body. The turntable is disposed between the third rail holder and the main body. The turntable rotates the main body after the second slider portion and the third slider portion extend and the first rail holder and the second rail holder are separated from the rail.

With this, with two rails of different heights, the package transport device can transfer from one rail to the other by extending the slider portion. This allows the package transport device to turn right or left when traveling on the rail.

In the package transport device according to another aspect of the present disclosure, the third rail holder holds the rail so as to push up on the rail from below, and the first rail holder and the second rail holder are held by the rail, above the rail.

With this, the first rail holder, the second rail holder, and the third rail holder can sandwich the rail, allowing the package transport device to move stably along the rail.

The package transport device according to another aspect of the present disclosure further includes a motor that rotates the rail holder so as to release a hold of the rail holder by the rail so as to avoid contact between a rail support portion that supports the rail and the rail holder when the package transport device is traveling on the rail.

With this, when the package transport device is traveling on the rail, it can avoid the rail support portion so as to not contact the rail holder. This allows the package transport device to travel along the rail toward the receiver.

An unmanned aerial vehicle according to one aspect of the present disclosure includes: a main body having a first length in a first direction and a second length in a second direction orthogonal to the first direction, the first length being longer than the second length; a plurality of main rotary wings that rotate in a virtual plane parallel to the first direction and the second direction; a plurality of main motors that are provided on the main body and respectively rotate the plurality of main rotary wings; at least one connecting device that is provided on the main body and is hangable from at least one rail spaced apart from a ground surface; at least one auxiliary rotary wing that provides propulsion force for propelling the main body in the first direction; at least one auxiliary motor that is provided on the main body and rotates the at least one auxiliary rotary wing; and a control circuit that controls the plurality of main motors and the at least one auxiliary motor.

With this, the main body can be connected to and hanging from the rail via the connecting device, thus preventing the unmanned aerial vehicle from falling even if the main rotary wings do not rotate.

Moreover, by the rotating auxiliary rotary wing while the connecting device is connected to and hanging from the rail, the unmanned aerial vehicle can move along the rail, and thus can move to the destination point. In this case, instead of actuating the main motor, the auxiliary motor can be actuated to move the unmanned aerial vehicle, thus reducing power consumption in the unmanned aerial vehicle.

In the unmanned aerial vehicle according to another aspect of the present disclosure, the at least one connecting device includes a first connecting device, a second connecting device, and a third connecting device. The first connecting device is positioned offset in the first direction from a center of the main body. The second connecting device is positioned offset in a direction opposite the first direction from the center of the main body. The third connecting device is positioned between the first connecting device and the second connecting device, near the center of the main body.

This enables the unmanned aerial vehicle to more safely transfer from one rail on which it is traveling to another by using three connecting devices.

Using three connecting devices also enables the unmanned aerial vehicle to more stably connect to the rails. Therefore, with the unmanned aerial vehicle, safety can be ensured.

The unmanned aerial vehicle according to another aspect of the present disclosure further includes a turntable disposed between the third connecting device and the main body, and a ratchet including an engagement receiving portion that engages with an engagement portion of the turntable by being biased by the turntable.

With this configuration, the orientation of the unmanned aerial vehicle can be rotated by rotating the turntable. When rotated by a predetermined angle, the engagement portion of the turntable and the engagement receiving portion of the ratchet engage to control the rotation of the turntable. Since this allows the main body to be oriented as desired, the unmanned aerial vehicle can safely transfer from one rail on which it is traveling to another.

In the control method according to another aspect of the present disclosure, the unmanned aerial vehicle includes a turntable disposed between the third connecting device and the main body of the unmanned aerial vehicle, and an orientation of the unmanned aerial vehicle is changed by rotating the main body relative to the turntable.

Since this configuration allows the main body to be oriented as desired, the unmanned aerial vehicle can safely transfer from one rail on which it is traveling to another.

In the unmanned aerial vehicle according to another aspect of the present disclosure, a first surface area of a first minimum rectangle that circumscribes a first projected surface formed by projecting the unmanned aerial vehicle onto a first plane whose normal vector extends in the first direction is smaller than a second surface area of a second minimum rectangle that circumscribes a second projected surface formed by projecting the unmanned aerial vehicle onto a second plane whose normal vector extends in the second direction.

With this configuration, the main body is elongated in the lengthwise direction of the rail, so the unmanned aerial vehicle can stably travel along the rail.

In the unmanned aerial vehicle according to another aspect of the present disclosure, the plurality of main rotary wings include: a first main rotary wing; a second main rotary wing adjacent to the first main rotary wing in the second direction; a third main rotary wing adjacent to the first main rotary wing in the first direction; and a fourth main rotary wing adjacent to the second main rotary wing in the first direction and adjacent to the third main rotary wing in the second direction. A first distance between the first main rotary wing and the second main rotary wing is shorter than a second distance between the first main rotary wing and the third main rotary wing.

This configuration enables the first main rotary wing and the second main rotary wing to be arranged along the lengthwise direction of the rail and the third main rotary wing and the fourth main rotary wing to be arranged along the lengthwise direction of the rail. Accordingly, the attitude of the main body can be further stabilized when the unmanned aerial vehicle travels along the rail.

In the unmanned aerial vehicle according to another aspect of the present disclosure, a rotary shaft of the at least one auxiliary motor extends in the first direction.

This configuration enables the unmanned aerial vehicle to easily impart a propulsion force for causing the unmanned aerial vehicle to travel along the rail.

In the unmanned aerial vehicle according to another aspect of the present disclosure, the at least one auxiliary rotary wing is positioned lower than the virtual plane.

This configuration can keep the main rotary wing from making contact with the auxiliary rotary wing, and thus the safety of the unmanned aerial vehicle can be increased.

In the unmanned aerial vehicle according to another aspect of the present disclosure, a rotary shaft of the at least one auxiliary motor has an angle of inclination relative to the first direction that is variable in a plane whose normal vector extends in the second direction.

With this configuration, since the rotary shaft of the auxiliary motor is variable, the unmanned aerial vehicle can be rotated in the yaw direction (horizontal direction). This makes it possible to change the orientation of the unmanned aerial vehicle.

In the unmanned aerial vehicle according to another aspect of the present disclosure, each of the at least one connecting device includes: a fixed portion; a first arm including one end connected to the fixed portion and an other end that opens and closes relative to the fixed portion; a second arm including one end connected to the fixed portion and an other end that opens and closes relative to the fixed portion; a first actuator that opens and closes the first arm; and a second actuator that opens and closes the second arm. The control circuit controls the first actuator and the second actuator. The first arm is positioned in front of the second arm in the first direction.

With this, when the first arm of the unmanned aerial vehicle is connected to the first rail, the first arm can be disconnected from the first rail after the second arm is connected to a second rail, which is a different rail. This allows the unmanned aerial vehicle to switch connections (transfer) from the first rail to the second rail and continue moving.

In the unmanned aerial vehicle according to another aspect of the present disclosure, a first region enclosed by the first arm in a closed state and the fixed portion is separated from a second region enclosed by the second arm in a closed state and the fixed portion.

With this, a single connector can be used to simultaneously connect to two rails. This makes it possible to stabilize the attitude of the unmanned aerial vehicle.

In the unmanned aerial vehicle according to another aspect of the present disclosure, each of the at least one connecting device includes: an arm that is hangable from the at least one rail; and a roller that is provided on an inner peripheral surface of the arm and rotatably contacts the at least one rail.

Accordingly, when the connector of the unmanned aerial vehicle is connected to the rail, the roller contacts and rolls on the rail, allowing the unmanned aerial vehicle to move along the rail. In other words, the unmanned aerial vehicle is able to move along the rail using only its own propulsion in the traveling direction. Accordingly, since the unmanned aerial vehicle does not have to expend energy on lift force to lift itself, the unmanned aerial vehicle can save energy.

A system according to another aspect of the present disclosure includes: the unmanned aerial vehicle; a device including at least one first adapter connectable to at least one package to be delivered by the unmanned aerial vehicle and at least one second adapter attachable to and detachable from the unmanned aerial vehicle; and a wire that connects the unmanned aerial vehicle and the device. The unmanned aerial vehicle includes a reel to which one end of the wire is connected and a lift motor that reels out the wire.

With this, even if there is an obstacle in the vicinity of the predetermined position, the first device and the second device can be moved to avoid the obstacle. It is therefore possible to deliver the package to the predetermined position with certainty since the second device can be moved to a position vertically above the predetermined position.

In the system according to another aspect of the present disclosure, the device includes: a support member provided with the at least one first adapter; a plurality of motors disposed on a plurality of side surfaces of the support member; and a plurality of propellers actuated by the plurality of motors. An angle of each of rotary shafts of the plurality of motors relative to a virtual surface passing through a center of each of the plurality of propellers is at least -45 degrees and at most +45 degrees.

According to this, by controlling the angle of the rotary shafts of the plurality of motors relative to the virtual surface, when the package is to be placed at a predetermined position, the package can be positioned relative to the predetermined position.

In the system according to another aspect of the present disclosure, the plurality of side surfaces include a first side surface and a second side surface that oppose each other in the first direction in an attached state in which the device is attached to the unmanned aerial vehicle, and a third side surface and a fourth side surface that oppose each other in the second direction in the attached state. The plurality of motors include a first motor disposed on the first side surface, a second motor disposed on the second side surface, a third motor disposed on the third side surface, and a fourth motor disposed on the fourth side surface. The plurality of propellers include a first propeller rotated by the first motor, a second propeller rotated by the second motor, a third propeller rotated by the third motor, and a fourth propeller rotated by the fourth motor.

With this, the device can be made to travel in a desired direction by actuating the first motor, the second motor, the third motor, and the fourth motor. This allows the device to finely adjust its position relative to a predetermined position accurately.

A control method according to one aspect of the present disclosure is a control method of controlling an unmanned aerial vehicle, the unmanned aerial vehicle including: a main body having a first length in a first direction and a second length in a second direction orthogonal to the first direction, the first length being longer than the second length; a plurality of main rotary wings that rotate in a virtual plane parallel to the first direction and the second direction; a plurality of main motors that are provided on the main body and respectively rotate the plurality of main rotary wings; at least three connecting devices that are provided on the main body and are hangable from at least one rail spaced apart from a ground surface; at least one auxiliary rotary wing that provides propulsion force for propelling the main body in the first direction; at least one auxiliary motor that is provided on the main body and rotates the at least one auxiliary rotary wing; and a control circuit that controls the plurality of main motors and the at least one auxiliary motor. A first connecting device is positioned offset in the first direction from a center of the main body, a second connecting device is positioned offset in a direction opposite the first direction from the center of the main body, and a third connecting device is positioned between the first connecting device and the second connecting device, near the center of the main body. The control method includes: when the unmanned aerial vehicle switches connection from a first rail to a second rail at an intersection of the first rail and the second rail: determining whether the first connecting device has approached the second rail; when it is determined that the first connecting device has approached the second rail, detaching the first connecting device from the first rail and propelling the unmanned aerial vehicle in the first direction by rotating the at least one auxiliary rotary wing; determining whether the first connecting device has passed the second rail; and when it is determined that the first connecting device has passed the second rail, detaching the second connecting device from the first rail, rotating the unmanned aerial vehicle until the first direction of the unmanned aerial vehicle is parallel to a direction of extension of the second rail, and after rotation of the unmanned aerial vehicle, connecting the first connecting device and the second connecting device to the second rail.

This configuration allows the unmanned aerial vehicle to reliably switch connections (transfer) from the first rail to the second rail.

In the control method according to another aspect of the present disclosure, when it is determined that the first connecting device has passed the second rail, the first connecting device is connected to the first rail and whether a center of gravity of the unmanned aerial vehicle is balanced is determined; and when it is determined that the center of gravity of the unmanned aerial vehicle is balanced, the first connecting device and the second connecting device are detached from the first rail, the unmanned aerial vehicle is rotated until the first direction of the unmanned aerial vehicle is parallel to a direction of extension of the second rail, and after rotation of the unmanned aerial vehicle, the first connecting device and the second connecting device are connected to the second rail.

With this, even if the second rail is inclined with respect to the first rail, for example, the unmanned aerial vehicle can reliably switch connections (transfer) from the first rail to the second rail by changing the balance of the center of gravity of the unmanned aerial vehicle.

In the control method according to another aspect of the present disclosure, after the first connecting device and the second connecting device are connected to the second rail after rotation of the unmanned aerial vehicle, an attitude of the third connecting device is matched to an attitude of each of the first connecting device and the second connecting device by detaching the third connecting device from the first rail and rotating the turntable.

With this configuration, when the third connecting device is detached from the first rail, the attitude of the third connecting device can be matched to the respective attitudes of the first connecting device and the second connecting device. This enables the third connecting device to be connected to the second rail together with the first connecting device and the second connecting device.

In the control method according to another aspect of the present disclosure, the unmanned aerial vehicle includes a rotary wing for rotation that is disposed in a position corresponding to the at least one auxiliary rotary wing in the first direction, and an orientation of the unmanned aerial vehicle is changed using a propulsion force of the rotary wing for rotation.

With this configuration, the traveling direction of the unmanned aerial vehicle can be easily changed by rotating the rotary wing.

A lifting system according to another aspect of the present disclosure may include: an unmanned aerial vehicle; a first device attachable to and detachable from the unmanned aerial vehicle; a first wire that connects the first device and the unmanned aerial vehicle; a first reel capable of reeling in the first wire; a second device attachable to and detachable from a package and attachable to and detachable from the first device; a second wire that connects the first device and the second device; a second reel capable of reeling in the second wire; and a controller. When the unmanned aerial vehicle is in a position separated from the ground, the controller may: detach the first device and the second device from the unmanned aerial vehicle; cause the first reel to reel out the first wire; detach the second device from the first device; and cause the second reel to reel out the second wire.

With this, even when it is difficult to carry the package to a predetermined position, such as when there is an obstacle vertically above the predetermined position, it is possible to move the first device and the second device so as to avoid the obstacle. It is therefore possible to deliver the package to the predetermined position with certainty since the second device can be moved to a position vertically above the predetermined position.

In the lifting system according to another aspect of the present disclosure, the first device may include: a first support member attachable to and detachable from the unmanned aerial vehicle; a plurality of first motors disposed on a plurality of side portions of the first support member; and a plurality of first propellers actuated by the plurality of first motors. The second device may include: a second support member attachable to and detachable from the first device; a plurality of second motors disposed on a plurality of side portions of the second support member; and a plurality of second propellers actuated by the plurality of second motors.

With this, the position of the first device relative to the unmanned aerial vehicle can be adjusted, and the position of the second device relative to the first device can be adjusted. This makes it possible to move the first device and the second device so as to avoid an obstacle. As a result, the package can be reliably delivered to the predetermined position.

In the lifting system according to another aspect of the present disclosure, the controller may: actuate at least one of the plurality of first motors or the plurality of second motors after detaching the first device and the second device from the unmanned aerial vehicle, and actuate the plurality of first motors and the plurality of second motors after detaching the second device from the first device.

This makes it possible to move the first device and the second device as a single unit to a destination position for avoiding the obstacle. Therefore, the controller can inhibit an increase in the processing burden of actuating and controlling the plurality of first motors and the plurality of second motors.

In the lifting system according to another aspect of the present disclosure, after detaching the second device from the first device, the controller may control the plurality of first motors and control the plurality of second motors differently than the plurality of first motors to make a first hanging direction and a second hanging direction mutually different, the first hanging direction being a direction in which the first wire extends between the unmanned aerial vehicle and the first device, and the second hanging direction being a direction in which the second wire extends between the first device and the second device.

With this, even if there is an obstacle vertically above the predetermined position, the first device and the second device can be positioned so as to reliably bypass the obstacle. As a result, with this lifting system, the package can be reliably delivered to the predetermined position.

In the lifting system according to another aspect of the present disclosure, after detaching the second device from the first device, the controller may control the plurality of first motors and control the plurality of second motors differently than the plurality of first motors to reduce or eliminate an amount of overlap between the first device and the second device in terms of area size in a view perpendicular to a ground surface.

With this, the relative positions of the first device and the second device can be changed so that the first device is not disposed vertically above the second device. Accordingly, even if there is an obstacle vertically above the predetermined position, the first device and the second device can be positioned so as to reliably bypass the obstacle. As a result, the package can be reliably delivered to the predetermined position.

In the lifting system according to another aspect of the present disclosure, after detaching the package from the second device, the controller may: reel in the second wire using the second reel; attach the second device to the first device; reel in the first wire using the first reel; and attach the first device and the second device to the unmanned aerial vehicle.

With this, after delivering the package to the predetermined position, the second device can be attached to the first device while reeling in the second wire, and the first device and the second device can be attached to the unmanned aerial vehicle while reeling in the first wire. As a result, it is possible to prevent the first wire and the second wire from being damaged or entangled due to contact with an obstacle or the like. This makes it possible to inhibit a decrease in the operating efficiency of the lifting system.

In the lifting system according to another aspect of the present disclosure, the unmanned aerial vehicle may include an arm capable of engaging a rail, and when the unmanned aerial vehicle is in a position separated from the ground and the arm is engaged with the rail, the controller may detach the first device and the second device from the unmanned aerial vehicle.

This makes it possible to hold the unmanned aerial vehicle onto the rail via the arm. As a result, even if the first device and the second device are detached from the unmanned aerial vehicle, the first device and the second device can be held via the first wire and the second wire. This makes it possible to inhibit the first device and the second device from falling.

Since the unmanned aerial vehicle can be held onto the rail without flying, energy consumption by the unmanned aerial vehicle can be reduced.

In the lifting system according to another aspect of the present disclosure, the lifting system may include: a third device attachable between and detachable from between the first device and the second device; a third wire that connects the first device and the third device; a third reel capable of reeling in the third wire; a fourth wire that connects the third device and the second device; and a fourth reel capable of reeling in the fourth wire.

With this, after delivering the package to the predetermined position, the second device can be attached to the third device while reeling in the fourth wire, the second device and the third device can be attached to the first device while reeling in the third wire, and the second device, the third device, and the first device can be attached to the unmanned aerial vehicle while reeling in the first wire. As a result, it is possible to prevent the first wire, the third wire, and the fourth wire from being damaged or entangled due to contact with an obstacle or the like. This makes it possible to inhibit a decrease in the operating efficiency of the lifting system.

In the lifting system according to another aspect of the present disclosure, an angle of each of rotary shafts of the plurality of first motors relative to a virtual surface passing through a center of each of the plurality of first propellers is at least -45 degrees and at most +45 degrees.

According to this, by controlling the angle of the rotary shafts of the plurality of motors relative to the virtual surface, when the package is to be placed at a predetermined position, the package can be positioned relative to the predetermined position. It is possible to finely adjust the positions of the first device and the second device relative to the predetermined position by causing the first device and the second device to travel in the desired direction.

When the first device and the second device descend while the support member is hanging from the object via the wire, it is possible to finely adjust the positions of the first device and the second device so that the package aligns with the predetermined position when viewed from the vertical direction.

Accordingly, with the first device and the second device, the package can be placed in the predetermined position. In particular, when the first device and the second device are used outdoors, even if the first device and the second device are misaligned with the predetermined position due to wind or the like, the first device and the second device can move toward the predetermined position to compensate for the misalignment so that package can be placed at the predetermined position.

The lifting system according to another aspect of the present disclosure further includes one or more actuators that adjust the angle of each of the rotary shafts of the plurality of first motors relative to the virtual surface.

This makes it possible to adjust the attitudes of the plurality of first motors relative to the support member. Accordingly, this allows the first device and the second device to move horizontally and vertically. This allows for more accurate positioning of the package to align with the predetermined position.

In the lifting system according to another aspect of the present disclosure, the one or more actuators incline each of the rotary shafts so that the angle is 0 degrees in a first mode, and incline each of the rotary shafts so that the angle is an elevation angle in a second mode.

This makes it possible to individually control the attitude of each rotary shaft of one or more motors among the plurality of rotary shafts of the plurality of motors. Therefore, the positions of the first device and the second device can be fine-tuned more precisely because the attitude, traveling direction, etc., of the first device and the second device can be finely controlled to move the first device and the second device to a predetermined position.

In the lifting system according to another aspect of the present disclosure, the first wire is directly connected to at least one connection point of the first support member.

This makes it possible to hang the first support member via the first wire with only one connection point on the first support member. Accordingly, the configuration of the first wire can be simplified.

In the lifting system according to another aspect of the present disclosure, the first wire includes a first main wire and a plurality of first sub-wires. One ends of the plurality of first sub-wires are respectively directly connected to a plurality of connection points of the first support member, and other ends of the plurality of first sub-wires are connected to one end of the first main wire at a single common connection point. The first main wire hangs and supports the first support member from the unmanned aerial vehicle via the plurality of first sub-wires.

This makes it possible to connect the plurality of first sub-wires to the first support member in one-to-one correspondence via the plurality of connection points. Therefore, the attitude of the first support member while it is hanging by the first main wire and the first sub-wires can be stabilized.

In the lifting system according to another aspect of the present disclosure, the first support member includes a first frame that is polygonal, and the plurality of connection points are arranged at a plurality of portions of the first frame corresponding to a plurality of vertices.

With this, the attitude of the first support member while it is hanging by the first wire can be more reliably stabilized.

In the lifting system according to another aspect of the present disclosure, the first support member includes a first frame that is polygonal, and the at least one connection point is movable in a plane that is within the first frame and parallel to a virtual surface.

This makes it possible to change the position of the one connection point relative to the first support member. Accordingly, for example, even if the center of gravity of the first support member that is holding a package is displaced from the center, the position of the connection point can be changed so as to align the position of the connection point with the center of gravity. Therefore, the attitude of the first support member hanging from the first wire can be corrected to a desired attitude.

In the lifting system according to another aspect of the present disclosure, the plurality of side portions of the first support member includes a first side portion and a second side portion on opposite sides of at least one of the first support member or the package. The plurality of first motors include a first first motor provided on the first side portion and including a first rotary shaft, and a second first motor provided on the second side portion and including a second rotary shaft. The controller executes a third mode that rotates the first rotary shaft in a first direction of rotation and rotates the second rotary shaft in a second direction of rotation opposite the first direction of rotation, and a fourth mode that rotates the first rotary shaft and the second rotary shaft in the second direction of rotation.

With this, by making the direction of rotation of the first rotary shaft of the first motor and the direction of rotation of the second rotary shaft of the second motor opposite directions, the first device and the second device can produce a thrust that causes it to travel in a desired direction. This allows the first device and the second device to finely adjust its position relative to a predetermined position accurately.

In the lifting system according to another aspect of the present disclosure, the plurality of first motors further include a third first motor that is provided on the first side portion in a position adjacent to the first first motor in a virtual surface and includes a third rotary shaft, and a fourth first motor that is provided on the second side portion in a position adjacent to the second first motor in the virtual surface and includes a fourth rotary shaft. The controller rotates the third rotary shaft in the second direction of rotation and rotates the fourth rotary shaft in the first direction of rotation in the third mode, and rotates the third rotary shaft and the fourth rotary shaft in the first direction of rotation in the fourth mode.

With this, by making the direction of rotation of the third rotary shaft of the third motor and the direction of rotation of the fourth rotary shaft of the fourth motor opposite directions, the device can produce a thrust that causes it to travel in a desired direction. Since the directions of rotation of the first rotary shaft of the first motor and the second rotary shaft of the second motor can be controlled, the device can finely adjust its position relative to a predetermined position accurately.

In the lifting system according to another aspect of the present disclosure, the second device further includes a sensor that detects a position of a storage device for housing the package.

This enables the position of the device relative to the storage device to be accurately detected, allowing for more accurate and finer adjustment of the position of the device relative to the storage device.

An unmanned aerial vehicle according to another aspect of the present disclosure includes: a main body having a first length in a first direction and a second length in a second direction orthogonal to the first direction, the first length being longer than the second length; a plurality of main rotary wings that rotate in a virtual plane parallel to the first direction and the second direction; a plurality of main motors that are provided on the main body and respectively rotate the plurality of main rotary wings; at least one connecting device (connector) that is provided on the main body, extends from the main body in a third direction intersecting the virtual plane, and is hangable from at least one rail spaced apart from a ground surface; at least one auxiliary rotary wing that provides propulsion force for propelling the main body in the first direction; at least one auxiliary motor that is provided on the main body and rotates the at least one auxiliary rotary wing; and a control circuit that controls the plurality of main motors and the at least one auxiliary motor.

In the unmanned aerial vehicle according to another aspect of the present disclosure, the plurality of main rotary wings include a fifth main rotary wing that rotates in coaxial inversion relative to the first main rotary wing, a sixth main rotary wing that rotates in coaxial inversion relative to the second main rotary wing, a seventh main rotary wing that rotates in coaxial inversion relative to the third main rotary wing, and an eighth main rotary wing that rotates in coaxial inversion relative to the fourth main rotary wing.

In the unmanned aerial vehicle according to another aspect of the present disclosure, the at least one auxiliary rotary wing and the at least one auxiliary motor are arranged at one end of the main body in the first direction.

In the unmanned aerial vehicle according to another aspect of the present disclosure, each of the at least one auxiliary rotary wing includes a plurality of blades each having a variable pitch angle, and the control circuit controls the pitch angle.

In the unmanned aerial vehicle according to another aspect of the present disclosure, each of the at least one auxiliary rotary wing includes a plurality of blades, and a distance between a rotary shaft of the at least one auxiliary motor and the virtual plane is longer than a length of each of the plurality of blades.

In the unmanned aerial vehicle according to another aspect of the present disclosure, each of the at least one auxiliary rotary wing is attached to the main body so as to be slidable in the third direction.

In the unmanned aerial vehicle according to another aspect of the present disclosure, the plurality of main rotary wings include two blades, and the control circuit stops the two blades in a position parallel to the first direction when stopping the plurality of main motors and operating the at least one auxiliary motor.

In the unmanned aerial vehicle according to another aspect of the present disclosure, the at least one connecting device includes a first connecting device and a second connecting device adjacent to the first connecting device in the first direction.

In the unmanned aerial vehicle according to another aspect of the present disclosure, the at least one rail includes a first rail and a second rail that extend parallel to each other, and the at least one connecting device includes a first arm hangable from the first rail and a second arm hangable from the second rail.

In the unmanned aerial vehicle according to another aspect of the present disclosure, each of the at least one connecting device includes: a fixed portion; a first arm including one end connected to the fixed portion and another end that opens and closes with respect to the fixed portion; a second arm including one end connected to the fixed portion and another end that opens and closes with respect to the fixed portion; a first actuator that opens and closes the first arm; and a second actuator that opens and closes the second arm. The control circuit controls the first actuator and the second actuator. A first region enclosed by the first arm in the closed state and the fixed portion are separated from a second region enclosed by the second arm in the closed state and the fixed portion.

In the unmanned aerial vehicle according to another aspect of the present disclosure, the fixed portion includes a partition portion that extends in the third direction and separates a first region and a second region.

A system according to another aspect of the present disclosure includes an unmanned aerial vehicle and a device including at least one first adapter connectable to at least one package to be delivered by the unmanned aerial vehicle and at least one second adapter attachable to and detachable from the unmanned aerial vehicle.

The system according to another aspect of the present disclosure further includes a wire that connects the unmanned aerial vehicle and the device, and the unmanned aerial vehicle further includes a reel to which one end of the wire is connected and a lift motor that reels out the wire.

In the system according to another aspect of the present disclosure, the control circuit detaches, from the unmanned aerial vehicle, the device to which the at least one package is attached, and causes the lift motor to reel out the wire.

In the system according to another aspect of the present disclosure, the control circuit disconnects the at least one package from the device, and causes the lift motor to reel in the wire.

In the system according to another aspect of the present disclosure, the at least one package includes a plurality of packages, and the at least one first adapter includes a plurality of first adapters individually attachable to and detachable from the plurality of packages.

An unmanned aerial vehicle according to another aspect of the present disclosure includes: a main body; a first movable body movably connected to the main body on a first side of the main body; a second movable body movably connected to the main body on a second side of the main body, the second side being opposite to the first side; a plurality of first motors arranged on the first movable body; a plurality of second motors arranged on the second movable body; a plurality of first rotary wings respectively rotated by the plurality of first motors; a plurality of second rotary wings respectively rotated by the plurality of second motors; and at least one connecting device that extends upward from the main body and is hangable from at least one rail spaced apart from a ground surface.

The unmanned aerial vehicle according to another aspect of the present disclosure further includes: a first actuator capable of changing a first angle of the first movable body relative to the main body; a second actuator capable of changing a second angle of the second movable body relative to the main body; and a control circuit that controls the plurality of first motors, the plurality of second motors, the first actuator, and the second actuator.

In the unmanned aerial vehicle according to another aspect of the present disclosure, the control circuit switches between the following modes (a) through (c) via the first actuator and the second actuator: (a) a first mode that places first rotary shafts of the plurality of first motors and second rotary shafts of the plurality of second motors in a vertical orientation; (b) a second mode that places the first rotary shafts in a first horizontal direction orientation and places the second rotary shafts in the vertical orientation; and (c) a third mode places the first rotary shafts in the first horizontal direction orientation and places the second rotary shafts in a second horizontal direction orientation opposite the first horizontal direction orientation.

In the unmanned aerial vehicle according to another aspect of the present disclosure, the first horizontal direction and the second horizontal direction each point outward from the main body.

A control method according to one aspect of the present disclosure is a control method of an unmanned aerial vehicle. The unmanned aerial vehicle holds a transported item requiring cold or heat retention. The control method includes: a first obtainment step of obtaining a destination position of the unmanned aerial vehicle; a second obtainment step that obtains a current position of the unmanned aerial vehicle; and a third obtainment step of obtaining an expected time at which the transported item is expected to reach a permissible upper temperature limit. When a time at which the unmanned aerial vehicle will reach the destination position from the current position is later than the expected time, the unmanned aerial vehicle is caused to move to the departure position, and when a time at which the unmanned aerial vehicle will reach the destination position from the current position is at or earlier than the expected time, the unmanned aerial vehicle is caused to move to the destination position.

With this, the unmanned aerial vehicle can deliver the transported item to the destination position or cancel transportation of the transported item and return to the departure position according to the expected time. Accordingly, the quality of the transported item can be protected and the availability of the unmanned aerial vehicle can be inhibited from reducing.

A control method according to one aspect of the present disclosure is a control method of an unmanned aerial vehicle. The unmanned aerial vehicle holds a transported item requiring cold or heat retention. The control method includes: a fourth obtainment step of obtaining a departure position of the unmanned aerial vehicle; a fifth obtainment step of obtaining a destination position of the unmanned aerial vehicle; and a sixth obtainment step of obtaining a current position of the unmanned aerial vehicle; a seventh obtainment step of obtaining a permissible upper temperature limit of the transported item. When a distance from the current position to the destination position is greater than a predetermined value, the unmanned aerial vehicle is caused to move to the departure position, and when the distance from the current position to the destination position is less than or equal to the predetermined value, the unmanned aerial vehicle is caused to move to the destination position. The predetermined value is a value at which a temperature of the transported item will reach the permissible upper temperature limit when the unmanned aerial vehicle is caused to move at a predetermined speed.

With this, the unmanned aerial vehicle can deliver the transported item to the destination position or cancel transportation of the transported item and return to the departure position according to the current position. Accordingly, the quality of the transported item can be protected and the availability of the unmanned aerial vehicle can be inhibited from reducing.

In the control method according to another aspect of the present disclosure, the predetermined value is calculated as V x (tz - tc), where V is the predetermined speed, tz is a time at which the temperature of the transported item will reach the permissible upper temperature limit, and tc is a time at the current position.

This enables monitoring of the temperature of the transported item to ensure that the transported item is delivered to the user at the appropriate temperature. This inhibits the delivery of a transported item to the user that deviates from the permissible upper temperature limit.

A control method according to another aspect of the present disclosure is a control method of a delivery box, and includes a measurement step of measuring an amount of power held by the delivery box, and a transmission step of, when the amount of power is greater than a predetermined value, measuring a weight of a package inside the delivery box, which is a transported item stored in the delivery box, and transmitting information indicating the weight of the package to a server.

With this configuration, the weight of the inside of the delivery box can be measured to determine whether or not a package is stored inside the delivery box.

In the control method according to another aspect of the present disclosure, the delivery box includes a door, and the control method further includes a power generation step of generating power by the opening and closing of the door, and storing the power.

With this configuration, power can be automatically generated by the action of the opening and closing of the door of the delivery box, whereby the delivery box can save energy.

The control method according to another aspect of the present disclosure further includes a transmission step of transmitting information pertaining to the opening and closing of the door to the server when the amount of power is greater than a predetermined value.

With this configuration, information pertaining to the opening and closing of door can be transmitted using power stored by power generation. With this, the delivery box can save energy.

An information provision method according to another aspect of the present disclosure is a method in a management system used for a service that delivers a product to a vending machine using an unmanned transport vehicle, and includes: obtaining request information requesting display of a vending machine usable as a pickup location for the product; generating, based on a database that manages reservation statuses of vending machines, a list that is related to a plurality of vending machines included in a predetermined area and includes first information indicating whether each of the plurality of vending machines is usable or not in each of deliverable time periods; and displaying, on a display of an information terminal, the list in response to the request information.

In information provision method according to another aspect of the present disclosure, the list further includes second information indicating a deadline by which the user is to pick up the product, and the second information is generated with reference to a reservation status of the vending machine in the predetermined time period or a reservation status used when the vending machine was used as a product pickup point in the past, based on the database that manages the reservation statuses of the vending machines.

An information provision method according to another aspect of the present disclosure is a method in a management system used for a service that delivers a product to a vending machine using an unmanned transport vehicle, and includes: obtaining request information requesting display of a product list of products sold at a first store; obtaining first store information indicating a product sold at the first store and inventory of the product; obtaining second store information indicating a product sold at a second store located within a predetermined distance from the first store and inventory of the product; generating, based on the first store information and the second store information, the product list including a first product in stock at the first store and a second product in stock at the second store and not in stock at the first store; and displaying the product list on a display of the information terminal.

In the information provision method according to another aspect of the present disclosure, the first product and the second product are displayed in different aspects when displaying the product list on the display of the information terminal.

In the information provision method according to another aspect of the present disclosure, the first product is displayed in a first color and the second product is displayed in a second color when displaying the product list on the display of the information terminal.

In the information provision method according to another aspect of the present disclosure, the first product is displayed in color and the second product is displayed in gray when displaying the product list on the display of the information terminal.

A vending machine according to another aspect of the present disclosure is used in a service that delivers a product to a vending machine using an unmanned transport vehicle, and includes: an enclosure including a first space and a second space; a floor plate that is located within the enclosure and is for placing the product; a movement mechanism that is located within the enclosure and includes a motor and moves the floor plate along a loop route by actuation of the motor; and a controller that is located within the enclosure and controls the movement mechanism. The loop route includes a first route that is located within the first space and moves the floor plate on which the product is placed in a downward vertical direction, and a second route that is located within the second space and moves the floor plate in an upward vertical direction.

In the vending machine according to another aspect of the present disclosure, in a view from the upward vertical direction, the second space is narrower than the first space.

In the vending machine according to another aspect of the present disclosure, the floor plate has a first form in the first space, and a second form different from the first form in the second space.

In the vending machine according to another aspect of the present disclosure, an upper surface of the floor plate is perpendicular to the vertical direction in the first form and parallel to the vertical direction in the second form.

In the vending machine according to another aspect of the present disclosure, the floor plate changes from the first form to the second form by rotating about a line including a center of gravity of the floor plate.

In the vending machine according to another aspect of the present disclosure, the floor plate is foldable, and changes from the first form to the second form by folding.

The vending machine according to another aspect of the present disclosure further includes a lock structure for fixing the floor plate in the first form.

In the vending machine according to another aspect of the present disclosure, the enclosure further includes a third space for storing the product when the user does not come to pick up the product, and after a predetermined amount of time, the controller controls the movement mechanism to move the floor plate that is located in the first space and on which the product is placed to the third space via a third route branched from the loop route.

In the vending machine according to another aspect of the present disclosure, the enclosure includes an openable and closable top lid located above in the vertical direction, and when the top lid is open, the product is placed within the vending machine via a wire that extends downward from the unmanned transport vehicle located vertically above the vending machine.

In the vending machine according to another aspect of the present disclosure, the enclosure includes an openable and closable top lid located above in the vertical direction, and when the top lid is open, the product is placed within the vending machine via a wire that extends downward from the unmanned transport vehicle located vertically above the vending machine.

A control method according to another aspect of the present disclosure is a control method in a management system used in a service that delivers a product sold at a store to a vending machine using an unmanned transport vehicle, and includes: obtaining information indicating product 1 ordered by the user from a information terminal possessed by the user, information indicating a receiver (delivery destination) of product 1, and information indicating delivery time 1 of product 1; obtaining, from a store terminal, a box ID for identifying a predetermined box in the store, the predetermined box being used for receipt of the ordered product 1 by the unmanned transport vehicle; managing the information indicating product 1, the information indicating the receiver of product 1, the information indicating delivery time 1 of product 1, and the box ID in association with each other; and transmitting the box ID and the information indicating the receiver of product 1 to the unmanned transport vehicle.

The control method according to another aspect of the present disclosure further includes, upon obtaining information indicating to change the delivery time of product 1 from delivery time 1 to delivery time 2 from the information terminal of the user, managing the information indicating product 1, the information indicating the receiver of product 1, information indicating delivery time 2 of product 1, and the box ID in association with each other.

A control method of an unmanned transport vehicle according to another aspect of the present disclosure is a method in a management system used in a service that delivers a product to a vending machine using an unmanned transport vehicle, and includes: obtaining position information indicating the current position of an information terminal possessed by a user, from the information terminal; obtaining scheduled time information indicating a scheduled time of pickup at the vending machine of a product ordered by the user from the information terminal of the user; determining whether it is possible for the user to pick up the product from the vending machine at the scheduled time based on the position information and the scheduled time information; and after determining that it is possible for the user to pick up the product from the vending machine at the scheduled time, controlling an actuator of the unmanned transport vehicle and causing the unmanned transport vehicle to collect the product at a store that sells the product.

In the control method of the unmanned transport vehicle according to another aspect of the present disclosure, determining that it is possible for the user to pick up the product from the vending machine at the scheduled time when the current position of the information terminal is located within a predetermined area including the vending machine.

An information provision method according to another aspect of the present disclosure is an information provision method in a management system used in a service that delivers a product to a vending machine using an unmanned transport vehicle, and includes: obtaining position information indicating the current position of an information terminal possessed by a user, from the information terminal; obtaining scheduled time information indicating a scheduled time of pickup at the vending machine of a product ordered by the user; determining whether it is possible for the user to pick up the product from the vending machine at the scheduled time based on the position information and the scheduled time information; and after determining that it is possible for the user to pick up the product from the vending machine at the scheduled time, transmitting, to a store that sells the product, information instructing to start preparation for the unmanned transport vehicle to collect the product.

In the information provision method of the unmanned transport vehicle according to another aspect of the present disclosure, determining that it is possible for the user to pick up the product from the vending machine at the scheduled time when the current position of the information terminal is located within a predetermined area including the vending machine.

A control method of an unmanned transport vehicle according to another aspect of the present disclosure is a method in a management system used in a service that delivers a product to a vending machine using an unmanned transport vehicle, and includes: obtaining position information indicating the current position of an information terminal possessed by a user, from the information terminal; obtaining scheduled time information indicating a scheduled time of pickup at the vending machine of a product ordered by the user from the information terminal of the user; determining whether it is possible for the user to pick up the product from the vending machine at the scheduled time based on the position information and the scheduled time information; and after determining that it is possible for the user to pick up the product from the vending machine at the scheduled time, controlling an actuator of the unmanned transport vehicle and moving the product from the unmanned transport vehicle to inside the vending machine.

In the control method of the unmanned transport vehicle according to another aspect of the present disclosure, determining that it is possible for the user to pick up the product from the vending machine at the scheduled time when the current position of the information terminal is located within a predetermined area including the vending machine.

An information provision method according to another aspect of the present disclosure is a method in a management system used for a service that delivers a product to a vending machine using an unmanned transport vehicle, and includes: obtaining request information requesting display of a vending machine usable as a pickup location for the product; obtaining weather information including an estimate of wind speed at a predetermined area; generating, based on the weather information and a database that manages the reservation statuses of vending machines, a list that is related to a plurality of vending machines included in the predetermined area and includes information indicating whether each of the plurality of vending machines is usable or not in each of deliverable time periods, wherein in the list, a predetermined vending machine is displayed as unusable in a predetermined time at which estimate of the wind speed in an area including the predetermined vending machine is greater than or equal to a predetermined wind speed; and displaying, on a display of an information terminal, the list in response to the request information.

A control method of an unmanned transport vehicle according to another aspect of the present disclosure is a method in a management system used in a service that delivers a product to a vending machine using an unmanned transport vehicle, and includes: obtaining scheduled time information indicating a scheduled time of pickup at the vending machine of a product ordered by a user from the information terminal of the user; obtaining weather information indicating an estimate of wind speed at an area including the vending machine; and when it is determined that the wind speed at the area including the vending machine is greater than or equal to a predetermined wind speed at the scheduled time based on the scheduled time information and the weather information, transmitting a message, to an information terminal possessed by the user, for confirming whether to change the delivery time or cancel the order.

A control method of an unmanned transport vehicle according to another aspect of the present disclosure is a method in a management system used in a service that delivers a product to a vending machine using an unmanned transport vehicle, and includes: obtaining fullness information of a first vending machine; and when it is determined that the first vending machine is currently full based on the fullness information, transmitting a notification to an information terminal possessed by the user prompting selection of a first option, a second option, or a third option. The first option is to pick up the product at a second vending machine different than the first vending machine, the second option is to change a pickup time of the product at the first vending machine, and the third option is to have the user directly receive the product.

The control method of the unmanned transport vehicle according to another aspect of the present disclosure further includes, in response to receipt of selection of the first option from the information terminal of the user, transmitting to the information terminal a scheduled time of delivery of the product to the second vending machine and transmitting to a store system an instruction to start picking the product.

The control method of the unmanned transport vehicle according to another aspect of the present disclosure further includes, in response to receipt of selection of the second option from the information terminal of the user, transmitting to the information terminal a changed pickup time.

The control method of the unmanned transport vehicle according to another aspect of the present disclosure further includes, in response to receipt of selection of the third option from the information terminal of the user, transmitting to the information terminal a message related to the user directly receiving the product and transmitting to a store system an instruction to start picking the product.

A control method of an unmanned transport vehicle according to another aspect of the present disclosure is a method in a management system used in a service that delivers a product to a vending machine using an unmanned transport vehicle, and includes: obtaining image data from a camera included in the unmanned transport vehicle at a predetermined area including the receiver; determining whether a person is in the predetermined area based on the image data; and when a person is determined to be in the predetermined area, outputting predetermined speech from a speaker included in the unmanned transport vehicle.

In the control method of the unmanned transport vehicle according to another aspect of the present disclosure, the predetermined speech indicates at least one of the following: the product will now be unloaded from the unmanned transport vehicle; to not come near; to move away; to not move; or to remain still.

An information provision method according to another aspect of the present disclosure is an information provision method in a management system used in a service that delivers a product to a vending machine using an unmanned transport vehicle, and includes: obtaining position information indicating the current position of an information terminal possessed by a user, from the information terminal; obtaining scheduled time information indicating a scheduled time of pickup at the vending machine of a product ordered by the user; calculating a time at which the user should start going to the vending machine in order to receive the product from the vending machine at the scheduled time based on the position information and the scheduled time information; and outputting, via the information terminal, at or before the time, a notification informing the user to start going to the vending machine.

A vending machine according to another aspect of the present disclosure is used in a service that delivers a product to a vending machine using an unmanned transport vehicle, and includes: a display; an enclosure including an openable and closable top lid on which the display is provided; and a controller that sets a display mode of the display. The display mode includes a first display mode and second display mode. The first display mode enables ordering, via the display, of the product to be delivered to the vending machine by the unmanned transport vehicle. The second mode disables ordering, via the display, of the product. The controller sets the display to the second display mode when the top lid is opened and the product is being lowered into the vending machine from the unmanned transport vehicle.

An information provision method according to another aspect of the present disclosure is an information provision method in a management system used in a service that delivers a product to a vending machine using an unmanned transport vehicle, and includes: obtaining, from an information terminal possessed by the user, information indicating a product ordered from the user and information indicating the vending machine that is the receiver of the product; transmitting, to the unmanned transport vehicle, an instruction to deliver the product to the vending machine; after receiving information from the unmanned transport vehicle or the vending machine indicating that delivery of the product to the vending machine is complete, transmitting, to the information terminal, that the delivery of the product is complete; and displaying, on the information terminal, that the delivery of the product is complete.

An unmanned transport vehicle according to another aspect of the present disclosure includes an enclosure. The enclosure includes, in a view from upward vertical direction, a first side, a second side adjacent to the first side, a third side adjacent to the second side, and a fourth side adjacent to the third side and the first side. The enclosure includes a first top lid and a second top lid. The first top lid is connected at the first side and openable and closable. The second top lid is connected at the second side and openable and closable. When the first top lid and the second top lid are closed, the first top lid and the second top lid include an overlapping region.

In the unmanned transport vehicle according to another aspect of the present disclosure, the enclosure further includes a third top lid that is connected at the third side and is openable and closable. When the second top lid and the third top lid are closed, the second top lid and the third top lid include an overlapping region.

In the unmanned transport vehicle according to another aspect of the present disclosure, the enclosure further includes a fourth top lid that is connected at the fourth side and is openable and closable. When the first top lid, the third top lid, and the fourth top lid are closed, the first top lid and the fourth top lid include an overlapping region, and the third top lid and the fourth top lid include an overlapping region.

A control method according to another aspect of the present disclosure is a control method in a transport system including passing a product transported by a first unmanned transport vehicle traveling in the air to a second unmanned transport vehicle traveling on the ground, and includes: transmitting an arrival instruction to the first unmanned transport vehicle instructing the first unmanned transport vehicle to arrive at a first location at a first time; transmitting an arrival instruction to the second unmanned transport vehicle instructing the second unmanned transport vehicle to arrive at the first location at a second time before the first time; and passing the product transported by the first unmanned transport vehicle to the second unmanned transport vehicle at the first location.

A delivery box according to another aspect of the present disclosure is for passing a product transported by a first unmanned transport vehicle traveling in the air to a second unmanned transport vehicle traveling on the ground, and includes: an enclosure, a first entrance provided in an upper portion of the enclosure for inserting the product transported by the first unmanned transport vehicle; and a second entrance provided in a lower portion of the enclosure for the second unmanned transport vehicle to enter.

A method according to another aspect of the present disclosure is for inspecting a power line using an unmanned transport vehicle. The unmanned transport vehicle travels along a rail connected between utility poles. The power line is located above the rail. The method includes: calculating distance y from a camera to the power line, the camera for capturing an image of the power line and included in the unmanned transport vehicle, using height h1 from the ground surface to the rail, deflection x of the rail when the unmanned transport vehicle travels over the rail, and height h3 from the ground surface to the power line; and capturing an image of the power line with the camera using the distance y as the focal length of the camera.

An unmanned transport vehicle according to another aspect of the present disclosure includes: a vehicle main body; a first connector that is connectable to a rail and is coupled to the vehicle main body; a second connector that is connectable to the rail and is coupled to the vehicle main body at a position spaced apart from the first connector; and a third connector that is connectable to the rail and is disposed between the first connector and the second connector. The first connector includes a first roller that rotatably contacts the rail. The second connector includes a second roller that rotatably contacts the rail. The third connector includes a third roller that rotatably contacts the rail.

The unmanned transport vehicle according to another aspect of the present disclosure further includes a turntable that is rotatable with respect to the vehicle main body. The second connector is coupled to the turntable, extends toward the rail from the turntable, is movable in the vertical direction with respect to the upper surface of the vehicle main body, and rotates in accordance with the rotation of the turntable.

The unmanned transport vehicle according to another aspect of the present disclosure further includes: a slide rail provided on the turntable; a slider block provided on the third connector; and a motor that applies an actuating force that moves the slider block along the slide rail.

The unmanned transport vehicle according to another aspect of the present disclosure further includes: a sliding mechanism that includes a connector support portion that is provided on the vehicle main body and slides along a horizontal direction that is orthogonal to the lengthwise direction of the vehicle main body and a slide main body that slidably supports the connector support portion.

A right and left turning method for an unmanned transport vehicle according to another aspect of the present disclosure. The unmanned transport vehicle includes: a vehicle main body; a first connector that is connectable to a rail and is coupled to the vehicle main body; a second connector that is connectable to the rail and is coupled to the vehicle main body at a position spaced apart from the first connector; a third connector that is connectable to the rail and is disposed between the first connector and the second connector; and a turntable that is rotatable with respect to the vehicle main body. The third connector is coupled to the turntable. The method includes, when the unmanned transport vehicle turns right or left from a first rail to a second rail or from the second rail to the first rail, the first rail and the second rail included in the rail and intersecting or three-dimensionally intersecting: causing the vehicle main body to ascend and separating the first connector and the second connector from the first rail; causing the vehicle main body to descend and placing the first connector and the second connector lower than the first rail; rotating the turntable to rotate the vehicle main body to place the first connector and the second connector vertically below the second rail; causing the vehicle main body to ascend and placing the first connector and the second connector higher than the second rail to couple the first connector and the second connector to the second rail; causing the vehicle main body to ascend and separating the third connector from the first rail; rotating the turntable; and coupling the third connector to the second rail.

A delivery box according to another aspect of the present disclosure includes: a carriage configured to house a package; an elevator path in which the carriage is raised and lowered; a box configured to house the package; and an actuator that raises and lowers the carriage inside the elevator path. The elevator path includes a loading door that covers a loading opening formed vertically upward. When the carriage is raised by the actuator in the elevator path, the carriage pushes up the loading door to open the loading door.

A delivery box according to another aspect of the present disclosures includes: a carriage configured to house a package; an elevator path in which the carriage is raised and lowered; a box configured to house the package that is in communication with the inside of the elevator path via a loading opening; a loading door capable of opening and closing the loading opening; and an actuator that raises and lowers the carriage inside the elevator path. The carriage includes a pin and a pin actuator that projects the pin from the carriage. The inside of the box is in communication with the inside of the elevator path via the loading opening. When the carriage is lowered by the actuator in the elevator path, the pin opens the loading door by the pin actuator projecting the pin from the carriage.

A rail coupling according to another aspect of the present disclosure couples a first rail and a second rail, and includes: a first rail coupler that couples to the first rail; a first rail extension that is connected to the first rail coupler and extends in a horizontal direction orthogonal to the lengthwise direction of the first rail; a second rail coupler that couples to the second rail; and a second rail extension that is connected to the second rail coupler, extends in a horizontal direction orthogonal to the lengthwise direction of the second rail, and is connected to the first rail extension. When the unmanned transport vehicle makes a right turn at an intersection or three-dimensional intersection of the first rail and the second rail which intersect or three-dimensionally intersect, the rail coupling is arranged on the left side in the traveling direction of the unmanned transport vehicle, and when the unmanned transport vehicle makes a left turn, the rail coupling is arranged on the right side in the traveling direction of the unmanned transport vehicle.

An unmanned aerial vehicle according to another aspect of the present disclosure includes: a vehicle main body; a first connector that is connectable to a rail and is coupled to the vehicle main body; a second connector that is connectable to the rail and is coupled to the vehicle main body at a position spaced apart from the first connector; and a third connector that is connectable to the rail and is disposed between the first connector and the second connector. When the unmanned aerial vehicle makes a right turn, the first connector and the second connector are arranged on the right side of the rail in the traveling direction of the unmanned transport vehicle, and the rail coupling is on the opposite side of the rail, and when the unmanned aerial vehicle makes a left turn, the first connector and the second connector are arranged on the left side of the rail in the traveling direction of the unmanned transport vehicle, and the rail coupling is on the opposite side of the rail.

In the unmanned aerial vehicle according to another aspect of the present disclosure, when the unmanned aerial vehicle makes a right turn, the third connector is arranged on the right side of the rail in the traveling direction of the unmanned transport vehicle, and the rail coupling is on the opposite side of the rail. The rail includes a first rail and a second rail. When the unmanned transport vehicle transfers from the first rail to the second rail or from the second rail to the first rail, the third connector separates from the first rail or the second rail and couples to the second rail or the first rail by extending.

In the unmanned aerial vehicle according to another aspect of the present disclosure, when the unmanned aerial vehicle makes a left turn, the third connector is arranged on the left side of the rail in the traveling direction of the unmanned transport vehicle, and the rail coupling is on the opposite side of the rail. The rail includes a first rail and a second rail. When the unmanned transport vehicle transfers from the first rail to the second rail or from the second rail to the first rail, the third connector separates from the first rail or the second rail and couples to the second rail or the first rail by extending.

A control method according to one aspect of the present disclosure is a control method in a system including a display device, and includes: obtaining a first product ID identifying a first product, based on sensing data obtained from a sensor; obtaining a first bottom image showing a shape of a bottom of the first product, based on (i) a first database that associates and manages product IDs and images, each of which shows a shape of a bottom surface of the product corresponding to the product ID, and (ii) the obtained first product ID; and controlling the display device to display the first bottom image in a placement area for placing the first product.

With this, since the display device can display the first bottom image of the first product, the first product can be placed at the location where the first bottom image is displayed. Therefore, the location where the first product is placed can be presumed to be the location where the first bottom image is displayed without having to identify the location where the first product is placed using, for example, a sensor.

Therefore, with this control method, it is possible to easily presume the location where the first product is placed and inhibit a surge in the cost of the system.

A system according to another aspect of the present disclosure executes the above-described control method.

This achieves the same above-described advantageous effects achieved by the control method.

A program according to another aspect of the present disclosure is a program for causing the system to execute the control method.

This achieves the same above-described advantageous effects achieved by the control method.

In the control method according to another aspect of the present disclosure, the first database further associates and manages the product IDs and images, each of which shows the external appearance of the product corresponding to the product ID. The control method obtains the first bottom image and a first exterior image, which is an image showing the external appearance of the first product, based on the first database and the obtained first product ID, and controls the display device to display the first bottom image and the first exterior image in the placement area.

With this, since the display device can display the first bottom image and the first exterior image, the correct first product can be placed at the location where the first bottom image and the first exterior image are displayed. Therefore, by enabling smooth picking operations, etc., of stocked products, this system can inhibit a surge in the cost of energy, including the system, and human resources.

In the control method according to another aspect of the present disclosure, the system further includes a robot arm. The robot arm includes a displacement portion that can lift a target first product, which is one or more first products placed in the placement area, and change the position of the first product. The displacement portion is actuated by a first actuator. The control method further includes: determining a method for lifting the first product using the displacement portion using (i) a second database that associates and manages product IDs and 3D data, each item of 3D data being of the product corresponding to the product ID, (ii) the first product ID, and (iii) the first location information, which is information indicating the first location in the placement area where the first bottom image is displayed; and after the first product is placed at the first location in the placement area, controlling the first actuator to lift the first product in the placement area using the displacement portion according to the determined method.

With this, the robot arm can lift the first product placed in the placement area of the display device and move it to another location. Accordingly, this allows the stocked first product to be displayed in a predetermined location and allows the first product displayed to be removed and shipped.

The control method according to another aspect of the present disclosure further includes: when the first product is placed on the placement area, determining whether the first product is correctly placed at the first location in the placement area; if the first product is determined to be correctly placed at the first location, controlling the display device to display an image on the display device indicating that the first product is correctly placed at the first location; and if the first product is determined to be not correctly placed at the first location, controlling the display device to display an image on the display device indicating that the first product is not correctly placed at the first location.

With this, if the first product is correctly placed at the first location, an image indicating that the first product is correctly placed at the first location can be displayed. If the first product is not correctly placed at the first location, an image indicating that the first product is not correctly placed at the first location can be displayed. Accordingly, a worker can easily recognize whether the first product is correctly placed or not.

In the control method according to another aspect of the present disclosure, the system further includes a loudspeaker. The control method further includes: when the first product is placed on the placement area, determining whether the first product is correctly placed at the first location in the placement area; if the first product is determined to be correctly placed at the first location, controlling the loudspeaker to output audio indicating that the first product is correctly placed at the first location; and if the first product is determined to be not correctly placed, controlling the loudspeaker to output audio indicating that the first product is not correctly placed at the first location.

With this, if the first product is correctly placed at the first location, audio indicating that the first product is correctly placed at the first location can be output. If the first product is not correctly placed at the first location, audio indicating that the first product is not correctly placed at the first location can be output. Accordingly, a worker can easily recognize whether the first product is correctly placed or not.

The control method according another aspect of the present disclosure determines whether the first product is correctly placed based on image information obtained from the camera.

With this, it is possible to determine whether the first product is correctly placed or not using a camera. Additionally, it is possible to accurately determine whether the first product is correctly placed or not based on image information.

In the control method according to another aspect of the present disclosure, the displacement portion includes a gripping portion capable of holding the first product by pinching the first product, a suction portion capable of holding the first product by sucking in air, or a magnetic portion capable of holding the first product by attracting the first product through magnetic force.

With this, any type of first product can be lifted.

In the control method according to another aspect of the present disclosure, the displacement portion is a device for holding by pinching. Determining a method for lifting the first product using the displacement portion includes determining a first part, which is a part for lifting the first product. The control method includes, after the first product is placed at the first location in the placement area, controlling the first actuator to lift the first part of the first product in the placement area using the displacement portion.

With this, by determining a part of the first product by which to lift the first product and lifting the first product, it is possible to inhibit the lifted first product from dropping.

In the control method according to another aspect of the present disclosure, the system further includes a belt conveyor for moving the robot arm. The belt conveyor is actuated by a second actuator. The control method further includes: actuating the second actuator to move the robot arm on the belt conveyor to a first predetermined location after the first product is lifted by the displacement portion; and after the robot arm on the belt conveyor has moved to the first predetermined location, actuating the first actuator to move the first product lifted by the displacement portion to a second predetermined location.

This allows the robot arm that has lifted the first product to move with the first product on the belt conveyor. This allows the robot arm to move the first product to the second predetermined location even if the distance from the placement area to the second predetermined location is far.

In the control method according to another aspect of the present disclosure, the system further includes a loudspeaker. The control method further includes: determining whether the first product lifted by the displacement portion has been dropped, based on the sensing result obtained from the sensor; and after it is determined that the first product has been dropped, controlling the loudspeaker to output audio indicating that the first product has been dropped.

With this, if the first product lifted by the robot arm is dropped, audio indicating that the first product has been dropped can be output. Since a worker can easily recognize whether the first product is correctly placed or not, the worker can take measures such as collecting the dropped first product.

The control method according to another aspect of the present disclosure further includes: determining whether the first product lifted by the displacement portion has been dropped, based on the sensing result obtained from the sensor; and after it is determined that the first product has been dropped, controlling the display device to output an image indicating that the first product has been dropped.

With this, if the first product lifted by the robot arm is dropped, an image indicating that the first product has been dropped can be displayed. Since a worker can easily recognize whether the first product is correctly placed or not, the worker can take measures such as collecting the dropped first product.

A control method according to one aspect of the present disclosure is a control method in a system including a robot arm and a display device. The robot arm includes a displacement portion which can lift a target and change the position of the target. The displacement portion is actuated by a first actuator. The system further includes a belt conveyor for moving the robot arm. The belt conveyor is actuated by a second actuator. The control method includes: obtaining a first product ID identifying a first product, based on sensing data obtained from a sensor; obtaining a first bottom image showing a shape of a bottom of the first product, based on (i) a first database that associates and manages product IDs and images, each of which shows a shape of a bottom surface of the product corresponding to the product ID, and (ii) the obtained first product ID; controlling the display device to display the first bottom image in a placement area for placing the product; obtaining a second product ID identifying a second product, based on sensing data obtained from the sensor; obtaining a second bottom image showing a shape of a bottom of the second product, based on the first database and the obtained second product ID; controlling the display device to display the second bottom image in the placement area; determining a method for lifting the first product using the displacement portion using (i) a second database that associates and manages product IDs and 3D data, each item of 3D data being of the product corresponding to the product ID, (ii) the first product ID, and (iii) first location information, which is information indicating a first location in the placement area where the first bottom image is displayed; after the first product is placed at the first location in the placement area, controlling the first actuator to lift the first product in the placement area using the displacement portion according to the determined method; after lifting the first product, controlling the first actuator to move the first product lifted by the displacement portion to a cache area for temporary placement of the first product, wherein the cache area moves with the robot arm in accordance with the actuation of the second actuator; determining a method for lifting the second product using the displacement portion using the second database, the second product ID, and second location information, which is information indicating a second location in the placement area where the second bottom image is displayed; after the second product is placed at the second location in the placement area, controlling the first actuator to lift the second product on the placement area using the displacement portion according to the determined method; after lifting the second product, controlling the first actuator to move the second product lifted by the displacement portion to a cache area for temporary placement of the second product.

For example, if there is no cache area, the robot arm must lift the first product one at a time, move to a predetermined location for placing the first product, and then return after the move.

In contrast, with the present embodiment, it is possible to place a plurality of products on the cache area. This allows the robot arm to collect a plurality of products in a short period of time, efficiently move them to a predetermined location, and place the products after the move.

Since the display device can display the first bottom image of the first product, the first product can be placed at the location where the first bottom image is displayed. Therefore, the location where the first product is placed can be presumed to be the location where the first bottom image is displayed without having to identify the location where the first product is placed using, for example, a sensor. The same applies to the second product. Accordingly, with this control method, it is possible to easily identify the location where the first product and the second product are placed and inhibit a surge in the cost of the system.

The robot arm can lift the first product placed in the placement area of the display device according to the 3D data of the first product, and can also move the first product to the cache area. After lifting the first product, the robot arm can subsequently lift another second product according to the 3D data of that second product, and can also move that second product to the cache area. Thus, a plurality of products can be placed in the cache area in succession. This makes it possible to place a plurality of stocked products (first and second products) in the cache area, thus allowing a plurality of products to be moved at once. This allows a plurality of products to be displayed in a predetermined location and a plurality of displayed products to be removed and shipped.

Therefore, by enabling smooth picking operations, etc., of stocked products, this system can inhibit a surge in the cost of energy, including the system, and human resources.

In the control method according to another aspect of the present disclosure, the cache area corresponds to the area of the part connected to the robot arm.

With this, since the robot arm can be placed in the cache area, the first and second products along with the robot arm can be moved to a second predetermined location, and thus a plurality of products can be displayed in a predetermined location and a plurality of displayed products can be removed and shipped. This makes it possible to inhibit an increase in the time required to display and ship a plurality of products.

In the control method according to another aspect of the present disclosure, the cache area corresponds to an area on the upper surface of a platform that moves with the robot arm via the belt conveyor.

With this, the robot arm can easily place the first and second products it lifted onto the upper surface of the platform.

In the control method according to another aspect of the present disclosure, the system further includes a showcase. The showcase includes a plurality of shelves for placing a first product, the plurality of shelves forming a plurality of levels in the vertical direction, and an actuator that changes the vertical position of each of the plurality of shelves. The plurality of shelves include a first shelf and a second shelf located one level below the first shelf. When the system obtains a first signal for requesting a larger vertical spacing between the first shelf and the second shelf, the system controls the actuator to change the spacing from a first spacing to a second spacing greater than the first spacing.

With this, in the plurality of shelves, even if the first product placed on the shelf is placed at the back of the shelf and hidden by another first product, the robot arm can lift the first product at the back of the shelf by increasing the vertical spacing between the first shelf and the second shelf. This allows the first product to be displayed in such a way that the space above the shelf is effectively utilized, since the first product can be lifted no matter where the first product is placed on the shelf.

In the control method according to another aspect of the present disclosure, the display device is a display for displaying, in the placement area, the first bottom image of the first product, and the placement area corresponds to the area on the display where the first bottom image is displayed.

This enables the first bottom image to be displayed using a general-purpose display.

In the control method according to another aspect of the present disclosure, the area on the display where the first bottom image is displayed includes a touch panel.

With this, by simply placing the stocked first product in the area where the first bottom image is displayed on the display, this can be used when determining whether the first product has been placed correctly.

In the control method according to another aspect of the present disclosure, the display device is a projector for projecting the first bottom image onto a screen, and the placement area corresponds to the area on the screen where the first bottom image is projected.

With this, it is possible to determine whether the first product has been placed correctly or not using a projector.

In the control method according to another aspect of the present disclosure, which is a control method of a system including an unmanned transport vehicle, a package carriage for putting a package transported by the unmanned transport vehicle into is connected to a wire extending downward from a main body of the unmanned transport vehicle. The package carriage includes an attitude control device that controls an attitude of the package carriage suspended by the wire by controlling a rotary member. An accommodation space for accommodating the package is formed in the package carriage. The control method includes: obtaining a sensing result from a sensor capable of detecting the attitude of the package carriage; and based on the obtained sensing result, controlling the rotary member of the attitude control device to orient the package carriage to a target attitude.

With this, even if the attitude of the package carriage is tilted relative to the horizontal direction or rotates around the vertical direction, the attitude control device can control the rotary member to orient the package carriage to the target attitude. As a result, the package can be delivered to the recipient's delivery reception box.

A system according to another aspect of the present disclosure executes the control method.

This system achieves the same advantageous effects as described above.

A program according to another aspect of the present disclosure is a program for causing the system to execute the control method.

This program achieves the same advantageous effects as described above.

In the control method according to another aspect of the present disclosure, in the package carriage, the attitude control device is located above the accommodation space.

With this, since the package is located below the attitude control device, the package can be easily removed from the package carriage when lowering the package carriage by suspension.

In the control method according to another aspect of the present disclosure, in the package carriage, the attitude control device is located below the accommodation space.

With this, since the attitude control device for heavy objects is below the package, the attitude of the package carriage can be stabilized when lowering the package carriage by suspension.

In the control method according to another aspect of the present disclosure, the wire is configured to be freely reeled out and in by the actuation of a motor, and the wire extends to a length at least five times the height of the unmanned transport vehicle by the actuation of the motor.

In this way, when the wire is lengthily extended, even if the attitude of the package carriage is tilted relative to the horizontal direction or rotates around the vertical direction, the attitude control device can control the rotary member to orient the package carriage to the target attitude. As a result, the package can be delivered to the recipient's delivery reception box.

In the control method according to another aspect of the present disclosure, the system further includes: a motor; a winder that adjusts the length of the wire extending from the main body of the unmanned transport vehicle to the package carriage by reeling in or out the wire via actuation by the motor; a support structure for supporting the package carriage; and a first actuator for actuating the support structure. By actuating the first actuator, the support structure can be transitioned between a first state in which the support structure supports the package carriage without the tension of the wire and a second state in which the package carriage is suspended by the tension of the wire.

With this, for example, the support structure can the support package carriage when the unmanned transport vehicle is delivering a package. When the unmanned transport vehicle is unloading a package, it can be lowered using the tension of the wire. Thus, the unmanned transport vehicle does not need to be lowered using the tension of the wire when delivering a package, which can inhibit the degradation of the wire. Since the support structure supports the package, the package can be optimally supported even while the unmanned transport vehicle is traveling.

In the control method according to another aspect of the present disclosure, the method further includes: controlling the motor of the winder to reel in the wire until a length of the wire extending from the main body to the package carriage becomes a first length; after the length of the wire has become the first length, controlling the first actuator to transition the support structure from the second state to the first state; and after the support structure has transitioned to the first state, controlling the motor of the winder to reel out the wire until the length of the wire extending from the main body to the package carriage becomes a second length longer than the first length.

With this, the length of the wire can be set to the second length so that the package carriage is supported by the support structure. Thus, the support structure can support the package carriage when the unmanned transport vehicle is delivering a package, which can inhibit the degradation of the wire. Since the support structure supports the package, the package can be optimally supported even while the unmanned transport vehicle is traveling.

In the control method according to another aspect of the present disclosure, the support structure includes a first door structure and a second door structure pivotably connected to the main body. The first state corresponds to a state in which the first door structure and the second door structure have been pivoted close to the package carriage, and the second state corresponds to a state in which the first door structure and the second door structure have been pivoted away from the package carriage. In the first state, a first part of the first door structure and a second part of the second door structure are positioned below the package carriage. When the length of the wire extending from the main body to the package carriage becomes the second length, the package carriage is supported by the first part and the second part.

With this, when the first door structure and the second door structure are in the first state, the first part of the first door structure and the second part of the second door structure can support the package carriage. Thus, the unmanned transport vehicle does not need to be lowered using the tension of the wire when delivering a package, which can inhibit the degradation of the wire. Since the support structure supports the package, the package can be optimally supported even while the unmanned transport vehicle is traveling.

In the control method according to another aspect of the present disclosure, the unmanned transport vehicle transports a package by traveling along a rail. The unmanned transport vehicle further includes: a wheel for traveling along the rail; an arm connected to the main body of the unmanned transport vehicle and the wheel; and a second actuator for actuating the arm. The unmanned transport vehicle is capable of transitioning between a third state and a fourth state via actuation of the second actuator. In the third state, the distance between the main body and the rail is a first distance, and in the fourth state, the distance between the main body and the rail is a second distance greater than the first distance.

With this, the state of the unmanned transport vehicle can be switched between the third state and the fourth state depending on whether the unmanned transport vehicle is traveling or unloading a package.

In the control method according to another aspect of the present disclosure, while the unmanned transport vehicle is traveling, the second actuator is controlled to place the unmanned transport vehicle in the third state, and while the unmanned transport vehicle is unloading the package, the second actuator is controlled to place the unmanned transport vehicle in the fourth state.

With this, when the unmanned transport vehicle is traveling, the distance between the main body and the rail decreases while the distance between the main body and the ground surface increases, making it easier for the main body to avoid obstacles. While the unmanned transport vehicle is unloading a package, the control processor controls the arm actuator to place the unmanned transport vehicle in the fourth state. When the unmanned transport vehicle is unloading a package, the distance between the main body and the rail increases while the distance between the main body and the ground surface decreases, making unloading easier.

In the control method according to another aspect of the present disclosure, the system further includes a delivery reception box for receiving a package from an unmanned transport vehicle. The delivery reception box includes: an enclosure; a guide structure located at an upper part of the enclosure, for receiving the package in the package carriage that descends via the wire from the unmanned transport vehicle located above the delivery reception box; and a third actuator for moving the guide structure. When the package carriage and the package descend via the wire, the third actuator is controlled to move the guide structure to cause the package carriage and the guide structure to overlap in a view from above in the vertical direction, based on position information indicating a position of the package carriage.

With this, even if the package carriage shifts due to wind or the like when the unmanned transport vehicle is lowering a package, since the guide structure moves so that the guide structure and the package carriage overlap, the guide structure can guide the package carriage. Therefore, the delivery reception box can receive a package from the package carriage.

In the control method according to another aspect of the present disclosure, the system further includes a delivery reception box for receiving a package from an unmanned transport vehicle. The delivery reception box includes: an enclosure including a first floor for placing the package; a second floor located in the enclosure, for placing the package; a first movement mechanism located in the enclosure and including an actuator for moving the package placed on the first floor; and a second movement mechanism that is located in the enclosure, includes an actuator, and moves the second floor along a path via actuation of the actuator. After the package in the package carriage that descends via the wire from the unmanned transport vehicle located above the delivery reception box is placed on the first floor, the actuator of the first movement mechanism is controlled to move the package from the first floor to the second floor, and after the package has been moved to the second floor, the actuator of the second movement mechanism is controlled to move the second floor along the path.

With this, even if the package carriage shifts due to wind or the like when the unmanned transport vehicle is lowering a package, the package can be received from the package carriage on the first floor. Since the package placed on the first floor can be moved to the second floor by the first movement mechanism, the package can be moved to a predetermined location within the enclosure.

In the control method according to another aspect of the present disclosure, in a view from above in the vertical direction, the enclosure includes a first first side, a first second side adjacent to the first first side, a first third side adjacent to the first second side, and a first fourth side adjacent to the first third side and the first first side, and the enclosure includes a first flap connected to the first first side and configured to open and close an opening of the enclosure, and a second flap connected to the first third side and configured to open and close the opening of the enclosure.

With this, first flap and second flap can be arranged along the first first side and first third side of the enclosure. Therefore, when a package is being accommodated from the opening of the enclosure, even if the package carriage shifts due to wind or the like when the unmanned transport vehicle is lowering a package, the first flap and the second flap can guide the package.

In the control method according to another aspect of the present disclosure, the first first side and the first third side have a same length, the first second side and the first fourth side have a same length, the first first side is longer than the first second side, and the delivery reception box is arranged facing a road. In a view of the road, the delivery reception box, and a rail along which the unmanned transport vehicle travels from above in the vertical direction, the first first side is parallel to the rail, and the delivery reception box is further arranged to have the rail, the first first side, and the first third side arranged in listed order in a direction moving away from a centerline of the road. The first flap includes a second first side and a second second side adjacent to the second first side, the second first side is connected to the first first side, the second flap includes a third first side and a third second side adjacent to the third first side, the third first side is connected to the first third side, and the second second side is longer than the third second side.

With this, because the first flap including the second second side that is longer than the third second side can be arranged adjacent to the road side, even if the package carriage shifts due to wind or the like when the unmanned transport vehicle is lowering a package, the first flap and the second flap can guide the package. This makes it possible to inhibit packages from falling onto the road.

In the control method according to another aspect of the present disclosure, the system further includes a delivery reception box for receiving the package from the unmanned transport vehicle. The delivery reception box includes: an enclosure; and a carriage movement mechanism that is located in the enclosure, includes a carriage structure and an actuator, and moves the carriage structure along a path by actuation by the actuator. When the package carriage and the package descend via the wire, the actuator of the carriage movement mechanism is controlled to move the carriage structure to cause the package carriage and the carriage structure to overlap in a view from above in the vertical direction, based on position information indicating a position of the package carriage. After the package has been moved from the package carriage to the carriage structure, the actuator of the carriage movement mechanism is controlled to move the carriage structure along the path.

With this, even if the package carriage shifts due to wind or the like when the unmanned transport vehicle is lowering a package, since the guide structure moves so that the guide structure and the package carriage overlap, the guide structure can guide the package carriage. Therefore, the delivery reception box can receive a package from the package carriage. The carriage structure can move the received package to a predetermined location. This allows a package to be placed in a predetermined location.

In the control method according to another aspect of the present disclosure, the target attitude includes an attitude in which an up-down direction parallel to the vertical direction and an up-down direction of the package carriage match.

With this, the package carriage can be corrected to the target attitude, which allows the package to be delivered to the recipient's delivery reception box.

### ADDITIONAL STATEMENTS

(1) Below, features of the unmanned transport vehicle, control method, reception box, and showcase described based on the above embodiments are disclosed.
   <1> An unmanned transport vehicle including:
      a main body;
      a package carriage located below the main body, for putting a package to be transported into;
      a wire that connects the main body and the package carriage;
      a winder that includes a motor and adjusts the length of the wire extending from the main body to the package carriage by reeling in or out the wire via actuation of the motor;
      a support structure for supporting the package carriage;
      a first actuator for actuating the support structure; and
      a controller that controls the winder and the first actuator, wherein
      the controller can actuate the first actuator to change the support structure between a first state for supporting the package carriage by the support structure without the tension of the wire and a second state for suspending the package carriage by the tension of the wire.
   <2> A unmanned transport vehicle for transporting a package by traveling along a rail, the unmanned transport vehicle including:
      a main body;
      a wheel for traveling on the rail;
      an arm connected to the main body and the wheel;
      a second actuator for actuating the arm; and
      a controller that controls the second actuator, wherein
      the controller controls the second actuator to transition the unmanned transport vehicle between a first state and a second state, the first state being a state in which the distance between the main body and the rail is short and the second state being a state in which the distance between the main body and the rail is long.
   <3> The unmanned transport vehicle according to <2>, wherein the controller:
      controls the second actuator to place the unmanned transport vehicle in the first state while the unmanned transport vehicle is traveling; and
      controls the second actuator to place the unmanned transport vehicle in the second state while the unmanned transport vehicle is unloading the package.
   <4> A delivery reception box for receiving a package from a unmanned transport vehicle, wherein a package carriage for putting a package into is connected to a wire extending downward from a main body of the unmanned transport vehicle, the delivery reception box including:
      an enclosure;
      a guide structure located at an upper part of the enclosure, for receiving the package in the package carriage that descends via the wire from the unmanned transport vehicle located above the delivery reception box;
         a third actuator for moving the guide structure; and
      a controller that controls the actuator, wherein
      the controller:
         when the package carriage and the package descend via the wire, obtains position information indicating a position of the package carriage, and based on the position information, controls the third actuator to move the guide structure to cause the package carriage and the guide structure to overlap in a view from above in the vertical direction.
   <5> A delivery reception box for receiving a package from a unmanned transport vehicle, wherein a package carriage for putting a package into is connected to a wire extending downward from a main body of the unmanned transport vehicle, the delivery reception box including:
      an enclosure;
      a first floor located in the enclosure, for placing the package;
      a second floor located in the enclosure, for placing the package;
      a first movement mechanism located in the enclosure and including an actuator for moving the package placed on the first floor;
      a second movement mechanism that is located in the enclosure, includes an actuator, and moves the second floor along a path via actuation of the actuator; and
      a controller that controls the actuator of the first movement mechanism and the actuator of the second movement mechanism, wherein
      the controller:
         after the package in the package carriage that descends via the wire from the unmanned transport vehicle located above the delivery reception box is placed on the first floor, controls the actuator of the first movement mechanism to move the package from the first floor to the second floor, and
         after the package has been moved to the second floor, controls the actuator of the second movement mechanism to move the second floor along the path.
   <6> The delivery reception box according to <5>, wherein
      in a view from above in the vertical direction, the enclosure includes a first first side, a first second side adjacent to the first first side, a first third side adjacent to the first second side, and a first fourth side adjacent to the first third side and the first first side, and
      the enclosure includes a first flap connected to the first first side and configured to open and close, and a third flap connected to the first third side and configured to open and close.
   <7> The delivery reception box according to <6>, wherein
      the first first side and the first third side have a same length, the first second side and the first fourth side have a same length,
      the first first side is longer than the first second side,
      the delivery reception box is arranged facing a road,
      in a view of the road, the delivery reception box, and the rail from above in the vertical direction, the first first side is parallel to the rail, and the delivery reception box is further arranged to have the rail, the first first side, and the first third side arranged in listed order in a direction moving away from a centerline of the road,
      the first flap includes a second first side and a second second side adjacent to the second first side, and the first first side is connected to the second first side,
      the second flap includes a third first side and a third second side adjacent to the third first side, and the first third side is connected to the third first side, and
      the second second side is longer than the third second side.
   <8> A delivery reception box for receiving a package from a unmanned transport vehicle, wherein a package carriage for putting a package into is connected to a wire extending downward from a main body of the unmanned transport vehicle, the delivery reception box including:
      an enclosure;
      a carriage movement mechanism that is located in the enclosure, includes a carriage structure and an actuator, and moves the carriage structure along a path by actuation by the actuator; and
      a controller that controls an actuator of the carriage movement mechanism, wherein
      the controller:
         when the package carriage and the package descend via the wire, obtains position information indicating a position of the package carriage, and based on the position information, controls the actuator of the carriage movement mechanism to move the carriage structure to cause the package carriage and the carriage structure to overlap in a view from above in the vertical direction; and
         after the package has been moved from the package carriage to the carriage structure, controls the actuator of the carriage movement mechanism to move the carriage structure along the path.
   <9> A showcase including:
      a plurality of shelves for placing a product, the plurality of shelves forming a plurality of levels in a vertical direction;
      an actuator that changes the vertical position of each of the plurality of shelves;
      a signal obtainer that obtains a signal from outside the showcase; and
      a controller that controls the actuator, wherein
      the plurality of shelves include a first shelf and a second shelf located one level below the first shelf, and
      when the controller obtains the first signal obtained by the signal obtainer, the first signal being for requesting a larger vertical spacing between the first shelf and the second shelf, the controller controls the actuator to change the spacing from a first spacing to a second spacing greater than the first spacing.
   <10> The showcase according to <9>, wherein
      the first signal is transmitted based on an instruction from a controller that controls the robot arm, and
      the space resulting from changing the spacing from the first spacing to the second spacing prevents a product placed on the second shelf from contacting the first shelf and allows the robot arm to move between the first shelf and the second shelf.
   <11> The showcase according to <10>, further including:
      a signal transmitter that transmits a signal to an outside of the showcase, wherein
      after changing the spacing from the first spacing to the second spacing, the controller causes the signal transmitter to transmit a signal to the robot arm indicating that the spacing has been changed to the second spacing.
   <12> The showcase according to any one of <9> to <11>, wherein
      after a third product placed on the second shelf has been picked up by the robot arm that has moved into the space resulting from changing the spacing from the first spacing to the second spacing, and the third product picked up by the robot arm has been moved outside the showcase through the space, the controller further controls the actuator to change the spacing between the first shelf and the second shelf in the up-down direction from the second spacing to a third spacing narrower than the second spacing.
      Note that whether "a third product placed on the second shelf has been picked up by the robot arm that has moved into the space resulting from changing the spacing from the first spacing to the second spacing, and the third product picked up by the robot arm has been moved outside the showcase through the space" may be determined based on, for example, a sensing result obtained from a sensor, or a signal transmitted based on an instruction from a controller that controls the robot arm and indicates that the third product has moved outside the showcase. For example, the sensor may be a weight sensor provided on the second shelf, or a camera. The sensor may be a camera provided on the robot arm, or a camera provided in the store. For example, after the third product having been lifted has been detected based on a sensing result from a weight sensor provided on the second shelf, the third product may be determined to have been moved outside the showcase after elapse of a predetermined amount of time.
   <13> The showcase according to <12>, wherein
      the first spacing and the third spacing are equal.
(2) Below, features of the control method, system, and program described based on the above embodiments are disclosed.
   <1> A control method in a system including a display device, the control method including:
      obtaining a first product ID identifying a first product, based on sensing data obtained from a sensor;
      obtaining a first bottom image showing a shape of a bottom of the first product, based on (i) a first database that associates and manages product IDs and images, each of which shows a shape of a bottom surface of the product corresponding to the product ID, and (ii) the obtained first product ID; and
      controlling the display device to display the first bottom image in a placement area for placing the first product.
   <2> The control method according to <1>, wherein
      the first database further associates and manages product IDs and images, each which of which shows the external appearance of the product corresponding to the product ID, and
      the control method further includes: obtaining the first bottom image and a first exterior image showing the external appearance of the first product, based on the first database and the obtained first product ID; and
      controlling the display device to display the first bottom image and the first exterior image in the placement area.
   <3> The control method according to <1> or <2>, wherein
      the system further includes a robot arm,
      the robot arm includes a displacement portion that can lift a target first product, which is one or more first products placed in the placement area, and change a position of the first product,
      the displacement portion is actuated by the first actuator, and
      the control method further includes: determining a method for lifting the first product using the displacement portion using (i) a second database that associates and manages product IDs and 3D data, each item of 3D data being of the product corresponding to the product ID, (ii) the first product ID, and (iii) the first location information, which is information indicating the first location in the placement area where the first bottom image is displayed; and
      after the first product is placed at the first location in the placement area, controlling the first actuator to lift the first product on the placement area using the displacement portion according to the determined method.
   <4> The control method according to any one of <1> to <3>, further including:
      when the first product is placed in the placement area, determining whether the first product is correctly placed at the first location in the placement area;
      when the first product is determined to be correctly placed at the first location, controlling the display device to display an image on the display device indicating that the first product is correctly placed at the first location; and
      when the first product is determined to be not correctly placed at the first location, controlling the display device to display an image on the display device indicating that the first product is not correctly placed at the first location.
   <5> The control method according to any one of <1> to <4>, wherein
      the system further includes a loudspeaker, and
      the control method further includes:
         when the first product is placed in the placement area, determining whether the first product is correctly placed at the first location in the placement area;
         when the first product is determined to be correctly placed at the first location, controlling the loudspeaker to output audio indicating that the first product is correctly placed at the first location; and
         when the first product is determined to be not correctly placed, controlling the loudspeaker to output audio indicating that the first product is not correctly placed at the first location.
   <6> The control method according to <4> or <5>, further including:
      determining whether the first product is correctly placed based on image information obtained from a camera.
   <7> The control method according to <3>, wherein
      the displacement portion includes a gripping portion capable of holding the first product by pinching the first product, a suction portion capable of holding the first product by sucking in air, or a magnetic portion capable of holding the first product by attracting the first product through magnetic force.
   <8> The control method according to <7>, wherein
      the displacement portion is a device for holding by pinching,
      determining a method for lifting the first product using the displacement portion includes determining a first part which is a part for lifting the first product, and
      the control method further includes, after the first product is placed at the first location in the placement area, controlling the first actuator to lift the first part of the first product on the placement area using the displacement portion.
   <9> The control method according to any one of <3> or <7> or <8>, wherein
      the system further includes a belt conveyor for moving the robot arm, the belt conveyor being actuated by a second actuator, and
      the control method further includes:
         after the first product is lifted by the displacement portion, actuating the second actuator to move the robot arm on the belt conveyor to a first predetermined location; and
         after the robot arm on the belt conveyor has moved to the first predetermined location, actuating the first actuator to move the first product lifted by the displacement portion to a second predetermined location.
   <10> The control method according to any one of <3>, <7>, <8>, or <9>, wherein
      the system further includes a loudspeaker, and
      the control method further includes:
         determining whether the first product lifted by the displacement portion has been dropped, based on a sensing result obtained from a sensor; and
         after it is determined that the first product has been dropped, controlling the loudspeaker to output audio indicating that the first product has been dropped.
   <11> The control method according to any one of <3>, <7>, <8>, <9>, or <10>, further including:
      determining whether the first product lifted by the displacement portion has been dropped, based on a sensing result obtained from a sensor; and
      after it is determined that the first product has been dropped, controlling the display device to output an image indicating that the first product has been dropped.
   <12> A control method in a system including a robot arm and a display device, the robot arm including a displacement portion which can lift a target and change a position of the target, the displacement portion being actuated by a first actuator, the system further including a belt conveyor for moving the robot arm, the belt conveyor being actuated by the actuator, the control method including:
      obtaining a first product ID identifying a first product, based on sensing data obtained from a sensor;
      obtaining a first bottom image showing a shape of a bottom of the first product, based on (i) a first database that associates and manages product IDs and images, each of which shows a shape of a bottom surface of the product corresponding to the product ID, and (ii) the obtained first product ID;
      controlling the display device to display the first bottom image in a placement area for placing the product;
      obtaining a second product ID identifying a second product, based on sensing data obtained from a sensor;
      obtaining a second bottom image showing a shape of a bottom of the second product, based on the first database and the obtained second product ID;
      controlling the display device to display the second bottom image in the placement area;
      determining a method for lifting the first product using the displacement portion using (i) a second database that associates and manages product IDs and 3D data, each item of 3D data being of the product corresponding to the product ID, (ii) the first product ID, and (iii) first location information which is information indicating a first location in the placement area where the first bottom image is to be displayed;
      after the first product is placed at the first location in the placement area, controlling the first actuator to lift the first product on the placement area using the displacement portion according to the determined method;
      after the first product has been lifted, controlling the first actuator to move the first product lifted by the displacement portion onto a cache area for temporary placement of the first product, the cache area moving with the robot arm in accordance with actuation of the second actuator;
      determining a method for lifting the second product using the displacement portion using (i) the second database, (ii) the second product ID, and (iii) second location information which is information indicating a second location in the placement area where the second bottom image is to be displayed;
      after the second product is placed at the second location in the placement area, controlling the first actuator to lift the second product on the placement area using the displacement portion according to the determined method; and
      after the second product has been lifted, controlling the first actuator to move the second product lifted by the displacement portion onto a cache area for temporary placement of the second product.
   <13> The control method according to <12>, wherein
      the cache area corresponds to an area of a part connected to the robot arm.
   <14> The control method according to <12> or <13>, wherein
      the cache area corresponds to an area on an upper surface of a platform that moves with the robot arm via the belt conveyor.
   <15> The control method according to any one of <1> to <14>, wherein
      the system further includes a showcase,
      the showcase includes:
         a plurality of shelves for placing a product, the plurality of shelves forming a plurality of levels in a vertical direction; and
         an actuator that changes a vertical position of each of the plurality of shelves,
      the plurality of shelves include a first shelf and a second shelf located one level below the first shelf, and
      when the showcase obtains a first signal for requesting a larger vertical spacing between the first shelf and the second shelf, the showcase controls the actuator to change the spacing from a first spacing to a second spacing greater than the first spacing.
   <16> The control method according to any one of <1> to <15>, wherein
      the display device is a display for displaying, in the placement area, the first bottom image of the first product, and
      the placement area corresponds to the area on the display where the first bottom image is displayed.
   <17> The control method according to <16>, wherein
      the area on the display where the first bottom image is displayed includes a touch panel.
   <18> The control method according to any one of <1> to <17>, wherein
      the display device is a projector for projecting the first bottom image onto a screen, and the placement area corresponds to an area on the screen where the first bottom image is projected.
   <19> A system that executes the control method according to any one of <1> to <18>.
   <20> A program for causing the system to execute the control method according to any one of <1> to <18>.
(3) Below, features of the control method, system, and program described based on the above embodiments are disclosed.
   <1> A control method in a system including an unmanned transport vehicle, a package carriage for putting a package to be transported by the unmanned transport vehicle into being connected to a wire extending downward from a main body of the unmanned transport vehicle, the package carriage including an attitude control device that controls an attitude of the package carriage suspended by the wire by controlling a rotary member, the package carriage including an accommodation space for accommodating the package, the control method including:
      obtaining a sensing result from a sensor capable of detecting the attitude of the package carriage; and
      based on the sensing result obtained, controlling the rotary member of the attitude control device to orient the package carriage to a target attitude.
   <2> The control method according to <1>, wherein
      in the package carriage, the attitude control device is located above the accommodation space.
   <3> The control method according to <1>, wherein
      in the package carriage, the attitude control device is located below the accommodation space.
   <4> The control method according to any one of <1> to <3>, wherein
      the wire is configured to be freely reeled out and in by actuation of a motor, and
      the wire extends to a length at least five times a height of the unmanned transport vehicle via the actuation of the motor.
   <5> The control method according to any one of <1> to <4>, wherein
      the system further includes:
         a winder that includes a motor and adjusts the length of the wire extending from a main body of the unmanned transport vehicle to the package carriage by reeling in or out the wire via actuation of the motor;
         a support structure for supporting the package carriage; and
         a first actuator for actuating the support structure, and
      the support structure is transitionable between a first state and a second state by actuation by the first actuator, the first state being a state in which the package carriage is supported by the support structure without the tension of the wire, the second state being a state in which the package carriage is suspended by the tension of the wire.
   <6> The control method according to <5>, further including:
      controlling the motor of the winder to reel in the wire until a length of the wire extending from the main body to the package carriage becomes a first length;
      after the wire has become the first length, controlling the first actuator to transition the support structure from the second state to the first state; and
      after the support structure has transitioned to the first state, controlling the motor of the winder to reel out the wire until the length of the wire extending from the main body to the package carriage becomes a second length longer than the first length;
   <7> The control method according to <6>, wherein
      the support structure includes a first door structure and a second door structure that are pivotably connected to the main body,
      the first state corresponds to a state in which the first door structure and the second door structure have been pivoted close to the package carriage,
      the second state corresponds to a state in which the first door structure and the second door structure have been pivoted away from the package carriage,
      in the first state, a first part of the first door structure and a second part of the second door structure are located below the package carriage, and
      when the length of the wire extending from the main body to the package carriage becomes the second length, the package carriage is supported by the first part and the second part.
   <8> The control method according to any one of <1> to <7>, wherein
      the unmanned transport vehicle transports a package by traveling along a rail,
      the unmanned transport vehicle further includes:
         a wheel for traveling on the rail;
         an arm connected to a main body of the unmanned transport vehicle and the wheel; and
         a second actuator for actuating the arm, and
      the unmanned transport vehicle is capable of transitioning between a third state and a fourth state via actuation of the second actuator, the third state being a state in which the distance between the main body and the rail is a first distance and the fourth state being a state in which the distance between the main body and the rail is a second distance greater than the first distance.
   <9> The control method according to <8>, wherein
      while the unmanned transport vehicle is traveling, the second actuator is controlled to place the unmanned transport vehicle in the third state, and
      while the unmanned transport vehicle is unloading the package, the second actuator is controlled to place the unmanned transport vehicle in the fourth state.
   <10> The control method according to any one of <1> to <9>, wherein
      the system further includes a delivery reception box for receiving a package from an unmanned transport vehicle,
      the delivery reception box includes:
         an enclosure;
         a guide structure located at an upper part of the enclosure, for receiving the package in the package carriage that descends via the wire from the unmanned transport vehicle located above the delivery reception box; and
         a third actuator for moving the guide structure, and
      when the package carriage and the package descend via the wire, the third actuator is controlled to move the guide structure to cause the package carriage and the guide structure to overlap in a view from above in the vertical direction, based on position information indicating a position of the package carriage.
   <11> The control method according to any one of <1> to <10>, wherein
      the system further includes a delivery reception box for receiving a package from an unmanned transport vehicle,
      the delivery reception box includes:
         an enclosure including a first floor for placing the package;
         a second floor located in the enclosure, for placing the package;
         a first movement mechanism located in the enclosure and including an actuator for moving the package placed on the first floor; and
         a second movement mechanism that is located in the enclosure, includes an actuator, and moves the second floor along a path via actuation of the actuator,
      after the package in the package carriage that descends via the wire from the unmanned transport vehicle located above the delivery reception box is placed on the first floor, controls the actuator of the first movement mechanism to move the package from the first floor to the second floor, and
      after the package has been moved to the second floor, the actuator of the second movement mechanism is controlled to move the second floor along the path.
   <12> The control method according to <11>, wherein
      in a view from above in the vertical direction, the enclosure includes a first first side, a first second side adjacent to the first first side, a first third side adjacent to the first second side, and a first fourth side adjacent to the first third side and the first first side, and
      the enclosure includes a first flap connected to the first first side and configured to open and close an opening of the enclosure, and a second flap connected to the first third side and configured to open and close the opening of the enclosure.
   <13> The control method according to <12>, wherein
      the first first side and the first third side have a same length,
      the first second side and the first fourth side have a same length,
      the first first side is longer than the first second side,
      the delivery reception box is arranged facing a road,
      in a view of the road, the delivery reception box, and a rail along which the unmanned transport vehicle travels from above in the vertical direction, the first first side is parallel to the rail, and the delivery reception box is further arranged to have the rail, the first first side, and the first third side arranged in listed order in a direction moving away from a centerline of the road,
      the first flap includes a second first side and a second second side adjacent to the second first side,
      the second first side is connected to the first first side,
      the second flap includes a third first side and a third second side adjacent to the third first side,
      the third first side is connected to the first third side, and
      the second second side is longer than the third second side.
   <14> The control method according to any one of <1> to <12>, wherein
      the system further includes a delivery reception box for receiving a package from an unmanned transport vehicle,
      the delivery reception box includes:
         an enclosure; and
         a carriage movement mechanism that is located in the enclosure, includes a carriage structure and an actuator, and moves the carriage structure along a path by actuation by the actuator,
         when the package carriage and the package descend via the wire, the actuator of the carriage movement mechanism is controlled to move the carriage structure to cause the package carriage and the carriage structure to overlap in a view from above in the vertical direction, based on position information indicating a position of the package carriage, and
         after the package has been moved from the package carriage to the carriage structure, the actuator of the carriage movement mechanism is controlled to move the carriage structure along the path.
   <15> The control method according to any one of <1> to <14>, wherein
      the target attitude includes an attitude in which an up-down direction parallel to the vertical direction and an up-down direction of the package carriage match.
   <16> A system that executes the control method according to any one of <1> to <15>.
   <17> A program for causing the system to execute the control method according to any one of <1> to <15>.
(4) Below, features of the system including the unmanned transport vehicle described based on the above embodiments are disclosed.
   <1> A system including an unmanned transport vehicle, the system including:
      the unmanned transport vehicle;
      a first winch connected to the unmanned transport vehicle and capable of reeling out and in a wire;
      a package carriage connected to the wire, for putting a package to be transported by the unmanned transport vehicle into; and
      a support structure connected to the unmanned transport vehicle, for supporting the package carriage, wherein
      in the unmanned transport vehicle, the package carriage is capable of transitioning between a first state in which the package carriage is supported by the support structure and a second state in which the package carriage is not supported by the support structure and is suspended by the wire.
   <2> The system according to <1>, wherein
      the unmanned transport vehicle transports the package carriage by traveling along a rail, and
      the package carriage is in the first state when the unmanned transport vehicle is traveling along the rail and in the second state when the package carriage is being lowered toward a destination point located vertically below the unmanned transport vehicle via the wire.
   <3> The system according to <1> or <2>, wherein
      the unmanned transport vehicle further includes:
      a wheel for traveling on the rail;
      an arm connected to a main body of the unmanned transport vehicle and the wheel.
   <4> The system according to any one of <1> to <3>, wherein
      the unmanned transport vehicle further includes:
         an actuator for actuating the arm, and
      the unmanned transport vehicle is capable of transitioning between a first distance state and a second distance state via actuation of the actuator, the first distance state being a state in which a distance between the main body and the rail is a first distance and the second distance state being a state in which the distance between the main body and the rail is a second distance greater than the first distance.
(5) Below, features of the system including the unmanned transport vehicle described based on the above embodiments are disclosed.
   <1> A system including an unmanned transport vehicle, the system including:
      the unmanned transport vehicle;
      a first winch connected to the unmanned transport vehicle and capable of reeling out and in a wire;
      a package carriage connected to the wire, for putting a package to be transported by the unmanned transport vehicle into;
      a support structure connected to the unmanned transport vehicle, for supporting the package carriage; and
      a controller, wherein
      the package carriage includes an attitude control device that controls an attitude of the package carriage suspended by the wire by controlling a rotary member,
      the package carriage includes an accommodation space for accommodating the package,
      the controller:
         obtains a sensing result from a sensor capable of detecting an attitude of the package carriage; and
         based on the sensing result obtained, controls the rotary member of the attitude control device to orient the package carriage to a target attitude, and
      the unmanned transport vehicle is capable of transitioning between a first state in which the package carriage is supported by the support structure and a second state in which the package carriage is not supported by the support structure and is suspended by the wire.
   <2> The system according to <1>, wherein
      the support structure includes a first part and a second part,
      the first part and the second part of the support structure are disposed a predetermined length apart,
      the package carriage includes a third part and a fourth part,
      the third part and the fourth part of the package carriage are the predetermined length apart,
      in the first state, the first part of the support structure and the third part of the package carriage are coupled and the second part of the support structure and the fourth part of the package carriage are coupled, and
      to transition the unmanned transport vehicle to the first state, the controller (1) controls the first winch to reel in the wire until a length of the wire extending from the unmanned transport vehicle to the package carriage becomes a first length which positions the third part of the package carriage higher than the first part of the support structure and positions the fourth part of the package carriage higher than the second part of the support structure, (2) controls the attitude control device to rotate the package carriage to position the third part of the package carriage directly above the first part of the support structure and position the fourth part of the package carriage directly above the second part of the support structure, and (3) controls the first winch to reel out the wire to couple the third part of the package carriage to the first part of the support structure and couple the fourth part of the package carriage to the second part of the support structure.
   <3> The system according to <1> or <2>, wherein
      the support structure includes: a first metal structure that extends from a first one end connected to the unmanned transport vehicle towards the first part of the support structure located vertically downwards, turns back at the first part of the support structure, and then extends to a first other end located in the vertically downward direction; and a second metal structure that extends from a second one end connected to the unmanned transport vehicle towards the second part of the support structure located vertically downwards, turns back at the second part of the support structure, and then extends to a second other end located in the vertical upward direction,
      the first metal structure includes a first portion,
      the second metal structure includes a second portion, and
      in a view of the support structure from above in the vertical direction, the support structure is arranged such that a straight line connecting the first other end and the second other end intersects a straight line connecting the center point of the first part of the support structure and the center point of the second part of the support structure.
   <4> The system according to <3>, wherein
      the first one end and the second one end are a same end.
(6) Below, features of the system including the unmanned transport vehicle described based on the above embodiments are disclosed.
   <1> A system including an unmanned transport vehicle, the system including:
      the unmanned transport vehicle;
      a first winch connected to the unmanned transport vehicle and capable of reeling out and in a first wire;
      a package carriage connected to the first wire, for putting a package to be transported by the unmanned transport vehicle into;
      a second winch connected to the package carriage and capable of reeling out and in a second wire; and
      an unmanned aerial vehicle connected to the second wire.
   <2> The system according to <1>, wherein
      the first winch is provided below the unmanned transport vehicle, and the second winch is provided below the package carriage.
   <3> The system according to <1> further including:
      a protective case for protecting the unmanned aerial vehicle, wherein
      the unmanned aerial vehicle is fixed to the protective case, and
      the unmanned aerial vehicle is connected to the second wire via the protective case.
   <4> The system according to <3>, wherein
      the protective case covers the unmanned aerial vehicle in entirety.
(7) Below, features of the system including the unmanned transport vehicle described based on the above embodiments are disclosed.
   <1> A system including an unmanned transport vehicle, the system including:
      the unmanned transport vehicle;
         a first winch connected to the unmanned transport vehicle and capable of reeling out and in a first wire;
         a package carriage connected to the first wire, for putting a package to be transported by the unmanned transport vehicle into;
      a second winch connected to the package carriage and capable of reeling out and in a second wire;
      an unmanned aerial vehicle connected to the second wire;
      a delivery reception box; and
      a controller, wherein
      the delivery reception box includes:
         an enclosure;
         the box structure that defines an entrance through which the unmanned aerial vehicle is able to pass and is for restraining the unmanned aerial vehicle;
         a first actuator that opens and closes a lid of the box structure; and
         a second actuator for moving the box structure along a first path from a standby position above the enclosure,
      the box structure includes the lid capable of opening and closing the entrance,
      the lid includes a first lid and a second lid,
      when the first lid and the second lid are closed, a hole is defined by a part of the first lid and a part of the second lid,
      the controller:
         controls the unmanned aerial vehicle to insert the unmanned transport vehicle into the box structure in a state in which the lid is open;
         controls the first actuator to close the first lid and the second lid after the unmanned transport vehicle is inserted in the box structure, wherein in a state in which the first lid and the second lid are closed, the second wire is inserted through the hole, the hole is smaller than the unmanned transport vehicle, and the unmanned transport vehicle is restrained by the box structure, unable to pass through the hole; and
         after the first lid and the second lid have been closed, actuates the first winch and a second winch connected to the package carriage and capable of reeling out and in the second wire, to adjust a length of the first wire and a length of the second wire and move the package carriage towards a location above the lid of the box structure.
   <2> The system according to <1>, wherein
      the delivery reception box further includes a plurality of package compartments facing the first path, and
      after the package carriage has moved onto the lid of the box structure, the controller further controls the second actuator to move the package carriage on the box structure in front of one of the plurality of package compartments in order to move the package inside the box structure into the package compartment.
   <3> The system according to <1> or <2>, wherein
      the controller further:
      after the package in the package carriage has been moved to the package compartment, controls the second actuator to move the box structure on which the package carriage is placed toward the standby position;
      after the box structure has moved to the standby position, actuates the first winch and the second winch to adjust a length of the first wire and a length of the second wire and move the package carriage towards the unmanned transport vehicle; and
      after the package carriage has moved towards the unmanned transport vehicle, controls the first actuator to open the first lid and the second lid to release the unmanned aerial vehicle from the box structure.
   <4> The system according to any one of <1> to <3>, further including:
      a protective case for protecting the unmanned aerial vehicle, wherein
      the unmanned aerial vehicle is fixed to the protective case, and
      the unmanned aerial vehicle is connected to the second wire via the protective case.
(8) Below, features of the delivery reception box described based on the above embodiments are disclosed.
   <1> A delivery reception box including:
      an enclosure including an opening for receiving a transported object transported by an unmanned transport vehicle; and
      a guide structure located above the opening, for guiding the transported object toward the opening, wherein
      within the delivery reception box is provided a transport space that extends vertically downward from the opening so as to span from the guide structure to the enclosure, and in which the transported object can be moved up and down via a wire extended from the unmanned transport vehicle, and
      in a view of the delivery reception box in a direction perpendicular to the vertical direction, the guide structure occupies a first region and a second region of the delivery reception box, the first region being a tapered region that narrows from up to down vertically, the second region being connected to the first region, located vertically below the first region, and having a curved surface shape that bulges towards the transport space.
   <2> The delivery reception box according to <1>, wherein
      the curved surface shape is an arc shape that bulges towards the transport space.
   <3> The delivery reception box according to <1> or <2>, wherein
      when the delivery reception box is viewed from a direction perpendicular to the vertical direction, the side surface of the first region of the guide structure is at an angle greater than or equal to 45° relative to the horizontal plane.
   <4> The delivery reception box according to any one of <1> to <3>, further including:
      a transport body;
      a first actuator capable of moving the transport body in the horizontal direction; and
      a controller that controls the first actuator, wherein
      the transport body is capable of moving between a first position facing the transport space and a second position included in the transport space, by being actuated by the first actuator, and the transport body forms a package compartment in the first position, and
      the controller:
         when receiving the transported object from the unmanned transport vehicle, controls the first actuator to move the transport body from the first position to the second position; and
         after receiving the transported object, controls the first actuator to move the transport body from the second position to the first position.
   <5> The delivery reception box according to any one of <1> to <4>, further including:
      a door that leads to the package compartment, wherein
      after detecting that a package entered through the door, the controller controls the first actuator to move the transport body from the first position to the second position, after which the package is collected by the unmanned transport vehicle.
(9) Below, features of the unmanned transport vehicle described based on the above embodiments are disclosed.
   <1> An unmanned transport vehicle including:
      a first main body;
      at least one first connecting device capable of suspending the first main body from a rail located above the first main body;
      a second main body located below the first main body;
      a second connecting device that rotatably connects the first main body and the second main body; and
      a damper that is connected to the first main body and the second main body and absorbs vibrations occurring between the first main body and the second main body.
   <2> The unmanned transport vehicle according to <1>, wherein
      the damper is slidably connected to the first main body.
(10) Below, features of the unmanned transport vehicle described based on the above embodiments are disclosed.
   <1> An unmanned transport vehicle including:
      a main body;
      at least one first connecting device capable of suspending the main body from a rail located above the main body;
      a first actuator that rotates the main body with respect to the rail;
      a first slider configured to be extendable in a first direction along a lengthwise direction of the main body, with respect to the main body;
      a second slider configured to be extendable in a direction opposite to the first direction, with respect to the main body;
      a second actuator that actuates the first slider;
      a third actuator that actuates the second slider; and
      a controller that controls the first actuator, the second actuator, and the third actuator, wherein
      when a first package carriage configured to accommodate a first package is connected to the first slider and a second package carriage configured to accommodate a second package is connected to the second slider, the controller controls the second actuator and the third actuator so as to extend the first slider and the second slider in such a manner that a rotational moment generated by the first slider and a rotational moment generated by the second slider offset each other.
(11) Below, features of the unmanned transport vehicle described based on the above embodiments are disclosed.
   <1> A control method for an unmanned transport vehicle, the control method including:
      transporting the unmanned transport vehicle towards the delivery reception device after obtaining any one of the following: (1) a signal indicating that a user has received the product at the delivery reception device and a signal transmitted from the delivery reception device indicating that an empty box has been returned; (2) a signal indicating that the user has canceled receipt of the product; or (3) a signal indicating that a receipt period or a receipt time for the user to receive the product has passed.
(12) Below, features of the control method described based on the above embodiments are disclosed.
   <1> A control method for an information terminal connected to a management system used in a service for delivering a product from a collection device using an unmanned transport vehicle, the control method including:
      displaying, on a display of the information terminal, an image including a candidate for a time and a location for a user to request collection; and
      transmitting first information including a first time and a first place selected by the user to the management system.
   <2> A control method in a management system used in a service for delivering a product from a collection device using an unmanned transport vehicle, the control method including:
      receiving, from the information terminal, information including a first time and a first place selected by the user; and
      based on the information including the first time and the first place, transmitting an instruction to the unmanned transport vehicle that instructs the unmanned transport vehicle to arrive at the first place by the first time.
(13) Below, features of the unmanned transport vehicle described based on the above embodiments are disclosed.
   <1> A showcase including:
      a plurality of shelves forming a plurality of levels in a vertical direction;
      a first actuator that moves a first shelf included in the plurality of shelves in the horizontal direction; and
      a controller, wherein
      the first shelf is capable of moving between a first position and a second position that is forward of the first position by being actuated by the first actuator, and
      when the controller obtains a signal instructing that the first shelf is to be moved forward, the controller controls the first actuator to move the first shelf from the first position to the second position.
   <2> The showcase according to <1>, further including:
      a first curtain that extends from an upper area to a lower area of the showcase;
      a second curtain that extends from the lower area to the upper area of the showcase; and
      a second actuator that actuates the first curtain and the second curtain, wherein
      an opening of the showcase is covered by a bottom end of the first curtain and a top end of the second curtain contacting each other,
      when the opening of the showcase is covered, if the controller obtains a signal instructing that the first shelf is to be moved forward, the controller controls the second actuator to form a first gap between the bottom end of the first curtain and the top end of the second curtain, and controls the first actuator to move the first shelf from a first position to a second position through the first gap.
(14) Below, features of the unmanned transport vehicle described based on the above embodiments are disclosed.
   <1> A showcase system including:
      a plurality of shelves forming a plurality of levels in a vertical direction;
      a first actuator that moves a first shelf included in the plurality of shelves in the horizontal direction;
      a displacement portion that can lift a target product, which is one or more products placed on the first shelf, and change a position of the target product;
      an arm actuator that actuates the displacement portion; and
      a controller, wherein
      the first shelf is capable of moving between a first position and a second position that is forward of the first position by being actuated by the first actuator, and
      when the controller obtains a signal instructing to remove a first product on the first shelf, the controller (1) controls the first actuator to move the first shelf from the first position to the second position, and (2) controls the arm actuator to displace the position of the first product on the first shelf using the displacement portion.
   <2> The showcase system according to <1>, further including:
      a first curtain that extends from an upper area to a lower area of the showcase;
      a second curtain that extends from the lower area to the upper area of the showcase; and
      a second actuator that actuates the first curtain and the second curtain, wherein
      the opening of the showcase is covered by a bottom end of the first curtain and a top end of the second curtain contacting each other,
      when the opening of the showcase is covered, if the controller obtains a signal instructing to remove the first product on the first shelf, the controller (1) controls the second actuator to form a first gap between the bottom end of the first curtain and the top end of the second curtain, (2) controls the first actuator to move the first shelf from the first position to the second position through the first gap, and (3) controls the arm actuator to displace the position of the first product on the first shelf using the displacement portion.
   <3> The showcase system according to <1> or <2>, wherein
      the displacement portion includes a gripping portion capable of holding the first product by pinching the first product, a suction portion capable of holding the first product by sucking in air, or a magnetic portion capable of holding the first product by attracting the first product through magnetic force.

Although the lifting system has been described based on the above embodiments, the present disclosure is not limited to these exemplary embodiments. Various modifications of the exemplary embodiments as well as embodiments resulting from arbitrary combinations of elements of different exemplary embodiments that may be conceived by those skilled in the art are intended to be included within the scope of one or more aspects of the present disclosure as long as they do not depart from the essence of the present disclosure.

### [Industrial Applicability]

The present disclosure is applicable to, for example, a package delivery system implemented via unmanned aerial vehicles in an urban environment.

### [Reference Signs List]

6a, 2800, 2900, 3000, 3100, 3200, 3300 unmanned transport system (system)
7 rail
10g, 110, 2910 unmanned aerial vehicle
12, 124, 2433, 2478, 2716, 2957, 3063 actuation controller (controller)
31, 2681, 2803a wheel
51, 2663, 2805, 3003, 3123 wire
2318, 2530, 2664, 2833, 2933, 3002a, 3165 control processor (controller)
2327m roller (wheel)
2408, 2408a, 2408c, 2700, 2700a, 2700b, 2950, 3001, 3206, 3305 delivery box (delivery reception box)
2408bautonomous box (delivery reception box)
2408dvending machine (delivery reception box)
2520, 2803 connector (arm)
2521, 2691 first connector (arm)
2522, 2692 second connector (arm)
2523 third connector (arm)
2660, 2660b, 2801, 2901, 3002, 3202, 3302 unmanned transport vehicle
2668 support member actuator (first actuator for actuating support structure)
2670, 2820, 3005, 3310 package carriage
2670a, 2870attitude control device
2671a rotary shaft
2684 support structure
2685 first door structure (support structure)
2685a end portion of first door structure (first part of first door structure)
2686 second door structure (support structure)
2686a end portion of second door structure (second part of second door structure)
2701, 2951, 3010 enclosure
2701afirst first side
2701bfirst second side
2701c first third side
2701dfirst fourth side
2704, 2951a, 3012, 3321top opening (opening of enclosure)
2704c placement portion (first floor)
2705 first flap
2705a second first side
2705bsecond second side
2706 second flap
2706athird first side
2706bthird second side
2710, 3030 guide structure
2715 guide movable block (third actuator)
2720 transport box (carriage movement mechanism)
2723 base plate (second floor)
2725 first movement mechanism
2725a actuator
2726 second movement mechanism
2822athird part
2822bfourth part
2831 first winch
2832 second winch
2941 first wire
2942 second wire
2952 box structure
2952afirst lid
2952bsecond lid
2952c hole
2961 first actuator (first actuator that opens and closes lid of box structure)
2962 second actuator (second actuator for moving from standby position along first path)
3132a first package carriage
3132bsecond package carriage
3201 delivery reception device (delivery box)

## Claims

1. A system including an unmanned transport vehicle, the system comprising:
the unmanned transport vehicle;
a first winch connected to the unmanned transport vehicle and capable of reeling out and in a wire;
a package carriage connected to the wire, for putting a package to be transported by the unmanned transport vehicle into; and
a controller, wherein
the package carriage includes an attitude control device including a flywheel that rotates around a rotary shaft extending in a vertical direction,
the package carriage includes an accommodation space for accommodating the package, and
the controller:
obtains a sensing result from a sensor capable of detecting an attitude of the package carriage; and
based on the sensing result obtained, controls rotation of the flywheel to rotate the package carriage around the rotary shaft and orient the package carriage to a target attitude.

2. The system according to claim 1, wherein
when viewed from above in the vertical direction, a position of the rotary shaft overlaps a position of the wire, and
in the package carriage, the attitude control device is located above the accommodation space.

3. The system according to claim 1, wherein
a position of the rotary shaft overlaps a position of the wire when viewed in the vertical direction from above, and
in the package carriage, the attitude control device is located below the accommodation space.

4. The system according to any one of claims 1 to 3, wherein
the first winch is capable of extending the wire to a length at least five times a height of the unmanned transport vehicle.

5. The system according to any one of claims 1 to 3, wherein
the unmanned transport vehicle transports the package carriage by traveling along a rail,
the unmanned transport vehicle further includes a support structure connected to the unmanned transport vehicle, for supporting the package carriage,
the unmanned transport vehicle and the package carriage are capable of transitioning between a first state in which the package carriage is supported by the support structure and a second state in which the package carriage is not supported by the support structure and is suspended by the wire, and
the unmanned transport vehicle and the package carriage are in the first state when the unmanned transport vehicle is traveling along the rail and in the second state when the package carriage is being lowered toward a destination point located vertically below the unmanned transport vehicle via the wire.

6. The system according to claim 5, wherein
the support structure includes a first part and a second part,
the first part and the second part of the support structure are a predetermined length apart,
the package carriage includes a third part and a fourth part,
the third part and the fourth part of the package carriage are the predetermined length apart,
in the first state, the first part of the support structure and the third part of the package carriage are coupled and the second part of the support structure and the fourth part of the package carriage are coupled, and
to transition the unmanned transport vehicle and the package carriage to the first state, the controller (1) controls the first winch to reel in the wire until a length of the wire extending from the unmanned transport vehicle to the package carriage becomes a first length which positions the third part of the package carriage higher than the first part of the support structure and positions the fourth part of the package carriage higher than the second part of the support structure, (2) controls the attitude control device to rotate the package carriage to position the third part of the package carriage directly above the first part of the support structure and position the fourth part of the package carriage directly above the second part of the support structure, and (3) controls the first winch to reel out the wire to couple the third part of the package carriage to the first part of the support structure and couple the fourth part of the package carriage to the second part of the support structure.

7. The system according to claim 5, further comprising:
a first actuator for actuating the support structure, wherein
the support structure includes a first door structure and a second door structure that are pivotably connected to the unmanned transport vehicle,
the first door structure and the second door structure are transitionable between a first door state and a second door state by the first actuator being controlled,
the first door state corresponds to a state in which the first door structure and the second door structure have been pivoted close to the package carriage,
the second door state corresponds to a state in which the first door structure and the second door structure have been pivoted away from the package carriage, and
to transition the unmanned transport vehicle and the package carriage to the first state, the controller (1) controls the first winch to reel in the wire until a length of the wire extending from the unmanned transport vehicle to the package carriage becomes a second first length, (2) after the length of the wire is the second first length, controls the first actuator to transition the support structure from the second door state to the first door state, and (3) after the support structure is in the first door state, controls a motor of a winder to reel out the wire until the length of the wire extending from the unmanned transport vehicle to the package carriage becomes a second length longer than the second first length and the package carrier is supported via the first part of the first door structure located below the package carriage and the first part of the second door structure located below the package carriage.

8. The system according to any one of claims 1 to 3, wherein
the unmanned transport vehicle transports the package by traveling along a rail,
the unmanned transport vehicle further includes:
a wheel for traveling on the rail;
an arm connected to a main body of the unmanned transport vehicle and the wheel; and
a second actuator for actuating the arm, and
the unmanned transport vehicle is capable of transitioning between a first distance state and a second distance state via actuation of the second actuator, the first distance state being a state in which a distance between the main body and the rail is a first distance and the second distance state being a state in which the distance between the main body and the rail is a second distance greater than the first distance.

9. The system according to claim 8, wherein
while the unmanned transport vehicle is traveling, the second actuator is controlled to place the unmanned transport vehicle in the first distance state, and
while the unmanned transport vehicle is unloading the package, the second actuator is controlled to place the unmanned transport vehicle in the second distance state.

10. The system according to any one of claims 1 to 3, further comprising:
a delivery reception box for receiving the package from the unmanned transport vehicle, wherein
the delivery reception box includes:
an enclosure;
a guide structure located at an upper part of the enclosure, for receiving the package in the package carriage that descends via the wire from the unmanned transport vehicle located above the delivery reception box; and
a third actuator for moving the guide structure, and
when the package carriage and the package descend via the wire, the third actuator is controlled to move the guide structure to cause the package carriage and the guide structure to overlap in a view from above in the vertical direction, based on position information indicating a position of the package carriage.

11. The system according to any one of claims 1 to 3, further comprising:
a delivery reception box for receiving the package from the unmanned transport vehicle, wherein
the delivery reception box includes:
an enclosure including a first floor for placing the package;
a second floor located in the enclosure, for placing the package;
a first movement mechanism located in the enclosure and including an actuator for moving the package placed on the first floor; and
a second movement mechanism that is located in the enclosure, includes an actuator, and moves the second floor along a path via actuation of the actuator,
after the package in the package carriage that descends via the wire from the unmanned transport vehicle located above the delivery reception box is placed on the first floor, the actuator of the first movement mechanism is controlled to move the package from the first floor to the second floor, and
after the package has been moved to the second floor, the actuator of the second movement mechanism is controlled to move the second floor along the path.

12. The system according to claim 11, wherein
in a view from above in the vertical direction, the enclosure includes a first first side, a first second side adjacent to the first first side, a first third side adjacent to the first second side, and a first fourth side adjacent to the first third side and the first first side, and
the enclosure includes a first flap connected to the first first side and configured to open and close an opening of the enclosure, and a second flap connected to the first third side and configured to open and close the opening of the enclosure.

13. The system according to claim 12, wherein
the first first side and the first third side have a same length,
the first second side and the first fourth side have a same length,
the first first side is longer than the first second side,
the delivery reception box is arranged facing a road,
in a view of the road, the delivery reception box, and a rail along which the unmanned transport vehicle travels from above in the vertical direction, the first first side is parallel to the rail, and the delivery reception box is further arranged to have the rail, the first first side, and the first third side arranged in listed order in a direction moving away from a centerline of the road,
the first flap includes a second first side and a second second side adjacent to the second first side,
the second first side is connected to the first first side,
the second flap includes a third first side and a third second side adjacent to the third first side,
the third first side is connected to the first third side, and
the second second side is longer than the third second side.

14. The system according to any one of claims 1 to 3, further comprising:
a delivery reception box for receiving the package from the unmanned transport vehicle, wherein
the delivery reception box includes:
an enclosure; and
a carriage movement mechanism that is located in the enclosure, includes a carriage structure and an actuator, and moves the carriage structure along a path by actuation by the actuator,
when the package carriage and the package descend via the wire, the actuator of the carriage movement mechanism is controlled to move the carriage structure to cause the package carriage and the carriage structure to overlap in a view from above in the vertical direction, based on position information indicating a position of the package carriage, and
after the package has been moved from the package carriage to the carriage structure, the actuator of the carriage movement mechanism is controlled to move the carriage structure along the path.

15. The system according to any one of claims 1 to 3, wherein
the target attitude includes an attitude in which an up-down direction parallel to the vertical direction and an up-down direction of the package carriage match.

16. The system according to any one of claims 1 to 3, further comprising:
a delivery reception box, wherein
the delivery reception box includes:
an enclosure including an opening for receiving a transported object transported by the unmanned transport vehicle; and
a guide structure located above the opening, for guiding the transported object toward the opening,
within the delivery reception box is provided a transport space that extends vertically downward from the opening and in which the transported object can be moved up and down via the wire extended from the unmanned transport vehicle, and
in a view of the delivery reception box in a direction perpendicular to the vertical direction, the guide structure occupies a first region and a second region of the delivery reception box, the first region being a tapered region that narrows from up to down vertically, the second region being connected to the first region, located vertically below the first region, and having an arc shape that bulges towards the transport space.

17. The system according to any one of claims 1 to 3, further comprising:
a second winch connected to the package carriage and capable of reeling out and in a second wire; and
an unmanned aerial vehicle connected to the second wire.

18. The system according to any one of claims 1 to 3, further comprising:
an unmanned aerial vehicle connected to a second wire; and
a delivery reception box, wherein
the delivery reception box includes:
an enclosure;
a box structure that defines an entrance through which the unmanned aerial vehicle is able to pass and is for restraining the unmanned aerial vehicle;
a first actuator that opens and closes a lid of the box structure; and
a second actuator for moving the box structure along a first path from a standby position above the enclosure,
the box structure includes a lid capable of opening and closing the entrance,
the lid includes a first lid and a second lid,
when the first lid and the second lid are closed, a hole is defined by a part of the first lid and a part of the second lid, and
the controller:
controls the unmanned aerial vehicle to insert the unmanned transport vehicle into the box structure in a state in which the lid is open;
controls the first actuator to close the first lid and the second lid after the unmanned transport vehicle is inserted in the box structure, wherein in a state in which the first lid and the second lid are closed, the second wire is inserted through the hole, the hole is smaller than the unmanned transport vehicle, and the unmanned transport vehicle is restrained by the box structure, unable to pass through the hole; and
after the first lid and the second lid have been closed, actuates the first winch and a second winch connected to the package carriage and capable of reeling out and in the second wire, to adjust a length of the first wire and a length of the second wire and move the package carriage towards a location above the lid of the box structure.
